(19) Europäisches Patentamt / European Patent Office / Office européen des brevets

(11) EP 1 879 104 A2

(12) **EUROPEAN PATENT APPLICATION**

(43) Date of publication:
**16.01.2008 Bulletin 2008/03**

(51) Int Cl.:
*G06F 9/30* (2006.01) *G06F 9/38* (2006.01)
*G06F 15/78* (2006.01)

(21) Application number: **07112553.8**

(22) Date of filing: **16.08.1996**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **16.08.1995 US 516036**

(62) Document number(s) of the earlier application(s) in accordance with Art. 76 EPC:
**96928129.4 / 0 845 120**

(71) Applicant: **MicroUnity Systems Engineering, Inc.**
**Santa Clara, CA 95050 (US)**

(72) Inventors:
- **Hansen, Craig**
  **Los Altos, CA 94022 (US)**
- **Moussouris, John**
  **Sunnyvale, CA 94089 (US)**

(74) Representative: **Brunner, Michael John**
**Gill Jennings & Every LLP**
**Broadgate House**
**7 Eldon Street**
**London EC2M 7LH (GB)**

Remarks:
This application was filed on 16-07-2007 as a divisional application to the application mentioned under INID code 62.

(54) **General purpose, programmable media processor**

(57) A communication network capable of for processing streams of media data which comprise a combination of at least two of audio, video, radio, graphics, encryption, authentication, and networking information. The communications network processes streams of media data and has at least one programmable media processor (12) for receiving, processing and transmitting the stream of media data over the bi-directional communications network. The processor executes group instructions to read a plurality of data elements of the media data stream from a register file (100), to perform, on the data elements, group operations including both group integer and group floating point operations capable of dynamically partitioning the data by each specifing one of a plurality of data element sizes, and to write concatenated results in the register file. Each media processor (12) is reprogrammable by receiving downloaded software over the network.

FIG. 1

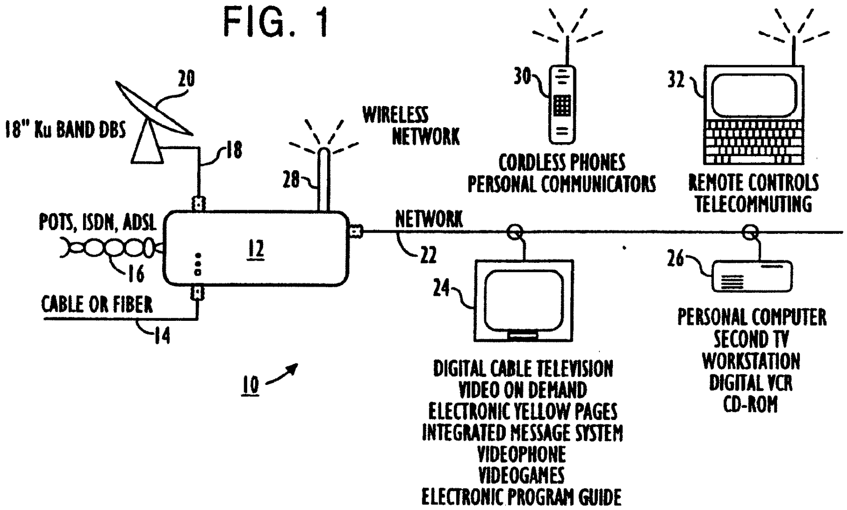


EP 1 879 104 A2

## Description

### Field of the Invention

This invention relates to the field of communications processing, and more particularly, to a method and apparatus for real-time processing of multi-media digital communications.

### Background of the Invention

Optical fiber and discs have made the transmission and storage of digital information both cheaper and easier than older analog technologies. An improved system for digital processing of media data streams is necessary in order to realize the full potential of these advanced media.

For the past century, telephone service delivered over copper twisted pair has been the lingua franca of communications. Over the next century, broadband services delivered over optical fiber and coax will more completely fulfill the human need for sensory information by supplying voice, video, and data at rates of about 1,000 times greater than narrow band telephony. Current general-purpose microprocessors and digital signal processors ("DSPs") can handle digital voice, data and images at narrow band rates, but they are way too slow for processing media data at broadband rates.

This shortfall in digital processing of broadband media is currently being addressed through the design of many different kinds of application-specific integrated circuits ("ASICs"). For example, a prototypical broadband device such as a cable modem modulates and demodulates digital data at rates up to 45 Mbits/sec within a single 6 MHZ cable channel (as compared to rates of 28.8 Kbits/sec within a 6 KHz channel for telephone modems) and transcodes it onto a 10/100baseT connection to a personal computer ("PC") or workstation. Current cable modems thus receive data from a coaxial cable connection through a chain of specialized ASIC devices in order to accomplish Quadrature Amplitude Modification ("QAM") demodulation, Reed-Solomon error correction, packet filtering, Data Encryption Standard ("DES") decryption, and Ethernet protocol handling. The cable modems also transmit data to the coaxial cable link through a second chain of devices to achieve DES encryption, Reed-Solomon block encoding, and Quaternary Phase Shift Keying ("QPSK") modulation. In these environments, a general-purpose processor is usually required as well in order to perform initialization, statistics collection, diagnostics, and network management functions.

The ASIC approach to media processing has three fundamental flaws: cost, complexity, and rigidity. The combined silicon area of all the specialized ASIC devices required in the cable modem, for example, results in a component cost incompatible with the per subscriber price target for a cable service. The cable plant itself is a very hostile service environment, with noise ingress, reflections, nonlinear amplifiers, and other channel impairments, especially when viewed in the upstream direction. Telephony modems have developed an elaborate hierarchy of algorithms implemented in DSP software, with automatic reduction of data rates from 28.8Kbits/sec to 19.6Kbits/sec, 14.4Kbits/sec, or much lower rates as needed to accommodate noise, echoes, and other impairments in the copper plant. To implement similar algorithms on an ASIC-based broadband modem is far more complex to achieve in software.

These problems of cost. complexity, and rigidity are compounded further in more complete broadband devices such as digital set-top boxes, multimedia PCs, or video conferencing equipment, all of which go beyond the basic radio frequency ("RF") modem functions to include a broad range of audio and video compression and decoding algorithms, along with remote control and graphical user interfaces. Software for these devices must control what amounts to a heterogeneous multi-processor, where each specialized processor has a different, and usually eccentric or primitive, programming environment. Even if these programming environments are mastered, the degree of programmability is limited. For example, Motion Picture Expert Group-I ("MPEG-I") chips manufactured by AT&T Corporation will not implement advances such as fractal-and wavelet-based compression algorithms, but these chips are not readily software upgradeable to the MPEG-II standard. A broadband network operator who leases an MPEG ASIC-based product is therefore at risk of having to continuously upgrade his system by purchasing significant amounts of new hardware just to track the evolution of MPEG standards.

The high cost of ASIC-based media processing results from inefficiencies in both memory and logic. A typical ASIC consists of a multiplicity of specialized logic blocks, each with a small memory dedicated to holding the data which comprises the working set for that block. The silicon area of these multiple small memories is further increased by the overhead of multiple decoders, sense amplifiers, write drivers, etc. required for each logic block. The logic blocks are also constrained to operate at frequencies determined by the internal symbol rates of broadband algorithms in order to avoid additional buffer memories. These frequencies typically differ from the optimum speed-area operating point of a given semiconductor technology. Interconnect and synchronization of the many logic and memory blocks are also major sources of overhead in the ASIC approach.

The disadvantages of the prior ASIC approach can be over come by a single unified media processor. The cost advantages of such a unified processor can be achieved by gathering all the many ASIC functions of a broadband media product into a single integrated circuit. Cost reduction is further increased by reducing the total memory area of such a circuit by replacing the multiplicity of small ASIC memories with a single memory hierarchy large enough to accommodate the sum total of all the working sets, and wide enough to supply the aggregate bandwidth needs of all the logic blocks. Additionally, the logic block interconnect circuitry to this memory hierarchy may be streamlined by providing a generally programmable switching fabric. Many of the logic blocks themselves can also replaced with a single multi-precision arithmetic unit, which can be internally partitioned under software control to perform addition, multiplication, division, and other integer and floating point arithmetic operations on symbol streams of varying widths, while sustaining the full data throughput of the memory hierarchy. The residue of logic blocks that perform operations that are neither arithmetic or permutation group oriented can be replaced with an extended math unit that supports additional arithmetic operations such as finite field, ring, and table lookup, while also sustaining the full data throughput of the memory hierarchy.

The above multi-precision arithmetic, permutation switch, and extended math operations can then be organized as machine instructions that transfer their operands to and from a single wide multi-ported register file. These instructions can be further supplemented with load/store instructions that transfer register data to and from a data buffer/cache static random access memory ("SRAM") and main memory dynamic random access memories ("DRAMs"), and with branch instructions that control the flow of instructions executed from an instruction buffer/cache SRAM. Extensions to the load/ store instructions can be made for synchronization, and to branch instructions for protected gateways, so that multiple threads of execution for audio, video, radio, encryption, networking, etc. can efficiently and securely share memory and logic resources of a unified machine operating near the optimum speed-area point of the target semiconductor process. The data path for such a unified media processor can interface to a high speed input/output ("I/O") subsystem that moves media streams across ultra-high bandwidth interfaces to external storage and I/O.

Such a device would incorporate all of the processing capabilities of the specialized multi-ASIC combination into a single, unified processing device. The unified processor would be agile and capable of reprogramming through the transmission of new programs over the communication medium. This programmable, general purpose device is thus less costly than the specialized processor combination, easier to operate and reprogram and can be installed or applied in many differing devices and situations. The device may also be scalable to communications applications that support vast numbers of users through massively parallel distributed computing.

It is therefore an object of this invention to process media data streams by executing operations at very high bandwidth rates.

It is also an object of this invention to unify the audio, video, radio, graphics, encryption, authentication, and networking protocols into a single instruction stream.

It is also an object of this invention to achieve high bandwidth rates in a unified processor that is easy to program and more flexible than a heterogeneous combination of special purpose processors.

It is a further object of the invention to support high level mathematical processing in a unified media processor, including finite group, finite field, finite ring and table look-up operations, all at high bandwidth rates.

It is yet a further object of the invention to provide a unified media processor that can be replicated into a multi-processor system to support a vast array of users.

It is yet another object of this invention to allow for massively parallel systems within the switching fabric to support very large numbers of subscribers and services.

It is also an object of the invention to provide a general purpose programmable processor that could be employed at all points in a network.

It is a further object of this invention to sustain very high bandwidth rates to arbitrarily large memory and input/ output systems.

## Summary of the Invention

In view of the above, there is provided a system for media processing that maintains substantially peak data throughput in the execution and transmission of multiple media data streams. The system includes in one aspect a general purpose, programmable media processor, and in another aspect includes a method for receiving, processing and transmitting media data streams. The general purpose, programmable media processor of the invention further includes an execution unit, high bandwidth external interface, and can be employed in a parallel multi-processor system.

According to the apparatus of the invention, an execution unit is provided that maintains substantially peak data throughput in the unified execution of multiple media data streams. The execution unit includes a data path, and a multi-precision arithmetic unit coupled to the data path and capable of dynamic partitioning based on the elemental width of data received from the data path. The execution unit also includes a switch coupled to the data path that is programmable to manipulate data received from the data path and provide data streams to the data path. An extended mathematical element is also provided, which is coupled to the data path and programmable to implement additional mathematical operations at substantially peak data throughput. In a preferred embodiment of the execution unit, at least one register file is coupled to the data path.

According to another aspect of the invention, a general purpose programmable media processor is provided having an instruction path and a data path to digitally process a plurality of media data streams. The media processor includes a high bandwidth external interface operable to receive a plurality of data of various sizes from an external source and communicate the received data over the data path at a rate that maintains substantially peak operation of the media processor. At least one register file is included, which is configurable to receive and store data from the data path and to communicate the stored data to the data path. A multi-precision execution unit is coupled to the data path and is dynamically configurable to partition data received from the data path to account for the elemental symbol size of the plurality of media streams, and is programmable to operate on the data to generate a unified symbol output to the data path.

According to the preferred embodiment of the media processor, means are included for moving data between registers and memory by performing load and store operations, and for coordinating the sharing of data among a plurality of tasks by performing synchronization operations based upon instructions and data received by the execution unit. Means are also provided for securely controlling the sequence of execution by performing branch and gateway operations based upon instructions and data received by the execution unit. A memory management unit operable to retrieve data and instructions for timely and secure communication over the data path and instruction path respectively is also preferably included in the media processor. The preferred embodiment also includes a combined instruction cache and buffer that is dynamically allocated between cache space and buffer space to ensure real-time execution of multiple media instruction streams, and a combined data cache and buffer that is dynamically allocated between cache space and buffer space to ensure real-time response for multiple media data streams.

In another aspect of the invention, a high bandwidth processor interface for receiving and transmitting a media stream is provided having a data path operable to transmit media information at sustained peak rates. The high bandwidth processor interface includes a plurality of memory controllers coupled in series to communicate stored media information to and from the data path, and a plurality of memory elements coupled in parallel to each of the plurality of memory controllers for storing and retrieving the media information. In the preferred embodiment of the high bandwidth processor interface, the plurality of memory controllers each comprise a paired link disposed between each memory controller, where the paired links each transmit and receive plural bits of data and have differential data inputs and outputs and a differential clock signal.

Yet another aspect of the invention includes a system for unified media processing having a plurality of general purpose media processors, where each media processor is operable at substantially peak data rates and has a dynamically partitioned execution unit and a high bandwidth interface for communicating to memory and input/output elements to supply data to the media processor at substantially peak rates. A bi-directional communication fabric is provided, to which the plurality of media processors are coupled, to transmit and receive at least one media stream comprising presentation, transmission, and storage media information. The bi-directional communication fabric preferably comprises a fiber optic network, and a subset of the plurality of media processors comprise network servers.

According to yet another aspect of the invention, a parallel multi-media processor system is provided having a data path and a high bandwidth external interface coupled to the data path and operable to receive a plurality of data of various sizes from an external source and communicate the received data at a rate that maintains substantially peak operation of the parallel multi-processor system. A plurality of register files, each having at least one register coupled to the data path and operable to store data, are also included. At least one multi-precision execution unit is coupled to the data path and is dynamically configurable to partition data received from the data path to account for the elemental symbol size of the plurality of media streams, and is programmable to operate in parallel on data stored in the plurality of register files to generate a unified symbol output for each register file.

According to the method of the invention, unified streams of media data are processed by receiving a stream of unified media data including presentation, transmission and storage information. The unified stream of media data is dynamically partitioned into component fields of at least one bit based on the elemental symbol size of data received. The unified stream of media data is then processed at substantially peak operation.

In one aspect of the invention, the unified stream of media data is processed by storing the stream of unified media data in a general register file. Multi-precision arithmetic operations can then be performed on the stored stream of unified media data based on programmed instructions, where the multi-precision arithmetic operations include Boolean, integer and floating point mathematical operations. The component fields of unified media data can then be manipulated based on programmed instructions that implement copying, shifting and re-sizing operations. Multi-precision mathematical operations can also be performed on the stored stream of unified media data based on programmed instructions, where the mathematical operations including finite group, finite field, finite ring and table look-up operations. Instruction and data pre-fetching are included to fill instruction and data pipelines, and memory management operations can be performed to retrieve instructions and data from external memory. The instructions and data are preferably stored in instruction and data cache/buffers, in which buffer storage in the instruction and data cache/buffers is dynamically allocated to ensure real-time execution.

Other aspects of the invention include a method for achieving high bandwidth communications between a general purpose media processor and external devices by providing a high bandwidth interface disposed between the media processor and the external devices, in which the high bandwidth interface comprises at least one uni-directional channel pair having an input port and an output port. A plurality of media data streams, comprising component fields of various sizes, are transmitted and received between the media processor and the external devices at a rate that sustains substantially peak data throughput at the media processor. A method for processing streams of media data is also included that provides a bi-directional communications fabric for transmitting and receiving at least one stream of media data, where the at least one stream of media data comprises presentation, transmission and storage information. At least one programmable media processor is provided within the communications network for receiving, processing and transmitting the at least one stream of unified media data over the bi-directional communications fabric.

The general purpose, programmable media processor of the invention combines in a single device all of the necessary hardware included in the specialized processor combinations to process and communicate digital media data streams in real-time. The general purpose, programmable media processor is therefore cheaper and more flexible than the prior approach to media processing. The general purpose, programmable media processor is thus more susceptible to incorporation within a massively parallel processing network of general purpose media processors that enhance the ability to provide real-time multi-media communications to the masses.

These features are accomplished by deploying server media processors and client media processors throughout the network. Such a network provides a seamless, global media super-computer which allows programmers and network owners to virtualize resources. Rather than restrictively accessing only the memory space and processing time of a local resource, the system allows access to resources throughout the network. In small access points such as wireless devices, where very little memory and processing logic is available due to limited battery life, the system is able to draw upon the resources of a homogeneous multi-computer system.

The invention also allows network owners the facility to track standards and to deploy new services by broadcasting software across the network rather than by instituting costly hardware upgrades across the whole network. Broadcasting software across the network can be performed at the end of an advertisement or other program that is broadcasted nationally. Thus, services can be advertised and then transmitted to new subscribers at the end of the advertisement.

These and other features and advantages of the invention will be apparent upon consideration of the following detailed description of the presently preferred embodiments of the invention, taken in conjunction with the appended drawings.

## Brief Description of the Drawings

FIG. 1 is a block diagram of a broad band media computer employing the general purpose, programmable media processor of the invention;

FIG. 2 is a block diagram of a global media processor employing multiple general purpose media processors according to the invention:

FIG. 3 is an illustration of the digital bandwidth spectrum for telecommunications, media and computing communications;

FIG. 4 is the digital bandwidth spectrum shown in FIG. 3 taking into account the bandwidth overhead associated with compressed video techniques:

FIG. 5 is a block diagram of the current specialized processor solution for mass media communication, where FIG. 5(a) shows the current distributed system, and FIG. 5(b) shows a possible integrated approach;

FIG. 6 is a block diagram of two presently preferred general purpose media processors, where FIG. 6(a) shows a distributed system and FIG. 6(b) shows an integrated media processor;

FIG. 7 is a block diagram of the presently preferred structure of a general purpose, programmable media processor according to the invention;

FIG. 8 is a drawing consisting of visual illustrations of the various group operations provided on the media processor, where FIG. 8(a) illustrates the group expand operation, FIG. 8(b) illustrates the group compress or extract operation, FIG. 8(c) illustrates the group deal and shuffle operations, FIG. 8(d) illustrates the group swizzle operation and FIG. 8(e) illustrates the various group permute operations;

FIG. 9 shows the preferred instruction and data sizes for the general purpose, programmable media processor, where FIG. 9(a) is an illustration of the various instruction formats available on the general purpose, programmable media processor, FIG. 9(b) illustrates the various floating-point data sizes available on the general purpose media processor, and FIG. 9(c) illustrates the various fixed-point data sizes available on the general purpose media processor;

FIG. 10 is an illustration of a presently preferred memory management unit included in the general purpose processor shown in FIG. 7, where FIG. 10(a) is a translation block diagram and FIG. 10(b) illustrates the functional blocks of the transaction lookaside buffer;

FIG. 11 is an illustration of a super-string pipeline technique;

FIG. 12 is an illustration of the presently preferred super-spring pipeline technique;

FIG. 13 is a block diagram of a single memory channel for communication to the general purpose media processor shown in FIG. 7:

FIG. 14 is an illustration of the presently preferred connection of standard memory devices to the preferred memory interface;

FIG. 15 is a block diagram of the input/output controller for use with the memory channel shown in FIG. 13;

FIG. 16 is a block diagram showing multiple memory channels connected to the general purpose media processor shown in FIG. 7, where FIG. 16(a) shows a two-channel implementation and FIG. 16(b) illustrates a twelve-channel embodiment;

FIG. 17 illustrates the presently preferred packet communications protocol for use over the memory channel shown in FIG. 13;

FIG. 18 shows a multi-processor configuration employing the general purpose media processor shown in FIG. 7, where FIG. 18(a) shows a linear processor configuration, FIG. 18(b) shows a processor ring configuration, and FIG. 18(c) shows a two-dimensional processor configuration; and

FIG. 19 shows a presently preferred multi-chip implementation of the general purpose, programmable media processor of the invention.

## Detailed Description of the Presently Preferred Embodiments

Referring to the drawings, where like-reference numerals refer to like elements throughout, a broad band microcomputer 10 is provided in FIG. 1. The broad band microcomputer 10 consists essentially of a general purpose media processor 12. As will be described in more detail below, the general purpose media processor 12 receives, processes and transmits media data streams in a bi-directional manner from upstream network components to downstream devices. In general, media data streams received from upstream network components can comprise any combination of audio, video, radio, graphics, encryption, authentication, and networking information. As those skilled in the art will appreciate, however, the general purpose media processor 12 is in no way limited to receiving, processing and transmitting only these types of media information. The general purpose media processor 12 of the invention is capable of processing any form of digital media information without departing from the spirit and essential scope of the invention.

### System Configuration

In the preferred embodiment of the invention shown in FIG. 1. media data streams are communicated to the media processor 12 from several sources. Ideally, unified media data streams are received and transmitted by the general purpose media processor 12 over a fiber optic cable network 14. As will be described in more detail below, although a fiber optic cable network is preferred, the presently existing communications network in the United States consists of a combination of fiber optic cable, coaxial cable and other transmission media. Consequently, the general purpose media processor 12 can also receive and transmit media data streams over coaxial cable 14 and traditional twisted pair wire connections 16. The specific communications protocol employed over the twisted pair 16, whether POTS. ISDN or ADSL, is not essential; all protocols are supported by the broad band microcomputer 10. The details of these protocols are generally known to those skilled in the art and no further discussion is therefore needed or provided herein.

Another form of upstream network communication is through a satellite link 18. The satellite link 18 is typically connected to a satellite receiver 20. The satellite receiver 20 comprises an antenna, usually in the form of a satellite dish, and amplification circuitry. The details of such satellite communications are also generally known in the art, and further detail is therefore not provided or included herein.

As described above, the general purpose media processor 12 communicates in a bi-directional manner to receive, process and transmit media data streams to and from downstream devices. As shown in FIG. 1, downstream communication preferably takes place in at least two forms. First, media data streams can be communicated over a bi-directional local network 22. Various types of local networks 22 are generally known in the art and many different forms exist. The general purpose media processor 12 is capable of communicating over any of these local networks 22 and the particular type of network selected is implementation specific.

The local network 22 is preferably employed to communicate between the unified processor 12, and audio/visual devices 24 or other digital devices 26. Presently preferred examples of audio/visual devices 24 include digital cable television, video-on-demand devices, electronic yellow pages services, integrated message systems, video telephones, video games and electronic program guides. As those skilled in the art will appreciate, other forms of audio/video devices are contemplated within the spirit and scope of the invention. Presently preferred embodiments of other digital devices 26 for communication with the general purpose media processor 12 include personal computers, television sets, work stations, digital video camera recorders, and compact disc read-only memories. As those skilled in the art will also appreciate, further digital devices 26 are contemplated for communication to the general purpose media processor 12 without departing from the spirit and scope of the invention.

Second, the general purpose media processor preferably also communicates with downstream devices over a wireless network 28. In the presently preferred embodiment of the invention, wireless devices for communication over the wireless network 28 can comprise either remote communication devices 30 or remote computing devices 32. Presently preferred embodiments of the remote communications devices 30 include cordless telephones and personal communicators. Presently preferred embodiments of the remote computing devices 32 include remote controls and telecommunicating devices. As those skilled in the art will appreciate, other forms of remote communication devices 30 and remote computing devices 32 are capable of communication with the general purpose media processor 12 without departing from the spirit and scope of the invention. An agile digital radio (not shown) that incorporates a general purpose media processor 12 may be used to communicate with these wireless devices.

Network Configuration

Referring now to FIG. 2. the general purpose media processor 12 is preferably disposed throughout a digital communications network 38. In order to enable communication among large and small businesses, residential customers and mobile users, the network 38 can consist of a combination of many individual sub-networks comprised of three main forms of interconnection. The trunk and main branches of the network 38 preferably employ fiber optic cable 40 as the preferred means of interconnection. Fiber optic cable 40 is used to connect between general purpose media processors 12 disposed as network servers 46 or large business installations 48 that are capable of coupling directly to the fiber optic link 40. For communications to small business and residential customers that may be incapable of directly coupling to the fiber optic cable 40, a general purpose media processor 12 can be used as an interface to other forms of network interconnection.

As shown in FIG. 2, alternate forms of interconnection consist of coaxial cable lines 42 and twisted pair wiring 44. Coaxial cable lines are currently in place throughout the U.S. and is typically employed to provide cable television services to residential homes. According to the preferred embodiment of the invention, general purpose media processors 12 can be installed at these residential locations 52. In contrast to the specialized processor approach, the general purpose media processor 12 provides enough bandwidth to allow for bi-directional communications to and from these residential locations 52.

Network servers 46 controlled by general purpose media processors 12 are also employed throughout the network 38. For example, the network servers 46 can be used to interface between the fiber optic network 40 and twisted pair wiring 44. Twisted pair wiring 44 is still employed for small businesses 50 and residential locations 52 that do not or cannot currently subscribe to coaxial cable or fiber optic network services. General purpose media processors 12 are also disposed at these small business locations 50 and non-cable residential locations 52. General purpose media processors 12 are also installed in wireless or mobile locations 52, which are coupled to the network 38 through agile digital radios (not shown). As shown in FIG. 2. network databases or other peripherals 56 can also coupled to general purpose media processors 12 in the network 38.

The general purpose media processor 12 is operable at significantly high bandwidths in order to receive, process and transmit unified media data streams. Referring to FIG. 3, the respective frequencies for various types of media data streams are set forth against a bandwidth spectrum 60. The bandwidth spectrum 60 includes three component spectrums, all along the same range of frequencies, which represent the various frequency rates of digital media communications. Current computing bandwidth capabilities are also displayed. The telecommunications spectrum 62 shows the various frequency bands used for telecommunications transmission. For example, teletype terminals and modems operate in a range between approximately 64 bits/second to 16 kilobits/second. The ISDN telecommunication protocol operates at 64 kilobits/second. At the upper end of the telecommunications spectrum 62, T1 and T3 trunks operate at one megabit per second and 32 megabits per second, respectively. The SONET frequency range extends from approximately 128 megabits per second up to approximately 32 gigabits per second. Accordingly, in order to carry such broad band communications, the general purpose media processor 12 is capable of transferring information at rates into the gigabits per second range or higher.

A spectrum of typical media data streams is presented in the media spectrum 64 shown in FIG. 3. Voice and music transmissions are centered at frequencies of approximately 64 kilobits per second and one megabit per second, respectively. At the upper end of the media spectrum 64, video transmission takes place in a range from 128 megabits per second for high density television up to over 256 gigabits per second for movie applications. When using common video compression techniques, however, the video transmission spectrum can be shifted down to between 32 kilobits per second to 128 megabits per second as a result of the data compression. As described below, the processing required to achieve the data compression results in an increase in bandwidth requirements.

Current computing bandwidths are shown in the computing spectrum 66 of FIG. 3. Serial communications presently take place in a range between two kilobits per second up to 512 kilobits per second. The Ethernet network protocol operates at approximately 8 megabits per second. Current dynamic random access memory and other digital input/output peripherals operate between 32 megabits per second and 512 megabits per second. Presently available microprocessors are capable of operation in the low gigabits per second range. For example, the '386 Pentium microprocessor manufactured by Intel Corporation of Santa Clara. California operates in the lower half of that range, and the Alpha microprocessor manufactured by Digital Equipment Corporation approaches the 16 gigabits per second range.

When video compression is employed, as expressed above, the associated processing overhead reduces the effective bandwidth of the particular processor. As a result, in order to handle compressed video, these processors must operate in the terahertz frequency range. The bandwidth spectrum 60 shown in FIG. 4 represents the effect of handling media data streams including compressed video. The computing spectrum 66 is skewed down to properly align the computing bandwidth requirements with the telecommunications spectrum 62 and the media spectrum 64. Accordingly, current processor technology is not sufficient to handle the transmission and processing associated with complex streams of multi-media data.

The current specialized processor approach to media processing is illustrated in the block diagram shown in FIG. 5. As shown in FIG. 5. special purpose processors are coupled to a back plane 70, which is capable of transmitting instructions and data at the upper kilobits to lower gigabits per second range. In a typical configuration, an audio processor 76, video processor 78. graphics processor 80 and network processor 82 are all coupled to the back plane 70. Each of the audio, video, graphics and network processors 76-82 typically employ their own private or dedicated memories 84, which are only accessible to the specific processor and not accessible over the back plane 70. As described above, however, unless video data streams are constantly being processed, for example, the video processor 78 will sit idle for periods of time. The computing power of the dedicated video processor 78 is thus only available to handle video data streams and is not available to handle other media data streams that are directed to other dedicated processors. This, of course, is an inefficient use of the video processor 78 particularly in view of the overall processing capability of this multi-processor system.

The general purpose media processor 12, in contrast, handles a data stream of audio, video, graphics and network information all at the same time with the same processor. In order to handle the ever changing combination of data types, the general purpose media processor 12 is dynamically partitionable to allocate the appropriate amount of processing for each combination of media in a unified media data stream. A block diagram of two preferred general purpose media processor system configurations is shown in FIG. 6. Referring to FIG. 6(a), a general purpose media processor 12 is coupled to a high-speed back plane 90. The presently preferred back plane 90 is capable of operation at 30 gigabits per second. As those skilled in the art will appreciate, back planes 90 that are capable of operation at 400 gigabits per second or greater bandwidth are envisioned within the spirit and scope of the invention. Multiple memory devices 92 are also coupled to the back plane 90, which are accessible by the general purpose media processor 12. Input/output devices 94 are coupled to the back plane 90 through a dual-ported memory 92. The configuration of the input/output devices 94 on one end of the dual-ported memory 92 allows the sharing of these memory devices 92 throughout a network 38 of general purpose media processors 12.

Alternatively, FIG. 6(b) shows a presently preferred integrated general purpose media processor 12. The integrated processor includes on-board memory and I/O 86. The on-board memory is preferably of sufficient size to optimize throughput, and can comprise a cache and/or buffer memory or the like. The integrated media processor 12 also connects to external memory 88, which is preferably larger than the on-board memory 86 and forms the system main memory.

## Execution Unit

One presently preferred embodiment of an integrated general purpose media processor 12 is shown in FIG. 7. The core of the integrated general purpose media processor 12 comprises an execution unit 100. Three main elements or subsections are included in the execution unit 100. A multiple precision arithmetic/logic unit ("ALU") 102 performs all logical and simple arithmetic operations on incoming media data streams. Such operations consist of calculate and control operations such as Boolean functions, as well as addition, subtraction, multiplication and division. These operations are performed on single or unified media data streams transmitted to and from the multiple precision ALU 102 over a data bus or data path 108. Preferably the data path 108 is 128 bits wide, although those skilled in the art will appreciate that the data path 108 can take on any width or size without departing from the spirit and scope of the invention. The wider the data path 108 the more unified media data can be processed in parallel by the general purpose media processor 12.

Coupled to the multi-precision ALU 102 via the data path 108, and also an element of the execution unit 100, is a programmable switch 104. The programmable switch 104 performs data handling operations on single or unified media data streams transmitted over the data path 108. Examples of such data handling operations include deals, shuffles, shifts, expands, compresses, swizzles, permutes and reverses, although other data handling operations are contemplated. These operations can be performed on single bits or bit fields consisting of two or more bits up to the entire width of the data path 108. Thus, single bits or bit fields of various sizes can be manipulated through programmable operation of the switch 104.

Examples of the presently preferred data manipulation operations performed by the general purpose media processor 12 are shown in FIG. 8. A group expand operation is visually illustrated in FIG. 8(a). According to the group expand operation, a sequential field of bits 270 can be divided into constituent sub-fields 272a-272d for insertion into a larger field array 274. The reverse of the group expand operation is a group compress or extract operation. A visual illustration of the group compress or extract operation is shown in FIG. 8(b). As shown, separate sub-fields 272a-272d from a larger bit field 274 can be combined to form a contiguous or sequential field of bits 270.

Referring to FIGS. 8(c)-8(e), group deal, shuffle, swizzle and permute operations performed by the programmable switch 104 are also illustrated. The operations performed by these instructions are readily understood from a review of the drawings. The group manipulation operations illustrated in FIGS. 8(a)-8(e) comprise the presently contemplated data manipulation operations for the general purpose media processor 12. As those skilled in the art will appreciate, either a subset of these operations or additional data manipulation operations can be incorporated in other alternate embodiments of the general purpose media processor 12 without departing from the spirit and scope of the invention.

Referring again to FIG. 7, higher level mathematical operations than those performed by the multi-precision ALU 102 are performed in the general purpose media processor 12 through an extended math element 106. The extended math element 106 is coupled to the data path 108 and also comprises part of the execution unit 100. The extended math element 106 performs the complex arithmetic operations necessary for video data compression and similarly intensive mathematical operations. One presently preferred example of an extended math operation comprises a Galois field operation. Other examples of extended mathematical functions performed by the extended math element 106 include CRC generation and checking, Reed-Solomon code generation and checking, and spread-spectrum encoding and decoding. As those skilled in the art appreciate, additional mathematical operations are possible and contemplated.

According to the preferred embodiment of the integrated general purpose media processor 12. a register file 110 is provided in addition to the execution unit 100 to process media data. The register file 110 stores and transmits data streams to and from the execution unit 100 via the data path 108. Rather than employing a complex set of specific or dedicated registers, the general purpose media processor 12 preferably includes 64 general purpose registers in the register file 110 along with one program counter (not shown). The 64 general purpose registers contained in the register file 110 are all available to the user/programmer, and comprise a portion of the user state of the general purpose media processor 12. The general purpose registers are preferably capable of storing any form of data. Each register within the register file 110 is coupled to the data path 108 and is accessible to the execution unit 100 in the same manner. Thus, the user can employ a general purpose register according to the specific needs of a particular program or unique application. As those skilled in the art will appreciate, the register file 110 can also comprise a plurality of register files 110 configured in parallel in order to support parallel multi-threaded processing.

## Instruction Set and User Programming

Control or manipulation of data processed by the general purpose media processor 12 is achieved by selected instructions programmed by the user. Those skilled in the art will appreciate that a great number of programs are possible through various sequences of instructions. Particular programs can be developed for each unique implementation of the general purpose media processor 12. A detailed discussion of such specific programs is therefore beyond the scope of this description.

One presently preferred instruction set for the general purpose media processor 12 is included in the Microfiche Appendix, the contents of which are hereby incorporated herein by reference. A list of the presently preferred major operation codes for the general purpose media processor 12 appears below in Table I.

**MAJOR OPERATION CODES**

**TABLE I**

| MAJOR | 0 | 32 | 64 | 96 | 128 | 160 | 192 | 224 |
|---|---|---|---|---|---|---|---|---|
| **0** | ERES | GSHUFFLEI | FMULADD16 | GMULADD1 | LU16LAI | SAAS64LAI | EADDIO | BFE16 |
| **1** | ESHUFFLE14MUX | GSHUFFLE14MUX | FMULADD32 | GMULADD2 | LU16BAI | SAAS64BAI | EADDIUO | BFNUE16 |
| **2** | | GSELECT8 | FMULADD64 | GMULADD4 | LU16LI | SCAS64LAI | ESETIL | BFNUGE16 |
| **3** | EMDEPI | GMDEPI | | GMULADD8 | LU16BI | SCAS64BAI | ESETIGE | BFNUL16 |
| **4** | EMUX | GMUX | FMULSUB16 | GMULADD16 | LU32LAI | SMAS64LAI | ESETIE | BFE32 |
| **5** | E8MUX | G8MUX | FMULSUB32 | GMULADD32 | LU32BAI | SMAS64BAI | ESETINE | BFNUE32 |
| **6** | EGFMUL64 | GGFMUL8 | FMULSUB64 | GMULADD64 | LU32LI | SMUX64LAI | ESETIUL | BFNUGE32 |
| **7** | ETRANSPOSE8MUX | GTRANSPOSE4MUX | | GEXTRACT128 | LU32BI | SMUX64BAI | ESETIUGE | BFNUL32 |
| **8** | | | | | L16LAI | S16LAI | ESUBIO | BFE64 |
| **9** | ESWIZZLE | GSWIZZLE | | GUMULADD2 | L16BAI | S16BAI | ESUBIUO | BFNUE64 |
| **10** | | GSWIZZLECOPY | | GUMULADD4 | L16LI | S16LI | ESUBIL | BFNUGE64 |
| **11** | | GSWIZZLESWAP | | GUMULADD8 | L16BI | S16BI | ESUBIGE | BFNUL64 |
| **12** | EDEPI | GDEPI | F.16 | GUMULADD16 | L32LAI | S32LAI | ESUBIE | BFE129 |
| **13** | EUDEPI | GUDEPI | F.32 | GUMULADD32 | L32BAI | S32BAI | ESUBINE | BFNUE128 |
| **14** | EWTHI | GWTHI | F.64 | GUMULADD64 | L32LI | S32LI | ESUBIUL | BFNUGE128 |
| **15** | EUWTHI | GUWTHI | | GUEXTFACT128 | L32BI | S32BI | ESUBIUGE | BFNUL128 |
| **16** | | | GFMULADD16 | GEXTRACTI | L64LAI | S64LAI | EADDI | BANDE |
| **17** | | | GFMULADD32 | GEXTRACTI16 | L64BAI | S64BAI | EXORI | BANDNE |
| **18** | | | GFMULADD64 | GEXTRACTI32 | L64LI | S64LI | EORI | BL/BLZ |
| **19** | | | GFMULADD128 | GUEXTRACTI64 | L64BI | S64BI | EANDI | BGE/BGEZ |
| **20** | | | GFMULSUB16 | GEXTRACT | L128LAI | S128LAI | ESUBI | BE |
| **21** | | | GFMULSUB32 | I64 | L128BAI | S128BAI | | BNE |
| **22** | | | GFMULSUB64 | G.EXTRACT | L128LI | S128LI | ENORI | BUL/BGZ |
| **23** | | | GFMULSUB128 | I.128 | L128BI | S128BI | ENANDI | BUGE/BLEZ |
| **24** | | | | G.1 | L8I | S81 | | BGATEI |

(continued)

| **MAJOR** | **0** | **32** | **64** | **96** | **128** | **160** | **192** | **224** |
|---|---|---|---|---|---|---|---|---|
| **25** | | | | G.2 | LU8I | | | |
| **26** | | | | G.4 | | | | |
| **27** | | | | G.8 | | | | |
| **28** | | ECOPYI | GF. 16 | G.16 | | | ECOPYI | B1 |
| **29** | | | GF.32 | G.32 | | | | BLINKI |
| **30** | | | GF.64 | G.64 | | | | |
| **31** | | E.MINOR | GF. 128 | G.128 | L.MINOR | S.MINOR | E.MINOR | B.MINOR |
| **major operation code field values** | | | | | | | | |

As shown in Table I, the major operation codes are grouped according to the function performed by the operations. The operations are thus arranged and listed above according to the presently preferred operation code number for each instruction. As many as 255 separate operations are contemplated for the preferred embodiment of the general purpose media processor 12. As shown in Table I, however, not all of the operation codes are presently implemented. As those skilled in the art will appreciate, alternate schemes for organizing the operation codes, as well as additional operation codes for the general purpose media processor 12, are possible.

The instructions provided in the instruction set for the general purpose media processor 12 control the transfer, processing and manipulation of data streams between the register file 110 and the execution unit 100. The presently preferred width of the instruction path 112 is 32-bits wide, organized as four eight-bit bytes ("quadlets"). Those skilled in the art will appreciate, however, that the instruction path 112 can take on any width without departing from the spirit and scope of the invention. Preferably, each instruction within the instruction set is stored or organized in memory on four-byte boundaries. The presently preferred format for instructions is shown in FIG. 9(a).

As shown in FIG. 9(a), each of the presently preferred instruction formats for the general purpose media processor 12 includes a field 280 for the major operation code number shown in Table I. Based on the type of operation performed, the remaining bits can provide additional operands according to the type of addressing employed with the operation. For example, the remainder of the 32-bit instruction field can comprise an immediate operand ("imm"), or operands stored in any of the general registers ("ra," "rb," "rc," and "rd"). In addition, minor operation codes 282 can also be included among the operands of certain 32-bit instruction formats.

The presently preferred embodiment of the general purpose media processor 12 includes a limited instruction set similar to those seen in Reduced Instruction Set Computer ("RISC") systems. The preferred instruction set for the general purpose media processor 12 shown in Table I includes operations which implement load, store, synchronize, branch and gateway functions. These five groups of operations can be visually represented as two general classes of related operations. The branch and gateway operations perform related functions on media data streams and are thus visually represented as block 114 in FIG. 7. Similarly, the load, store and synchronize operations are grouped together in block 116 and perform similar operations on the media data streams. (Blocks 114 and 116 only represent the above classification of these operations and their function in the processing of media data streams, and do not indicate any specific underlying electronic connections.) A more detailed discussion of these operations, and the functionality of the general purpose media processor 12, appears in the Microfiche Appendix.

The four-byte structure of instructions for the general purpose media processor 12 is preferably independent of the byte ordering used for any data structures. Nevertheless, the gateway instructions are specifically defined as 16-byte structures containing a code address used to securely invoke a procedure at a higher privilege level. Gateways are preferably marked by protection information specified in the translation lookaside buffer 148 in the memory management unit 122. Gateways are thus preferably aligned on 16-byte boundaries in the external memory. In addition to the general purpose registers and program counter, a privilege level register is provided within the register file 110 that contains the privilege level of the currently executing instruction.

The instruction set preferably includes load and store instructions that move data between memory and the register file 110, branch instructions to compare the content of registers and transfer control, and arithmetic operations to perform computations on the contents of registers. Swap instructions provide multi-thread and multi-processor synchronization. These operations are preferably indivisible and include such instructions as add-and-swap, compare-and-swap, and multiplex-and-swap instructions. The fixed-point compare-and-branch instructions within the instruction set shown in Table I provide the necessary arithmetic tests for equality and inequality of signed and unsigned fixed-point values. The branch through gateway instruction provides a secure means to access code at a higher privileged level in a form similar to a high level language procedure call generally known in the art.

The general purpose media processor 12 also preferably supports floating-point compare-and-branch instructions. The arithmetic operations, which are supported in hardware, include floating-point addition, subtraction, multiplication, division and square root. The general purpose media processor 12 preferably supports other floating-point operations defined by the ANSI-IEEE floating-point standard through the use of software libraries. A floating point value can preferably be 16, 32, 64 or 128-bits wide. Examples of the presenting preferred floating-point data sizes are illustrated in FIG. 9(b).

The general purpose media processor 12 preferably supports virtual memory addressing and virtual machine operation through a memory management unit 122. Referring to FIG. 10(a), one presently preferred embodiment of the memory management unit 122 is shown. The memory management unit 122 preferably translates global virtual addresses into physical addresses by software programmable routines augmented by a hardware translation lookaside buffer ("TLB") 148. A facility for local virtual address translation 164 is also preferably provided. As those skilled in the art will appreciate, the memory management unit 122 includes a data cache 166 and a tag cache 168 that store data and tags associated with memory sections for each entry in the TLB 148.

A block diagram of one preferred embodiment of the TLB 148 is shown in FIG. 10(b). The TLB 148 receives a virtual address 230 as its input. For each entry in the TLB 148, the virtual address 230 is logically AND-ed with a mask 232. The output of each respective AND gate 234 is compared via a comparator 236 with each entry in the TLB 148. If a match is detected, an output from the comparator 236 is used to gate data 240 through a transceiver 238. As those skilled in the art will appreciate, a match indicates the entry of the corresponding physical address within the contents of the TLB 148 and no external memory or I/O access is required. The data 240 for the data cache 166 (FIG. 10(a)) is then combined with the remaining lower bits of the virtual address 230 through an exclusive-OR gate 242. The resultant combination is the physical address 244 output from the TLB 148. If a match is not detected between the logical address and the contents of the tag cache 168, the memory management unit 122 an external memory or I/O access is necessary to retrieve the relevant portion of memory and update the contents of the TLB 148 accordingly.

Using generally known memory management techniques, the memory management unit 122 ensures that instructions (and data) are properly retrieved from external memory (or other sources) over an external input/output bus 126 (see FIG. 7). As described in more detail below, a high bandwidth interface 124 is coupled to the external input/output bus 126 to communicate instructions (and media data streams) to the general purpose media processor 12. The presently preferred physical address width for the general purpose media processor 12 is eight bytes (64-bits). In addition, the memory management unit 122 preferably provides match bits (not shown) that allow large memory regions to be assigned a single TLB entry allowing for fine grain memory management of large memory sections. The memory management unit 122 also preferably includes a priority bit (not shown) that allows for preferential queuing of memory areas according to respective levels of priority. Other memory management operations generally known in the art are also performed by the memory management unit 122.

Referring again to FIG. 7, instructions received by the general purpose media processor 12 are stored in a combined instruction buffer/cache 118. The instruction buffer/cache 118 is dynamically subdivided to store the largest sequence of instructions capable of execution by the execution unit 100 without the necessity of accessing external memory. In a preferred embodiment of the invention, instruction buffer space is allocated to the smallest and most frequently executed blocks of media instructions. The instruction buffer thus helps maintain the high bandwidth capacity of the general purpose media processor 12 by sustaining the number of instructions executed per second at or near peak operation. That portion of the instruction buffer/cache 118 not used as a buffer is, therefore, available to be used as cache memory. The instruction buffer/cache 118 is coupled to the instruction path 112 and is preferably 32 kilobytes in size.

A data buffer/cache 120 is also provided to store data transmitted and received to and from the execution unit 100 and register file 110. The data buffer/cache 120 is also dynamically subdivided in a manner similar to that of the instruction buffer/cache 118. The buffer portion of the data buffer/cache 120 is optimized to store a set size of unified media data capable of execution without the necessity of accessing external memory. In a preferred embodiment of the invention, data buffer space is allocated to the smallest and most frequently accessed working sets of media data. Like the instruction buffer, the data buffer thus maintains peak bandwidth of the general purpose media processor 12. The data buffer/cache 120 is coupled to the data path 108 and is preferably also 32 kilobytes in size.

The preferred embodiment of the general purpose media processor 12 includes a pipelined instruction prefetch structure. Although pipelined operation is supported, the general purpose media processor 12 also allows for non-pipelined operations to execute without any operational penalty. One preferred pipeline structure for the general purpose media processor 12 comprises a "super-string" pipeline shown in FIG. 11. A super-string pipeline is designed to fetch and execute several instructions in each clock cycle. The instructions available for the general purpose media processor 12 can be broken down into five basic steps of operation. These steps include a register-to-register address calculation, a memory load, a register-to-register data calculation, a memory store and a branch operation. According to the super-string pipeline organization of the general purpose media processor 12, one instruction from each of these five types may be issued in each clock cycle. The presently preferred ordering of these operations are as listed above where each of the five steps are assigned letters "A," "L," "E," "S" and "B" (see FIG. 11).

According to the super-string pipelining technique, each of the instructions are serially dependent, as shown in FIG. 11, and the general purpose media processor 12 has the ability to issue a string of dependent instructions in a single clock cycle. These instructions shown in FIG. 11 can take from two to five cycles of latency to execute, and a branch prediction mechanism is preferably used to keep up the pipeline filled (described below). Instructions can be encoded in unit categories such as address, load, store/sync, fixed, float and branch to allow for easy decoding. A similar scheme is employed to pre-fetch data for the general purpose media processor 12.

As those skilled in the art will appreciate, the super-string pipeline can be implemented in a multi-threaded environment. In such an implementation, the number of threads is preferably relatively prime with respect to functional unit rates so that functional units can be scheduled in a non-interfering fashion between each thread.

In another more preferred embodiment, a "super-spring" pipelining scheme is employed with the general purpose media processor 12. The super-spring pipeline technique breaks the super-string pipeline shown in FIG. 11 into two sections that are coupled via a memory buffer (not shown). A visual representation of the super-spring pipeline technique is shown in FIG. 12. The front of the pipeline 204. in which address calculation (A), memory load (L), and branch (B) operations are handled, is decoupled from the back of the pipeline 206, in which data calculation (E) and memory store (S) operations are handled. The decoupling is accomplished through the memory buffer (not shown), which is preferably organized in a first-in-first-out ("FIFO") fast/dense structure. (The memory buffer is functionally represented as a spring in FIG. 12.)

As indicated in Table I above, the general purpose media processor 12 does not include delayed branch instructions, and so relies upon branch or fetch prediction techniques to keep the pipeline full in program flows around unconditional and conditional branch instructions. Many such techniques are generally known in the art. Examples of some presently preferred techniques include the use of group compare and set, and multiplex operations to eliminate unpredictable branches; the use of short forward branches, which cause pipeline neutralization; and where branch and link predicts the return address in a one or more entry stack. In addition, the specialized gateway instructions included in the general purpose media processor 12 allow for branches to and from protected virtual memory space. The gateway instructions, therefore, allow an efficient means to transfer between various levels of privilege.

As described above, two basic forms of media data are processed by the general purpose media processor 12, as shown in FIG. 7. These data streams generally comprise Nyquist sampled I/O 128, and standard memory and I/O 130. As shown in FIG. 7, audio 132, video 134, radio 136, network 138, tape 140 and disc 142 data streams comprise some examples of digitally sampled I/O 128. As those skilled in the art will appreciate, other forms of digitally sampled I/O are contemplated for processing by the general purpose media processor 12 without departing from the spirit and scope of the invention. Standard memory and I/O 130 comprises data received and transmitted to and from general digital peripheral devices used in the design of most computer systems. As shown in FIG. 7. some examples of such devices include dynamic random access memory ("DRAM") 146, or any data received over the PCI bus 144 generally known in the art. Other forms of standard memory and I/O sources are also contemplated. The various fixed-point data sizes preferred for the general purpose media processor 12 are illustrated in FIG. 9(c).

External Interface

As mentioned above, the general purpose media processor 12 includes a high bandwidth interface 124 to communicate with external memory and input/output sources. As part of the high bandwidth interface 124, the general purpose media processor 12 integrates several fast communication channels 156 (FIG. 13) to communicate externally. These fast communication channels 156 preferably couple to external caches 150, which serve as a buffer to memory interfaces 152 coupled to standard memory 154. The caches 150 preferably comprise synchronous static random access memory ("SRAM"), each of which are sixty-four kilobytes in size; and the standard memories 154 comprise DRAM's. The memory interfaces 152 transmit data between the caches 150 and the standard memories 154. The standard memories 154 together form the main external memory for the general purpose media processor 12. The cache 150, memory interface 152, standard memory 154 and input/output channel 156 therefore make up a single external memory unit 158 for the general purpose media processor 12.

According to the presently preferred embodiment of the invention, the memory interface protocol embeds read and write operations to a single memory space into packets containing command, address, data and acknowledgment information. The packets preferably include check codes that will detect single-bit transmission errors and some multiple-bit errors. As many as eight operations may be in progress at a time in each external memory unit 158. As shown in FIG. 13, up to four external memory units 158 may be cascaded together to expand the memory available to the general purpose media processor 12, and to improve the bandwidth of the external memory. Through such cascaded memory units 158, the memory interface 152 provides for the direct connection of multiple banks of standard memory 154 to maintain operation of the general purpose media processor 12 at sustained peak bandwidths.

According to one embodiment shown in FIG. 13, up to four standard memory devices 154 can be coupled to each memory interface 152. Each standard memory 154 thus includes as many as four banks of DRAM. each of which is preferably sixteen bits wide. The standard memories 154 are connected in parallel to the memory interface 152 forming a 72-bit wide data bus 160, where 64 bits are preferably provided for data transfer and eight bits are provided for error correction. In addition to the data bus 160, an address/control bus 162 is coupled between the memory interface 152 and each standard memory 154. The address/control bus 162 preferably comprises at least twelve address lines (4 kilobits x 16 memory size) and four control lines as shown in FIG. 13. An alternate manner for coupling the DRAM's to the memory interface 152 is illustrated in FIG. 14. As shown in FIG. 14, two banks of four DRAM single inline memory modules are coupled in parallel to the memory interface 152. The memory interface 152 also supports interleaving to enhance bandwidth, and page mode accesses to improve latency for localized addressing.

Using standard DRAM components, the external memory units 158 achieve bandwidths of approximately two gigabits/second with the standard memories 154. When four such external memory units 158 are coupled via the communication channel 156, therefore, the total bandwidth of the external main memory system increases to one gigabyte/second. As discussed further below, in implementations with two or eight communication channels 156, the aggregate bandwidth increases to two and eight gigabytes/second, respectively.

A more detailed depiction of the communication channel 156 circuitry appears in FIG. 15. According to the preferred embodiment of the invention, each communication channel 156 comprises two unidirectional, byte-wide, differential, packet-oriented data channels 156a, 156b (see FIG. 13). As explained above, where memory units 158 are cascaded together in series, the output of one memory unit 158 is connected to the input of another memory unit 158. The two unidirectional channels are thus connected through the memory units 158 forming a loop structure and make up a single bi-directional memory interface channel.

Referring to FIG. 15, each communication channel 156 is preferably eight bits wide, and each bit is transmitted differentially. For example, output transceiver 170 for bit $D_{0out}$ transmits both Do and /Do signals over the communication channel 156. Additional transceivers are similarly provided for the remaining bits in the channel 156. (The transceiver 176 for bit $D_{7out}$ and associated differential lines 178. 180 are shown in FIG. 15.) A $CLK_{out}$ transceiver 182 is also provided to generate differential clock outputs 184, 186 over the channel 156. To complete the link between memory units 158, input transceivers 188-192 are provided in each memory unit 158 for each of the differential bits and clock signals transmitted over the communication channel 156. These input signals 172, 174, 178, 180, 184, 186 are preferably transmitted through input buffers 194-198 to other parts of the memory unit 158 (described above).

Each memory unit 158 also includes a skew calibrator 200 and phase locked loop ("PLL") 202. The skew calibrator 200 is used to control skew in signals output to the communication channel 156. Preferably, digital skew fields are employed, which include set numbers of delay stages to be inserted in the output path of the communication channel 156. Setting these fields, and the corresponding analog skew fields, permits a fine level of control over the relative skew between output channel signals.

The PLL 202 recovers the clock signal on either side of the communication channel 156 and is thus provided to remove clock jitter. The clock signals 184, 186 preferably comprise a single phase, constant rate clock signal. The clock signals 184, 186 thus contain alternating zero and one values transmitted with the same timing as the data signals 172, 174, 178, 180. The clock signal frequency is, therefore, one-half the byte data rate. The communication channel 156 preferably operates at constant frequency and contains no auxiliary control, handshaking or flow control information.

Each external memory unit 158 preferably defines two functional regions: a memory region, implemented by the cache 150 backed by standard memory 154 (see FIG. 13), and a configuration region, implemented by registers (not shown). Both regions are accessed by separate interfaces; the communication channel 156 is used to access the memory region, and a serial interface (described below) is used to access the configuration region. In the memory region, the caches 150 are preferably write-back (write-in) single-set (direct-map) caches for data originally contained in standard memory 154. All accesses to memory space should maintain consistency between the contents of the cache 150 and the contents of the standard memory 154. The configuration region registers provide the mechanism to detect and adjust skew in the communication channel 156. Software is preferably employed to adaptively adjust the skew in the channel 156 through digital skew fields, as explained above. The serial interface thus is used to configure the external memory units 158, set diagnostic modes and read diagnostic information, and to enable the use of a high-speed tester (not shown).

One presently preferred embodiment of the invention employs two byte-wide packet communication channels 156 (FIG. 16(a)). In order to further increase the bandwidth of the general purpose media processor 12, up to sixteen byte-wide packet communication channels 156 can be employed. Referring to FIG. 16(b), twelve communication channels, comprising eight memory channels 210, a ninth channel for parallel processing 212 (described below), and three input/output ("I/O") channels 214, are shown. Each of the communication channels 210-214 preferably employs the cascade configuration of four channel interface devices 216. (Each channel interface device 216 coupled to the memory channels 210 corresponds to the external memory unit 158 shown in FIG. 13.) Through each of the twelve communication channels shown in FIG. 16(b), the general purpose media processor 12 can request or issue read or write transactions. When not interleaved, the twelve channels provide a single contiguous memory space for each channel interface device 216.

Alternatively, memory accesses may be interleaved in order to provide for continuous access to the external memory system at the maximum bandwidth for the DRAM memories. In an interleaved configuration, at any point in time some memory devices will be engaged in row pre-charge, while others may be driving or receiving data, or receiving row or column addresses. The memory interface 152 (FIG. 13) thus preferably maps between a contiguous address space and each of the separate address spaces made available within each external memory unit 158. For maximum performance, therefore, the memory interface is interleaved so that references to adjacent addresses are handled by different memory devices. Moreover, in the preferred embodiment, additional memory operations may be requested before the corresponding DRAM bank is available. In an interleaved approach, these operations are placed in a queue until they can be processed. According to the preferred embodiment, memory writes have lower priority than memory reads, unless an attempt is made to read an address that is queued for a write operation. As those skilled in the art will appreciate, the depth of the memory write queue is dictated by the specific implementation.

Although up to four external memory units 158 are preferably cascaded to form effectively larger memories, some amount of latency may be introduced by the cascade. Packets of data transmitted over the communication channel 156 are uniquely addressed to a particular channel interface device 216. A packet received at a particular device, which specifies another module address, is automatically passed to the correct channel interface device 216. Unless the module address matches a particular device 216, that packet simply passes from the input to the output of the interface device 216. This mechanism divides the serial interconnection of interface devices 216 into strings, which function as a single larger memory or peripheral, but with possibly longer response latency.

In addition to the memory channels 210, the general purpose media processor 12 provides several communication channels 214 for communication with external input/output devices. Referring to FIG. 16(b), three input/output channels 214 having SRAM buffered memory (see FIG. 13) provide an interface to external standard I/O devices (not shown). Like the eight memory channels 210, the three I/O channels 214 are byte-wide input/output channels intended to operate at rates of at least one gigahertz. The three I/O channels 214 also operate as a packet communication link to synchronous SRAM memory 208 within the channel interface device 216. A controller 226 within the channel interface device 216 completes the interface to the I/O devices.

The three I/O channels 214 preferably function in like manner to the memory channels 210 described above. The interface protocol for the three I/O channels 214 divides read and write operations to a single memory space into packets containing command, address, data and acknowledgment information. The packets also include a check code that will detect single-bit transmission errors and some multiple-bit errors. According to the preferred embodiment of the invention, as many as eight operations may progress in each interface device 216 at a time. As shown in FIG. 16(b), up to four channel interface devices 216 can be cascaded together to expand the bandwidth in the three I/O channels 214. A bit-serial interface (not shown) is also provided to each of the channel interface devices 216 to allow access to configuration, diagnostic and tester information at standard TTL signal levels at a more moderate data rate. (A more detailed description of the serial interface is provided below).

Like the memory channels 210. each I/O channel 214 includes nine signals -- one clock signal and eight data signals. Differential voltage levels are preferably employed for each signal. Each channel interface device 216 is preferably terminated in a nominal 50 ohm impedance to ground. This impedance applies for both inputs and outputs to the communication channel 156. A programmable termination impedance is preferred.

Interface Communication

According to one presently preferred embodiment of the invention, the channel interface devices 216 can operate as either master devices or slave devices. A master device is capable of generating a request on the communication channel 156 and receiving responses from the communication channel 156. Slave devices are capable of receiving requests and generating responses, over the communication channel 156. A master device is preferably capable of generating a constant frequency clock signal and accepting signals at the same clock frequency over the communication channel 156. A slave device, therefore, should operate at the same clock rate as the communication channel 156, and generate no more than a specified amount of variation in output clock phase relative to input clock phase. The master device, however, can accept an arbitrary input clock phase and tolerates a specified amount of variation in clock phase over operating conditions.

Packets of information sent over the communication channel 156 preferably contain control commands, such as read or write operations, along with addresses and associated data. Other commands are provided to indicate error conditions and responses to the above commands. When the communication channel 156 is idle, such as during initialization and between transmitted packets, an idle packet, consisting of an all-zero byte and an all- one byte is transmitted through the communication channel 156. Each non-idle packet consists of two bytes or a multiple of two bytes, and begins with a byte having a value other than all zeros. All packets transmitted over the communication channel 156 also begin during a clock period in which the clock signal is zero, and all packets preferably end during a clock period in which the clock signal is one. A depiction of the preferred packet protocol format for transmission over the communication channel 156 appears in FIG. 17.

The general form of each packet is an array of bytes preferably without a specific byte ordering. The first byte contains a module address 250 ("ma") in the high order two bits; a packet identifier, usually a command 252 ("com"), in the next three bit positions; and a link identification number 254 ("lid") in the last three bit positions. The interpretation of the remaining bytes of a packet depend upon the contents of the packet identifier. The length of each packet is preferably implied by the command specified in the initial byte of the packet. A check byte is provided and computed as odd bit-wise parity with a leftward circular rotation after accumulating each byte. This technique provides detection of all single-bit and some multiple-bit errors, but no correction is provided.

The modular address 250 field of each packet is preferably a two-bit field and allows for as many as four slave devices to be operated from a single communication channel 156. Module address values can be assigned in one of two fashions: either dynamically assigned through a configuration register (not shown), or assigned via static/geometric configuration pins. Dynamic assignment through a configuration register is the presently preferred method for assigning module address values.

The link identification number 254 field is preferably 3-bits wide and provides the opportunity for master devices to initiate as many as eight independent operations at any one time to each slave device. Each outstanding operation requires a distinct link identification number, but no ordering of operations should be implied by the value of the link identification field. Thus, there is preferably no requirement for link identification values 254 to be sequentially assigned either in requests or responses.

The receipt of packets over the communication channel 156 that do not conform to the channel protocol preferably generates an error condition. As those skilled in the art will appreciate, the level or degrees to which a specific implementation detects errors is defined by the user. In one presently preferred embodiment of the invention, all errors are detected, and the following protocol is employed for handling errors. For each error detected, the channel interface device 216 causes a response explicitly indicating the error condition. Channel interface devices 216 reporting an invalid packet will then suppress the receipt of additional packets until the error is cleared. The transmitted packet is otherwise ignored. However, even though the erroneous packet is ignored, the channel interface devices 216 preferably continue to process valid packets that have already been received and generate responses thereto. An identification of the presently preferred commands 252 to be used over the communication channel 156 are listed in FIG. 17.

In the master/slave preferred embodiment, the channel interface devices 216 forward packets that are intended for other devices connected to the communication channel 156, as described above. In slave devices, forwarding is performed based on the module address 250 field of the packet. Packets which contain a module address 250 other than that of the current device are forwarded on to the next device. All non-idle packets are thus forwarded including error packets. In master devices, forwarding is performed based on the link identifier number 254 of the packet. Packets that contain link identifier numbers 254 not generated by the specific channel interface device 216 are forwarded. In order to reduce transmission latency, a packet buffer may be provided. As those skilled in the art appreciate, the suitable size for the packet buffer depends on the amount of latency tolerable in a particular implementation.

A variety of master/slave ring configurations are possible using the high bandwidth interface 124 of the invention. Five ring configurations are currently preferred: single-master, dual-master, multiple-master, single-slave and multiple-master/multiple-slave. The simplest ring configuration contains a single non-forwarding master device and a single non-forwarding slave device. No forwarding is required for either device in this configuration as packets are sent directly to the recipient. A single-master ring, however, may contain a cascade of up to four slave devices (see FIGS. 13, 16). In the single-master ring configuration, each slave device is configured to a distinct module address, and each slave device forwards packets that contain module address fields unequal to their own. As discussed above, a single-master ring provides a larger memory or I/O capacity than a master-slave pair, but also introduces a potentially longer response latency. In the single-master ring, each slave device may have as many as eight transactions outstanding at any time, as described above.

The remaining combinations share many of the above basic attributes. In a dual-master pair, each master device may initiate read and write operations addressed to the other, and each may have up to eight such transactions outstanding. No forwarding is required for either device because packets are sent directly to the recipient. A multiple-master ring may contain multiple master devices and a single slave device. In this configuration, the slave device need not forward packets as all input packets are designated for the single slave device. A multiple-master ring may contain multiple master devices and as many as four slave devices. Each slave device may have up to eight transactions outstanding, and each master device may use some of those transactions. In a preferred embodiment, a master also has the capability to detect a time-out condition or when a response to a request packet is not received. Further aspects of inter-processor communications and configurations are discussed below in connection with FIG. 18.

Serial Bus

In one preferred embodiment of the invention, the general purpose media processor 12 includes a serial bus (not shown). The serial bus is designed to provide bootstrap resources, configuration, and diagnostic support to the general purpose media processor 12. The serial bus preferably employs two signals, both at TTL levels, for direct communication among many devices. In the preferred embodiment, the first signal is a continuously running clock, and the second signal is an open-collector bi-directional data signal. Four additional signals provide geographic addresses for each device coupled to the serial bus. A gateway protocol, and optional configurable addressing, each provide a means to extend the serial bus to other buses and devices. Although the serial bus is designed for implementation in a system having a general purpose media processor 12. as those skilled in the art will appreciate, the serial bus is applicable to other systems as well.

Because the serial bus is preferably used for the initial bootstrap program load of the general purpose media processor 12, the bootstrap ROM is coupled to the serial bus. As a result, the serial bus needs to be operational for the first instruction fetch. The serial bus protocol is therefore devised so that no transactions are required for initial bus configuration or bus address assignment.

According to the preferred embodiment, the clock signal comprises a continuously running clock signal at a minimum of 20 megahertz. The amount of skew, if any, in the clock signal between any two serial bus devices should be limited to be less than the skew on the data signal. Preferably, the serial data signal is a non-inverted open collector bi-directional data signal. TTL levels are preferred for communication on the serial bus, and several termination networks may be employed for the serial data signal. A simple preferred termination network employs a resistive pull-up of 220 ohms to 3.3 volts above $V_{SS}$. An alternate embodiment employs a more complex termination network such as a termination network including diodes or the "Forced Perfect Termination" network proposed for the SCSI-2 standard, which may be advantageous for larger configurations.

The geographic addressing employed in the serial bus is provided to insure that each device is addressable with a number that is unique among all devices on the bus and which also preferably reflects the physical location of the device. Thus, the address of each device remains the same each time the system is operated. In one preferred embodiment, the geographic address is composed of four bits, thus allowing for up to 16 devices. In order to extend the geographic addressing to more than 16 devices, additional signals may be employed such as a buffered copy of the clock signal or an inverted copy of the clock signal (or both).

The serial bus preferably incorporates both a bit level and packet protocol. The bit level protocol allows any device to transmit one bit of information on the bus, which is received by all devices on the bus at the same time. Each transmitted bit begins at the rising edge of the clock signal and ends at the next rising edge. The transmitted bit value is sampled at the next rising edge of the clock signal. According to one preferred embodiment where the serial data signal is an open collector signal, the transmission of a zero bit value on the bus is achieved by driving the serial data signal to a logical low value. In this embodiment, the transmission of a one bit value is achieved by releasing the serial data signal to obtain a logical high value. If more than one device attempts to transmit a value on the same clock, the resulting value is a zero if any device transmits a zero value, and one if all devices transmit a one value. This provides a "wired-AND" collision mechanism, as those skilled in the art will appreciate. If two or more devices transmit the same value on the same clock cycle, however, no device can detect the occurrence of a collision. In such cases, the transaction, which may occur frequently in some implementations, preferably proceeds as described below.

The packet protocol employed with the serial bus uses the bit level protocol to transmit information in units of eight bits or multiples of eight bits. Each packet transmission preferably begins with a start bit in which the serial data signal has a zero (driven) value. After transmitting the eight data bits, a parity bit is transmitted. The transmission continues with additional data. A single one (released) bit is transmitted immediately following the least significant bit of each byte signaling the end of the byte.

On the cycle following the transmission of the parity bit, any device may demand a delay of two cycles to process the data received. The two cycle delay is initiated by driving the serial data signal (to a zero value) and releasing the serial data signal on the next cycle. Before releasing the serial data signal, however, it is preferable to insure that the signal is not being driven by any other device. Further delays are available by repeating this pattern.

In order to avoid collisions, a device is not permitted to start a transmission over the serial bus unless there are no currently executing transactions. To resolve collisions that may occur if two devices begin transmission on the same cycle, each transmitting device should preferably monitor the bus during the transmission of one (released) bits. If any of the bits of the byte are received as zero when transmitting a one, the device has lost arbitration and must cease transmission of any additional bits of the current byte or transaction.

According to the preferred embodiment of the invention, a serial bus transaction consists of the transmission of a series of packets. The transaction begins with a transmission by the transaction initiator, which specifies the target network, device, length, type and payload of the transaction request. The transaction terminates with a packet having a type field in a specified range. As a result, all devices connected to the serial bus should monitor the serial data signal to determine when transactions begin and end. A serial bus network may have multiple simultaneous transactions occurring, however, so long as the target and initiator network addresses are all disjoint.

Parallel Processing

In one preferred embodiment of the invention, two or more general purpose media processors 12 can be linked together to achieve a multiple processor system. According to this embodiment, general purpose media processors 12 are linked together using their high bandwidth interface channels 124, either directly or through external switching components (not shown). The dual-master pair configuration described above can thus be extended for use in multiple-master ring configurations. Preferably, internal daemons provide for the generation of memory references to remote processors, accesses to local physical memory space, and the transport of remote references to other remote processors. In a multi-processor environment, all general purpose media processors 12 run off of a common clock frequency, as required by the communication channels 156 that connect between processors.

Referring to FIG. 18, each general purpose media processor 12 preferably includes at least a pair of inter-processor links 218 (see also FIG. 16(b)). In one configuration, both pairs of inter-processor links 218 can be connected between the two processors 12 to further enhance bandwidth. As shown in FIG. 18(a) several processors 12 may be interconnected in a linear network employing the transponder daemons in each processor. In an alternate embodiment shown in FIG. 18(b), the inter-processor links 218 may be used to join the general purpose media processors 12 in a ring configuration.
Alternatively still, general purpose media processors 12 may be interconnected into a two-dimensional network of processors of arbitrary size, as shown in FIG. 18(c). Sixteen processors are connected in FIG. 18(c) by connecting four ring networks. In yet another alternate embodiment, by connecting the inter-processor links 218 to external switching devices (not shown), multi-processors with a large number of processors can be constructed with an arbitrary interconnection topology.

The requester. responder and transponder daemons preferably handle all inter-processor operations. When one general purpose media processor 12 attempts a load or store to a physical address of a remote processor, the requester daemon autonomously attempts to satisfy the remote memory reference by communicating with the external device. The external device may comprise another processor 12 or a switching device (not shown) that eventually reaches another processor 12. Preferably, two requester daemons are provided each processor 12, which act concurrently on two different byte channels and/or module addresses. The responder daemon accepts writes from a specified channel and module address, which enables an external device to generate transaction requests in local memory or to generate processor events. The responder daemon also generates link level writes to the same external device that communicated responses for the received transaction request. Two such responder daemons are preferably provided; each of which operate concurrently to two different byte channels and/or module addresses.

The transponder daemon accepts writes from a specified channel and module address, which enable an external device to cause a requester daemon to generate a request on another channel and module address. Preferably, two such transponder daemons are provided, each of which act concurrently (back-to-back) between two different byte channel and/or module addresses. As those skilled in the art will appreciate, the requester, responder and transponder daemons must act cooperatively to avoid deadlock that may arise due to an imbalance of requests in the system. Deadlocks prevent responses from being routed to their destinations, which may defeat the benefits of a multi-processor distributed system.

According to one presently preferred embodiment of the invention, the general purpose media processor 12 can be implemented as one or more integrated circuit chips. Referring to FIG. 19, the presently preferred embodiment of the general purpose media processor 12 consists of a four-chip set. In the four-chip set, a general purpose media processor 12 is manufactured as a stand alone integrated circuit. The stand alone integrated circuit includes a memory management unit 122, instruction and data cache/buffers 118, 120, and an execution unit 100. A plurality of signal input/output pads 260 are provided around the circumference of the integrated circuit to communicate signals to and from the general purpose media processor 12 in a manner generally known in the art.

The second and third chips of the four-chip set comprise in an external memory element 158 and a channel interface device 216. The external memory element 158 includes an interface to the communication channel 156. a cache 150 and a memory interface 152. The channel interface device 216 also includes an interface to the communication channel 156, as well as buffer memory 262, and input/output interfaces 264. Both the external memory element 158 and the channel interface device 216 include a plurality of input/output signal pads 260 to communicate signals to and from these devices in a generally known manner.

The fourth integrated circuit chip comprises a switch 226, which allows for installation of the general purpose media processor 12 in the heterogeneous network 38. In addition to the plurality of input/output pads 260, the switch 226 includes an interface to the communication channel 156. The switch 226 also preferably includes a buffer 262, a router 266, and a switch interface 268.

As those skilled in the art will appreciate, many implementations for the general purpose media processor 12 are possible in addition to the four-chip implementation described above. Rather than an integrated approach, the general purpose media processor can be implemented in a discrete manner. Alternatively, the general purpose media processor 12 can be implemented in a single integrated circuit, or in an implementation with fewer than four integrated circuit chips. Other combinations and permutations of these implementations are contemplated.

There has been described a system for processing streams of media data at substantially peak rates to allow for real time communication over a large heterogeneous network. The system includes a media processor at its core that is capable of processing such media data streams. The heterogeneous network consists of, for example, the fiber optic/coaxial cable/twisted wire network in place throughout the U.S. To provide for such communication of media data, a media processor according to the invention is disposed at various locations throughout the heterogeneous network. The media processor would thus function both in a server capacity and at an end user site within the network. Examples of such end user sites include televisions, set-top converter boxes, facsimile machines, wireless and cellular telephones, as well as large and small business and industrial applications.

To achieve such high rates of data throughput, the media processor includes an execution unit, high bandwidth interface, memory management unit, and pipelined instruction and data paths. The high bandwidth interface includes a mechanism for transmitting media data streams to and from the media processor at rates at or above the gigahertz frequency range. The media data stream can consist of transmission, presentation and storage type data transmitted alone or in a unified manner. Examples of such data types include audio, video, radio, network and digital communications.

According to the invention, the media processor is dynamically partitionable to process any combination or permutation of these data types in any size.

A programmable, general purpose media processor system presents significant advantages over current multimedia communications. Rather than rigid, costly and inefficient specialized processors, the media processor provides a general purpose instruction set to ease programmability in a single device that is capable of performing all of the operations of the specialized processor combination. Providing a uniform instruction set for all media related operations eliminates the need for a programmer to learn several different instruction sets, each for a different specialized processor. The complexity of programming the specialized processors to work together and communicate with one another is also greatly reduced. The unified instruction set is also more efficient. Highly specialized general calculation instructions that are tailored to general or special types of calculations rather than enhancing communication are eliminated.

Moreover, the media processor system can be easily reprogrammed simply by transmitting or downloading new software over the network. In the specialized processor approach, new programming usually requires the delivery and installation of new hardware. Reprogramming the media processor can be done electronically, which of course is quicker and less costly than the replacement of hardware.

It is to be understood that a wide range of changes and modifications to the embodiments described above will be apparent to those skilled in the art and are contemplated. It is therefore intended that the foregoing detailed description be regarded as illustrative rather than limiting, and that it be understood that it is the following claims, including all equivalents, that are intended to define the spirit and scope of this invention.

Set forth on the following pages (46-406) is a more detailed discussion of the operations, and the functionality of the general purpose media processor 12.

*Introduction*

MicroUnity's Terpsichore System Architecture describes general-purpose processor, memory, and interface subsystems, organized to operate at enormously higher bandwidth rates than traditional computers.

Terpsichore's Euterpe processor performs integer, floating point, and signal processing operations at data rates up to 512 bits (i.e., up to four 128-bit operand groups) per instruction. The instruction set design carries the concept of streamlining beyond Reduced Instruction Set Computer (RISC) architectures, since it targets implementations that issue several instructions per machine cycle.

The Terpsichore memory subsystem provides 64-bit virtual and physical addressing for UNIX. Mach, and other advanced OS environments. Caches supply the high data and instruction issue rates of the processor, and support coherency primitives for scalable multiprocessors. The memory subsystem includes mechanisms for sustaining high data rates not only in block transfer modes, but also in non-unit stride and scatter/gather access patterns.

Hermes channels provide 64-bit transfers between subsystem components with gigabyte-per-second bandwidth. Terpsichore's Cerberus serial bus provides a flexible, robust and inexpensive mechanism to handle system initialization, configuration, availability, and error recovery. Mnemosyne memory interface devices provide for the integration of large numbers of industry-standard memory components into Terpsichore systems. Persephone devices enable Terpsichore systems to utilize industry-standard PCI interface cards.

Terpsichore's Calliope interface subsystem is tightly integrated with the processor and memory, to supply both the bandwidth and real-time response needs of video, audio, network, and mass storage interfaces. Integration provides for the sharing of memory bandwidth among these devices and the processor, without distributed or dedicated buffer memories in each interface adapter.

Terpsichore's Euterpe processor incorporates Icarus interprocessor interfaces for assembly of small-scale, coherently-cached, shared-memory multiprocessors, without additional circuitry. Icarus interfaces may also be used to connect Terpsichore processors to a high-performance switching fabric for large-scale multiprocessors, or to adapters to standard interprocessor interfaces, such as Scalable Coherent Interface (IEEE standard 1596-1992).

The goal of the Terpsichore architecture is to integrate these processor, memory, and interface capabilities with optimal simplicity and generality. From the software perspective, the entire machine state consists of a program counter, a single bank of 64 general-purpose 64-bit registers, and a linear byte-addressed shared memory space with mapped interface registers. All interrupts and exceptions are precise, and occur with low overhead.

This document is intended for Terpsichore software and hardware developers alike, and defines the interface at which their designs must meet. Terpsichore pursues the most efficient tradeoffs between hardware and software complexity by making all processor, memory, and interface resources directly accessible to high-level language programs.

*Conformance*

To ensure that Terpsichore systems are able to freely interchange data, user-level programs, system-level programs and interface devices, the Terpsichore system architecture reaches above the processor level architecture.

*Mandatory and Optional Areas*

A computer system conforms to the requirements of the Terpsichore System Architecture if and only if it implements all the specifications described in this document and other specifications included by reference. Conformance to the specification is mandatory in all areas, including the instruction set, memory management system, interface devices and external interfaces, and bootstrap ROM functional requirements, except where explicit options are stated.

Optional areas include:

Number of processor threads
Size of first-level cache memories
Existence of a second-level cache
Size of second-level cache memory
Size of system-level memory
Existence of certain optional interface device interfaces

Conformance to the specification is also optional regarding the physical implementation of internal interfaces, specifically that of the Cerberus serial bus architecture, the Hermes high-bandwidth channel architecture, and the Icarus interprocessor interconnection architecture. An implementation may replace, modify or eliminate these interfaces, provided that the software-level functionality is unchanged.

*Upward-compatible Modifications*

From time to time, MicroUnity may modify the architecture in an upward-compatible manner, such as by the addition of new instructions, definition of reserved bits in system state, or addition of new standard interfaces. Such modifications will be added as options, so that designs which conform to this version of the architecture will conform to future, modified versions.

Additional devices and interfaces, not covered by this standard may be added in specified regions of the physical memory space, provided that system reset places these devices and interfaces in an inactive state that does not interfere with the operation of software that runs in any conformant system. The software interface requirements of any such additional devices and interfaces must be made as widely available as this architecture specification.

*Promotion of Optional Features*

It is most strongly recommended that such optional instructions, state or interfaces be implemented in all conforming designs. Such implementations enhance the value of the features in particular and the architecture as a whole by broadening the set of implementations over which software may depend upon the presence of these features.

Implementations which fail to implement these features may encounter unacceptable levels of overhead when attempting to emulate the features by exception handlers or use of virtual memory. This is a particular concern when involved in code which has real-time performance constraints.

In order that upward-compatible optional extensions of the original Terpsichore system architecture may be relied upon by system and application software, MicroUnity may upon occasion promote optional features to mandatory conformance for implementations designed or produced after a suitable delay upon such notification by publication of future version of the specification.

*Unrestricted Physical Implementation*

Nothing in this specification should be construed to limit the implementation choices of the conformant system beyond the specific requirements stated herein. In particular, a computer system may conform to the Terpsichore System Architecture while employing any number of components, dissipate any amount of heat, require any special environmental facilities, or be of any physical size.

*Draft Version*

This document is a draft version of the architectural specification. In this form, conformance to this document may not be claimed or implied. MicroUnity may change this specification at any time, in any manner, until it has been declared final. When this document has been declared final, the only changes will be to correct bugs, defects or deficiencies, and to add upward-compatible optional extensions.

*Common Elements*

*Notation*

The descriptive notation used in this document is summarized in the table below:

descriptive notation

| | |
|---|---|
| x + y | two's complement or floating-point addition of x and y. Result is the same size as the operands, and operands must be of equal size. |
| x - y | two's complement or floating-point subtraction of y from x. Result is the same size as the operands, and operands must be of equal size. |
| x * y | two's complement or floating-point multiplication of x and y. Result is the same size as the operands, and operands must be of equal size. |
| x/y | two's complement or floating-point division of x by y. Result is the same size as the operands, and operands must be of equal size. |
| x = y | two s complement or floating-point equality comparison between x and y. Result is a single bit and operands must be of equal size. |
| x ≠ y | two's complement or floating-point inequality comparison between x and y. Result is a single bit, and operands must be of equal size. |
| x < y | two's complement or floating-point less than comparison between x and y. Result is a single bit, and operands must be of equal size. |
| x ≥ y | two's complement or floating-point greater than or equal comparison between x and y. Result is a single bit, and operands must be of equal size. |
| √x | floating-point square root of x |
| x ‖ y | concatenation of bit field x to left of bit field y |
| $x^y$ | binary digit x repeated, concatenated y times. Size of result is Y. |
| $x_y$ | extraction of bit y (using little-endian bit numbering) from value x. Result is a single bit. |
| $x_{y..z}$ | extraction of bit field formed from bits y through z of value x |
| x?y:z | value of y, if x is true, otherwise value of z. Value of x is a single bit. |
| x ← y | bitwise assignment of x to value of y |
| Sn | signed, two's complement. binary data format of n bytes |
| Un | unsigned binary data format of n bytes |
| Fn | floating-point data format of n bytes |

*Bit ordering*

The ordering of bits in this document is always little-endian, regardless of the ordering of bytes within larger data structures. Thus, the least-significant bit of a data structure is always labeled 0 (zero), and the most-significant bit is labeled as the data structure size (in bits) minus one.

*Memory*

Terpsichore memory is an array of $2^{64}$ bytes, without a specified byte ordering, which is physically distributed among various Terpsichore components.

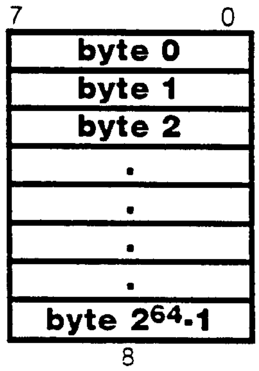


*Byte*

A byte is a single element of the memory array, consisting of 8 bits:

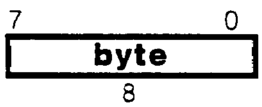


*Byte ordering*

Larger data structures are constructed from the concatenation of bytes in either little-endian or big-endian byte ordering. A memory access of a data structure of size s at address i is formed from memory bytes at addresses i through i+s-1. Unless otherwise specified, there is no specific requirement of alignment: it is not generally required that i be a multiple of s. Aligned accesses are preferred whenever possible, however, as they will often require one less processor or memory clock cycle than unaligned accesses.

With little-endian byte ordering, the bytes are arranged as:

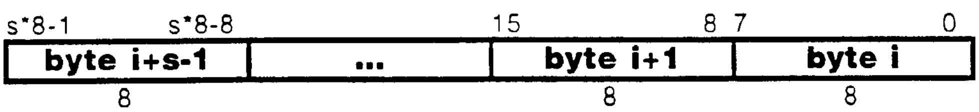


With big-endian byte ordering, the bytes are arranged as:

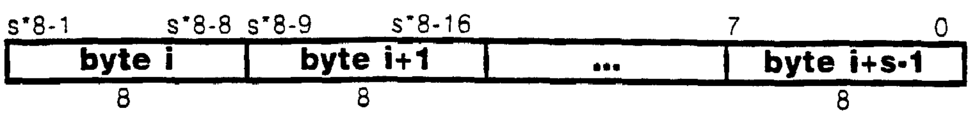


Terpsichore memory is byte-addressed, using either little-endian or big-endian byte ordering. For consistency with the bit ordering, and for compatibility with x86 processors, Terpsichore uses little-endian byte ordering when an ordering must be selected. Euterpe load and store instructions are available for both little-endian and big-endian byte ordering. The selection of byte ordering is dynamic, so that little-endian and big-endian processes, and even data structures within a process, can be intermixed on the processor.

*Memory read/load semantics*

Terpsichore memory, including memory-mapped registers, must conform to the following requirements regarding side-effects of read or load operations:

A memory read must have no side-effects on the contents of the addressed memory nor on the contents of any other memory.

*Memory write/store semantics*

Terpsichore memory, including memory-mapped registers, must conform to the following requirements regarding side-effects of read or load operations:

A memory write must have no side-effects on the contents of the addressed memory. A memory write may cause side-effects on the contents of memory not addressed by the write operation, however, a second memory write of the same value to the same address must have no side-effects on any memory; memory write operations must be idempotent.

Euterpe store instructions which are weakly ordered may have side-effects on the contents of memory not addressed by the store itself; subsequent load instructions which are also weakly ordered may or may not return values which reflect the side-effects.

*Data*

Euterpe provides eight-byte (64-bit) virtual and physical address sizes, and eight-byte (64-bit) and sixteen-byte (128-bit) data path sizes, and uses fixed-length four-byte (32-bit) instructions. Arithmetic is performed on two's-complement or unsigned binary and ANSI/IEEE standard 754-1985 conforming binary floating-point number representations.

*Fixed-point Data*

*Bit*

A bit is a primitive data element:

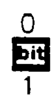


*Peck*

A peck is the catenation of two bits:

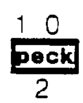


*Nibble*

A nibble is the catenation of four bits:

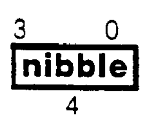


*Byte*

A byte is the catenation of eight bits, and is a single element of the memory array:

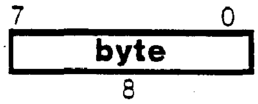


*Doublet*

A doublet is the catenation of 16 bits, and is the concatenation of two bytes:

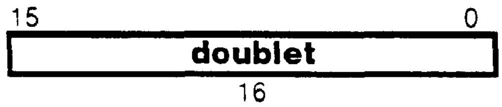


*Quadlet*

A quadlet is the catenation of 32 bits, and is the concatenation of four bytes:

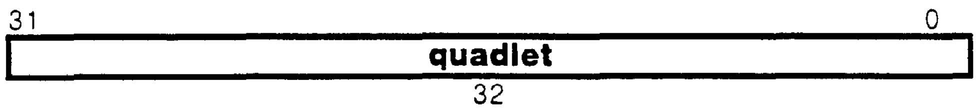


*Octlet*

An octlet is the catenation of 64 bits, and is the concatenation of eight bytes:

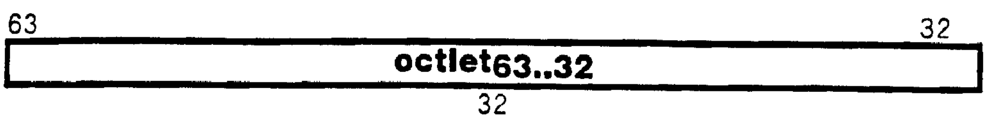


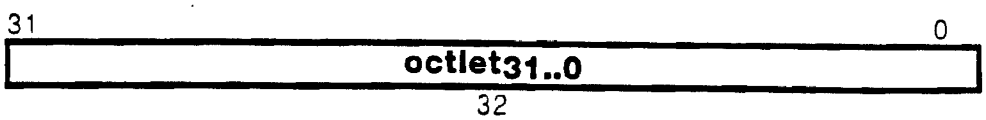


*Hexlet*

A hexlet is the catenation of 128 bits, and is the concatenation of sixteen bytes:

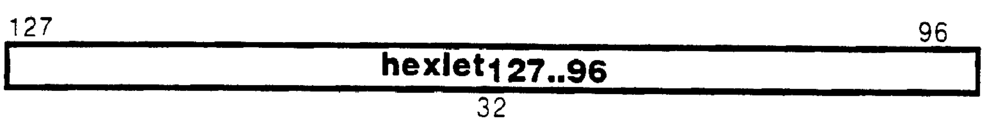


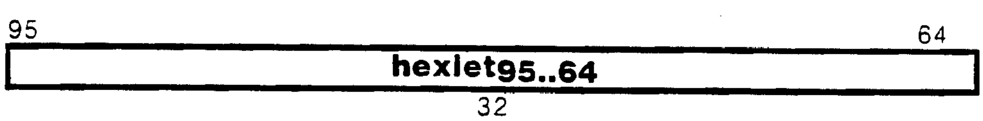

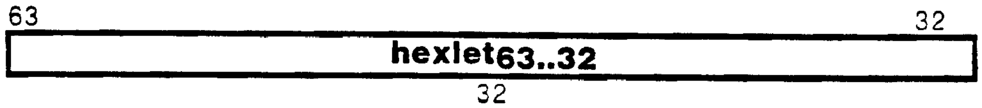


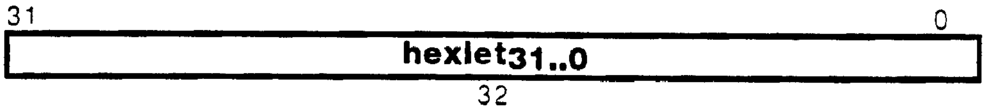


*Address*

Terpsichore addresses are octlet quantities.

*Floating-point Data*

Terpsichore's floating-point formats are designed to satisfy ANSI/IEEE standard 754-1985: Binary Floating-point Arithmetic. Standard 754 leaves certain aspects to the discretion of the implementor:

Terpsichore adds additional half-precision and quad-precision formats to standard 754's single-precision and double-precision formats. Terpsichore's double-precision satisfies standard 754's precision requirements for a single-extended format, and Terpsichore's quad-precision satisfies standard 754's precision requirements for a double-extended format.

Quiet NaN values are denoted by any sign bit value, an exponent field of all one bits, and a non-zero significand with the most significant bit cleared. Quiet NaN values generated by default exception handling of standard operations have a zero sign bit, an exponent field of all one bits, and a significand field with the most significant bit cleared, the next-most significant bit set, and all other bits cleared.

Signaling NaN values are denoted by any sign bit value, an exponent field of all one bits, and a non-zero significand with the most significant bit set.

*Half-precision Floating-point*

Terpsichore half precision uses a format similar to standard 754's requirements, reduced to a 16-bit overall format. The format contains sufficient precision and exponent range to hold a 12-bit signed integer.

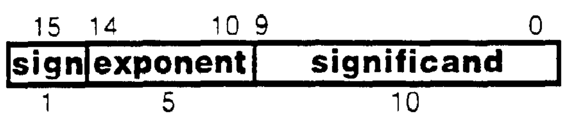


*Single-precision Floating-point*

Terpsichore single precision satisfies standard 754's requirements for "single."

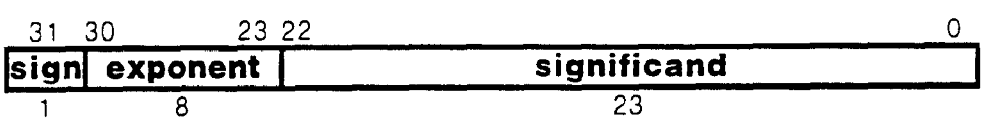


*Double-precision Floating-point*

Terpsichore double precision satisfies standard 754's requirements for "double."

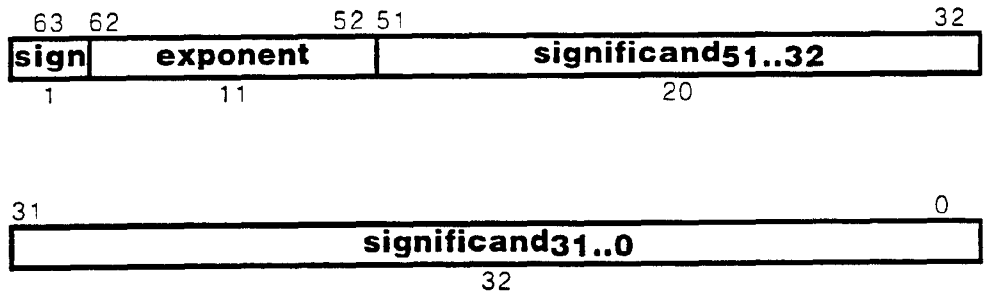


*Quad-precision Floating-point*

Terpsichore quad precision satisfies standard 754's requirements for "double extended," but has additional significand precision to use 128 bits.

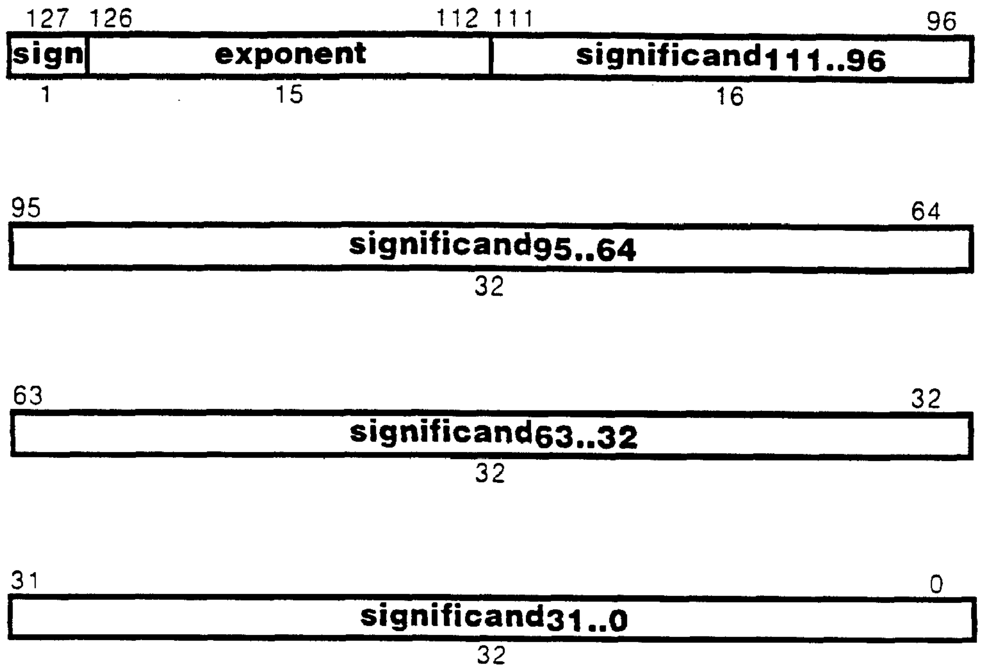


*Euterpe Processor*

MicroUnity's Euterpe processor provides the general-purpose, high-bandwidth computation capability of the Terpsichore system. Euterpe includes high-bandwidth data paths, register files, and a memory hierarchy. Euterpe's memory hierarchy includes on-chip instruction and data memories, instruction and data caches, a virtual memory facility, and interfaces to external devices. Euterpe's interfaces include flash ROM, synchronous DRAM, Cerberus serial bus, Hermes high-bandwidth channels, and simple keyboard and display.

*Architectural Framework*

The Euterpe architecture builds upon MicroUniiy's Hermes high-bandwidth channel architecture and upon MicroUnity's Cerberus serial bus architecture, and complies with the requirements of Hermes and Cerberus. Euterpe uses parameters A and W as defined by Hermes.

The Euterpe architecture defines a compatible framework for a family of implementations with a range of capabilities. The following implementation-defined parameters are used in the rest of the document in boldface. The value indicated is for MicroUnity's first Euterpe implementation.

| Parameter | Interpretation | Value | Range of legal values |
|---|---|---|---|
| **T** | number of execution threads | 5 | $1 \le \mathbf{T} \le 31$ |
| **I** | support for carus | 0 | $0 \le \mathbf{I} \le 1$ |
| **i** | $\log_2$ Hermes words per interleave block | 1 | $0 \le \mathbf{i} \le 1$ |
| **H** | number of Hermes channels | 2 | $0 \le \mathbf{H} \le 15$ |
| $\mathbf{C_c}$ | instruction SRAM can be all cache | 0 | $0 \le \mathbf{C}_\chi \le 1$ |
| $\mathbf{C_b}$ | instruction SRAM can be all buffer | 1 | $0 \le \mathbf{C_b} \le 1$ |
| **C** | $\log_2$ cache blocks in instruction SRAM (cache+buffer) | 9 | $0 \le \mathbf{C} \le 31$ |
| $\mathbf{D_c}$ | data SRAM can be all cache | 0 | $0 \le \mathbf{D_c} \le 1$ |
| $\mathbf{D_b}$ | data SRAM can be all buffer | 1 | $0 \le \mathbf{Db} \le 1$ |
| **D** | $\log_2$ cache blocks in data SRAM (cache+buffer) | 9 | $0 \le \mathbf{D} \le 31$ |
| **L** | $\log_2$ entries in local TLB | 0 | $0 \le \mathbf{L} \le 3$ |
| **G** | $\log_2$ entries in global TLB | 6 | $0 \le \mathbf{G} \le 15$ |

*Interfaces and Block Diagram*

*Instruction*

*Instruction Mnemonics*

Instruction mnemonics are usually written with periods (.) separating elements of the mnemonic to make them easier to understand. Terpsichore assemblers and other code tools treat these periods as optional; the mnemonics are designed to be parsed uniquely either with or without the periods.

*Instruction Structure*

A Terpsichore instruction is specifically defined as a four-byte structure with the little-endian ordering shown below. It is different from the quadlet defined above because the placement of instructions into memory must be independent of the byte ordering used for data structures. Instructions must be aligned on four-byte boundaries: in the diagram below, i must be a multiple of 4.

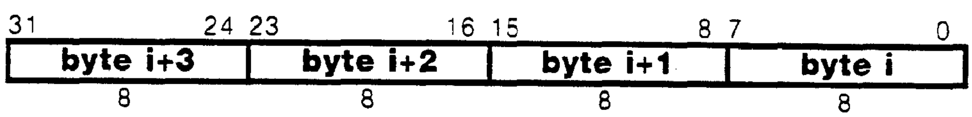


*Gateway*

A Terpsichore gateway is specifically defined as a 16-byte structure with the little-endian ordering shown below. A gateway contains a code address and a data address used to invoke a procedure at a higher privilege level securely. Gateways are marked by protection information specified in the TLB. Gateways must be aligned on 16-byte boundaries, that is, in the diagram below, i must be a multiple of 16.

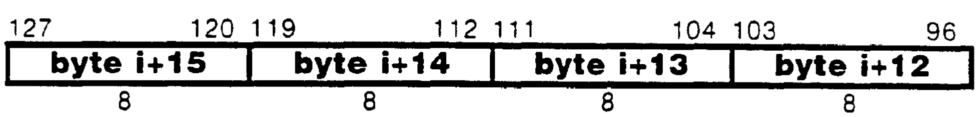

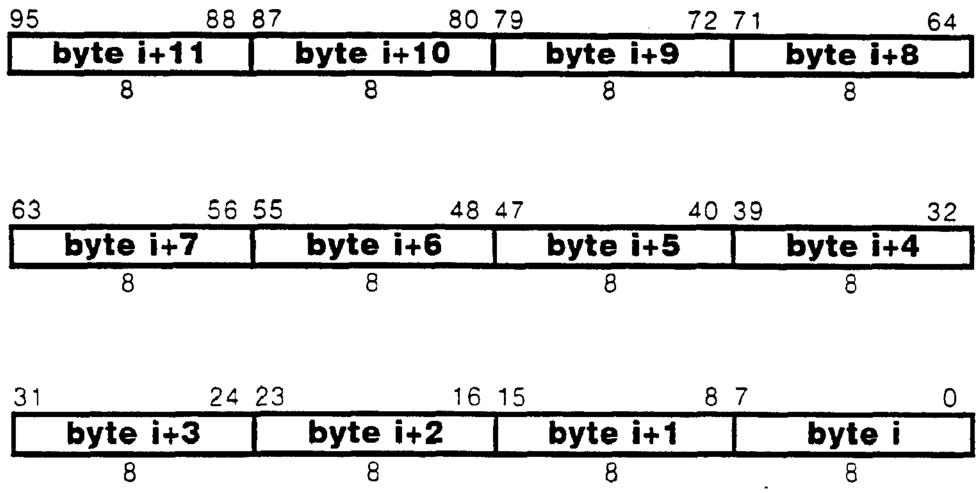


The gateway contains two data items within its structure, a code address and a data address:

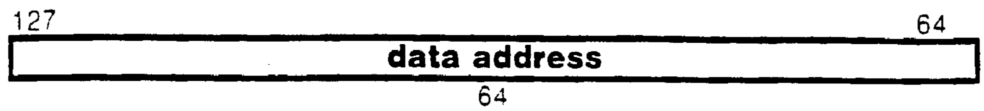


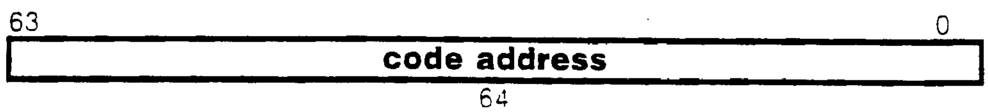


*User state*

The user state consists of hardware data structures that are accessible to all conventional compiled code. The Terpsichore user state is designed to be as regular as possible, and consists only of the general registers, the program counter, and virtual memory. There are no specialized registers for condition codes, operating modes, rounding modes, integer multiply/divide, or floating-point values.

*General Registers*

Terpsichore user state includes 64 general registers. All are identical; there is no dedicated zero-valued register, and there are no dedicated floating-point registers.

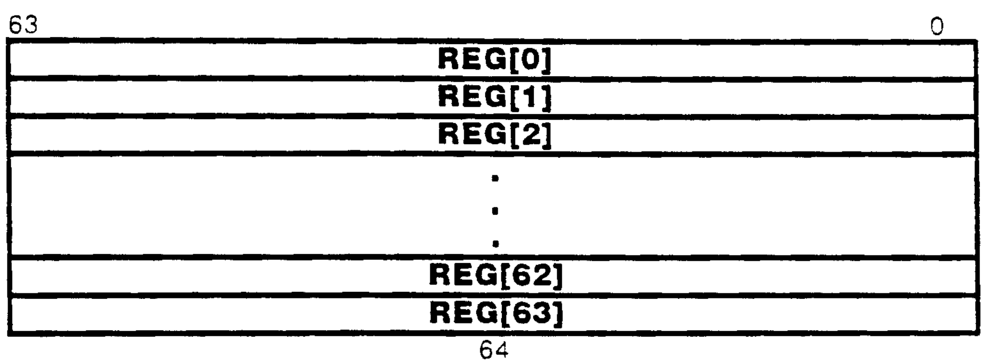

*Definition*

```
def val ← RegRead(rn, size)
     case size of
          64:
               val ← REG[rn]
          128:
               if rn_0 then
                    raise ReservedInstruction
               endif
               val ← REG[rn+1] || REG[rn]
     endcase
enddef
```

```
def RegWrite(rn, size, val)
     case size of
          64:
               REG[rn] ← val_{63..0}
          128:
               if rn_0 then
                    raise ReservedInstruction
               endif
               REG[rn+1] ← val_{127..64}
               REG[rn] ← val_{63..0}
     endcase
enddef
```

*Program Counter*

The program counter contains the address of the currently executing instruction. This register is implicitly manipulated by branch instructions, and read by branch instructions that save a return address in a general register.

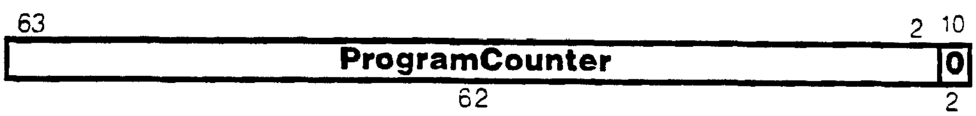


*Privilege Level*

The privilege level register contains the privilege level of the currently executing instruction. This register is implicitly manipulated by branch gateway and branch down instructions, and read by branch gateway instructions that save a return address in a general register.

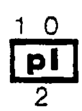


*Program Counter and Privilege Level*

The program counter and privilege level may be packed into a single octlet. This combined data structure is saved by the Branch Gateway instruction and restored by the Branch Down instruction.

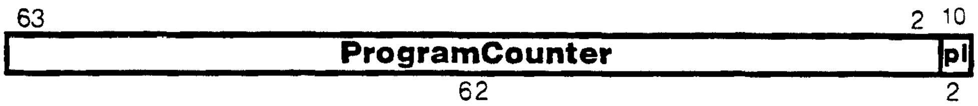


*System state*

The system state consists of the facilities not normally used by conventional compiled code. These facilities provide mechanisms to execute such code in a fully virtual environment. All system state is memory mapped, so that it can be manipulated by compiled code.

*Fixed-point*

Terpsichore provides load and store instructions to move data between memory and the registers, branch instructions to compare the contents of registers and to transfer control from one code address to another, and arithmetic operations to perform computation on the contents of registers, returning the result to registers.

*Load and Store*

The load and store instructions move data between memory and the registers. When loading data from memory into a register, values are zero-extended or sign-extended to fill the register. When storing data from a register into memory, values are truncated on the left to fit the specified memory region.

Load and store instructions that specify a memory region of more than one byte may use either little-endian or big-endian byte ordering: the size and ordering are explicitly specified in the instruction. Regions larger than one byte may be either aligned to addresses that are an even multiple of the size of the region, or of unspecified alignment: alignment checking is also explicitly specified in the instruction.

The load and store instructions are used for fixed-point data as well as floating-point and digital signal processing data: Terpsichore has a single bank of registers for all data types.

Swap instructions provide multithread and multiprocessor synchronization, using indivisable operations: add-and-swap, compare-and-swap, and multiplex-and-swap. A store-multiplex operation provides the ability to indivisably write to a portion of an octlet. These instructions always operate on aligned octlet data, using either little-endian or big-endian byte ordering.

*Branch Conditionally*

The fixed-point compare-and-branch instructions provide all arithmetic tests for equality and inequality of signed and unsigned fixed-point values. Tests are performed either between two operands contained in general registers, or on the bitwise and of two operands. Depending on the result of the compare, either a branch is taken, or not taken. A taken branch causes an immediate transfer of the program counter to the target of the branch, specified by a 12-bit signed offset from the location of the branch instruction. A non-taken branch causes no transfer; execution continues with the following instruction.

*Branch Unconditionally*

Other branch instructions provide for unconditional transfer of control to addresses too distant to be reached by a 12-bit offset, and to transfer to a target while placing the location following the branch into a register. The branch through gateway instruction provides a secure means to access code at a higher privilege level, in a form similar to a normal procedure call.

*Arithmetic Operations*

The fixed-point arithmetic operations include add, subtract, multiply, divide, shifts, and set on compare, all using octlet-sized operands. Multiply and divide operations produce hexlet results; all other operations produce octlet results.

When specified, add, subtract, and shift operations may cause a fixed-point arithmetic exception to occur on resulting conditions such as signed overflow, or signed or unsigned equality or inequality to zero.

*Addressing Operations*

A subset of the arithmetic operations are available as addressing operations. These addressing operations may be performed at a point in the Euterpe processor pipeline so that they may be completed prior to or in conjunction with the execution of load and store operations in a "superspring" pipeline in which other arithmetic operations are deferred until the completion of load and store operations.

*Floating-point*

Terpsichore provides all the facilities mandated and recommended by ANSI/IEEE standard 734-1983: Binary Floating-point Arithmetic, with the use of supporting software.

*Branch Conditionally*

The floating-point compare-and-branch instructions provide all the comparison types required and suggested by the IEEE floating-point standard. These floating-point comparisons augment the usual types of numeric value comparisons with special handling for NaN (not-a-number) values. A NaN compares as "unordered" with respect to any other value, even that of an identical NaN.

Terpsichore floating-point compare-and-branch instructions do not generate an exception on comparisons involving quiet or signaling NaNs; if such exceptions are desired, they can be obtained by combining the use of a floating-point compare and set instruction, with either a floating-point compare-and-branch instruction on the floating-point operands or a fixed-point compare-and-branch on the set result.

Because the less and greater relations are anti-commutative, one of each relation that differs from another only by the replacement of an L with a G in the code can be removed by reversing the order of the operands and using the other code. Thus, a UL relation can be used in place of a UG relation by swapping the operands to the compare-and-branch or compare-and-set instruction.

The E and NE relations can be used to determine the unordered condition of a single operand by comparing the operand with itself.

The following floating-point compare-and-branch relations are provided:

| Mnemonic | | Branch taken if values compare as: | | | | Exception if | |
|---|---|---|---|---|---|---|---|
| code | C-like | Unordered | Greater | Less | Equal | unordered | invalid |
| E | == | F | F | F | T | no | no |
| NE | != | T | T | T | F | no | no |
| UE | ?= | T | F | F | T | no | no |
| NUE | !?= | F | T | T | F | no | no |
| NUGE | !?>= | F | F | T | F | no | no |
| UGE | ?>= | T | T | F | T | no | no |
| UL | ?< | T | F | T | F | no | no |
| NUL | !?< | F | T | F | T | no | no |

compare-and-branch relations

*Compare-and-set*

The floating-point compare-and-set instructions provide all the comparison types supported as compare-and-branch instructions. Terpsichore floating-point compare-and-set instructions may optionally generate an exception on comparisons involving quiet or signaling NaNs.

The following floating-point compare-and-branch relations are provided:

| Mnemonic | | Result if values compare as: | | | | Exception if | |
|---|---|---|---|---|---|---|---|
| code | C-like | Unordered | Greater | Less | Equal | unordered | invalid |
| E | = | F | F | F | T | no | no |
| NE | != | T | T | T | F | no | no |
| UE | ?= | T | F | F | T | no | no |
| NUE | !?= | F | T | T | F | no | no |
| NUGE | !?>= | F | F | T | F | no | no |
| UGE | ?>= | T | T | F | T | no | no |
| UL | ?< | T | F | T | F | no | no |
| NUL | !?< | F | T | F | T | no | no |
| E.X | == | F | F | F | T | no | yes |
| NE.X | != | T | T | T | F | no | yes |
| UE.X | ?= | T | F | F | T | no | yes |
| NUE.X | !?= | F | T | T | F | no | yes |
| L.X | < | F | F | T | F | yes | yes |
| NL.X | !< | T | T | F | T | yes | yes |
| NGE.X | !>= | T | F | T | F | yes | yes |
| GE.X | <= | F | T | F | T | yes | yes |

compare-and-branch relations

*Arithmetic Operations*

The operations supported in hardware are floating-point add, subtract, multiply, divide, and square root. Other operations required by the ANSI/IEEE floating-point standard are provided by software libraries.

The operations explicitly specify the precision of the operation, and round the result to the specified precision at the conclusion of each operation.

A single instruction provides a floating-point multiply with the result fed into a floating-point add. The result is computed as if the multiply is performed to infinite precision, added as if in infinite precision, then rounded. This operation is a particularly good match to the needs of vector linear algebra routines.

*Rounding*

Rounding is specified within the instructions explicitly, to avoid maintaining explicit state for a rounding mode.

*Exceptions*

All the mandated floating-point exception conditions cause a trap when they occur; maintenance of sticky and other status bits may be performed using software routines. Because the floating-point inexact exception may be very frequent, this exception only occurs when specified in the instruction explicitly. Arithmetic operations may also specify that all exceptions are to be handled by default, generating special results instead of traps.

*Digital Signal Processing*

The Terpsichore processor provides a set of operations that maintain the fullest possible use of 64- and 128-bit data paths when operating on lower-precision fixed-point or floating-point vector values. These operations are useful for several application areas, including digital signal processing, image processing, and synthetic graphics. The basic goal of these operations is to accelerate the performance of algorithms that exhibit the following characteristics:

*Low-precision arithmetic*

The operands and intermediate results are fixed-point values represented in no greater than 64 bit precision. For floating-point arithmetic, operands and intermediate results are of 16, 32, or 64 bit precision.

The use of fixed-point arithmetic permits various forms of operation reordering that are not permitted in floating-point arithmetic. Specifically, commutativity and associativity, and distribution identities can be used to reorder operations. Compilers can evaluate operations to determine what intermediate precision is required to get the specified arithmetic result.

Terpsichore supports several levels of precision, as well as operations to convert between these different levels. These precision levels are always powers of two, and are explicitly specified in the operation code.

*Sequential access to data*

The algorithms are or can be expressed as operations on sequentially ordered items in memory. Scatter-gather memory access or sparse-matrix techniques are not required.

Where an index variable is used with a multiplier, such multipliers must be powers of two. When the index is of the form: nx+k, the value of n must be a power of two, and the values referenced should have k include the majority of values in the range O..n-1. A negative multiplier may also be used.

*Vectorizable operations*

The operations performed on these sequentially ordered items are identical and independent. Conditional operations are either rewritten to use boolean variables or masking, or the compiler is permitted to convert the code into such a form.

*Data-handling Operations*

The characteristics of these algorithms include sequential access to data, which permit the use of the normal load and store operations to reference the data. Octlet and hexlet loads and stores reference several sequential items of data, the number depending on the operand precision.

The discussion of these operations is independent of byte ordering, though the ordering of bit fields within octlets and hexlets must be consistent with the ordering used for bytes. Specifically, if big-endian byte ordering is used for the loads and stores, the figures below should assume that index values increase from left to right, and for little-endian byte ordering, the index values increase from right to left. For this reason, the figures indicate different index values with different shades, rather than numbering.

When an index of the nx+k form is used in array operands, where n is a power of 2, data memory sequentially loaded contains elements useful for separate operands. The "deal" instruction divides a hexlet of data up into two octlets, with alternate bit fields of the source hexlet grouped together into the two results. For example, a G.DEAL.16 operation rearranges the source hexlet into two octlets as follows:[1]

[1]An example of the use of a deal can be found in the appendix: Digital Signal Processing Applications: Decimation of Monochrome Image or Decimation of Color Image

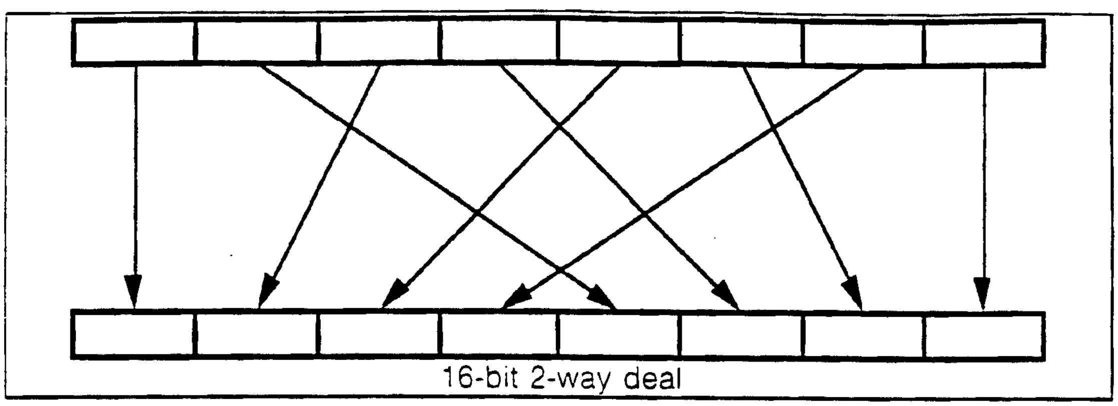


In the deal operation, the source hexlet is specified by two octlet registers, and the two result octlets are specified as a hexlet register pair. (This sounds backwards, and it really is, but it works in practice, because the result is usually used in operations that accept octlet operands. Ideally, the source hexlet should be a register pair, and the result should be two octlet registers.)

The example above directly applies to the case where n is 2. When n is larger, a series of DEAL operations can be used to further subdivide the sequential stream. For example, when n is 4, we need to deal out 4 sets of doublet operands, as shown in the figure below:[2]

[2]An example of the use of a four-way deal can be found in the appendix: Digital Signal Processing Applications: Conversion of Color to Monochrome

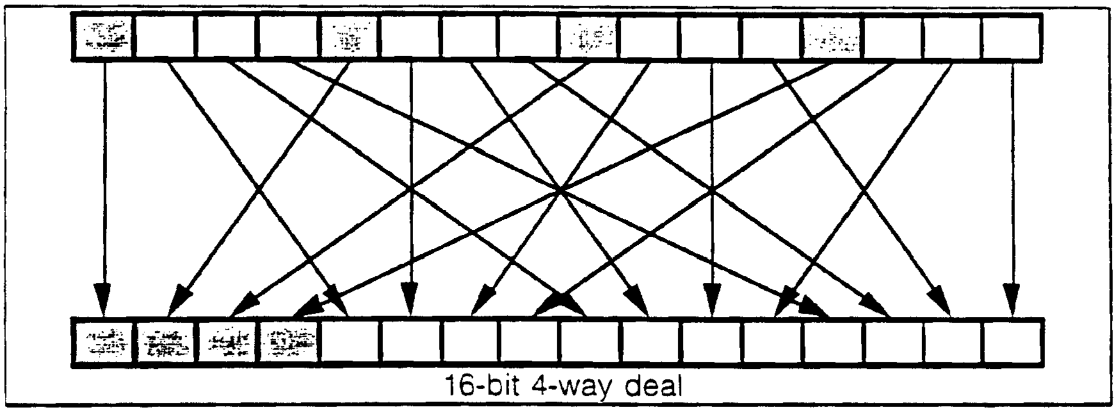


This 4-way deal is performed by dealing out 2 sets of quadlet operands, and then dealing each of them out into 2 sets of doublet operands.

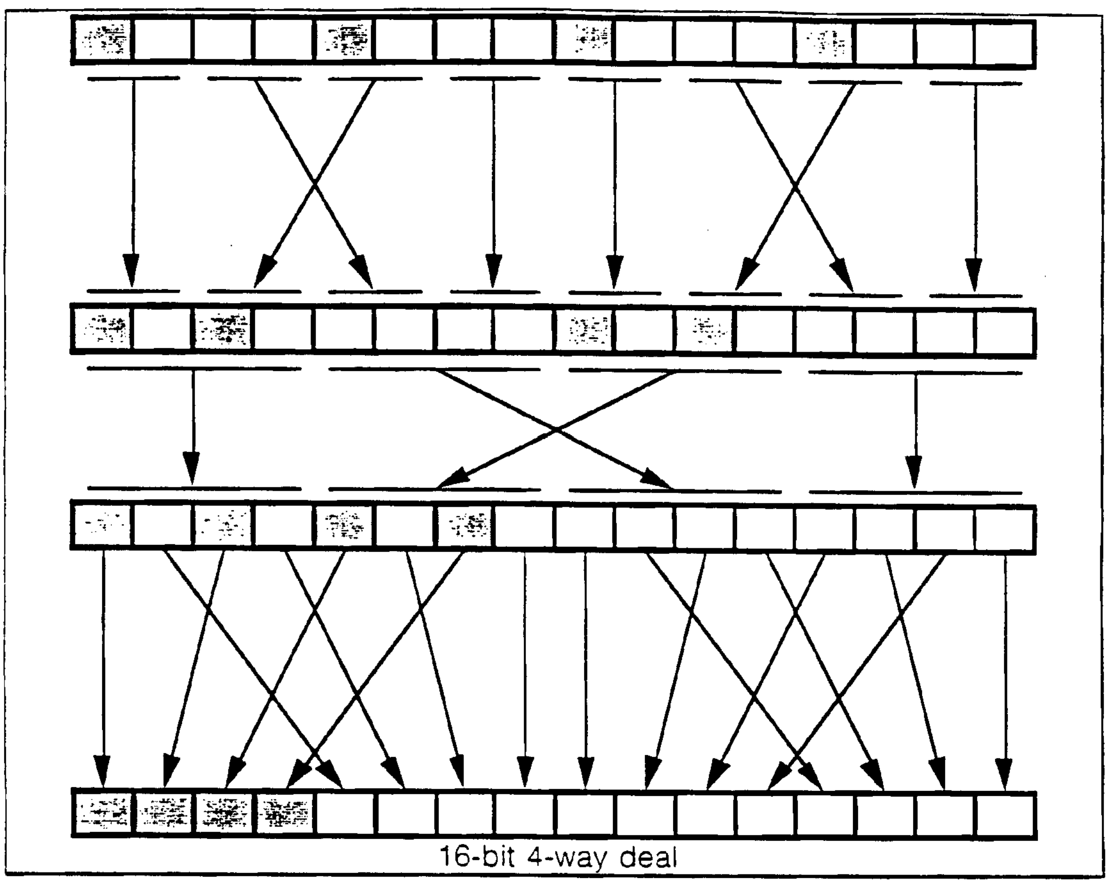


There are three rows of arrows shown above. The first row is the result of two G.DEAL.32 operations, each independently dealing 2 sets of pairs of doublets. The result of these two operations is the second row of boxes. The last row is the result of two independent G.DEAL.16 operations, each dealing 2 sets of doublets into register pairs. The middle row of arrows shows the implicit action performed by specifying two non-adjacent registers for the hexlet sources of the G.DEAL.16 operations.

When an array result of computation is accessed with an index of the form nx+k, for n a power of 2, the reverse of the "deal" operation needs to be performed on vectors of results to interleave them for storage in sequential order. The "shuffle" operation interleaves the bit fields of two octlets of results into a single hexlet. For example a G.SHUFFLE. 16 operation combines two octlets of doublet fields into a hexlet as follows:

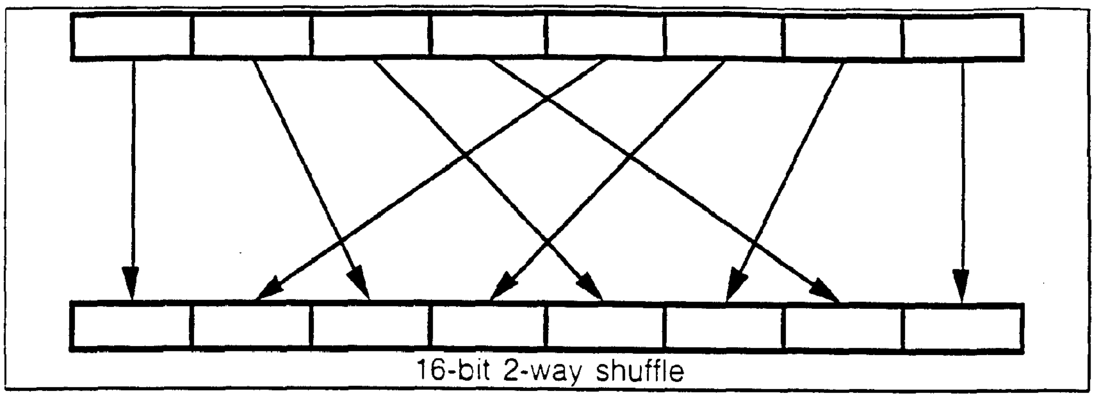

16-bit 2-way shuffle

For larger values of n, a series of shuffle operations can be used to combine additional sets of fields, similarly to the mechanism used for the deal operations. For example, when n is 4, we need to shuffle up 4 sets of doublet operands, as shown in the figure below:[3]

[3]An example of the use of a four-way shuffle can be found in the appendix: Digital Signal Processing Applications: Conversion of Monochrome to Color

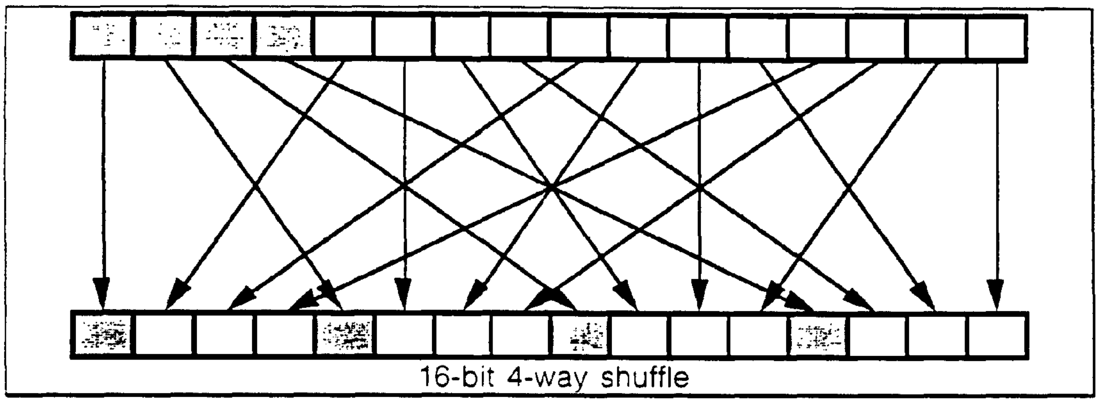

16-bit 4-way shuffle

This 4-way shuffle is performed by shuffling up 2 sets of doublet operands, and then shuffling each of them up as 2 sets of quadlet operands.

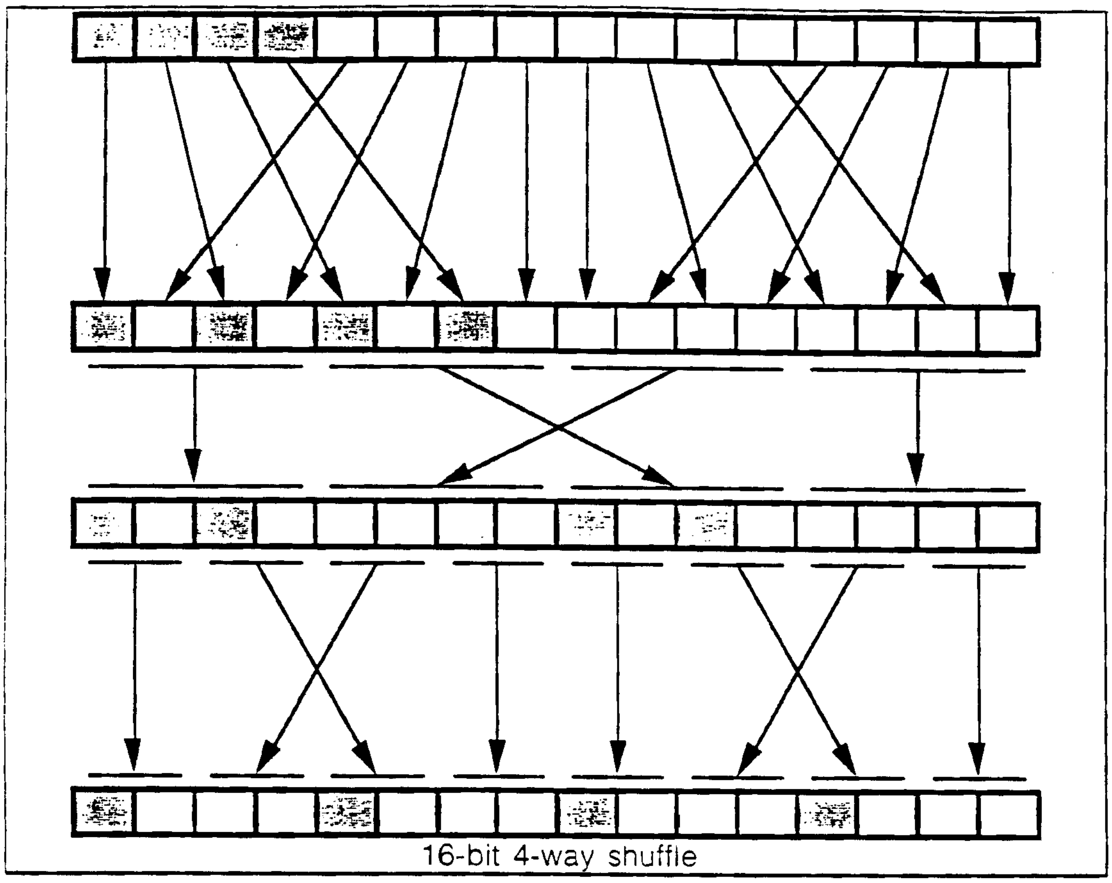


There are three rows of arrows shown above. The first row is the result of two G.SHUFFLE.16 operations, each independently shuffling 2 sets of pairs of doublets. The result of these two operations is the second row of boxes. The last row is the result of two independent G.SHUFFLE.32 operations, each shuffling 2 sets of quadlets into register pairs. The middle row of arrows shows the implicit action performed by specifying two non-adjacent registers for the two octlet sources of the G.SHUFFLE.32 operations.

When the index of a source array operand or a destination array result is negated, or in other words, if of the form nx+k where n is negative, the elements of the array must be arranged in reverse order. The "swap" operation reverses the order of the bit fields in a hexlet. For example, a G.SWAP.16 operation reverses the doublets within a hexlet:

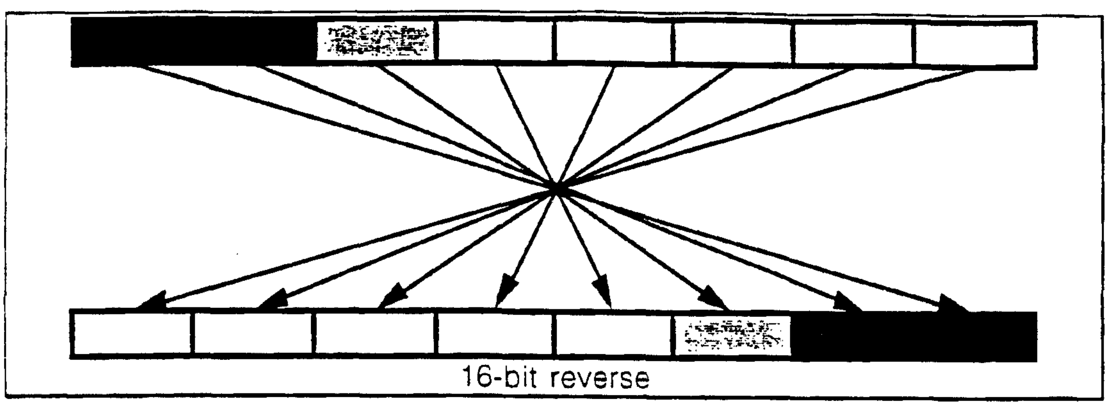


Variations of the deal and shuffle operations are also useful for converting from one precision to another. This may be required if one operand is represented in a different precision than another operand or the result, or if computation must be performed with intermediate precision greater than that of the operands, such as when using an integer multiply.

When converting from a higher precision to a lower precision, specifically when halving the precision of a hexlet of bit fields, half of the data must be discarded, and the bit fields packed together. The "compress" operation is a variant of the "deal" operation, in which the operand is a hexlet, and the result is an octlet. An arbitrary half-sized sub-field of each bit field can be selected to appear in the result. For example, a selection of bits 19..4 of each quadlet in a hexlet is performed by the G.COMPRESS.16,4 operation:

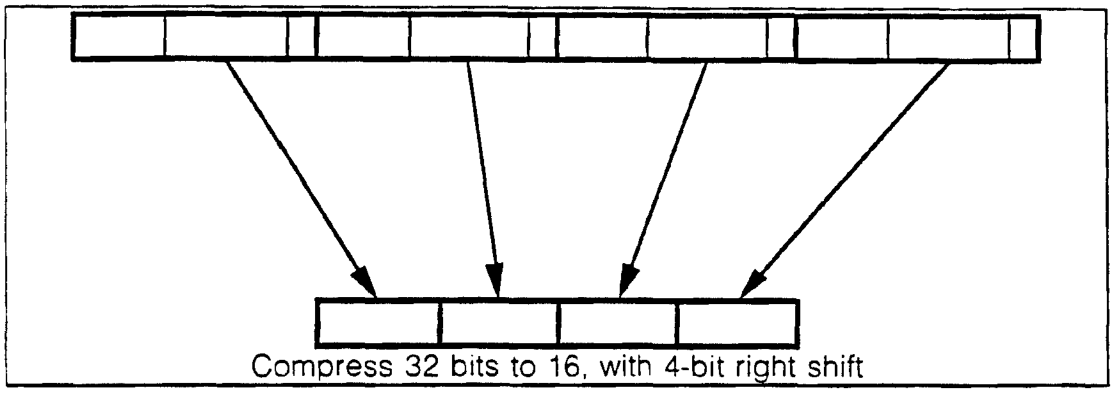


When converting from lower-precision to higher-precision, specifically when doubling the precision of an octlet of bit fields, one of several techniques can be used, either multiply, expand, or shuffle. Each has certain useful properties. In the discussion below, m is the precision of the source operand.

The multiply operation, described in detail below, automatically doubles the precision of the result, so multiplication by a constant vector will simultaneously double the precision of the operand and multiply by a constant that can be represented in m bits.

An operand can be doubled in precision and shifted left with the "expand" operation, which is essentially the reverse of the "compress" operation. For example the G.EXPAND.16,4 expands from 16 bits to 32, and shifts 4 bits left:

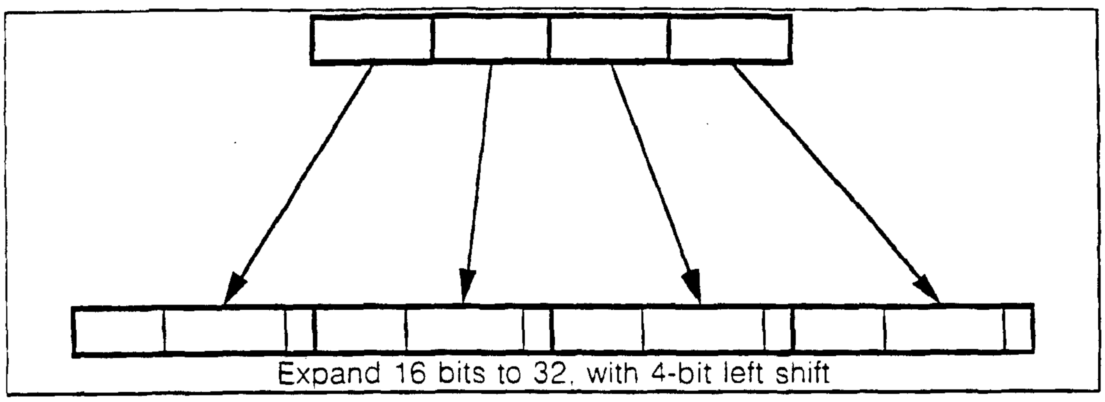


The "shuffle" operation can double the precision of an operand and multiply it by 1 (unsigned only), $2^m$ or $2^m+1$, by specifying the sources of the shuffle operation to be a zeroed register and the source operand, the source operand and zero, or both to be the source operand. When multiplying by 2m, a constant can be freely added to the source operand by specifying the constant as the right operand to the shuffle.

*Arithmetic Operations*

The characteristics of the algorithms that affect the arithmetic operations most directly are low-precision arithmetic, and vectorizable operations. The fixed-point arithmetic operations provided are most of the functions provided in the standard integer unit, except for those that check conditions. These functions include add, subtract, bitwise boolean operations, shift, set on condition, and multiply, in forms that take packed sets of bit fields of a specified size as operands. The floating-point arithmetic operations provided are as complete as the scalar floating-point arithmetic set. The result is generally a packed set of bit fields of the same size as the operands, except that the fixed-point multiply function intrinsically doubles the precision of the bit field.

Conditional operations are provided only in the sense that the set on condition operations can be used to construct bit masks that can select between alternate vector expressions, using the bitwise boolean operations. All instructions operate over the entire octlet or hexlet operands, and produce a hexlet result. The sizes of the bit fields supported are always powers of two.

*Galois Field Operations*

Terpsichore provides a general software solution to the most common operations required for Galois Field arithmetic. The instruction provided is a polynomial divide, with the polynomial specified as one register operand. The result of a specified number of division steps, expressed as a register pair, is the result of the instruction. This instruction can be used to perform CRC generation and checking, Reed-Solomon code generation and checking, and spread-spectrum encoding and decoding.

*Software Conventions*

The following section describes software conventions which are to be employed at sofware module boundaries, in order to permit the combination of separately compiled code and to provide standard interfaces between application, library and system software. Register usage and procedure call conventions may be modified, simplified or optimized when a single compilation encloses procedures within a compilation unit so that the procedures have no external interfaces. For example, internal procedures may permit a greater number of register-passed parameters, or have registers allocated to avoid the need to save registers at procedure boundaries, or may use a single stack or data pointer allocation to suffice for more than one level of procedure call.

*Register Usage*

All Terpsichore registers are identical and general-purpose; there is no dedicated zero-valued register, and no dedicated floating-point registers. However, some procedure-call-oriented instructions imply usage of registers zero (0) and one (1) in a manner consistent with the conventions described below. By software convention, the non-specific general registers are used in more specific ways.

| register number | usage | how saved |
|---|---|---|
| 0 | link | caller |
| 1 | dp | caller |
| 2-9 | parameters | caller |
| 10-31 | temporary | caller |
| 32-61 | saved | callee |
| 62 | fp, when required | callee |
| 63 | sp | callee |

register usage

At a procedure call boundary, registers are saved either by the caller or callee procedure, which provides a mechanism for leaf procedures to avoid needing to save registers. Optimizers may choose to allocate variables into caller or callee saved registers depending on how their lifetimes overlap with procedure calls.

The dp register points to a small (4 kilobyte) array of pointers, literals, and statically-allocated variables, which is used locally to the procedure. The uses of the dp register are similar to the Mips use of the gp register, except that each procedure may have a different value, which expands the space addressable by small offsets from this pointer. This is an important distinction, as the offset field of Terpsichore load and store instructions are only 12 bits. The compiler may use additional registers and/or indirect pointers to address larger regions.

This mechanism also permits code to be shared, with each static instance of the dp region assigned to a different address in memory. In conjunction with position-independent or pc-relative branches, this allows library code to be dynamically relocated and shared between processes.

*Procedure Calling Conventions*

Procedure parameters are normally allocated in registers, starting from register 2 up to register 9. These registers hold up to 8 parameters, which may each be of any size from one byte to eight bytes, including single-precision and double-precision floating-point parameters. Quad-precision floating-point parameters require an aligned pair of registers. The C varargs.h or stdarg.h conventions may require saving registers into memory (this is not necessarily so, but some semi-portable semi-conventions such as _doprnt would break otherwise). Procedure return values are also allocated in registers, starting from register 2 up to register 9.

There are several data structures maintained in registers for the procedure calling conventions: link, sp, dp, fp. The link register contains the address to which the callee should return to at the conclusion of the procedure.

The sp register is used to form addresses to save parameter and other registers, maintain local variables, i.e., data that is allocated as a LIFO stack. For procedures that require a stack, normally a single allocation is performed, which allocates space for input parameters, local variables, saved registers, and output parameters all at once. The sp register is always 16-byte aligned.

The dp register is used to address pointers, literals and static variables for the procedure. The newpc register is loaded with the entry point of the procedure, and the newdp register is loaded with the value of the dp register required for the procedure. This mechanism provides for dynamic linking, by initially filling in the link and dp fields in the data structure to point to the dynamic linker. The linker can use the current contents of the link and/or dp registers to determine the identity of the caller and callee, to find the location to fill in the pointers and resume execution.

The fp register is used to address the stack frame when the stack size varies during execution of a procedure, such as when using the GNU alloca function When the stack size can be determined at compile time, the sp register is used to address the stack frame and the fp register may be used for other general purposes as a callee-saved register.

**Typical static-linked, intra-module calling sequence:**

```
caller or callee (non-leaf):
        A.ADDI      sp.-size
        S.64        link.off(sp)
        ... (using same dp as caller)
        B.LINK.I    callee
        ...
        L.64        link.off(sp)
        A.ADDI      sp.size
        B           link
callee (leaf):
        ... (using dp)
        B           link
```

**Typical dynamic-linked, inter-module calling sequence:**

```
caller or callee (non-leaf):
        A.ADDI      sp,-size
        S.128       linkdp,off(sp)
        ... (using dp)
        L.128       linkdp.off(dp)
        B.LINK      link,link
        L.128       linkdp,off(sp)
        ... (using dp)
        A.ADDI      sp,size
        B           link
```

(continued)

callee (leaf):
... (using dp)
B link

The load instruction is required in the caller following the procedure call to restore the dp register. A second load instruction also restores the link register, which may be located at any point between the last procedure call and the branch instruction which returns from the procedure.

*System and Privileged Library Calls*

It is an objective to make calls to system facilities and privileged libraries as similar as possible to normal procedure calls as described above. Rather than invoke system calls as an exception, which involves significant latency and complication, we prefer to use a modified procedure call in which the process privilege level is quietly raised to the required level. In to provide this mechanism safely, interaction with the virtual memory system is required.

Such a routine must not be entered from anywhere other than its legitimate entry point, otherwise the sudden access to a higher privilege level might be taken advantage of. The branch-gateway instruction ensures both that the procedure is invoked at a proper entry point, and that the data pointer is properly set. To ensure this, the branch-through-gateway instruction retrieves a "gateway" directly from the protected virtual memory space. The gateway contains the virtual address of the entry point of the procedure and the virtual address to be loaded into the data pointer. A gateway can only exist in regions of the virtual address space designated to contain them, to ensure that a gateway cannot be forged.

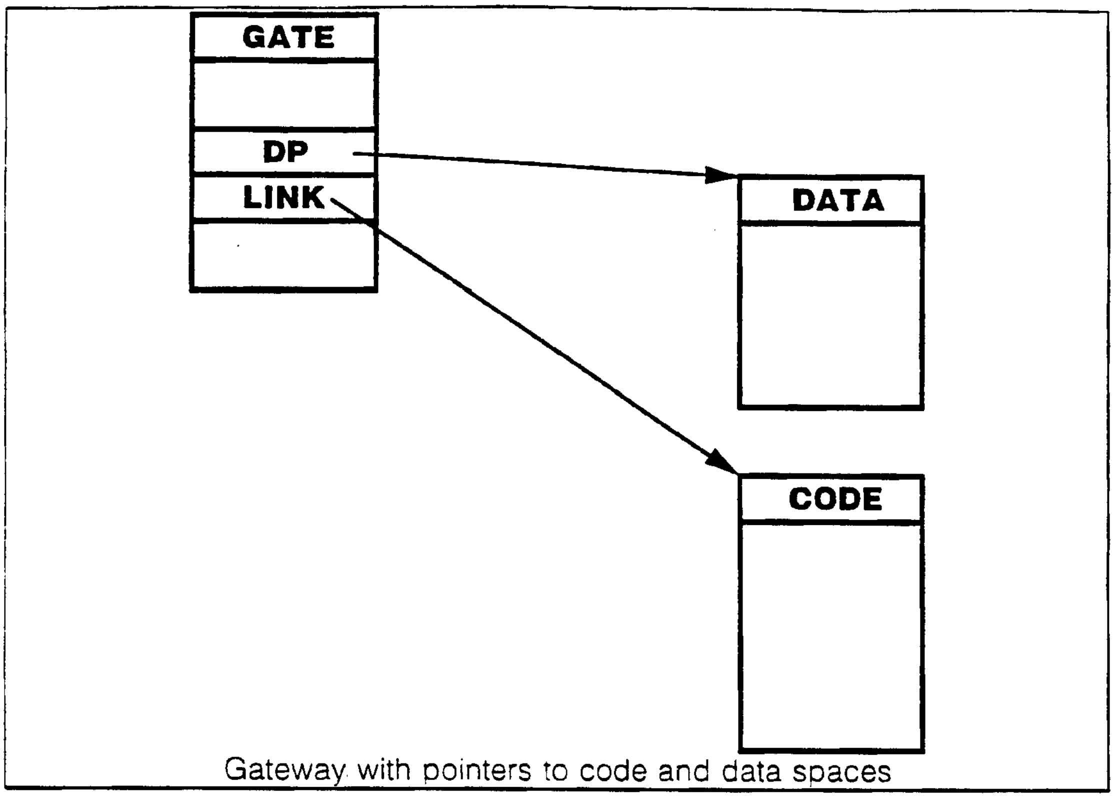

Gateway with pointers to code and data spaces

Similarly, a return from a system or privileged routine involves a reduction of privilege. This need not be carefully controlled by architectural facilities, so a procedure may freely branch to a less-privileged code address. However, in certain, though perhaps rare, cases, it would be useful to have highly privileged code call less-privileged routines. As an example, a user may request that errors in a privileged routine be reported by invoking a user-supplied error-logging routine. In such a case, a return from a procedure actually requires an increase in privilege, which must be carefully controlled. Again, a branch-through-gateway instruction can be used, this time in the instruction following the call, to raise the privilege again in a controlled fashion. In such a case, special care must be taken to ensure that the less-privileged routine is not permitted to gain unauthorized access by corruption of the stack or saved registers, such as by saving all registers and setting up a new stack frame that may be manipulated by the less-privileged routine.

**Typical dynamic-linked, inter-gateway calling sequence:**

```
caller:
        ...
        S.128        linkdp,off(sp)
        ...
        B.GATE       linkdp,off(dp)
        L.128        linkdp.off(sp)
callee (non-leaf):
        S.64         sp.off(dp)
        L.64         sp.off(dp)
        S.128        link.dp.off(sp)
        ... (using dp)
        L.128        link,dp,off(sp)
        L.64         sp.off(dp)
        B.DOWN.      link
callee (leaf):
        ... (using dp)
        B.DOWN       link
```

The callee, if it uses a stack for local variable allocation, cannot necessarily trust the value of the sp passed to it, except as a region to receive parameters held in memory.

*Pipeline Organization*

Euterpe performs all instructions as if executed one-by-one, in-order, with precise exceptions always available. Consequently, code which ignores the subsequent discussion of Euterpe pipeline implementations will still perform correctly. However, the highest performance of the Euterpe processor is achieved only by matching the ordering of instructions to the characteristics of the pipeline. In the following discussion, the general characteristics of all Euterpe implementations preceeds discussion of specific choices for specific implementations.

*Classical Pipeline Structures*

Pipelining in general refers to hardware structures that overlap various stages of execution of a series of instructions so that the time required to perform the series of instructions is less than the sum of the times required to perform each of the instructions separately. Additionally, pipelines carry to connotation of a collection of hardware structures which have a simple ordering and where each structure performs a specialized function.

The diagram below shows the timing of what has become a canonical pipeline structure for a simple RISC processor, with time on the horizontal axis increasing to the right, and successive instructions on the vertical axis going downward. The stages I, R, E, M, and W refer to units which perform instruction fetch, register file fetch, execution, data memory fetch, and register file write. The stages are aligned so that the result of the execution of an instruction may be used as the source of the execution of an immediately following instruction, as seen by the fact that the end of an E stage (bold in line 1) lines up with the beginning of the E stage (bold in line 2) immediately below. Also, it can be seen that the result of a load operation executing in stages E and M (bold in line 3) is not available in the immediately following instruction (line 4), but may be used two cycles later (line 5); this is the cause of the load delay slot seen on some RISC processors.

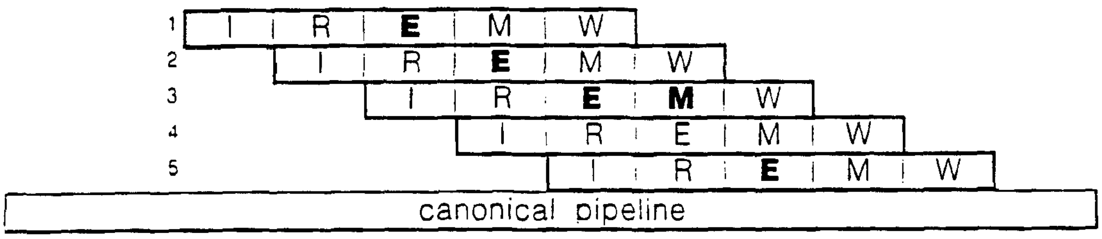


In the diagrams below, we simplify the diagrams somewhat by eliminating the pipe stages for instruction fetch, register file fetch, and register file write, which can be understood to preceed and follow the portions of the pipelines diagrammed. The diagram above is shown again in this new format, showing that the canonical pipeline has very little overlap of the actual execution of instructions.

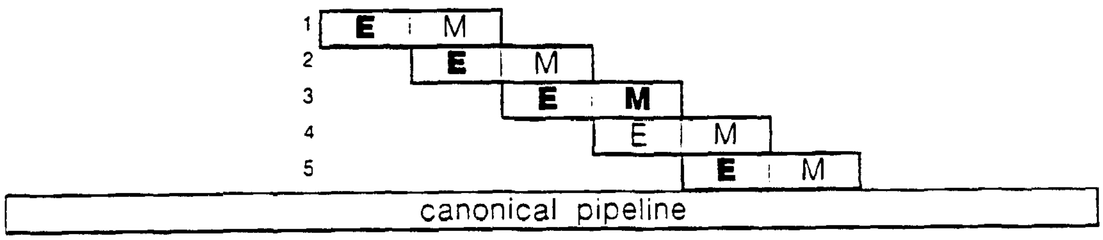


A superscalar pipeline is one capable of simulatenously issuing two or more instructions which are independent, in that they can be executed in either order and separately, producing the same result as if they were executed serially. The diagarm below shows a two-way superscalara processor, where one instruction may be a register-to-register operation (using atage E) and the other may be a register-to-register operation (using atage A) or a memory load or store (using stages A and M).

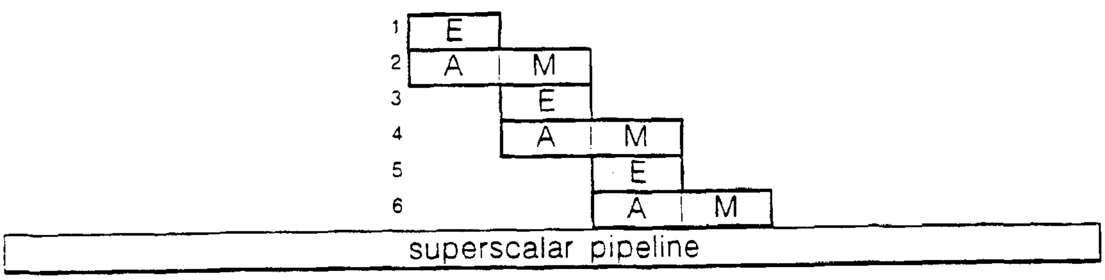


A superpipelined pipeline is one capable is issuing simple instructions frequently enough that the result of a simple instruction must be independent of the immediately following one or more instructions. The diagram below shows a two-cycle superpipelined implementation:

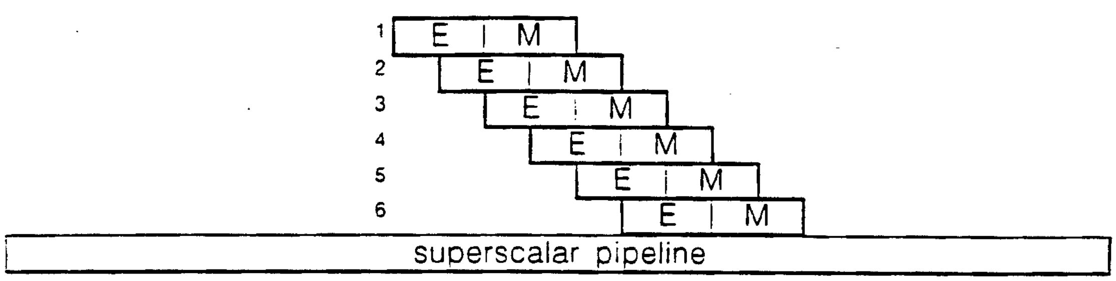


In the diagrams below, pipeline stages are labelled with the type of instruction which may be performed by that stage. The posititon of the stage further identifies the function of that stage, as for example a load operation may require several L stages to complete the instruction.

*Superstring Pipeline*

Euterpe architecture provides for implementations designed to fetch and execute several instructions in each clock cycle. For a particular ordering or instruction types, one instruction of each type may be issued in a single clock cycle. The ordering required is A, L, E, S, B; in other words, a register-to-register address calculation, a memory load, a register-to-register data calculation, a memory store, and a branch. Because of the organization of the pipeline, each of these instructions may be serially dependent. Instructions of type E include the fixed-point execute-phase instructions as well as floating-point and digital signal processing instructions. We call this form of pipeline organization "superstring,"[4] because of the ability to issue a string of dependent instructions in a single clock cycle, as distinguished from superscalar or superpipelined organizations, which can only issue sets of independent instructions.

[4]Readers with a background in theoretical physics may have seen this term in an other, unrelated, context,

These instructions take from one to four cycles of latency to execute, and a branch prediction mechanism is used to keep the pipeline filled. The diagram below shows a box for the interval between issue of each instruction and the completion. Bold letters mark the critical latency paths of the instructions, that is, the periods between the required availability of the source registers and the earliest availability of the result registers. The A-L critical latency path is a special case, in which the result of the A instruction may be used as the base register of the L instruction without penalty. E instructions may require additional cycles of latency for certain operations, such as fixed-point multiply and divide, floating-point and digital signal processing operations.

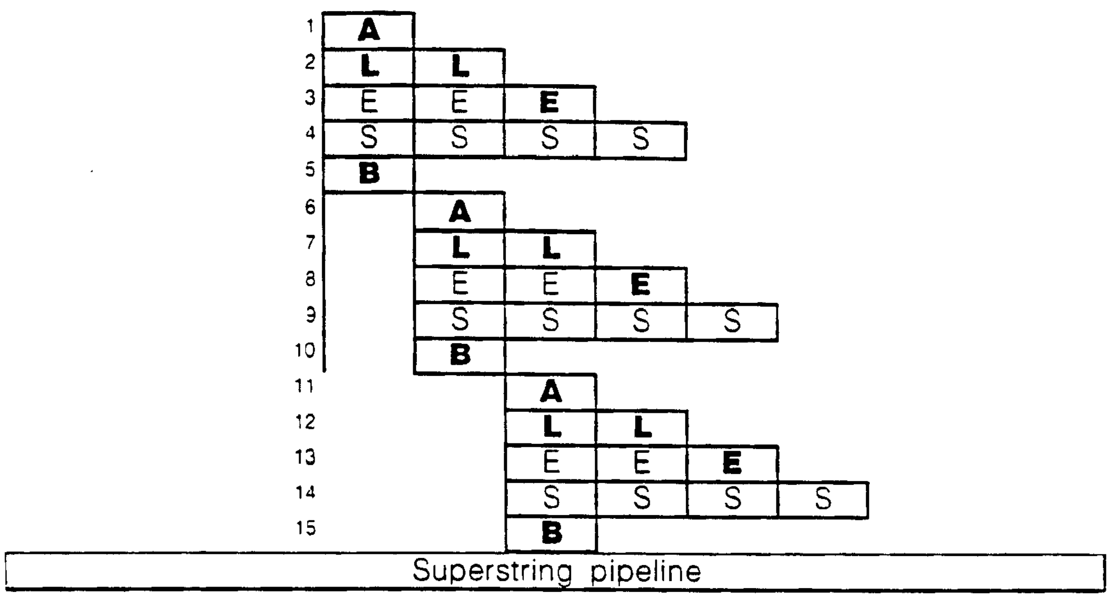


*Superspring Pipeline*

Euterpe architecture provides an additional refinement to the organization defined above, in which the time permitted by the pipeline to service load operations may be flexibly extended. Thus, the front of the pipeline, in which A, L and B type instructions are handled, is decoupled from the back of the pipeline, in which E, and S type instructions are handled. This decoupling occurs at the point at which the data cache and its backing memory are referenced; similarly, a FIFO that is filled by the instruction fetch unit decouples instruction cache references from the front of the pipeline shown above. The depth of the FIFO structures is implementation-dependent, i.e. not fixed by the architecture.

The diagram below indicates why we call this pipeline organization feature "superspring," an extension of our superstring organization.

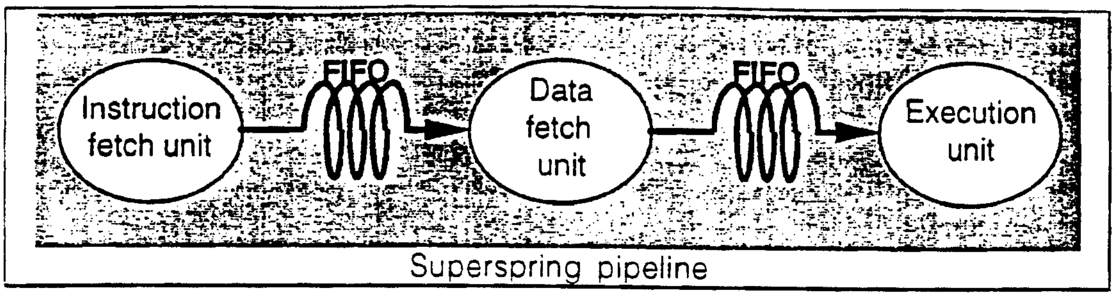


With the super-spring organization, the latency of load instructions can be extended, so execute instructions are deferred until the results of the load are available. Nevertheless, the execution unit still processes instructions in normal order, and provides precise exceptions.

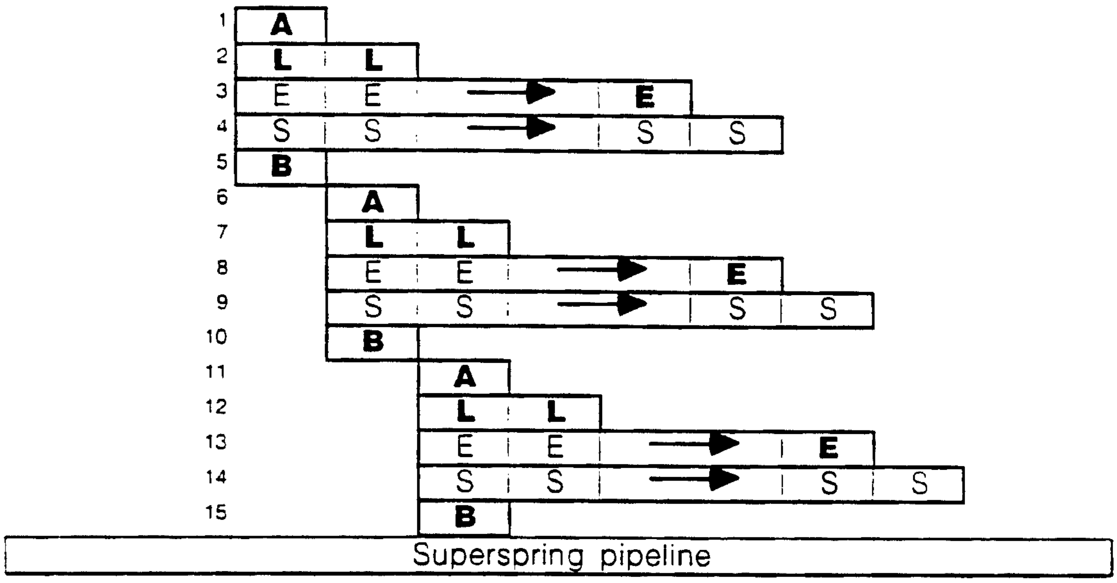


*Superthread Pipeline*

A difficulty of superpipelining is that dependent operations must be separated by the latency of the pipeline, and for highly pipelined machines, the latency of simple operations can be quite significant. The Eutepe "superthread" pipeline provides for very highly pipelined implementations by alternating execution of two or more independent threads. In this context, a thread is the state required to maintain an independent execution; the architectural state required is that of the register file contents, program counter, privilege level, local TLB, and when required, exception status. The latter state, exception status, may be minimized by ensuring that only one thread may handle an exception at one time. In order to ensure that all threads make reasonable forward progress, several of the machine resources must be scheduled fairly.

An example of a resource that is critical that it be fairly shared is the data memory/cache subsystem. In MicroUnity's first Euterpe implementation, Euterpe is able to perform a load operation only on every second cycle, and a store operation only on every fourth cycle. Euterpe schedules these fixed timing resources fairly by using a round-robin schedule of a number of threads which is relatively prime to the resource reuse rates. For Euterpe's first implementation, five simulateous threads of execution ensure that resources which may be used every two or four cycles are fairly shared by allowing the instructions which use those resources to be issued only on every second or fourth issue slot for that thread.

In the diagram below, the thread number which issues an instruction is indicated on each clock cycle, and below it, a list of which functional units may be used by that instruction. The diagram repeats every 20 cycles, so cycle 20 is similar to cycle 0, cycle 21 is similar to cycle 1, etc. This schedule ensures that no resource conflict occur between threads for these resources. Thread 0 may issue an E,L,S or B on cycle 0, but on its next opportunity, cycle 5. may only issue E or B, and on cycle 10 may issue E, L or B, and on cycle 15, may issue E or B.

| cycle | 0 | 1 | 2 | 3 | 4 | 5 | 6 | 7 | 8 | 9 | 10 | 11 | 12 | 13 | 14 | 15 | 16 | 17 | 18 | 19 |
|---|---|---|---|---|---|---|---|---|---|---|---|---|---|---|---|---|---|---|---|---|
| thread | 0 | 1 | 2 | 3 | 4 | 0 | 1 | 2 | 3 | 4 | 0 | 1 | 2 | 3 | 4 | 0 | 1 | 2 | 3 | 4 |
| | E | E | E | E | E | E | E | E | E | E | E | E | E | E | E | E | E | E | E | E |
| | L | | L | | L | | L | | L | | L | | L | | L | | L | | L | |
| | S | | | | S | | | | S | | | | S | | | | S | | | |
| | B | B | B | B | B | B | B | B | B | B | B | B | B | B | B | B | B | B | B | B |

Superthread pipeline

When seen from the perspective of an individual thread, the resource use diagram looks similar to that of the collection. Thus an individual thread may use the load unit every two instructions, and the store unit every four instructions.

| cycle | 0 | 5 | 10 | 15 | 20 | 25 | 30 | 35 | 40 | 45 | 50 | 55 | 60 | 65 | 70 | 75 | 80 | 85 | 90 | 95 |
|---|---|---|---|---|---|---|---|---|---|---|---|---|---|---|---|---|---|---|---|---|
| thread | 0 | 0 | 0 | 0 | 0 | 0 | 0 | 0 | 0 | 0 | 0 | 0 | 0 | 0 | 0 | 0 | 0 | 0 | 0 | 0 |
| | E | E | E | E | E | E | E | E | E | E | E | E | E | E | E | E | E | E | E | E |
| | L | | L | | L | | L | | L | | L | | L | | L | | L | | L | |
| | S | | | | S | | | | S | | | | S | | | | S | | | |
| | B | B | B | B | B | B | B | B | B | B | B | B | B | B | B | B | B | B | B | B |

Superthread pipeline

A Euterpe Superthread pipeline, with 5 simulatenous threads of execution, permits simple operations, such as register-to-register add (E.ADD), to take 5 cycles to complete, allowing for an extremely deeply pipelined implementation.

*Branch/fetch Prediction*

Euterpe does not have delayed branch instructions, and so relies upon branch or fetch prediction to keep the pipeline full around unconditional and conditional branch instructions. In the simplest form of branch prediction, as in Euterpe's first implementation, a taken conditional backward (toward a lower address) branch predicts that a future execution of the same branch will be taken. More elaborate prediction may cache the source and target addresses of multiple branches, both conditional and unconditional, and both forward and reverse.

The hardware prediction mechanism is tuned for optimizing conditional branches that close loops or express frequent alternatives, and will generally require substantially more cycles when executing conditional branches whose outcome is not predominately taken or not-taken. For such cases of unpredictable conditional results, the use of code which avoids conditional branches in favor of the use of set on compare and multiplex instructions may result in greater performance.

Where the above technique may not be applicable, a Euterpe pipeline may ensure that conditional branches which have a small positive offset be handled as if the branch is always predicted to be not taken, with the recovery of a misprediction causing cancellation of the instructions which have already been issued but not completed which would be skipped over by the taken conditional branch. This "conditional-skip" optimization is performed by the Euterpe implementation and requires no specific architectural feature to access or implement.

A Euterpe pipeline may also perform "branch-return" optimization, in which a branch-and-link instruction saves a branch target address which is used to predict the target of the next branch-register instruction. This optimization may be implemented with a depth of one (only one return address kept), or as a stack of finite depth, where a branch and link pushes onto the stack, and a branch-register pops from the stack. This optimization can eliminate the misprediction cost of simple procedure calls, as the calling branch is susceptible to hardware prediction, and the returning branch is predictable by the branch-return optimization. Like the conditional-skip optimization described above, this feature is performed by the Euterpe implementation and requires no specific architectural feature to access or implement.

*Additional Load and Execute Resources*

Studies of the dynamic distribution of Euterpe instructions on various benchmark suites indicate that the most frequently-issued instruction classes are load instructions and execute instructions. In a high-performance Euterpe implementation, it is advantageous to consider execution pipelines in which the ability to target the machine resources toward issuing load and execute instructions is increased.

One of the means to increase the ability to issue execute-class instructions is to provide the means to issue two execute instructions in a single-issue string. The execution unit actually requires several distinct resources, so by partitioning these resources, the issue capability can be increased without increasing the number of functional units, other than the increased register file read and write ports. The partitioning favored for the initial implementation places all instructions that involve shifting and shuffling in one execution unit, and all instructions that involve multiplication, including fixed-point and floating-point multiply and add in another unit. Resources used for implementing add, subtract, and bitwise logical operations may be duplicated, being modest in size compared to the shift and multiply units, or shared between the two units, as the operations have low-enough latency that two operations might be pipelined within a single issue cycle. These instructions must generally be independent, except perhaps that two simple add, subtract, or bitwise logical may be performed dependently, if the resources for executing simple instructions are shared between the execution units.

One of the means to increase the ability to issue load-class instructions is to provide the means to issue two load instructions in a single-issue string. This would generally increase the resources required of the data fetch unit and the data cache, but a compensating solution is to steal the resources for the store instruction to execute the second load instruction. Thus, a single-issue string can then contain either two load instructions, or one load instruction and one store instruction, which uses the same register read ports and address computation resources as the basic 5-instruction string. This capability also may be employed to provide support for unaligned load and store instructions, where a single-issue string may contain as an alternative a single unaligned load or store instruction which uses the resources of the two load-class units in concert to accomplish the unaligned memory operation.

*Result Forwarding*

When temporally adjacent instructions are executed by seperate resources, the results of the first instruction must generally be forwarded directly to the resource used to execute the second instruction, where the result replaces a value which may have been fetched from a register file. Such forwarding paths use significant resources. A Terpsichore implementation must generally provide forwarding resources so that dependencies from earlier instructions within a string are immediately forwarded to later instructions, except between a first and second execution instruction as described above. In addition, when forwarding results from the execution units back to the data fetch unit, additional delay may be incurred.

*Instruction Set*

All instructions are 32 bits in size, and use the high order 8 bits to specify a major operation code.

| 31 24 | 23 0 |
|---|---|
| **major** | **other** |
| 8 | 24 |

The major field is filled with a value specified by the following table:[5]

[5]Blank table entries cause the Reserved Instruction exception to occur.

| MAJOR | 0 | 32 | 64 | 96 | 128 | 160 | 192 | 224 |
|---|---|---|---|---|---|---|---|---|
| 0 | ERES | GSHUFFLEI | FMULADD16 | GMULADD1 | LU16LAI | SAAS64LAI | EADDIO | BFE16 |
| 1 | ESHUFFLE14MUX | GSHUFFLE14MUX | FMULADD32 | GMULADD2 | LU16BAI | SAAS64BAI | EADDIUO | BFNUE16 |
| 2 | | GSELECT8 | FMULADD64 | GMULADD4 | LU16LI | SCAS64LAI | ESETIL | BFUGE16 |
| 3 | EMDEPI | GMDEPI | | GMULADD8 | LU16BI | SCAS64BAI | ESETIGE | BFNUL16 |
| 4 | EMUX | GMUX | FMULSUB16 | GMULADD16 | LU32LAI | SMAS64LAI | ESETIE | BFE32 |
| 5 | E8MUX | G8MUX | FMULSUB32 | GMULADD32 | LU32BAI | SMAS64BAI | ESETINE | BFNUE32 |
| 6 | EGFMUL64 | GGFMUL8 | FMULSUB64 | GMULADD64 | LU32LI | SMUX64LAI | ESETIUL | BFNUGE32 |
| 7 | ETRANSPOSEIMUX | GTRANSPOSEIMUX | | GEXTRACT128 | LU32BI | SMUX64BAI | ESETIUGE | BFNUL32 |
| 8 | | | | | L16LAI | S16LAI | ESUBIO | BFE64 |
| 9 | ESWIZZLE | GSWIZZLE | | GUMULADD2 | L16BAI | S16BAI | ESUBIUO | BFNUE64 |
| 10 | | GSWIZZLECOPY | | GUMULADD4 | L16LI | S16LI | ESUBIL | BFNUGE64 |
| 11 | | GSWIZZLESWAP | | GUMULADD8 | L16BI | S16BI | ESUBIGE | BFNUL64 |
| 12 | EDEPI | GDEPI | F.16 | GUMULADD16 | L32LAI | S32LAI | ESUBIE | BFE128 |
| 13 | EUDEPI | GUDEPI | F.32 | GUMULADD32 | L32BAI | S32BAI | ESUBINE | BFNUE128 |
| 14 | EWTHI | GWTHI | F.64 | GUMULADD64 | L32LI | S32LI | ESUBIUL | BFNUGE128 |
| 15 | EUWTHI | GUWTHI | | GUEXTFACT128 | L32BI | S32BI | ESUBIUGE | BFNUL128 |
| 16 | | | GFMULADD16 | GEXTRACTI | L64LAI | S64LAI | EADDI | BANDE |
| 17 | | | GFMULADD32 | GEXTRACTI16 | L64BAI | S64BAI | EXORI | BANDNE |
| 18 | | | GFMULADD64 | GEXTRACTI32 | L64LI | S64LI | EORI | BL/BLZ |
| 19 | | | GFMULADD128 | GUEXTRACTI64 | L64BI | S64BI | EANDI | BGE/BGEZ |
| 20 | | | GFMULSUB16 | GEXTRACT I.64 | L128LAI | S128LAI | ESUBI | BE |
| 21 | | | GFMULSUB32 | | L128BAI | S128BAI | | BNE |
| 22 | | | GFMULSUB64 | G.EXTRACT I.128 | L128LI | S128LI | ENORI | BUL/BGZ |
| 23 | | | GFMULSUB128 | | L128BI | S128BI | ENANDI | BUGE/BLEZ |
| 24 | | | | G.1 | L81 | S81 | | BGATEI |

(continued)

| MAJOR | 0 | 32 | 64 | 96 | 128 | 160 | 192 | 224 |
|---|---|---|---|---|---|---|---|---|
| **25** | | | | G.2 | LU8I | | | |
| **26** | | | | G.4 | | | | |
| **27** | | | | G.8 | | | | |
| **28** | | ECOPYI | GF. 16 | G.16 | | | ECOPYI | B1 |
| **29** | | | GF.32 | G.32 | | | | BLINKI |
| **30** | | | GF.64 | G.64 | | | | |
| **31** | | E.MINOR | GF. 128 | G.128 | L.MINOR | S.MINOR | E.MINOR | B.MINOR |
| **major operation code field values** | | | | | | | | |

For the major operation field values A.MINOR, L.MINOR, E.MINOR, F.16, F.32, F.64, F.128, GF.16, GF.32, GF.64, G.1, G.2, G.4, G.8, G.16, G.32, G.64, S.MINOR and B.MINOR, the lowest-order six bits in the instruction specify a minor operation code:

| 31 24 | 23 6 | 5 0 |
|---|---|---|
| **major** | **other** | **minor** |
| 8 | 18 | 6 |

The minor field is filled with a value from one of the following tables:

| E.MINOR | 0 | 8 | 16 | 24 | 32 | 40 | 48 | 56 |
|---|---|---|---|---|---|---|---|---|
| 0 | EADDO | ESUBO | EANDN | | EADD | ESUB | ESHLIO | ESHRI |
| 1 | EADDUO | ESUBUO | EXOR | | ESHLO | ESHLUO | | |
| 2 | ESETL | ESUBL | EOR | | | | ESHLIUO | EUSHRI |
| 3 | ESETGE | ESUBGE | EAND | | ELMS | EULMS | | |
| 4 | ESETE | ESUBE | EORN | | EASUM | ESELECT8 | ESHUFFLEI | ERORTI |
| 5 | ESETNE | ESUBNE | EXNOR | | EROTL | ESHL | | |
| 6 | ESETUL | ESUBUL | ENOR | | ESHR | EUSHR | ESHLI | EMSHRI |
| 7 | ESETUGE | ESUBUGE | ENAND | | EROTR | EMSHR | | |
| minor operation code field values for E.MINOR | | | | | | | | |

| F.size | 0 | 8 | 16 | 24 | 32 | 40 | 48 | 56 |
|---|---|---|---|---|---|---|---|---|
| 0 | FADD N | FADD T | FADD F | FADD O | FADD | FADD.X | FSETE | FSETE.X |
| 1 | FSUB N | FSUB T | FSUB F | FSUB O | FSUB | FSUB.X | FSETNUE | FSETNUE.X |
| 2 | FMULN | FMULT | FMULF | FMULO | FMUL | FMUL.X | FSETNUGE | FSETNGE.X |
| 3 | FDIV N | FDIV T | FDIV F | FDIV O | FDIV | FDIV.X | FSETNUL | FSETNUL.X |
| 4 | F.UNARY.N | F.UNARY.T | F.UNARY.F | F.UNARY.O | F.UNARY | F.UNARY.X | | |
| 5 | | | | | | | | |
| 6 | | | | | | | | |
| 7 | | | | | | | | |
| minor operation code field values for F.size | | | | | | | | |

| GF.size | 0 | 8 | 16 | 24 | 32 | 40 | 48 | 56 |
|---|---|---|---|---|---|---|---|---|
| 0 | GFADD.N | GFADD.T | GFADD.F | GFADD.O | GFADD | GFADD.X | GFSETE | GFSETE.X |
| 1 | GFSUB .N | GFSUB.T | GFSUB.F | GFSUB.O | GFSUB | GFSUB.X | GFSETNUE | GFSETNUE.X |
| 2 | GFMUL.N | GFMUL.T | GFMUL.F | GFMUL.O | GFMUL | GFMUL.X | GFSETNUGE | GFSETNUGE.X |
| 3 | GFDIV.N | GFDIV.T | GFDIV.F | GFDIV.O | GFDIV | GFDIV.X | GFSETNUL | GFSETNUL.X |
| 4 | GF.UNARY.N | GF.UNARY.T | GF.UNARY.F | GF.UNARY.O | GFUNARY | GF.UNARY.X | | |
| 5 | | | | | | | | |
| 6 | | | | | | | | |
| 7 | | | | | | | | |
| minor operation code field values for GF.size | | | | | | | | |

| G.size | 0 | 8 | 16 | 24 | 32 | 40 | 48 | 56 |
|---|---|---|---|---|---|---|---|---|
| 0 | | GMUL | GANDN | | GADD | GSUB | GEXPAND | GSHR |
| 1 | | GUMUL | GXOR | | GCOMPRESS | GUCOMPRESS | .I | I |
| 2 | GSETL | GDIV | GOR | | | | GUEXPAND | GUSHR |
| 3 | GSETGE | GUDIV | GAND | | | | .I | I |
| 4 | GSETE | GSUB | GORN | | GEXPAND | GUEXPAND | GCOMPRESS | GROTR |
| 5 | GSETNE | | GXNOR | | GROTL | GSHL | GUCOMPRESS | I |
| 6 | GSETUL | | GNOR | | GSHR | GUSHR | GSHL | GMSHR |
| 7 | GSETUGE | | GNAND | | GROTR | GMSHR | .I | I |
| minor operation code field values for G.size | | | | | | | | |

| L.MINOR | 0 | 8 | 16 | 24 | 32 | 40 | 48 | 56 |
|---|---|---|---|---|---|---|---|---|
| 0 | LU16LA | L16LA | L64LA | L8 | | | | |
| 1 | LU16BA | L16BA | L64BA | LU8 | | | | |
| 2 | LU16L | L16L | L64L | | | | | |
| 3 | LU16B | L16B | L54B | | | | | |
| 4 | LU32LA | L32LA | L128LA | | | | | |
| 5 | LU32BA | L32BA | L128BA | | | | | |
| 6 | LU32L | L32L | L128L | | | | | |
| 7 | LU32B | L32B | L128B | | | | | |
| minor operation code field values for L.MINOR | | | | | | | | |

| S.MINOR | 0 | 8 | 16 | 24 | 32 | 40 | 48 | 56 |
|---|---|---|---|---|---|---|---|---|
| 0 | SAAS64LA | S16LA | S64LA | S8 | | | | |
| 1 | SAAS64BA | S16BA | S64BA | | | | | |
| 2 | SCAS64LA | S16L | S64L | | | | | |
| 3 | SCAS64BA | S16B | S64B | | | | | |
| 4 | SMAS64LA | S32LA | S128LA | | | | | |
| 5 | SMAS64BA | S32BA | S128BA | | | | | |
| 6 | SMUX64LA | S32L | S128L | | | | | |
| 7 | SMUX64BA | S32B | S128B | | | | | |
| minor operation code field values for S.MINOR | | | | | | | | |

| B.MINOR | 0 | 8 | 16 | 24 | 32 | 40 | 48 | 56 |
|---|---|---|---|---|---|---|---|---|
| 0 | B | | | | | | | |
| 1 | B LINK | | | | | | | |
| 2 | B DOWN | | | | | | | |
| 3 | | | | | | | | |
| 4 | | | BGATE | BBACK | | | | |
| 5 | | | | | | | | |
| 6 | | | | | | | | |
| 7 | | | | | | | | |
| minor operation code field values for B.MINOR | | | | | | | | |

For the major operation field values F.16, F.32, F.64, F.128, with minor operation field values F.UNARY.N, F.UNARY.T, F.UNARY.F, F.UNARY.C, F.UNARY, and F.UNARY.X, and for major operation field values GF.16, GF. 32, GF.64, with minor operation field values GF.UNARY.N, GF.UNARY.T, GF.UNARY.F, GF.UNARY.C, GF.UNARY, and GF.UNARY.X, another six bits in the instruction specify a unary operation code:

| 31 24 | 23 18 | 17 12 | 11 6 | 5 0 |
|---|---|---|---|---|
| major | other | other | unary | minor |
| 8 | 6 | 6 | 6 | 6 |

The unary field is filled with a value from one of the following tables:

| F.UNARY.size.r | 0 | 8 | 16 | 24 | 32 | 40 | 48 | 56 |
|---|---|---|---|---|---|---|---|---|
| 0 | F.ABS | | | | | | | |
| 1 | F.NEG | | | | | | | |
| 2 | F.SQR | | | | | | | |
| 3 | | | | | | | | |
| 4 | F.SINK | | | | | | | |
| 5 | F.FLOAT | | | | | | | |
| 6 | F.INFLATE | | | | | | | |
| 7 | F.DEFLATE | | | | | | | |
| unary operation code field values for F.UNARY.size.r | | | | | | | | |
| GF.UNARY.size.r | 0 | 8 | 16 | 24 | 32 | 40 | 48 | 56 |
| 0 | GF.ABS | | | | | | | |
| 1 | GF.NEG | | | | | | | |
| 2 | GF.SQR | | | | | | | |
| 3 | | | | | | | | |
| 4 | GF.SINK | | | | | | | |
| 5 | GF.FLOAT | | | | | | | |
| 6 | GF.INFLATE | | | | | | | |
| 7 | GF.DEFLATE | | | | | | | |
| unary operation code field values for GF.UNARY.size.r | | | | | | | | |

The general forms of the instructions coded by a major operation code are one of the following:

| 31 24 | 23 0 |
|---|---|
| major | offset |
| 8 | 24 |

| 31 24 | 23 18 | 17 0 |
|---|---|---|
| major | ra | offset |
| 8 | 6 | 18 |

| 31 24 | 23 18 | 17 12 | 11 0 |
|---|---|---|---|
| major | ra | rb | offset |
| 8 | 6 | 6 | 12 |

| 31 ... 24 | 23 ... 18 | 17 ... 12 | 11 ... 6 | 5 ... 0 |
|---|---|---|---|---|
| **major** | **ra** | **rb** | **rc** | **rd** |
| 8 | 6 | 6 | 6 | 6 |

The general forms of the instructions coded by major and minor operation codes are one of the following:

| 31 ... 24 | 23 ... 18 | 17 ... 12 | 11 ... 6 | 5 ... 0 |
|---|---|---|---|---|
| **major** | **ra** | **rb** | **rc** | **minor** |
| 8 | 6 | 6 | 6 | 6 |

| 31 ... 24 | 23 ... 18 | 17 ... 12 | 11 ... 6 | 5 ... 0 |
|---|---|---|---|---|
| **major** | **ra** | **rb** | **simm** | **minor** |
| 8 | 6 | 6 | 6 | 6 |

The general form of the instructions coded by major, minor, and unary operation codes is the following:

| 31 ... 24 | 23 ... 18 | 17 ... 12 | 11 ... 6 | 5 ... 0 |
|---|---|---|---|---|
| **major** | **ra** | **rb** | **unary** | **minor** |
| 8 | 6 | 6 | 6 | 6 |

*Definition*

```
def Thread as
    forever do
        inst ← LoadMemory(ProgramCounter,32,L)
        ProgramCounter ← ProgramCounter + 4
        Instruction(inst)
    endforever
enddef

def Instruction(inst) as
    major ← inst31..24
    ra ← inst23..18
    simm ← rb ← inst17..12
    rc ← inst11..6
```

```
minor ← rd ← inst5..0
case major of
    E.RES:
        EternallyReserved
    E.MINOR:
        case minor of
            E.ADD. E.ADD.O. E.ADD.UO. E.AND. E.ANDN. E.NAND. E.NOR.
            E.OR. E.ORN. E.SUB. E.SUB.O. E.SUB.UO. E.XNOR. E.XOR.
            E.SHL. E.SHL.O. E.SHL.UO. E.SHR. E.USHR. E.ROTL. E.ROTR.
            E.MUL. E.UMUL. E.DIV. E.UDIV. E.LMS. E.ULMS. E.ASUM.
            E.SET.E. E.SET.NE. E.SET.L. E.SET.GE. E.SET.UL. E.SET.UGE.
            E.SUB.E. E.SUB.NE. E.SUB.L. E.SUB.GE. E.SUB.UL. E.SUB.UGE:
                Execute(minor,ra,rb,rc)
            E.SHL.I, E.SHL.I.O. E.SHL.I.UO. E.SHR.I. E.USHR.I. E.ROTR.I:
                ExecuteShortImmediate(minor,ra,simm,rc)
            others:
                raise ReservedInstruction
        endcase
    E.ADD.I. E.ADD.I.SO. E.AND.I. E.OR.I. E.NAND.I. E.NOR.I, E.XOR.I.
    E.SET.I.E. E.SET.I.NE. E.SET.I.L. ES.ET.I.GE. E.SET.I.UL. E.SET.I.UGE.
    E.SUB.I.E. E.SUB.I.NE. E.SUB.I.L. E.SUB.I.GE. E.SUB.I.UL. E.SUB.I.UGE:
        ExecuteImmediate(major,ra,rb,inst11..0)
    EMUX:
        ExecuteTernary(major,ra,rb,rc,rd)
    E.COPY.I
        ExecuteCopyImmediate(major,ra,inst17..0)
    FMULADD16. FMULADD32. FMULADD64. FMULADD128.
    FMULSUB16. FMULSUB32. FMULSUB64. FMULSUB128:
        FloatingPointTernary(major,ra,rb,rc,rd)
    F.16, F.32, F.64, F.128:
        case minor of
            F.ADD.N, F.SUB.N, F.MUL.N, F.DIV.N,
            F.ADD.T, F.SUB.T, F.MUL.T, F.DIV.T,
            F.ADD.F, F.SUB.F, F.MUL.F, F.DIV.F,
            F.ADD.C, F.SUB.C, F.MUL.C, F.DIV.C,
            F.ADD, F.SUB, F.MUL, F.DIV,
            F.ADD.X, F.SUB.X, F.MUL.X, F.DIV.X,
            F.SET.E, F.SET.NE, F.SET.UE, F.SET.NUE,
            F.SET.NUGE, F.SET.UGE, F.SET.UL, F.SET.NUL,
            F.SET.E.X, F.SET.NE.X, F.SET.UE.X, F.SET.NUE.X,
            F.SET.L.X, F.SET.NL.X, F.SET.NGE.X, F.SET.GE.X:
                FloatingPoint(minor.op, major.size, minor.round, ra, rb, rc)
            F.UNARY.N, F.UNARY.T, F.UNARY.F, F.UNARY.C,
            F.UNARY, F.UNARY.X:
                case unary of
                    F.ABS, F.NEG, F.SQR,
                    F.HALF, F.SINGLE, F.DOUBLE, F.QUAD,
                    F.INT, F.FLOAT:
                        FloatingPointUnary(unary.op, major.size, minor.round,
                                ra, rc)
                    others:
                        raise ReservedInstruction
                endcase
            others:
                raise ReservedInstruction
        endcase
    GMULADD1, GMULADD2, GMULADD4,
    GMULADD8, GMULADD16, GMULADD32,
```

```
GUMULADD2, GUMULADD4,
GUMULADD8, GUMULADD16, GUMULADD32,
GMUX, GMUXGATHER, GSCATTERMUX, G.EXTRACT.128:
    GroupTernary(major,size,ra,rb,rc,rd)
G.EXTRACT.I, G.EXTRACT.I.64:
    GroupExtractImmediate(major,ra,rb,rc,minor)
G.1, G.2, G.4, G.8, G.16, G.32:
    case minor of
        G.SHL, G.SHR, G.USHR, G.ADD, G.SUB, G.MUL, G.UMUL,
        G.AND, G.OR, G.XOR, G.ANDN, G.NAND, G.NOR, G.XNOR, G.ORN,
        G.SET.E, G.SET.NE, G.SET.L, G.SET.GE, G.SET.UL, G.SET.UGE,
        G.COPY, G.SWAP, G.DEAL, G.SHUFFLE, G.COMPRESS, G.EXPAND,
        G.GATHER, G.SCATTER:
            Group(minor,major,ra,rb,rc)
        G.COMPRESS.I, G.EXPAND.I, G.SHL.I, G.SHR.I, G.U.SHR.I:
            GroupShortImmediate(minor,major,ra,simm,rc)
        G.EXTRACT.I:
            GroupExtractImmediate(major,ra,rb,rc,minor)
        others:
            raise ReservedInstruction
    endcase
GFMULADD16, GFMULADD32, GFMULADD64,
GFMULSUB16, GFMULSUB32, GFMULSUB64:
    GroupFloatingPointTernary(major,ra,rb,rc,rd)
GF.16, GF.32, GF.64, GF.128:
    case minor of
        GF.ADD.N, GF.SUB.N, GF.MUL.N, GF.DIV.N,
        GF.ADD.T, GF.SUB.T, GF.MUL.T, GF.DIV.T,
        GF.ADD.F, GF.SUB.F, GF.MUL.F, GF.DIV.F,
        GF.ADD.C, GF.SUB.C, GF.MUL.C, GF.DIV.C,
        GF.ADD, GF.SUB, GF.MUL, GF.DIV,
        GF.ADD.X, GF.SUB.X, GF.MUL.X, GF.DIV.X,
        GF.SET.E, GF.SET.NE, GF.SET.UE, GF.SET.NUE,
        GF.SET.NUGE, GF.SET.UGE, GF.SET.UL, GF.SET.NUL,
        GF.SET.E.X, GF.SET.NE.X, GF.SET.UE.X, GF.SET.NUE.X,
        GF.SET.L.X, GF.SET.NL.X, GF.SET.NGE.X, GF.SET.GE.X:
            GroupFloatingPoint(minor.op, major.size, minor.round, ra, rb, rc)
        GF.UNARY.N, GF.UNARY.T, GF.UNARY.F, GF.UNARY.C,
        GF.UNARY, GF.UNARY.X:
            case unary of
                GF.ABS, GF.NEG, GF.SQR,
                GF.HALF, GF.SINGLE, GF.DOUBLE, GF.QUAD,
                GF.INT, GF.FLOAT:
                    GroupFloatingPointUnary(unary.op, major.size,
                            minor.round, ra, rc)
                others:
                    raise ReservedInstruction
            endcase
        others:
            raise ReservedInstruction
    endcase
L.MINOR
    case minor of
        L16L, LU16L, L32L, LU32L, L64L, L128L, L8, LU8,
        L16LA, LU16LA, L32LA, LU32LA, L64LA, L128LA,
        L16B, LU16B, L32B, LU32B, L64B, L128B,
        L16BA, LU16BA, L32BA, LU32BA, L64BA, L128BA:
            Load(minor,ra,rb,rc)
```

```
                        others:
                            raise ReservedInstruction
                    endcase
                L16LI, LU16LI, L32LI, LU32LI, L64LI, L128LI, L8I, LU8I,
                L16LAI, LU16LAI, L32LAI, LU32LAI, L64LAI, L128LAI,
                L16BI, LU16BI, L32BI, LU32BI, L64BI, L128BI,
                L16BAI, LU16BAI, L32BAI, LU32BAI, L64BAI, L128BAI:
                    LoadImmediate(major,ra,rb,inst11..0)
                S.MINOR
                    case minor of
                        S16L, S32L, S64L, S128L, S8,
                        S16LA, S32LA, S64LA, S128LA,
                        SAAS64LA, SCAS64LA, SMAS64LA, SM64LA,
                        S16B, S32B, S64B, S128B,
                        S16BA, S32BA, S64BA, S128BA,
                        SAAS64BA, SCAS64BA, SMAS64BA, SM64BA:
                            Store(minor,ra,rb,rc)
                        others:
                            raise ReservedInstruction
                    endcase
                S16LI, S32LI, S64LI, S128LI, S8I
                S16LAI, S32LAI, S64LAI, S128LAI,
                SAAS64LAI, SCAS64LAI, SMAS64LAI, SM64LAI,
                S16BI, S32BI, S64BI, S128BI,
                S16BAI, S32BAI, S64BAI, S128BAI
                SAAS64BAI, SCAS64BAI, SMAS64BAI, SM64BAI:
                    StoreImmediate(major,ra,rb,inst11..0)
                B.MINOR:
                    case minor of
                        B, B.DOWN:
                            Branch(minor,ra)
                        B.LINK:
                            BranchAndLink(minor,ra,rb)
                        B.GATE:
                            BranchGateway(minor,ra,rb,rc)
                        others:
                            raise ReservedInstruction
                    endcase
                BLINKI, BI:
                    BranchImmediate(major,inst23..0)
                BFE16, BFNUE16, BFNUGE16, BFNUL16,
                BFE32, BFNUE32, BFNUGE32, BFNUL32,
                BFE64, BFNUE64, BFNUGE64, BFNUL64,
                BFE128, BFNUE128, BFNUGE128, BFNUL128,
                BE, BNE, BL, BGE, BUL, BUGE, BANDE, BANDNE:
                    BranchConditional(major,inst11..0)
                BGATEI:
                    BranchGatewayImmediate(ra,rb,inst11..0)
                others:
                    raise ReservedInstruction
            endcase
        enddef
```

<u>*Eternally Reserved*</u>

This operation generates a reserved instruction exception.

<u>*Operation code*</u>

| | |
|---|---|
| E.RES | Eternally reserved |

*Format*

E.RES imm

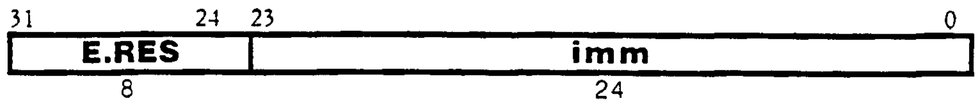


*Description*

The reserved instruction exception is raised. Software may depend upon this major operation code raising the reserved instruction exception in all Terpsichore processors. The choice of operation code intentionally ensures that a branch to a zeroed memory area will raise an exception.

*Definition*

```
def EternallyReserved as
raise ReservedInstruction
enddef
```

*Exceptions*

Reserved Instruction

*Branch*

This operation branches to a location specified by a register, optionally reducing the current privilege level.

*Operation codes*

| | |
|---|---|
| B | Branch |
| B.DOWN | Branch down in privilege |

*Format*

op ra

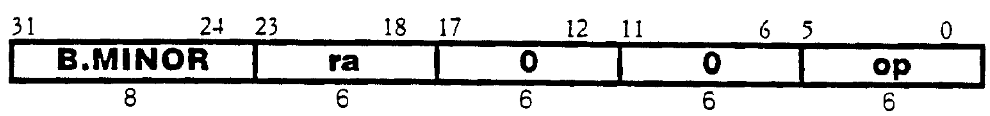

*Description*

Execution branches to the address specified by the contents of register ra. If specified, the current privilege level is reduced to the level specified by the low order two bits of the contents of register ra.

Access disallowed exception occurs if the contents of register ra is not aligned on a quadlet boundary, unless the operation specifies the use of the low-order two bits of the contents of register ra as a privilege level.

*Definition*

```
def Branch(op,ra) as
    a ← RegRead(ra, 64)
    if op = B.DOWN then
        if PrivilegeLevel > a1..0 then
            PrivilegeLevel ← a1..0
        endif
    else
        if (a and 3) ≠ 0 then
            raise AccessDisallowedByVirtualAddress
        endif
    endif
    ProgramCounter ← a63..2 || 0^2
enddef
```

*Exceptions*

Access disallowed by virtual address

*Branch and Link*

This operation branches to a location specified by a register, saving the value of the program counter into a register.

*Operation codes*

| | |
|---|---|
| B.LINK | Branch and link |

*Format*

op rb,ra

| 31 24 | 23 18 | 17 12 | 11 6 | 5 0 |
|---|---|---|---|---|
| **B.MINOR** | **ra** | **rb** | **0** | **op** |
| 8 | 6 | 6 | 6 | 6 |

*Description*

The address of the instruction following this one is placed into register rb. Execution branches to the address specified by the contents of register ra.

Access disallowed exception occurs if the contents of register ra is not aligned on a quadlet boundary.

*Definition*

```
def BranchAndLink(op,ra,rb) as
    a ← RegRead(ra, 64)
    if (a and 3) ≠ 0 then
        raise AccessDisallowedByVirtualAddress
    endif
    RegWrite(rb, 64, ProgramCounter + 4)
    ProgramCounter ← a63..2 || 0^2
enddef
```

*Exceptions*

Access disallowed by virtual address

*Branch Conditionally*

These operations compare two operands, and depending on the result of that comparison, conditionally branches to a nearby code location.

*Operation codes*

| | |
|---|---|
| B.AND.E | Branch and equal to zero |
| B.AND.NE | Branch and not equal to zero |
| B.E[6] | Branch equal |
| B.F.E.16 | Branch floating-point equal half |
| B.F.E.32 | Branch floating-point equal single |
| B.F.E.64 | Branch floating-point equal double |
| B.F.E.128 | Branch floating-point equal quad |
| B.F.NUE.16 | Branch floating-point not unordered or equal half |
| B.F.NUE.32 | Branch fioating-point not unordered or equal single |
| B.F.NUE.64 | Branch floating-point not unordered or equal double |
| B.F.NUE.128 | Branch floating-point not unordered or equal quad |
| B.F.NUGE.16 | Branch floating-point not unordered greater or equal half |
| B.F.NUGE.32 | Branch floating-point not unordered greater or equal single |
| B.F.NUGE.64 | Branch floating-point not unordered greater or equal double |
| B.F.NUGE.128 | Branch floating-point not unordered greater or equal quad |
| B.F.NUL.16 | Branch floating-point not unordered or less half |
| B.F.NUL.32 | Branch floating-point not unordered or less single |
| B.F.NUL.64 | Branch floating-point not unordered or less double |
| B.F.NUL.128 | Branch floating-point not unordered or less quad |
| B.G.Z[7] | Branch signed greater than zero |
| B.GE | Branch signed greater or equal |

(continued)

| | |
|---|---|
| B.GE.Z[8] | Branch signed greater or equal to zero |
| B.L | Branch signed less |
| B.L.Z[9] | Branch signed less than zero |
| B.LE.Z[10] | Branch signed less or equal to zero |
| B.NE[11] | Branch not equal |
| B.U.GE | Branch unsigned greater or equal |
| B.U.L | Branch unsigned less |

[6]B.E suffices for both signed and unsigned comparison for equality.
[7]B.G.Z is encoded as B.U.L with both instruction fields ra and rb equal.
[8]B.GE.Z is encoded as B.GE with both instruction fields ra and rb equal.
[9]B.L.Z is encoded as B.L with both instruction fields ra and rb equal.
[10]B.LE.Z is encoded as B.U.GE with both instructionf fields ra and rb equal.
[11]B.NE suffices for both signed and unsigned comparison for inequality.

| number format | type | compare | | | | size |
|---|---|---|---|---|---|---|
| signed integer | | E | NE | L | GE | |
| unsigned integer | U | E[12] | NE[13] | L | GE | |
| bitwise and | AND | E | NE | | | |
| signed integer *vs*. zero | Z | L | GE | G | LE | |
| floating-point | F | E | NUE | NUGE | NUL | 16<br>32<br>64<br>128 |

[12]B.U.E implemented as B.E.
[13]B.U.NE implemented as B.NE.

*Format*

op rb,ra,target

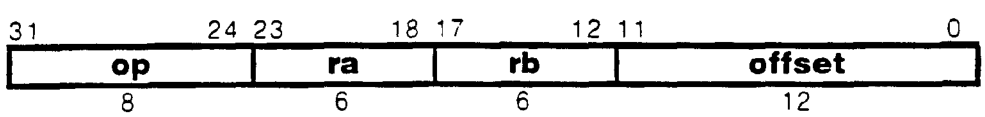


*Description*

The contents of registers or register pairs specified by ra and rb are compared, as specified by the op field. If the result of the comparison is true, execution branches to the address specified by the offset field. Otherwise, execution continues at the next sequential instruction.

A reserved instruction exception occurs when the size specified by the op field is 128 if $ra_0$ or $rb_0$ is set.

*Definition*

```
def BranchConditional(op,ra,rb,offset) as
     case op of
          BFE16, BFNUE16, BFNUGE16, BFNUL16,
          BFE32, BFNUE32, BFNUGE32,, BFNUL32,
          BFE64, BFNUE64, BFNUGE64, BFNUL64,
          BFE128, BFNUE128, BFNUGE128 BFNUL128:
               type ← F
          BE, BNE:
               type ← NONE
          BL, BGE:
               type ← (ra = rb) ? Z : NONE
          BUL, BUGE:
               type ← (ra = rb) ? Z : U
          BANDE, BANDNE:
               type ← AND
     endcase
     case op of
          B.U.L:
               compare ← (ra = rb) ? G : L
          B.U.GE:
```

```
            compare ← (ra = rb) ? LE : GE
        B.GE:
            compare ← GE
        B.L:
            compare ← L
        B.AND.NE, B.NE:
            compare ← NE
        B.AND.E, B.E, B.F.E.16, B.F.E.32, B.F.E.64, B.F.E.128:
            compare ← E
        B.F.NUE.16, B.F.NUE.32, B.F.NUE.64, B.F.NUE.128:
            compare ← NUE
        B.F.NUGE.16, B.F.NUGE.32, B.F.NUGE.64, B.F.NUGE.128:
            compare ← NUGE
        B.F.NUL.16, B.F.NUL.32, B.F.NUL.64, B.F.NUL.128:
            compare ← NUL
    endcase
    case op of
        BFE16, BFNUE16, BFNUGE16, BFNUL16:
            size ← 16
        BFE32, BFNUE32, BFNUGE32, BFNUL32:
            size ← 32
        BFE64, BFNUE64, BFNUGE64, BFNUL64:
            size ← 64
        BFE128, BFNUE128, BFNUGE128, BFNUL128:
            size ← 128
        BE, BNE, BL, BGE, BUL, BUGE:, BANDE, BANDNE:
            size ← undefined
    endcase
    case type of
        NONE:
            a ← RegRead(ra, 64)
            b ← RegRead(rb, 64)
            l ← b
            r ← a
        U:
            a ← RegRead(ra, 64)
            b ← RegRead(rb, 64)
            l ← 0 || b
            r ← 0 || a
        AND:
            a ← RegRead(ra, 64)
            b ← RegRead(rb, 64)
            l ← a and b
            r← 0
        Z:
            a ← RegRead(ra, 64)
            l ← a
            r← 0
        F:
            a ← RegRead(ra, (size≤64) ? 64 : size)
            b ← RegRead(rb, (size≤64) ? 64 : size)
            l ← F(size,b)
            r← F(size,a)
    endcase
    if (type=F) and (isNaN(r) or isNaN(l)) then
        c ← false
    else
        case compare of
```

```
                E:
                    c ← l = r
                NE, NUE:
                    c ← l ≠ r
                L, NUGE:
                    c ← l < r
                NUL, GE:
                    c ← l ≥ r
                G:
                    c ← l > r
                LE:
                    c ← l ≤ r
            endcase
        endif
        if c then
            PC ← PC + (offset11^50 || offset || 0^2)
        endif
    enddef
```

*Exceptions*

Reserved Instruction

*Branch Gateway Immediate*

This operation provides a secure means to call a procedure, including those at a higher privilege level.

*Operation codes*

| | |
|---|---|
| B.GATE.I | Branch gateway immediate |

*Format*

B.GATE.I ra,imm

| 31 … 24 | 23 … 18 | 17 … 12 | 11 … 0 |
|---|---|---|---|
| **B.GATE.I** | **ra** | **0** | **imm** |
| 8 | 6 | 6 | 12 |

*Description*

A virtual address is computed from the sum of the contents of register ra and the sign-extended value of the 12-bit immediate field. The contents of 16 bytes of memory using the little-endian byte order is fetched. A branch and link occurs to the low-order octlet of the memory data, and the successor to the current program counter, catenated with the current execution privilege is placed in register 0. The privilege level is set to the contents of the low-order two bits of the memory data. Register 1 is loaded with the high-order octlet of the memory data.

An access disallowed exception occurs if the new privilege level is greater than the privilege level required to write the memory data, or if the old privilege level is lower than the privilege required to access the memory data as a gateway.

An access disallowed exception occurs if the target virtual address is a higher privilege than the current level and gateway access is not set for the gateway virtual address, or if the access is not aligned on a 16-byte boundary.

A reserved instruction exception occurs if the rb field is non-zero.

*Definition*

```
def BranchGatewayImmediate(ra,rb,imm) as
    a ← RegRead(ra, 64)
    VirtAddr ← a + (imm_11^52 || imm)
    if VirtAddr_3..0 ≠ 0 then
        raise AccessDisallowedByVirtualAddress
    endif
    if rb ≠ 0 then
        raise ReservedInstruction
    endif
    b ← LoadMemory(VirtAddr,128,L)
    bx ← b_127..64 || ProgramCounter_63..2+1 || PrivilegeLevel
    ProgramCounter ← b_63..2 || 0^2
    PrivilegeLevel ← b_1..0
    RegWrite(rb, 128, bx)
enddef
```

*Exceptions*

Reserved Instruction

Access disallowed by virtual address
Access disallowed by tag
Access disallowed by global TLB
Access disallowed by local TLB
Access detail required by tag
Access detail required by local TLB
Access detail required by global TLB
Cache coherence intervention required by tag
Cache coherence intervention required by local TLB
Cache coherence intervention required by global TLB
Local TLB miss
Global TLB miss

*Branch Gateway*

This operation provides a secure means to call a procedure, including those at a higher privilege level.

*Operation codes*

| | |
|---|---|
| B.GATE | Branch gateway |

*Format*

B.GATE ra,rb

| 31 .. 24 | 23 .. 18 | 17 .. 12 | 11 .. 0 |
|---|---|---|---|
| **B.GATE** | **ra** | **rb** | **0** |
| 8 | 6 | 6 | 12 |

*Description*

A virtual address is computed from the sum of the contents of register ra and register rb. The contents of 16 bytes of memory using the little-endian byte order is fetched. A branch and link occurs to the low-order octlet of the memory data, and the successor to the current program counter, catenated with the current execution privilege is placed in register 0. The privilege level is set to the contents of the low-order two bits of the memory data. Register 1 is loaded with the high-order octlet of the memory data.

An access disallowed exception occurs if the new privilege level is greater than the privilege level required to write the memory data, or if the old privilege level is lower than the privilege required to access the memory data as a gateway.

An access disallowed exception occurs if the target virtual address is a higher privilege than the current level and gateway access is not set for the gateway virtual address, or if the access is not aligned on a 16-byte boundary.

A reserved instruction exception occurs if the rb field is non-zero.

*Definition*

```
def BranchGateway(ra,rb,rc) as
    a ← RegRead(ra, 64)
    b ← RegRead(rb, 64)
    VirtAddr ← a +b
    if VirtAddr_{3..0} ≠ 0 then
        raise AccessDisallowedByVirtualAddress
    endif
    if rc ≠ 0 then
        raise ReservedInstruction
    endif
    c ← LoadMemory(VirtAddr,128,L)
    cx ←c_{127..64} || ProgramCounter_{63..2}+1 || PrivilegeLevel
    ProgramCounter ← c_{63..2} || 0^2


        PrivilegeLevel ← c_{1..0}
        RegWrite(rc, 128, cx)
    enddef
```

*Exceptions*

Reserved Instruction

Access disallowed by virtual address
Access disallowed by tag
Access disallowed by global TLB
Access disallowed by local TLB
Access detail required by tag
Access detail required by local TLB
Access detail required by global TLB

Cache coherence intervention required by tag
Cache coherence intervention required by local TLB
Cache coherence intervention required by global TLB Local TLB miss
Global TLB miss

*Branch Immediate*

This operation branches to a location that is specified as an offset from the program counter, optionally saving the value of the program counter into register 0.

*Operation codes*

| | |
|---|---|
| BI | Branch immediate |
| BLINK | Branch immediate and link |

*Format*

op target

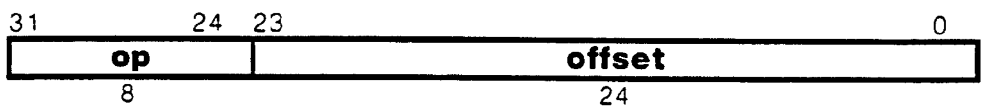


*Description*

If requested, the address of the instruction following this one is placed into register 0. Execution branches to the address specified by the offset field.

*Definition*

```
def BranchImmediate(op.offset) as
     if (op = B.LINK.I) then
          RegWrite(0, 64, ProgramCounter + 4)
     endif
     ProgramCounter ← ProgramCounter + (offset_23^38 || offset || 0^2)
enddef
```

*Exceptions*

none

*Execute*

These operations perform calculations with two general register values, placing the result in a general register.

*Operation codes*

| | |
|---|---|
| E.ADD | Execute add |
| E.ADD.O | Execute add and check signed overflow |
| E.ADD.UO | Execute add and check unsigned overflow |
| E.AND | Execute and |
| E.ANDN | Execute and not |
| E.ASUM | Execute and summation of bits |
| E.LMS | Execute signed logarithm of most significant bit |
| E.NAND | Execute not and |
| E.NOR | Execute not or |
| E.OR | Execute or |
| E.ORN | Execute or not |
| E.ROTL | Execute rotate left |
| E.ROTR | Execute rotate right |
| E.SELECT.8 | Execute select bytes |
| E.SHL | Execute shift left |
| E.SHL.O | Execute shift left and check signed overflow |
| E.SHL.UO | Execute shift left and check unsigned overflow |
| E.SHR | Execute signed shift right |
| E.ULMS | Execute unsigned logarithm of most significant bit |
| E.USHR | Execute unsigned shift right |
| E.XNOR | Execute exclusive nor |
| E.XOR | Execute xor |

| | | | | | |
|---|---|---|---|---|---|
| class | operation | | | | check |
| arithmetic | ADD | | | | NONE O UO |
| shift | SHL | | | | NONE O UO |
| | SHR | | USHR | | |
| | ROTL | | ROTR | | |
| | SELECT8 | | | | |
| logarithm | LMS | | ULMS | | |
| summation | ASUM | | | | |
| bitwise | OR<br>NOR | AND<br>NAND | XOR<br>XNOR | ANDN<br>ORN | |

*Format*

op rc=ra,rb

| 31 24 | 23 18 | 17 12 | 11 6 | 5 0 |
|---|---|---|---|---|
| E.MINOR | ra | rb | rc | op |
| 8 | 6 | 6 | 6 | 6 |

*Description*

The contents of registers ra and rb are fetched and the specified operation is performed on these operands. The result is placed into register rc.

*Definition*

```
def Execute(op,ra,rb,rc) as
    a ← RegRead(ra, 64)
    b ← RegRead(rb, 64)
    case op of
        E.ROTL:
            c ← a(63-b5..0)..0 || a63..(64-b5..0)
        E.ROTR:
            c ← a(b5..0-1)..0 || a63..b5..0
        E.SHL:
            c ← a(63-b5..0)..0 || 0^b5..0
        E.SHL.O:
            if a63..63-b5..0 ≠ a63^(b5..0+1) then
                raise FixedPointArithmetic
            endif
            c ← a(63-b5..0)..0 || 0^b5..0
        E.SHL.UO:
            if a63..64-b5..0 ≠ 0 then
                raise FixedPointArithmetic
            endif
            c ← a(63-b5..0)..0 || 0^b5..0
        E.SHR:
            c ← a63^b5..0 || a63..b5..0
        E.USHR:
            c ← 0^b5..0 || a63..b5..0
        E.ADD:
            c ← a + b
        E.ADD.O:
            t ← (a63 || a) + (b63 || b)
            if t64 ≠ t63 then
                raise FixedPointArithmetic
            endif
            c ← t63..0
        E.ADD.UO:
            t ← (0^1 || a) + (0^1 || b)
            if t64 ≠ 0 then
                raise FixedPointArithmetic
            endif
            c ← t63..0
```

```
                E.AND:
                    c ← a and b
                E.OR:
                    c ← a or b
                E.XOR:
                    c ← a xor b:
                E.ANDN:
                    c ← a and not b
                E.NAND:
                    c ← not (a and b)
                E.NOR:
                    c ← not (a or b)
                E.XNOR:
                    c ← not (a xor b)
                E.ORN:
                    c ← a or not b
                E.LMS:
                    if (a=0) then
                        c ← -1
                    else
                        for i ← 0 to 63
                            if a63..i = (a63^(63-i) || not a63) then
                                c ← i
                            endif
                        endfor
                    endif
                E.ULMS:
                    if (a=0) then
                        c ← -1
                    else
                        for i ← 0 to 63
                            if a63..i = (0^(63-i) || 1) then
                                c ← i
                            endif
                        endfor
                    endif
                E.ASUM:
                    t ← a & b
                    u ← (t63..1&0x5555555555555555) + (t&0x5555555555555555)
                    v ← (u63..2&0x3333333333333333) + (u&0x3333333333333333)
                    w ← (v63..4&0x0707070707070707) + (v&0x0707070707070707)
                    x ← (w63..8&0xf000f000f000f000f) + (w&0x000f000f000f000f)
                    c ← x52..48 + x36..32 + x20..16 + x4..0
                E.SELECT.8:
                    for i ← 0 to 7
                        j ← b3*i+2..3*i
                        c8*i+7..8*i ← a8*j+7..8*j
                    endfor
            endcase
            RegWrite(rc, 64, c)
        enddef
```

*Exceptions*

Fixed-point arithmetic

*Execute Copy Immediate*

This operation produces one immediate value, placing the result in a general register.

*Operation codes*

| | |
|---|---|
| E.COPY.I | Execute copy immediate |

*Format*

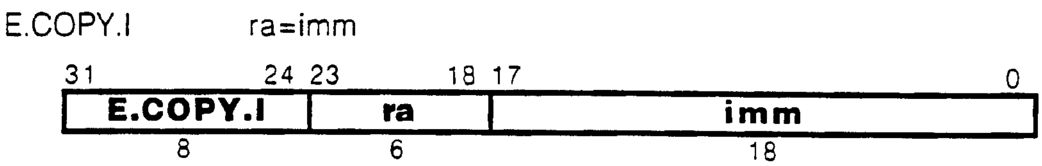


*Description*

A 64-bit immediate value is sign-extended from the 18-bit imm field. The result is placed into register ra.

*Definition*

```
def ExecuteCopyImmediate(op.ra.imm) as
    i ← (imm_17^46 || imm)
    RegWrite(ra, 64, i)
enddef
```

*Exceptions*

none

*Execute Field Immediate*

These operations perform calculations with one or two general register values and two immediate values, placing the result in a general register.

*Operation codes*

| | |
|---|---|
| E.DEP.I | Execute deposit immediate |
| E.MDEP.I | Execute merge deposit immediate |
| E.UDEP.I | Execute unsigned deposit immediate |
| E.UWTH.I | Execute unsigned withdraw immediate |
| E.WTH.I | Execute withdraw immediate |

*Format*

op rb=ra,ishift,isize

| 31 24 | 23 18 | 17 12 | 11 6 | 5 0 |
|---|---|---|---|---|
| **op** | **ra** | **rb** | **ishift** | **isizea** |
| 8 | 6 | 6 | 6 | 6 |

*Description*

The contents of register ra, and if specified, the contents of register rb is fetched, and 6-bit immediate values are taken from the 6-bit ishift and isizea fields. The specified operation is performed on these operands. The result is placed into register rb.

*Definition*

```
def ExecuteFieldImmediate(op,ra.rb.ishift.isizea) as
    a ← RegRead(ra. 64)
    isize ← isizea+1
    if (ishift+isize>64)
        raise ReservedInstruction
    endif
    case op of
        E.DEPI:
            b ← a_{isize-1}^{64-isize-ishift} || a_{isize-1..0} || 0^{ishift}
        E.UDEPI:
            b ← 0^{64-isize-ishift} || a_{isize-1..0} || 0^{ishift}
        E.MDEPI:
            m ← RegRead(rb, 64)
            b ← m_{63..isize+ishift} || a_{isize-1..0} || m_{ishift-1..0}
        E.WTHI:
            b ← a_{isize+ishift-1}^{64-isize} || a_{isize+ishift-1..ishift}
        E.UWTHI:
            b ← 0^{64-isize} || a_{isize+ishift-1..ishift}
    endcase
    RegWrite(rb, 64, b)
enddef
```

*Exceptions*

Reserved instruction

*Execute Immediate*

These operations perform calculations with one general register value and one immediate value, placing the result in a general register.

*Operation codes*

| | |
|---|---|
| E.ADD.I | Execute add immediate |

(continued)

| | |
|---|---|
| E.ADD.I.O | Execute add immediate and check signed overflow |
| E.ADD.I.UO | Execute add immediate and check unsigned overflow |
| E.AND.I | Execute and immediate |
| E.NAND.I | Execute not and immediate |
| E.NOR.I | Execute not or immediate |
| E.OR.I | Execute or immediate |
| E.XOR.I | Execute xor immediate |

| class | operation | check |
|---|---|---|
| arithmetic | ADD | NONE O UO |
| bitwise | AND OR NAND NOR XOR | |

*Format*

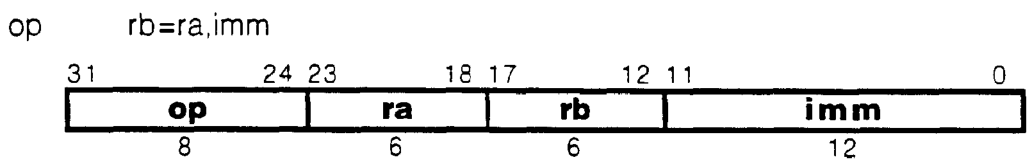


*Description*

The contents of register ra is fetched, and a 64-bit immediate value is sign-extended from the 12-bit imm field. The specified operation is performed on these operands. The result is placed into register rc.

*Definition*

```
def ExecuteImmediate(op,ra,rb,imm) as
    i ← (imm_11^52 || imm)
    a ← RegRead(ra, 64)
    case op of
        E.AND.I:
            b ← a and i
        E.OR.I:
            b ← a or i
        E.NAND.I:
            b ← a nand i
        E.NOR.I:
            b ← a nor i
        E.XOR.I:
            b ← a xor i:
```

```
            E.ADD.I:
                b ← a + i
            E.ADD.I.SO:
                t ← (a63 || a) + (i63 || i)
                if t64 ≠ t63 then
                    raise FixedPointArithmetic
                endif
                b ← t63..0
        endcase
        RegWrite(rb, 64, b)
    enddef
```

*Exceptions*

Fixed-point arithmetic

*Execute Immediate Reversed*

These operations perform calculations with one general register value and one immediate value, placing the result in a general register.

*Operation codes*

| | |
|---|---|
| E.SET.I.E | Execute set immediate equal |
| E.SET.I.GE | Execute set immediate signed greater or equal |
| E.SET.I.L | Execute set immediate signed less |
| E.SET.I.NE | Execute set immediate not equal |
| E.SET.I.UGE | Execute set immediate unsigned greater or equal |
| E.SET.I.UL | Execute set immediate unsigned less |
| E.SUB.I | Execute subtract immediate |
| E.SUB.I.E | Execute subtract immediate and check equal |
| E.SUB.I.GE | Execute subtract immediate and check signed greater or equal |
| E.SUB.I.L | Execute subtract immediate and check signed less |
| E.SUB.I.NE | Execute subtract immediate and check not equal |
| E.SUB.I.O | Execute subtract immediate and check signed overflow |
| E.SUB.I.UGE | Execute subtract immediate and check unsigned greater or equal |
| E.SUB.I.UL | Execute subtract immediate and check unsigned less |
| E.SUB.I.UO | Execute subtract immediate and check unsigned overflow |

| class | operation | check |
|---|---|---|
| arithmetic | SUB | NONE O UO<br>E L UL<br>NE GE UGE |
| boolean | SET.E SET.L SET.UL<br>SET.NE SET.GE SET.UGE | |

*Format*

op rb=imm,ra

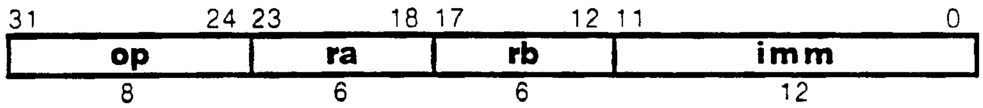


*Description*

The contents of register ra is fetched, and a 64-bit immediate value is sign-extended from the 12-bit imm field. The specified operation is performed on these operands. The result is placed into register rc.

*Definition*

def ExecuteImmediate(op,ra,rb,imm) as
$i \leftarrow (imm_{11}^{52} \parallel imm)$
$a \leftarrow$ RegRead(ra, 64)

```
            case op of
                E.SUB.I:
                    b ← i - a
                E.SUB.I.SO:
                    t ← (i63 || i) - (a63 || a)
                    if t64 ≠ t63 then
                        raise FixedPointArithmetic
                    endif
                    b ← t63..0
                E.SET.I.E:
                    b ← (i = a)^64
                E.SET.I.NE:
                    b ← (i ≠ a)^64
                E.SET.I.L:
                    b ← (i < a)^64
                E.SET.I.GE:
                    b ← (i ≥ a)^64
                E.SET.I.UL:
                    b ← ((0 || i) < (0 || a))^64
                E.SET.I.UGE:
                    b ← ((0 || i) ≥ (0 || a))^64
                E.SUB.I.E:
                    b ← i - a
                    if i ≠ a then
                        raise FixedPointArithmetic
                    endif
                E.SUB.I.NE:
                    b ← i - a
                    if i = a then
                        raise FixedPointArithmetic
                    endif
                E.SUB.I.L:
                    b ← i - a
                    if i ≥ a then
                        raise FixedPointArithmetic
                    endif
                E.SUB.I.GE:
                    b ← i - a
                    if i < athen
                        raise FixedPointArithmetic
                    endif
                E.SUB.I.UL:
                    b ← i - a
                    if (0 || i) ≥ (0 || a) then
                        raise FixedPointArithmetic
                    endif
                E.SUB.I.UGE:
                    b ← i - a
                    if (0 || i) < (0 || a) then
                        raise FixedPointArithmetic
                    endif
            endcase
            RegWrite(rb, 64, b)
        enddef
```

*Exceptions*

Fixed-point arithmetic

*Execute Inplace*

These operations perform calculations with three general register values, placing the result in the third general register.

*Operation codes*

| | |
|---|---|
| E.MSHR | Execute merge shift right |

*Format*

E.MSHR rc=ra,rb,rc

| 31 24 | 23 18 | 17 12 | 11 6 | 5 0 |
|---|---|---|---|---|
| **E.MINOR** | **ra** | **rb** | **rc** | **op** |
| 8 | 6 | 6 | 6 | 6 |

*Description*

The contents of registers ra, rb, and rc are fetched. The specified operation is performed on these operands. The result is placed into register rc.

*Definition*

```
def ExecuteTernaryInplace(op,ra,rb,rc) as
    a ← RegRead(ra, 64)
    b ← RegRead(rb, 64)
    c ← RegRead(rc, 64)
    case op of
        E.MSHR:
            d ← c_{63..64-b_{5..0}} || a_{63..b_{5..0}}
    endcase
    RegWrite(rc, 64, d)
enddef
```

*Exceptions*

none

*Execute Reversed*

These operations perform calculations with two general register values, placing the result in a general register.

*Operation codes*

| | |
|---|---|
| E.SET.E | Execute set equal |
| E.SET.GE | Execute set signed greater or equal |
| E.SET.L | Execute set signed less |

(continued)

| | |
|---|---|
| E.SET.NE | Execute set not equal |
| E.SET.UGE | Execute set unsigned greater or equal |
| E.SET.UL | Execute set unsigned less |
| E.SUB | Execute subtract |
| E.SUB.E | Execute subtract and check equal |
| E.SUB.GE | Execute subtract and check signed greater or equal |
| E.SUB.L | Execute subtract and check signed less |
| E.SUB.NE | Execute subtract and check not equal |
| E.SUB.O | Execute subtract and check signed overflow |
| E.SUB.UGE | Execute subtract and check unsigned greater or equal |
| E.SUB.UL | Execute subtract and check unsigned less |
| E.SUB.UO | Execute subtract and check unsigned overflow |

| class | operation | check |
|---|---|---|
| arithmetic | SUB | NONE O UO<br>E L UL<br>NE GE UGE |
| boolean | SET.E SET.L SET.UL<br>SET.NE SET.GE SET.UGE | |

*Format*

op rc=rb,ra

| 31 … 24 | 23 … 18 | 17 … 12 | 11 … 6 | 5 … 0 |
|---|---|---|---|---|
| **E.MINOR** | **ra** | **rb** | **rc** | **op** |
| 8 | 6 | 6 | 6 | 6 |

*Description*

The contents of registers ra and rb are fetched and the specified operation is performed on these operands. The result is placed into register rc.

*Definition*

```
def ExecuteReversed(op,ra,rb,rc) as
    a ← RegRead(ra, 64)
    b ← RegRead(rb, 64)
    case op of
```

```
        E.SUB:
            c ← b - a
        E.SUB.O:
            t ← (b63 || b) - (a63 || a)
            if t64 ≠ t63 then
                raise FixedPointArithmetic
            endif
            c ← t63..0
        E.SUB.UO:
            t ← (0^1 || b) - (0^1 || a)
            if t64 ≠ 0 then
                raise FixedPointArithmetic
            endif
            c ← t63..0
        E.SUB.E:
            c ← b - a
            if b ≠ a then
                raise FixedPointArithmetic
            endif
        E.SUB.NE:
            c ← b - a
            if b = a then
                raise FixedPointArithmetic
            endif
        E.SUB.L:
            c ← b - a
            if b ≥ a then
                raise FixedPointArithmetic
            endif
        E.SUB.GE:
            c ← b - a
            if b < a then
                raise FixedPointArithmetic
            endif
        E.SUB.UL:
            c ← b - a
            if (0 || b) ≥ (0 || a) then
                raise FixedPointArithmetic
            endif
        E.SUB.UGE:
            c ← b - a
            if (0 || b) < (0 || a) then
                raise FixedPointArithmetic
            endif
        E.SET.E:
            c ← (b = a)^64
        E.SET.NE:
            c ← (b ≠ a)^64
        E.SET.L:
            c ← (b < a)^64
        E.SET.GE:
            c ← (b ≥ a)^64
        E.SET.UL:
            c ← ((0 || b) < (0 || a))^64
        E.SET.UGE:
            c ← ((0 || b) ≥ (0 || a))^64
    endcase

            RegWrite(rc, 64, c)
        enddef
```

*Exceptions*

Fixed-point arithmetic

*Execute Short Immediate*

These operations perform calculations with one general register value and one immediate value, placing the result in a general register.

*Operation codes*

| | |
|---|---|
| E.ROTR.I | Execute rotate right immediate |
| E.SHL.I | Execute shift left immediate |
| E.SHL.I.O | Execute shift left immediate and check signed overflow |
| E.SHL.I.UO | Execute shift left immediate and check unsigned overflow |
| E.SHR.I | Execute signed shift right immediate |
| E.SHUFFLE.I | Execute shuffle immediate |
| E.USHR.I | Execute unsigned shift right immediate |

*Format*

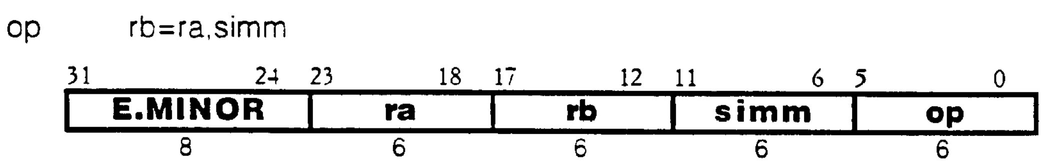


*Description*

The contents of register ra is fetched, and a 6-bit immediate value is taken from the 6-bit simm field. The specified operation is performed on these operands. The result is placed into register rb.

*Definition*

```
def ExecuteShortImmediate(op,ra,rb,simm) as
    a ← RegRead(ra, 64)
    case op of
        E.SHUFFLE.I:
            case simm of
                0:
                    b ← a
                1..35:
                    for x ← 0 to 7; for y ← 0 to x-1; for z ← 1 to x-y
                        if simm = ((x*x*x-3*x*x-4*x)/6-(z*z-z)/2+x*z+y+1) then
                            for i ← 0 to 63
                                b_i ← a_(i_7..x || i_y+z-1..y || i_x-1..y+z || i_y-1..0)
                            end
                        endif
                    endfor; endfor; endfor
                36..255:
                    raise ReservedInstruction
            endcase
        E.ROTR.I:
            b ← a_simm-1..0 || a_63..simm
            E.SHL.I:
                b ← a_63-simm..0 || 0^simm
            E.SHL.I.O:
                if a_63..63-simm ≠ a_63^(simm+1) then
                    raise FixedPointArithmetic
                endif
                b ← a_63-simm..0 || 0^simm
            E.SHL.I.UO:
                if a_63..64-simm ≠ 0 then
                    raise FixedPointArithmetic
                endif
                b ← a_63-simm..0 || 0^simm
            E.SHR.I:
                b ← a_63^simm || a_63..simm
            E.USHR.I:
                b ← 0^simm || a_63..simm
    endcase
    RegWrite(rb, 64, b)
enddef
```

*Exceptions*

Fixed-point arithmetic

*Execute Short Immediate Inplace*

These operations perform calculations with one general register value and one immediate value, placing the result in a general register.

*Operation codes*

| | |
|---|---|
| E.MSHR.I | Execute merge shift right immediate |

*Format*

op rb=ra,simm

| 31..24 | 23..18 | 17..12 | 11..6 | 5..0 |
|---|---|---|---|---|
| E.MINOR | ra | rb | simm | op |
| 8 | 6 | 6 | 6 | 6 |

*Description*

The contents of registers ra and rb are fetched, and a 6-bit immediate value is taken from the 6-bit simm field. The specified operation is performed on these operands. The result is placed into register rb.

*Definition*

```
def ExecuteShortImmediateInplace(op.ra.rb.simm) as
     a ← RegRead(ra. 64)
     b ← RegRead(rb. 64)
     case op of
          E.MSHR.I:
               c ← b_{63..63-simm} || a_{63..simm}
     endcase
     RegWrite(rb. 64. c)
enddef
```

*Exceptions*

Fixed-point arithmetic

*Execute Swizzle Immediate*

These operations perform calculations with a general register value and two immediate values, placing the result in a general register.

*Operation codes*

| | |
|---|---|
| E.SWIZZLE.I | Execute swizzle immediate |

*Format*

op rb=ra,icopy,iswap

| 31..24 | 23..18 | 17..12 | 11..6 | 5..0 |
|---|---|---|---|---|
| op | ra | rb | icopy | iswap |
| 8 | 6 | 6 | 6 | 6 |

*Description*

The contents of register ra is fetched, and 6-bit immediate values are taken from the 6-bit icopy and iswap fields. The specified operation is performed on these operands. The result is placed into register rb.

*Definition*

```
def GroupSwizzleImmediate(op,ra,rb,icopy,iswap) as
     a ← RegRead(ra, 64)
     for i ← 0 to 63
          bi ← a(i & icopy) ^ iswap
     endfor
     RegWrite(rb, 63, b)
enddef
```

*Exceptions*

Reserved instruction

*Execute Ternary*

These operations perform calculations with three general register values, placing the result in a fourth general register.

*Operation codes*

| | |
|---|---|
| E.8MUX | Execute 8-way multiplex |
| E.MUX | Execute multiplex |
| E.TRANSPOSE.8MUX | Execute transpose and 8-way multiplex |

*Format*

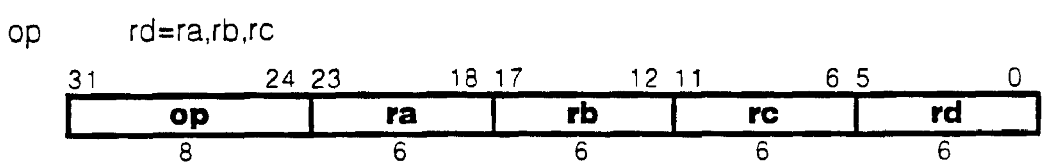


*Description*

The contents of registers ra, rb, and rc are fetched. The specified operation is performed on these operands. The result is placed into register rd.

*Definition*

```
def ExecuteTernary(op,ra,rb,rc,rd) as
    case op of
        E.8MUX, E.TRANSPOSE.8MUX:
            a ← RegRead(ra, 64)
            b ← RegRead(rb, 128)
            c ← RegRead(rc, 64)
        E.MUX:
            a ← RegRead(ra, 64)
            b ← RegRead(rb, 64)
            c ← RegRead(rc, 64)
    endcase
    case op of
        E.8MUX:
            for i ← 0 to 63
                d_i ← a_(i_5..3 || c_i&63 || b_(i&63)+64 || b_i&63)
            endfor
        E.TRANSPOSE.8MUX:
            for i ← 0 to 63
                t_i ← a_(i_2..0 || i_5..3)
            endfor
            for i ← 0 to 63
                d_i ← t_(i_5..3 || c_i&63 || b_(i&63)+64 || b_i&63)
            endfor
        E.MUX:
            d ← (b and a) or (c and not a)
    endcase


    RegWrite(rd, 64, d)
enddef
```

*Exceptions*

none

*Floating-point*

These operations perform floating-point arithmetic on two floating-point operands.

*Operation codes*

| | |
|---|---|
| F.ADD.16 | Floating-point add half |
| F.ADD.16.C | Floating-point add half ceiling |
| F.ADD.16.F | Floating-point add half floor |
| F.ADD.16.N | Floating-point add half nearest |
| F.ADD.16.T | Floating-point add half truncate |
| F.ADD.16.X | Floating-point add half exact |
| F.ADD.32 | Floating-point add single |
| F.ADD.32.C | Floating-point add single ceiling |
| F.ADD.32.F | Floating-point add single floor |
| F.ADD.32.N | Floating-point add single nearest |

(continued)

| | |
|---|---|
| F.ADD.32.T | Floating-point add single truncate |
| F.ADD.32.X | Floating-point add single exact |
| F.ADD.64 | Floating-point add double |
| F.ADD.64 .C | Floating-point add double ceiling |
| F.ADD.64 .F | Floating-point add double floor |
| F.ADD.64 .N | Floating-point add double nearest |
| F.ADD.64 .T | Floating-point add double truncate |
| F.ADD.64 .X | Floating-point add double exact |
| F ADD.128 | Floating-point add quad |
| F.ADD.128.C | Floating-point add quad ceiling |
| F.ADD.128.F | Floating-point add quad floor |
| F.ADD.128.N | Floating-point add quad nearest |
| F.ADD.128.T | Floating-point add quad truncate |
| F.ADD.128.X | Floating-point add quad exact |
| F.DIV.16 | Floating-point divide half |
| F.DIV.16.C | Floating-point divide half ceiling |
| F.DIV.16.F | Floating-point divide half floor |
| F.DIV.16.N | Floating-point divide half nearest |
| F.DIV.16.T | Floating-point divide half truncate |
| F.DIV.16.X | Floating-point divide half exact |
| F.DIV.32 | Floating-point divide single |
| F.DIV.32.C | Floating-point divide single ceiling |
| F.DIV.32.F | Floating-point divide single floor |
| F.DIV.32.N | Floating-point divide single nearest |
| F.DIV.32.T | Floating-point divide single truncate |
| F.DIV.32.X | Floating-point divide single exact |
| F.DIV.64 | Floating-point divide double |
| F.DIV.64.C | Floating-point divide double ceiling |
| F.DIV.64.F | Floating-point divide double floor |
| F.DIV.64.N | Floating-point divide double nearest |
| F.DIV.64.T | Floating-point divide double truncate |
| F.DIV.64.X | Floating-point divide double exact |
| F.DIV.128 | Floating-point divide quad |
| F.DIV.128.C | Floating-point divide quad ceiling |
| F.DIV.128.F | Floating-point divide quad floor |
| F.DIV.128.N | Floating-point divide quad nearest |
| F.DIV.128.T | Floating-point divide quad truncate |
| F.DIV.128.X | Floating-point divide quad exact |
| F.MUL.16 | Floating-point multiply half |

(continued)

| | |
|---|---|
| F.MUL.16.C | Floating-point multiply half ceiling |
| F.MUL.16.F | Floating-point multiply half floor |
| F.MUL.16.N | Floating-point multiply half nearest |
| F.MUL.16.T | Floating-point multiply half truncate |
| F.MUL.16.X | Floating-point multiply half exact |
| F.MUL.32 | Floating-point multiply single |
| F.MUL.32.C | Floating-point multiply single ceiling |
| F.MUL.32.F | Floating-point multiply single floor |
| F.MUL.32.N | Floating-point multiply single nearest |
| F.MUL.32.T | Floating-point multiply single truncate |
| F.MUL.32.X | Floating-point multiply single exact |
| F.MUL.64 | Floating-point multiply double |
| F.MUL.64.C | Floating-point multiply double ceiling |
| F.MUL.64.F | Floating-point multiply double floor |
| F.MUL.64.N | Floating-point multiply double nearest |
| F.MUL.64.T | Floating-point multiply double truncate |
| F.MUL.64.X | Floating-point multiply double exact |
| F.MUL.128 | Floating-point multiply quad |
| F.MUL.128.C | Floating-point multiply quad ceiling |
| F.MUL.128.F | Floating-point multiply quad floor |
| F.MUL.128.N | Floating-point multiply quad nearest |
| F.MUL.128.T | Floating-point multiply quad truncate |
| F.MUL.128.X | Floating-point multiply quad exact |

| | op | prec | | | | round/trap |
|---|---|---|---|---|---|---|
| add | ADD | 16 | 32 | 64 | 128 | NONE C F N T X |
| multiply | MUL | 16 | 32 | 64 | 128 | NONE C F N T X |
| divide | DIV | 16 | 32 | 64 | 128 | NONE C F N T X |

*Format*

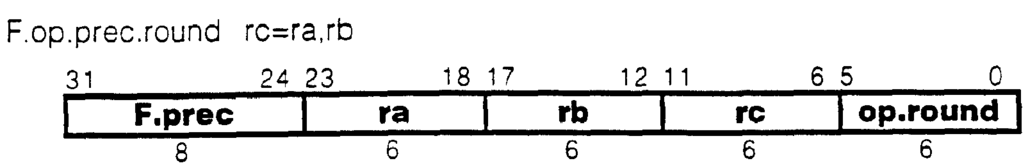

*Description*

The contents of registers is register pairs specified by ra and rb are combined using the specified floating-point operation. The operation is rounded using the specified rounding option or using round-to-nearest if not specified. The result is placed in the register or register pair specified by rc.
If a rounding option is specified, the operation raises a floating-point exception if a floating-point invalid operation, divide by zero, overflow, or underflow occurs, or when specified, if the result is inexact. If a rounding option is not specified, floating-point exceptions are not raised, and are handled according to the default rules of IEEE 754.
If F128 precision is specified, ra, rb and rc refer to an aligned pair of registers, and a reserved instruction exception occurs if the low-order bit of these operands is set.

*Definition*

```
def FloatingPoint(op.prec.round.ra.rb.rc) as
a ← F(prec. RegRead(ra, (prec≤64) ? 64 : prec))
b ← F(prec. RegRead(rb, (prec≤64) ? 64 : prec))
if round≠NONE then
    if isSignallingNaN(a) I isSignallingNaN(b)
        raise FloatingPointException
    endif
    case op of
        F.DIV:
            if b=0 then
                raise FloatingPointArithmetic
            endif
        others:
    endcase
endif
case op of
    F.ADD:
        c ← a+b
    F.MUL:
        c ← a*b
    F.DIV.:
        c ← a/b
 endease
 case round of
    X:
    N:
    T:
     F:
     C:
     NONE:
 endcase
 RegWrite(rc, (prec≤64) : 64 : prec, PackF(prec,c))
enddef
```

*Exceptions*

Reserved instruction
Floating-point arithmetic

*Floating-point Reversed*

These operations perform floating-point arithmetic on two floating-point operands.

*Operation codes*

| | |
|---|---|
| F.SET.E.16 | Floating-point set equal half |
| F.SET.E.16.X | Floating-point set equal half exact |
| F.SET.E.32 | Floating-point set equal single |
| F.SET.E.32.X | Floating-point set equal single exact |
| F.SET.E.64 | Floating-point set equal double |
| F.SET.E.64.X | Floating-point set equal double exact |
| F.SET.E.128 | Floating-point set equal quad |
| F.SET.E.128.X | Floating-point set equal quad exact |
| F.SET.GE.16.X | Floating-point set greater or equal half exact |
| F.SET.GE.32.X | Floating-point set greater or equal single exact |
| F.SET.GE.64.X | Floating-ooint set greater or equal double exact |
| F.SET.GE.128.X | Floating-point set greater or equal quad exact |
| F.SET.L.16.X | Floating-point set less half exact |
| F.SET.L.32.X | Floating-point set less single exact |
| F.SET.L.64.X | Floating-point set less double exact |
| F.SET.L.128.X | Floating-point set less quad exact |
| F.SET.NE.16 | Floating-point set not equal half |
| F.SET.NE.16.X | Floating-point set not equal half exact |
| F.SET.NE.32 | Floating-point set not equal single |
| F.SET.NE.32.X | Floating-point set not equal single exact |
| F.SET.NE.64 | Floating-point set not equal double |
| F.SET.NE.64.X | Floating-point set not equal double exact |
| F.SET.NE.128 | Floating-point set not equal quad |
| F.SET.NE.128.X | Floating-point set not equal quad exact |
| F.SET.NGE.16.X | Floating-point set not greater or equal half exact |
| F.SET.NGE.32.X | Floating-point set not greater or equal single exact |
| F.SET.NGE.64.X | Floating-point set not greater or equal double exact |
| F.SET.NGE.128.X | Floating-point set not greater or equal quad exact |
| F.SET.NL.16.X | Floating-point set not or less half exact |
| F.SET.NL.32.X | Floating-point set not or less single exact |
| F.SET.NL.64.X | Floating-point set not or less double exact |
| F.SET.NL.128.X | Floating-point set not or less quad exact |
| F.SET.NUE.16 | Floating-point set not unordered or equal half |
| F.SET.NUE.16.X | Floating-point set not unordered or equal half exact |
| F.SET.NUE.32 | Floating-point set not unordered or equal single |
| F.SET.NUE.32.X | Floating-point set not unordered or equal single exact |
| F.SET.NUE.64 | Floating-point set not unordered or equal double |

(continued)

| | |
|---|---|
| F.SET.NUE.64.X | Floating-point set not unordered or equal double exact |
| F.SET.NUE.128 | Floating-point set not unordered or equal quad |
| F.SET.NUE.128.X | Floating-point set not unordered or equal quad exact |
| F.SET.NUGE.16 | Floating-point set not unordered greater or equal half |
| F.SET.NUGE.32 | Floating-point set not unordered greater or equal single |
| F.SET.NUGE.64 | Floating-point set not unordered greater or equal double |
| F.SET.NUGE.128 | Floating-point set not unordered greater or equal quad |
| F.SET.NUL.16 | Floating-point set not unordered or less half |
| F.SET.NUL.32 | Floating-point set not unordered or less single |
| F.SET.NUL.64 | Floating-point set not unordered or less double |
| F.SET.NUL.128 | Floating-point set not unordered or less quad |
| F.SET.UE.16 | Floating-point set greater or equal half |
| F.SET.UE.16.X | Floating-point set greater or equal half exact |
| F.SET.UE.32 | Floating-point set greater or equal single |
| F.SET.UE.32.X | Floating-point set greater or equal single exact |
| F.SET.UE.64 | Floating-point set greater or equal double |
| F.SET.UE.64.X | Floating-point set greater or equal double exact |
| F.SET.UE.128 | Floating-point set greater or equal quad |
| F.SET.UE.12B.X | Floating-point set greater or equal quad exact |
| F.SET.UGE.16 | Floating-point set unordered greater or equal half |
| F.SET.UGE.32 | Floating-point set unordered greater or equal single |
| F.SET.UGE.64 | Floating-point set unordered greater or equal double |
| F.SET.UGE.128 | Floating-point set unordered greater or equal quad |
| F.SET.UL.16 | Floating-point set unordered or less half |
| F.SET.UL.32 | Floating-point set unordered or less single |
| F.SET.UL.64 | Floating-point set unordered or less double |
| F.SET.UL.128 | Floating-point set unordered or less quad |
| F.SUB.16 | Floating-point subtract half |
| F.SUB.16.C | Floating-point subtract half ceiling |
| F.SUB.16.F | Floating-point subtract half floor |
| F.SUB.16.N | Floating-point subtract half nearest |
| F.SUB.16.T | Floating-point subtract half truncate |
| F.SUB.16.X | Floating-point subtract half exact |
| F.SUB.32 | Floating-point subtract single |
| F.SUB.32.C | Floating-point subtract single ceiling |
| F.SUB.32.F | Floating-point subtract single floor |
| F.SUB.32.N | Floating-point subtract single nearest |
| F.SUB.32.T | Floating-point subtract single truncate |
| F.SUB.32.X | Floating-point subtract single exact |

(continued)

| | |
|---|---|
| F.SUB.64 | Floating-point subtract double |
| F.SUB.64.C | Floating-point subtract double ceiling |
| F.SUB.64.F | Floating-point subtract double floor |
| F.SUB.64.N | Floating-point subtract double nearest |
| F.SUB.64.T | Floating-point subtract double truncate |
| F.SUB.64.X | Floating-point subtract double exact |
| F.SUB.128 | Floating-point subtract quad |
| F.SUB.128.C | Floating-point subtract quad ceiling |
| F.SUB.128.F | Floating-point subtract quad floor |
| F.SUB.128.N | Floating-point subtract quad nearest |
| F.SUB.128.T | Floating-point subtract quad truncate |
| F.SUB.128.X | Floating-point subtract quad exact |

| | op | prec | round/trap |
|---|---|---|---|
| set | SET.<br>E NE<br>UE NUE | 16 32 64 128 | NONE X |
| | SET.<br>NUGE NUL<br>UGE UL | 16 32 64 128 | NONE |
| | SET.<br>L GE<br>NL NGE | 16 32 64 128 | X |
| subtract | SUB | 16 32 64 128 | NONE C F N T X |

*Format*

F.op.prec.round rc=rb,ra

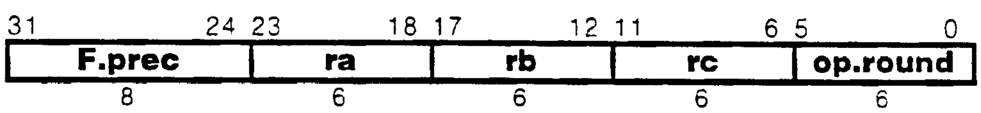


*Description*

The contents of registers or register pairs specified by ra and rb are combined using the specified floating-point operation. The operation is rounded using the specified rounding option or using round-to-nearest if not specified. The result is placed in the register or register pair specified by rc.

If a rounding option is specified, the operation raises a floating-point exception if a floating-point invalid operation, divide by zero, overflow, or underflow occurs, or when specified, if the result is inexact. If a rounding option is not specified, floating-point exceptions are not raised, and are handled according to the default rules of IEEE 754.

If F128 precision is specified, ra, rb and rc refer to an aligned pair of registers, and a reserved instruction exception occurs if the low-order bit of these operands is set.

_Definition_

```
def FloatingPointReversed(op.prec.round.ra.rb.rc) as
a ← F(prec, RegRead(ra, (prec≤64) ? 64 : prec))
b ← F(prec, RegRead(rb, (prec≤64) ? 64 : prec))
if round≠NONE then
    if isSignallingNaN(a) I isSignallingNaN(b)
        raise FloatingPointException
    endif
    case op of
        F.SET.L, F.SET.GE. F.SET.NL. F.SET.NGE:
              if isNaN(a) I isNaN(b) then
                  raise FloatingPointArithmetic
              endif
          others:
      endcase
  endif
  case op of
      F.SUB:
          c ← b-a
      F.SET.NUGE. F.SET.L:
          c ← b!?≥a
      F.SET.NUL, F.SET.GE:
          c ← b!?<a
      F.SET.UGE. F.SET.NL:
          c ← b?≥a
      F.SET.UL. F.SET.NGE:
          c ← b?<a
      F.SET.UE:
          c ←b?=a
      F.SET.NUE:
          c ← b!?=a
      F.SET.E:
          c ← b=a
      F.SET.NE:
          c ← b#a
  endcase
  case op of
      F.SUB:
          destprec ← prec
      F.SET.NUGE. F.SET.NUL. F.SET.UGE. F.SET.UL.
      F.SET.L. F.SET.GE. F.SET.E, F.SET.NE, F.SET.UE. F.SET.NUE:
          destprec ← INT
  endcase
  case round of
      X:
      N:
      T:
      F:
      C:
      NONE:
  endcase
  case destprec of
      16, 32, 64, 128:
          RegWrite(rc, (destprec≤64) : 64 : destprec, PackF(destprec,c))
      INT:
          RegWrite(rc, 64, c)
  endcase
```

```
enddef
Exceptions
Reserved instruction
Floating-point arithmetic
```

*Floating-point Ternary*

These operations perform floating-point arithmetic on three floating-point operands..

*Operation codes*

| | |
|---|---|
| F.MULADD.16 | Floating-point multiply and add half |
| F.MULADD.32 | Floating-point multiply and add single |
| F.MULADD.64 | Floating-point multiply and add double |
| F.MULADD.128 | Floating-point multiply and add quad |
| F.MULSUB.16 | Floating-point multiply and subtract half |
| F.MULSUB.32 | Floating-point multiply and subtract single |
| F.MULSUB.64 | Floating-point multiply and subtract double |
| F.MULSUB.128 | Floating-point multiply and subtract quad |

| | op | prec | | | |
|---|---|---|---|---|---|
| multiply and add | MULADD | 16 | 32 | 64 | 128 |
| multiply and subtract | MULSUB | 16 | 32 | 64 | 128 |

*Format*

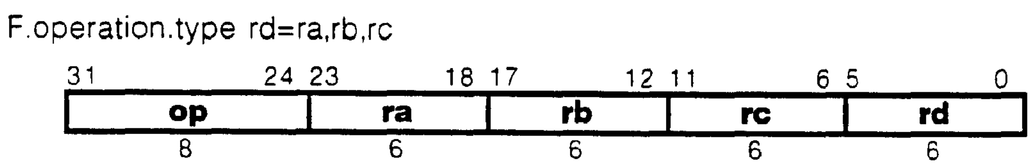


*Description*

The contents of registers or register pairs specified by ra and rb are multiplied together and added to or subtracted from the contents of the register or register pair specified by rc. The result is rounded to the nearest representable floating-point value in a single floating-point operation. The result is placed in the register or register pair specified by rd. Floating-point exceptions are not raised, and are handled according to the default rules of IEEE 754. These instructions cannot select a directed rounding mode or trap on inexact.

If F128 precision is specified, ra, rb, rc and rd refer to an aligned pair of registers, and a reserved instruction exception occurs if the low-order bit of these operands is set.

*Definition*

```
def FloatingPointTernary(op.ra,rb.rc.rd) as
 case op of
     FMULADD16, FMULSUB16:
         prec ← 16
     FMULADD32. FMULSUB32:
         prec ← 32
     FMULADD64. FMULSUB64:
         prec ← 64
     FMULADD128, FMULSUB128:
         prec ← 128
 endcase
 a ← F(prec, RegRead(ra. (prec≤64) ? 64 : prec))
 b ← F(prec. RegRead(rb, (prec≤64) ? 64 : prec))
 c ← F(prec, RegRead(rc. (prec≤64) ? 64 : prec))
 case op of
     FMULADD16, FMULADD32. FMULADD64, FMULADD128:
         d ← a*b+c
     FMULSUB16, FMULSUB32. FMULSUB64. FMULSUB128:
         d ← a*b-c
 endcase
 RegWrite(rd, (prec≤64): 64: prec, PackF(prec.d))
enddef
```

*Exceptions*

Reserved instruction

Floating-point arithmetic

*Floating-point Unary*

These operations perform floating-point arithmetic on one floating-point operand.

*Operation codes*

| | |
|---|---|
| F.ABS.16 | Floating-point absolute value half |
| F.ABS.16.X | Floating-point absolute value half exact |
| F.ABS.32 | Floating-point absolute value single |
| F.ABS.32.X | Floating-point absolute value single exact |
| F.ABS.64 | Floating-point absolute value double |
| F.ABS.64.X | Floating-point absolute value double exact |
| F.ABS.128 | Floating-point absolute value quad |
| F.ABS.128.X | Floating-point absolute value quad exact |
| F.DEFLATE.32 | Floating-point convert half from single |
| F.DEFLATE.32.C | Floating-point convert half from single ceiling |
| F.DEFLATE.32.F | Floating-point convert half from single floor |
| F.DEFLATE.32.N | Floating-point convert half from single nearest |
| F.DEFLATE.32.T | Floating-point convert half from single truncate |
| F.DEFLATE.32.X | Floating-point convert half from single exact |
| F.DEFLATE.64 | Floating-point convert single from double |
| F.DEFLATE.64.C | Floating-point convert single from double ceiling |

(continued)

| | |
|---|---|
| F.DEFLATE.64.F | Floating-point convert single from double floor |
| F.DEFLATE.64.N | Floating-point convert single from double nearest |
| F.DEFLATE.64.T | Floating-point convert single from double truncate |
| F.DEFLATE.64.X | Floating-point convert single from double exact |
| F. DEFLATE. 128 | Floating-point convert double from quad |
| F.DEFLATE.128.C | Floating-point convert double from quad ceiling |
| F.DEFLATE.128.F | Floating-point convert double from quad floor |
| F.DEFLATE.128.N | Floating-point convert double from quad nearest |
| F.DEFLATE.128.T | Floating-point convert double from quad truncate |
| F.DEFLATE.128.X | Floating-point convert double from quad exact |
| F.FLOAT.16 | Floating-point convert half from integer |
| F.FLOAT.16.C | Floating-point convert half from integer ceiling |
| F.FLOAT.16.F | Floating-point convert half from integer floor |
| F.FLOAT.16.N | Floating-point convert half from integer nearest |
| F.FLOAT.16.T | Floating-point convert half from integer truncate |
| F.FLOAT.16.X | Floating-point convert half from integer exact |
| F.FLOAT.32 | Floating-point convert single from integer |
| F.FLOAT.32.C | Floating-point convert single from integer ceiling |
| F.FLOAT.32.F | Floating-point convert single from integer floor |
| F.FLOAT.32.N | Floating-point convert single from integer nearest |
| F.FLOAT.32.T | Floating-point convert single from integer truncate |
| F.FLOAT.32.X | Floating-point convert single from integer exact |
| F.FLOAT.64 | Floating-point convert double from integer |
| F.FLOAT.64.C | Floating-point convert double from integer ceiling |
| F.FLOAT.64.F | Floating-point convert double from integer floor |
| F.FLOAT.64.N | Floating-point convert double from integer nearest |
| F.FLOAT.64.T | Floating-point convert double from integer truncate |
| F.FLOAT.64.X | Floating-point convert double from integer exact |
| F.FLOAT.128 | Floating-point convert quad from integer |
| F.INFLATE.16 | Floating-point convert single from half |
| F.INFLATE.16.X | Floating-point convert single from half exact |
| F.INFLATE.32 | Floating-point convert double from single |
| F.INFLATE.32.X | Floating-point convert double from single exact |
| F.INFLATE.64 | Floating-point convert quad from double |
| F.INFLATE.64.X | Floating-point convert quad from double exact |
| F.NEG.16 | Floating-point negate half |
| F.NEG.16.X | Floating-point negate half exact |
| F.NEG.32 | Floating-point negate single |
| F.NEG.32.X | Floating-point negate single exact |

(continued)

| | |
|---|---|
| F.NEG.64 | Floating-point negate double |
| F.NEG.64.X | Floating-point negate double exact |
| F.NEG.128 | Floating-point negate quad |
| F.NEG.128.X | Floating-point negate quad exact |
| F.SINK.16 | Floating-point convert integer from half |
| F.SINK.16.C | Floating-point convert integer from half ceiling |
| F.SINK.16.F | Floating-point convert integer from half floor |
| F.SINK.16.N | Floating-point convert integer from half nearest |
| F.SINK.16.T | Floating-point convert integer from half truncate |
| F.SINK.16.X | Floating-point convert integer from half exact |
| F.SINK.32 | Floating-point convert integer from single |
| F.SINK.32.C | Floating-point convert integer from single ceiling |
| F.SINK.32.F | Floating-point convert integer from single floor |
| F.SINK.32.N | Floating-point convert integer from single nearest |
| F.SINK.32.T | Floating-point convert integer from single truncate |
| F.SINK.32.X | Floating-point convert integer from single exact |
| F.SINK.64 | Floating-point convert integer from double |
| F.SINK.64.C | Floating-point convert integer from double ceiling |
| F.SINK.64.F | Floating-point convert integer from double floor |
| F.SINK.64.N | Floating-point convert integer from double nearest |
| F.SINK.64.T | Floating-point convert integer from double truncate |
| F.SINK.64.X | Floating-point convert integer from double exact |
| F.SINK.128 | Floating-point convert integer from quad |
| F.SINK.128.C | Floating-point convert integer from quad ceiling |
| F.SINK.128.F | Floating-point convert integer from quad floor |
| F.SINK.128.N | Floating-point convert integer from quad nearest |
| F.SINK.128.T | Floating-point convert integer from quad truncate |
| F.SINK.128.X | Floating-point convert integer from quad exact |
| F.SQR.16 | Floating-point square root half |
| F.SQR.16.C | Floating-point square root half ceiling |
| F.SQR.16.F | Floating-point square root half floor |
| F.SQR.16.N | Floating-point square root half nearest |
| F.SQR.16.T | Floating-point square root half truncate |
| F.SQR.16.X | Floating-point square root half exact |
| F.SQR.32 | Floating-point square root single |
| F.SQR.32.C | Floating-point square root single ceiling |
| F.SQR.32.F | Floating-point square root single floor |
| F.SQR.32.N | Floating-point square root single nearest |
| F.SQR.32.T | Floating-point square root single truncate |

(continued)

| | |
|---|---|
| F.SQR.32.X | Floating-point square root single exact |
| F.SQR.64 | Floating-point square root double |
| F.SQR.64.C | Floating-point square root double ceiling |
| F.SQR.64.F | Floating-point square root double floor |
| F.SQR.64.N | Floating-point square root double nearest |
| F.SQR.64.T | Floating-point square root double truncate |
| F.SQR.64.X | Floating-point square root double exact |
| F.SQR.128 | Floating-point square root quad |
| F.SQR.128.C | Floating-point square root quad ceiling |
| F.SQR.128.F | Floating-point square root quad floor |
| F.SQR.128.N | Floating-point square root quad nearest |
| F.SQR.128.T | Floating-point square root quad truncate |
| F.SQR.128.X | Floating-point square root quad exact |

| | op | prec | | | | round/trap |
|---|---|---|---|---|---|---|
| absolute value | ABS | 16 | 32 | 64 | 128 | NONE X |
| float from integer | FLOAT | 16 | 32 | 64 | | NONE C F N T X |
| | | | | | 128 | NONE |
| integer from float | SINK | 16 | 32 | 64 | 128 | NONE C F N T X |
| increase format precision | INFLATE | 16 | 32 | 64 | | NONE X |
| decrease format precision | DEFLATE | | 32 | 64 | 128 | NONE C F N T X |
| negate | NEG | 16 | 32 | 64 | 128 | NONE X |
| square root | SQR | 16 | 32 | 64 | 128 | NONE C F N T X |

*Format*

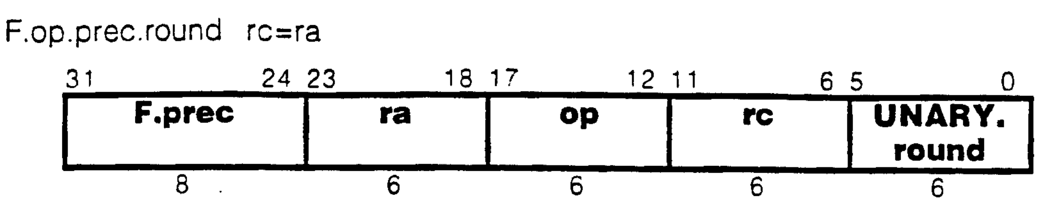


*Description*

The contents of the register or register pair specified by ra is used as the operand of the specified floating-point operation. The operation is rounded using the specified rounding option or using round-to-nearest if not specified. The result is placed in the register or register pair specified by rc.

If a rounding option is specified, the operation raises a floating-point exception if a floating-point invalid operation, divide by zero, overflow, or underflow occurs, or when specified, if the result is inexact. If a rounding option is not specified, floating-point exceptions are not raised, and are handled according to the default rules of IEEE 754.

If F128 precision is specified, ra or rb or both refer to an aligned pair of registers, and a reserved instruction exception occurs if the low-order bit of these operands is set.

*Definition*

```
def FloatingPointUnary(op,prec,round,ra,rb,rc) as
    if op = F.FLOAT then
        a ← RegRead(ra, 64)
    else
        a ← F(prec, RegRead(ra, (prec≤64) ? 64 : prec))
    endif
    case op of
        F.ABS:
            if a < 0 then
                c ← -a
            else
                c ← a
            endif
        F.NEG:
            c ← -a
        F.SQR:
            c ← √a
        F.FLOAT, F.SINK, F.INFLATE, F.DEFLATE:
            c ← a
    endcase
    case op of
        F.ABS, F.NEG, F.SQR, F.FLOAT:
            destprec ← prec
        F.SINK
            destprec ← INT
        F.INFLATE:
            destprec ← prec + prec
        F.DEFLATE:
            destprec ← prec / 2
    endcase
    case round of
        X:
        N:
        T:
        F:
        C:
        NONE:
    endcase
    case destprec of
        16, 32, 64, 128:
            RegWrite(rc, (destprec≤64) : 64 : destprec, PackF(destprec,c))
        INT:
            RegWrite(rc, 64, c)
    endcase
enddef
```

*Exceptions*

Reserved instruction
Floating-point arithmetic

*Group*

These instructions take two operands, perform a group of operations on partitions of bits in the operands, and catenate the results together .

*Operation codes*

| | |
|---|---|
| G.ADD.2 | Group acd pecks |
| G.ADD.4 | Group add nibbles |
| G.ADD.8 | Group add bytes |
| G.ADD.16 | Group add doublets |
| G.ADD.32 | Group add quadlets |
| G.ADD.64 | Group add octlets |
| G.AND[14] | Group and |
| G.ANDN[15] | Group and not |
| G.COMPRESS.1 | Group compress bits |
| G.COMPRESS.2 | Group compress pecks |
| G.COMPRESS.4 | Group compress nibbles |
| G.COMPRESS.8 | Group compress bytes |
| G.COMPRESS.16 | Group compress doublets |
| G.COMPRESS.32 | Group compress quadlets |
| G.COMPRESS.64 | Group compress octlets |
| G.DIV.64 | Group signed divide octlets |
| G.EXPAND.1 | Group signed expand bits |
| G.EXPAND.2 | Group signed expand pecks |
| G.EXPAND.4 | Group signed expand nibbles |
| G.EXPAND.8 | Group signed expand bytes |
| G.EXPAND.16 | Group signed expand doublets |
| G.EXPAND.32 | Group signed expand quadlets |
| G.EXPAND.64 | Group signed expand octlet |
| G.GATHER.2 | Group gather pecks |
| G.GATHER.4 | Group gather nibbles |
| G.GATHER.8 | Group gather bytes |
| G.GATHER.16 | Group gather doublets |
| G.GATHER.32 | Group gather quadlets |
| G.GATHER.64 | Group gather octlets |
| G.GATHER.128[16] | Group gather hexlets |
| G.MUL.1[17] | Group signed multiply bits |
| G.MUL.2 | Group signed multiply pecks |
| G.MUL.4 | Group signed multiply nibbles |

(continued)

| | |
|---|---|
| G.MUL.8 | Group signed multiply bytes |
| G.MUL.16 | Group Signed multiply doublets |
| G.MUL.32 | Group signed multiply quadlets |
| G.MUL.64 | Group signed multiply octlets |
| G.NAND[18] | Group nand |
| G.NOR[19] | Group nor |
| G.OR[20] | Group or |
| G.ORN[21] | Group or not |
| G.POLY.1 | Group polynomial divide bits |
| G.POLY.2 | Group polynomial divide pecks |
| G.POLY.4 | Group polynomial divide nibbles |
| G.POLY.8 | Group polynomial divide bytes |
| G.POLY.16 | Group polynomial divide doublets |
| G.POLY.32 | Group polynomial divide quadlets |
| G.POLY.64 | Group polynomial divide octlets |
| G.ROTL.2 | Group rotate left pecks |
| G.ROTL.4 | Group rotate left nibbles |
| G.ROTL.8 | Group rotate left bytes |
| G.ROTL.16 | Group rotate left doublets |
| G.ROTL.32 | Group rotate left quadlets |
| G.ROTL.64 | Group rotate left octlets |
| G.ROTL.128 | Group rotate left hexlets |
| G.ROTR.2 | Group rotate right pecks |
| G.ROTR.4 | Group rotate right nibbles |
| G.ROTR.8 | Group rotate right bytes |
| G.ROTR.16 | Group rotate right doublets |
| G.ROTR.32 | Group rotate right quadlets |
| G.ROTR.64 | Group rotate right octlets |
| G.ROTR.128 | Group rotate right hexlets |
| G.SCATTER.2 | Group scatter pecks |
| G.SCATTER.4 | Group scatter nibbles |
| G.SCATTER.8 | Group scatter bytes |
| G.SCATTER.16 | Group scatter doublets |
| G.SCATTER.32 | Group scatter quadlets |
| G.SCATTER.64 | Group scatter octlets |
| G.SCATTER.128[22] | Group scatter hexlet |
| G.SHL.2 | Group shift left pecks |
| G.SHL.4 | Group shift left nibbles |
| G.SHL.8 | Group shift left bytes |

(continued)

| | |
|---|---|
| G.SHL.16 | Group shift left doublets |
| G.SHL.32 | Group shift left quadlets |
| G.SHL.64 | Group shift left octlets |
| G.SHL.128 | Group shift left hexlets |
| G.SHR.2 | Group signed shift right pecks |
| G.SHR.4 | Group signed shift right nibbles |
| G.SHR.8 | Group signed shift right bytes |
| G.SHR.16 | Group signed shift right doublets |
| G.SHR.32 | Group signed shift right quadlets |
| G.SHR.64 | Group signed shift right octlets |
| G.SHR.128 | Group signed shift right hexlets |
| G.U.DIV.64 | Group signed divide octlets |
| G.U.EXPAND.1 | Group unsigned expand bits |
| G.U.EXPAND.2 | Group unsigned expand pecks |
| G.U.EXPAND.4 | Group unsigned expand nibbles |
| G.U.EXPAND.8 | Group unsigned expand bytes |
| G.U.EXPAND.16 | Group unsigned expand doublets |
| G.U.EXPAND.32 | Group unsigned expand quadlets |
| G.U.EXPAND.64 | Group unsigned expand octlet |
| G.U.MUL.2 | Group unsigned multiply pecks |
| G.U.MUL.4 | Group unsigned multiply nibbles |
| G.U.MUL.8 | Group unsigned multiply bytes |
| G.U.MUL.16 | Group unsigned multiply doublets |
| G.U.MUL.32 | Group unsigned multiply quadlets |
| G.U.MUL.64 | Group unsigned multiply octlets |
| G.U.SHR.2 | Group unsigned shift right pecks |
| G.U.SHR.4 | Group unsigned shift right nibbles |
| G.U.SHR.8 | Group unsigned shift right bytes |
| G.U.SHR.16 | Group unsigned shift right doublets |
| G.U.SHR.32 | Group unsigned shift right quadlets |
| G.U.SHR.64 | Group unsigned shift right octlets |
| G.U.SHR.128 | Group unsigned shift right hexlets |
| G.XNOR[23] | Group exclusive-nor |

(continued)

| | |
|---|---|
| G.XOR[24] | Group exclusive-or |

[14]G.AND does not require a size specification, and is encoded as G.AND.1.
[15]G.ANDN does not require a size specification, and is encoded as G.ANDN.1. G.ANDN is used as the encoding for G.SET.L.1, and by reversing the operands, for G.SET.UL.1.
[16]G.GATHER.128 is encoded as G.GATHER.1
[17]G.MUL.1 is used as the encoding for G.UMUL.1.
[18]G.NAND does not require a size specification and is encoded as G.NAND.1.
[19]G.NOR does not require a size specification, and is encoded as G.NOR.1.
[20]G.OR does not require a size specification, and is encoded as G.OR.1.
[21]G.ORN does not require a size specification, and is encoded as G.ORN.1. G.ORN is used as the encoding for G.SET.UGE.1, and by reversing the operands, for G.SET.GE.1.
[22]G.SCATTER.128 is encoded as G.SCATTER.1
[23]G.XNOR does not require a size specification, and is encoded as G.XNOR.1. G.XNOR is used as the encoding for G.SET.E.1.
[24]G.XOR does not require a size specification, and is encoded as G.XOR.1. G.XOR is used as the encoding for G.ADD.1, G.SUB.1 and G.SET.NE.1.

| class | op | size | | | | | | | |
|---|---|---|---|---|---|---|---|---|---|
| linear | ADD | | 2 | 4 | 8 | 16 | 32 | 64 | |
| bitwise | AND OR ANDN ORN NAND XNOR NOR XOR | | | | | | | | |
| signed multiply | MUL | 1 | 2 | 4 | 8 | 16 | 32 | 64 | |
| unsigned multiply | U.MUL | | 2 | 4 | 8 | 16 | 32 | 64 | |
| signed divide | DIV | | | | | | | 64 | |
| unsigned divide | U.DIV | | | | | | | 64 | |
| | GATHER SCATTER | | 2 | 4 | 8 | 16 | 32 | 64 | |
| galois field | POLY | 1 | 2 | 4 | 8 | 16 | 32 | 64 | |
| precision | COMPRESS EXPAND U.EXPAND | 1 | 2 | 4 | 8 | 16 | 32 | 64 | |
| shift | ROTR ROTL SHR U.SHR SHL | | 2 | 4 | 8 | 16 | 32 | 64 | 128 |

*Format*

G.op.size rc=ra,rb

| 31 24 | 23 18 | 17 12 | 11 6 | 5 0 |
|---|---|---|---|---|
| **G.size** | **ra** | **rb** | **rc** | **op** |
| 8 | 6 | 6 | 6 | 6 |

*Description*

Two values are taken from the contents of registers or register pairs specified by ra and rb. The specified operation is performed, and the result is placed in the register or register pair specified by rc.

A reserved instruction exception occurs if rco is set, and for certain operations, if $ra_0$ or rbo is set.

*Definition*

```
def Group(op,size,ra,rb,rc)
    case op of
        G.MUL, G.U.MUL, G.DIV, G.U.DIV:
            a ← RegRead(ra, 64)
            b ← RegRead(rb, 64)
        G.ADD, G.SUB, G.SET.L, G.SET.UL, G.SET.E, G.SET.NE, G.SET.GE, G.SET.UGE,
        G.AND, G.OR, G.XOR, G.ANDN, G.NAND, G.NOR, G.XNOR, G.ORN,
        G.GATHER, G.SCATTER:
            a ← RegRead(ra, 128)
            b ← RegRead(rb, 128)
        G.COMPRESS, G.ROTL, G.ROTR, G.SHL, G.SHR, G.U.SHR, G.POLY:
            a ← RegRead(ra, 128)
            b ← RegRead(rb, 64)
        G.EXPAND, G.U.EXPAND:
            a ← RegRead(ra, 64)
```

```
            b ← RegRead(rb, 64)
    endcase
    case op of
        G.ADD:
            for i ← 0 to 128-size by size
                c_{i+size-1..i} ← a_{i+size-1..i} + b_{i+size-1..i}
            endfor
        G.MUL:
            for i ← 0 to 64-size by size
                c_{2*(i+size)-1..2*i} ← (a_{size-1}^{size} || a_{size-1+i..i}) * (b_{size-1}^{size} || b_{size-1+i..i})
            endfor
        G.U.MUL:
            for i ← 0 to 64-size by size
                c_{2*(i+size)-1..2*i} ← (0^{size} || a_{size-1+i..i}) * (0^{size} || b_{size-1+i..i})
            endfor
        G.DIV:
            if (b = 0) or ( (a = (1||0^{63})) and (b = 1^{64}) ) then
                c ← undefined
            else
                q ← a / b
                r ← a - q*b
                c ← r_{63..0} || q_{63..0}
            endif
        G.U.DIV:
            if b = 0 then
                c ← undefined
            else
                q ← (0 || a) / (0 || b)
                r ← a - q*b
                c ← r_{63..0} || q_{63..0}
            endif
        G.AND:
            c ← a and b
        G.OR:
            c ← a or b
        G.XOR:
            c ← a xor b:
        G.ANDN:
            c ← a and not b
        G.NAND:
            c ← not (a and b)
        G.NOR:
            c ← not (a or b)
        G.XNOR:
            c ← not (a xor b)
        G.ORN:
            c ← a or not b
        G.POLY:
            p[0] ← a
            for i ← 1 to size
                p[i] ← (p[i-1]_0 ? (0^{64} || b) : 0^{128}) xor (p[i-1]_0 || p[i-1]_{127..1})
            endfor
            c ← p[size]
        G.GATHER:
            for k ← 0 to 128-size by size
                j ← k
                for i ← k to k+size-1 by 1
```

```
                if a_i then
                    c_j ← b_i
                    j ← j + 1
                endif
            endfor
            j ← k+size-1
            for i ← k+size-1 to k by -1
                if ~a_i then
                    c_j ← b_i
                    j ← j - 1
                endif
            endfor
        endfor
    G.SCATTER:
        for k ← 0 to 128-size by size
            j ← k
            for i ← k to k+size-1 by 1
                if a_i then
                    c_i ← b_j
                    j ← j + 1
                endif
            endfor
            j ← k+size-1
            for i ← k+size-1 to k by -1
                if ~a_i then
                    c_i ← b_j
                    j ← j - 1
                endif
            endfor
        endfor
    G.COMPRESS:
        for i ← 0 to 64-size by size
            c_{i+size-1..i} ← a_{i+i+size-1-(b&(size-1))..i+i+(b&(size-1))}
        endfor
    G.EXPAND:
        for i ← 0 to 64-size by size
            c_{i+i+size+size-1..i+i} ← a_{i+size-1}^{size-(b&(size-1))} || a_{i+size-1..i} || 0^{b&(size-1)}
        endfor
    G.U.EXPAND:
        for i ← 0 to 64-size by size
            c_{i+i+size+size-1..i+i} ← 0^{size-(b&(size-1))} || a_{i+size-1..i} || 0^{b&(size-1)}
        endfor
    G.ROTL:
        for i ← 0 to 128-size by size
            c_{i+size-1..i} ← a_{i+size-1-(b&(size-1))..i} || a_{i+size-1..i+size-1-(b&(size-1))}
        endfor
    G.ROTR:
        for i ← 0 to 128-size by size
            c_{i+size-1..i} ← a_{i+(b&(size-1))-1..i} || a_{i+size-1..i+(b&(size-1))}
        endfor
    G.SHL:
        for i ← 0 to 128-size by size
            c_{i+size-1..i} ← a_{i+size-1-(b&(size-1))..i} || 0^{b&(size-1)}
        endfor
    G.SHR:
```

```
            for i ← 0 to 128-size by size
                c_{i+size-1..i} ← a_{i+size-1}^{b&(size-1)} || a_{i+size-1..i+(b&(size-1))}
            endfor
        G.U.SHR:
            for i ← 0 to 128-size by size
                c_{i+size-1..i} ← 0^{b&(size-1)} || a_{i+size-1..i+(b&(size-1))}
            endfor
    endcase
    case op of
        G.ADD, G.MUL, G.UMUL, G.DIV, G.UDIV:
        G.AND, G.OR, G.XOR, G.ANDN, G.NAND, G.NOR, G.XNOR, G.ORN,
        G.EXPAND G.U.EXPAND, G.SHL, G.SHR, G.U.SHR,
        G.GATHER, G.SCATTER, G.POLY:
            RegWrite(rc, 128, c)
        G.COMPRESS:
            RegWrite(rc, 64, c)
    endcase
enddef
```

*Exceptions*

Reserved Instruction

*Group Extract Immediate*

These operations perform calculations with two general register pair values and a small immediate field, placing the result in a third general register pair.

*Operation codes*

| | |
|---|---|
| G.EXTRACT.I.1 | Group signed extract immediate bits |
| G.EXTRACT.I.2 | Group signed extract immediate pecks |
| G.EXTRACT.I.4 | Group signed extract immediate nibbles |
| G.EXTRACT.I.8 | Group signed extract immediate bytes |
| G.EXTRACT.I.16 | Group signed extract immediate doublets |
| G.EXTRACT.I.32 | Group signed extract immediate quadlets |
| G.EXTRACT.I.64 | Group signed extract immediate octlets |
| G.EXTRACT.I.128 | Group signed extract immediate hexlet |
| G.UEXTRACT.I.1 | Group unsigned extract immediate bits |
| G.UEXTRACT.I.2 | Group unsigned extract immediate pecks |
| G.UEXTRACT.1.4 | Group unsigned extract immediate nibbles |
| G.UEXTRACT.I.8 | Group unsigned extract immediate bytes |
| G.UEXTRACT.I.16 | Group unsigned extract immediate doublets |
| G.UEXTRACT.I.32 | Group unsigned extract immediate quadlets |
| G.UEXTRACT.I.64 | Group unsigned extract immediate octlets |
| G.UEXTRACT.I.128 | Group unsigned extract immediate hexlet |

*Format*

G.EXTRACT.I.size rc=ra,rb,shift

| 31 24 | 23 18 | 17 12 | 11 6 | 5 0 |
|---|---|---|---|---|
| **op** | **ra** | **rb** | **rc** | **ishifta** |
| 8 | 6 | 6 | 6 | 6 |

*Description*

The contents of registers pairs specified by ra, and rb are fetched. The specified operation is performed on these operands. The result is placed into the register pair specified by rc.

*Definition*

```
def GroupExtractImmediate(op,ra,rb,rc,ishifta) as
    a ← RegRead(ra, 128)
    b ← RegRead(rb, 128)
    ab ← a || b
    opimm ← op2..0 || ishifta
    case opimm of
        0..2:
            raise ReservedInstruction
        3..5:
            size ← 1
        6..11:
```

```
                size ← 2
            12..23:
                size ← 4
            24..47:
                size ← 8
            48..95:
                size ← 16
            96..191:
                size ← 32
            192..383:
                size ← 64
            384..511:
                size ← 128
        endcase
        shift ← opimm6..0 & (size+size-1)
        if shift > size then
            sex ← (opimm & (size+size)) ≠ 0
            if sex then
                for i ← 0 to 128-size by size
                    ci+size-1..i ← a^(shift-size)_(i+i+size-size-1) || abi+i+size+size-1..i+i+shift
                endfor
            else
                for i ← 0 to 128-size by size
                    ci+size-1..i ← 0^(shift-size) || abi+i+size+size-1..i+i+shift
                endfor
            endif
        else
            for i ← 0 to 128-size by size
                ci+size-1..i ← abi+i+shift+size-1..i+i+shift
            endfor
        endif
        RegWrite(rc, 128, c)
    enddef
```

*Exceptions*

Reserved instruction

*Group Field Immediate*

These operations perform calculations with one or two general register values and two immediate values, placing the result in a general register.

*Operation codes*

| | |
|---|---|
| G.DEP.I | Group deposit immediate |
| G.MDEP.I | Group merge deposit immediate |
| G.UDEP.I | Group unsigned deposit immediate |
| G.UWTH.I | Group unsigned withdraw immediate |
| G.WTH.I | Group withdraw immediate |

*Format*

op.size rb=ra,ishift,isize

| 31 24 | 23 18 | 17 12 | 11 6 | 5 0 |
|---|---|---|---|---|
| **op** | **ra** | **rb** | **ishifta** | **isizea** |
| 8 | 6 | 6 | 6 | 6 |

*Description*

The contents of register ra, and if specified, the contents of register rb is fetched, and 6-bit immediate values are taken from the 6-bit ishifta and isizea fields. The specified operation is performed on these operands. The result is placed into register rb.

*Definition*

```
def GroupFieldImmediate(op,ra,rb,ishifta,isizea) as
    a ← RegRead(ra, 64)
    case (ishifta & isizea) of
        0..31:
            size ← 64
        32..47:
            size ← 32
        48..55:
            size ← 16
        56..59:
            size ← 8
        60..61:
            size ← 4
        62:
            size ← 2
        63:
            size ← 1
    endcase
    ishift ← ishifta & (size-1)
    isize ← (isizea & (size-1))+1
    if (ishift+isize>size)
        raise ReservedInstruction
    endif
```

```
case op of
    G.DEPI:
        for i ← 0 to 128-size by size
            b_{i+size-1..i} ← a^{size-isize-ishift}_{i+isize-1} || a_{i+isize-1..i} || 0^{ishift}
        endfor
    G.UDEPI:
        for i ← 0 to 128-size by size
            b_{i+size-1..i} ← 0^{size-isize-ishift} || a_{i+isize-1..i} || 0^{ishift}
        endfor
    G.MDEPI:
        m ← RegRead(rb, 128)
        for i ← 0 to 128-size by size
            b_{i+size-1..i} ← m_{i+size-1..i+isize+ishift} || a_{i+isize-1..i} || m_{i+ishift-1..i}
        endfor
    G.WTHI:
        for i ← 0 to 128-size by size
            b_{i+size-1..i} ← a^{size-isize}_{i+isize+ishift-1} || a_{i+isize+ishift-1..i+ishift}
        endfor
    G.UWTHI:
        for i ← 0 to 128-size by size
            b_{i+size-1..i} ← 0^{size-isize} || a_{i+isize+ishift-1..i+ishift}
        endfor
endcase
RegWrite(rb, 128, b)
enddef
```

*Exceptions*

Reserved instruction

*Group Inplace*

These operations perform calculations with three general register values, placing the result in the third general register.

*Operation codes*

| | |
|---|---|
| G.MSHR.2 | Group merge shift right pecks |
| G.MSHR.4 | Group merge shift right nibbles |
| G.MSHR.8 | Group merge shift right bytes |
| G.MSHR.16 | Group merge shift right doublets |
| G.MSHR.32 | Group merge shift right quadlets |
| G.MSHR.64 | Group merge shift right octlets |
| G.MSHR.128 | Group merge shift right hexlets |

*Format*

G.MSHR.size rc=ra,rb,rc

| 31 24 | 23 18 | 17 12 | 11 6 | 5 0 |
|---|---|---|---|---|
| **G.size** | **ra** | **rb** | **rc** | **op** |
| 8 | 6 | 6 | 6 | 6 |

*Description*

The contents of register pairs specified by ra and rc and register rb are fetched. The specified operation is performed on these operands. The result is placed into the register pair specified by rc.

A reserved instruction exception occurs if $ra_0$ or $rc_0$ is set.

*Definition*

```
def GroupTernaryInplace(op,ra,rb,rc) as
    a ← RegRead(ra, 128)
    b ← RegRead(rb, 64)
    c ← RegRead(rc, 128)
    case op of
        G.MSHR:
            for i ← 0 to 128-size by size
                d[i+size-1..i] ← c[i+size-1..i+i+size-1-(b&(size-1))] || a[i+size-1..i+(b&(size-1))]
            endfor
    endcase
    RegWrite(rc, 128, d)
enddef
```

*Exceptions*

Reserved Instruction

*Group Reversed*

These operations take two values from a pair of registers, perform operations on groups of bits in the operands, and place the concatenated results in a register.

*Operation codes*

| | |
|---|---|
| G.SET.E.2 | Group set equal pecks |
| G.SET.E.4 | Group set equal nibbles |
| G.SET.E.8 | Group set equal bytes |
| G.SET.E.16 | Group set equal doublets |
| G.SET.E.32 | Group set equal quadlets |
| G.SET.E.64 | Group set equal octlets |
| G.SET.GE.2 | Group set signed greater or equal pecks |
| G.SET.GE.4 | Group set signed greater or equal nibbles |
| G.SET.GE.8 | Group set signed greater or equal bytes |

(continued)

| | |
|---|---|
| G.SET.GE.16 | Group set signed greater or equal doublets |
| G.SET.GE.32 | Group set signed greater or equal quadlets |
| G.SET.GE.64 | Group set signed greater or equal octlets |
| G.SET.L.2 | Group set signed less pecks |
| G.SET.L.4 | Group set signed less nibbles |
| G.SET.L.8 | Group set signed less bytes |
| G.SET.L.16 | Group set signed less doublets |
| G.SET.L.32 | Group set signed less quadlets |
| G.SET.L.64 | Group set signed less octlets |
| G.SET.NE.2 | Group set not equal pecks |
| G.SET.NE.4 | Group set not equal nibbles |
| G.SET.NE.8 | Group set not equal bytes |
| G.SET.NE.16 | Group set not equal doublets |
| G.SET.NE.32 | Group set not equal quadlets |
| G.SET.NE.64 | Group set not equal octlets |
| G.SET.UGE.2 | Group set unsigned greater or equal pecks |
| G.SET.UGE.4 | Group set unsigned greater or equal nibbles |
| G.SET.UGE.8 | Group set unsigned greater or equal bytes |
| G.SET.UGE.16 | Group set unsigned greater or equal doublers |
| G.SET.UGE.32 | Group set unsigned greater or equal quadlets |
| G.SET.UGE.64 | Group set unsigned greater or equal octlets |
| G.SET.UL.2 | Group set unsigned less pecks |
| G.SET.UL.4 | Group set unsigned less nibbles |
| G.SET.UL.8 | Group set unsigned less bytes |
| G.SET.UL.16 | Group set unsigned less doublets |
| G.SET.UL.32 | Group set unsigned less quadlets |
| G.SET.UL.64 | Group set unsigned less octlets |
| G.SUB.2 | Group subtract pecks |
| G.SUB.4 | Group subtract nibbles |
| G.SUB.8 | Group subtract bytes |
| G.SUB.16 | Group subtract doublets |
| G.SUB.32 | Group subtract quadlets |
| G.SUB.64 | Group subtract octlets |

| class | op | | | size | | | | | |
|---|---|---|---|---|---|---|---|---|---|
| linear | SUB | | | 2 | 4 | 8 | 16 | 32 | 64 |
| boolean | SET.E<br>SET.NE | SET.L<br>SET.UL | SET.GE<br>SET.UGE | 2 | 4 | 8 | 16 | 32 | 64 |

*Format*

G.op.size rc=rb,ra

| 31 24 | 23 18 | 17 12 | 11 6 | 5 0 |
|---|---|---|---|---|
| **G.size** | **ra** | **rb** | **rc** | **op** |
| 8 | 6 | 6 | 6 | 6 |

*Description*

Two values are taken from the contents of registers ra and rb. The specified operation is performed, and the result is placed in register rc.

*Definition*

```
def GroupReversed(op.size,ra,rb,rc)
    a ← RegRead(ra, 128)
    b ← RegRead(rb, 128)
    case op of
        G.SUB:
            for i ← 0 to 128-size by size
                c_{i+size-1..i} ← b_{i+size-1..i} - a_{i+size-1..i}
            endfor
        G.SET.L:
            for i ← 0 to 128-size by size
                c_{i+size-1..i} ← (b_{i+size-1..i} < a_{i+size-1..i})^{size}
            endfor
        G.SET.UL:
            for i ← 0 to 128-size by size
                c_{i+size-1..i} ← (0 || b_{+size-1..i} < 0 || a_{i+size-1..i})^{size}
            endfor
        G.SET.E:
            for i ← 0 to 128-size by size
                c_{i+size-1..i} ← (b_{i+size-1..i} = a_{i+size-1..i})^{size}
            endfor
        G.SET.NE:
            for i ← 0 to 128-size by size
                c_{i+size-1..i} ← (b_{i+size-1..i} ≠ a_{i+size-1..i})^{size}
            endfor
        G.SET.GE:
            for i ← 0 to 128-size by size
                c_{i+size-1..i} ← (b_{i+size-1..i} ≥ a_{i+size-1..i})^{size}
            endfor
        G.SET.UGE:
            for i ← 0 to 128-size by size
                c_{i+size-1..i} ← (0 || b_{i+size-1..i} ≥ 0 || a_{i+size-1..i})^{size}
            endfor
    endcase
    RegWrite(rc, 128, c)
enddef
```

*Exceptions*

Reserved Instruction

*Group Short Immediate*

These operations take operands from a pair of registers, perform operations on groups of bits in the operands, and place the concatenated results in a register or pair of registers.

*Operation codes*

| | |
|---|---|
| G.COMPRESS.I.1 | Group compress immediate bits |
| G.COMPRESS.I.2 | Group compress immediate pecks |
| G.COMPRESS.I.4 | Group compress immediate nibbles |
| G.COMPRESS.I.8 | Group compress immediate bytes |
| G.COMPRESS.I.16 | Group compress immediate doublets |
| G.COMPRESS.I.32 | Group compress immediate quadlets |
| G.COMPRESS.I.64 | Group compress immediate octlet |
| G.EXPAND.I.1 | Group signed expand immediate bits |
| G.EXPAND.I.2 | Group signed expand immediate pecks |
| G.EXPAND.I.4 | Group signed expand immediate nibbles |
| G.EXPAND.I.8 | Group signed expand immediate bytes |
| G.EXPAND.I.16 | Group signed expand immediate doublets |
| G.EXPAND.I.32 | Group signed expand immediate quadlets |
| G.EXPAND.I.64 | Group signed expand immediate octlet |
| G.ROTR.I.2 | Group rotate right immediate pecks |
| G.ROTR.I.4 | Group rotate right immediate nibbles |
| G.ROTR.I.8 | Group rotate right immediate bytes |
| G.ROTR.I.16 | Group rotate right immediate doublets |
| G.ROTR.I.32 | Group rotate right immediate quadlets |
| G.ROTR.I.64 | Group rotate right immediate octlets |
| G.ROTR.I.128 | Group rotate right immediate hexlets |
| G.SHL.I.2 | Group shift left immediate pecks |
| G.SHL.I.4 | Group shift left immediate nibbles |
| G.SHL.I.8 | Group shift left immediate bytes |
| G.SHL.I.16 | Group shift left immediate doublets |
| G.SHL.I.32 | Group shift left immediate quadlets |
| G.SHL.I.64 | Group shift left immediate octlets |
| G.SHL.I.128 | Group shift left immediate hexlets |
| G.SHR.I.2 | Group signed shift right immediate pecks |
| G.SHR.I.4 | Group signed shift right immediate nibbles |
| G.SHR.I.8 | Group signed shift right immediate bytes |

(continued)

| | |
|---|---|
| G.SHR.I.16 | Group signed shift right immediate doublets |
| G.SHR.I.32 | Group signed shift right immediate quadlets |
| G.SHR.I.64 | Group signed shift right immediate octlets |
| G.SHR.I.128 | Group signed shift right immediate hexlets |
| G.SHUFFLE.I | Group shuffle immediate |
| G.SHUFFLE.I.4MUX | Group shuffle immediate and 4-way multiplex |
| G. U.EXPAND.I. 1 | Group unsigned expand immediate bits |
| G.U.EXPAND.I.2 | Group unsigned expand immediate pecks |
| G.U.EXPAND.I.4 | Group unsigned expand immediate nibbles |
| G.U.EXPAND.I.8 | Group unsigned expand immediate bytes |
| G.U.EXPAND.I.16 | Group unsigned expand immediate doublets |
| G.U.EXPAND.I.32 | Group unsigned expand immediate quadlets |
| G.U.EXPAND.I.64 | Group unsigned expand immediate octlet |
| G.U.SHR.I.2 | Group unsigned shift right immediate pecks |
| G.U.SHR.I.4 | Group unsigned shift right immediate nibbles |
| G.U.SHR.I.8 | Group unsigned shift right immediate bytes |
| G.U.SHR.I.16 | Group unsigned shift right immediate doublets |
| G.U.SHR.1.32 | Group unsigned shift right immediate quadlets |
| G.U.SHR.I.64 | Group unsigned shift right immediate octlets |
| G.U.SHR.I.128 | Group unsigned shift right immediate hexlets |

| class | op | | size | | | | | | | |
|---|---|---|---|---|---|---|---|---|---|---|
| precision | COMPRESS.I | EXPAND.I<br>U.EXPAND.1 | 1 | 2 | 4 | 8 | 16 | 32 | 64 | |
| shift | ROTR.I<br>SHR.I | SHL.I<br>U.SHR.1 | | 2 | 4 | 8 | 16 | 32 | 64 | 128 |

*Format*

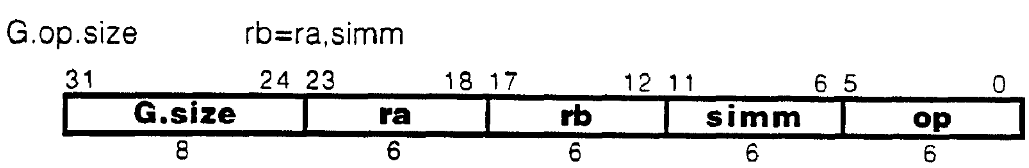


*Description*

A 128-bit value is taken from the contents of the register pair specified by ra. The second operand is taken from simm. The specified operation is performed, and the result is placed in the register pair specified by rb.
This instruction is undefined and causes a reserved instruction exception if the simm field is greater or equal to the size specified.

*Definition*

```
def GroupShortImmediate(op,size,ra,rb,simm)
    case op of
        G.COMPRESS.I, G.U.COMPRESS.I:
            a ← RegRead(ra, 128)
            if simm≥size then
                raise ReservedInstruction
            endif
        G.ROTR.I, G.SHL.I, G.SHR.I, G.U.SHR.I:
            a ← RegRead(ra, 128)
            shift ← op0 || simm
            if shift≥size then
```

```
                raise ReservedInstruction
            endif
        G.EXPAND.I, G.U.EXPAND.I:
            a ← RegRead(ra, 64)
            shift ← op0 || simm
            if shift≥size+size then
                raise ReservedInstruction
            endif
    endcase
    case op of
        G.COMPRESS.I:
            for i ← 0 to 64-size by size
                b[i+size-1..i] ← a[i+i+size-1+simm..i+i+simm]
            endfor
        G.EXPAND.I:
            for i ← 0 to 64-size by size
                b[i+i+size+size-1..i+i] ← a[i+size-1]^(size-shift) || a[i+size-1..i] || 0^shift
            endfor
        G.U.EXPAND.I:
            for i ← 0 to 64-size by size
                b[i+i+size+size-1..i+i] ← 0^(size-shift) || a[i+size-1..i] || 0^shift
            endfor
        G.SHL.I:
            for i ← 0 to 128-size by size
                b[i+size-1..i] ← a[i+size-1-shift..i] || 0^shift
            endfor
        G.SHR.I:
            for i ← 0 to 128-size by size
                b[i+size-1..i] ← a[i+size-1]^shift || a[i+size-1..i+shift]
            endfor
        G.U.SHR.I:
            for i ← 0 to 128-size by size
                b[i+size-1..i] ← 0^shift || a[i+size-1..i+shift]
            endfor
    endcase
    case op of
        G.EXPAND.I, G.U.EXPAND.I, G.SHL.I, G.SHR.I, G.U.SHR.I:
            RegWrite(rb, 128, b)
        G.COMPRESS.I:
            RegWrite(rb, 64, b)
    endcase
enddef
```

*Exceptions*

Reserved Instruction

*Group Short Immediate Inplace*

These operations take operands from two register pairs, perform operations on groups of bits in the operands, and place the concatenated results in the second register pair.

*Operation codes*

| | |
|---|---|
| G.MSHR.I.2 | Group merge shift right immediate pecks |
| G.MSHR.I.4 | Group merge shift right immediate nibbles |
| G.MSHR.I.8 | Group merge shift right immediate bytes |
| G.MSHR.I.16 | Group merge shift right immediate doublets |
| G.MSHR.I.32 | Group merge shift right immediate quadlets |
| G.MSHR.I.64 | Group merge shift right immediate octlets |
| G.MSHR.I.128 | Group merge shift right immediate hexlets |

*Format*

G.op.size rb=ra,simm

| 31 … 24 | 23 … 18 | 17 … 12 | 11 … 6 | 5 … 0 |
|---|---|---|---|---|
| **G.size** | **ra** | **rb** | **simm** | **op** |
| 8 | 6 | 6 | 6 | 6 |

*Description*

Two 128-bit values are taken from the contents of the register pairs specified by ra and rb. A third operand is taken from simm. The specified operation is performed, and the result is placed in the register pair specified by rb.

This instruction is undefined and causes a reserved instruction exception if the simm field is greater or equal to the size specified.

*Definition*

```
def GroupShortImmediateInplace(op,size,ra,rb,simm)
    a ← RegRead(ra, 128)
    b ← RegRead(rb, 128)
    shift ← op0 || simm
    if shift≥size then
        raise ReservedInstruction
    endif
    endcase
    case op of
        G.MSHR.I:
            for i ← 0 to 128-size by size
                c(i+size-1..i) ← b(i+size-1..i+size-1-shift) || a(i+size-1..i+shift)
            endfor
    endcase
    RegWrite(rb, 128, c)
enddef
```

*Exceptions*

Reserved Instruction

*Group Shuffle Immediate*

These operations take operands from a pair of registers, perform operations on groups of bits in the operands, and place the concatenated results in a register or pair of registers.

*Operation codes*

| | |
|---|---|
| G.SHUFFLE.I | Group shuffle immediate |
| G.SHUFFLE.I.4MUX | Group shuffle immediate and 4-way multiplex |

*Format*

op.a.b.c rc=ra,rb

| 31 .. 24 | 23 .. 18 | 17 .. 12 | 11 .. 6 | 5 .. 0 |
|---|---|---|---|---|
| op | ra | rb | rc | simm |
| 8 | 6 | 6 | 6 | 6 |

*Description*

A 128-bit value is taken from the contents of the register pair specified by ra. The second operand is taken from simm. The specified operation is performed, and the result is placed in the register pair specified by re.

This instruction is undefined and causes a reserved instruction exception if the simm field is greater or equal to the size specified.

*Definition*

```
def GroupShuffleImmediate(op,ra,rb,rc,simm)
    case op of
        G.SHUFFLE.I:
            a ← RegRead(ra, 64)
            b ← RegRead(rb, 64)
        G.SHUFFLE.I.4MUX:
            a ← RegRead(ra, 128)
            b ← RegRead(rb, 128)
    endcase
    if simm≥size then
        raise ReservedInstruction
    endif
    case op of
        G.SHUFFLE.I:
            ab ← a || b
            case simm of
                0:
                    c ← ab
                1..56:
                    for x ← 0 to 7; for y ← 0 to x-1; for z ← 1 to x-y
                        if simm = ((x*x*x-3*x*x-4*x)/6-(z*z-z)/2+x*z+y+1) then
                            for i ← 0 to 127
```

```
                                        ci ← ab(i6..x || iy+z-1..y || ix-1..y+z || iy-1..0)
                                    end
                                endif
                            endfor; endfor; endfor
                        57..255:
                            raise ReservedInstruction
                    endcase
                G.SHUFFLE.I.4MUX:
                    case simm of
                        0:
                            t ← a
                        1..56:
                            for x ← 0 to 7; for y ← 0 to x-1; for z ← 1 to x-y
                                if simm = ((x*x*x-3*x*x-4*x)/6-(z*z-z)/2+x*z+y+1) then
                                    for i ← 0 to 127
                                        ti ← a(i6..x || iy+z-1..y || ix-1..y+z || iy-1..0)
                                    end
                                endif
                            endfor; endfor; endfor
                        57..255:
                            raise ReservedInstruction
                    endcase
                    for i ← 0 to 127
                        ci ← t(i6..2 || b(i&63)+64 || bi&63)
                    endfor
            endcase
            RegWrite(rc, 128, c)
        enddef
```

*Exceptions*

Reserved Instruction

*Group Swizzle Immediate*

These operations perform calculations with a general register or register pair value and two immediate values, placing the result in a general register pair.

*Operation codes*

| | |
|---|---|
| G.SWIZZLE.I | Group swizzle immediate |
| G.SWIZZLE.I.COPY | Group swizzle immediate with copy |
| G.SWIZZLE.I.SWAP | Group swizzle immediate with swap |

*Format*

op rb=ra,icopy,iswap

| 31 24 | 23 18 | 17 12 | 11 6 | 5 0 |
|---|---|---|---|---|
| op | ra | rb | icopya | iswapa |
| 8 | 6 | 6 | 6 | 6 |

*Description*

The contents of register ra, or if specified, the contents of the register pair specified by ra is fetched, and 6-bit immediate values are taken from the 6-bit icopya and iswapa fields. The specified operation is performed on these operands. The result is placed into the register pair specified by rb.

*Definition*

```
def GroupSwizzle(op,ra,rb,icopya,iswapa) as
    case op of
        G.SWIZZLE.I:
            a ← RegRead(ra, 128)
            icopy ← 0 || icopya
            iswap ← 0 || iswapa
        G.SWIZZLE.I.COPY:
            a ← 0^64 || RegRead(ra, 64)
            icopy ← 1 || icopya
            iswap ← 0 || iswapa
        G.SWIZZLE.I.SWAP:
            a ← RegRead(ra, 128)
            icopy ← 1 || icopya
            iswap ← 1 || iswapa
    endcase
    for i ← 0 to 127
        b_i ← a_((i & icopy) ^ iswap)
    endfor
    RegWrite(rb, 128, b)
enddef
```

*Exceptions*

Reserved instruction

*Group Ternary*

These operations perform calculations with three general register values, placing the result in a fourth general register.

*Operation codes*

| | |
|---|---|
| G.8MUX | Group 8-way multiplex |
| G.EXTHACT.128 | Group extract hexlet |
| G.MULADD.1[25] | Group signed multiply bits and add pecks |
| G.MULADD.2 | Group signed multiply pecks and add nibbles |

(continued)

| | |
|---|---|
| G.MULADD.4 | Group signed multiply nibbles and add bytes |
| G.MULADD.8 | Group signed multiply bytes and add doublets |
| G.MULADD.16 | Group signed multiply doublets and add quadlets |
| G.MULADD.32 | Group signed multiply quadlets and add octlets |
| G.MULADD.64 | Group signed multiply octlets and add hexlets |
| G.MUX | Group multiplex |
| G.SELECT.8 | Group select bytes |
| G.TRANSPOSE.8MUX | Group transpose and 8-way multiplex |
| G.U.MULADD.2 | Group unsigned multiply pecks and add nibbles |
| G.U.MULADD.4 | Group unsigned multiply nibbles and add bytes |
| G.U.MULADD.8 | Group unsigned multiply bytes and add doublets |
| G.U.MULADD.16 | Group unsigned multiply doublets and add quadlets |
| G.U.MULADD.32 | Group unsigned multiply quadlets and add octlets |
| G.U.MULADD.64 | Group unsigned multiply octlets and add hexlets |
| [25]G.MULADD.1 is used as the encoding for G.UMULADD.1. | |

| class | op | size | | | | | | |
|---|---|---|---|---|---|---|---|---|
| extract | EXTRACT | 128 | | | | | | |
| signed multiply and add | MULADD | 1 | 2 | 4 | 8 | 16 | 32 | 64 |
| unsigned multiply and add | U.MULADD | | 2 | 4 | 8 | 16 | 32 | 64 |
| multiplex | 8MUX TRANSPOSE.8MUX | NONE | | | | | | |
| select | SELECT | 8 | | | | | | |

*Format*

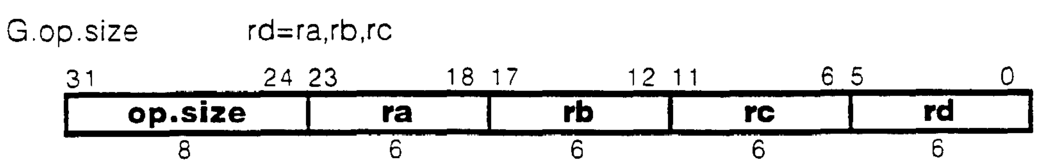


*Description*

The contents of registers or register pairs specified by ra, rb, and rc are fetched. The specified operation is performed on these operands. The result is placed into the register pair specified by rd.

*Definition*

```
def GroupTernary(op,size,ra,rb,rc,rd) as
    case op of
        G.MUX:
            a ← RegRead(ra, 128)
            b ← RegRead(rb, 128)
            c ← RegRead(rc, 128)
        G.EXTRACT, G.8MUX, G.TRANSPOSE.8MUX:
            a ← RegRead(ra, 128)
            b ← RegRead(rb, 128)
            c ← RegRead(rc, 64)
        G.MULADD:
        G.U.MULADD:
            a ← RegRead(ra, 64)
            b ← RegRead(rb, 64)
            c ← RegRead(rc, 128)
        G.SELECT:
            a ← RegRead(ra, 64)
            b ← RegRead(rb, 64)
            c ← RegRead(rc, 64)
    endcase
    case op of
        G.MUX:
            d ← (b and a) or (c andnot a)
        G.8MUX:
            for i ← 0 to 127
                d_{i} ← a_{(i_{6..3} || c_{i&63} || b_{(i&63)+64} || b_{i&63})}
            endfor
        G.TRANSPOSE.8MUX:
            for i ← 0 to 127
                t_{i} ← a_{(i_{6..6} || i_{2..0} || i_{5..3})}
            endfor
            for i ← 0 to 127
                d_{i} ← t_{(i_{6..3} || c_{i&63} || b_{(i&63)+64} || b_{i&63})}
            endfor
        G.EXTRACT:
            d ← (a || b)_{(c&127)+127..(c&127)}
        G.MULADD:
            for i ← 0 to 64-size by size
                d_{2*(i+size)-1..2*i} ← c_{2*(i+size)-1..2*i} +
                        (a_{size-1}^{size} || a_{size-1+i..i}) * (b_{size-1}^{size} || b_{size-1+i..i})
            endfor
        G.U.MULADD:
            for i ← 0 to 64-size by size
                d_{2*(i+size)-1..2*i} ← c_{2*(i+size)-1..2*i} +
                        (0^{size} || a_{size-1+i..i}) * (0^{size} || b_{size-1+i..i})
            endfor
        G.SELECT:
                ab ← a || b
                for i ← 0 to 15
                    j ← c_{4*i+3..4*i}
                    c_{8*i+7..8*i} ← ab_{8*j+7..8*j}
                endfor
        endcase
        RegWrite(rd, 128, d)
    enddef
```

*Exceptions*

Reserved instruction

*Group Floating-point*

These operations take two values from registers, perform floating-point arithmetic on groups of bits in the operands, and place the concatenated results in a register.

*Operation codes*

| | |
|---|---|
| GF.ADD.16 | Group floating-point add half |
| GF.ADD.16.C | Group floating-point add half ceiling |
| GF.ADD.16.F | Group floating-point add half floor |
| GF.ADD.16.N | Group floating-point add half nearest |
| GF.ADD.16.T | Group floating-point add half truncate |
| GF.ADD.16.X | Group floating-point add half exact |
| GF.ADD.32 | Group floating-point add single |
| GF.ADD.32.C | Group floating-point add single ceiling |
| GF.ADD.32.F | Group floating-point add single floor |
| GF.ADD.32.N | Group floating-point add single nearest |
| GF.ADD.32.T | Group floating-point add single truncate |
| GF.ADD.32.X | Group floating-point add single exact |
| GF.ADD.64 | Group floating-point add double |
| GF.ADD.64.C | Group floating-point add double ceiling |
| GF.ADD.64 .F | Group floating-point add double floor |
| GF.ADD.64 .N | Group floating-point add double nearest |
| GF.ADD.64 .T | Group floating-point add double truncate |
| GF.ADD.64 .X | Group floating-point add double exact |
| GF.DIV.16 | Group floating-point divide half |
| GF.DIV.16.C | Group floating-point divide half ceiling |
| GF.DIV.16.F | Group floating-point divide half floor |
| GF.DIV.16.N | Group floating-point divide half nearest |
| GF.DIV.16.T | Group floating-point divide half truncate |
| GF.DIV.16.X | Group floating-point divide half exact |
| GF.DIV.32 | Group floating-point divide single |
| GF.DIV.32.C | Group floating-point divide single ceiling |
| GF.DIV.32.F | Group floating-point divide single floor |
| GF.DIV.32.N | Group floating-point divide single nearest |
| GF.DIV.32.T | Group floating-point divide single truncate |
| GF.DIV.32.X | Group floating-point divide single exact |
| GF.DIV.64 | Group floating-point divide double |

(continued)

| | |
|---|---|
| GF.DIV.64.C | Group floating-point divide double ceiling |
| GF.DIV.64.F | Group floating-point divide double floor |
| GF.DIV.64.N | Group floating-point divide double nearest |
| GF.DIV.64.T | Group floating-point divide double truncate |
| GF.DIV.64.X | Group floating-point divide double exact |
| GF.MUL.16 | Group floating-point multiply half |
| GF.MUL.16.C | Group floating-point multiply half ceiling |
| GF.MUL.16.F | Group floating-point multiply half floor |
| GF.MUL.16.N | Group floating-point multiply halt nearest |
| GF.MUL.16.T | Group floating-point multiply half truncate |
| GF.MUL.16.X | Group floating-point multiply half exact |
| GF.MUL.32 | Group floating-point multiply single |
| GF.MUL.32.C | Group floating-point multiply single ceiling |
| GF.MUL.32.F | Group floating-point multiply single floor |
| GF.MUL.32.N | Group floating-point multiply single nearest |
| GF.MUL.32.T | Group floating-point multiply single truncate |
| GF.MUL.32.X | Group floating-point multiply single exact |
| GF.MUL.64 | Group floating-point multiply double |
| GF.MUL.64.C | Group floating-point multiply double ceiling |
| GF.MUL.64.F | Group floating-point multiply double floor |
| GF.MUL.64.N | Group floating-point multiply double nearest |
| GF.MUL.64.T | Group floating-point multiply double truncate |
| GF.MUL.64.X | Group floating-point multiply double exact |

| | op | prec | | | | round/trap |
|---|---|---|---|---|---|---|
| add | ADD | 16 | 32 | 64 | 128 | NONE C F N T X |
| divide | DIV | 16 | 32 | 64 | 128 | NONE C F N T X |
| multiply | MUL | 16 | 32 | 64 | 128 | NONE C F N T X |

*Format*

GF.op.prec.round rc=ra,rb

| 31 24 | 23 18 | 17 12 | 11 6 | 5 0 |
|---|---|---|---|---|
| GF.prec | ra | rb | rc | op.round |
| 8 | 6 | 6 | 6 | 6 |

*Description*

The contents of registers ra and rb are combined using the specified floaring-point operation. The result is placed in register rc. The operation is rounded using the specified rounding option or using round-to-nearest if not specified. If a rounding option is specified, the operation raises a floating-point exception if a floating point invalid operation, divide by zero, overflow, or underflow occurs, or when specified, if the result is inexact. If a rounding option is not specified, floating-point exceptions are not raised, and are handled according to the default rules of IEEE 754.

*Definition*

```
def GroupFloatingPoint(op,prec,round,ra,rb,rc) as
    a ← RegRead(ra, 128)
    b ← RegRead(rb, 128)
    for i ← 0 to 128-prec by prec
        ai ← F(prec,a_{i+prec-1..i})
        bi ← F(prec,b_{i+prec-1..i})
        if round≠NONE then
```

```
                if isSignallingNaN(ai) | isSignallingNaN(bi)
                    raise FloatingPointException
                endif
                case op of
                    F.DIV:
                        if bi=0 then
                            raise FloatingPointArithmetic
                        endif
                    others:
                endcase
            endif
            case op of
                GF.ADD:
                    ci ← ai+bi
                GF.MUL:
                    ci ← ai*bi
                GF.DIV.:
                    ci ← ai/bi
            endcase
            case op of
                GF.ADD, GF.MUL, GF.DIV:
                    c_{i+prec-1..i} ← PackF(prec, ci)
            endcase
        endfor
        endcase
        case round of
            X:
            N:
            T:
            F:
            C:
            NONE:
        endcase
        if rc0 then
            raise ReservedInstruction
        endif
        RegWrite(rc, 128, c)
        endcase
    enddef
```

*Exceptions*

Reserved instruction
Floating-point arithmetic

*Group Floating-point Reversed*

These operations take two values from registers, perform floating-point arithmetic on groups of bits in the operands, and place the concatenated results in a register.

*Operation codes*

| | |
|---|---|
| GF.SET.E.16 | Group floating-point set equal half |
| GF.SET.E.16.X | Group floating-point set equal half exact |
| GF.SET.E.32 | Group floating-point set equal single |
| GF.SET.E.32.X | Group floating-point set equal single exact |

(continued)

| | |
|---|---|
| GF.SET.E.64 | Group floating-point set equal double |
| GF.SET.E.64.X | Group floating-point set equal double exact |
| GF.SET.GE.16.X | Group floating-point set greater or equal half exact |
| GF.SET.GE.32.X | Group floating-point set greater or equal single exact |
| GF.SET.GE.64.X | Group floating-point set greater or equal double exact |
| GF.SET.L.16.X | Group floating-point set less half exact |
| GF.SET.L.32.X | Group floating-point set less single exact |
| GF.SET.L.64.X | Group floating-point set less double exact |
| GF.SET.NE.16 | Group floating-point set not equal half |
| GF.SET.NE.16.X | Group floating-point set not equal half exact |
| GF.SET.NE.32 | Group floating-point set not equal single |
| GF.SET.NE:32.X | Group floating-point set not equal single exact |
| GF.SET.NE.64 | Group floating-point set not equal double |
| GF.SET.NE.64.X | Group floating-point set not equal double exact |
| GF.SET.NGE.16.X | Group floating-point set not greater or equal half exact |
| GF.SET.NGE.32.X | Group floating-point set not greater or equal single exact |
| GF.SET.NGE.64.X | Group floatiig-coint set not greater or equal double exact |
| GF.SET.NL.16.X | Group floating-point set not less half exact |
| GF.SET.NL.32.X | Group floating-point set not less single exact |
| GF.SET.NL.64.X | Group floating-point set not less double exact |
| GF.SET.NUE.16 | Group floating-point set not unordered or equal half |
| GF.SET.NUE.16.X | Group floating-point set not unordered or equal half exact |
| GF.SET.NUE.32 | Group floating-point set not unordered or equal single |
| GF.SET.NUE.32.X | Group floating-point set not unordered or equal single exact |
| GF.SET.NUE.64 | Group floating-point set not unoraerea or equal double |
| GF.SET.NUE.64.X | Group tloanng-point set not unordered or equal double exact |
| GF.SET.NUGE.16 | Group floating-point set not unordered greater or equal half |
| GF.SET.NUGE.32 | Group floating-point set not unordered greater or equal single |
| GF.SET.NUGE.64 | Group floating-point set not unordered greater or equal double |
| GF.SET.NUL.16 | Group floating-point set not unordered or less half |
| GF.SET.NUL.32 | Group floating-point set not unordered or less single |
| GF.SET.NUL.64 | Group floating-point set not unordered or less double |
| GF.SET.UE.16 | Group floating-point set unordered or equal half |
| GF.SET.UE.16.X | Group floating-point set unordered or equal half exact |
| GF.SET.UE.32 | Group floating-point set unordered or equal single |
| GF.SET.UE.62.X | Group floating-point set unordered or equal single exact |
| GF.SET.UE.64 | Group floating-point set unordered or equal double |
| GF.SET.UE.64.X | Group floating-point set unordered or equal double exact |
| GF.SET.UGE.16 | Group floating-point set unordered greater or equal half |

(continued)

| | |
|---|---|
| GF.SET.UGE.32 | Group floating-point set unordered greater or equal single |
| GF.SET.UGE.64 | Group floating-point set unordered greater or equal double |
| GF.SET.UL.16 | Group floating-point set unordered or less half |
| GF.SET.UL.32 | Group floating-point set unordered or less single |
| GF.SET.UL.64 | Group floating-point set unordered or less double |
| GF.SUB.16 | Group floating-point subtract half |
| GF.SUB.16.C | Group floating-point subtract half ceiling |
| GF.SUB.16.F | Group floating-point subtract half floor |
| GF.SUB.16.N | Group floating-point subtract half nearest |
| GF.SUB.16.T | Group floating-point subtract half truncate |
| GF.SUB.16.X | Group floating-point subtract half exact |
| GF.SUB.32 | Group floating-point subtract single |
| GF.SUB.32.C | Group floating-point subtract single ceiling |
| GF.SUB.32.F | Group floating-point subtract single floor |
| GF.SUB.32.N | Group floating-point subtract single nearest |
| GF.SUB.32.T | Group floating-point subtract single truncate |
| GF.SUB.32.X | Group floating-point subtract single exact |
| GF.SUB.64 | Group floating-point subtract double |
| GF.SUB.64.C | Group floating-point subtract double ceiling |
| GF.SUB.64.F | Group floating-point subtract double floor |
| GF.SUB.64.N | Group floating-point subtract double nearest |
| GF.SUB.64.T | Group floating-point subtract double truncate |
| GF.SUB.64.X | Group floating-point subtract double exact |

| | op | prec | round/trap |
|---|---|---|---|
| set | SET.<br>E NE<br>UE NUE | 16 32 64 | NONE X |
| | SET.<br>NUGE NUL<br>UGE UL | 16 32 64 | NONE |
| | SET.<br>L GE<br>NL NGE | 16 32 64 | X |
| subtract | SUB | 16 32 64 | NONE C F N T X |

*Format*

GF.op.prec.round rc=rb,ra

| 31 24 | 23 18 | 17 12 | 11 6 | 5 0 |
|---|---|---|---|---|
| **GF.prec** | **ra** | **rb** | **rc** | **op.round** |
| 8 | 6 | 6 | 6 | 6 |

*Description*

The contents of registers ra and rb are combined using the specified floating-point operation. The result is placed in register rc. The operation is rounded using the specified rounding option or using round-to-nearest if not specified. If a rounding option is specified, the operation raises a floating-point exception if a floating-point invalid operation, divide by zero, overflow, or underflow occurs, or when specified, if the result is inexact. If a rounding option is not specified, floating-point exceptions are not raised, and are handled according to the default rules of IEEE 754.

*Definition*

```
def GroupFloatingPointReversed(op.prec.round,ra,rb,rc) as
    a ← RegRead(ra, 128)
    b ← RegRead(rb, 128)
    for i ← 0 to 128-prec by prec
        ai ← F(prec,a_{i+prec-1..i})
        bi ← F(prec,b_{i+prec-1..i})
        if round≠NONE then
            if isSignallingNaN(ai) | isSignallingNaN(bi)
                raise FloatingPointException
            endif
            case op of
                GF.SET.L, GF.SET.GE, GF.SET.NL, GF.SET.NGE:
                    if isNaN(ai) | isNaN(bi) then
                        raise FloatingPointArithmetic
                    endif
            endcase
        endif
        case op of
            GF.SUB:
                ci ← bi-ai
            GF.SET.NUGE, GF.SET.L:
                ci ← bi?≥ai
            GF.SET.NUL, GF.SET.GE:
                ci ← bi!?<ai
            GF.SET.UGE, GF.SET.NL:
                ci ← bi?≥ai
            GF.SET.UL, GF.SET.NGE:
                ci ← bi?<ai
            GF.SET.UE:
                ci ← b?=ai
            GF.SET.NUE:
                ci ← bi!?=ai
            GF.SET.E:
                ci ← bi=ai
```

```
                GF.SET.NE:
                    ci ← bi≠ai
            endcase
            case op of
                GF.SUB:
                    ci+prec-1..i ← PackF(prec, ci)
                GF.SET.NUGE, GF.SET.NUL, GF.SET.UGE, GF.SET.UL,
                GF.SET.L, GF.SET.GE, GF.SET.E, GF.SET.NE, GF.SET.UE, GF.SET.NUE:
                    ci+prec-1..i ← ci
            endcase
        endfor
        endcase
        case round of
            X:
            N:
            T:
            F:
            C:
            NONE:
        endcase
        RegWrite(rc, 128, c)
        endcase
    enddef
```

*Exceptions*

Reserved instruction
Floating-point arithmetic

*Group Floating-point Ternary*

These operations perform floating-point arithmetic on three groups of floating-point operands contained in registers.

*Operation codes*

| | |
|---|---|
| GF.MULADD.16 | Group floating-point multiply and add half |
| GF.MULSUB.16 | Group floating-point multiply and subtract half |
| GF.MULADD.32 | Group floating-point multiply and add single |
| GF.MULSUB.32 | Group floating-point multiply and subtract single |
| GF.MULADD.64 | Group floating-point multiply and add double |
| GF.MULSUB.64 | Group floating-point multiply and subtract double |

| | op | prec | | |
|---|---|---|---|---|
| multiply and add | MULADD | 16 | 32 | 64 |
| multiply and subtract | MULSUB | 16 | 32 | 64 |

*Format*

GF.operation.type rd=ra,rb,rc

| 31..24 | 23..18 | 17..12 | 11..6 | 5..0 |
|---|---|---|---|---|
| **op** | **ra** | **rb** | **rc** | **rd** |
| 8 | 6 | 6 | 6 | 6 |

*Description*

The contents of registers ra and rb are taken to represent a group of floating-point operands and pairwise are multiplied together and added to or subtracted from the group of floating-point operands taken from the contents of register rc. The results are concatenated and placed in register. The results are rounded to the nearest representable floating-point value in a single floating-point operation Floating-point exceptions are not raised, and are handled according to the default rules of IEEE 754. These instructions cannot select a directed rounding mode or trap on inexact.

*Definition*

```
def GroupFloatingPointTernary(op,prec,ra,rb,rc,rd) as
    a ← RegRead(ra, 128)
    b ← RegRead(rb, 128)
    c ← RegRead(rc, 128)
    for i ← 0 to 128-prec by prec
        ai ← F(prec,a[i+prec-1..i])
        bi ← F(prec,b[i+prec-1..i])
        ci ← F(prec,c[i+prec-1..i])
        case op of
            GF.MULADD:
                di ← (ai * bi ) + ci
            GF.MULSUB:
                di ← (ai * bi ) - ci
        endcase
        d[i+prec-1..i] ← PackF(prec, di)
    endfor
    RegWrite(re, 128, d)
enddef
```

*Exceptions*

Reserved instruction
Floating-point arithmetic

*Group Floating-point Unary*

These operations take one value from a register, perform floating-point arithmetic on groups of bits in the operands, and place the concatenated results in a register.

*Operation codes*

| | |
|---|---|
| GF.ABS.16 | Group floating-point absolute value half |

(continued)

| | |
|---|---|
| GF.ABS.16.X | Group floating-point absolute value half exact |
| GF.ABS.32 | Group floating-point absolute value single |
| GF.ABS.32.X | Group floating-point absolute value single exact |
| GF.ABS.64 | Group floating-point absolute value double |
| GF.ABS.64.X | Group floating-point absolute value double exact |
| GF.DEFLATE.32 | Group floating-point convert half from single |
| GF.DEFLATE.32.C | Group floating-point convert half from single ceiling |
| GF.DEFLATE.32.F | Group floating-point convert half from single floor |
| GF.DEFLATE.32.N | Group floating-point convert half from single nearest |
| GF.DEFLATE.32.T | Group floating-point convert half from single truncate |
| GF.DEFLATE.32.X | Group floating-point convert half from single exact |
| GF.DEFLATE.64 | Group floating-point convert single from double |
| GF.DEFLATE.64.C | Group floating-point convert single from double ceiling |
| GF.DEFLATE.64.F | Group floating-point convert single from double floor |
| GF.DEFLATE.64.N | Group floating-point convert single from double nearest |
| GF.DEFLATE.64.T | Group floating-point convert single from double truncate |
| GF.DEFLATE.64.X | Group floating-point convert single from double exact |
| GF.FLOAT.16 | Group floating-point convert half from integer |
| GF.FLOAT.16.C | Group floating-point convert half from integer ceiling |
| GF.FLOAT.16.F | Group floating-coint convert half from integer floor |
| GF.FLOAT.16.N | Group floating-point convert half from integer nearest |
| GF.FLOAT.16.T | Group floating-point convert half from integer truncate |
| GF.FLOAT.16.X | Group floating-point convert half from integer exact |
| GF.FLOAT.32 | Group floating-point convert single from integer |
| GF.FLOAT.32.C | Group floating-point convert single from integer ceiling |
| GF.FLOAT.32.F | Group floating-point convert single from integer floor |
| GF.FLOAT.32.N | Group floating-point convert single from integer nearest |
| GF.FLOAT.32.T | Group floating-point convert single from integer truncate |
| GF.FLOAT.32.X | Group floating-point convert single from integer exact |
| GF.FLOAT.64 | Group floating-point convert double from integer |
| GF.FLOAT.64.C | Group floating-point convert double from integer ceiling |
| GF.FLOAT.64.F | Group floating-point convert double from integer floor |
| GF.FLOAT.64.N | Group floating-point convert double from integer nearest |
| GF.FLOAT.64.T | Group floating-point convert double from integer truncate |
| GF.FLOAT.64.X | Group floating-point convert double from integer exact |
| GF.INFLATE.16 | Group floating-point convert single from half |
| GF.INFLATE.16.X | Group floating-point convert single from half exact |
| GF.INFLATE.32 | Group floating-point convert double from single |
| GF.INFLATE.32.X | Group floating-point convert double from single exact |

(continued)

| | |
|---|---|
| GF.NEG.16 | Group floating-point negate half |
| GF.NEG.16.X | Group floating-point negate half exact |
| GF.NEG.32 | Group floating-point negate single |
| GF.NEG.32.X | Group floating-point negate single exact |
| GF.NEG.64 | Group floating-point negate double |
| GF.NEG.64.X | Group floating-point negate double exact |
| GF.SINK.16 | Group floating-point convert integer from half |
| GF.SINK.16.C | Group floating-point convert integer from half ceiling |
| GF.SINK.16.F | Group floating-point convert integer from half floor |
| GF.SINK.16.N | Group floating-pomt convert integer from half nearest |
| GF.SINK.16.T | Group floating-point convert integer from half truncate |
| GF.SINK.16.X | Group floating-point convert integer from half exact |
| GF.SINK.32 | Group floating-point convert integer from single |
| GF.SINK.32.C | Group floating-point convert integer from single ceiling |
| GF.SINK.32.F | Group floating-point convert integer from single floor |
| GF.SINK.32.N | Group floating-point convert integer from single nearest |
| GF.SINK.32.T | Group floating-point convert integer from single truncate |
| GF.SINK.32.X | Group floating-point convert integer from single exact |
| GF.SINK.64 | Group floating-point convert integer from double |
| GF.SINK.64.C | Group floating-point convert integer from double ceiling |
| GF.SINK.64.F | Group floating-point convert integer from double floor |
| GF.SINK.64.N | Group floating-point convert integer from double nearest |
| GF.SINK.64.T | Group floating-point convert integer from double truncate |
| GF.SINK.64.X | Group floating-point convert integer from double exact |
| GF.SQR.16 | Group floating-point square root half |
| GF.SQR.16.C | Group floating-point square root half ceiling |
| GF.SQR.16.F | Group floating-point square root half floor |
| GF.SQR.16.N | Group floating-point square root half nearest |
| GF.SQR.16.T | Group floating-point square root half truncate |
| GF.SQR.16.X | Group floating-point square root half exact |
| GF.SQR.32 | Group floating-point square root single |
| GF.SQR.32.C | Group floating-point square root single ceiling |
| GF.SQR.32.F | Group floating-point square root single floor |
| GF.SQR.32.N | Group floating-point square root single nearest |
| GF.SQR.32.T | Group floating-point square root single truncate |
| GF.SQR.32.X | Group floating-point square root single exact |
| GF.SQR.64 | Group floating-point square root double |
| GF.SQR.64.C | Group floating-point square root double ceiling |
| GF.SQR.64.F | Group floating-point square root double floor |

(continued)

| | |
|---|---|
| GF.SQR.64.N | Group floating-point square root double nearest |
| GF.SQR.64.T | Group floating-point square root double truncate |
| GF.SQR.64.X | Group floating-point square root double exact |

| | op | prec | round/trap |
|---|---|---|---|
| absolute value | ABS | 16 32 64 | NONE X |
| float from integer | FLOAT | 16 32 64 | NONE C F N T X |
| integer from float | SINK | 16 32 64 | NONE C F N T X |
| increase format precision | INFLATE | 16 32 | NONE X |
| decrease format precision | DEFLATE | 32 64 | NONE C F N T X |
| square root | SQR | 16 32 64 | NONE C F N T X |

*Format*

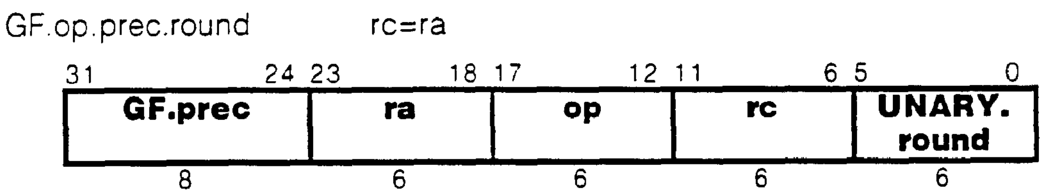


*Description*

The contents of register ra is used as the operand of the specified floating-point operation. The result is placed in register rc. The operation is rounded using the specified rounding option or using round-to-nearest if not specified. If a rounding option is specified, the operation raises a floating-point exception if a floating-point invalid operation, divide by zero, overflow, or underflow occurs, or when specified, if the result is inexact. If a rounding option is not specified, floating-point exceptions are not raised, and are handled according to the default rules of IEEE 754.

*Definition*

```
def GroupFloatingPointUnary(op,prec,round,ra,rb,rc) as
    a ← RegRead(ra, 128)
    case op of
        GF.ABS, GF.NEG, GF.SQR:
            for i ← 0 to 128-prec by prec
                ai ← F(prec,a_{i+prec-1..i})
                case op of
                    GF.ABS:
                        if ai < 0 then
                            ci ← -ai
                        else
                            ci ← ai
                        endif
                    GF.NEG:
                        ci ← -ai
                    GF.SQR:
                        ci ← √ai
                endcase
                c_{i+prec-1..i} ← PackF(prec, ci, round)
            endfor
        GF.SINK:
            for i ← 0 to 128-prec by prec
                ai ← F(prec,a_{i+prec-1..i})
                c_{i+prec-1..i} ← ai
            endfor
        GF.FLOAT:
            for i ← 0 to 128-prec by prec
                ai ← a_{i+prec-1..i}
                c_{i+prec-1..i} ← PackF(prec,ai, round)
            endfor
        GF.INFLATE:
            for i ← 0 to 64-prec by prec
                ai ← F(prec,a_{i+prec-1..i})
                c_{i+i+prec+prec-1..i+i} ← PackF(prec+prec,ai, round)
            endfor
        GF.DEFLATE:
            for i ← 0 to 128-prec by prec
                ai ← F(prec,a_{i+prec-1..i})
                c_{i/2+prec/2-1..i/2} ← PackF(prec/2,ai, round)
            endfor
    endcase
    REC[rc] ← c
enddef
```

*Exceptions*

Reserved instruction

Floating-point arithmetic

*Load*

These operations add the contents of two registers to produce a virtual address, load data from memory, sign- or zero-extending the data to fill the destination register.

*Operation codes*

| | |
|---|---|
| L.8[26] | Load signed byte |
| L.16.B | Load signed doublet big-endian |
| L.16.B.A | Load signed doublet big-endian aligned |
| L.16.L | Load signed doublet little-endian |
| L.16.L.A | Load signed doublet little-endian aligned |
| L.32.B | Load signed quadlet big-endian |
| L.32.B.A | Load signed quadlet big-endian aligned |
| L.32.L | Load signed quadlet little-endian |
| L.32.L.A | Load signed quadlet little-endian aligned |
| L.64.B[27] | Load octlet big-endian |
| L.64.B.A[28] | Load octlet big-endian aligned |
| L.64.L[29] | Load octlet little-endian |
| L.64.L.A[30] | Load octlet little-endian aligned |
| L.128.B[31] | Load hexlet big-endian |
| L.128.B.A[32] | Load hexlet big-endian aligned |
| L.128.L[33] | Load hexlet little-endian |
| L.128.L.A[34] | Load hexlet little-endian aligned |
| L.U.8[35] | Load unsigned byte |
| L.U.16.B | Load unsigned doublet big-endian |
| L.U.16.B.A | Load unsigned doublet big-endian aligned |
| L.U.16.L | Load unsigned doublet little-endian |
| L.U.16.L.A | Load unsigned doublet little-endian aligned |
| L.U.32.B | Load unsigned quadlet big-endian |
| L.U.32.B.A | Load unsigned quadlet big-endian aligned |
| L.U.32.L | Load unsigned quadlet little-endian |
| L.U.32.L.A | Load unsigned quadlet little-endian aligned |
| L.U.64.B | Load unsigned octlet big-endian |
| L.U.64.B.A | Load unsigned octlet big-endian aligned |
| L.U.64.L | Load unsigned octlet little-endian |

(continued)

| | |
|---|---|
| L.U.64.L.A | Load unsigned octlet little-endian aligned |

[26]L.8 need not distinguish between little-endian and big-endian ordering, nor between aligned and unaligned, as only a single byte is loaded.
[27]L.64.B need not distinguish between signed and unsigned, as the octlet fills the destination register.
[28]L.64.B.A need not distinguish between signed and unsigned, as the octlet fills the destination register.
[29]L.64.L need not distinguish between signed and unsigned, as the octlet fills the destination register.
[30]L.64.L.A need not distinguish between signed and unsigned, as the octlet fills the destination register.
[31]L.128.B need not distinguish between signed and unsigned, as the hexlet fills the destination register pair.
[32]L.128.B.A need not distinguish between signed and unsigned, as the hexlet fills the destination register pair.
[33]L.128.L need not distinguish between signed and unsigned, as the hexlet fills the destination register pair.
[34]L.128.L.A need not distinguish between signed and unsigned, as the hexlet fills the destination register pair.
[35]L.U8 need not distinguish between little-endian and big-endian ordering, nor between aligned and unaligned, as only a single byte is loaded.

| number format | type | size | ordering | alignment |
|---|---|---|---|---|
| signed byte | | 8 | | |
| unsigned byte | U | 8 | | |
| signed integer | | 16 32 64 | L B | |
| signed integer aligned | | 16 32 64 | L B | A |
| unsigned integer | U | 16 32 64 | L B | |
| unsigned integer aligned | U | 16 32 64 | L B | A |
| register | | 128 | L B | |
| register aligned | | 128 | L B | A |

*Format*

op rc=ra,rb

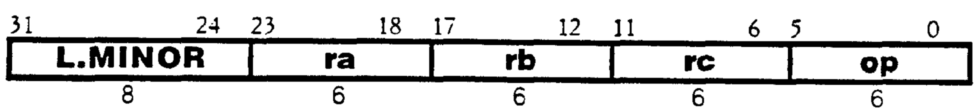


*Description*

A virtual address is computed from the sum of the contents of register ra and register rb. The contents of memory using the specified byte order is treated as the size specified and zero-extended or sign-extended as specified, and placed into register rb.

If alignment is specified, the computed virtual address must be aligned, that is, it must be an exact multiple of the size expressed in bytes. If the address is not aligned an "access disallowed by virtual address" exception occurs.

*Definition*

```
def Load(op,ra,rb,rc) as
    case op of
        L16L, L32L, L8, L16LA, L32LA, L16B, L32B, L16BA, L32BA,
        L64L, L64LA, L64B, L64BA:
            signed ← true
        LU16L, LU32L, LU8, LU16LA, LU32LA, LU16B, LU32B, LU16BA, LU32BA,
        LU64L, LU64LA, LU64B, LU64BA:
            signed ← false
        L128L, L128LA, L128B, L128BA:
```

```
                signed ← undefined
        endcase
        case op of
            L8, LU8:
                size ← 8
            L16L, LU16L, L16LA, LU16LA, L16B, LU16B, L16BA, LU16BA:
                size ← 16
            L32L, LU32L, L32LA, LU32LA, L32B, LU32B, L32BA, LU32BA:
                size ← 32
            L64L, LU64L, L64LA, LU64LA, L64B, LU64B, L64BA, LU64BA:
                size ← 64
            L128L, L128LA, L128B, L128BA:
                size ← 128
        endcase
        case op of
            L16L, LU16L, L32L, LU32L, L64L, LU64L, L128L,
            L16LA, LU16LA, L32LA, LU32LA, L64LA, LU64LA, L128LA:
                order ← L
            L16B, LU16B, L32B, LU32B, L64B, LU64B, L128B,
            L16BA, LU16BA, L32BA, LU32BA, L64BA, LU64BA, L128BA:
                order ← B
            L8, LU8:
                order ← undefined
        endcase
        case op of
            L16L, LU16L, L32L, LU32L, L64L, LU64L, L128L,
            L16B, LU16B, L32B, LU32B, L64B, LU64B, L128B:
                align ← false
            L16LA, LU16LA, L32LA, LU32LA, L64LA, LU64LA, L128LA,
            L16BA, LU16BA, L32BA, LU32BA, L64BA, LU64BA, L128BA:
                align ← true
            L8, LU8:
                align ← undefined
        endcase
        a ← RegRead(ra, 64)
        b ← RegRead(rb, 64)
        VirtAddr ← a + b
        if align then
            if (VirtAddr and ((size/8)-1)) ≠ 0 then
                raise AccessDisallowedByVirtualAddress
            endif
        endif
        m ← LoadMemory(VirtAddr,size,order)
        mx ← (m_{size-1} and signed)^{128-size} || m
        case size of
            8, 16, 32, 64:
                RegWrite(rc, 64, mx_{63..0})
            128:
                RegWrite(rc, 128, mx)
        endcase
    enddef
```

*Exceptions*

Reserved instruction

Access disallowed by virtual address
Access disallowed by tag
Access disallowed by global TLB
Access disallowed by local TLB
Access detail required by tag
Access detail required by local TLB

Access detail required by global TLB
Cache coherence intervention required by tag
Cache coherence intervention required by local TLB
Cache coherence intervention required by global TLB Local TLB miss
Global TLB miss

*Load Immediate*

These operations add the contents of a register to a sign-extended immediate value to produce a virtual address, load data from memory, sign- or zero-extending the data to fill the destination register.

*Operation codes*

| | |
|---|---|
| L.8.I[36] | Load signed byte immediate |
| L.16.B.A.I | Load signed doublet big-endian aligned immediate |
| L.16.B.I | Load signed doublet big-endian immediate |
| L.16.L.A.I | Load signed doublet little-endian aligned immediate |
| L.16.L.I | Load signed doublet little-endian immediate |
| L.32.B.A.I | Load signed quadlet big-endian aligned immediate |
| L.32.B.I | Load signed quadlet big-endian immediate |
| L.32.L.A.I | Load signed quadlet little-endian aligned immediate |
| L.32.L.I | Load signed quadlet little-endian immediate |
| L.64.B.A.I[37] | Load octlet big-endian aligned immediate |
| L.64.B.I[38] | Load octlet big-endian immediate |
| L.64.L.A.I[39] | Load octlet little-endian aligned immediate |
| L.64.L.I[40] | Load octlet little-endian immediate |
| L.128.B.A.I[41] | Load hexlet big-endian aligned immediate |
| L.128.B.I[42] | Load hexlet big-endian immediate |
| L.128.L.A.I[43] | Load hexlet little-endian aligned immediate |
| L.128.L.I[44] | Load hexlet little-endian immediate |
| L.U.8.I[45] | Load unsigned byte immediate |
| L.U.16.B.A.I | Load unsigned doublet big-endian aligned immediate |
| L.U.16.B.I | Load unsigned doublet big-endian immediate |

(continued)

| | |
|---|---|
| L.U.16.L.A.I | Load unsigned doublet little-endian aligned immediate |

[36]L.8.I need not distinguish between little-endian and big-endian ordering, nor between aligned and unaligned, as only a single byte is loaded.
[37]L.64.B.A.I need not distinguish between signed and unsigned, as the octlet fills the destination register.
[38]L.64.B.I need not distinguish between signed and unsigned, as the octlet fills the destination register.
[39]L.64.L.A.I need not distinguish between signed and unsigned, as the octlet fills the destination register.
[40]L.64.L.I need not distinguish between signed and unsigned, as the octlet fills the destination register.
[41]L.128.B.A.I need not distinguish between signed and unsigned, as the hexlet fills the destination register pair.
[42]L.128.B.I need not distinguish between signed and unsigned, as the hexlet fills the destination register pair.
[43]L.128.L.A.I need not distinguish between signed and unsigned, as the hexlet fills the destination register pair.
[44]L.128.L.I need not distinguish between signed and unsigned, as the hexlet fills the destination register pair.
[45]L.U8.I need not distinguish between little-endian and big-endian ordering, nor between aligned and unaligned, as only a single byte is loaded.

| | |
|---|---|
| L.U.16.L.I | Load unsigned doublet little-endian immediate |
| L.U.32.B.A.I | Load unsigned quadlet big-endian aligned immediate |
| L.U.32.B.I | Load unsigned quadlet big-endian immediate |
| L.U.32.L.A.I | Load unsigned quadlet little-endian aligned immediate |
| L.U.32.L.1 | Load unsigned quadlet little-endian immediate |
| L.U.64.B.A.I | Load unsigned octlet big-endian aligned immediate |
| L.U.64.B.I | Load unsigned octlet big-endian immediate |
| L.U.64.L.A.I | Load unsigned octlet little-endian aligned immediate |
| L.U.64.L.I | Load unsigned octlet little-endian immediate |

| number format | type | size | | | ordering | | alignment |
|---|---|---|---|---|---|---|---|
| signed byte | | 8 | | | | | |
| unsigned byte | U | 8 | | | | | |
| signed integer | | 16 | 32 | 64 | L | B | |
| signed integer aligned | | 16 | 32 | 64 | L | B | A |
| unsigned integer | U | 16 | 32 | 64 | L | B | |
| unsigned integer aligned | U | 16 | 32 | 64 | L | B | A |
| register | | 128 | | | L | B | |
| register aligned | | 128 | | | L | B | A |

*Format*

op rb=ra,offset

| 31 24 | 23 18 | 17 12 | 11 0 |
|---|---|---|---|
| **op** | **ra** | **rb** | **offset** |
| 8 | 6 | 6 | 12 |

*Description*

A virtual address is computed from the sum of the contents of register ra and the sign-extended value of the offset field. The contents of memory using the specified byte order is treated as the size specified and zero-extended or sign-extended as specified, and placed into register rb.

If alignment is specified, the computed virtual address must be aligned, that is, i must be an exact multiple of the size expressed in bytes. If the address is no aligned an "access disallowed by virtual address" exception occurs.

*Definition*

```
def LoadImmediate(op,ra,rb,offset) as
    case op of
        L16LI, L32LI, L8I, L16LAI, L32LAI, L16BI, L32BI, L16BAI, L32BAI:
        L64LI, L64LAI, L64BI, L64BAI:
            signed ← true
        LU16LI, LU32LI, LU8I, LU16LAI, LU32LAI,
        LU16BI, LU32BI, LU16BAI, LU32BAI:
        LU64LI, LU64LAI, LU64BI, LU64BAI:
            signed ← false
        L128LI, L128LAI, L128BI, L128BAI:
```

```
                signed ← undefined
        endcase
        case op of
            L8I, LU8I:
                size ← 8
            L16LI, LU16LI, L16LAI, LU16LAI, L16BI, LU16BI, L16BAI, LU16BAI:
                size ← 16
            L32LI, LU32LI, L32LAI, LU32LAI, L32BI, LU32BI, L32BAI, LU32BAI:
                size ← 32
            L64LI, LU64LI, L64LAI, LU64LAI, L64BI, LU64BI, L64BAI, LU64BAI:
                size ← 64
            L128LI, L128LAI, L128BI, L128BAI:
                size ← 128
        endcase
        case op of
            L16LI, LU16LI, L32LI, LU32LI, L64LI, LU64LI, L128LI,
            L16BI, LU16BI, L32BI, LU32BI, L64BI, LU64BI, L128BI:
                align ← false
            L16LAI, LU16LAI, L32LAI, LU32LAI, L64LAI, LU64LAI, L128LAI,
            L16BAI, LU16BAI, L32BAI, LU32BAI, L64BAI, LU64BAI, L128BAI:
                align ← true
            L8I, LU8I:
                align ← undefined
        endcase
        case op of
            L16LI, LU16LI, L32LI, LU32LI, L64LI, LU64LI, L128LI,
            L16LAI, LU16LAI, L32LAI, LU32LAI, L64LAI, LU64LAI, L128LAI:
                order ← L
            L16BI, LU16BI, L32BI, LU32BI, L64BI, LU64BI, L128BI,
            L16BAI, LU16BAI, L32BAI, LU32BAI, L64BAI, LU64BAI, L128BAI:
                order ← B
            L8I, LU8I:
                order ← undefined
        endcase
        a ← RegRead(ra, 64)
        VirtAddr ← a + (offset_11^52 || offset)
        if align then
            if (VirtAddr and ((size/8)-1)) ≠ 0 then
                raise AccessDisallowedByVirtualAddress
            endif
        endif
        b ← LoadMemory(VirtAddr,size,order)
        bx ← (b_size-1 and signed)^128-size || b
        RegWrite(rb, 64, bx)
    enddef
```

*Exceptions*

Reserved instruction

Access disallowed by virtual address
Access disallowed by tag
Access disallowed by global TLB
Access disallowed by local TLB
Access detail required by tag
Access detail required by local TLB
Access detail required by global TLB
Cache coherence intervention required by tag
Cache coherence intervention required by local TLB
Cache coherence intervention required by global TLB Local TLB miss
Global TLB miss

*Store*

These operations add the contents of two registers to produce a virtual address, and store the contents of a register into memory.

*Operation codes*

| | |
|---|---|
| S.8[46] | Store byte |
| S.16.B | Store double big-endian |
| S.16.B.A | Store double big-endian aligned |
| S.16.L | Store double little-endian |
| S.16.L.A | Store double little-endian aligned |
| S.32.B | Store quadlet big-endian |
| S.32.B.A | Store quadlet big-endian aligned |
| S.32.L | Store quadlet little-endian |
| S.32.L.A | Store quadlet little-endian aligned |
| S.64.B | Store octlet big-endian |
| S.64.B.A | Store octlet big-endian aligned |
| S.64.L | Store octlet little-endian |
| S.64.L.A | Store octlet little-endian aligned |
| S.128.B | Store hexlet big-endian |
| S.128.B.A | Store hexlet big-endian aligned |
| S.128.L | Store hexlet little-endian |
| S.128.L.A | Store hexiet little-endian aligned |
| S.AAS.64.B.A | Store add-and-swap octlet big-endian aligned |
| S.AAS.64.L.A | Store add-and-swap octlet little-endian aligned |
| S.CAS.64.B.A | Store compare-and-swap octlet big-endian aligned |
| S.CAS.64.L.A | Store compare-ana-swap octlet little-endian aligned |
| S.MAS.64.B.A | Store multiplex-and-swap octlet big-endian aligned |
| S.MAS.64.L.A | Store multiplex-and-swap octlet little-endian aligned |
| S.MUX.64.B.A | Store multiplex octlet big-endian aligned |
| S.MUX.64.L.A | Store multiplex octlet little-endian aligned |
| [46]S.8 need not specify byte ordering, nor need it specify alignment checking, as it stores a single byte. | |

| size | | | | ordering | | alignment |
|---|---|---|---|---|---|---|
| 8 | | | | | | |
| 16 | 32 | 64 | 128 | L | B | |
| 16 | 32 | 64 | 128 | L | B | A |

*Format*

op ra,rb,rc

| 31 24 | 23 18 | 17 12 | 11 6 | 5 0 |
|---|---|---|---|---|
| **S.MINOR** | **ra** | **rb** | **rc** | **op** |
| 8 | 6 | 6 | 6 | 6 |

*Description*

A virtual address is computed from the sum of the contents of register ra and register rb. The contents of register rc, treated as the size specified, is stored in memory using the specified byte order.

If alignment is specified, the computed virtual address must be aligned, that is, it must be an exact multiple of the size expressed in bytes. If the address is not aligned an "access disallowed by virtual address" exception occurs.

*Definition*

```
def Store(op.ra.rb.rc) as
    case op of
        S8,
        S16L. S16LA. S16B, S16BA,
        S32L. S32LA. S32B. S32BA,
        S64L. S64LA. S64B. S64BA,
        S128L. S128LA. S128B. S128BA:
            function ← NONE
        SAAS64BA. SAAS64LA:
            function ← AAS
        SCAS64BA. SCAS64LA:
            function ← CAS
        SMAS64BA. SMAS64LA:
            function ← MAS
        SMUX64BA. SMUX64LA:
            function ← MUX
    endcase
    case op of
        S8:
            size ← 8
        S16L, S16LA. S16B, S16BA:
            size ← 16
        S32L. S32LA, S32B, S32BA:
            size ← 32
        S64L. S64LA, S64B, S64BA,
        SAAS64BA, SAAS64LA:
            size ← 64
        SCAS64BA, SCAS64LA, SMAS64BA, SMAS64LA, SMUX64BA, SMUX64LA:
            size ← 64
        S128L. S128LA, S128B, S128BA:
            size ← 128
    endcase
    case op of
        S8,
        S16L, S16LA. S16B. S16BA,
        S32L. S32LA. S32B. S32BA,
```

```
        S64L, S64LA, S64B, S64BA,
        SAAS64BA, SAAS64LA:
            rsize ← 64
        SCAS64BA, SCAS64LA, SMAS64BA, SMAS64LA, SMUX64BA, SMUX64LA:
            rsize ← 128
        S128L, S128LA, S128B, S128BA:
            rsize ← 128
    endcase
    case op of
        S8:
            align ← undefined
        S16L, S32L, S64L, S128L,
        S16B, S32B, S64B, S128B:
            align ← false
        S16LA, S32LA, S64LA, S128LA,
        S16BA, S32BA, S64BA, S128BA,
        SAAS64BA, SAAS64LA, SCAS64BA, SCAS64LA,
        SMAS64BA, SMAS64LA, SMUX64BA, SMUX64LA:
            align ← true
    endcase
    case op of
        S8:
            order ← undefined
        S16L, S32L, S64L, S128L,
        S16LA, S32LA, S64LA, S128LA,
        SAAS64LA, SCAS64LA, SMAS64LA, SMUX64LAI:
            order ← L
        S16B, S32B, S64B, S128B,
        S16BA, S32BA, S64BA, S128BA,
        SAAS64BA, SCAS64BA, SMAS64BA, SMUX64BAI:
            order ← B
    endcase
    a ← RegRead(ra, 64)
    b ← RegRead(rb, 64)
    VirtAddr ← a + b
    if align then
        if (VirtAddr and ((size/8)-1)) ≠ 0 then
            raise AccessDisallowedByVirtualAddress
        endif
    endif
    m ← RegRead(rc, rsize)
    case function of
        NONE:
            StoreMemory(VirtAddr,size,order,m_size-1..0)
        AAS:
            c ← LoadMemory(VirtAddr,size,order)
            StoreMemory(VirtAddr,size,order,m_63..0+c)
            RegWrite(rc, 64, c)
        CAS:
            c ← LoadMemory(VirtAddr,size,order)
            if (c = m_63..0) then
                StoreMemory(VirtAddr,size,order,m_127..64)
            endif
            RegWrite(rc, 64, c)
        MAS:
            c ← LoadMemory(VirtAddr,size,order)
            n ← (m_127..64 & m_63..0) | (c & ~m_63..0)
            StoreMemory(VirtAddr,size,order,n)
```

```
                RegWrite(rc, 64, c)
            MUX:
                c ← LoadMemory(VirtAddr,size,order)
                n ← (m127..64 & m63..0) | (c & ~m63..0)
                StoreMemory(VirtAddr,size,order,n)
        endcase
    enddef
```

*Exceptions*

Reserved instruction

Access disallowed by virtual address
Access disallowed by tag
Access disallowed by global TLB
Access disallowed by local TLB
Access detail required by tag
Access detail required by local TLB
Access detail required by global TLB
Cache coherence intervention required by tag
Cache coherence intervention required by local TLB
Cache coherence intervention required by global TLB
Local TLB miss
Global TLB miss

*Store Immediate*

These operations add the contents of a register to a sign-extended immediate value to produce a virtual address, and store the contents of a registerinto memory.

*Operation codes*

| | |
|---|---|
| S.8.I[47] | Store byte immediate |
| S.16.B.A.I | Store double big-endian aligned immediate |
| S.16.B.I | Store double big-endian immediate |
| S.16.L.A.I | Store double little-endian aligned immediate |
| S.16.L.I | Store double little-endian immediate |
| S.32.B.A.I | Store quadlet big-endian aligned immediate |
| S.32.B.I | Store quadlet big-endian immediate |
| S.32.L.A.I | Store quadlet little-endian aligned immediate |
| S.32.L.I | Store quadlet little-endian immediate |
| S.64.B.A.I | Store octlet big-endian aligned immediate |
| S.64.B.1 | Store octlet big-endian immediate |
| S.64.L.A.I | Store octlet little-endian aligned immediate |
| S.64.L.I | Store octlet little-endian immediate |
| S.128.B.A.I | Store hexlet big-endian aligned immediate |
| S.128.B.I | Store hexlet big-endian immediate |

(continued)

| | |
|---|---|
| S.128.L.A.I | Store hexlet little-endian aligned immediate |
| S.128.L.I | Store hexlet little-endian immediate |
| S.AAS.64.B.A.I | Store add-and-swap octlet big-endian aligned immediate |
| S.AAS.64.L.A.I | Store add-and-swap octlet little-endian aligned immediate |
| S.CAS.64.B.A.I | Store compare-and-swap octlet big-endian aligned immediate |
| S.CAS.64.L.A.I | Store compare-and-swap octlet little-endian aligned immediate |
| S.MAS.64.B.A.I | Store multiplex-and-swap octlet big-endian aligned immediate |
| S.MAS.64.L.A.I | Store multiplex-and-swap octlet little-endian aligned immediate |
| S.MUX.64.B.A.I | Store multiplex octlet big-endian aligned immediate |
| S.MUX.64.L.A.I | Store multiplex octlet little-endian aligned immediate |
| [47]S.8.I need not specify byte ordering, nor need it specify alignment checking, as it stores a single byte, | |

| size | | | | ordering | | alignment |
|---|---|---|---|---|---|---|
| 8 | | | | | | |
| 16 | 32 | 64 | 128 | L | B | |
| 16 | 32 | 64 | 128 | L | B | A |

*Format*

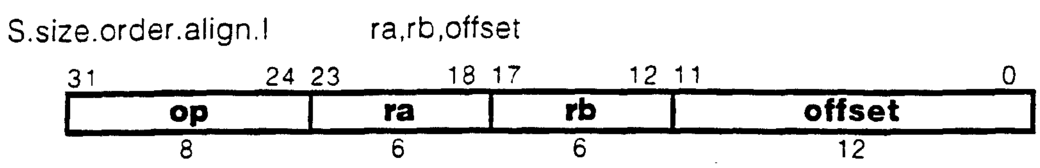


*Description*

A virtual address is computed from the sum of the contents of register ra and the sign-extended vale of the offset field. The contents of register rb, treated as the size specified, is stored in memory using the specified byte order.

If alignment is specified, the computed virtual address must be aligned, that is, it must be an exact multiple of the size expressed in bytes. If the address is not aligned an "access disallowed by virtual address" exception occurs.

*Definition*

```
def StoreImmediate(op,ra,rb,offset) as
    case op of
        S8I,
        S16LI, S16LAI, S16BI, S16BAI,
        S32LI, S32LAI, S32BI, S32BAI,
        S64LI, S64LAI, S64BI, S64BAI,
        S128LI, S128LAI, S128BI, S128BAI:
            function ← NONE
        SAAS64BAI, SAAS64LAI:
            function ← AAS
        SCAS64BAI, SCAS64LAI:
            function ← CAS
        SMAS64BAI, SMAS64LAI:
            function ← MAS
        SMUX64BAI, SMUX64LAI:
            function ← MUX
    endcase
    case op of
        S8I:
            size ← 8
        S16LI, S16LAI, S16BI, S16BAI:
            size ← 16
        S32LI, S32LAI, S32BI, S32BAI:
            size ← 32
        S64LI, S64LAI, S64BI, S64BAI, SAAS64BAI, SAAS64LAI,
        SCAS64BAI, SCAS64LAI, SMAS64BAI, SMAS64LAI, SMUX64BAI, SMUX64LAI:
            size ← 64
        S128LI, S128LAI, S128BI, S128BAI:
            size ← 128
    endcase
    case op of
        S8I,
        S16LI, S16LAI, S16BI, S16BAI,
        S32LI, S32LAI, S32BI, S32BAI,
        S64LI, S64LAI, S64BI, S64BAI,
        SAAS64BAI, SAAS64LAI:
```

```
            rsize ← 64
        SCAS64BAI, SCAS64LAI, SMAS64BAI, SMAS64LAI, SMUX64BAI, SMUX64LAI:
            rsize ← 128
        S128LI, S128LAI, S128BI, S128BAI:
            rsize ← 128
endcase
case op of
        S8I:
            align ← undefined
        S16LI, S32LI, S64LI, S128LI,
        S16BI, S32BI, S64BI, S128BI:
            align ← false
        S16LAI, S32LAI, S64LAI, S128LAI,
        S16BAI, S32BAI, S64BAI, S128BAI,
        SAAS64BAI, SAAS64LAI, SCAS64BAI, SCAS64LAI,
        SMAS64BAI, SMAS64LAI, SMUX64BAI, SMUX64LAI:
            align ← true
endcase
case op of
        S8I:
            order ← undefined
        S16LI, S32LI, S64LI, S128LI,
        S16LAI, S32LAI, S64LAI, S128LAI,
        SAAS64LAI, SCAS64LAI, SMAS64LAI, SMUX64LAI:
            order ← L
        S16BI, S32BI, S64BI, S128BI,
        S16BAI, S32BAI, S64BAI, S128BAI,
        SAAS64BAI, SCAS64BAI, SMAS64BAI, SMUX64BAI:
            order ← B
endcase
a ← RegRead(ra, 64)
VirtAddr ← a + (offset_11^50 || offset)
if align then
        if (VirtAddr and ((size/8)-1)) ≠ 0 then
            raise AccessDisallowedByVirtualAddress
        endif
endif
m ← RegRead(rb, rsize)
case function of
        NONE:
            StoreMemory(VirtAddr,size,order,m_size-1..0)
        AAS:
            b ← LoadMemory(VirtAddr,size,order)
            StoreMemory(VirtAddr,size,order,m_63..0+b)
            RegWrite(rb, 64, b)
        CAS:
            b ← LoadMemory(VirtAddr,size,order)
            if (b = m_63..0) then
                StoreMemory(VirtAddr,size,order,m_127..64)
            endif
            RegWrite(rb, 64, b)
        MAS:
            b ← LoadMemory(VirtAddr,size,order)
            n ← (m_127..64 & m_63..0) | (b & ~m_63..0)
            StoreMemory(VirtAddr,size,order,n)
            RegWrite(rb, 64, b)
        MUX:
```

```
                b ← LoadMemory(VirtAddr.size.order)
                n ← (m127..64 & m63..0) | (b & ~m63..0)
                StoreMemory(VirtAddr.size.order,n)
        endcase
    enddef
```

*Exceptions*

Reserved instruction

Access disallowed by virtual address
Access disallowed by tag
Access disallowed by global TLB
Access disallowed by local TLB
Access detail required by tag
Access detail required by local TLB
Access detail required by global TLB
Cache coherence intervention required by tag
Cache coherence intervention required by local TLB
Cache coherence intervention required by global TLB
Local TLB miss
Global TLB miss

*Memory Management*

This section discusses the caches, the translation mechanisms, the memory interfaces, and how the multiprocessor interface is used to maintain cache coherence.
The Terpsichore processor provides for both local and global virtual addressing, arbitrary page sizes, and coherent-cache multiprocessors. The memory management system is designed to provide the requirements for implementation of virtual machines as well as virtual memory.
All facilities of the memory management system are themselves memory mapped, in order to provide for the manipulation of these facilities by high-level language, compiled code.
The translation mechanism is designed to allow full byte-at-a-time control of access to the virtual address space, with the assistance of fast exception handlers.
Privilege levels provide for the secure transition between insecure user code and secure system facilities. Instructions execute at a privilege, specified by a two-bit field in the access information. Zero is the least-privileged level, and three is the most-privileged level.
The diagram below sketches the organization of the memory management system:

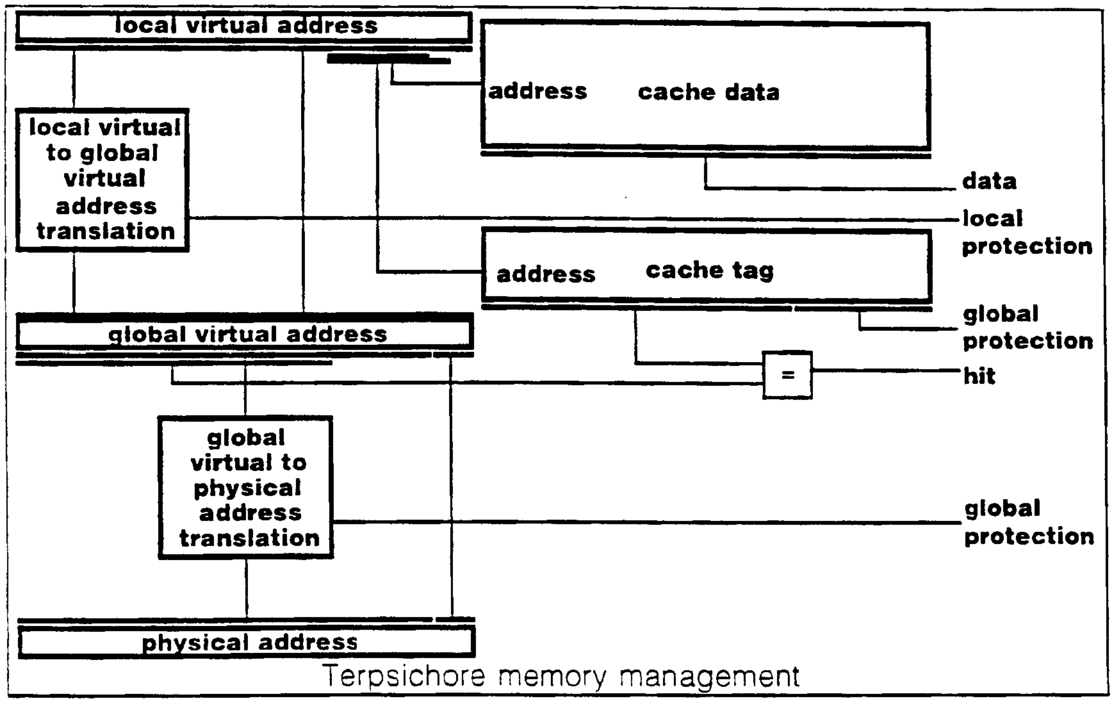

Terpsichore memory management

Starting from a local virtual address, the memory management system performs three actions in parallel: the low-order bits of the virtual address are used to directly access the data in the cache, a low-order bit field is used to access the cache tag, and the high-order bits of the virtual address are translated from a local address space to a global virtual address space.

Following these three actions, operations vary depending upon the cache implementation. The cache tag may contain either a physical address and access control information (a physically-tagged cache), or may contain a global virtual address and global protection information (a virtually-tagged cache).

For a physically-tagged cache, the global virtual address is translated to a physical address by the TLB, which generates global protection information. The cache tag is checked against the physical address, to determine a cache hit. In parallel, the local and global protection information is checked.

For a virtually-tagged cache, the cache tag is checked against the global virtual address, to determine a cache hit, and the local and global protection information is checked. If the cache misses, the global virtual address is translated to a physical address by the TLB, which also generates the global protection information.

*Local and Global Virtual Addresses*

The 64-bit global virtual address space is global among all tasks. In a multitask environment, requirements for a task-local address space arise from operations such as the UNIX "fork" function, in which a task is duplicated into parent and child tasks, each now having a unique virtual address space. In addition, when switching tasks, access to one task's address space must be disabled and another task's access enabled.

Terpsichore provides for portions of the address space to be made local to individual tasks, with a translation to the global virtual space specified by four 16-bit registers for each local virtual space. Terpsichore specifies four sets of virtual spaces, and therefore four sets of these four registers. The registers specify a mask selecting which of the high-order 16 address bits are checked to match a particular value, and if they match, a value with which to modify the virtual address. Terpsichore avoids setting a fixed page size or local address size; these can be set by software conventions.

A local virtual address space is specified by the following::

| field name | size | description |
|---|---|---|
| local mask | 16 | mask to select fields of local virtual address to perform match over |
| local match | 16 | value to perform match with masked local virtual address |
| local xor | 16 | value to xor with local virtual address if matched |

(continued)

| field name | size | description |
|---|---|---|
| local protect | 16 | local protection field (detailed later) |
| local virtual address space specifiers | | |

These 16-bit registers are packed together into a 64-bit register as follows:

*Local Translation Lookaside Buffer*

| 63 48 | 47 32 | 31 16 | 15 0 |
|---|---|---|---|
| mask[t][i] | match[t][i] | xor[t][i] | protect[t][i] |
| 16 | 16 | 16 | 16 |

The LTLB contains a separate context of register sets for each thread. A context consists of one or more sets of mask/match/xor/protect registers, one set for each simultaneously accessible local virtual address range. This set of registers is called the "Local TLB context," or LTLB (Local Translation Lookaside Buffer) context. The effect of this mechanism is to provide the facilities normally attributed to segmentation. However, in this system there is no extension of the address range, instead, segments are local nicknames for portions of the global virtual address space.

For instructions executing at the two least privileged levels (level 0 or level 1), a failure to match a LTLB entry causes an exception. This exception may be handled by loading an LTLB entry and continuing execution, thus providing access to an arbitrary number of local virtual address ranges.

Instructions executing at the two most privileged levels (level 2 or level 3) may access any region in the local virtual address space, when a LTLB entry matches, and may acess regions in the global virtual address space when no LTLB entry matches. This mechanism permits privileged code to make judicious use of local virtual address ranges, which simplifies the manner in which privileged code may manipulate the contents of a local virtual address range on behalf of a less-privileged client.

A minimum implementation of an LTLB context is a single set of mask/match/xor/protect registers per thread. A single-set LTLB context may be further simplified by reserving the implementation of the mask and match registers, setting them to a read-only zero value:

| 63 32 | 31 16 | 15 0 |
|---|---|---|
| 0 | xor[t][i] | protect[t][i] |
| 16 | 16 | 16 |

If the largest possible space is reserved for an address space identifier, the virtual address is partitioned as shown below. Any of the bits marked as "local" below may be used as "offset" as desired.

| 63 48 | 47 0 |
|---|---|
| local | offset |
| 16 | 48 |

*Definition*

```
def GlobalVA.LocalProtect ← LocalVirtualToGlobalVirtualAddressTranslation(th.va.pl) as
    LocalTLBMatch ← NONE
    for i ← 0 to <<sets per thread>>-1
        if (va_{63..48} & ~LocalTLB[th][i]_{63..48}) = LocalTLB[th][i]_{47..32} then
            LocalTLBMatch ← i
        endif
    endfor
    if LocalTLBMatch = NONE then
        if pl < 2 then
            raise LocalTLBMiss
        endif
        GlobalVA ← va
        LocalProtect ← 0
    else
        GlobalVA ← (va_{63..48} ^ LocalTLB[th][LocalTLBMatch]_{31..16}) || va_{47..0}
        LocalProtect ← LocalTLB[th][LocalTLBMatch]_{15..0}
    endif
enddef
```

*Global Virtual Cache*

The innermost levels of the instruction and data caches are direct-mapped and indexed and matched entirely by the global virtual address. Consequently, each block of memory data is tagged with access control information and the high-order bits of the global virtual address. The current size of the virtual caches is 32 kilobytes; for architectural compatibility, a minimum size of 8 kilobytes and a maximum size of 1 megabyte is specified. The mapping of virtual addresses to physical may freely contain aliases, however, provided that either the associated regions of memory are maintained as coherent, or that the low order 20 bits of any virtual cache aliases are identical. (20 bits reflects the size of the maximum 1M byte virtual cache.)

A virtual cache tag is contained in the buffer memory (described below). It is accessed in parallel with the virtual cache. The virtual tag must match, and the control information must permit the access, or a cache miss or exception occurs. There is one tag for each cache block: a cache block consists of 64 bytes, so for a 32 kilobyte cache, there is 4 kilobytes of cache tag information for each cache. The protect field shown below is the concatenation of the access, state and control fields shown in the table below:

| 63 … 13 | 12 … 0 |
|---|---|
| **global virtual tag** | **protect** |
| 51 | 13 |

*Definition*

The following function reads the data, tag, and protection bits from either the instruction (c=0) or data (c=1) cache, given a local virtual address.

```
def data.GlobalVA.GlobalProtect ← ReadCache(c.va.size) as
    data ← cacheDataArray[c][va_{14..4}]
    GlobalVA ← cacheTagArray[c][va_{14..6}]_{63..16} || va_{15..0}
    GlobalProtect ← cacheTagArray[c][va_{14..6}]_{15..0}
enddef
```

*Translation and Protection*

Global virtual addresses are translated to physical addresses only upon misses in the virtual caches. The translation is performed by software-programmable routines, augmented by a hardware TLB, specifically, the global TLB. The global TLB labels a cache line with the physical and access information in the virtual cache tag. The global TLB contains a minimum of 64 entries and a maximum of 256 entries.

A local TLB, global TLB or virtual cache entry contains the following information. The figures in parentheses are the actual size of the field contained, if only a sub-field is held in the entry.

| field name | size | description | local TLB | global TLB | cache tag |
|---|---|---|---|---|---|
| virtual address | 64 | virtual address (lowest address of region) | ✓ (16) | ✓ (58) | ✓ (50) |
| virtual address mask | 64 | mask for virtual address match | ✓ (16) | ✓ (58) | |
| physical address | 64 | physical address xor virtual address | ✓ (16) | ✓ (58) | |
| reserved | | additional space in register | ✓ (2) | ✓ (2) | ✓ (1) |
| caching control | 2 | are accesses to this region incoherent (0), coherent (1), no-allocate (2), or uncached-physical(3)? | ✓ | ✓ | ✓ (1) |
| detail access | 1 | do portions of this region have access controlled more restrictively? | ✓ | ✓ | ✓ |
| access ordering | 1 | are accesses to this region ordered weakly (0) or strongly (1) with respect to other accesses? | ✓ | ✓ | ✓ |
| coherence state | 3 | if region is coherently cached, does coherence state permit read(4), write(2), or replacement(1)? if region is not coherently cached, does cache state require write-back(2) or not(0)? | ✓ | ✓ | ✓ |
| read access | 2 | minimum privilege for read access | ✓ | ✓ | ✓ |
| write access | 2 | minimum privilege for write access | ✓ | ✓ | ✓ |
| execute access | 2 | minimum privilege for execute access | ✓ | ✓ | ✓ |
| gateway access | 2 | minimum privilege for gateway access | ✓ | ✓ | ✓ |
| information in local TLB, global TLB, or virtual cache entry | | | | | |

The bottom section of the table above indicates the contents of the 16-bit protection field:

*Protection information in local TLB*

| 15 | 14 13 | 12 | 11 | 10 8 | 7 6 | 5 4 | 3 2 | 1 0 |
|---|---|---|---|---|---|---|---|---|
| rv | cc | da | ao | cs | r | w | x | g |
| 1 | 2 | 1 | 1 | 3 | 2 | 2 | 2 | 2 |

*Protection information in global TLB*

| 15 | 14 13 | 12 | 11 | 10 8 | 7 6 | 5 4 | 3 2 | 1 0 |
|---|---|---|---|---|---|---|---|---|
| rv | cc | da | ao | cs | r | w | x | g |
| 1 | 2 | 1 | 1 | 3 | 2 | 2 | 2 | 2 |

*Protection information in instruction cache tag*

| 13 | 12 | 11 | 10 8 | 7 6 | 5 4 | 3 2 | 1 0 |
|---|---|---|---|---|---|---|---|
| cc | da | ao | cs | | | x | |
| 1 | 1 | 1 | 3 | 2 | 2 | 2 | 2 |

*Protection information in virtual data cache tag*

| 13 | 12 | 11 | 10 8 | 7 6 | 5 4 | 3 2 | 1 0 |
|---|---|---|---|---|---|---|---|
| cc | da | ao | cs | r | w | | g |
| 1 | 1 | 1 | 3 | 2 | 2 | 2 | 2 |

*Protection information in physical data cache tag*

| 5 | 4 | 3 | 2 0 |
|---|---|---|---|
| cc | da | ao | cs |
| 1 | 1 | 1 | 3 |

*Memory Interface*

Dedicated hardware mechanisms are provided to fetch and store back data blocks in the instruction and data caches, provided that a matching entry can be found in the global TLB. When no entry is to be found in the global TLB, an exception handler is invoked either to generate the required information from the virtual address, or to place an entry in the global TLB to provide for automatic handling of this and other similarly addressed data blocks.

The initial implementation of Terpsichore partitions the remainder of the local memory system, including a second-level joint physical cache and a DRAM-based memory array, into a set of separate devices, called Mnemosyne. These devices are accessed via a high-bandwidth, byte-wide packet interface, called Hermes, which is largely transparent to the Terpsichore architecture. The Mnemosyne devices provide single-bit correction, double-bit detection ECC on all local memory accesses, and a check byte protects all packet interface transfers. The size of the secondary cache and the DRAM memory array is implementation-dependent.

*Cache Coherence*

The Terpsichore processor is intended for use in either a uniprocessor or multiprocessor environment. At the high performance level intended for Terpsichore, mechanisms employed in other processor designs to maintain cache coherence, such as "snoopy cache" buses, cannot be effectively built, because the communication latency and bandwidth between processors would be excessive. Several cache coherence mechanisms have been designed for high-performance processors that do not require that all memory transactions be broadcast among the processors in a system, one of which is the Scalable Coherent Interface, or SCI, as specified by the IEEE Standard 1596-1992.

The SCI cache coherence mechanism is extremely complex. Many of the cache coherence operations take time proportional to the number of processors involved in the operation, and so implicitly assume that the number of processors sharing a particular data item will tend to be much less than the 64k processors that SCI can theoretically handle (SCI is now considering an even more complex mechanism that may assure logarithmic growth in time complexity). Most importantly, no complete working prototype of this mechanism has been built, tested and benchmarked at the time of development of the Terpsichore architecture.

It is considered then, that the cache coherence mechanism should not be implemented in immutable, hardware state machines. A software implementation of a cache coherence protocol is proposed, which given the high intrinsic performance of the processor, is likely to reach nearly the performance level that can be achieved in dedicated hardware. The greatest advantage, though, is that Terpsichore will be an excellent vehicle to test and improve the performance of experimental non-bus-oriented cache coherency operations.

Cache coherence information is available within the local TLB, global TLB and the cache tags, so that coherence operations may be performed at task-level, page-level, or cache-block-level as desired. This flexibility provides for a coherent view of memory in multiprocessing systems with varying degrees of coupling.

*Physical Addresses*

Physical addresses are 64 bits in size, consisting of a 16 bit processor node number and a 48 bit address.

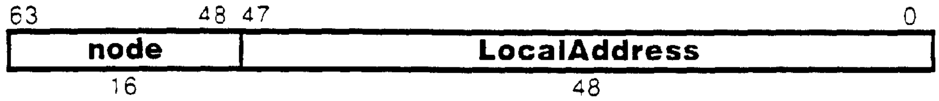


Physical addresses in which the node number is zero reference the local processors local memory space, providing access to local memory, cache tags, system and interface facilities. Physical addresses in which the node number is nonzero reference other processors local memory spaces, using the Hydra interface for communication.

The local memory environment of Terpsichore involves the use of up to twelve Hermes byte-wide packet communications channels, by which Terpsichore can request read or write transactions to Mnemosyne. Calliope, and Hydra devices. In addition. Terpsichore can issue read or write transactions to the Cerberus serial bus interface, via which the Mnemosyne. Calliope, Hydra and other devices configuration and control registers can be accessed. The diagram illustrates shows one possible Terpsichore memory environment:

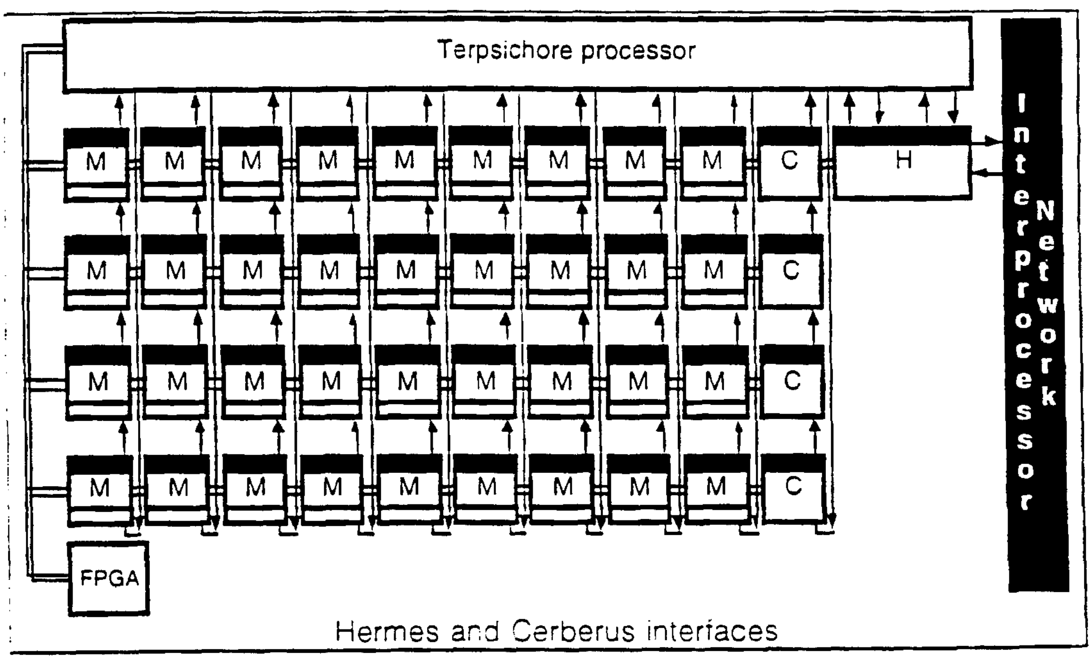


Hermes channels 0..7 are always used to connect Terpsichore to Mnemosyne memory devices. Hermes channels 8..11 may be used to connect Mnemosyne, Calliope, or Hydra devices.

Terpsichore provides three different mappings of the local memory environment in the local physical address space. The non-interleaved space provides for the access of all Mnemosyne, Calliope, and Hydra device memory spaces such that each device appears as a single continuous space. The uniprocessor spaces provide for the interleaved access of one, two, or four sets of eight Mnemosyne devices on separate Hermes channels as a single continuous space. The multiprocessor spaces provide for the interleaved access of one, two, or four sets of nine Mnemosyne devices on separate Hermes channels as a single continuous space with the ninth channel used as a cache coherency directory.

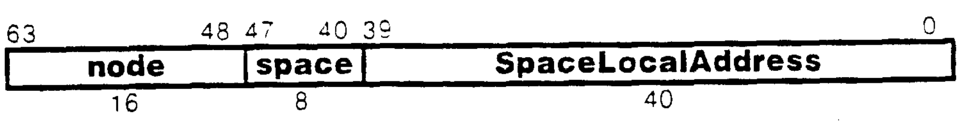


The value of the space field determines the interpretation of the 48-bit local address field as given by the following table:

| value | interpretation |
|---|---|
| 0 | non-interleaved Hermes channel 0..7 space |
| 1 | non-interleaved Hermes channel 8..11 space |
| 2 | 8x1-way interleaved uniprocessor memory space |
| 3 | 9x1-way interleaved multiprocessor memory space |
| 4 | 8x2-way interleaved uniprocessor memory space |
| 5 | 9x2-way interleaved multiprocessor memory space |
| 6 | 8x4-way interleaved uniprocessor memory space |
| 7 | 9x4-way interleaved multiprocessor memory space |
| 8 | |
| 9 | |
| 10 | 4x1-way interleaved uniprocessor memory space |
| 11 | 5x1-way interleaved multiprocessor memory space |
| 12 | 4x2-way interleaved uniprocessor memory space |
| 13 | 5x2-way interleaved multiprocessor memory space |
| 14 | 4x4-way interleaved uniprocessor memory space |
| 15 | 9x4-way interleaved multiprocessor memory space |
| 16 | |
| 17 | |
| 18 | 2x1-way interleaved uniprocessor memory space |
| 19 | 3x1-way interleaved multiprocessor memory space |
| 20 | 2x2-way interleaved uniprocessor memory space |
| 21 | 3x2-way interleaved multiprocessor memory space |
| 22 | 2x4-way interleaved uniprocessor memory space |
| 23 | 3x4-way interleaved multiprocessor memory space |
| 24..31 | Cerberus memory and control space |
| 32..255 | |

space field Interpretation

*Non-interleaved Hermes channel 0..7 Space*

The non-interleaved Hermes channel 0..7 space provides a single continuous memory space for each device in Hermes channels 0..7. Mnemosyne protocols are used. Only incoherent accesses are supported (no memory directory tags).

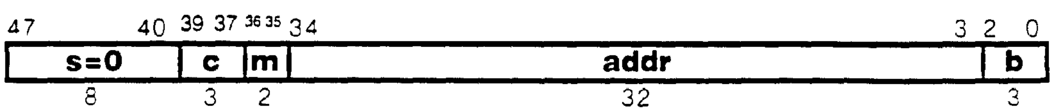


The range of valid values and the interpretation of the fields is given by the following table:

| field | value | interpretation |
|---|---|---|
| **s** | 0 | Specify non-interleaved Hermes channel 0..7 space |
| **c** | 0..7 | Hermes channels 0..7 |
| **m** | 0..3 | Module address |
| **addr** | $0..2^{32}$-1 | Logical memory block address |
| **b** | 0..7 | Pad for conversion of byte address to block address |
| non-interleaved space field interpretation | | |

*Non-interleaved Hermes channel 8..11 Space*

The non-interleaved Hermes channel 8..11 space provides a single continuous memory space for each device in Hermes channels 8..11. Either Mnemosyne or Calliope/Hydra protocols may be specified. Only incoherent accesses are supported (no memory directory tags).

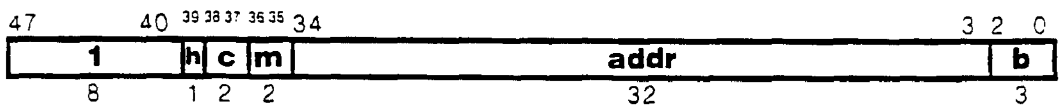


The range of valid values and the interpretation of the fields is given by the following table:

| field | value | interpretation |
|---|---|---|
| **s** | 1 | Specify non-interleaved Hermes channel 8..11 space |
| **h** | 0.. 1 | 0: use Mnemosyne protocol 1: use Calliope/Hydra protocol |
| **c** | 0..3 | Hermes channels 8..11 |
| **m** | 0..3 | Module address |
| **addr** | $0..2^{32}$-1 | Logical memory block address |
| **b** | 0..7 | Pad for conversion of byte address to block address |
| non-interleaved space field interpretation | | |

*Uniprocessor Interleaved Spaces*

The interleaved spaces described below interleave between 8 Hermes channels (0..7), supporting only incoherent accesses (no memory directory tags). Mnemosyne protocols are used.

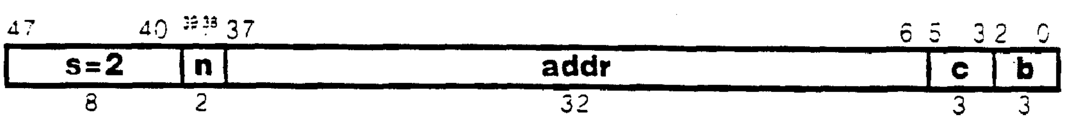


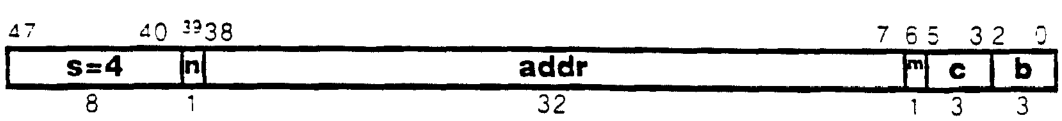

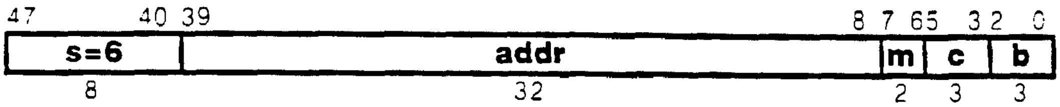


The interleaved spaces described below interleave between 4 Hermes channels (.0..3 or 4..7), supporting only incoherent accesses (no memory directory tags). Mnemosyne protocols are used.

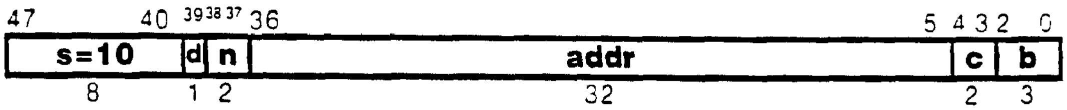


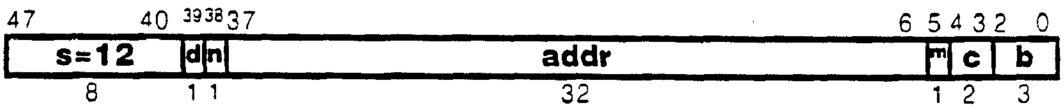


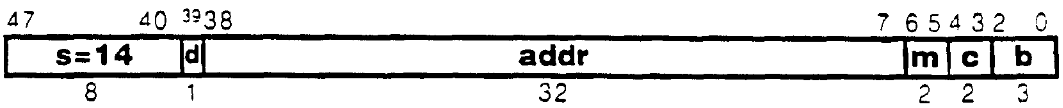


The interleaved spaces described below interleave between 2 Hermes channels (0..1. 2..3, 4..5, or 6..7), supporting only incoherent accesses (no memory directory tags). Mnemosyne protocols are used.

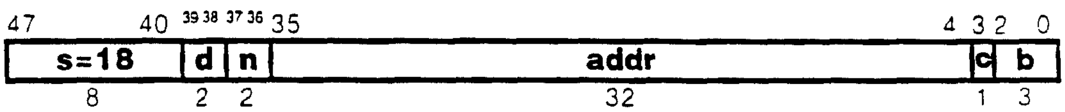


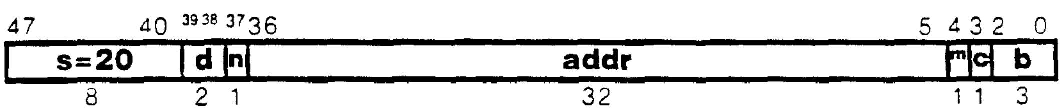


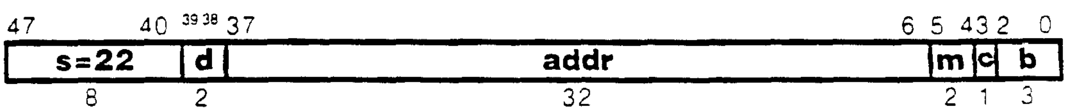


The range of valid values and the interpretation of the fields is given bv the following table:

| field | value | interpretation |
|---|---|---|
| **s** | 2,4,6,10, 12,14,18, 20.22 | Specify uniprocessor interleaved space |
| **d** | 0..3 | Hign-order bits of Hermes channel number |
| **c** | 0..7 | Low-order bits of Hermes channels number |
| **n** | 0..3 | Hign-order bits of Hermes module address |

(continued)

| field | value | interpretation |
|---|---|---|
| **m** | 0..3 | Low-order bits of Hermes module address |
| **addr** | $0..2^{32}-1$ | Logical memory block address |
| **b** | 0..7 | Pad for conversion of byte to block address |
| interleaved space field interpretation | | |

The Hermes channel number is constructed by concatenating the d and c fields:

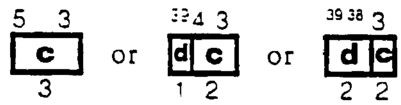


The Hermes module number is constructed by concatenating the n and m fields:

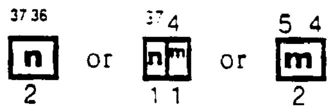


*Multiprocessor Interleaved Space*

The interleaved spaces described below interleave between 9 channels for a multiprocessor.

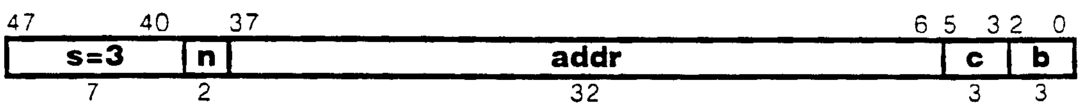


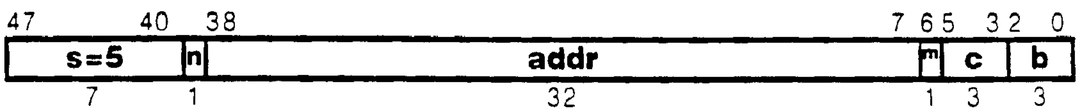


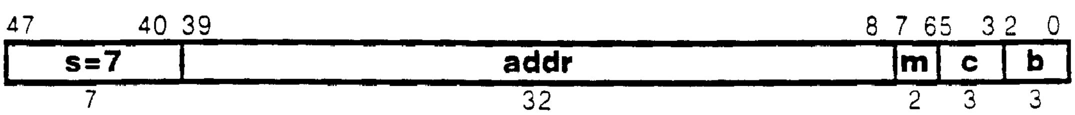


The range of valid values and the interpretation of the fields is given by the following table:

| field | value | interpretation |
|---|---|---|
| **s** | 3.5.7 | Specify interleaved space |
| **c** | 0..7 | Mnemosyne channels 0..7, before modification described below |
| **n** | 0..3 | Hign-order bits of Hermes module address |
| **m** | 0..3 | Low-order bits of Hermes module address |

(continued)

| field | value | interpretation |
|---|---|---|
| **addr** | 0..$2^{32}$-1 | Logical memory block address |
| **b** | 0..7 | Pad for conversion of byte to block address |
| interleaved space field interpretation | | |

For the multiprocessor space the channel number field is modified by the low-order memory block address bits according to the following tables. In addition, access to a location in this space also accesses a memory tag, using the Hermes channel specified in the tables below.

| **addr**$_{2..0}$ | **c** | | | | | | | | tag |
|---|---|---|---|---|---|---|---|---|---|
| | 0 | 1 | 2 | 3 | 4 | 5 | 6 | 7 | |
| 0 | 8 | 1 | 2 | 3 | 4 | 5 | 6 | 7 | 0 |
| 1 | 4 | 5 | 6 | 7 | 0 | 8 | 2 | 3 | 1 |
| 2 | 8 | 3 | 0 | 1 | 6 | 7 | 4 | 5 | 2 |
| 3 | 6 | 7 | 4 | 5 | 2 | 8 | 0 | 1 | 3 |
| 4 | 1 | 0 | 3 | 2 | 5 | 8 | 7 | 6 | 4 |
| 5 | 8 | 4 | 7 | 6 | 1 | 0 | 3 | 2 | 5 |
| 6 | 3 | 2 | 1 | 0 | 7 | 8 | 5 | 4 | 6 |
| 7 | 8 | 6 | 5 | 4 | 3 | 2 | 1 | 0 | 7 |
| 9 channel translation table | | | | | | | | | |

The memory tag entry is an octlet value for each 64-byte memory block. The contents of the tag is interpreted by Terpsichore hardware to signify (0) a zero value indicates that the memory block is not contained in the cache. (1) a value equal to the virtual address used to access the memory block indicates that the value is cached at that address, and (2) any other values indicates that the value may be cached in multiple or remote locations and requires software intervention for interpretation.

Thus a read to a memory block accesses the tag, and if the value is zero, fills it with the virtual address via which the access occurred. When the memory block is returned to memory, the tag is accessed, and if the value is equal to the virtual address, the tag is reset to zero. In all other cases, an exception occurs, which is handled by software to implement the cache coherency mechanisms.

We also need to have a space available in which access to the tag via software routines is straightforward - the non-interleaved space makes the tag available, but not conveniently.

*SerialBus Space*

The Cerberus serial bus space provides access to a memory space in which Bootstrap ROM code. Terpsichore. Mnemosyne and Calliope configuration data, and other Cerberus peripherals are accessed. The Cerberus serial bus is specified by the document: "Cerberus Serial Bus Architecture." Terpsichore configuration data is accessable via Cerberus as a slave device as well as via this address space.

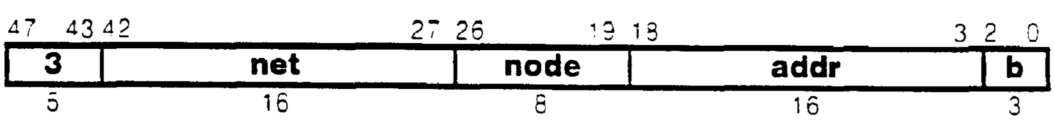


The range of valid values and the interpretation of the fields is given by the following table:

| field | value | interpretation |
|---|---|---|
| **3** | 3 | Specify Cerberus space |
| **net** | $0..2^{16}-1$ | Specify Cerberus net address |
| **node** | 0..255 | Cerberus node address |
| **addr** | $0..2^{16}-1$ | Logical memory block address |
| **b** | 0..7 | Pad for conversion of byte address to block address |

Cerberus space field interpretation

*Control Register Addresses*

This section is under construction.

Local TLB (4 octlets)
Virtual cache tags (2k-128k x 2 caches)
Virtual cache data (16k-1M x 2 caches)
Global TLB (4 octlets x 64-256 entries=2k-8k bytes)

*Events and Threads*

Exceptions signal several kinds of events: (1) events that are indicative of failure of the software or hardware, such as arithmetic overflow or parity error, (2) events that are hidden from the virtual process model, such as translation buffer misses. (3) events that infrequently occur, but may require corrective action, such as floating-point underflow. In addition, there are (4) external events that cause scheduling of a computational process, such as completion of a disk transfer or clock events.

Each of these types of events require the interruption of the current flow of execution, handling of the exception or event, and in some cases, descheduling of the current task and rescheduling of another. The Terpsichore processor provides a mechanism that is based on the multi-threaded execution model of Mach. Mach divides the well-known UNIX process model into two parts, one called a task, which encompasses the virtual memory space, file and resource state, and the other called a thread, which includes the program counter, stack space, and other register file state. The sum of a Mach task and a Mach thread exactly equals one UNIX process, and the Mach model allows a task to be associated with several threads. On one processor at any one moment in time, at least one task with one thread is running.

In the taxonomy of events described above, the cause of the event may either be synchronous to the currently running thread, generally types 1, 2, and 3, or asynchronous and associated with another task and thread that is not currently running, generally type 4. For synchronous events, Terpsichore will suspend the currently running thread in the current task, and continue execution with another thread that is dedicated to the handling of events. For asynchronous events, Terpsichore will continue execution with the dedicated event thread, while not necessarily suspending the currently running thread.

Terpsichore provides sufficient resources for the interleaved execution of at least one full thread, containing 64 general registers and a program counter, and at least one separate event thread, containing 16 general registers and a program counter. When both threads are able to continue execution, priority is generally given to the event threads.

All facilities of the exception, memory management, and interface systems are themselves memory mapped, in order to provide for the manipulation of these facilities by high-level language, compiled code. In particular, the thread resources of the full threads are memory-mapped so that the exception threads are able to read and write the general registers and program counter of the full threads.

Events are single-bit messages used to communicate the occurrence of exceptions between full threads and event threads and interface devices.

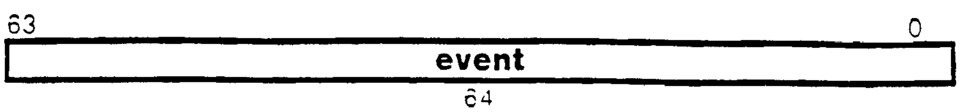

The event register appears at several locations in memory, with slightly different side effects on read and write operations.

| offset | side effect on read | side effect on write |
|---|---|---|
| 0 | none: return event register contents | normal: write data into event register |
| 8 | stall thread until contents of event register is non-zero, then return event register contents | stall thread until bitwise and of data and event register contents is non-zero |
| 16 | return zero value (so read-modify-write for byte/ doublet/ quadlet store works) | one bits in data set (to one) corresponding event register bits |
| 24 | return zero value (so read-modify-write for byte/ dcublet/ quadlet store works) | one bits in data clear (to zero) corresponding event register bits |

interface devices signal events by responding to non-blocking read requests generated by a write to a Terpsichore control register. The response to these read requests is combined into the event register with an inclusive-or operation.

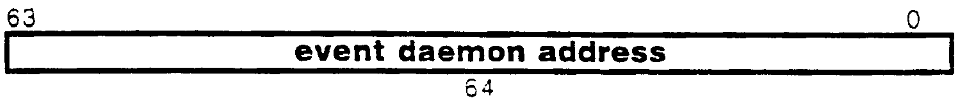


A write to the event daemon address register causes Terpsichore to issue a read request to the corresponding physical address. The device referenced by this request may respond at any future time with a value, which is incluswe-or'ed into the event register.

The following notes list the resources needed to support the threads...

Events:

| | |
|---|---|
| 0 | full thread 0 suspended at instruction fetch because of exception |
| 1 | full thread 0 suspended at data fetch because of exception |
| 2 | full thread 0 suspended at execution because of exception |
| 3 | full thread 0 suspended at execution because of empty pipeline |
| 4-15 | same for full threads 1-3. |
| 16-63 | timer, calliope, and hydra events |

Thread resources:
General registers at data fetch stage
General registers at execution state
Program counter, privilege level at data fetch stage
Program counter, privilege level at execution stage
Mask register: events which permit the thread to run
Mask register: events which prevent the thread to run?
Control register: suspend ifetch, dfetch, execute, thread priority
Local TLB entries (full threads only)
Exception information registers:

- exception cause
- instruction which caused exception
- virtual address at which access attempted
- size of access attempted
- type of access (read, write, execute, gateway)
- did exception occur at lower or higher addr if cross boundary?

don't need - register contents (can get from mem map GR)
Sort by stage:
Inst fetch stage:

program counter
exception state: cause: TLB miss, coherence action required...
control register:

suspend (drain queue),
reset(clear queue),
proceed past detail

Data fetch stage:

General registers
program counter, privilege level
control register:

suspend (drain queue),
reset (clear queue)

proceed past detail
exception state: cause(incl access type, size, boundary,

local TLB hit indication), inst

can compute local va from GR, inst:

shift-and-add-load-shifti-shiftr-add (7)

computing global va is hard...=> need global va register
can compute size from inst, 16-word table: shift and add load (4)
prefetched data, instruction queue

clear queue
drain queue

Execute stage:

General registers
program counter, privilege level
control register: suspend
exception state: cause(flt/fix arithmetic), inst

Exceptions:

| number | exception |
|---|---|
| 0 | Access disallowed by tag |
| 1 | Access detail required bv tag |
| 2 | Cache coherence action required by tag |
| 3 | Access disallowed by virtual address |
| 4 | Access disallowed by global TLB |
| 5 | Access detail required by global TLB |
| 6 | Cache coherence action required by global TLB |
| 7 | Global TLB miss |
| 8 | Access disallowed by local TLB |
| 9 | Access detail required by local TLB |

(continued)

| number | exception |
|---|---|
| 10 | Cache coherence action required by local TLB |
| 11 | Local TLB miss |
| 12 | Floating-point arithmetic |
| 13 | Fixed-point arithmetic |
| 14 | Reserved instruction |
| 15 | |

*Parameter passing*

There are no special registers to indicate details about the exception, such as the virtual address at which an access was attempted, or the operands of a floating-point operation that results in an exception. Instead, this information is available via memory-mapped registers.

When a synchronous exception occurs in a full thread, the corresponding thread's state is frozen, and a general event is signalled. An event thread should handle the exeception, in whatever manner is required, and then may restart the full thread by writing to the full thread's control register.

When a synchronous exception occurs in an event thread, an immediate transfer of control occurs to the machine check vector address, with information about the exception available in the **machine check cause** field of the **status register.** The transfer of control may overwrite state that may be necessary to recover from the exception; the intent is to provide a satisfactory post-mortem indication of the characteristics of the failure.

*Exceptions in detail*

This section is under construction. Terpsichore has changed from passing the parameters in registers to passing the parameters in memory-mapped registers, and the information in this section doesn't reflect the changes yet.

This section describes in detail the conditions under which exception occurs, the parameters passed to the exception handler, and the handling of the result of the procedure.

*Access disallowed by tag*

This exception occurs when a read (load), write (store), execute, or gateway attempts to access a virtual address for which the matching virtual cache entry does not permit this access.

*Prototype*

int AccessDisallowedByTag(int address, int size, int access)

*Description*

The address at which the access was attempted is passed as *address.* The size of the access in bytes is passed as *size.* The type of access is passed as *access,* with 0 meaning read, 1 meaning write. 2 meaning execute, and 3 meaning gateway. The exception handler should determine accessibility, modify the virtual memory state if desired, and return if the access should be allowed. Upon return, execution is restarted and the access will be retried.

*Access detail required by tag*

This exception occurs when a read (load), write (store), or execute attempts to access a virtual address for which the matching virtual cache entry would permit this access, but the detail bit is set.

*Prototype*

int AccessDetailRequiredByTag(int address, int size, int access)

*Description*

The address at which the access was attempted is passed as *address.* The size of the access in bytes is passed as *size.* The type of access is passed as *access,* with 0 meaning read. 1 meaning write, 2 meaning execute, and 3 meaning gateway. The exception handler should determine accessibility and return if the access should be allowed. Upon return, execution is restarted and the access will be retried. If the detail bit is set in the matching virtual cache entry, access will be permitted.

*Cache coherence action required by tag*

This exception occurs when a read (load, execute, or gateway), write (store), or replacement attempts to access a virtual address for which the coherence state of the matching virtual cache entry cannot permit this access.

*Prototype*

int CacheCoherence InterventionRequired (int address, int size, int access)

*Description*

The address at which the access was attempted is passed as *address.* The size of the access in bytes is passed as *size.* The type of access is passed as *access,* with 0 meaning read, 1 meaning write, 2 meaning replacement. The exception handler should modify the cache status to make the cache line accessible. Upon return, execution is restarted and the access will be retried.

*Access disallowed by global TLB*

This exception occurs when a read (load), write (store), execute, or gateway attempts to access a virtual address for which the matching global TLB entry does not permit this access.

*Prototype*

int AccessDisallowedByGlobalTLB(inr address, int size, int access)

*Description*

The address at which the access was attempted is passed as *address.* The size of the access in bytes is passed as *size.* The type of access is passed as *access,* with 0 meaning read. 1 meaning write, 2 meaning execute, and 3 meaning gateway. The exception handler should determine accessibility, modify the virtual memory state if desired, and return if the access should be allowed. Upon return, execution is restarted and the access will be retried. If the detail bit is set in the matching global TLB entry, access will be permitted.

*Access detail required by global TLB*

This exception occurs when a read (load), write (store), execute, or gateway attempts to access a virtual address for which the matching global TLB entry would permit this access, but the detail bit in the global TLB entry is set.

*Prototype*

int AccessDetailRequiredByGlobalTLB(int address, int size, int access)

*Description*

The address at which the access was attempted is passed as *address.* The size of the access in bytes is passed as *size.* The type of access is passed as *access,* with 0 meaning read, 1 meaning write, 2 meaning execute, and 3 meaning gateway. The exception handler should determine accessibility and return if the access should be allowed. Upon return, execution is restarted and the access will be forced to be permitted. If the access is not to be allowed, the handler should not return.

*Cache coherence action required by global TLB*

This exception occurs when a read (load, execute, or gateway), write (store), or replacement attempts to access a virtual address for which the coherence state of the matching global TLB entry cannot permit this access.

*Prototype*

int CacheCoherence InterventionRequired(int address, int size, int access)

*Description*

The address at which the access was attempted is passed as *address.* The size of the access in bytes is passed as *size.* The type of access is passed as *access,* with 0 meaning read, 1 meaning write, 2 meaning replacement. The exception handler should modify the virtual memory state to make the global TLB accessible. Upon return, execution is restarted and the access will be retried.

*Global TLB miss*

This exception occurs when a read (load), write (store), execute, or gateway attempts to access a virtual address for which no global TLB entry matches.

*Prototype*

void GlobalTLBMiss(int address, int size, int access)

*Description*

The address at which the global TLB miss occurred is passed as *address.* The size of the access in bytes is passed as *size.* The type of access is passed as *access,* with 0 meaning read. 1 meaning write, 2 meaning execute, and 3 meaning gateway. The exception handler should load a global TLB entry which defines the translation and protection for this address. Upon return, execution is restarted and the global TLB access will be attempted again.

*Access disallowed by local TLB*

This exception occurs when a read (load), write (store), execute, or gateway attempts to access a virtual address for which the matching local TLB entry does not permit this access.

*Prototype*

int AccessDisallowedByLocalTLB(int address, int size, int access)

*Description*

The address at which the access was attempted is passed as *address.* The size of the access in bytes is passed as *size.* The type of access is passed as *access,* with 0 meaning read, 1 meaning write, 2 meaning execute, and 3 meaning gateway. The exception handler should determine accessibility, modify the virtual memory state if desired, and return if the access should be allowed. Upon return, execution is restarted and the access will be retried.

*Access detail required by local TLB*

This exception occurs when a read (load), write (store), execute, or gateway attempts to access a virtual address for which the matching local TLB entry would permit this access, but the detail bit in the local TLB entry is set.

*Prototype*

int AccessDetailRequiredByLocalTLB(int address, int size, int access)

*Description*

The address at which the access was attempted is passed as *address.* The size of the access in bytes is passed as *size.* The type of access is passed as *access,* with 0 meaning read, 1 meaning write, 2 meaning execute, and 3 meaning gateway. The exception handler should determine accessibility and return if the access should be allowed. Upon return, execution is restarted and the access will be forced to be permitted. If the access is not to be allowed, the handler should not return.

*Cache* coherence *action required by local TLB*

This exception occurs when a read (load, execute, or gateway), write (store), or replacement attempts to access a virtual address for which the coherence state of the matching local TLB entry cannot permit this access.

*Prototype*

int CacheCoherence InterventionRequired(int address, int size, int access)

*Description*

The address at which the access was attempted is passed as *address.* The size of the access in bytes is passed as *size.* The type of access is passed as *access,* with 0 meaning read, 1 meaning write, 2 meaning replacement. The exception handler should modify the virtual memory state to make the local TLB accessible. Upon return, execution is restarted and the access will be retried.

*Local TLB miss*

This exception occurs when a read (load), write (store), execute, or gateway attempts to access a virtual address for which no local TLB entry matches.

*Prototype*

void LocalTLBMiss(int address, int size, int access)

*Description*

The address at which the local TLB miss occurred is passed as *address.* The size of the access in bytes is passed as *size.* The type of access is passed as *access,* with 0 meaning read, 1 meaning write, 2 meaning execute, and 3 meaning gateway. The exception handler should load a local TLB entry which defines the translation and protection for this address. Upon return, execution is restarted and the local TLB access will be attempted again.

*Floating-point arithmetic*

*Prototype*

quad FloatingPointArithmetic(int inst, quad ra, quad rb, quad rc)

*Description*

The contents of the instruction which was the cause of the exception is passed as *inst,* and the contents of registers ra, rb and rc are passed as *ra, rb* and *rc.* The exception handler should attempt to perform the function specified in the instruction and service any exceptional conditions that occur. The result of the function is placed into register rc or rd upon return.

*Fixed-point arithmetic*

*Prototype*

int FixedPointrArithmetic(int inst, int ra, int rb)

*Description*

The contents of the instruction which was the cause of the exception is passed as *inst,* and the contents of registers ra and rb are passed as *ra* and *rb.* The exception handler should attempt to perform the function specified in the instruction and service any exceptional conditions that occur. The result of the function is placed into register rb or rc.

*Reserved Instruction*

*Prototype:*

int ReservedInstruction(int inst, int ra, int rb)

*Description :*

The contents of the instruction which was the cause of the exception is passed as *inst,* and the contents of registers ra and rb are passed as *ra* and *rb.* The result of the function is placed into register rd.

*Access Disallowed by virtual address*

This exception occurs when a load, store, branch, or gateway refers to an aligned memory operand with an improperly aligned address.

*Prototype*:

int AccessDisallowedByVirtualAddress(int inst, int address)

*Description:*

The contents of the instruction which was the cause of the exception is passed as *inst,* and the address at which the access was attempted is passed as *address.*

*Clock*

Each Euterpe processor includes a clock that maintains processor-clock-cycle accuracy. The value of the **clock cycle** register is incremented on every cycle, regardless of the number of instructions executed on that cycle. The **clock cycle** register is 64-bits long.

For testing purposes the **clock cycle** register is both readable and writable, though in normal operation it should be written only at system initialization time; there is no mechanism provided for adjusting the value in the clock cycle counter without the possibility of losing cycles.

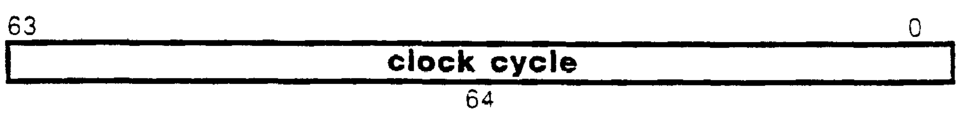


*Clock Event*

An event is asserted when the value in the **clock cycle** register is equal to the value in the **clock match** register, which sets the specified **clock event** bit in the event register.

For testing purposes the **clock match** register is both readable and writable, though in normal operation it is normally written to.

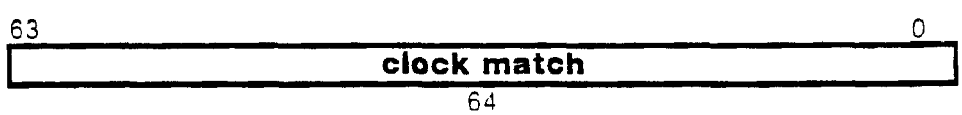

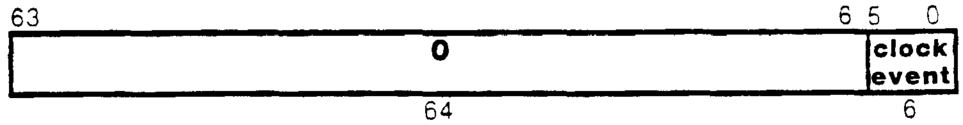


*Watchdog Timer*

A Machine Check is asserted when the value in the clock cycle register is equal to the value in the **watchdog timer** register.

The **watchdog timer** register is both readable and writable, though in normal operation it is usually and periodically written with a sufficiently large value that the register does not equal the value in the clock cycle register before the next time it is written.

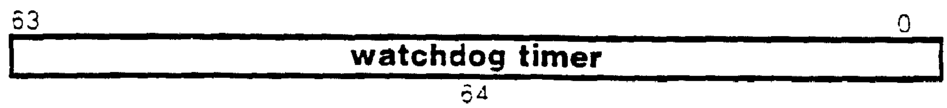


*Tally Counter*

Each Euterpe processor includes two counters that can tally processor-related events or operations. The value of the tally **counter** registers are incremented on each processor clock cycle in which specified events or operations occur. The tally counter registers do not signal Euterpe events.

It is required that a sufficient number of bits be implemented so that the tally counter registers overflow no more frequently than once per second. 32 bits is sufficient for a 4 GHz clock. The remaining unimplemented bits must be zero whenever read, and ignored on write.

For testing purposes each of the tally counter registers are both readable and writable, though in normal operation each should be written only at system initialization time; there is no mechanism provided for adjusting the value in the event counter registers without the possibility of losing counts.

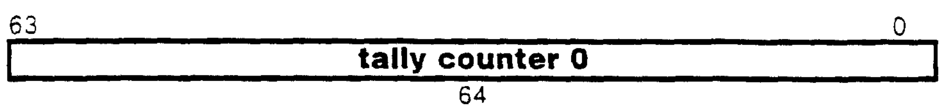


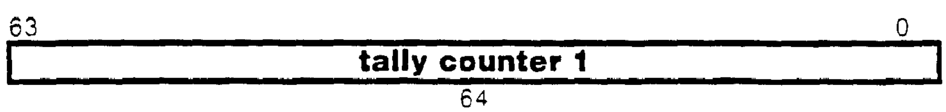


The rally counter control register selects one event for each of the event counters to tally.

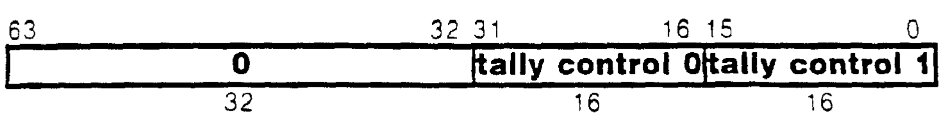


The valid values for the tally control fields are given by the following table:

| value | interpretation |
|---|---|
| 0..63 | tally events 0..63 |

(continued)

| value | interpretation |
|---|---|
| 64 | freeze counter: count nothing |
| 65 | tally instructions processed by address unit |
| 66 | tally instructions processed by execute unit |
| 67 | tally instruction cache misses |
| 68 | tally data cache misses |
| 69 | tally data cache references |
| 70.. 65535 | Reserved |
| tally control field interpretation | |

*Control Register Addresses*

This section is under construction. Software and hardware designers should not infer anything about the value of the addresses from the ordering or entries in the tentative table below:

| physical address | description |
|---|---|
| | event register |
| | event register with stall |
| | event register bit set |
| | event register bit clear |
| | event daemon address |
| | full thread 0, general register 0, data fetch stage |
| | ... |
| | full thread 0, general register 63, data fetch stage |
| | full thread 0, program counter and privilege level, data fetch state |
| | full thread 0, control register, data fetch state |
| | full thread 0, status register, data fetch state |
| | full thread 0, general register 0, execution stage |
| | ... |
| | full thread 0, general register 63, execution stage |
| | full thread 0, program counter and privilege level, execution state |
| | full thread 0, control register, execution stage |
| | full thread 0, status register, execution stage |
| | event thread 0, general register 0, data fetch stage |
| | ... |
| | event thread 0, general register 15, data fetch stage |
| | event thread 0, program counter and privilege level, data fetch state |
| | event thread 0, control register, data fetch state |
| | event thread 0, status register, data fetch state |
| | event thread 0, general register 0, execution stage |

(continued)

| physical address | description |
|---|---|
| | ... |
| | event thread 0, general register 15, execution stage |
| | event thread 0, program counter and privilege level, execution state |
| | event thread 0, control register, execution stage |
| | event thread 0, status register execution stage |
| | local TLB entry 0 |
| | local TLB entry 1 |
| | local TLB entry 2 |
| | local TLB entry 3 |
| | clock cycle register |
| | clock match register |
| | clock event control register |
| | tally counter 0 |
| | tally counter 1 |
| | tally control 0/1 |

*Reset and Error Recovery*

Certain external and internal events cause the Euterpe processor to invoke reset or error recovery operations. These operations consist of a full or partial reset of critical machine state, including initialization of the event thread to begin fetching instructions from the start vector address. Software may determine the nature of the **reset** or error by reading the value of the Cerberus control register, in which finding the **reset** bit set (1) indicates that a reset has occurred, finding the clear bit set (1) and the **reset** bit cleared (0) indicates that a logic clear has occurred, and finding both the **reset** and **clear** bits cleared (0) indicates that a machine check has occurred. When either a reset or machine check has been indicated, the contents of the Cerberus status register contains more detailed information on the cause.

*Reset*

A reset may be caused by a Cerberus reset, a write of the Cerberus control register which sets the reset bit, or internally detected errors including meltdown detection, and double machine check.

A reset causes the Euterpe processor to set the configuration to minimum power and low clock speed, note the cause of the reset in the Cerberus status register, stabilize the phase locked loops, set the local TLB to translate all local virtual addresses to equal physical addresses, and initialize a single event thread to begin execution at the start vector address.

Other system state is left undefined by reset and must be explicitly initialized by software; this explicitly includes the main thread state, global TLB state, superspring state, Hermes channel interfaces, Mnemosyne memory and Cerberus interface devices. The code at the start vector address is responsible for initializing these remaining system facilities, and reading further bootstrap code from a series of standard interface devices to be specified.

*Power-on Reset*

A reset occurs upon initial power-on. The cause of the reset is noted by initializing the Cerberus status register and other registers to the reset values noted below.

*Cerberus-arounded Reset*

A reset occurs upon observing that the Cerberus SD data signal has been at a logic low level for at least 33 cycles of the Cerberus SC clock signal. The cause of the reset is noted by initializing the Cerberus status register and other registers to the reset values noted below.

*Cerberus Control Register Reset*

A reset occurs upon writing a one to the reset bit of the Cerberus control register. The cause of the reset is noted by initializing the Cerberus status register and other registers to the reset values noted below.

*Meltdown Detected Reset*

A reset occurs if the temperature is above the threshold set by the **meltdown margin** field of the Cerberus configuration register. The cause of the reset is noted by setting the **meltdown detected** bit of the Cerberus status register.

*Double Machine Check Reset*

A reset occurs if a second machine check occurs that prevents recovery from the first machine check. Specifically, the occurrence of an **exception in event thread**, **watchdog timer error**, or **Cerberus transaction error** while any machine check cause bit is still set in the Cerberus status register results in a double machine check reset. The cause of the reset is noted by setting the **double machine check** bit of the Cerberus status register.

*Clear*

Writing a one to the clear bit of the Cerberus control register invokes a logic clear. A logic clear causes the Euterpe processor to set the configuration to the power and swing levels written in deferred state to the Cerberus power and swing registers, configuration register and Hermes channel configuration registers, stabilize the phase locked loops, set the local TLB to translate all local virtual addresses to equal physical addresses, and initialize a single event thread to begin execution at the start vector address. The cause of the clear is noted by leaving the **clear** bit of the Cerberus control register set to a one (1) at the end of the logic clear.

*Machine Check*

Detected hardware errors, such as communications errors in one of the Hermes channels or the Cerberus bus, a watchdog timeout error, or internal cache parity errors, invoke a machine check. A machine check will set the local TLB to translate all local virtual addresses to equal physical addresses, note the cause of the exception in the Cerberus status register, and transfer control of the event thread to the start vector address. This action is similar to that of a reset, but differs in that the configuration settings, main thread state, and Cerberus and Mnemosyne state are preserved.

Recovery from machine checks depends on the severity of the error and the potential loss of information as a direct cause of the error. The start vector address is designed to reach instruction memory accessed via Cerberus, so that operation of machine check diagnostic and recovery code need not depend on proper operation or contents of any Hermes channel device. The program counter and register file state of the event thread prior to the machine check is lost (except for the portion of the program counter saved in the Cerberus status register), so diagnostic and recovery code must not assume that the register file state is indicative of the prior operating state of the event thread. The state of the main thread is frozen similarly to that of a main thread exception.

Machine check diagnostic code determines the cause of the machine check from the processor's Cerberus status register, and as required, the Cerberus status and other registers of devices connected to the ByteChannels. Any outstanding memory transactions may be recovered by a combination of software to re-issue outstanding writes, and by aborting and restarting the main thread execution pipeline to purge outstanding reads.

Because Cerberus operates much more slowly than the peak speed of the Euterpe processor under normal operation, machine check diagnostic and recovery code will generally consume enough time that real-time interface performance targets may have been missed. Consequently, the machine check recovery software may need to repair further damage, such as interface buffer underruns and overruns as may have occurred during the intervening time.

This final recovery code, which re-initializes the state of the interface system and recovers a functional event thread state, may return to using the complete machine resources, as the condition which caused the machine check will have been resolved.

The following table lists the causes of machine check errors.

| |
|---|
| Parity or uncorrectable error in Euterpe cache |
| Parity or uncorrectable error in Mnemosyne cache |

(continued)

| |
|---|
| Parity or uncorrectable error in Calliope memory |
| Parity or uncorrectable error in system-level memory |
| Communications error in Hermes channels |
| Communications error in Cerberus bus |
| Event Thread exception |
| Watchdog timer |
| machine check errors |

*Parity or Uncorrectable Error in Cache*

When a parity or uncorrectable error occurs in a Euterpe or Mnemosyne cache, such an error is generally non-recoverable. These errors are non-recoverable because the data in such caches may reside anywhere in memory, and because the data in such caches may be the only up-to-date copy of that memory contents. Consequently, the entire contents of the memory store is lost, and the severity of the error is high enough to consider such a condition to be a system failure.

The machine check provides an opportunity to report such an error before shutting down a system for repairs.

There are specific means by which a system may recover from such an error without failure, such as by restarting from a system-level checkpoint, from which a consistent memory state can be recovered.

*Parity or Uncorrectable Error in Memory*

When a parity of uncorrectable error occurs in Mnemosyne or Calliope memory, such an error may be partially recoverable. The contents of the affected area of memory is lost, and consequently the tasks associated with that memory must generally be aborted, or resumed from a task-level checkpoint. If the contents of the affected memory can be recovered from mass storage, a complete recovery is possible.

If the affected memory is that of a critical part of the operating system, such a condition is considered a system failure, unless recovery can be accomplished from a system-level checkpoint.

*Communications Error in Hermes Channels*

A communications error in Hermes channels, such as a check byte error, command error, or timeout error, is generally fully recoverable.

Bits corresponding to the affected Hermes channel are set in the processor's Cerberus status register. Recovery software should determine which devices are affected, by querying the Cerberus status register of each device on the affected Hermes channels.

Read and write transactions may have been underway at the time of a machine check. Because the machine check freezes the Hermes channel(s), these transactions will not be completed. Recovery software must search through the memory interface buffers for uncompleted write operations and re-issue them as stores, then must reset the memory interface buffer to a known state.

*Communications Error in Cerberus Bus*

A communications error in the Cerberus bus, such as a Cerberus transaction error is generally fully recoverable. A Cerberus transaction error (due to timeout) may result from normal system self-configuration operations to determine the existence of optional devices in the system.

*Watchdog Timeout Error*

A watchdog timeout error indicates a general software or hardware failure. Such an error is generally treated as non-recoverable and fatal.

*Event Thread Exception*

When an event thread suffers an exception, the cause of the exception and a portion of the virtual address at which the exception occurred are noted in the Cerberus status register. Because under normal circumstances, the event thread should be designed not to encounter exceptions, such exceptions are treated as non-recoverable, fatal errors.

*Start Vector Address*

The start vector address is used to initialize the event thread with a program counter upon a reset, clear or machine check. These causes of such initialization can be differentiated by the contents of the Cerberus status register.
The start vector address is a virtual address which, when "translated" by the local TLB to a physical address is designed to access node number zero on the local Cerberus network, which will ordinarity contain an interface to the bootstrap ROM code. The Cerberus/Bootstrap ROM space is chosen to minimize the number of internal Terpsichore resources and Terpsichore interfaces that must be operated to begin execution or recover from a machine check.

| virtual address | description |
|---|---|
| Ox0003 0000 0000 0000 | start vector address |

*Bootstrap Code*

Bootstrap code requirements are a necessary part of the Terpsichore System Architecture, but remains to be specified in a later version of this document.
The basic requirements of Terpsichore bootstrap code include power-on initialization of Euterpe, Calliope, and Mnemosyne devices, using Cerberus control registers; handling of machine checks, selection of an interface from which further bootstrap code is obtained. Interfaces should be scanned in a priority-based ordering which gives highest priority to removable/replaceable read-only storage devices, then removable/replaceable read-write devices, then network interfaces, then non-removable storage devices.

*Cerberus Registers*

Cerberus registers are internal read/only and read/write registers which provide an implementation-independent mechanism to query and control the configuration of devices in a Terpsichore system. By the use of these registers, a user of a Terpsichore system may tailor the use of the facilities in a general-purpose implementation for maximum performance and utility. Conversely, a supplier of a Terpsichore system component may modify facilities in the device without compromising compatibility with earlier implementations. These registers are accessed via the Cerberus serial bus.
As a device component of a Terpsichore system, each Euterpe processor contains a set of Cerberus-accessable configuration registers. Additional sets of configuration registers are present for each additional device in a Euterpe system, including Mnemosyne Memory devices, and Calliope interface devices.
Read/only registers supply information about the Terpsichore system implementation in a standard, implementation-independent fashion. Terpsichore software may take advantage of this information, either to verify that a compatible implementation of Mnemosyne is installed, or to tailor the use of the part to conform to the characteristics of the implementation.
The read/only registers occupy addresses 0..5. An attempt to write these registers may cause a normal or an error response.
Read/write registers select operating modes and select power and voltage levels for gates and signals. The read/write registers occupy addresses 6..9 and 25..43.
Reserved registers in the range 10..24 and 44..63 must appear to be read/only registers with a zero value. An attempt to write these registers may cause a normal or an error response.
Reserved registers in the range 64..$2^{16}$-1 may be implemented either as read/only registers with a zero value, or as addresses which cause an error response if reads or writes are attempted.
The format of the registers is described in the table below. The **octlet** is the Cerberus address of the register; **bits** indicate the position of the field in a register. **The value** indicated is the hard-wired value in the register for a read/only register, and is the value to which the register is initialized upon a reset for a read/write register. If a reset does not initialize the field to a value, or if initialization is not required by this specification, a * is placed in or appended to the value field. The **range** is the set of legal values to which a read/write register may be set. The **interpretation** is a brief description of the meaning or utility of the register field: a more comprehensive description follows this table.

| octlet | bits | field name | value range | | interpretation |
|---|---|---|---|---|---|
| 0 | 63..16 | **architecture code** | 0x00 40 a3 24 69 93 | | Identifies processor device as compliant with MicroUnity Euterpe processor architecture. |
| | 15..0 | **architecture revision** | 0x01 00 | | Device complies with architecture version 1.0. |

| octlet | bits | field name | value range | | interpretation |
|---|---|---|---|---|---|
| 1 | 63..16 | **implementor code** | 0x00 40 a3 d2 b6 7f | | Identifies Euterpe processor device as implemented by MicroUnity. |
| | 15..0 | **implementor revision** | 0x01 00 | | Implementation version 1.0. |

| octlet | bits | field name | value range | | interpretation |
|---|---|---|---|---|---|
| 2 | 63..16 | **manufacturer code** | 0x00 40 a3 69 db 3f | | Identifies initial manufacturer of Euterpe processor device implemented by MicroUnity. |
| | 15..0 | **manufacturer revision** | 0x01 00 | | Manufacturing version 1.0. |

| octlet | bits | field name | value range | | interpretation |
|---|---|---|---|---|---|
| 3 | 63..16 | **serial number** | 0 | | This device has no serial number capability. |
| | | **dynamic address** | 0 | | This device has no dynamic addressing capability. |

| octlet | bits | field name | value | range | interpretation |
| --- | --- | --- | --- | --- | --- |
| 4 | 63..60 | **A** | 4 | 0..15 | size of a Hermes address |
| | 59..56 | **$\log_2$W** | 3 | 0..15 | size of a Hermes word |
| | 55..54 | **0** | 0 | | reserved |
| | 53 | **I** | 0 | 0..1 | set if support for Icarus |
| | 52 | **i** | 1 | 0..1 | $\log_2$ Hermes words per interleave block |
| | 51..48 | **H** | 2 | 0..15 | number of Hermes channels |
| | 47 | | 0 | | reserved |
| | 46 | **$C_c$** | 0 | 0..1 | set if instruction SRAM can be all cache (enough tag storage) |
| | 45 | **$C_b$** | 1 | 0..1 | set if instruction SRAM can be all buffer |
| | 44..40 | **C** | 9 | 0..31 | $\log_2$ cache blocks in instruction SRAM (buffer+cache) |
| | 39 | | 0 | | reserved |
| | 38 | **$D_c$** | 0 | 0..1 | set if data SRAM can be all cache (enough tag storage) |
| | 37 | **$D_b$** | 1 | 0..1 | set if data SRAM can be all buffer |
| | 36..32 | **D** | 9 | 0..31 | $\log_2$ cache blocks in data SRAM/buffer+cache |
| | 31..30 | | 0 | | reserved |
| | 29..28 | **L** | 0 | 0..3 | $\log_2$ entries in local TLB (per thread) |
| | 27..24 | **G** | 6 | 0..15 | $\log_2$ entries in global TLB |
| | 23..21 | | 0 | | reserved |
| | 20..16 | **T** | 5 | 1..31 | number of execution threads |
| | 15..0 | | 0 | | Reserved for definition in later revision of Euterpe architecture |

| octlet | bits | field name | value | range | interpretation |
| --- | --- | --- | --- | --- | --- |
| 5 | 63.0 | | 0 | | Reserved for definition in later revision of Euterpe architecture |

| octlet | bits | field name | value | range | interpretation |
| --- | --- | --- | --- | --- | --- |
| 6 | 63 | **reset** | 1 | 0..1 | set to invoke device's circuit reset |
| | 62 | **clear** | 1 | 0..1 | set to invoke device's logic clear |
| | 61 | **selftest** | 0 | 0..1 | set to invoke device's selftest: bits 60..48 may indicate depth of selftest |
| | 60 | **defer writes** | 0* | 0..1 | set to cause writes to octlets 25..43 to be deferred until the next logic-clear or non-deferred write. |
| | 59..48 | **0** | 0 | 0 | Reserved |
| | 47..44 | **Hermes channel expansion** | 0 | 0 | Reserved for additional Hermes channel disable bits. |
| | 43..32 | **Hermes channel disable** | 4095 | 0..4095 | For each Hermes channel, set to cause input channel to be ignored and idles to be generated. Upon clearing the bit, the input channel phase adjustment is reset, and after a suitable delay, the input and Hermes output channel links are available for use. |
| | 31..20 | **0** | 0 | 0 | Reserved |
| | 19..16 | **channel under test** | 0* | 0..11 | Channel on which cidle 0 and cidle 1 are transmitted in place of normal idle pattern (0, 255), and from which raw input bytes are sampled. |
| | 15..8 | **cidle 0** | 0* | 0..255 | Value transmitted on idle Hermes output channel when output clock zero (0). |
| | 7..0 | **cidle 1** | 255* | 0..255 | Value transmitted on idle Hermes output channel when output clock one (1). |

| octlet | bits | field name | value | range | interpretation |
|---|---|---|---|---|---|
| 7 | 63 | **reset/clear/ selftest complete** | 1 | 0..1 | This bit is set when a reset, clear or selftest operation has been completed. |
| | 62 | **reset/clear/ selftest status** | 1 | 0..1 | This bit is set when a reset, clear or selftest operation has been completed successfully. |
| | 61 | **meltdown detected** | 0 | 0..1 | This bit is set when the meltdown detector has caused a reset. |
| | 60 | **double machine check** | 0 | 0..1 | This bit is set when a double machine check has caused a reset. |
| | 59 | **other reset cause** | 0 | 0..1 | This bit is reserved for indicating additional causes of reset. |
| | 58 | **exception in event thread** | 0 | 0..1 | This bit is set when an exception in event thread has caused a machine check. |
| | 57 | **watchdog timeout error** | 0 | 0..1 | This bit is set when a watchdog timeout has caused a machine check. |
| | 56 | **Cerberus transaction error** | 0 | 0..1 | This bit is set when a Cerberus transaction error has caused a machine check. |
| | 55 | **Hermes channel check byte error** | 0 | 0..1 | This bit is set when a Hermes channel check byte error has caused a machine check. |
| | 54 | **Hermes channel command error** | 0 | 0..1 | This bit is set when a Hermes channel command error has caused a machine check. |
| | 53 | **Hermes channel timeout error** | 0 | 0..1 | This bit is set when a Hermes channel timeout has caused a machine check. |
| | 52..48 | **0** | 0* | 0 | Reserved for other machine check causes. |
| | 47..32 | **machine check detail** | 0* | 0..4095 | Set to indicate exception code if Exception in event thread. Set to bitmap of which Hermes channels if Hermes channel error. |
| | 31..16 | **machine check program counter** | 0 | 0 | Set to indicate bits 31..16 of the value of the event thread program counter at the initiation of a machine check. |
| | 15..8 | **raw 0** | * | 0..255 | Value sampled on specified Hermes channel when input clock is zero (0). |

| octlet | bits | field name | value | range | interpretation |
|---|---|---|---|---|---|
| | 7..0 | **raw 1** | * | 0..255 | Value sampled on specified Hermes channel immediately following sample value in **raw 0** register. |

| octlet | bits | field name | value | range | interpretation |
|---|---|---|---|---|---|
| 8 | 63..0 | **indirect address** | 0* | 0..2^64-1 | Write to this register to set physical address used for reads and writes to indirect data register. |

| octlet | bits | field name | value | value | interpretation |
|---|---|---|---|---|---|
| 9 | 63..0 | **indirect data** | * | 0..2^64-1 | Read and write to this register to reach physical addresses not otherwise accessable via Cerberus. |

| octlet | bits | field name | value | range | interpretation |
|---|---|---|---|---|---|
| 10..24 | 63..0 | **0** | 0 | 0 | Reserved for expansion of Cerberus registers upward or knobcity registers downward. |

| octlet | bits | field name | value | range | interpretation |
|---|---|---|---|---|---|
| 25 | 63..56 | **Unassigned Custom knob** | 121 | 1..127 | Knob settings for Unassigned custom circuits. |
| | 55..48 | **Unassigned Custom knob** | 121 | 1..127 | Knob settings for Unassigned custom circuits. |
| | 47..40 | **CI Tag knob** | 121 | 1..127 | Knob settings for CI Tag circuits. |
| | 39..32 | **CD Tag knob** | 121 | 1..127 | Knob settings for CD Tag circuits. |
| | 31..24 | **TLB knob** | 121 | 1..127 | Knob settings for TLB circuits. |
| | 23..16 | **Branch Target Cache knob** | 121 | 1..127 | Knob settings for Branch Target Cache circuits. |
| | 15..8 | **I Cache knob** | 121 | 1..127 | Knob settings for Instruction Cache circuits. |
| | 7..0 | **Eastside Repeater knob** | 121 | 1..127 | Knob settings for Eastside Repeater circuits. |

| octlet | bits | field name | value | range | interpretation |
|---|---|---|---|---|---|
| 26 | 63..56 | **spar 1,2 knob** | 121 | 1..127 | Knob settings for SOFA region spar 1, 2. |
| | 55..48 | **spar 1,2 knob** | 121 | 1..127 | Knob settings for SOFA region spar 1, 2. |
| | 47..40 | **spar 1,2 knob** | 121 | 1..127 | Knob settings for SOFA region spar 1, 2. |
| | 39..32 | **spar 1,2 knob** | 121 | 1..127 | Knob settings for SOFA region spar 1, 2. |
| | 31..24 | **spar 0 knob** | 121 | 1..127 | Knob settings for SOFA region spar 0. |
| | 23..16 | **spar 0 knob** | 121 | 1..127 | Knob settings for SOFA region spar 0. |
| | 15..8 | **spar 0 knob** | 121 | 1..127 | Knob settings for SOFA region spar 0. |
| | 7..0 | **spar 0 knob** | 121 | 1..127 | Knob settings for SOFA region spar 0. |

| octlet | bits | field name | value | range | interpretation |
|---|---|---|---|---|---|
| 27 | 63..56 | **spar 5,6 knob** | 121 | 1..127 | Knob settings for SOFA region spar 5,6. |
| | 55..48 | **spar 5,6 knob** | 121 | 1..127 | Knob settings for SOFA region spar 5,6. |
| | 47..40 | **spar 5,6 knob** | 121 | 1..127 | Knob settings for SOFA region spar 5,6. |
| | 39..32 | **spar 5,6 knob** | 121 | 1..127 | Knob settings for SOFA region spar 5,6. |
| | 31..24 | **spar 3,4 knob** | 121 | 1..127 | Knob settings for SOFA region spar 3,4. |
| | 23..16 | **spar 3,4 knob** | 121 | 1..127 | Knob settings for SOFA region spar 3,4. |
| | 15..8 | **spar 3,4 knob** | 121 | 1..127 | Knob settings for SOFA region spar 3,4. |
| | 7..0 | **spar 3,4 knob** | 121 | 1..127 | Knob settings for SOFA region spar 3,4. |

| octlet | bits | field name | value | range | interpretation |
|---|---|---|---|---|---|
| 23 | 63..56 | **spar 9,10 knob** | 121 | 1..127 | Knob settings for SOFA region spar 9,10. |
| | 55..48 | **spar 9,10 knob** | 121 | 1..127 | Knob settings for SOFA region spar 9,10. |
| | 47..40 | **spar 7,8 knob** | 121 | 1..127 | Knob settings for SOFA region spar 7,8. |
| | 39..32 | **spar 7,8 knob** | 121 | 1..127 | Knob settings for SOFA region spar 7,8. |
| | 31..24 | **spar 7,8 knob** | 121 | 1..127 | Knob settings for SOFA region spar 7,8. |
| | 23..16 | **spar 7,8 knob** | 121 | 1..127 | Knob settings for SOFA region spar 7,8. |
| | 15..8 | **Clocks knob** | 121 | 1..127 | Knob settings for clock circuits. |
| | 7..0 | **PLL knob** | 85 | 1..127 | Knob settings for PLL circuits. |

| octlet | bits | field name | value | range | interpretation |
|---|---|---|---|---|---|
| 29 | 63..56 | **spar 13,14 knob** | 121 | 1..127 | Knob settings for SOFA region spar 13,14. |
| | 55..48 | **spar 13,14 knob** | 121 | 1..127 | Knob settings for SOFA region spar 13,14. |
| | 47..40 | **spar 11,12 knob** | 121 | 1..127 | Knob settings for SOFA region spar 11,12. |
| | 39..32 | **spar 11,12 knob** | 121 | 1..127 | Knob settings for SOFA region spar 11,12. |
| | 31..24 | **spar 11,12 knob** | 121 | 1..127 | Knob settings for SOFA region spar 11,12. |
| | 23..16 | **spar 11,12 knob** | 121 | 1..127 | Knob settings for SOFA region spar 11,12. |
| | 15..8 | **spar 9,10 knob** | 121 | 1..127 | Knob settings for SOFA region spar 9,10. |
| | 7..0 | **spar 9,10 knob** | 121 | 1..127 | Knob settings for SOFA region spar 9,10. |

| octlet | bits | field name | value | range | interpretation |
|---|---|---|---|---|---|

| | | | | | |
|---|---|---|---|---|---|
| 30 | 63..56 | **Hermes channel knob** | 121 | 1..127 | knob settings for Hermes channel circuits. |
| | 55..48 | **Westside Repeaters knob** | 121 | 1..127 | Knob settings for Westside Repeater circuits. |
| | 47..40 | **D Cache knob** | 121 | 1..127 | Knob settings for Data Cache circuits. |
| | 39..32 | **Spring knob** | 121 | 1..127 | Knob settings for Spring circuits. |
| | 31..24 | **Unassigned Custom knob** | 121 | 1..127 | Knob settings for Unassigned custom circuits. |
| | 23..16 | **Unassigned Custom knob** | 121 | 1..127 | Knob settings for Unassigned custom circuits. |
| | 15..8 | **spar 13,14 knob** | 121 | 1..127 | Knob settings for SOFA region spar 13,14. |
| | 7..0 | **spar 13,14 knob** | 121 | 1..127 | Knob settings for SOFA region spar 13,14. |

| octlet | bits | field name | value range | | interpretation |
|---|---|---|---|---|---|
| 31 | 63 | **0** | 0 | 0 | Reserved |
| | 62..58 | **resistor fine tuning** | 20* | 0..31 | Set to fine tune resistor termination value |
| | 57..56 | **swing fine tuning** | 1* | 0..3 | Set to fine-tune voltage swing and reference level knob settings. |
| | 55 | **0** | 0 | 0 | Reserved |
| | 54..52 | **process control** | 5 | 4..6 | Set based on value read from PMOS drive strength, used to fine-tune resistor values in knob settings. |
| | 51 | **0** | 0 | 0 | Reserved |
| | 50..48 | **PMOS drive strength** | * | 0..7 | This read/only field indicates the drive strength of PMOS devices expressed as a digital binary value. |
| | 47..43 | **PLL1 divide ratio** | 8* | 8..23 | PLL1 divider ratio |
| | 42 | **PLL1 feedback bypass** | 1* | 0..1 | Set to invoke PLL1 feedback bypass. |
| | 41 | **PLL1 range** | 0* | 0..1 | Set for operation at high frequency (above 0.xxx GHz); cleared for operation at low frequency (below 0.yyy GHz). |
| | 40 | **PLL prescaler bypass** | 0 | 0..1 | Set to invoke PLL0 and PLL1 prescaler bypass, otherwise divide input clock by 10. |
| | 39..35 | **PLL0 divide ratio** | 8 | 8..23 | PLL0 divider ratio |
| | 34 | **PLL0 feedback bypass** | 1 | 0..1 | Set to invoke PLL0 feedback bypass. |
| | 33 | **PLL0 range** | 0 | 0..1 | Set for operation at high frequency (above 0.xxx GHz); cleared for operation at low frequency (below 0.yyy GHz). |
| | 32 | **conversion prescaler bypass** | 0 | 0..1 | Set to invoke temperature conversion prescaler bypass, otherwise divide input clock by 10. |
| | 31..24 | **analog measurement** | 0 | 0..255 | Set to measure analog levels at various test points within device. |
| | 23..22 | **meltdown threshold** | 0 | 0..3 | Set to perform margin testing of the meltdown detector. |
| | 21 | **conversion start** | 0* | 0..1 | Setting this bit causes the conversion to begin. The bit remains set until conversion is complete |
| | 20 | **0** | 0 | 0 | Reserved. (selection extension) |

| | | | | |
|---|---|---|---|---|
| 19..16 | **conversion selection** | 0* | 0..9 | Field selects which of ten measurements are taken |
| 15..10 | **0** | 0 | 0 | Reserved. (counter extension) |
| 9..0 | **conversion counter** | 0* | 0..1023 | This field is set to the two's complement of the downslope count. The counter counts upward to zero, and then continues counting on the upslope until conversion completes. |

| octlet | bits | field name | value | range | interpretation |
|---|---|---|---|---|---|
| 32..43 | 63 | **0** | 0 | 0 | Reserved |
| | 62 | **quadrature bypass** | 0* | 0..1 | Setting this bit causes the quadrature circuit to be bypassed: the input clock signal is used directly. |
| | 61 | **quadrature range** | 0* | 0..1 | Set to 0 if the Hermes channel is operating at a low frequency; 1 if the Hermes channel is operating at a high frequency. |
| | 60 | **output termination** | 1 | 0..1 | Set to enable output terminators. Cleared to disable output terminators. |
| | 59..57 | **termination resistance** | 1 | 0..7 | Set termination resistance level. |
| | 56..54 | **output current** | 1 | 0..7 | Set output current level. |
| | 53..48 | **skew bit 7** | 1 | 0..63 | Set delay in Ho7 skew circuit. |
| | 47..42 | **skew bit 6** | 1 | 0..63 | Set delay in Ho6 skew circuit. |
| | 41..36 | **skew bit 5** | 1 | 0..63 | Set delay in Ho5 skew circuit. |
| | 35..30 | **skew bit 4** | 1 | 0..63 | Set delay in Ho4 skew circuit. |
| | 29..24 | **skew bit 3** | 1 | 0..63 | Set delay in Ho3 skew circuit. |
| | 23..18 | **skew bit 2** | 1 | 0..63 | Set delay in Ho2 skew circuit. |
| | 17..12 | **skew bit 1** | 1 | 0..63 | Set delay in Ho1 skew circuit. |
| | 11..6 | **skew bit 0** | 1 | 0..63 | Set delay in Ho0 skew circuit. |
| | 5..0 | **skew clk** | 1 | 0..63 | Set delay in HoC skew circuit. |

| octlet | bits | field name | value | range | interpretation |
|---|---|---|---|---|---|
| 44..63 | 63..0 | **0** | 0 | 0 | Reserved for use with additional Hermes channel interfaces |

| octlet | bits | field name | value | range | interpretation |
|---|---|---|---|---|---|
| 64.. 65536 | 63..0 | **0** | 0 | 0 | Reserved for use with later revisions of the architecture. |

configuration memory space

*Identification Registers*

The identification registers in octlets 0..3 comply with the requirements of the Cerberus architecture.
MicroUnity's company identifier is: 0000 0000 0000 0010 1100 0101.
MicroUnity's architecture code for Euterpe is specified by the following table:

| Internal code name | Code number |
|---|---|
| Euterpe | 0x00 40 a3 24 69 93 |

Euterpe architecture revisions are specified by the following table:

| Internal code name | Code number |
|---|---|
| 1.0 | 0x01 00 |

MicroUnity's Euterpe implementor codes are specified by the following table:

| Internal code name | Code number |
|---|---|
| MicroUnity | 0x00 40 a3 d2 b6 7f |

MicroUnity's Euterpe, as implemented by MicroUnity, uses implementation codes as specified by the following table:

| Internal code name | Revision number |
|---|---|
| 1.0 | 0x01 00 |
| | |

MicroUnity's Euterpe, as implemented by MicroUnity, uses manufacturer codes as specified by the following table:

| Internal code name | Code number 0x00 |
|---|---|
| MicroUnity | 40 a3 69 db 3f |

MicroUnity's Euterpe, as implemented by MicroUnity, and manufactured by MicroUnity, uses manufacturer revisions as specified by the following table:

| Internal code name | Code number |
|---|---|
| 1.0 | 0x01 00 |
| | |

*Architecture Description Registers*

The architecture description registers in octlets 4 and 5 comply with the Cerberus specification and contain a machine-readable version of the architecture parameters: A and W described in this document.
These registers are still under construction and will contain non-zero values in a later revision of this document.
Parameters will describe number of Hermes ports, size of internal caches, integrat ion of Call iope and Mnemosyne functions.

*Control Register*

The control register is a 64-bit register with both read and write access. It is altered only by Cerberus accesses: Euterpe does not alter the values written to this register.

The reset bit of the control register complies with the Cerberus specification and provides the ability to reset an individual Euterpe device in a Terpsichore system. Writing a one (1) to this bit is equivalent to a power-on reset or a broadcast Cerberus reset (low level on SD for 33 cycles) and resets configuration registers to their power-on values, which is an operating state that consumes minimal current, and also causes all internal high-bandwidth logic to be reset. The duration of the reset is sufficient for the operating state changes to have taken effect. At the completion of the reset operation, the **reset/clear/selftest complete** bit of the status register is set, the **reset/clear/self test status** bit of the status register is set, and the **reset** bit of the control register is set.

The **clear** bit of the control register complies with the Cerberus specification and provides the ability to clear the logic of an individual Euterpe device in a system. Writing a one (1) to this bit causes all internal high-bandwidth logic to be reset, as is required after reconfiguring power and swing levels. The duration of the reset is sufficient for any operating state changes to have taken effect. At the completion of the reset operation, the **reset/clear/selftest complete** bit of the status register is set, the **reset/clear/selftest status** bit of the status register is set, and the clear bit of the control register is set.

The **selftest** bit of the control register complies with the Cerberus specification and provides the ability to invoke a selftest on an individual Euterpe device in a system. However, Euterpe does not define a selftest mechanism at this time, so setting this bit will immediately set the **reset/clear/selftest complete** bit and the **reset/clear/selftest status** bit of the status register.

The **channel under test** field of the control register provides a mechanism to test and adjust skews, on a single Hermes channel at a time. The field is set to the channel number for which the **cidle 0, cidle 1, raw 0,** and **raw 1** fields are active.

The **cidle 0** and **cidle 1** fields of the control register provide a mechanism to repeatedly sent simple patterns on the selected Hermes output channel for purposes of testing and skew adjustment. For normal operation, the **cidle 0** field must be set to zero (0), and the **cidle 1** field must be set to all ones (255).

*Status Register*

The status register is a 64-bit register with both read and write access, though the only legal value which may be written is a zero, to clear the register. The result of writing a non-zero value is not specified.

The **reset/clear/selftest complete** bit of the status register complies with the Cerberus specification and is set upon the completion of a reset, clear or selftest operation as described above.

The **reset/clear/selftest status** bit of the status register complies with the Cerberus specification and is set upon the successful completion of a reset, clear or selftest operation as described above.

The **meltdown detected** bit of the status register is set when the meltdown detector has discovered an on-chip temperature above the threshold set by the **meltdown threshold** field of the Cerberus configuration register, which causes a reset to occur.

The **double machine check** bit of the status register is set when a second machine check occurs that prevents recovery from the first machine check, or which is indicative of machine check recovery software failure. Specifically, the occurrence of an **exception in event thread, watchdog timer error,** or **Cerberus transaction error** while any machine check cause bit of the status register is still set, or any Hermes error while the **exception** in **event thread** bit of the status register is set in the Cerberus status register results in a double machine check reset.

The **other reset cause** bit of the status register is reserved for the indication of other causes of reset.

The **exception in event thread** bit of the status register is set when an event thread suffers and exception, which causes a machine check. The exception code is loaded into the machine check detail field of the status register.

The **watchdog timeout error** bit of the status register is set when the **watchdog** timer register is equal to the **clock cycle** register, causing a machine check.

The **Cerberus transaction error** bit of the status register is set when a Cerberus transaction error (bus timeout, invalid transaction code, invalid address) has caused a machine check. Note that Cerberus aborts, including locally detected parity errors, should cause bus retries, not a machine check.

The **Hermes check byte** error bit of the status register is set when a Hermes check byte error has caused a machine check. The bit corresponding to the Hermes channel number which has suffered the error is set in the **machine check detail** field of the status register.

The **Hermes command error** bit of the status register is set when a Hermes command error has caused a machine check. The bit corresponding to the Hermes channel number which has suffered the error is set in the **machine check detail** field of the status register.

The **Hermes timeout error** bit of the status register is set when aBvTeChannel timeout error has caused a machine check. The bit corresponding to the Hermes channel number which has suffered the error is set in the **machine check detail field** of the status register.

The **machine check detail** field of the status register is set when a machine check has been completed. For a Hermes channel error (check byte, command or timeout), the value indicates, via a bit-mask. ByteChannels for which machine checks have been reported. For an exception in event thread, the value indicates the type of exception for which the most recent machine check has been reported.

The **machine check program counter** field of the status register is loaded with bits 31..16 of the event thread program counter at which the most recent machine check has occurred. The value in this field provides a limited diagnostic capability for purposes of software development, or possibly for error recovery.

The **raw 0** and **raw 1** fields of the status register contain the values obtained from two adjacent samples of the specified Hermes input channel. The **raw 0** field contains a value obtained when the input clock was zero (0), and the **raw 1** field contains the value obtained on the immediately following sample, when the input clock was (1). Euterpe must ensure that reading the status register produces two adjacent samples, regardless of the timing of the status register read operation on Cerberus. These fields are read for purposes of testing and control of skew in the Hermes channel interfaces.

*Power and Swing Calibration Registers*

Euterpe uses a set of configuration registers to control the power and voltage levels used for internal high-bandwidth logic and memory. The details of programming these registers are described below.

Eight-bit fields separately control the power and voltage levels used in a portion of the Euterpe circuitry. Each such field contains configuration data in the following format:

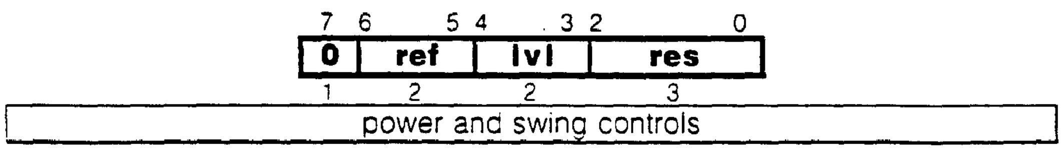


The range of valid values and the interpretation of the fields is given by the following table:

| field | value | Interpretation |
|---|---|---|
| **0** | 0 | Reserved |
| **ref** | 0..3 | Set reference voltage level |
| **lvl** | 0..3 | Set voltage swing level. |
| **res** | 0..7 | Set resistor load value. |
| Power and swing control field interpretation | | |

The reference voltage level, voltage swing level and resistor load value are model figures for a full-swing, lowest-power logic gate output. The actual voltage levels and resistor load values used in various circuits is geometrically related to the values in the tables below. Designed typical, full-speed settings for the **ref**, **lvl** and **res** fields are ref=250 millivolts, **lvl**=500 millivolts, and **res**=2.5 kilohms.

The ref field, together with the **swing fine tuning** field of the configuration register, control the reference voltage level used for logic circuits in the specified knob domain. Values and interpretations of the ref field are given by the following table, with units in millivolts:

| | **swing fine tuning** | | | |
|---|---|---|---|---|
| **ref** | 0 | 1 | 2 | 3 |
| 0 | 138 | 150 | 163 | 175 |
| 1 | 188 | 200 | 213 | 225 |

(continued)

| | swing fine tuning | | | |
|---|---|---|---|---|
| ref | 0 | 1 | 2 | 3 |
| 2 | 238 | 250 | 263 | 275 |
| 3 | 288 | 300 | 325 | 350 |
| Reference level control field interpretation | | | | |

The lvl field, together with the **swing fine tuning** field of the configuration register, control the voltage swing level used for logic circuits in the specified knob domain. Values and interpretations of the **lvl** field are given by the following table, with units in millivolts:

| | swing fine tuning | | | |
|---|---|---|---|---|
| lvl | 0 | 1 | 2 | 3 |
| 0 | 275 | 300 | 325 | 350 |
| 1 | 375 | 400 | 425 | 450 |
| 2 | 475 | 500 | 525 | 550 |
| 3 | 575 | 600 | 650 | 700 |
| Voltage swing level control field interpretation | | | | |

The **res** field, together with the **process control** field of the configuration register, control the PMOS load resistance value used for logic circuits in the specified knob domain. Values and interpretations of the lvl field are given by the following table, with units in kilohms. The table below gives resistance values with nominal process parameters.

| | process control | | | | | | | |
|---|---|---|---|---|---|---|---|---|
| res | 0 | 1 | 2 | 3 | 4 | 5 | 6 | 7 |
| 0 | undefined | | | | | | | |
| 1 | | 2.5 | 5.0 | 7.5 | 10. | 13. | 15. | 18. |
| 2 | | 1.3 | 2.5 | 3.8 | 5.0 | 6.3 | 7.5 | 8.8 |
| 3 | | .83 | 1.7 | 2.5 | 3.3 | 4.2 | 5 | 5.8 |
| 4 | | .63 | 1.3 | 19 | 2.5 | 3.1 | 3.8 | 4.4 |
| 5 | | .50 | 1.0 | 1.5 | 2.0 | 2.5 | 3 | 3.5 |
| 6 | | .42 | .83 | 1.3 | 1.7 | 2.1 | 2.5 | 2.9 |
| 7 | | .36 | .71 | 1.1 | 1.4 | 1.8 | 2.1 | 2.5 |
| Resistor control field interpretation | | | | | | | | |

When the **process control** field of the configuration register is set equal to the PMOS drive strength field of the configuration register, nominal PMOS load resistance values are as given by the following table, with units in kilohms.

| res | PMOS load resistance |
|---|---|
| 0 | **undefined** |
| 1 | 13. |
| 2 | 6.3 |
| 3 | 4.2 |

(continued)

| res | PMOS load resistance |
|---|---|
| 4 | 3.1 |
| 5 | 2.5 |
| 6 | 2.1 |
| 7 | 1.8 |

When Mnemosyne is reset, a default value of 0 is loaded into each 0 field, 3 in each ref field, 3 in each lvl field and 1 in each **res** field, which is a byte value of 121. The **process control** field of the configuration register is set to 5, and the **swing fine tuning** field is set to 1. These settings correspond to a chip with nominal processing parameters, low power and high voltage swing operation.

For nominal operating conditions, the **ref** field is set to 2, the **lvl** field is set to 2, and the **res** field is set to 5, which is byte value of 85. The **process control** field is set equal to the **PMOS strength** field, and the **swing fine tuning** field is set to 1.

*Configuration Register*

A Configuration register is provided on the Euterpe processor to control the fine-tuning of the Hermes channel configuration, to control the global process parameter settings, to control the two phase-locked loop frequency generators, and to control the temperature sensors and read temperature values.

The **resistor fine tuning** field of the configuration register controls the analog bias settings for PMOS loads in Hermes channel input and output termination circuits, in order to accomodate variations in circuit paramaters due to the manufacturing process, and to provide fine-tuning of the input and output impedence levels. Under normal operating conditions, four times (4*) the value read from the **PMOS drive strength** field should be written into the **resistor fine tuning** field. In order to provide fine-tuning of the input and output impedence levels, an external measurement of the impedence or voltage levels is required. An change of the resistor fine tuning field causes a proportional change in the input and output impedence levels. The interpretation of the field is given by the table:

| value | resistor fine tuning |
|---|---|
| 0..13 | Reserved |
| 14..19 | increase PMOS conductance to nominal*20/value- |
| 20 | use PMOS loads at nominal conductance. |
| 21..31 | decrease PMOS conductance to nominal*20/value. |

The **swing fine tuning** field of the configuration register controls a small offset in the reference voltage and logic swing voltage for internal logic circuits. The swing fine tuning voltage is added to the output current field of the Hermes channel configuration registers to select the output current. The interpretation of the field is given by the table:

| value | swing fine tuning | reference fine tuning |
|---|---|---|
| 0 | -25 mv | -12 mv |
| 1 | 0 | 0 |
| 2 | +25 mv | +13 mv |
| 3 | +50 mv or +100 mv | +25 mv or +50 mv |
| swing fine tuning field interpretation | | |

The **process control** field of the configuration register controls the analog bias settings for PMOS loads in internal logic circuits, in order to accomodate variations in circuit parameters due to the manufacturing process. Under normal operating conditions, the value read from the **PMOS drive strength** field should be written into the **process control** field. The interpretation of the field is given by the table:

| value | process control |
|---|---|
| 0 | Reserved |
| 1 | increase PMOS conductance to 5.00*nominal. |
| 2 | increase PMOS conductance to 2.50*nominal. |
| 3 | increase PMOS conductance to 1.66*nominal. |
| 4 | increase PMOS conductance to 1.25*nominal. |
| 5 | use PMOS loadsat nominal conductance. |
| 6 | decrease PMOS conductance to 0.83*nominal. |
| 7 | decrease PMOS conductance to 0.71*nominal. |

The **PMOS drive strength** field of the configuration register is a read/only field that indicates the drive strength, or conductance gain, of PMOS devices on the Euterpe chip, expressed as a digital binary value. This field is used to calibrate the power and voltage level configuration, given variations in process characteristics of individual devices. The interpretation of the field is given by the table:

| value | PMOS drive strength |
|---|---|
| 0 | Reserved |
| 1 | 0.2*nominal |
| 2 | 0.4*nominal |
| 3 | 0.6*nominal |
| 4 | 0.8*nominal |
| 5 | nominal |
| 6 | 1.2*nominal |
| 7 | 1.4*nominal |

There are two identical phase locked-loop (PLL) frequency generators, designated PLL0 and PLL1. These PLLs generate internal and external clock signals of configurable frequency, based upon an input clock reference of either 50 MHz or 300 MHz. PLL0 controls the internal operating frequency of the Euterpe processor, while PLL1 controls the operating frequency of the Hermes channel interfaces. The configuration fields for PLL0 and PLL1 have identical meanings, described below:

The **PLL0 divide ratio** and **PLL1 divide ratio** fields select the divider ratio for each PLL, where legal values are in the range 8..23. These divider ratios permit clock signals to be generated in the range from 400 MHz to 1.15 GHz, when the input clock reference is at 50 MHz, with prescaling bypassed, or at 500 MHz with prescaling used.

Setting the **PLL0 feedback bypass** bit or the **PLL1 feedback bypass** bit of the configuration register causes the generated clock bypass the PLL oscillator and to operate off the input clock directly. Setting these bits causes the frequency generated to be the optionally prescaled reference clock. These bits are cleared during normal operation, and set by a reset.

The **PLL0 range** field and the **PLL0 range** field of the configuration register are used to select an operating range for the internal PLLs. If the PLL range is set to zero, the PLL will operate at a low frequency (below 0.xxx GHz), if the PLL range is set to one, the PLL will operate at a high frequency (above 0.xxx GHz). At reset this bit is cleared, as the input clock frequency is unknown.

Setting the **PLL prescaler bypass** bit of the configuration register causes the phase-locked loops PLL0 and PLL1 to use the input clock directly as a reference clock. This bit is cleared during normal operation with a 500 MHz input clock, in which the input clock is divided by 10, and is set during normal operation with a 50 MHz input clock. At reset this bit is cleared, as the input clock frequency is unknown.

Setting the **conversion prescaler bypass** bit of the configuration register causes the temperature conversion unit to use the input clock directly as a reference clock. Otherwise, clearing this bit causes the input clock to be divided by 10 before use as a reference clock. The reference clock frequency of the temperature conversion unit is nominally 50 MHz, and in normal operation, this bit should be set or cleared, depending on the input clock frequency. At reset this bit is cleared, as the input clock frequency is unknown.

The **meltdown margin** field controls the setting of the threshold at which meltdown is signalled. This field is used to test the meldown prevention logic. The interpretation of the field is given by the table below with a tolerance of ±6 degrees C. and 5 degrees C hysteresis:

| value | meltdown threshold |
|---|---|
| 0 | 150 degrees C |
| 1 | 90 degrees C |
| 2 | 50 degrees C |
| 3 | 20 degrees C |

The **conversion start** bit controls the initiation of the conversion of a temperature sensor or reference to a digital value. Setting this bit causes the conversion to begin, and the bit remains set until conversion is complete, at which time the bit is cleared.

The **conversion selection** field controls which sensor or reference value is converted to a digital value. The interpretation of the field is given by the table below:

| value | conversion selected |
|---|---|
| 0 | local temperature sensor |
| 1 | local temperature reference |
| 2 | remote 0 temperature sensor |
| 3 | remote 0 temperature reference |
| 4 | remote 1 temperature sensor |
| 5 | remote 1 temperature reference |
| 6 | remote 2 temperature sensor |
| 7 | remote 2 temperature reference |
| 8 | remote 3 temperature sensor |
| 9 | remote 3 temperature reference |
| 10..15 | Reserved |

The **conversion counter** field is set to the two's complement of the downslope count. The counter counts upward to zero, at which point the upslope ramp begins, and continues counting on the upslope until the conversion completes.

*Hermes channel Configuration Registers*

Configuration registers are provided on the Euterpe processor to control the timing, current levels, and termination resistance for each of the twelve Hermes channel high-bandwidth channels. A configuration register is dedicated to the control of each Hermes channel, and additional information in the configuration register at octlet 31 controls aspects of the Hermes channel circuits in common. The Hermes channel configuration registers are Cerberus registers 32..43, where 32 corresponds to Hermes channel 0, and where 43 corresponds to Hermes channel 11.

The **quadrature bypass** bit controls whether the HiC clock signal is delayed by approximately $\frac{1}{4}$ of a HiC clock cycle to latch the $Hi_{7..0}$ bits. In normal, full speed operation, this bit should be cleared to a zero value. If this bit is set, the quadrature delay is defeated and the HiC clock signal is used directly to latch the $Hi_{7..0}$ bits.

The **quadrature range** bit is used to select an operating range to the quadrature delay circuit. If the quadrature range is set to zero, the circuit will operate at a low frequency (below 0.xxx GHz), if the quadrature range is set to one, the circuit will operate at a high frequency (above 0.xxx GHz).

The **output termination** bit is used to select whether the output circuits are resistively terminated. If the bit is set to a zero, the output has high impedence; if the bit is set to one, the output is terminated with a resistance equal to the input termination. At reset, this bit is set to one, terminating the output.

The **termination resistance** field is used to select the impedence at which the Hermes channel inputs, and optionally the Hermes channel outputs are terminated. The resistance level is controlled relative to the setting of the **resistor fine tuning field** of the configuration register. The interpretation of the field is given by the table, with units in Ohms and nominal PMOS conductance and bias settings:

| value | termination resistance |
|---|---|
| 0 | Reserved |
| 1 | 250. Ohms |
| 2 | 125. Ohms |
| 3 | 83.3 Ohms |
| 4 | 62.5 Ohms |
| 5 | 50.0 Ohms |
| 6 | 41.7 Ohms |
| 7 | 35.7 Ohms |

The **output current** field is used to select the current at which the Hermes channel outputs are operated. The interpretation of the field is given by the table, with units in mA:

| value | output current |
|---|---|
| 0 | Reserved |
| 1 | 2. mA |
| 2 | 4. mA |
| 3 | 6. mA |
| 4 | 8. mA |
| 5 | 10. mA |
| 6 | 12. mA |
| 7 | 14. mA |

The output voltage swing is the product of the composite termination resistance: (input termination resistance$^{-1}$+output termination resistance$^{-1}$)$^{-1}$, and the output current. The output voltage swing should be set at or below 700 mV, and is normally set to the lowest value which permits a sufficiently low bit error rate, which depends upon the noise level in the system environment.

The **skew** fields individually control the delay between the internal Hermes channel output clock and each of the HoC and Ho7..0 high bandwidth output channel signals. Each skew field contains two three-bit values, named digital skew and analog skew as shown below:

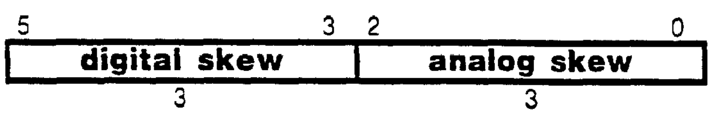


The **digital skew** fields set the number of delay stages inserted in the output path of the HoC and the Ho7..0 high-bandwidth output channel signals. The analog skew fields control the power level, and thereby control the switching delay, of a single delay stage. Setting these fields permits a fine level of control over the relative skew between output channel signals. Nominal values for the output delay for various values of the digital skew and analog skew fields are given below, assuming a nominal setting for the **Hermes channel knob:**

| digital skew | delay (ps) | plus analog skew | | analog skew | delay (ps) |
|---|---|---|---|---|---|
| 0 | 0 | no | | 0 | Reserved |
| 1 | 320 | yes | | 1 | ??? |
| 2 | 400 | yes | | 2 | ??? |
| 3 | 470 | yes | | 3 | +40 |
| 4 | 570 | yes | | 4 | +20 |
| 5 | 670 | yes | | 5 | 0 |
| 6 | 770 | yes | | 6 | -10 |
| 7 | 870 | yes | | 7 | -20 |

When Euterpe is reset, a default value of 0 is loaded into the **digital skew** and 1 is loaded into the **analog skew** fields, setting a minimum output delay for the HoC and Ho7..0 signals.

*Mnemosyne Memory*

MicroUnity's Mnemosyne memory architecture is designed for ultra-high bandwidth systems. The architecture integrates fast communication channels with SRAM caches and interfaces to standard DRAM.

The Mnemosyne interfaces include byte-wide input and output channels intended to operate at rates of at least 1 GHz. These channels provide a packet communication link to synchronous SRAM cache on chip and a controller for external banks of conventional DRAM components. Mnemosyne provides second-level cache and main memory for MicroUnity's Terpsichore system architecture. However, Mnemosyne is useful in many memory applications.

Mnemosyne's interface protocol embeds read and write operations to a single memory space into packets containing command, address, data, and acknowledgement. The packets include check codes that will detect single-bit transmission errors and multiple-bit errors with high probability. As many as eight operations in each device may be in progress at a time. As many as four Mnemosyne devices may be cascaded to expand the cache and memory and to improve the bandwidth of the DRAM memory.

Mnemosyne's SRAM arrays are organized as a set of small blocks, which are combined to provide a cache containing logical memory data of a fixed word size. Dynamically-configured block-level redundancy supports the elimination of faulty blocks without requiring the use of non-volatile or one-time-programmable storage.

Mnemosyne's DRAM interface provides for the direct connection of multiple banks of standard DRAM components to a Mnemosyne device. Variations in access time, size, and number of installed parts all may be accommodated by reading and writing of configuration registers. The interface supports interleaving to enhance bandwidth, and page mode accesses to improve latency for localized addressing.

Euterpe uses Mnemosyne devices as a second-level cache, main-memory expansion, and optionally containing directory information. Each Mnemosyne device in turn supports up to four banks of DRAM, each 72 bits wide (64 bits + ECC). Using standard DRAM components, Terpsichore and Mnemosyne achieve bandwidth in excess of 9 Gbytes/sec to secondary cache and 2 Gbytes/sec to main memory. Terpsichore may use twice or four times the number of Mnemosyne devices to expand the cache and memory and to increase the bandwidth of the main memory system to in excess of 8 Gbytes/sec.

*Architecture Framework*

The Mnemosyne architecture builds upon MicroUnity's Hermes high-bandwidth channel architecture and upon MicroUniiy's Cerberus serial bus architecture, and complies with the requirements of Hermes and Cerberus. Mnemosyne uses parameters A and W as defined by Hermes.

The Mnemosyne architecture defines a compatible framework for a family of implementations with a range of capabilities. The following implementation-defined parameters are used in the rest of the document in boldface. The value indicated is for MicroUnity's first Mnemosyne implementation.

| Parameter | Interpretation | Value | Range of legal values |
|---|---|---|---|
| **C** | $\log_2$ logical memory words in SRAM cache | 13 | $\mathbf{C} \geq 1$ |
| **B** | $\log_2$ physical memory words in SRAM cache physical memory block | 11 | $\mathbf{B} \geq 1$ |
| **S** | number of bits per word of an SRAM physical memory block | 9 | $\mathbf{S} > 0$ |
| **t** | size of tag field in cache entry, in bits | 13 | $\mathbf{t} = 2\mathbf{P} + \mathbf{E} - \mathbf{C}$ |
| **e** | size of ECC field in cache entry, in bits | 8 | $\mathbf{e} \geq \log_2 (8\mathbf{W}+\mathbf{t}+1+\mathbf{e})+1$ |
| **n** | number of physical memory blocks used to produce a logical memory word | 10 | $\mathbf{n} \geq \frac{8\mathbf{W} + \mathbf{t} + 1 + \mathbf{e}}{\mathbf{S}}$ |
| **N** | number of SRAM physical memory blocks, not including redundant blocks | 40 | $\mathbf{N} = \mathbf{n}(2^{\mathbf{C}-\mathbf{B}})$ |
| **D** | number of divisions of SRAM physical memory blocks covered by separate sets of redundant blocks | 2 | $1 \leq \mathbf{D} \leq 16$ |
| **R** | number of redundant SRAM physical memory blocks in each redundancy division | 2 | $1 \leq \mathbf{R} \leq 16$ |
| **P** | number of DRAM row and column address interface pins | 12 | $9 < \mathbf{P} < (\mathbf{A}{*}8-\mathbf{E})/2$ |
| **K** | number of address interface pins which may be configured as row-address-only pins | 0 | $0 \leq \mathbf{K} \leq \mathbf{P}$ |
| **I** | $\log_2$ of number of interleaved accesses in DRAM interface | 2 | $0 < \mathbf{I} < 16$ |
| **E** | $\log_2$ of number of banks of DRAM expansion | 2 | $\mathbf{I} \leq \mathbf{E} \leq 15$ |

*Interfaces and Block Diagram*

Mnemosyne uses two Hermes unidirectional, byte-wide, differential, packet-oriented data channels for its main, high-bandwidth interface between a memory control unit and Mnemosyne's memory. This interface is designed to be cascadeable, with the output of a Mnemosyne chip connected to the input of another, to expand the size of memory that can be reached via a single set of data channels. An external memory control unit is in complete control of the selection and timing of operations within Mnemosyne and in complete control of the timing and content of information on the high-bandwidth interfaces.

A Cerberus bit-serial interface provides access to configuration, diagnostic and tester information, using TTL signal levels at a moderate data rate.

Mnemosyne contains additional interfaces to conventional dynamic random-access memory devices (DRAM) using TTL signals. Each Mnemosyne device contains output signals to independently control four banks of DRAM memory; each bank is nominally 9 bytes wide, and connects to a single set of bidirectional data interface pins. Each DRAM bank may use 24-bit addresses, to handle up to 16M-"word" DRAM memory capacity (such as 16Mx4 organized. 64-Mbit DRAM), Up to four banks of DRAM may be connected to each Mnemosyne device, permitting up to 0.5 Gbyte of DRAM per Mnemosyne chip.

Nearly all Mnemosyne circuits use a single power supply voltage, nominally at 3.3 Volts (5% tolerance). A second voltage of 5.0 Volts (5% tolerance) is used only for TTL interface circuits. Power dissipation is TBD. Initial packaging is TAB (Tape Automated Bonding).

Pin assignments are to be defined: there are 174 signal pins and 466 pins for 3.3V power, 5.0V power and substrate, for a total of 640 pins.

| count | pin | meaning |
|---|---|---|
| 18 | HiC, $Hi_{7..0}$ | hi-bandwidth input |
| 18 | HoC. $Ho_{7..0}$ | hi-bandwidth output |
| 72 | $DQ_{71..0}$ | DRAM data |
| 48 | $A_{11..0 3..0}$ | DRAM address |
| 12 | $RAS_{3..0}$. $CAS_{3..0}$, $WE_{3..0}$ | DRAM control |
| 6 | SC. SD. $SN_{3..0}$ | Cerberus interface |
| 174 | | total signal pins |
| ? | VDD | 3.3 V above VSS |
| ? | VCC[48] | 5.0 V above VSS |
| ? | VSS | most negative supply |
| 640 | | total pins |
| [48]Internal circuit documentation names this signal VDDO. | | |

The following is a diagram of the Mnemosyne device interfaces: (Numerical values are shown for MicroUnity's first implementation.)

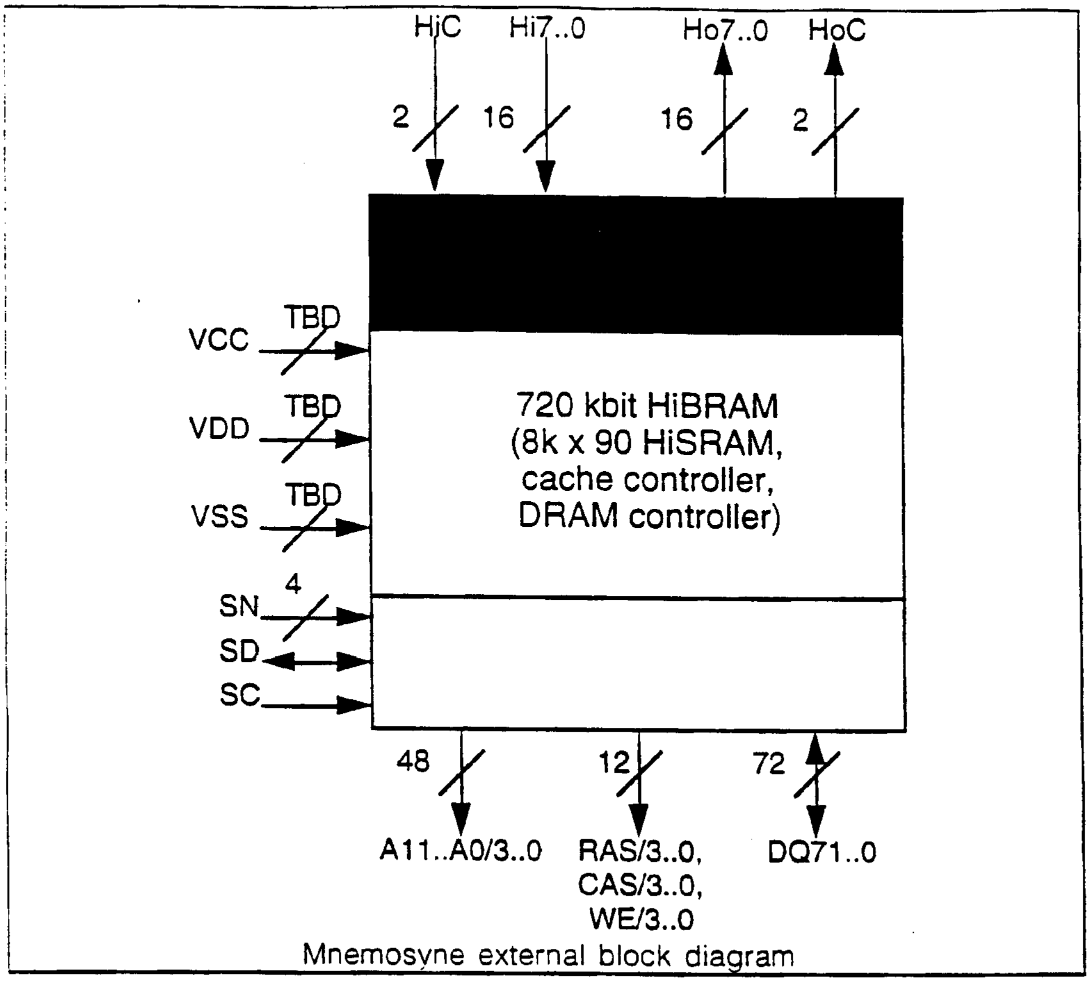

Mnemosyne external block diagram

| Absolute Maximum Ratings | MIN | NOM | MAX | UNIT |
|---|---|---|---|---|
| | | | | |
| | | | | |
| | | | | |
| | | | | |
| | | | | |

| Recommended operating conditions | MIN | NOM | MAX | UNIT | REF |
|---|---|---|---|---|---|
| $V_T$: Termination equivalent voltage | 4.5 | 5.0 | 5.5 | V | |
| Main supply voltage VDD | 3.14 | 3.3 | 3.47 | V | VSS |
| TTL supply voltage VCC | 4.75 | 5.0 | 5.25 | V | VSS |
| Operating free-air temperature | 0 | | 70 | C | |

| Electrical characteristics | MIN | TYP | MAX | UNIT | REF |
|---|---|---|---|---|---|
| $V_{OH}$: H-state output voltage HoC. $Ho_{7..0}$ | | | | V | VDD |

(continued)

| Electrical characteristics | MIN | TYP | MAX | UNIT | REF |
|---|---|---|---|---|---|
| $V_{OL}$: L-state output voltage HoC, $Ho_{7\ 0}$ | | | | V | VDD |
| $V_{IH}$ : H-state input voltage HiC, $Hi_{7\ 0}$ | | | | V | VDD |
| $V_{IL}$: L-state input voltage HiC, $Hi_{7\ 0}$ | | | | V | VDD |
| $I_{OH}$: H-state output current HoC. $Ho_{7\ 0}$ | | | | mA | |
| $I_{OL}$: L-state output current HoC, $Ho_{7\ 0}$ | | | | mA | |
| $I_{IH}$: H-state input current HiC, $Hi_{7\ 0}$ | | | | mA | |
| $I_{IL}$: L-state input current HiC, $Hi_{7\ 0}$ | | | | mA | |
| $C_{IN}$: Input capacitance HiC, $Hi_{7\ 0}$ | | | | pF | |
| $C_{OUT}$: Output capacitance HoC. $Ho_{7\ 0}$ | | | | pF | |
| $V_{OH}$: H-state output voltage $A_{11..0_{3..0}}$, $RAS_{3..0}$, $CAS_{3..0}$, $WE_{3..0}$, $DQ_{71..0}$ | 2.4 | | 5.5 | V | VSS |
| $V_{OL}$: L-state output voltage $A_{11..0_{3..0}}$, $RAS_{3..0}$, $CAS_{3..0}$, $WE_{3..0}$, $DQ_{71..0}$ | 0 | | 0.4 | V | VSS |
| $V_{OL}$: L-state output voltage SD | 0 | | 0.4 | V | VSS |
| $V_{IH}$: H-state input voltage $DQ_{71\ 0}$ | 2.4 | | 5.5 | V | VSS |
| $V_{IL}$: L-state input voltage $DQ_{71\ 0}$ | -0.5 | | 0.8 | V | VSS |
| $V_{IH}$: H-state input voltage SD | 2.0 | | 5.5 | V | VSS |
| $V_{IH}$: H-state input voltage SC, $SN_{3\ 0}$ | 2.0 | | 5.5 | V | VSS |
| $V_{IL}$: L-state input voltage SC, SD, $SN_{3.\ 0}$ | -0.5 | | 0.8 | V | VSS |
| $I_{OH}$: H-state output current $A_{11..0_{3..0}}$, $RAS_{3..0}$, $CAS_{3..0}$, $WE_{3..0}$, $DQ_{71..0}$ | | | | µA | |
| $I_{OL}$-. L-state output current $A_{11..0_{3..0}}$, $RAS_{3..0}$, $CAS_{3..0}$. $WE_{3..0}$, $DQ_{71\ ..0}$ | | | 16 | mA | |
| $I_{OL}$: L-state output current SD | | | 16 | mA | |
| $I_{OZ}$: Off-state output current SD | -10 | | 10 µA | | |
| $I_{OZ}$: Off-state output current $DQ_{71\ 0}$ | -10 | | 10 µA | | |
| $I_{IH}$: H-state input current SC, $SN_{3.\ 0}$ | -10 | | 10 µA | | |
| $I_{IL}$: L-state input current SC, $SN_{3\ 0}$ | -10 | | 10 µA | | |
| $C_{IN}$: Input capacitance SC, $SN_{3..0}$ | | | 4.0 | pF | |
| $C_{OUT}$: Output or input-output capacitance, SD, $A_{11..0_{3..0}}$, $RAS_{3..0}$. $CAS_{3..0}$, $WE_{3..0}$, $DQ_{71\ 0}$ | | | 4.0 | pF | |

| Switching characteristics | MIN | TYP | MAX | UNIT |
|---|---|---|---|---|
| $t_{BC}$: HiC clock cycle time | 1000 | | | ps |
| $t_{BCH}$: HiC clock high time | 400 | | | ps |
| $t_{BCL}$: HiC clock low time | 400 | | | ps |
| $t_{BT}$: HiC clock transition time | | | 100 | ps |
| $t_{BS}$: set-up time, $Hi_{7..0}$ valid to HiC xition | 200 | | 100 | ps |
| $t_{BH}$: hold time, HiC xition to $Hi_{7\ 0}$ invalid | -200 | | -100 | ps |
| $t_{OS}$: skew between HoC and $Ho_{7\ 0}$ | -50 | | 50 | ps |
| $t_C$: SC clock cycle time | 50 | | | ns |

(continued)

| Switching characteristics | MIN | TYP | MAX | UNIT |
|---|---|---|---|---|
| $t_{CH}$: SC clock high time | 20 | | | ns |
| $t_{CL}$: SC clock low time | 20 | | | ns |
| $t_T$: SC clock transition time | | | 5 | ns |
| $t_S$: set-up time. SD valid to SC rise | | | | ns |
| $t_H$: hold time, SC rise to SD invalid | | | | ns |
| $t_{OD}$: SC rise to SD valid | 5 | | | ns |

*Logical and Physical Memory Structure*

Mnemosyne defines two regions: a memory region, implemented by an on-device static RAM memory cache backed by standard DRAM memory devices, and a configuration region, implemented by on-device read-only and read/write registers. These regions are accessed by separate interfaces; the Hermes channel used to access the memory region, and the Cerberus serial interface used to access the configuration region. These regions are kept logically separate.

The Mnemosyne logical memory region is an array of $2^{8A}$ words of size W bytes. Each memory access, either a read or write, references all bytes of a single block.
All addresses are block addresses, referencing the entire block.

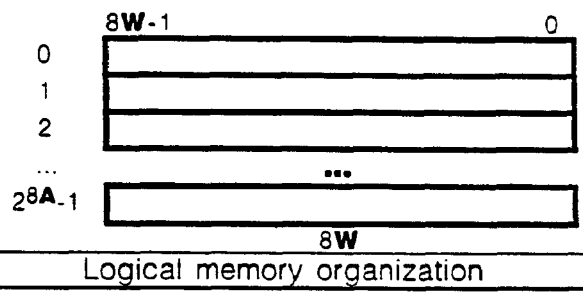

Logical memory organization

Mnemosyne's DRAM memory physically consists of one or more banks of multiplexed-address DRAM memory devices. A DRAM bank consists of a set of DRAM devices which have the corresponding address and control signals connected together, providing one word of W bytes of data plus ECC information with each DRAM access.

Mnemosyne's SRAM memory is a write-back (write-in) single-set (direct-mapped) cache for data originally contained in the DRAM memory. All accesses to Mnemosyne memory space maintain consistency between the contents of the cache and the contents of the DRAM memory.

Mnemosyne's configuration region consists of read-only and read/write registers. The size of a logical block in the configuration memory space is eight bytes: one octlet.

*Communications Channels*

*High-bandwidth*

Mnemosyne uses the Hermes high-bandwidth channel and protocols, implementing a slave device.

Mnemosyne operates two Hermes high-bandwidth communications channels, one input channel and one output channel.

Mnemosyne uses the Hermes packet structure. Mnemosyne's SRAM memory serves as the Hermes-designated cache, and Mnemosyne DRAM memory corresponds to the Hermes-designated device.

Configuration-region registers provide a low-level mechanism to detect skew in the byte-wide input channel, and to adjust skew in the byte-wide output channel. This mechanism may be employed by software to adaptively adjust for skew in the channels, or set to fixed patterns to account for fixed signal skew as may arise in device-to-device wiring.

*Serial*

A Cerberus serial bus interface is used to configure the Mnemosyne device, set diagnostic modes and read diagnostic information, and to enable the use of the part within a high-speed tester.
The serial port uses the Cerberus serial bus interface.

*DRAM*

The DRAM interface uses TTL levels to communicate with standard, high-capacity dynamic RAM devices. The data path of the interface is 8W+ e bits. The DRAM components used may have a maximum size of $2^{2\mathbf{P}}$ words by k bits, where the minimum value of k is determined by capacitance limits. (Larger values of k, up to 8W+e, meaning fewer components are required to assemble a word of DRAMs, are always acceptable.)

*Error Handling*

Mnemosyne performs error handling compliant with Hermes architecture.
For the current implementation, the following errors are designed to be detected and known not detected by design:

| errors detected | errors not detected |
|---|---|
| invalid check byte | invalid identification number |
| invalid command | internal buffer overflow |
| invalid address | invalid check byte on idle packet |
| uncorrectable error in SRAM cache | |
| uncorrectable error in DRAM memory | |

Detection of an uncorrectable error in either the SRAM cache or the DRAM memory results in the generation of an error response packet and other actions more fully described elsewhere.
Upon receipt of the error response packet, the packet originator must read the status register of the reporting device to determine the precise nature of the error. Mnemosyne devices reporting an invalid packet will suppress the receipt of additional packets until the error is cleared, by clearing the status register. However, such devices may continue to process packets which have already been received, and generate responses. Upon taking appropriate corrective actions and clearing the error, the packet originator should then re-send any unacknowledged commands.
Because of the large difference in clock rate between the high-bandwidth Hermes channel and the Cerberus serial bus interface, it is generally safe to assume that, after detecting an error response packet, an attempt to read the status register via Cerberus will result in reading stable, quiescent error conditions and that the queue of outstanding requests will have drained. After clearing the status register via Cerberus, the packet originator may immediately resume sending requests to the Mnemosyne device.

*Cerberus Registers*

Mnemosyne's configuration registers comply with the Cerberus and Hermes specifications. Configuration registers are internal read/only and read/write registers which provide an implementation-independent mechanism to query and control the configuration of a Mnemosyne device. By the use of these registers, a user of a Mnemosyne device may tailor the use of the facilities in a general-purpose implementation for maximum performance and utility. Conversely, a supplier of a Mnemosyne device may modify facilities in the device without compromising compatibility with earlier implementations.
Read/only registers supply information about the Mnemosyne implementation in a standard, implementation-independent fashion. A Mnemosyne user may take advantage of this information, either to verify that a compatible implementation of Mnemosyne is installed, or to tailor the use of the part to conform to the characteristics of the implementation. The read/only registers occupy addresses 0..5. An attempt to write these registers may cause a normal or an error response.
Read/write registers select the mapping of addresses to SRAM and DRAM banks, control the internal SRAM and DRAM timing generators, and select power and voltage levels for gates and signals. The read/write registers occupy addresses 6..11. 16..19, and 32.

Reserved registers in the range 12..15, 20..31, and 33..63 must appear to be read/only registers with a zero value. An attempt to write these registers may cause a normal or an error response.

Reserved registers in the range 64..$2^{16}$-1 may be implemented either as read/only registers with a zero value, or as addresses which cause an error response if reads or writes are attempted.

The format of the registers is described in the table below. The **octlet** is the Cerberus address of the register: **bits** indicate the posifion of the field in a register. The **value** indicated is the hard-wired value in the register for a read/only register, and is the value to which the register is initialized upon a **reset** for a read/write register. If a reset does not initialize the field to a value, or if initialization is not required by this specification, a * is placed in or appended to the value field. The **range** is the set of legal values to which a read/write register may be set. The **interpretation** is a brief description of the meaning or utility of the register field; a more comprehensive description follows this table.

| octlet | bits | field name | value | range | interpretation |
|---|---|---|---|---|---|
| 0 | 63..16 | **architecture code** | 0x00 40 a3 49 d2 e4 | | Identifies memory device as compliant with MicroUnity Mnemosyne architecture. |
| | 15..0 | **architecture revision** | 0x01 00 | | Device complies with architecture version 1.0. |

| octlet | bits | field name | value | range | interpretation |
|---|---|---|---|---|---|
| 1 | 63..16 | **implementor code** | 0x00 40 a3 24 6d f3 | | Identifies Mnemosyne Memory device as implemented by MicroUnity. |
| | 15..0 | **implementor revision** | 0x01 00 | | Implementation version 1.0. |

| octlet | bits | field name | value | range | interpretation |
|---|---|---|---|---|---|
| 2 | 63..16 | **manufacturer code** | 0x00 40 a3 92 b6 79 | | Identifies initial manufacturer of Mnemosyne Memory device implemented by MicroUnity. |
| | 15..0 | **manufacturer revision** | 0x01 00 | | Manufacturing version 1.0. |

| octlet | bits | field name | value | range | interpretation |
|---|---|---|---|---|---|
| 3 | 63..16 | **serial number** | 0 | | This device has no serial number capability. |
| | | **dynamic address** | 0 | | This device has no dynamic addressing capability. |

| octlet | bits | field name | value | range | interpretation |
|---|---|---|---|---|---|
| 4 | 63..60 | **A** | 4 | 0..15 | size of a Mnemosyne address |
| | 59..56 | **$log_2W$** | 3 | 0..15 | size of a Mnemosyne word |
| | 55..48 | **C** | 13 | 0..255 | $log_2$ of cache capacity in words |
| | 47..40 | **N** | 40 | 0..255 | number of cache sub-blocks (excluding redundant blocks) |
| | 39..36 | **D** | 2 | 0..15 | Number of divisions of cache-blocks covered by separate sets of redundant blocks. A zero value signifies 16 divisions. |
| | 36..32 | **R** | 2 | 0..15 | Number of redundant blocks per division. A zero value signifies 16 redundant blocks. |
| | 31..28 | **P** | 12 | 0..15 | Number of row and column address interface pins |
| | 27..24 | **K** | 0 | 0..15 | Maximum value by which column address pin count may be less than row address pin count. |
| | 23..20 | **E** | 2 | 0..15 | $log_2$ of number of banks of DRAM expansion |
| | 19..16 | **I** | 2 | 0..15 | $log_2$ of maximum interleaving level in DRAM interface. |
| | 15..0 | | 0 | | Reserved for definition in later revision of Mnemosyne architecture |

| octlet | bits | field name | value | range | interpretation |
|---|---|---|---|---|---|
| 5 | 63.0 | | 0 | | Reserved for definition in later revision of Mnemosyne architecture |

| octet | bits | field name | value | range | interpretation |
|---|---|---|---|---|---|
| 6 | 63 | **reset** | 1 | 0..1 | set to invoke device's circuit reset |
| | 62 | **clear** | 1 | 0..1 | set to invoke device's logic clear |
| | 61 | **selftest** | 0 | 0..1 | set to invoke device's selftest: bits 60..48 may indicate depth of selftest |
| | 60 | **tester** | 0 | 0..1 | set to invoke tester mode |
| | 59 | **isolate/ synch** | 0 | 0..1 | ~tester mode: if set, suppress cache misses/writebacks.<br>tester mode: synch up |
| | 58 | **source** | 0 | 0..1 | ~tester mode: set to 0.<br>tester mode: source/analyzer |
| | 57 | **ECC disable** | 0 | 0..1 | disable ECC checking: can be set during normal operating mode |
| | 56..50 | **0** | 0 | 0 | Reserved for additional mode bits |
| | 49..48 | **module id** | 0 | 0..3 | Module identifier. |
| | 47 | **PLL bypass** | 0 | 0..1 | Setting this bit causes the PLL to be bypassed; the input clock signal is used directly. |
| | 46..45 | **PLL range extension** | 0 | 0 | Reserved for extensions to the PLL range control field. |
| | 44 | **PLL range** | 0 | 0..1 | Set to 0 if the PLL is operating at a low frequency; 1 if the PLL is operating at a high frequency. |
| | 43..40 | **output slope control** | 0 | 0..15 | Output slope for DRAM control signals |
| | 39..36 | **output slope address** | 0 | 0..15 | Output slope for DRAM address signals |
| | 35..32 | **output slope data** | 0 | 0..15 | Output slope for DRAM data signals |
| | 31..29 | **SRAM timing extension** | 0 | 0 | Reserved for additional SRAM timing control bits. |
| | 28 | **SRAM timing** | 0 | 0..1 | Set to 1 to extend SRAM timing by one clock cycle. |
| | 27..24 | **ECC seed extension** | 0 | 0 | extend ECC seed value when **W** > 8 |
| | 23..16 | **ECC seed** | 0 | 0..255 | Value to modify ECC code computed on incoming data. Used to exercise ECC detection/correction logic, or to write arbitrary patterns into memory. |
| | 15..8 | **cidle 0** | 0 | 0..255 | Value transmitted on idle Hermes output channel when output clock zero (0). |
| | 7..0 | **cidle 1** | 255 | 0..255 | Value transmitted on idle Hermes output channel when output clock one (1). |

| octlet | bits | field name | value | range | interpretation |
|---|---|---|---|---|---|
| 7 | 63 | **reset/clear/ selftest complete** | 1 | 0..1 | This bit is set when a reset, clear or selftest operation has been completed. |
| | 62 | **reset/clear/ selftest status** | 1 | 0..1 | This bit is set when a reset, clear or selftest operation has been completed successfully. |
| | 61 | **check byte error** | 0 | 0..1 | This bit is set when a received input packet has an incorrect check byte. |
| | 60 | **address error** | 0 | 0..1 | This bit is set when a received input request has an address not present on the device as configured. |
| | 59 | **command error** | 0 | 0..1 | This bit is set when a packet is received on the Hermes input channel with an improper command. |
| | 58 | **un-correctable ECC error** | 0 | 0..1 | This bit is set when an uncorrectable error is discovered in memory. |
| | 57 | **correctable ECC error** | 0 | 0..1 | This bit is set when a correctable error is discovered in memory. |
| | 56 | **other error** | 0 | 0..1 | This bit is set when other errors not otherwise specified occur. |
| | 55..53 | **0** | 0 | 0 | Reserved |
| | 52..48 | **PMOS drive strength** | | 0..15 | This read/only field indicates the drive strength of PMOS devices expressed as a digital binary value. |
| | 47..41 | **0** | 0 | 0 | Reserved |
| | 40 | **PLL in range** | | 0..1 | This bit indicates that the Hermes input channel clock and the PLL are at rates such that the PLL can lock. |
| | 39..30 | **0** | 0 | 0 | Reserved |
| | 29 | **ECC location flag** | 0 | 0..1 | 0 if ECC error was in cache memory, 1 if ECC error was in DRAM memory. |
| | 28 | **dirty flag** | 0 | 0..1 | Dirty bit if error was in cache memory |
| | 27..24 | **ECC syndrome extension** | 0 | 0 | extend ECC syndrome value when **e** > 8 |
| | 23..16 | **ECC syndrome** | 0 | 0..255 | Value of syndrome encountered on previous correctable or uncorrectable ECC error. |
| | 15..8 | **raw 0** | 0 | 0..255 | Value sampled on Hermes input channel when input clock is zero (0). |
| | 7..0 | **raw 1** | 255 | 0..255 | Value sampled on Hermes input channel immediately following sample value in **raw 0** register. |

| octlet | bits | field name | value | range | interpretation |
|---|---|---|---|---|---|
| 8 | 63..32 | **0** | 0 | | Reserved for handling larger address spaces. |
| | 31..0 | **ECC addr** | 0 | $0..2^{32}-1$ | Address at which an ECC error was detected. |

| octlet | bits | field name | value | range | interpretation |
|---|---|---|---|---|---|
| 9 | 63..60 | **$log_2id$** | 0 | 0..**I** | Number of DRAM interleaving levels can be computed as **id** = $2^{\mathbf{log2id}}$. |
| | 59..56 | **expand** | 0 | 1..**E** | Number of DRAM banks. |
| | 55..52 | **r** | 0 | 9..**P** | Number of bits in DRAM row address |
| | 51..48 | **c** | 0 | 9..**P** | Number of bits in DRAM column address |
| | 47..40 | **t1** | 0 | 0..15 | Address set up time relative to RAS |
| | 39..32 | **t2** | 0 | 0..15 | Address hold time after RAS |
| | 31..24 | **t3** | 0 | 0..15 | Address set up time relative to CAS |
| | 23..16 | **t4** | 0 | 0..15 | CAS pulse width |
| | 15..8 | **t5** | 0 | 0..15 | Page mode cycle time is t3+t4+t5, Page mode CAS precharge is t3+t5 |
| | 7..0 | **t6** | 0 | 0..15 | RAS precharge is t6+t1 |

| octlet | bits | field name | value | range | interpretation |
|---|---|---|---|---|---|
| 10 | 63..56 | **t7** | 0 | 0..15 | CAS to RAS set up for refresh cycle. t7 >=t1 to ensure RAS precharge is met. |
| | 55..48 | **t8** | 0 | 0..15 | Time data bus occupied from end of CAS low |
| | 47..40 | **t9** | 0 | 0..15 | Time output data on bus from start of t3 |
| | 39..32 | **t10** | 0 | 0..15 | Interval between two address bus transitions |
| | 31 | **refresh enable** | 0 | 0..1 | If set, generate refresh cycles. |
| | 30..24 | **t11** | 0 | 0..127 | Interval between refresh cycles. |
| | 23..0 | **0** | 0 | 0 | Reserved |

| octlet | bits | field name | value | range | interpretation |
|---|---|---|---|---|---|
| 11..15 | 63..0 | **0** | 0 | 0 | Reserved |

| octlet | bits | field name | value | range | interpretation |
|---|---|---|---|---|---|
| 16 | 63..56 | **process control** | 0x42 | 0..255 | Set global power and voltage swing levels. |
| | 55..48 | **IO control** | 0xc2 | 0..255 | Set power and voltage swing levels in I/O circuits. |
| | 47..40 | **clock dist 1** | 0xc2 | 0..255 | Set power and voltage swing levels in clock distribution circuits. |
| | 39..32 | **clock dist 2** | 0xc2 | 0..255 | Set power and voltage swing levels in clock distribution circuits. |
| | 31..26 | **0** | 0 | 0 | Reserved |
| | 25..24 | **digital skew clk** | 0 | 0..3 | Set number of skew delay circuits to insert in output HoC. |
| | 23..22 | **digital skew bit 7** | 0 | 0..3 | Set number of skew delay circuits to insert in output Ho7. |
| | 21..20 | **digital skew bit 6** | 0 | 0..3 | Set number of skew delay circuits to insert in output Ho6. |
| | 19..18 | **digital skew bit 5** | 0 | 0..3 | Set number of skew delay circuits to insert in output Ho5. |
| | 17..16 | **digital skew bit 4** | 0 | 0..3 | Set number of skew delay circuits to insert in output Ho4. |
| | 15..14 | **digital skew bit 3** | 0 | 0..3 | Set number of skew delay circuits to insert in output Ho3. |
| | 13..12 | **digital skew bit 2** | 0 | 0..3 | Set number of skew delay circuits to insert in output Ho2. |
| | 11..10 | **digital skew bit 1** | 0 | 0..3 | Set number of skew delay circuits to insert in output Ho1. |
| | 9..8 | **digital skew bit 0** | 0 | 0..3 | Set number of skew delay circuits to insert in output Ho0. |
| | 7..0 | **analog skew clk** | 0xc2 | 0..255 | Set power and voltage swing levels in HoC skew delay circuits. |

| octlet | bits | field name | value | range | interpretation |
|---|---|---|---|---|---|
| 17 | 63..56 | **analog skew bit 7** | 0xc2 | 0..255 | Set power and voltage swing levels in Ho7 skew delay circuits. |
| | 55..48 | **analog skew bit 6** | 0xc2 | 0..255 | Set power and voltage swing levels in Ho6 skew delay circuits. |
| | 47..40 | **analog skew bit 5** | 0xc2 | 0..255 | Set power and voltage swing levels in Ho5 skew delay circuits. |
| | 39..32 | **analog skew bit 4** | 0xc2 | 0..255 | Set power and voltage swing levels in Ho4 skew delay circuits. |
| | 31..24 | **analog skew bit 3** | 0xc2 | 0..255 | Set power and voltage swing levels in Ho3 skew delay circuits. |
| | 23..16 | **analog skew bit 2** | 0xc2 | 0..255 | Set power and voltage swing levels in Ho2 skew delay circuits. |
| | 15..8 | **analog skew bit 1** | 0xc2 | 0..255 | Set power and voltage swing levels in Ho1 skew delay circuits. |
| | 7..0 | **analog skew bit 0** | 0xc2 | 0..255 | Set power and voltage swing levels in Ho0 skew delay circuits. |

| octlet | bits | field name | value | range | interpretation |
|---|---|---|---|---|---|
| 18 | 63..56 | **SRAM pipe** | 0xc2 | 0..255 | Set power and voltage swing levels in SRAM pipeline circuits. |
| | 55..48 | **DRAM data** | 0xc2 | 0..255 | Set power and voltage swing levels in DRAM data circuits. |
| | 47..40 | **DRAM address** | 0xc2 | 0..255 | Set power and voltage swing levels in DRAM address circuits. |
| | 39..32 | **PLL in range indicator** | 0xc2 | 0..255 | Set power and voltage swing levels in PLL in-range detector circuits. |
| | 31..24 | **PLL phase detector** | 0xc2 | 0..255 | Set power and voltage swing levels in PLL phase detector circuits. |
| | 23..16 | **forward logic** | 0xc2 | 0..255 | Set power and voltage swing levels in packet forwarding logic circuits. |
| | 15..8 | **forward PLA** | 0xc2 | 0..255 | Set power and voltage swing levels in packet forwarding PLA. |
| | 7..0 | **tester logic** | 0xc2 | 0..255 | Set power and voltage swing levels in tester logic circuits. |

| octlet | bits | field name | value | range | interpretation |
|---|---|---|---|---|---|
| 19 | 63..56 | **tester PLA** | 0xc2 | 0..255 | Set power and voltage swing levels in tester PLA. |
| | 55..48 | **dual port RAMs** | 0xc2 | 0..255 | Set power and voltage swing levels in 2-port RAM circuits. |
| | 47..40 | **big PLA** | 0xc2 | 0..255 | Set power and voltage swing levels in big PLAs. |
| | 39..32 | **small PLA** | 0xc2 | 0..255 | Set power and voltage swing levels in small PLAs. |
| | 31..24 | **pipeline interface** | 0xc2 | 0..255 | Set power and voltage swing levels in pipeline interface circuits. |
| | 23..16 | **other logic 2** | 0xc2 | 0..255 | Set power and voltage swing levels in other logic circuits. |
| | 15..8 | **other logic 1** | 0xc2 | 0..255 | Set power and voltage swing levels in other logic circuits. |
| | 7..0 | **other logic 0** | 0xc2 | 0..255 | Set power and voltage swing levels in other logic circuits. |

| octlet | bits | field name | value | range | interpretation |
|---|---|---|---|---|---|
| 20..31 | 63..0 | **0** | 0 | | Reserved. |

| octlet | bits | field name | value range | | interpretation |
|---|---|---|---|---|---|
| 32 | 63..56 | **redundant 0** | 0 | 0..255 | Enable and address for redundant block 0 (partition 0) |
| | 55..48 | **redundant 1** | 0 | 0..255 | Enable and address for redundant block 1 (partition 0) |
| | 47..40 | **redundant 2** | 0 | 0..255 | Enable and address for redundant block 0 (partition 1) |
| | 39..32 | **redundant 3** | 0 | 0..255 | Enable and address for redundant block 1 (partition 1) |
| | 31..0 | **0** | 0 | 0 | Reserved for use with additional redundant blocks. |

| octlet | bits | field name | value range | | interpretation |
|---|---|---|---|---|---|
| 33..63 | 63..0 | **0** | 0 | 0 | Reserved for use with additional redundant blocks. |

| octlet | bits | field name | value range | | interpretation |
|---|---|---|---|---|---|
| 64.. 65536 | 63..0 | **0** | 0 | 0 | Reserved for use with later revisions of the architecture. |

configuration memory space

*Identification Registers*

The identification registers in octlets 0..3 comply with the requirements of the Cerberus architecture.

MicroUnity's company identifier is: 0000 0000 0000 0010 1100 0101.

MicroUnity's architecture code for Mnemosyne is specified by the following table:

| Internal code name | Code number |
|---|---|
| Mnemosyne | 0x00 40 a3 49 d2 e4 |

Mnemosyne architecture revisions are specified by the following table:

| Internal code name | Code number |
|---|---|
| 1.0 | 0x01 00 |

MicroUnity's Mnemosyne implementor codes are specified by the following table:

| Internal code name | Code number |
|---|---|
| MicroUnity | 0x00 40 a3 24 6d f3 |

MicroUnity's Mnemosyne, as implemented by MicroUnity, uses implementation codes as specified by the following table:

| Internal code name | Revision number |
|---|---|
| 1.0 | 0x01 00 |
| | |

(continued)

| Internal code name | Revision number |
|---|---|
| | |
| | |

MicroUnity's Mnemosyne, as implemented by MicroUnity, uses manufacturer codes as specified by the following table:

| Internal code name | Code number |
|---|---|
| Rollers | 0x00 40 a3 92 b6 79 |

MicroUnity's Mnemosyne, as implemented by MicroUnity, and manufactured by the Rollers, uses manufacturer revisions as specified by the following table:

| Internal code name | Code number |
|---|---|
| 1.0 | 0x01 00 |
| | |
| | |
| | |

*Architecture Description Registers*

The architecture description registers in octlets 4 and 5 comply with the Cerberus and Hermes specifications and contain a machine-readable version of the architecture parameters: **A, W, C, N, D, R, P, K, E**, and **I** described in this document.

*Control Register*

The control register is a 64-bit register with both read and write access. It is altered only by Cerberus accesses: Mnemosyne does not alter the values written to this register.

The **reset** bit of the control register complies with the Cerberus specification and provides the ability to reset an individual Mnemosyne device in a system. Setting this bit is equivalent to a power-on reset or a broadcast Cerberus reset (low level on SD for 33 cycles) and resets configuration registers to their power-on values, which is an operating state that consumes minimal current. At the completion of the reset operation, the **reset/clear/selftest complete** bit of the status register is set, and the **reset/clear/selftest status** bit of the status register is set.

The **clear** bit of the control register complies with the Cerberus specification and provides the ability to clear the logic of an individual Mnemosyne device in a system. Setting this bit causes all internal high-bandwidth logic to be reset, as is required after reconfiguring power and swing levels. At the completion of the reset operation, the **reset/clear/selftest complete** bit of the status register is set, and the **reset/clear/selftest status** bit of the status register is set.

The **selftest** bit of the control register complies with the Cerberus specification and provides the ability to invoke a selftest on an individual Mnemosyne device in a system. However, Mnemosyne does not define a selftest mechanism at this time, so setting this bit will immediately set the **reset/clear/selftest complete** bit and the **reset/clear/selftest status** bit of the status register.

The **tester** bit of the control register provides the ability to use a Mnemosyne part as a component of a high-bandwidth test system for a Mnemosyne or other part using the high-bandwidth Hermes channel. In normal operation this bit must be cleared. When the **tester** bit is set, Mnemosyne is configured as either a signal source or signal analyzer, depending on the setting of the **source** bit of the control register. Four Mnemosyne parts are cascaded to perform the signal source or signal analyzer function. When the **isolate/synch** bit is set, a synchronization pattern is transmitted on the Hermes output channel and received on the Hermes input channel to synchronize the cascade of four Mnemosynes; the **isolate/synch** bits must be turned off starting at the end of the cascade to properly terminate the synchronization operation.

When not in tester mode, the **isolate/synch** bit of the control register is used to initialize the SRAM cache and perform functional testing of the SRAM cache. This bit must be cleared in normal operation. Setting this bit and setting the **ECC disable** bit of the control register suppresses cache misses and dirty cache line writebacks, so that the contents of the SRAM cache can be tested as if it were simple SRAM memory. A read-allocate command returns the octlet data from the SRAM cache entry that would be used to cache the requested location, the data is unconditionally returned, regardless of the contents of the tag, dirty and ECC fields of the SRAM cache entry. A read-noallocate command returns an octlet in the following format:

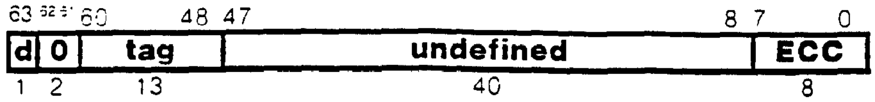


A write-allocate command writes the octlet data, along with the dirty bit set, the tag corresponding to the requested location, and valid ECC data into the SRAM cache entry that would be used to cache the requested location. A write-noallocate command writes the octler data, along with the dirty bit cleared, the tag corresponding to the requested location, and ECC data as if the dirty bit was set, into the SRAM cache entry that would be used to cache the requested location. The **ECC seed** field of the control register can be set to alter the ECC data that would otherwise be written to the SRAM cache entry, to write completely arbitrary patterns, or to write patterns in which the dirty bit is cleared and the ECC data is value.

The **ECC disable** bit of the control register causes Mnemosyne to ignore ECC errors in the SRAM cache and in the DRAM memory. This bit may be set during normal operation of Mnemosyne.

The **module** id field of the control register sets the module address for Mnemosyne. The module address defines which one of four module addresses Mnemosyne will select to answer to read and write requests.

Setting the **PLL bypass** bit of the control register causes the internal clocking of the high-bandwidth logic to operate off the input clock directly. This bit is cleared during normal operation.

The **PLL range** field of the control register is used to select an operating range for the internal PLL. A three-bit field is reserved for this function, of which one bit is currently defined: if the PLL range is set to zero, the PLL will operate at a low frequency (below 0.xxx GHz), if the PLL range is set to one, the PLL will operate at a high frequency (above 0.xxx GHz).

The **output slope** fields of the control register set the slew rate for the TTL outputs used for DRAM control, address and data signals, as detailed in a following section.

Mnemosyne uses a sufficiently high-frequency clock that internal SRAM timing can be controlled by synchronous logic, rather than asynchronous or self-timed logic. Internal SRAM timing may be controlled by loading values into configuration registers. The current specification reserves four bits for control of SRAM timing; one is currently used.

The **SRAM timing** bit is normally cleared, providing internal SRAM cycle time of 4 clock cycles. Setting the SRAM timing bit extends the cycle time to 5 clock cycles.

The **ECC seed** field of the control register provides a mechanism to cause ECC errors and thus test the ECC circuits. The field reserves 12 bits for this purpose, 8 bits are used in the current implementation. The field must be set to zero for normal operation. The value of the field is xor'ed against the ECC value normally computed for write operation.

The **cidle 0** and **cidle 1** fields of the control register provide a mechanism to repeatedly sent simple patterns on the Hermes output channel for purposes of testing and skew adjustment. For normal operation, the **cidle 0** field must be set to zero (0), and the **cidle 1** field must be set to all ones (255).

*Status Register*

The status register is a 64-bit register with both read and write access, though the only legal value which may be written is a zero, to clear the register. The result of writing a non-zero value is not specified.

The **reset/clear/selftest complete** bit of the status register complies with the Cerberus specification and is set upon the completion of a reset, clear or selftest operation as described above.

The **reset/clear/selftest status** bit of the status register complies with the Cerberus specification and is set upon the successful completion of a reset, clear or selftest operation as described above.

The **check byte error** bit of the status register is set when a received input packet has an incorrect check byte. The packet is otherwise ignored or forwarded to the Hermes output channel, and an error response packet is generated.

The **address error** bit of the status register is set when a received input request packet has an address which is not present on the device as currently configured. An error response packet is generated.

The **command error** bit of the status register is set when a packet is received on the Hermes input channel with an improper command, such as a read, write or error response packet.

The **uncorrrectable ECC error** bit of the status register is set on the first occurrence of an uncorrectable ECC error in either the SRAM cache or the DRAM memory. The **ECC location flag** is set or cleared, indicating whether the error was in the cache memory (cleared, 0) or the DRAM memory (set, 1). The **ECC syndrome** field of the status register is loaded with the syndrome of the data for which the error was detected. The **ECC addr** register is loaded with the address of the data at which the error was detected. An error response packet is generated. Once one uncorrectable ECC error is detected, no further correctable or uncorrectable ECC errors are reported in the status register until this error is cleared by writing a zero value into the status register.

The **correctable ECC error** bit of the status register is set on the first occurrence of a correctable ECC error in either the SRAM cache or the DRAM memory, provided an uncorrectable ECC error has not already been reported. The **ECC location flag** is set or cleared, indicating whether the error was in the cache memory (cleared. 0) or the DRAM memory (set, 1). The **dirty flag** indicates, for an error in the cache memory, the value of the dirty bit. The **ECC syndrome** field of the status register is loaded with the syndrome of the data for which the error was detected. The **ECC addr** register is loaded with the address of the data at which the error was detected. Once one uncorrectable ECC error is detected, no further correctable ECC errors are reported in the status register until this error is cleared bv writing a zero value into the status register. The occurrence of this error will cause a response packet to be generated with a "stomped" check byte pattern, but is not explicitly reported with an error response packet.

The **other error** bit of the status register is set when errors not otherwise specified occur. There are no errors of this class reported by the current implementation.

The **PMOS drive strength** field of the status register is a read/only field that indicates the drive strength, or conductance gain, of PMOS devices on the Mnemosyne chip, expressed as a digital binary value. This field is used to calibrate the power and voltage level configuration, given variations in process characteristics of individual devices. The interpretation of the field is given by the table:

| value | PMOS drive strength |
|---:|---|
| 0 | Reserved |
| 1 | 0.1*nominal |
| 2 | 0.2*nominal |
| 3 | 0,3*nominal |
| 4 | 0.4*nominal |
| 5 | 0,5*nominal |
| 6 | 0.6*nominal |
| 7 | 0.7*nominal |
| 8 | 0.8*nominal |
| 9 | 0.9*nominal |
| 10 | nominal |
| 11 | 1.1*nominal |
| 12 | 1.2*nominal |
| 13 | 1.3*nominal |
| 14 | 1.4*nominal |
| 15 | 1.5*nominal |

The **PLL in range** bit of the status register indicates that the Hermes input channel clock and the PLL oscillator are running at sufficiently similar rates such that the PLL can lock. This bit is used to verify or calibrate the settings of the **PLL range** field of the control register.

The **ECC location flag** bit of the status register, described above, indicates the location of an uncorrectable ECC error of a correctable ECC error. If the bit is set, the error was located in the DRAM memory, if the bit is clear, the error was located in the SRAM cache memory.

The **dirty flag** bit of the status register, described above, exhibits the dirty bit read from cache memory that results in an uncorrectable ECC error or correctable ECC error. The value is undefined if the currently reported ECC error was read from DRAM memory.

The **ECC syndrome** field of the status register, described above, exhibits the syndrome of an uncorrectable ECC error or correctable ECC error. A 12-bit field is reserved for this purpose: the current implementation uses eight bits of the field. The values in this field are implementation-dependent.

**ECC syndrome** values representing single-bit errors for MicroUnity's first implementation are detailed by the following table. Entries of * are not covered by the ECC code; syndrome values not shown in this table are uncorrectable errors involving two or more bits.

| syndrome for **x**= | 7 | 6 | 5 | 4 | 3 | 2 | 1 | 0 |
|---|---|---|---|---|---|---|---|---|
| $syndrome_{x+0}$ | 128 | 64 | 32 | 16 | 8 | 4 | 2 | 1 |
| $data_{x+0}$ | 127 | 124 | 122 | 121 | 118 | 117 | 115 | 112 |
| $data_{x+8}$ | 158 | 157 | 155 | 152 | 151 | 148 | 146 | 145 |
| $dara_{x+16}$ | 174 | 173 | 171 | 168 | 167 | 164 | 162 | 161 |
| $data_{x+24}$ | 191 | 188 | 186 | 185 | 182 | 181 | 179 | 176 |
| $data_{x+32}$ | 206 | 205 | 203 | 200 | 199 | 196 | 194 | 193 |
| $data_{x+40}$ | 223 | 220 | 218 | 217 | 214 | 213 | 211 | 208 |
| $data_{x+48}$ | 239 | 236 | 234 | 233 | 230 | 229 | 227 | 224 |
| $dara_{x+56}$ | 254 | 253 | 251 | 248 | 247 | 244 | 242 | 241 |
| $addr_{x+0}$ | * | * | * | * | * | * | * | * |
| $addr_{x+8}$ | 62 | 61 | 59 | * | * | * | * | * |
| $addr_{x+16}$ | 94 | 93 | 91 | 88 | 87 | 84 | 82 | 81 |
| $addr_{x+24}$ | | | | | | | 98 | 97 |
| dirty bit | | | | | | | | 100 |

The **raw 0** and **raw 1** fields of the status register contain the values obtained from two adjacent samples of the Hermes input channel. The **raw 0** field contains a value obtained when the input clock was zero (0), and the **raw 1** field contains the value obtained on the immediately following sample, when the input clock was (1). Mnemosyne must ensure that reading the status register produces two adjacent samples, regardless of the timing of the status register read operation on Cerberus. These fields are read for purposes of testing and control of skew in the Hermes channel.

*ECC Address Register*

The **ECC addr** register indicates the address at which an uncorrectable ECC error or correctable ECC error has occurred. Bits 63..2**P**+**E** of the **ECC addr** register are reserved; they read as O. If the **ECC location flag** bit of the status register is zero, the **ECC addr** register contains the cache address in bits **C**-1..0, and the uncorrected cache tag in bits 2**P**+**E**-1..**C**.

*DRAM Address Mapping*

Mnemosyne may interleave up to $2^I$ DRAM accesses in order to provide for continuous access of the DRAM memory system at the maximum bandwidth of the DRAM data pins. At any point in time, while some memory devices are engaged in row precharge, others may be driving or receiving data, and others may be receiving row or column addresses. In order to maximize the utility of this interleaving, the logical memory address bits which select the DRAM bank are the least-significant bits.

A logical memory address determines which bank of DRAM is accessed, the row and column of such an access, and which interleave set is accessed. The diagram below shows the ordering of such fields in a general DRAM configuration: the bit addresses and field sizes shown are for a four-byte logical memory address and a two-way interleaved configuration of 1M-word DRAM devices.

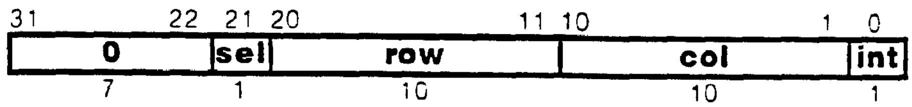


An access request which is decoded to contain the same values in the select, row, and int fields as a currently active request is queued until the completion of the active request, at which time the second request may be handled using a page mode access. This mechanism helps to maintain high bandwidth access even when the requests may not be perfectly interleaved, and provides for lower latency access in the event that the address stream is sufficiently local to take advantage of page mode access.

Mnemosyne devices may be cascaded for additional capacity, using the ma field in the packet formats. The memory controller must make the mapping between a contiguous address space and each of the separate address spaces made available within each Mnemosyne device. For maximum performance, the memory controller should also interleave such address spaces so that references to adjacent addresses are handled by different devices.

*DRAM Timing Control*

An internal state machine uses configurable settings to generate event timing, to accommodate DRAM performance variations. The timing of DRAM read cycles to a single DRAM bank is shown below:

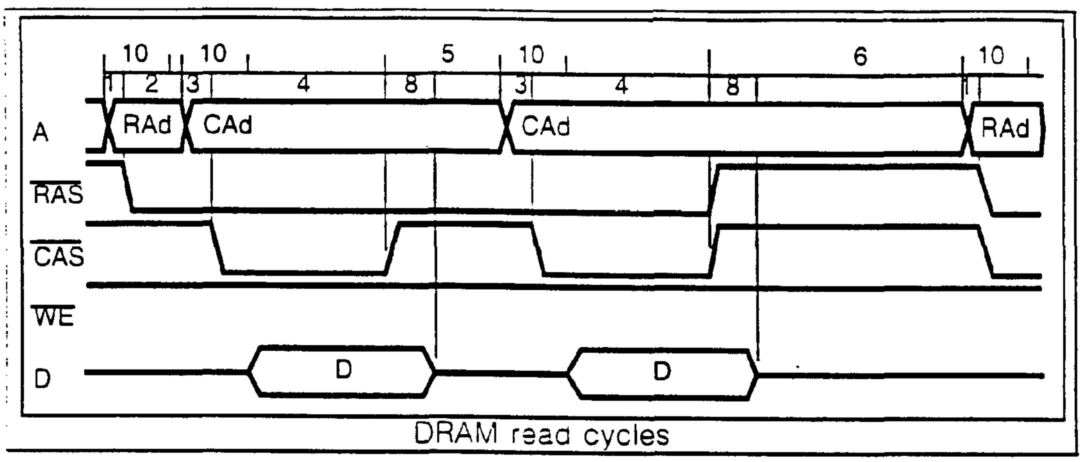

DRAM read cycles

The timing of DRAM write cycles to a single DRAM bank is shown below:

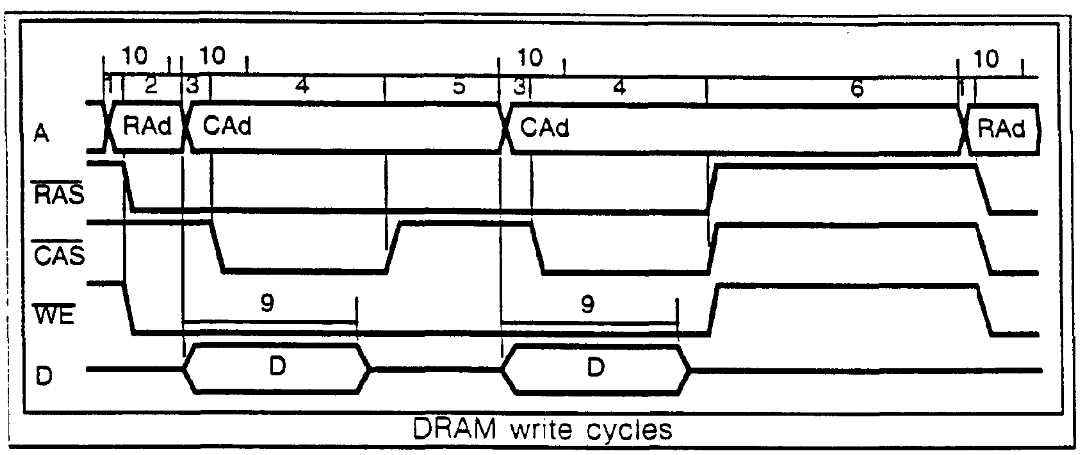

DRAM write cycles

The timing of a read cycle followed by a write cycle to a single DRAM bank is shown below:

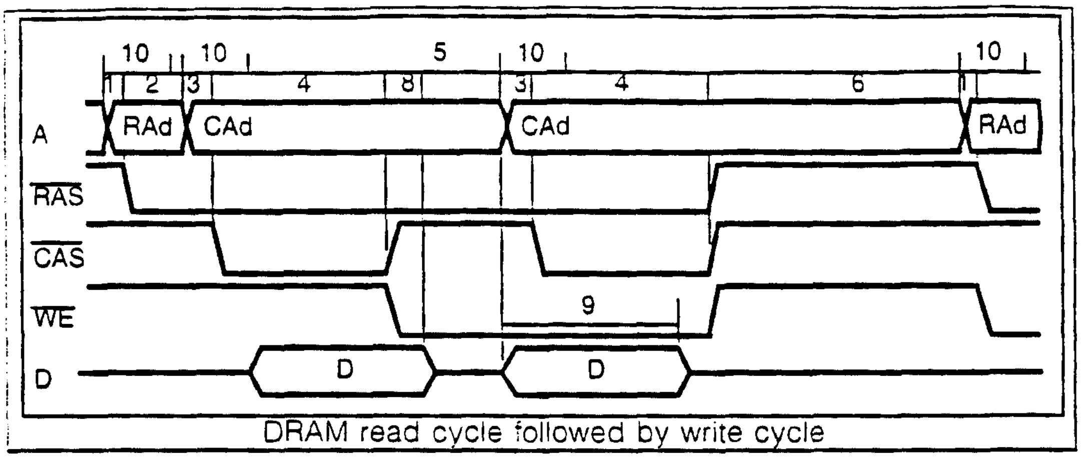

DRAM read cycle followed by write cycle

The timing of a refresh cycle to a single DRAM bank is shown below:

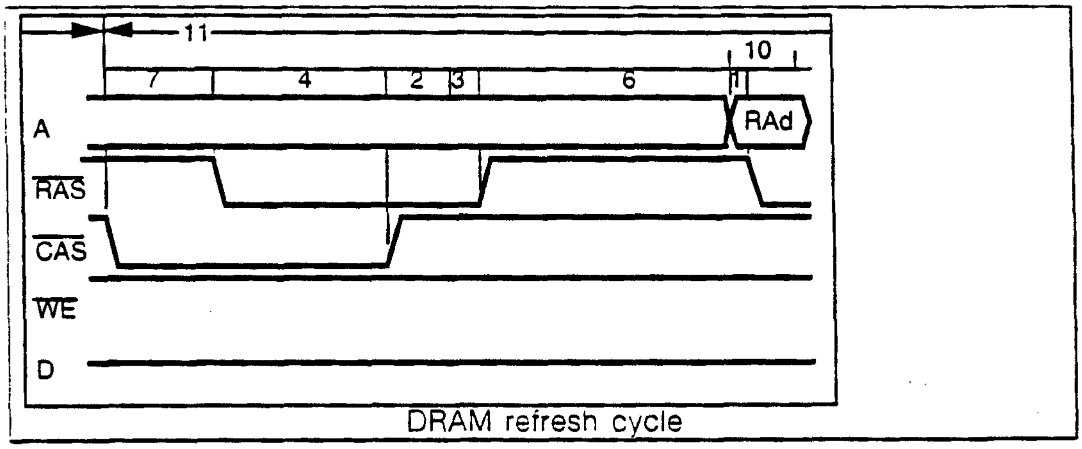

DRAM refresh cycle

The time intervals shown in the figures above control the following events:

| interval | units | meaning |
|---|---|---|
| **t1** | 4 | Row address set up time relative to RAS. |
| **t2** | 4 | Row address hold time after RAS. |
| **t3** | 4 | Column address set up time relative to CAS. |
| **t4** | 4 | CAS pulse width. The data bus is sampled for a read cycle at the end of t4. |
| **t5** | 4 | Page mode cycle time is t3+t4+t5. Page mode CAS precharge is t3+t5. |
| **t6** | 4 | RAS precharge is t6+t1. |
| **t7** | 4 | CAS to RAS set up for refresh cycle t7 >=t1 to ensure RAS precharge is met. |
| **t8** | 4 | Time data bus assumed to be occupied (by DRAM) after end of CAS low (end of t4) during read cycle. During t8, Mnemosyne will not drive CAS low for a read from another DRAM bank, or start a write cycle to another DRAM bank. |
| **t9** | 4 | Time data bus driven (by Mnemosyne) from column address drive (start of t3) during write cycle. During t9. Mnemosyne will not drive CAS low for a read from another DRAM bank, or start a write cycle to another DRAM bank. |

(continued)

| interval | units | meaning |
|---|---|---|
| **t10** | 4 | Interval between two address bus transitions. During t10. Mnemosyne will not change the address bus of another DRAM bank. This limits the noise generated by slewing the TTL address bus signals. |
| **t11** | 1024 | interval between refresh cycles. |

Additional DRAM operations may be requested before the corresponding DRAM bank is available, and are placed in a queue until they can be processed. Mnemosyne will queue DRAM writes with lower priority than DRAM reads, unless an attempt is made to read an address that is queued for a write operation. In such a case, DRAM writes are processed until the matching address is written. Mnemosyne may make an implementation-dependent pessimistic guess that such a conflict occurs, using a subset of the DRAM address to detect conflicts. The number of DRAM writes which are queued is implementation-dependent.

Mnemosyne uses one address bus for each interleave because dynamic power and noise is reduced by dividing the capacitance load of the DRAM address pins into four parts and only driving one-fourth of the load at a time. A timer (t10) prevents two address transitions from occurring too close together, to prevent power and noise on each address bus from having an additive effect. In addition, the loading of the already divided RAS, CAS, and WE signals is closer to the loading on the A signal when the address bus is also divided, reducing effects of capacitance loading on signal skew.

*Power. Swing Skew and Slew Calibration*

Mnemosyne uses a set of configuration registers to control the power and voltage levels used for internal high-bandwidth logic and SRAM memory, to control skew in the output byte-channel, and to control slew rates in the TTL output circuits of the DRAM interface. The details of programming these registers are described below.

Eight-bit fields separately control the power and voltage levels used in a portion of the Mnemosyne circuitry. Each such field contains configuration data in the following format:

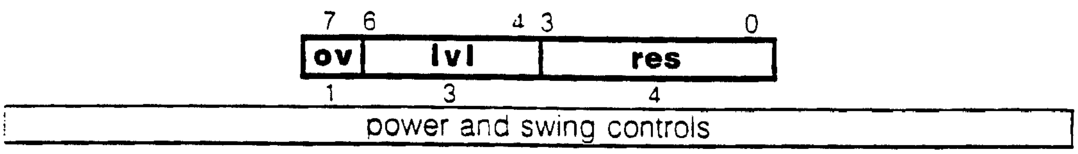


The range of valid values and the interpretation of the fields is given by the following table:

| field | value | interpretation |
|---|---|---|
| **ov** | 0..1 | For global setting control, if set, turns off current sources in order to protect logic from damage during changes to voltage and resistor settings. This bit must be set prior to changing settings and cleared afterwards. For local setting control, If set, override these local settings by the global settings. |
| **lvl** | 0..7 | Set voltage swing level. |
| **res** | 0..15 | Set resistor load value. |
| Power and swing control field interpretation | | |

Values and interpretations of the lvl field are given by the following table:

| value | voltage swing level |
|---|---|
| 0 | |
| 1 | |
| 2 | |
| 3 | |

(continued)

| value | voltage swing level |
|---|---|
| 4 | |
| 5 | |
| 6 | |
| 7 | |
| Voltage swing level control field interpretation | |

Values and interpretations of the res field are given by the following table:

| value | resistor load value |
|---|---|
| 0 | Reserved |
| 1 | |
| 2 | |
| 3 | |
| 4 | |
| 5 | |
| 6 | |
| 7 | |
| 8 | |
| 9 | |
| 10 | |
| 11 | |
| 12 | |
| 13 | |
| 14 | |
| 15 | |
| load value control field interpretation | |

When Mnemosyne is reset, a default value of 0 is loaded into each **ov** field, xxx in each cur field and xxx in each **res** field.

The **digital skew** fields set the number of delay stages inserted in the output path of the HoC and the Ho7..0 high-bandwidth output channel signals. Setting these fields, as well as the corresponding **analog skew** fields, permits a fine level of control over the relative skew between output channel signals. Nominal values for the output delay for various values of the digital skew and analog skew fields are given below:

| digital skew | analog skew | delay (ps) |
|---|---|---|
| 0 | any | 0 |
| 1 | A[49] | 135 |
| | B | 155 |
| | C | 175 |
| | D | 195 |
| | E | 215 |

(continued)

| digital skew | analog skew | delay (ps) |
|---|---|---|
| 2 | A | 220 |
| | B | 260 |
| | C | 300 |
| | D | 340 |
| | E | 380 |
| 3 | A | 330 |
| | B | 390 |
| | C | 450 |
| | D | 510 |
| | E | 570 |
| [49]We need to get the right values for the analog skew setting to get these nominal values. | | |

When Mnemosyne is reset, a default value of 0 is loaded into the **digital skew** fields, setting a minimum output delay for the HoC and Ho7..0 signals.

The **output slope** fields of the control register set the slew rate for the TTL outputs used for DRAM control, address and data signals, according to the following table:

| setting | slew rate (V/ns) for control, address signals | | slew rate (V/ns) for data signals | |
|---|---|---|---|---|
| | rising | falling | rising | falling |
| 0 | | | | |
| 1 | | | | |
| 2 | | | | |
| 3 | | | | |
| 4 | | | | |
| 5 | | | | |
| 6 | | | | |
| 7 | | | | |
| 8 | | | | |
| 9 | | | | |
| 10 | | | | |
| 11 | | | | |
| 12 | | | | |
| 13 | | | | |
| 14 | | | | |
| 15 | | | | |

*SRAM Redundancy Mapping*

Mnemosyne uses a configurable set of redundant physical memory blocks to enhance the manufacturability of the cache memory. A systematic method for determining the proper configuration is described below.

To help clarify the following description, the figure below shows the logical arrangement of the physical memory blocks in the SRAM cache of MicroUnity's first Mnemosyne implementation. There are 40 physical memory blocks, each containing 2048 x 9 bits of data. The 40 blocks are divided into 4 banks of 10 blocks each. The 40 blocks are also divided into 2 partitions of 20 blocks each, and for each partition, there are two redundant memory blocks which can be configured to substitute for any of the 20 blocks in that partition. The 40 blocks are also divided up into ranks, containing 8 blocks each, where each rank contains a distinct portion of a cache line. A cache line contains eight bytes of data, a 13-bit tag, a dirty bit, four unused bits, and an 8-bit ECC field.

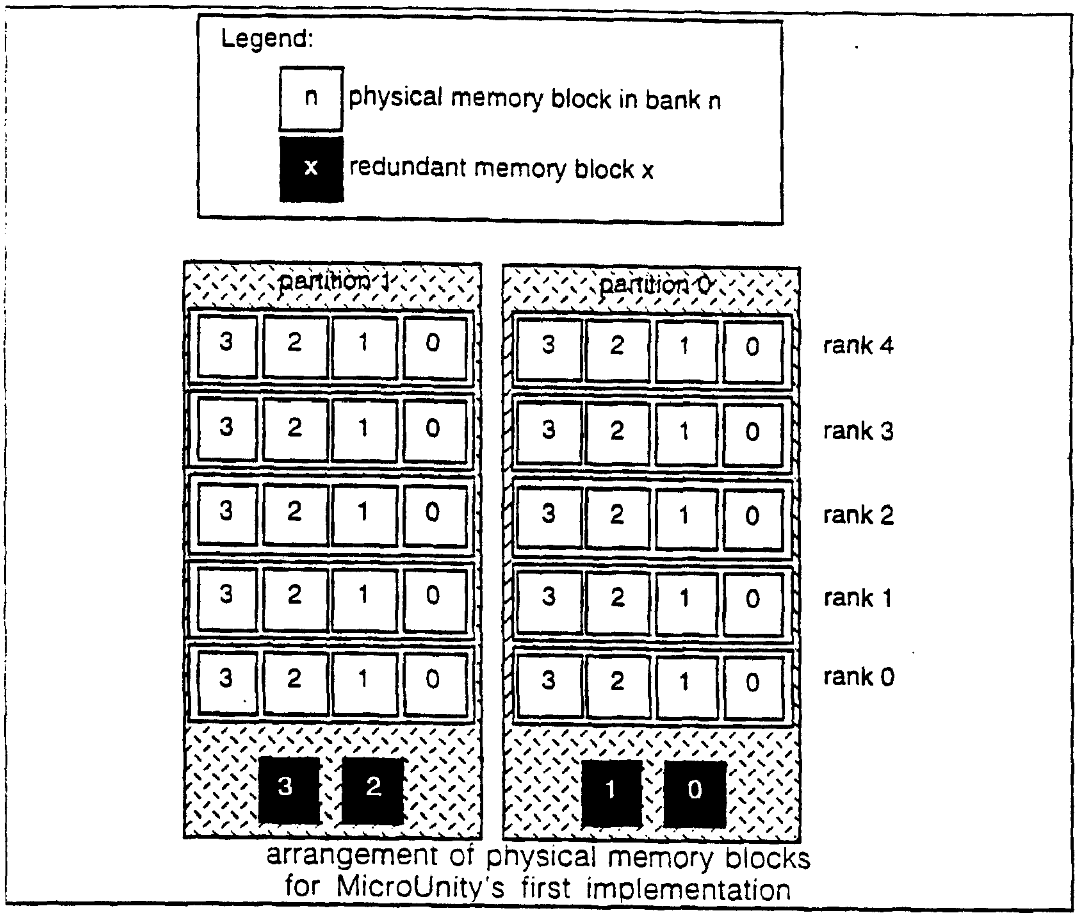

arrangement of physical memory blocks for MicroUnity's first implementation

Each **redundant x** field, where **x** is in the range 0..**D*****R**-1, controls the enabling and mapping address for a single redundant block. Starting at Cerberus address 32 and bits 63..56, each successive byte controls a redundant block, covering each redundant blocks in partition 0, and then in successive bytes, blocks for additional partitions. In other words, the **redundant x** field is located at Cerberus address $32+\lfloor\frac{x}{8}\rfloor$, bits 63-(x mod 8)..56-(x mod 8), and specifies the redundant mapping for block (**x** mod **R**), of redundant partition $\lfloor\frac{x}{R}\rfloor$. The format of each **redundant x** field is derailed in the following figure, with bit field sizes shown for MicroUnity's first implementation:

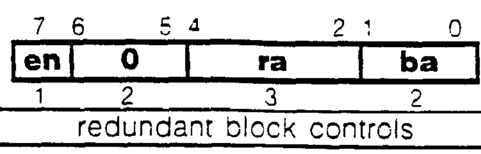

redundant block controls

The range of valid values and the interpretation of the fields is given by the following table:

| field | bits | value | interpretation |
|---|---|---|---|
| **en** | 1 | 0..1 | If set, use this redundant block to replace a physical memory block. |
| **0** | $7+\rfloor\log_2(\frac{\mathbf{D}}{\mathbf{N}})$ | 0 | Pad control field to a byte |
| **ra** | $-\rfloor\log_2(\frac{\mathbf{D}}{\mathbf{n}})$ | $0..\frac{\mathbf{n}}{\mathbf{D}}-1$ | Replace physical memory block at rank **ra** with the redundant block. |
| **ba** | $\log_2(\frac{\mathbf{N}}{\mathbf{n}})$ | $0..\frac{\mathbf{N}}{\mathbf{n}}-1$ | Replace physical memory block at bank **ba** with the redundant block. |
| Current and voltage control field interpretation | | | |

Redundancy is configured by first testing the SRAM cache with the **isolate/synch** bit if the control register set and all redundant x fields set to zero, and then again with each **redundant x** field set to 128+(**x** mod **R**). The result of the testing should indicate the location of all failures in the primary physical memory blocks and the redundant blocks. Then, each of the failed primary blocks is replaced with a working redundant block by setting the **redundant x** fields as required.

In order to map the address and bit identities of failures to physical block failures, the internal arrangement of bits and fields into blocks must be elaborated. First, a Mnemosyne memory address is divided into four parts according to the following figure, with bit field sizes shown for MicroUnity's first implementation:

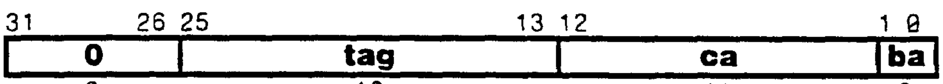

Mnemosyne cache address layout

The interpretation of the fields is given by the following table:

| field | bits | interpretation |
|---|---|---|
| **0** | 8**A**-2**P**-**E** | Must be zero |
| **tag** | **t** | These bits are stored into the cache on a write operation and compared against bits read from the cache on a read operation. |
| **ca** | $\mathbf{C}-\log_2(\frac{\mathbf{N}}{\mathbf{n}})$ | These bits are applied to the physical memory block to select a single SRAM cache word. |
| **ba** | $\log_2(\frac{\mathbf{N}}{\mathbf{n}})$ | These bits are used to select one of $\frac{\mathbf{N}}{\mathbf{n}}$ banks of physical memory blocks. |
| Mnemosyne cache address field interpretation | | |

For each cache address and cache bank, a "line" of information, containing a cache tag, the cache data, and a dirty bit is stored. The internal arrangement of these fields is as shown in the following figure, with bit field sizes shown for MicroUnity's first implementation:

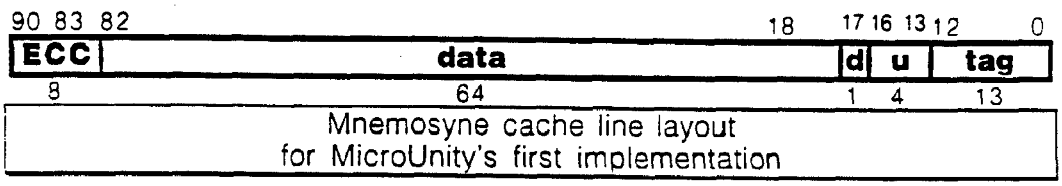


Mnemosyne cache line layout
for MicroUnity's first implementation

The interpretation of the fields is given by the following table:

| field | bits | interpretation |
|---|---|---|
| **ECC** | **e** | ECC bits used to correct single bit errors and detect multiple-bit errors. |
| **data** | 8**W** | Data bits contain the visible cache data, as it appears in the packets. |
| **d** | 1 | Dirty bit: indicates that the cache line needs to be written to DRAM memory on a miss. |
| **u** | **S*n-e-**8**W-**1**-t** | Unused bits pad cache line to even number of physical memory blocks. |
| **tag** | **t** | Tag bits identify a Mnemosyne logical address for this cache line. |
| Mnemosyne cache line field interpretation | | |

From the tables above, for each failure identified in the cache SRAM, a physical memory bank number, **ba,** can be identified from the Mnemosyne address, and a bit position, **bi,** can be identified from the Mnemosyne cache line layout. The bit position specifies a physical memory partition number, **pa,** according to the following formula:

$$pa = \left\lfloor \frac{bi \bmod s{*}D}{s} \right\rfloor$$

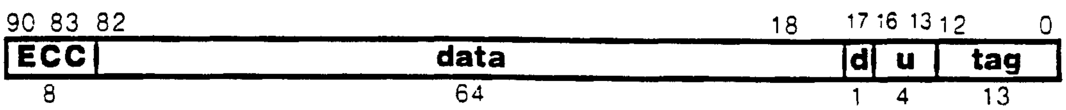


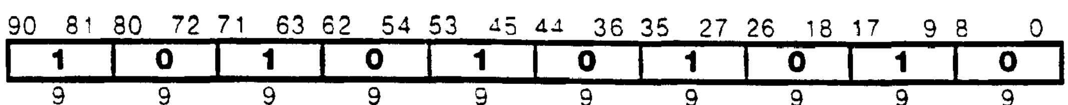


Partition from bit position
for MicroUnity's first implementation

The bit position also identifies a physical memory block rank, ra, according to the following formula:

$$ra = \left\lfloor \frac{bi}{s{*}D} \right\rfloor$$

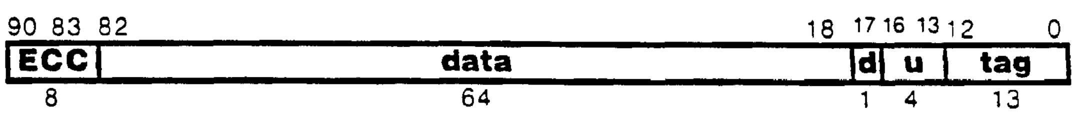

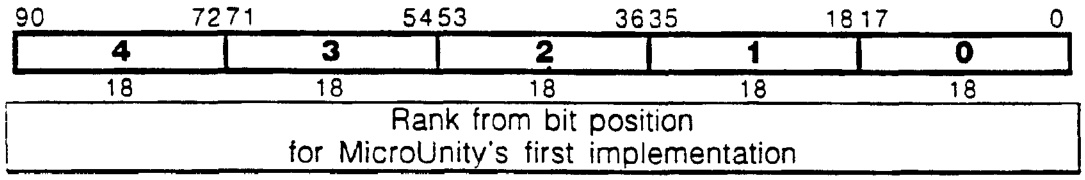


So, to correct a failure in the cache SRAM, one of the working redundant blocks in the partition **pa** must be configured by setting **a redundant x** field, where **x** is in the range **pa*D**+**D-**1..**pa*D,** to the value:

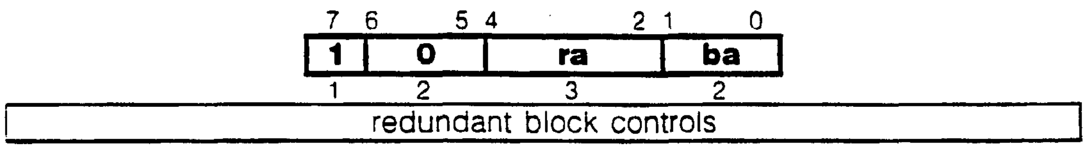


*Multiple Memory Chips*

Up to four Mnemosyne memory devices may be cascaded to form effectively larger memories. The cascade of memory devices will have the same bandwidth as a single memory chip, but more latency.

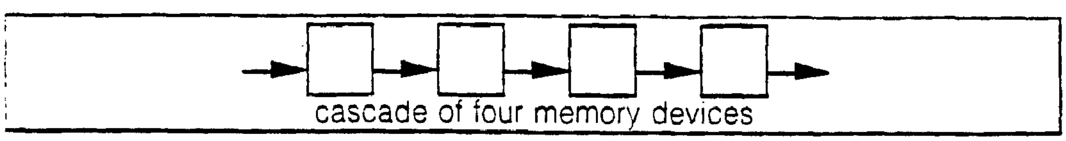


Packets are explicitly addressed to a particular Mnemosyne device; any packet received on a device's input channel which specifies another module address is automatically passed on via its output channel. This mechanism provides for the serial interconnection of Mnemosyne devices into strings, which function identically to a single Mnemosyne, except that a Mnemosyne string has larger memory capacity and longer response latency.

All devices in a cascade must have the same values for A and W parameters, in order that each part may properly interpret packet boundaries.

*Response Packet Timing*

In general, a received packet which is interpreted as a command causes a response packet to be generated. The latency between the end of the request packet and the beginning of the response packet is affected by the processing and forwarding of other packets, by the presence or absence of the requested word in the cache, by the setting of the SRAM and DRAM timing generators, by the presence of queued DRAM write and read requests, as well as other non-configurable and implementation-dependent device parameters.

With full knowledge of the cache state, configurable parameters and implementation-dependent characteristics, a memory controller may completely model the latency of responses. However, dependence on such characteristics is not recommended, except for testing and characterization purposes.

SRAM accesses, DRAM accesses, and forwarded packets typically have differing latency before a response or forwarded packet is generated at the Hermes output channel, so that certain combinations would imply that two output packets would need to overlap. In such a case, Mnemosyne will buffer the later output packet until such time as it can be transmitted. However, the number of requests that can be buffered is strictly limited to eight (the number of identification numbers) per Mnemosyne device. It is the responsibility of the issuer of command packets to ensure the number of outstanding packets never exceeds the limits of the buffer. Mnemosyne may use non-fair scheduling for forwarded packets to avoid buffer overflow conditions.

The use of DRAM page mode accesses and interleaving requires knowledge of the relationship between a pair of transactions. Therefore, additional DRAM requests per interleave level may be transmitted before the time at which the DRAM controller may perform the request. These additional requests are queued and the corresponding response packet is generated at a time controlled by the DRAM timing generator. DRAM interleaves are serviced in an implementation-dependent fashion to ensure starvation-free scheduling.

*Persephone PCI Adaptation*

MicroUnity's Persephone[50] PCI adaptation architecture is designed to enable Terpsichore systems to employ interface cards that conform to the PCI[51] (Peripheral Component Interconnect) standard.
[50](pur-sef-uh-nee) In Greek mythology. Persephone (also called Kore) was the beautiful daughter of Zeus and Demeter who represented both nature's growth cycle and death. Hades, god of the underworld and brother of Zeus, was lonely in his underworld kingdom: therefore Zeus, without consulting Demeter, told him to take Persephone as his wife. Thus, as Persephone was picking flowers one day, Hades came out of the earth and carried her off to be his queen. While the grieving Demeter, goddess of grain, searched for her daughter, the earth became a barren wasteland. Zeus finally obtained Persephone's release, but because she had eaten a pomegranate seed in the underworld, she was obliged to spend four months (winter) of each year there, during which time barrenness returned to the earth.
[51]PCI standard, version 2.0.

*Calliope Interface*

Portions of this section has been temporarily removed to a separate document: "Calliope Interface Architecture." though it is still a mandatory area of the Terpsichore System architecture.
MicroUnity's Calliope interface architecture is designed for ultra-high bandwidth systems. The architecture integrates fast communication channels with SRAM buffer memory and interfaces to standard analog channels.
The Calliope interfaces include byte-wide input and output channels intended to operate at rates of at least 1 GHz. These channels provide a packet communication link to synchronous SRAM memory on chip and a controller for interfaces to analog channels. Calliope provides analog interfaces for MicroUnity's Terpsichore system architecture. However, Calliope is useful in many interface applications.
Calliope's interface protocol embeds read and write operations to a single memory space into packets containing command, address, data, and acknowledgement. The packets include check codes that will detect single-bit transmission errors and multiple-bit errors with high probability. As many as eight operations in each device may be in progress at a time. As many as four Calliope devices may be cascaded to expand the buffer and analog interfaces.

*Architecture Framework*

The Calliope architecture builds upon MicroUnity's Hermes high-bandwidth channel architecture and upon MicroUnity's Cerberus serial bus architecture, and complies with the requirements of Hermes and Cerberus. Calliope uses parameters A and W as defined by Hermes.
The Calliope architecture defines a compatible framework for a family of implementations with a range of capabilities. The following implementation-defined parameters are used in the rest of the document in boldface. The value indicated is for MicroUnity's first Calliope implementation.

| Parameter | Interpretation | Value | Range of legal vanes |
|---|---|---|---|
| **C** | $\log_2$ logical memory words in SRAM buffer | 11 | **C** ≥ 1 |
| **AI** | number of AI audio inputs | 1 | **AI** ≤ **3** |
| **AO** | number of AO audio outputs | 1 | **AO** ≤ 3 |
| **PO, PI** | number of PO phone outputs and PI phone inputs | 1 | **PO = PI, PO** ≤ 3 |
| **VI** | number of VI video inputs | 1 | **VI** ≤ 3 |
| **VO** | number of VO video outputs | 1 | **VO** ≤ 3 |
| **IR, II** | number of IR infrared outputs and II infrared inputs | 1 | **IR** = **II**, **IR** ≤ 3 |
| **SO, SI** | number of SO smartcard outputs and SI smartcard inputs | 1 | **SO** = **S1. SO** ≤ 3 |
| **EQ, CI** | number of EQ equalizers and CI cable inputs | 2 | **EQ** = **CI, EQ** ≤ 3 |
| **CO** | number of CO cable outputs | 2 | **CO** ≤ 3 |
| **QPSK** | number of QPSK cable inputs | 1 | **QPSK** ≤ 3 |

*Interfaces and Block Diagram*

Calliope uses two Hermes unidirectional, byte-wide, differential, packet-oriented data channels for its main, high-bandwidth interface between a memory control unit and Calliope's memory. This interface is designed to be cascadeable, with the output of a Calliope chip connected to the input of another, to expand the interface resources that can be reached via a single set of data channels. An external memory control unit is in complete control of the selection and timing of operations within Calliope and in complete control of the timing and content of information on the high-bandwidth interfaces.

A Cerberus bit-serial interface provides access to configuration, diagnostic and tester information, using TTL signal levels at a moderate data rate.

Nearly all Calliope circuits use a single power supply voltage, nominally at 3.3 Volts (5% tolerance). A second voltage of 5.0 Volts (5% tolerance) is used only for TTL interface circuits. Power dissipation is TBD. Initial packaging is TAB (Tape Automated Bonding).

Pin assignments are to be defined: there are 174 signal pins and 466 pins for 3.3V power, 5.0V power and substrate, for a total of 640 pins.

| count | pin | meaning |
|---|---|---|
| 18 | HiC. $Hi_{7..0}$ | hi-bandwidth input |
| 18 | HoC, $Ho_{7..0}$ | hi-bandwidth output |
| | | |
| | | |
| | | |
| 6 | SC. SD. $SN_{3..0}$ | Cerberus interface |
| 174 | | total signal pins |
| ? | VDD | 3.3 V above VSS |
| ? | VCC[52] | 5.0 V above VSS |
| ? | VSS | most negative supply |
| 640 | | total pins |
| [52]Internal circuit documentation names this signal VDDO. | | |

The following is a diagram of the Calliope device interfaces: (Numerical values are shown for MicroUnity's first implementation.)

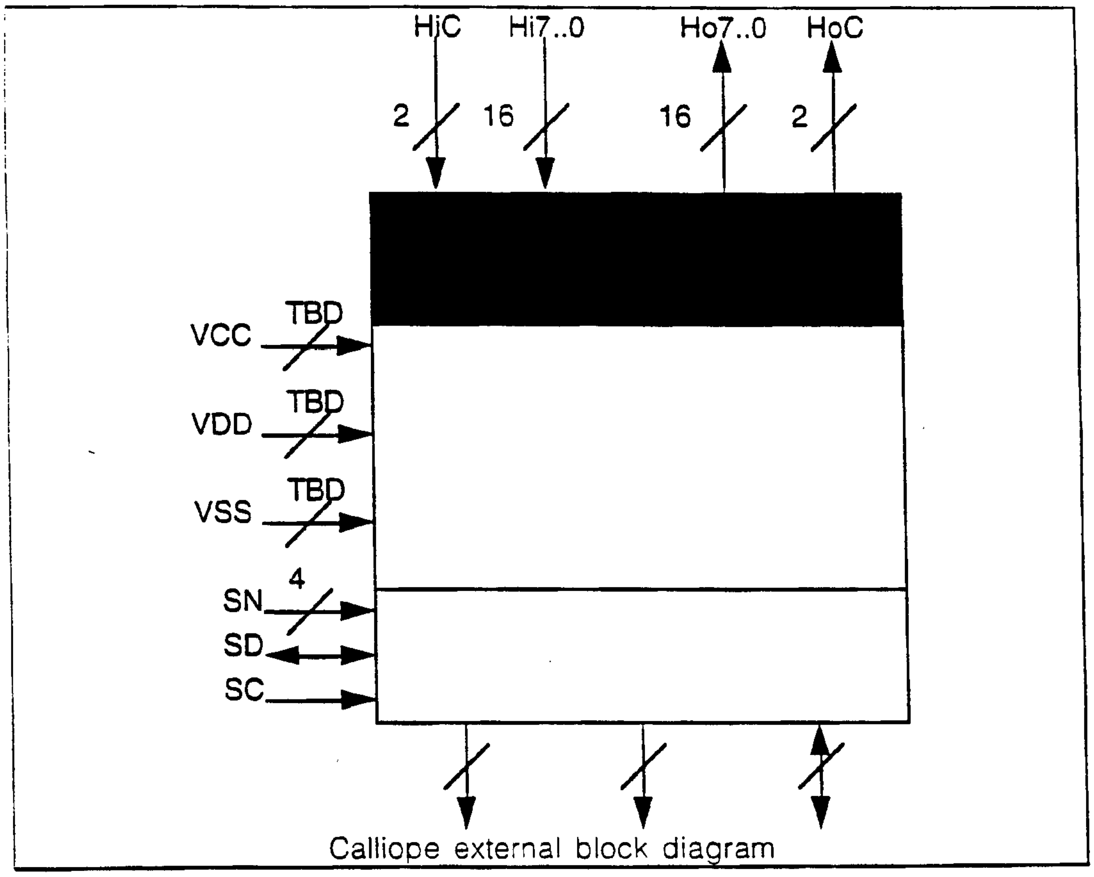

Calliope external block diagram

| Absolute Maximum Ratings | MIN | NOM | MAX | UNIT |
|---|---|---|---|---|
| | | | | |
| | | | | |
| | | | | |
| | | | | |
| | | | | |

| Recommended operating conditions | MIN | NOM | MAX | UNIT | REF |
|---|---|---|---|---|---|
| $V_T$: Termination equivalent voltage | 4.5 | 5.0 | 5.5 | V | |
| Main supply voltage VDD | 3.14 | 3.3 | 3.47 | V | VSS |
| TTL supply voltage VCC | 4.75 | 5.0 | 5.25 | V | VSS |
| Operating free-air temperature | 0 | | 70 | C | |

| Electrical characteristics | MIN | TYP | MAX | UNIT | REF |
|---|---|---|---|---|---|
| $V_{OH}$: H-state output voltage HoC, $Ho_{7\ 0}$ | | | | V | VDD |
| $V_{OL}$: L-state output voltage HoC. $Ho_{7\ 0}$ | | | | V | VDD |
| $V_{IH}$: H-state input voltage HiC. $Hi_{7\ 0}$ | | | | V | VDD |

(continued)

| Electrical characteristics | MIN | TYP | MAX | UNIT | REF |
|---|---|---|---|---|---|
| $V_{IL}$: L-state Input voltage HiC. $Hi_{7\ 0}$ | | | | V | VDD |
| $I_{OH}$: H-state output current HoC. $Ho_{7\ 0}$ | | | | mA | |
| $I_{OL}$: L-state output current HoC. $Ho_{7\ 0}$ | | | | mA | |
| $I_{IH}$: H-state input current HiC. $Hi_{7\ 0}$ | | | | mA | |
| $I_{IL}$: L-state input current HiC. $Hi_{7\ 0}$ | | | | mA | |
| $C_{IN}$: Input capacitance HiC, $Hi_{7\ 0}$ | | | | pF | |
| $C_{OUT}$: Output capacitance HoC, $Ho_{7\ 0}$ | | | | pF | |
| $V_{CL}$ : L-state output voltage SD | 0 | | 0.4 | V | VSS |
| $V_{IH}$: H-state input voltage SD | 2.0 | | 5.5 | V | VSS |
| $V_{IH}$: H-state input voltage SC. $SN_{3..0}$ | 2.0 | | 5.5 | V | VSS |
| $V_{IL:}$ L-state input voltage SC, SD, $SN_{3\ 0}$ | -0.5 | | 0.8 | V | VSS |
| $I_{OL}$: L-state output current SD | | | 16 | mA | |
| $I_{OZ}$: Off-state output current SD | -10 | | 10 | μA | |
| $I_{IH}$: H-state input current SC, $SN_{3\ 0}$ | -10 | | 10 | μA | |
| $I_{IL}$: L-state input current SC. $SN_{3..0}$ | -10 | | 10 | μA | |
| $C_{IN}$: Input capacitance SC, $SN_{3..0}$ | | | 4.0 | pF | |
| $C_{OUT}$: Output or input-output capacitance, SD, | | | 4.0 | pF | |

| Switching characteristics | MIN | TYP | MAX | UNIT |
|---|---|---|---|---|
| $t_{BC}$: HiC clock cycle time | 1544 | | | ps |
| $t_{BCH}$: HiC clock high time | 600 | | | ps |
| $t_{BCL}$: HiC clock low time | 600 | | | ps |
| $t_{BT}$: HiC clock transition time | | | 100 | ps |
| $t_{BS}$: set-uo time. $Hi_{7\ 0}$ valid to HiC xition | 200 | | 100 | ps |
| $t_{BH}$: hold time, HiC xition to $Hi_{7\ 0}$ invalid | -200 | | -100 | ps |
| $t_{OS}$: skew between HoC and $Ho_{7\ 0}$ | -50 | | 50 | ps |
| $t_C$: SC clock cycle time | 50 | | | ns |
| $t_{CH}$: SC clock high time | 20 | | | ns |
| $t_{CL}$: SC clock low time | 20 | | | ns |
| $t_T$: SC clock transition time | | | 5 | ns |
| $t_S$: set-uo time. SD valid to SC rise | | | | ns |
| $t_H$: hold time. SC rise to SD invalid | | | | ns |
| $t_{OD}$: SC rise to SD valid | 5 | | | ns |

*Logical and Physical Memory Structure*

Calliope defines two regions: a memory region, implemented by an on-device static RAM memory along with high-bandwidth control registers and a configuration region, implemented by on-device read-only and read/write registers. These regions are accessed by separate interfaces; the Hermes channel used to access the memory region, and the Cerberus serial interface used to access the configuration region. These regions are kept logically separate.

The Calliope logical memory region is an array of $2^{8A}$ words of size W bytes. Each memory access, either a read or write, references all bytes of a single block. All addresses are block addresses, referencing the entire block.

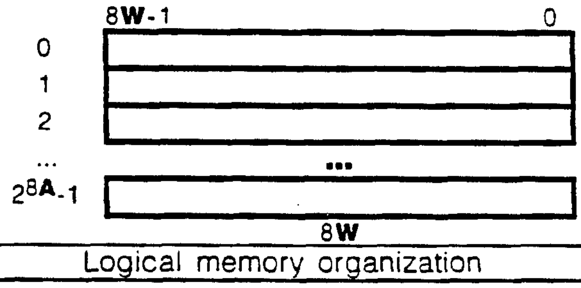


Logical memory organization

Calliope's SRAM memory is a buffer for data which flows to or from interface devices.

Calliope's configuration region consists of read-only and read/write registers. The size of a logical block in the configuration memory space is eight bytes: one octlet.

*Communications Channels*

*High-bandwidth*

Calliope uses the Hermes high-bandwidth channel and protocols, implementing a slave device.

Calliope operates two Hermes high-bandwidth communications channels, one input channel and one output channel.

Calliope uses the Hermes packet structure. There is no structure corresponding to the Hermes-designated cache, so the no-allocate attribute of read and write operations has no effect..

Configuration-region registers provide a low-level mechanism to detect skew in the byte-wide input channel, and to adjust skew in the byte-wide output channel. This mechanism may be employed by software to adaptively adjust for skew in the channels, or set to fixed patterns to account for fixed signal skew as may arise in device-to-device wiring.

*Serial*

A Cerberus serial bus interface is used to configure the Calliope device, set diagnostic modes and read diagnostic information, and to enable the use of the part within a high-speed tester.

The serial port uses the Cerberus serial bus interface.

*Error Handling*

Calliope performs error handling compliant with Hermes architecture.

For the current implementation, the following errors are designed to be detected and known not detected by design:

| errors detected | errors not detected |
|---|---|
| invalid check byte | invalid identification number |
| invalid command | internal buffer overflow |
| invalid address | invalid check byte on idle packet |
| | uncorrectable error in SRAM buffer |
| | |

Upon receipt of the error response packet, the packet originator must read the status register of the reporting device to determine the precise nature of the error. Calliope devices reporting an invalid packet will suppress the receipt of additional packets until the error is cleared, by clearing the status register. However, such devices may continue to process packets which have already been received, and generate responses. Upon taking appropriate corrective actions and clearing the error, the packet originator should then re-send any unacknowledged commands.

Because of the large difference in clock rate between the high-bandwidth Hermes channel and the Cerberus serial bus interface, it is generally safe to assume that, after detecting an error response packet, an attempt to read the status register via Cerberus will result in reading stable, quiescent error conditions and that the queue of outstanding requests will have drained. After clearing the status register via Cerberus, the packet originator may immediately resume sending requests to the Calliope device.

*Cerberus Registers*

Calliope's configuration registers comply with the Cerberus and Hermes specifications. Cerberus registers are internal read/only and read/write registers which provide an implementation-independent mechanism to query and control the configuration of devices in a Terpsichore system. By the use of these registers, a user of a Terpsichore system may tailor the use of the facilities in a general-purpose implementation for maximum performance and utility. Conversely, a supplier of a Terpsichore system component may modify facilities in the device without compromising compatibility with earlier implementations. These registers are accessed via the Cerberus serial bus.

As a device component of a Terpsichore system, each Calliope interface contains a set of Cerberus-accessable configuration registers. Additional sets of configuration registers are present for each device in a Terpsichore system, including Euterpe processor devices, and Mnemosyne memory devices.

Read/only registers supply information about the Terpsichore system implementation in a standard, implementation-independent fashion. Terpsichore software may take advantage of this information, either to verify that a compatible implementation of Calliope is installed, or to tailor the use of the part to conform to the characteristics of the implementation.

The read/only registers occupy addresses 0..5. An attempt to write these registers may cause a normal or an error response.

Read/write registers select operating modes and select power and voltage levels for gates and signals. The read/write registers occupy addresses 6..7, 10..14 and 25..32.

Reserved registers in the range 8..9, 15..24 and 33..63 must appear to be read/only registers with a zero value. An attempt to write these registers may cause a normal or an error response.

Reserved registers in the range 64..$2^{16}$-1 may be implemented either as read/only registers with a zero value, or as addresses which cause an error response if reads or writes are attempted.

The format of the registers is described in the table below. The octlet is the Cerberus address of the register; bits indicate the position of the field in a register. The value indicated is the hard-wired value in the register for a read/only register, and is the value to which the register is initialized upon a reset for a read/write register. If a reset does not initialize the field to a value, or if initialization is not required by this specification, a * is placed in or appended to the value field. The range is the set of legal values to which a read/write register may be set. The interpretation is a brief description of the meaning or utility of the register fields a more comprehensive description follows this table.

| octlet | bits | field name | value | range | interpretation |
|---|---|---|---|---|---|
| 0 | 63..16 | **architecture code** | 0x00<br>40<br>a3<br>92<br>b4<br>49 | | Identifies interface device as compliant with MicroUnity Calliope architecture. |
| | 15..0 | **architecture revision** | 0x01<br>00 | | Device complies with architecture version 1.0. |

| octlet | bits | field name | value | range | interpretation |
|---|---|---|---|---|---|
| 1 | 63..16 | **implementor code** | 0x00 40 a3 49 db 3c | | Identifies Calliope interface device as implemented by MicroUnity. |
| | 15..0 | **implementor revision** | 0x01 00 | | Implementation version 1.0. |

| octlet | bits | field name | value | range | interpretation |
|---|---|---|---|---|---|
| 2 | 63..16 | **manufacturer code** | 0x00 40 a3 a4 6d ff | | Identifies initial manufacturer of Calliope interface device implemented by MicroUnity as MicroUnity. |
| | 15..0 | **manufacturer revision** | 0x01 00 | | Manufacturing version 1.0. |

| octlet | bits | field name | value | range | interpretation |
|---|---|---|---|---|---|
| 3 | 63..16 | **serial number** | 0 | | This device has no serial number capability. |
| | 15..0 | **dynamic address** | 0 | | This device has no dynamic addressing capability. |

| octlet | bits | field name | value | range | interpretation |
|---|---|---|---|---|---|
| 4 | 63..60 | **A** | 4 | 0..15 | size of a Hermes address |
| | 59..56 | **$log_2W$** | 3 | 0..15 | size of a Hermes word |
| | 55..48 | **C** | 11 | 0..255 | $log_2$ of buffer capacity in words |
| | 47..0 | **0** | 0 | 0 | Reserved for definition in later revision of Calliope architecture |

| octlet | bits | field name | value | range | interpretation |
|---|---|---|---|---|---|
| 5 | 63.20 | **0** | 0 | 0 | Reserved for definition in later revision of Calliope architecture |
| | 19..18 | **AI** | 1 | 0..3 | number of AI audio inputs |
| | 17..16 | **AO** | 1 | 0..3 | number of AO audio outputs |
| | 15..14 | **PO, PI** | 1 | 0..3 | number of PO phone outputs and PI phone inputs |
| | 13..12 | **VI** | 1 | 0..3 | number of VI video inputs |
| | 11..10 | **VO** | 1 | 0..3 | number of VO video outputs |
| | 9..8 | **IR, II** | 1 | 0..3 | number of IR infrared outputs and II infrared inputs |
| | 7..6 | **SO, SI** | 1 | 0..3 | number of SO smartcard outputs and SI smartcard inputs |
| | 5..4 | **EQ, CI** | 2 | 0..3 | number of EQ equalizers and CI cable inputs |
| | 3..2 | **CO** | 2 | 0..3 | number of CO cable outputs |
| | 1..0 | **QPSK** | 1 | 0..3 | number of QPSK cable inputs |

| octlet | bits | field name | value | range | interpretation |
|---|---|---|---|---|---|
| 6 | 63 | **reset** | 1 | 0..1 | set to invoke device's circuit reset |
| | 62 | **clear** | 1 | 0..1 | set to invoke device's logic clear |
| | 61 | **selftest** | 0 | 0..1 | set to invoke device's selftest: bits 60..48 may indicate depth of selftest |
| | 60 | **defer writes** | 0* | 0..1 | set to cause writes to octlets 25..43 to be deferred until the next logic-clear or non-deferred write. |
| | 59..50 | **0** | 0 | 0 | Reserved |
| | 49..48 | **module id** | 0 | 0..3 | Module identifier. |
| | 47..33 | **0** | 0 | 0 | Reserved |
| | 32 | **Hermes channel disable** | 1 | 0..1 | Set to cause Hermes input channel to be ignored and idles to be generated on output channel. |
| | 31..16 | **0** | 0 | 0 | Reserved |
| | 15..8 | **cidle 0** | 0* | 0..255 | Value transmitted on idle Hermes output channel when output clock zero (0). |
| | 7..0 | **cidle 1** | 255* | 0..255 | Value transmitted on idle Hermes output channel when output clock one (1). |

| octlet | bits | field name | value | range | interpretation |
|---|---|---|---|---|---|
| 7 | 63 | **reset/clear/ selftest complete** | 1 | 0..1 | This bit is set when a reset, clear or selftest operation has been completed. |
| | 62 | **reset/clear/ selftest status** | 1 | 0..1 | This bit is set when a reset, clear or selftest operation has been completed successfully. |
| | 61 | **meltdown detected** | 0 | 0..1 | This bit is set when the meltdown detector has caused a reset. |
| | 60 | **low voltage or temperature** | 0 | 0..1 | This bit is set when the voltage or temperature is too low for proper operation of logic circuits. |
| | 59..57 | **0** | 0 | 0 | Reserved for indicating additional causes of reset. |
| | 56 | **Cerberus transaction error** | 0 | 0..1 | This bit is set when a Cerberus transaction error has caused a machine check. |
| | 55 | **Hermes check byte error** | 0 | 0..1 | This bit is set when a Hermes channel check byte error has caused a machine check. |
| | 54 | **Hermes command error** | 0 | 0..1 | This bit is set when a Hermes channel command error has caused a machine check. |
| | 53 | **Hermes address error** | 0 | 0..1 | This bit is set when a Hermes address error has caused a machine check. |
| | 52..16 | **0** | 0* | 0 | Reserved |
| | 15..8 | **raw 0** | * | 0..255 | Value sampled on specified Hermes channel when input clock is zero (0). |
| | 7..0 | **raw 1** | * | 0..255 | Value sampled on specified Hermes channel immediately following sample value in **raw 0** register. |

| octlet | bits | field name | value | range | interpretation |
|---|---|---|---|---|---|
| 8..9 | 63..0 | **0** | 0 | 0 | Reserved |

| octlet | bits | field name | value | range | interpretation |
|---|---|---|---|---|---|
| 10 | 63..56 | **0** | 0 | 0 | Reserved |
| | 55..48 | **PLL anob** | 224 | 0..230 | PLL analog-knob settings |
| | 47..40 | **0** | 0 | 0 | Reserved |
| | 39..32 | **CI2 test** | 0 | 0..7 | CI2 test control |
| | 31..24 | **CI1 test** | 0 | 0..7 | CI1 test control |
| | 23..16 | **CI2adc anob** | 224 | 0..230 | CI2 ADC analog-knob settings |
| | 15..12 | **CI2Q filter** | 3 | 0..7 | CI2 Q filter adjust |
| | 11..8 | **CI2I filter** | 3 | 0..7 | CI2 I filter adjust |
| | 7..4 | **0** | 0 | 0 | Reserved |
| | 3 | **CI2 VCO** | 0 | 0..1 | CI2 external VCO switch |
| | 2 | **CI2 LNA** | 0 | 0..1 | CI2 input LNA enable |
| | 1 | **CI2Q ADC preamplifier** | 0 | 0..1 | CI2 Q ADC preamplifier disable |
| | 0 | **CI2I ADC preamplifier** | 0 | 0..1 | CI2 I ADC preamplifier disable |

| octlet | bits | field name | value | range | interpretation |
|---|---|---|---|---|---|
| 11 | 63..56 | **CI1syn anob** | 224 | 0..230 | CI1 synthesizer analog-knob settings |
| | 55 | **CO2 invert** | 0 | 0..1 | CO2 inversion control |
| | 54 | **CO1 invert** | 0 | 0..1 | CO1 inversion control |
| | 53 | **CI2a invert** | 0 | 0..1 | CI2a inversion control |
| | 52 | **CI2b invert** | 0 | 0..1 | CI2b inversion control |
| | 51 | **CI1a invert** | 0 | 0..1 | CI1a inversion control |
| | 50 | **CI1b invert** | 0 | 0..1 | CI1b inversion control |
| | 49..48 | **0** | 0 | 0 | Reserved |
| | 47..40 | **CI1adc anob** | 224 | 0..230 | CI1 ADC analog-knob settings |
| | 39..36 | **CI1Q filter** | 3 | 0..7 | CI1 Q filter adjust |
| | 35..32 | **CI1I filter** | 3 | 0..7 | CI1 I filter adjust |
| | 31..28 | **0** | 0 | 0 | Reserved |
| | 27 | **CI1 VCO** | 0 | 0..1 | CI1 external VCO switch |
| | 26 | **CI1 LNA** | 0 | 0..1 | CI1 input LNA enable |
| | 25 | **CI1Q ADC preamplifier** | 0 | 0..1 | CI1 Q ADC preamplifier disable |
| | 24 | **CI1I ADC preamplifier** | 0 | 0..1 | CI1 I ADC preamplifier disable |
| | 23..16 | **CI2syn anob** | 224 | 0..230 | CI2 synthesizer analog-knob settings |
| | 15..8 | **refclk anob** | 224 | 0..230 | reference clock divider analog-knob settings |
| | 7..0 | **CLIO anob** | 224 | 0..230 | CLIO analog-knob settings |

| octlet | bits | field name | value range | | interpretation |
|---|---|---|---|---|---|
| 12 | 63 | **capacitor calibration** | 0 | 0..1 | Set to enable capacitor calibration. |
| | 62..56 | **capacitor calibration result** | 0 | 0..127 | Result of capacitor calibration. |
| | 55..34 | **0** | 0 | 0 | Reserved |
| | 33 | **VI invert** | 0 | 0..1 | VI inversion control |
| | 32 | **VO invert** | 0 | 0..1 | VO inversion control |
| | 31..24 | **VI anob** | 224 | 0..230 | VI analog-knob settings |
| | 23..16 | **VO anob** | 224 | 0..230 | VO analog-knob settings |
| | 15..8 | **CO1 anob** | 224 | 0..230 | CO1 analog-knob settings |
| | 7..0 | **CO2 anob** | 224 | 0..230 | CO2 analog-knob settings |

| octlet | bits | field name | value range | | interpretation |
|---|---|---|---|---|---|
| 13 | 63 | **0** | 0 | 0 | Reserved |
| | 62..56 | **CO2 configuration** | 0 | 0..127 | CO2 configuration control |
| | 55 | **AI invert** | 0 | 0..1 | AI inversion control |
| | 54 | **PI invert** | 0 | 0..1 | PI inversion control |
| | 53 | **PO invert** | 0 | 0..1 | PO inversion control |
| | 52 | **AO invert** | 0 | 0..1 | AO inversion control |
| | 51..50 | **AIR bias** | 2 | 0..3 | AI right amplifier bias level |
| | 51..48 | **AIL bias** | 2 | 0..3 | AI left amplifier bias level |
| | 47..40 | **AIR anob** | 224 | 0..230 | AI right analog-knob settings |
| | 39..32 | **AIL anob** | 224 | 0..230 | AI left analog-knob settings |
| | 31..26 | **0** | 0 | 0 | Reserved |
| | 25..24 | **PI bias** | 2 | 0..3 | PI amplifier bias level |
| | 23..16 | **PI anob** | 224 | 0..230 | PI analog-knob settings |
| | 15..13 | **0** | 0 | 0 | Reserved |
| | 12 | **mute** | 1 | 0..1 | AO and PO mute |
| | 11..8 | **PO filter** | 7 | 0..15 | PO antialias filter adjust |
| | 7..4 | **AOR filter** | 7 | 0..15 | AO right antialias filter adjust |
| | 3..0 | **AOL filter** | 7 | 0..15 | AO left antialias filter adjust |

| octlet | bits | field name | value range | | interpretation |
|---|---|---|---|---|---|
| 14 | 63..56 | **0** | 0 | 0 | Reserved |
| | 55..48 | **EQ2 test** | 0 | 0..7 | EQ2 test control |
| | 47..40 | **EQ1 test** | 0 | 0..7 | EQ1 test control |
| | 39 | **0** | 0 | 0 | Reserved |
| | 38..32 | **CO1 configuration** | 0 | 0..127 | CO1 configuration control |
| | 31..16 | **left priority** | | 0..65536 | left priority |
| | 15..0 | **right priority** | | 0..65536 | right priority |

| octlet | bits | field name | value | range | interpretation |
|---|---|---|---|---|---|
| 15..24 | 63..0 | **0** | 0 | 0 | Reserved for expansion of Cerberus registers upward or knobcity registers downward. |

| octlet | bits | field name | value | range | interpretation |
|---|---|---|---|---|---|
| 25 | 63..56 | | 224 | 0..127 | geographical digital knob settings |
| | 55..48 | | 224 | 0..127 | geographical digital knob settings |
| | 47..40 | | 224 | 0..127 | geographical digital knob settings |
| | 39..32 | | 224 | 0..127 | geographical digital knob settings |
| | 31..24 | | 224 | 0..127 | geographical digital knob settings |
| | 23..16 | | 224 | 0..127 | geographical digital knob settings |
| | 15..8 | | 224 | 0..127 | geographical digital knob settings |
| | 7..0 | | 224 | 0..127 | geographical digital knob settings |

| octlet | bits | field name | value | range | interpretation |
|---|---|---|---|---|---|
| 26 | 63..56 | | 224 | 0..127 | geographical digital knob settings |
| | 55..48 | | 224 | 0..127 | geographical digital knob settings |
| | 47..40 | | 224 | 0..127 | geographical digital knob settings |
| | 39..32 | | 224 | 0..127 | geographical digital knob settings |
| | 31..24 | | 224 | 0..127 | geographical digital knob settings |
| | 23..16 | | 224 | 0..127 | geographical digital knob settings |
| | 15..8 | | 224 | 0..127 | geographical digital knob settings |
| | 7..0 | | 224 | 0..127 | geographical digital knob settings |

| octlet | bits | field name | value | range | interpretation |
|---|---|---|---|---|---|
| 27 | 63..56 | | 224 | 0..127 | geographical digital knob settings |
| | 55..48 | | 224 | 0..127 | geographical digital knob settings |
| | 47..40 | | 224 | 0..127 | geographical digital knob settings |
| | 39..32 | | 224 | 0..127 | geographical digital knob settings |
| | 31..24 | | 224 | 0..127 | geographical digital knob settings |
| | 23..16 | | 224 | 0..127 | geographical digital knob settings |
| | 15..8 | | 224 | 0..127 | geographical digital knob settings |
| | 7..0 | | 224 | 0..127 | geographical digital knob settings |

| octlet | bits | field name | value | range | interpretation |
|---|---|---|---|---|---|
| 28 | 63..56 | | 224 | 0..127 | geographical digital knob settings |
| | 55..48 | | 224 | 0..127 | geographical digital knob settings |
| | 47..40 | | 224 | 0..127 | geographical digital knob settings |
| | 39..32 | | 224 | 0..127 | geographical digital knob settings |
| | 31..24 | | 224 | 0..127 | geographical digital knob settings |
| | 23..16 | | 224 | 0..127 | geographical digital knob settings |
| | 15..8 | | 224 | 0..127 | geographical digital knob settings |
| | 7..0 | | 224 | 0..127 | geographical digital knob settings |

| octlet | bits | field name | value | range | interpretation |
|---|---|---|---|---|---|
| 29 | 63..56 | | 224 | 0..127 | geographical digital knob settings |
| | 55..48 | | 224 | 0..127 | geographical digital knob settings |
| | 47..40 | | 224 | 0..127 | geographical digital knob settings |
| | 39..32 | | 224 | 0..127 | geographical digital knob settings |
| | 31..24 | | 224 | 0..127 | geographical digital knob settings |
| | 23..16 | | 224 | 0..127 | geographical digital knob settings |
| | 15..8 | | 224 | 0..127 | geographical digital knob settings |
| | 7..0 | | 224 | 0..127 | geographical digital knob settings |

| octlet | bits | field name | value | range | interpretation |
|---|---|---|---|---|---|
| 29 | 63..56 | **Hermes channel knob** | 5 | 1..127 | knob settings for Hermes channel circuits. |
| | 55..48 | | 224 | 0..127 | geographical digital knob settings |
| | 47..40 | | 224 | 0..127 | geographical digital knob settings |
| | 39..32 | | 224 | 0..127 | geographical digital knob settings |
| | 31..24 | | 224 | 0..127 | geographical digital knob settings |
| | 23..16 | | 224 | 0..127 | geographical digital knob settings |
| | 15..8 | | 224 | 0..127 | geographical digital knob settings |
| | 7..0 | | 224 | 0..127 | geographical digital knob settings |

| octlet | bits | field name | value | range | interpretation |
|---|---|---|---|---|---|
| 30 | 63..62 | **Hermes skew swing** | 0 | 0..3 | Voltage swing selection for Hermes channel skew circuits |
| | 61..60 | **0** | 0 | 0 | Reserved |
| | 59..57 | **resg** | 5 | 0..7 | Global resistor mask for all knobs. |
| | 56..53 | **0** | 0 | 0 | Reserved |
| | 52..48 | **termination fine-tuning** | 20 | 0..31 | Set based on value read from PMOS drive strength, used to fine-tune resistor values in Hermes termination. |
| | 47..45 | **0** | 0 | 0 | Reserved |
| | 44..40 | **process control** | 20 | 0..31 | Set based on value read from PMOS drive strength, used to fine-tune resistor values in knob settings. |
| | 39..37 | **0** | 0 | 0 | Reserved |
| | 36..32 | **PMOS drive strength** | * | 0..31 | This read/only field indicates the drive strength of PMOS devices expressed as a digital binary value. |
| | 31..28 | **swing 3** | 15 | 0..15 | Voltage swing knob setting 3 |
| | 27..24 | **swing 2** | 15 | 0..15 | Voltage swing knob setting 2 |
| | 23..20 | **swing 1** | 15 | 0..15 | Voltage swing knob setting 1 |
| | 19..16 | **swing 0** | 15 | 0..15 | Voltage swing knob setting 0 |
| | 15..2 | **reference 3** | 15 | 0..15 | Voltage reference knob setting 3 |
| | 11..8 | **reference 2** | 15 | 0..15 | Voltage reference knob setting 2 |
| | 7..4 | **reference 1** | 15 | 0..15 | Voltage reference knob setting 1 |
| | 3..0 | **reference 0** | 15 | 0..15 | Voltage reference knob setting 0 |

| octlet | bits | field name | value | range | interpretation |
|---|---|---|---|---|---|
| 31 | 63..58 | **0** | 0 | 0 | Reserved |
| | 57 | **PLL prescaler bypass** | 0 | 0..1 | Set to invoke PLL0 and PLL1 prescaler bypass, otherwise divide input clock by 20. |
| | 56 | **conversion prescaler bypass** | 0 | 0..1 | Set to invoke temperature conversion prescaler bypass, otherwise divide input clock by 20. |
| | 55..51 | **PLL2 divide ratio** | 20 | 1..31 | PLL2 divider ratio |
| | 50 | **PLL2 feedback bypass** | 1* | 0..1 | Set to invoke PLL2 feedback bypass. |
| | 49 | **PLL2 range** | 0* | 0..1 | Set for operation at high frequency (above 0.xxx GHz); cleared for operation at low frequency (below 0.yyy GHz). |
| | 48 | **PLL2 oscillator select** | 0 | 0..1 | Set to select multivibrator oscillator; cleared to select ring oscillator. |
| | 47..43 | **PLL1 divide ratio** | 12 | 3..13 | PLL1 divider ratio |
| | 42 | **PLL1 feedback bypass** | 1* | 0..1 | Set to invoke PLL1 feedback bypass. |
| | 41 | **PLL1 range** | 0* | 0..1 | Set for operation at high frequency (above 0.xxx GHz); cleared for operation at low frequency (below 0.yyy GHz). |
| | 40 | **PLL1 oscillator select** | 0 | 0..1 | Set to select multivibrator oscillator; cleared to select ring oscillator. |
| | 39..35 | **PLL0 divide ratio** | 12 | 6..13 | PLL0 divider ratio |
| | 34 | **PLL0 feedback bypass** | 1 | 0..1 | Set to invoke PLL0 feedback bypass. |
| | 33 | **PLL0 range** | 0 | 0..1 | Set for operation at high frequency (above 0.xxx GHz); cleared for operation at low frequency (below 0.yyy GHz). |
| | 32 | **PLL0 oscillator select** | 0 | 0..1 | Set to select multivibrator oscillator; cleared to select ring oscillator. |
| | 31..24 | **analog measurement** | 0 | 0..255 | Set to measure analog levels at various test points within device. |

| | | | | |
|---|---|---|---|---|
| 23..22 | **meltdown threshold** | 0 | 0..3 | Set to perform margin testing of the meltdown detector. |
| 21 | **conversion start** | 0* | 0..1 | Setting this bit causes the conversion to begin. The bit remains set until conversion is complete |
| 20 | **0** | 0 | 0 | Reserved. (selection extension) |
| 19..16 | **conversion selection** | 0* | 0..9 | Field selects which of ten measurements are taken |
| 15..10 | **0** | 0 | 0 | Reserved. (counter extension) |
| 9..0 | **conversion counter** | 0* | 0..1023 | This field is set to the two's complement of the downslope count. The counter counts upward to zero, and then continues counting on the upslope until conversion completes. |

| octlet | bits | field name | value | range | interpretation |
|---|---|---|---|---|---|
| 32 | 63 | **0** | 0 | 0 | Reserved |
| | 62 | **quadrature bypass** | 0* | 0..1 | Setting this bit causes the quadrature circuit to be bypassed; the input clock signal is used directly. |
| | 61 | **quadrature range** | 0* | 0..1 | Set to 0 if the Hermes channel is operating at a low frequency; 1 if the Hermes channel is operating at a high frequency. |
| | 60 | **output termination** | 1 | 0..1 | Set to enable output terminators. Cleared to disable output terminators. |
| | 59..57 | **termination resistance** | 1 | 0..7 | Set termination resistance level. |
| | 56..54 | **output current** | 1 | 0..7 | Set output current level. |
| | 53..48 | **skew bit 7** | 1 | 0..63 | Set delay in Ho7 skew circuit. |
| | 47..42 | **skew bit 6** | 1 | 0..63 | Set delay in Ho6 skew circuit. |
| | 41..36 | **skew bit 5** | 1 | 0..63 | Set delay in Ho5 skew circuit. |
| | 35..30 | **skew bit 4** | 1 | 0..63 | Set delay in Ho4 skew circuit. |
| | 29..24 | **skew bit 3** | 1 | 0..63 | Set delay in Ho3 skew circuit. |
| | 23..18 | **skew bit 2** | 1 | 0..63 | Set delay in Ho2 skew circuit. |
| | 17..12 | **skew bit 1** | 1 | 0..63 | Set delay in Ho1 skew circuit. |
| | 11..6 | **skew bit 0** | 1 | 0..63 | Set delay in Ho0 skew circuit. |
| | 5..0 | **skew clk** | 1 | 0..63 | Set delay in HoC skew circuit. |

| octlet | bits | field name | value | range | interpretation |
|---|---|---|---|---|---|
| 33..63 | 63..0 | **0** | 0 | 0 | Reserved for use with additional Hermes channel interfaces |

| octlet | bits | field name | value range | | interpretation |
|---|---|---|---|---|---|
| 64 .. 65536 | 63..0 | 0 | 0 | 0 | Reserved for use with later revisions of the architecture. |

configuration memory space

*Identification Registers*

The identification registers in octlets 0..3 comply with the requirements of the Cerberus architecture.

MicroUnity's company identifier is: 0000 0000 0000 0010 1100 0101.

MicroUnity's architecture code for Calliope is specified by the following table:

| Internal code name | Code number |
|---|---|
| Calliope | 0x00 40 a3 92 b4 49 |

Calliope architecture revisions are specified by the following table:

| Internal code name | Code number |
|---|---|
| 1.0 | 0x01 00 |

MicroUnity's Calliope implementor codes are specified by the following table:

| Internal code name | Code number |
|---|---|
| MicroUnity | 0x00 40 a3 49 db 3c |

MicroUnity's Calliope, as implemented by MicroUnity, uses implementation codes as specified by the following table:

| Internal code name | Revision number |
|---|---|
| 1.0 | 0x0100 |
| | |

MicroUnity's Calliope, as implemented by MicroUnity, uses manufacturer codes as specified by the following table:

| Internal code name | Code number |
|---|---|
| MicroUnity | 0x00 40 a3 a4 6d ff |

1vlicroUnity's Calliope, as implemented by MicroUnity, and manufactured by MicroUnity, uses manufacturer revisions as specified by the following table:

| Internal code name | Code number |
|---|---|
| 1.0 | 0x01 00 |
| | |

*Architecture Description Registers*

The architecture description registers in octlets 4 and 5 comply with the Cerberus specification and contain a machine-readable version of the architecture parameters: **A, W, C, AI, AO, PO, PI, VI, VO, IR. II, SO, SI, EQ, CI, CO**, and **QPSK** described in this document.

The architecture parameters describe characteristics of the Hermes interface, capacity of the Calliope buffer memory, and the number of audio, phone, video, infrared, smartcard, and cable input and output channels, and the number of QPSK cable input channels.

*Control Register*

The control register in octlet 6 is a 64-bit register with both read and write access. It is altered only by Cerberus accesses: Calliope does not alter the values written to this register.

The **reset** bit of the control register complies with the Cerberus specification and provides the ability to reset an individual Calliope device in a system. Writing a one (1) to this bit is equivalent to a power-on reset or a broadcast Cerberus reset (low level on SD for 33 cycles) and resets configuration registers to their power-on values, which is an operating state that consumes nominal current (as determined by external pins), and also causes all internal high-bandwidth logic to be reset. The duration of the reset is sufficient for the operating state changes to have taken effect. At the completion of the reset operation, the **reset/clear/selftest complete** bit of the status register is set, the **reset/clear/selftest status** bit of the status register is set, and the **reset** bit of the control register is set.

The **clear** bit of the control register complies with the Cerberus specification and provides the ability to clear the logic of an individual Calliope device in a system. Writing a one (1) to this bit causes all internal high-bandwidth logic to be reset, as is required after reconfiguring power and swing levels. The duration of the reset is sufficient for any operating state changes to have taken effect. At the completion of the reset operation, the **reset/clear/selftest complete** bit of the status register is set, the **reset/clear/selftest status** bit of the status register is set, and the **clear** bit of the control register is set.

The **selftest** bit of the control register complies with the Cerberus specification and provides the ability to invoke a selftest on an individual Terpsichore device in a system. However, Calliope does not define a selftest mechanism at this time, so setting this bit will immediately set the **reset/clear/selftest complete** bit and the **reset/clear/selftest status** bit of the status register.

The **defer writes** bit of the control register provides a mechanism to adjust several octlets of Cerberus registers at one time with a single transition, such as when setting individual power levels within Calliope. Writing a one (1) to this bit causes writes to octlets 10 through 32 to have no effect (to be deferred) until the next logic-clear or a non-deferred write. When writes have been deferred, the values written are lost if a read of these octlets precedes the subsequent logic-clear or non-deferred write. A normal or non-deferred write occurs when writing to octlets 10 through 32 while the **defer writes** bit is cleared (0).

The **module id**-field of the control register controls the value of the module identifier field of the Hermes input channel which selects this Calliope device.

The **Hermes channel disable** bit of the control register provides the means to begin operations on the Hermes channels after a reset, clear, or error. Writing a one (1) to this bit causes the Hermes input channel to be ignored and forces idles to be generated on the Hermes output channel. Writing a zero (0) to this bit causes the Hermes input channel phase adjustment to be reset, and after a suitable delay the Hermes channels are available for use.

The **cidle 0** and **cidle 1** fields of the control register provide a mechanism to repeatedly sent simple patterns on the Hermes output channel for purposes of testing and skew adjustment. For normal operation, the **cidle 0** field must be set to zero (0), and the **cidle 1** field must be set to all ones (255).

*Status Register*

The status register is a 64-bit register with both read and write access, though the only legal value which may be written is a zero, to clear the register. The result of writing a non-zero value is not specified.

The **reset/clear/selftest complete** bit of the status register complies with the Cerberus specification and is set upon the completion of a reset, clear or selftest operation as described above.

The **reset/clear/selftest status** bit of the status register complies with the Cerberus specification and is set upon the successful completion of a reset, clear or self test operation as described above.

The **meltdown detected** bit of the status register is set when the meltdown detector has discovered an on-chip temperature above the threshold set by the meltdown threshold field of the Cerberus configuration register, which causes a reset to occur and the power level to be forced to minimum (1).

The **low voltage or temperature** bit of the status register is set when internal circuits have detected either insufficient voltage or temperature for proper operation of high speed logic circuits, which causes a logic clear until the condition is no longer detected (due to an increase in supply voltage or device temperature).

The **Cerberus transaction error** bit of the status register is set when a Cerberus transaction error (bus timeout, invalid transaction code, invalid address) has occurred. Note that Cerberus aborts, including locally detected parity errors, should cause bus retries, not a machine check.

The **Hermes check byte** error bit of the status register is set when a Hermes check byte error has occurred.

The **Hermes command error** bit of the status register is set when a Hermes command error has occurred.

The **Hermes address error** bit of the status register is set when a Hermes address error has occurred.

The **raw 0** and **raw 1** fields of the status register contain the values obtained from two adjacent samples of the specified Hermes input channel. The **raw 0** field contains a value obtained when the input clock was zero (0), and the **raw 1** field contains the value obtained on the immediately following sample, when the input clock was (1). Calliope ensures that reading the status register produces two adjacent samples, regardless of the timing of the status register read operation on Cerberus. These fields are read for purposes of testing and control of skew in the Hermes channel interfaces.

*Power and Swing Calibration Registers*

Calliope uses a set of calibration registers to control the power and voltage levels used for internal high-bandwidth logic and memory. The details of programming these registers are described below.

Eight-bit fields separately control the power and voltage levels used in a portion of the Calliope circuitry. Each such field used to control digital circuitry (labeled "knob") contains configuration data in the following format:

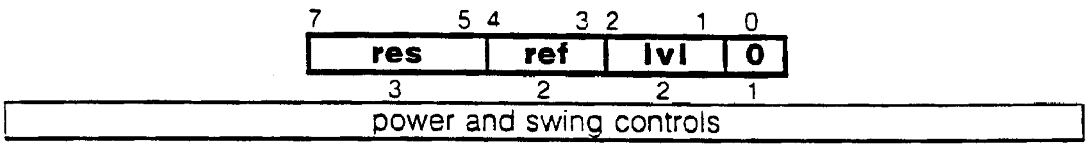


Each such field used to control analog circuitry (labeled "anob") contains configuration data in the following format:

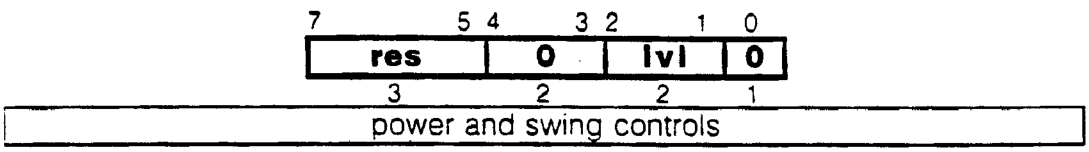


The range of valid values and the interpretation of the fields is given by the following table:

| field | value | interpretation |
|---|---|---|
| **0** | 0 | Reserved |
| **ref** | 0..3 | Set reference voltage level |
| **lvl** | 0..3 | Set voltage swing level. |
| **res** | 0..7 | Set resistor load value. |
| Power and swing control field interpretation | | |

The reference voltage level, voltage swing level and resistor load value are model figures for a full-swing, lowest-power logic gate output. The actual voltage levels and resistor load values used in various circuits is geometrically related to the values in the tables below. Designed typical, full-speed settings for the **ref. lvl** and **res** fields are **ref**=250 millivolts, **lvl**=500 millivolts, and **res**=2.5 kilohms.

The **ref** field, together with the **reference n** fields of the configuration register, control the reference voltage level used for logic circuits in the specified knob domain. The value of the **ref** field is interpreted by the following table:

| ref | reference voltage level |
|---|---|
| 0 | **reference 0** |
| 1 | **reference 1** |
| 2 | **reference 2** |
| 3 | **reference 3** |

The **lvl** field, together with the **swing n** fields of the configuration register, control the voltage swing level used for logic circuits in the specified knob domain. The value of the **lvl** field is interpreted by the following table:

| lvl | voltage swing level |
|---|---|
| 0 | **swing 0** |
| 1 | **swing 1** |
| 2 | **swing 2** |
| 3 | **swing 3** |

Values and interpretations of the **swing n** and **reference n** fields are given by the following table, with units in millivolts:

| value | reference | swing |
|---|---|---|
| 0 | 138 | 275 |
| 1 | 150 | 300 |
| 2 | 163 | 325 |
| 3 | 175 | 350 |
| 4 | 188 | 375 |
| 5 | 200 | 400 |
| 6 | 213 | 425 |
| 7 | 225 | 450 |
| 8 | 238 | 475 |
| 9 | 250 | 500 |
| 10 | 263 | 525 |
| 11 | 275 | 550 |
| 12 | 288 | 575 |
| 13 | 300 | 600 |
| 14 | 325 | 650 |
| 15 | 350 | 700 |

The **res** field, together with the **resg** field of the configuration register and the **meltdown detected** bit of the status register, control the PMOS load resistance value used for logic circuits in the specified knob domain, referred here as the **resl** value. For each res field, the resl value is computed as:

$$\mathbf{resl} = \mathbf{res}\ \&\ (\mathbf{meltdown\ detected}\ ?\ 1 : \mathbf{resg})$$

The **resl** value, together with the **process control** field of the configuration register, control the PMOS load resistance value used for logic circuits in the specified knob domain. Values and interpretations of the **lvl** field are given by the following table, with units in kilohms. The table below gives resistance values with nominal process parameters.

| | **process control** | | | | | | | |
|---|---|---|---|---|---|---|---|---|
| **resl** | 0 | 4 | 8 | 12 | 16 | 20 | 24 | 28 |
| 0 | **undefined** | | | | | | | |
| 1 | | 2.5 | 5.0 | 7.5 | 10. | 13. | 15. | 18. |
| 2 | | 1.3 | 2.5 | 3.8 | 5.0 | 6.3 | 7.5 | 8.8 |
| 3 | | .83 | 1.7 | 2.5 | 3.3 | 4.2 | 5 | 5.8 |
| 4 | | .63 | 1.3 | 1.9 | 2.5 | 3.1 | 3.8 | 4.4 |
| 5 | | .50 | 1.0 | 1.5 | 2.0 | 2.5 | 3 | 3.5 |
| 6 | | .42 | .83 | 1.3 | 1.7 | 2.1 | 2.5 | 2.9 |
| 7 | | .36 | .71 | 1.1 | 1.4 | 1.8 | 2.1 | 2.5 |
| Resistor control field interpretation | | | | | | | | |

When the process control field of the configuration register is set equal to the PMOS drive strength field of the configuration register, nominal PMOS load resistance values are as given by the following table, with units in kilohms.

| **res** | **PMOS load resistance** |
|---|---|
| 0 | **undefined** |
| 1 | 13. |
| 2 | 6.3 |
| 3 | 4.2 |
| 4 | 3.1 |
| 5 | 2.5 |
| 6 | 2.1 |
| 7 | 1.8 |

When Mnemosyne is reset, a default value of 0 is loaded into each 0 field, 0 in each **ref** field, 0 in each **lvl** field and 7 in each **res** field, which is a byte value of 224. The **process control** field of the configuration register is set to 20, and the **reference n** and **swing n** fields are set to 15. These settings correspond to a chip with nominal processing parameters, nominal power and high voltage swing operation.

For nominal operating conditions, the ref field is set to 0, the lvl field is set to 0. and the **res** field is set to 5, which is byte value of 5. The **process control** field is set equal to the **PMOS strength** field, and the **reference n** and **swing n** fields are set to 5.

*Interface Configuration Registers*

Interface configuration registers are provided on the Calliope interface to control the [insert summary list of controls].

The **CI1 test** and **CI2 test** field of interface configuration register 10 control operating modes of the CI1 and CI2 cable input blocks.

Eight-bit fields separately control the operating modes of the cable input blocks. Each such field contains configuration data in the following format:

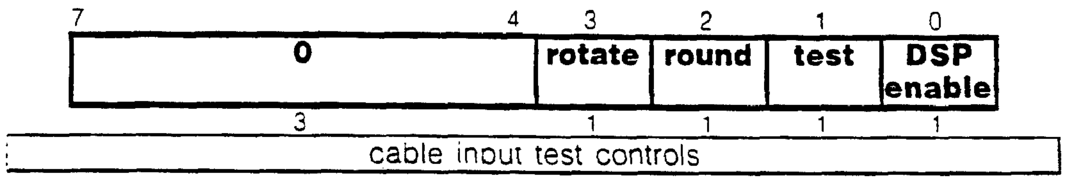


The range of valid values and the interpretation of the fields is given by the following table:

| field | value | interpretation |
|---|---|---|
| **0** | 0 | Reserved |
| **rotate** | 0..1 | Set to enable rotator |
| **round** | 0..1 | Set to enable multiplier rounding |
| **test** | 0..1 , | Set to bypass ADC and connect cable input to cable output (digital loop back) |
| **DSP enable** | 0..1 | Set to enable DSP output (clear to enable testing of RAM) |

Cable input test control field interpretation

The **CI1Q filter, CI1I filter, CI2Q filter** and **CI2I filter** fields of interface configuration register 10 and 11 control the cutoff frequency of the cable input antialias filters.

Four-bit fields separately control the cutoff frequency of each cable input antialias filter. Each such field contains configuration data in the following format:

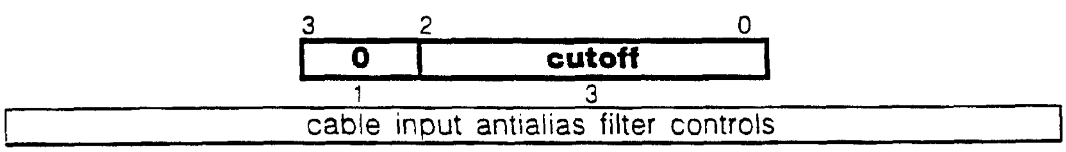


The range of valid values and the interpretation of the fields is given by the following table:

| field | value | interpretation |
|---|---|---|
| **0** | 0 | Reserved |
| **cutoff** | 0..7 | Cutoff frequency selection for antialias filter |

Cable input antialias filter control field interpretation

Values and interpretations of the cutoff fields are given by the following table, with units in megahertz, for nominal 3 dB frequency at specified junction temperature:

| **cutoff** | **25 C** | **75 C** | **125 C** |
|---|---|---|---|
| 0 | 14.1 | 13.8 | 13.4 |
| 1 | 11.9 | 11.7 | 11.4 |
| 2 | 10.4 | 10.2 | 10.0 |
| 3 | 9.2 | 9.1 | 8.9 |
| 4 | 8.3 | 8.2 | 8.0 |
| 5 | 7.6 | 7.5 | 7.3 |

(continued)

| cutoff | 25 C | 75 C | 125 C |
|---|---|---|---|
| 6 | 7.0 | 6.9 | 6.7 |
| 7 | 6.4 | 6.4 | 6.2 |

For normal operation a value of 3 is placed in the cutoff fields, selecting a 9 MHz cutoff frequency.

The **CI1 VCO** and **CI2 VCO** bits of interface configuration registers 10 and 11 control the selection of the VCO used as an input to the tuner of the cable input. Writing a zero (0) to the bit selects the internal VCO, while writing a one (1) selects an external VCO input. In normal operation a zero is placed in the **VCO** bit, selecting the internal VCO.

The **CI1 LNA** and **CI2 LNA** bits of interface configuration registers 10 and 11 enable the LNA (low noise amplifier) used as an input to the tuner of the cable input. Writing a zero (0) to the bit disables the LNA, while writing a one (1) enables the LNA. In normal operation a one is placed in the **LNA** bit, enabling the LNA.

The **CI1Q ADC preamp, CI1I ADC preamp, CI2Q ADC preamp** and **CI2I ADC preamp** bits of interface configuration registers 10 and 11 enable the ADC preamplfier output used as an input to the ADC of the cable input. Writing a zero (0) to the bit enables the ADC preamplifier output, while writing a one (1) disables it, allowing the tuner input to be driven from an external pin. In normal operation a zero is placed in the **ADC preamp** bits, enabling the preamplifiers.

The **CI1a, CI1b, CI2a, CI2b, CO1, CO2, VI, VO, AI, AO, PI, PO** invert bits of interface configuration registers 11, 12, and 13 provide for the selective inversion of the relative clock phase of the analog-to-digital section internal interfaces in the respective interfaces. In normal operation, a zero is placed in the **invert** bits, matching the relative phases of the interface sections.

The **CO1 configuration** and **CO2 configuration** fields of interface configuration registers 13 and 14 provide for the configuration of external devices which assist in the implementation of the cable output. The configuration fields drive LVTTL outputs which can control external filters and other components. In nornal operation, a zero is placed in the **configuration** fields.

The **PI bias, AIR bias** and **AIL bias** fields of interface configuration register 13 control the bias current of the phone and audio input right and left operational amplifiers.

Four-bit fields separately control the bias current of each input operational amplifier. Each such field contains configuration data in the following format:

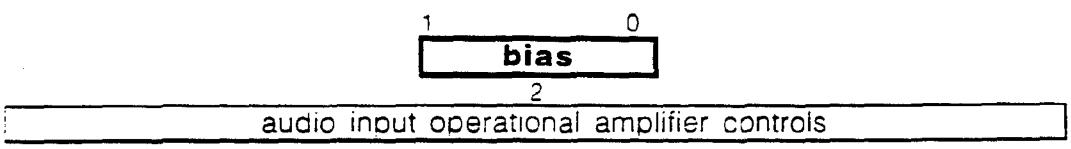


The range of valid values and the interpretation of the fields is given by the following table:

| field | value | interpretation |
|---|---|---|
| **bias** | 0..3 | bias current selection for input operational amplifier |
| audio input operational amplifier control field interpretation | | |

Values and interpretations of the **bias** fields are given by the following table, with units in microamperes, for nominal current at specified junction temperature:

| bias | 25 C | 75 C | 125 C |
|---|---|---|---|
| 0 | | 200 | |
| 1 | | 133 | |
| 2 | | 100 | |
| 3 | | 80 | |

The **mute** bit of interface configuration register 13 provides for initial muting of the audio and phone outputs during initial system operation. Writing a zero (0) to the bit enables the audio and phone outputs, while writing a one (1) forces the AO and PO outputs to a constant value (zero with AC coupling).

The **PO filter, AOR filter** and **AOL filter** fields of interface configuration register 13 control the cutoff frequency of the phone and audio output right and left antialias filters.

Four-bit fields separately control the cutoff frequency of each output antialias filter. Each such field contains configuration data in the following format:

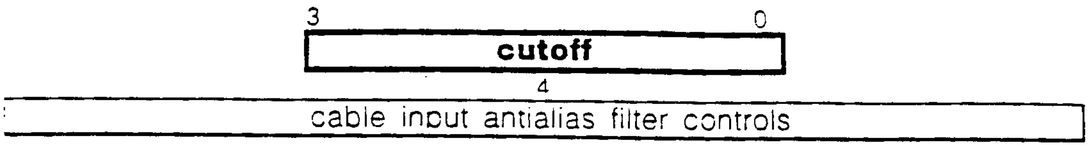


The range of valid values and the interpretation of the fields is given by the following table:

| field | value | interpretation |
|---|---|---|
| **cutoff** | 0..15 | Cutoff frequency selection for antialias filter |
| audio output antialias filter control field interpretation | | |

Values and interpretations of the **cutoff** fields are given by the following table, with units in kilohertz, for nominal 3 dB frequency at specified junction temperature:

| **cutoff** | **25 C** | **75 C** | **125 C** |
|---|---|---|---|
| 0 | | 69.9 | |
| 1 | | 65.9 | |
| 2 | | 62.3 | |
| 3 | | 58.8 | |
| 4 | | 55.8 | |
| 5 | | 53.2 | |
| 6 | | 50.9 | |
| 7 | | 48.6 | |
| 8 | | 46.4 | |
| 9 | | 44.6 | |
| 10 | | 43.9 | |
| 11 | | 41.4 | |
| 12 | | 40.0 | |
| 13 | | 38.5 | |
| 14 | | 37.2 | |
| 15 | | 35.9 | |

The **EQ1 test** and **EQ2 test** field of interface configuration register 14 control operating modes of the EQ1 and EQ2 cable input equalizers.

Eight-bit fields separately control the operating modes of the cable input equalizers. Each such field contains configuration data in the following format:

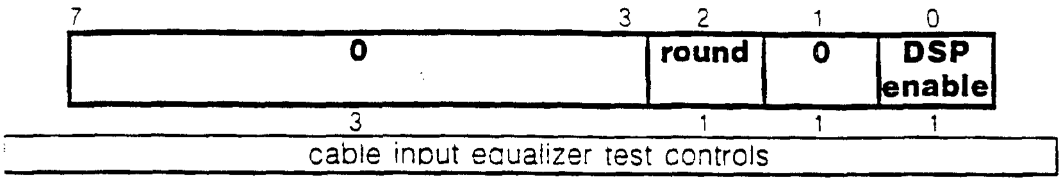


The range of valid values and the interpretation of the fields is given by the following table:

| field | value | interpretation |
|---|---|---|
| **0** | 0 | Reserved |
| **round** | 0..1 | Set to enable multiplier rounding |
| **DSP enable** | 0..1 | Set to enable DSP output (clear to enable testing of RAM) |
| Cable input equalizer test control field interpretation | | |

*Configuration Register*

A Configuration register is provided on the Calliope interface to control the fine-tuning of the Hermes channel configuration, to control the global process parameter settings, to control the two phase-locked loop frequency generators, and to control the temperature sensors and read temperature values.

The **Hermes skew swing** field of the configuration register control the voltage swing used in the Hermes channel skew circuits. The field should always be ser equal to the value of the **lvl** subfield of the **Hermes channel knob** field,

The **resg** field of the configuration register permits the global control of the load resistors in all of Calliope's high-speed logic circuits. The **resg** field is initially loaded from external pins to a numinal power level (5), and can be changed again to a value in the range 0..7 to lower or raise the power and speed of the high-speed logic citcuits in the Calliope device, or can be set to all ones (7) to enable control of individual sections of the Calliope device power levels. By altering the value on the external pins, Calliope can be configured for low-power (0 or 1) testing in a restricted packaging environment.

**The termination fine-tuning** field of the configuration register controls the analog bias settings for PMOS loads in Hermes termination circuits, in order to accomodate variations in circuit parameters due to the manufacturing process, and to provide intermediate termination resistance levels. Under normal operating conditions, the value read from the **PMOS drive strength** field should be written into the **termination fine-tuning** field. The interpretation of the field is given by the table:

| **value** | **termination fine-tuning** |
|---|---|
| 0 | Reserved |
| 1-19 | increase PMOS conductance to 20/value*nominal. |
| 20 | use PMOS loads at nominal conductance. |
| 21-31 | decrease PMOS conductance to 20/value*nominal. |

The **process control** field of the configuration register controls the analog bias settings for PMOS loads in internal logic circuits, in order to accomodate variations in circuit parameters due to the manufacturing process. Under normal operating conditions, the value read from the PMOS drive strength field should be written into the process control field. The interpretation of the field is given by the table:

| **value** | **process control** |
|---|---|
| 0 | Reserved |
| 1-19 | increase PMOS conductance to 20/value*nominal. |
| 20 | use PMOS loads at nominal conductance. |

(continued)

| value | process control |
|---|---|
| 21-31 | decrease PMOS conductance to 20/value*nominal. |

The **PMOS drive strength** field of the configuration register is a read/only field that indicates the drive strength, or conductance gain, of PMOS devices on the Terpsichore chip, expressed as a digital binary value. This field is used to calibrate the power and voltage level configuration, given variations in process characteristics of individual devices. The interpretation of the field is given by the table:

| value | PMOS drive strength |
|---|---|
| 0 | Reserved |
| 1-19 | value/20*nominal conductance |
| 20 | nominal conductance |
| 21-31 | value/20*nominal conductance |

There are two identical phase locked-loop (PLL) frequency generators, designated PLL0 and PLL1. These PLLs generate internal and external clock signals of configurable frequency, based upon an input clock reference of either 54 MHz or 1.08 GHz. PLL0 controls the internal operating frequency of the Terpsichore processor, while PLL1 controls the operating frequency of the Hermes channel interfaces. The configuration fields for PLL0 and PLL1 have identical meanings, described below:

The **PLL0 divide ratio** and **PLL1 divide ratio** fields select the divider ratio for each PLL, where legal values are in the range 6..21, with a nominal setting of 12 for PLL0, and 20 for PLL1. These divider ratios permit clock signals to be generated in the range from 324 MHz to 1.134 GHz, when the input clock reference is at 54 MHz, with prescaling bypassed, or at 1.08 GHz with prescaling used.

Setting the **PLL0 feedback bypass** bit or the **PLL1 feedback bypass** bit of the configuration register causes the generated clock bypass the PLL oscillator and to operate off the input clock directly. Setting these bits causes the frequency generated to be the optionally prescaled reference clock. These bits are cleared during normal operation, and set by a reset.

The **PLL0 range** field and the **PLL1 range** field of the configuration register are used to select an operating range for the internal PLLs. If the PLL range is set to zero, the PLL will operate at a low frequency (below 0.xxx GHz), if the PLL range is set to one, the PLL will operate at a high frequency (above 0.xxx GHz). At reset this bit is cleared, as the input clock frequency is unknown.

Setting the **PLL prescaler bypass** bit of the configuration register causes the phase-locked loops PLL0 and PLL1 to use the input clock directly as a reference clock. This bit is cleared during normal operation with a 1.08 GHz input clock, in which the input clock is divided by 20, and is set during normal operation with a 54 MHz input clock. At reset this bit is cleared, as the input clock frequency is unknown.

Setting the **conversion prescaler bypass** bit of the configuration register causes the temperature conversion unit to use the input clock directly as a reference clock.

Otherwise, clearing this bit causes the input clock to be divided by 20 before use as a reference clock. The reference clock frequency of the temperature conversion unit is nominally 54 MHz, and in normal operation, this bit should be set or cleared, depending on the input clock frequency. At reset this bit is cleared, as the input clock frequency is unknown.

The **meltdown margin** field controls the setting of the threshold at which meltdown is signalled. This field is used to test the meldown prevention logic. The interpretation of the field is given by the table below with a tolerance of ±6 degrees C, and 5 degrees C hysteresis:

| value | meltdown threshold |
|---|---|
| 0 | 150 degrees C |
| 1 | 90 degrees C |
| 2 | 50 degrees C |
| 3 | 20 degrees C |

The **conversion start** bit controls the initiation of the conversion of a temperature sensor or reference to a digital value. Setting this bit causes the conversion to begin, and the bit remains set until conversion is complete, at which time the bit is cleared.

The **conversion selection** field controls which sensor or reference value is converted to a digital value. The interpretation of the field is given by the table below:

| value | conversion selected |
|---|---|
| 0 | local temperature sensor |
| 1 | local temperature reference |
| 2..15 | Reserved |

The **conversion counter** field is set to the two's complement of the downslope count. The counter counts upward to zero, at which point the upslope ramp begins, and continues counting on the upslope until the conversion completes.

*Hermes channel Configuration Registers*

Configuration registers are provided on the Calliope interface to control the timing, current levels, and termination resistance for the Hermes channel high-bandwidth channel. A configuration register at octlet 31 is dedicated to the control of the Hermes channel, and additional information in the configuration register at octlet 31 controls aspects of the Hermes channel circuits in common. The Hermes channel configuration registers are Cerberus registers 32, where 32 corresponds to Hermes channel 0.

The **quadrature bypass** bit controls whether the HiC clock signal is delayed by approximately $\frac{1}{4}$ of a HiC clock cycle to latch the $Hi_{7..0}$ bits. In normal, full speed operation, this bit should be cleared to a zero value. If this bit is set, the quadrature delay is defeated and the HiC clock signal is used directly to latch the $Hi_{7..0}$ bits.

The **quadrature range** bit is used to select an operating range to the quadrature delay circuit. If the quadrature range is set to zero, the circuit will operate at a low frequency (below 0.xxx GHz), if the quadrature range is set to one, the circuit will operate at a high frequency (above 0.xxx GHz).

The **output termination** bit is used to select whether the output circuits are resistively terminated. If the bit is set to a zero, the output has high impedence; if the bit is set to one, the output is terminated with a resistance equal to the input termination. At reset, this bit is set to one, terminating the output.

The **termination resistance** field is used to select the impedence at which the Hermes channel inputs, and optionally the Hermes channel outputs are terminated. The resistance level is controlled relative to the setting of the **termination fine tuning** field of the configuration register. The interpretation of the field is given by the table, with units in Ohms and nominal PMOS conductance and bias settings:

| **value** | **termination resistance** |
|---|---|
| 0 | Reserved |
| 1 | 250. Ohms |
| 2 | 125. Ohms |
| 3 | 83.3 Ohms |
| 4 | 62.5 Ohms |
| 5 | 50.0 Ohms |
| 6 | 41.7 Ohms |
| 7 | 35.7 Ohms |

The output current field is used to select the current at which the Hermes channel outputs are operated. The interpretation of the field is given by the table, with units in mA:

| value | output current |
|---|---|
| 0 | Reserved |
| 1 | 2. mA |
| 2 | 4. mA |
| 3 | 6. mA |
| 4 | 8. mA |
| 5 | 10. mA |
| 6 | 12. mA |
| 7 | 14. mA |

The output voltage swing is the product of the composite termination resistance: (input termination resistance$^{-1}$+output termination resistance$^{-1}$)$^{-1}$, and the output current. The output voltage swing should be set at or below 700 mV, and is normally set to the lowest value which permits a sufficiently low bit error rate, which depends upon the noise level in the system environment.

The **skew** fields individually control the delay between the internal Hermes channel output clock and each of the HoC and Ho7..0 high bandwidth output channel signals. Each skew field contains two three-bit values, named digital skew and analog skew as shown below:

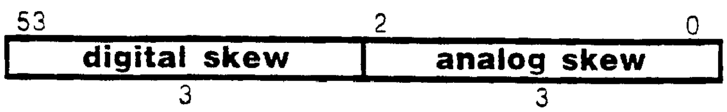


The **digital skew** fields set the number of delay stages inserted in the output path of the HoC and the Ho7..0 high-bandwidth output channel signals. The **analog skew** fields control the power level, and thereby control the switching delay, of a single delay stage. Setting these fields permits a fine level of control over the relative skew between output channel signals. Nominal values for the output delay for various values of the digital skew and analog skew fields are given below, assuming a nominal setting for the **Hermes channel knob:**

| digital skew | delay (ps) | plus analog skew |
|---|---|---|
| 0 | 0 | no |
| 1 | 320 | yes |
| 2 | 400 | yes |
| 3 | 470 | yes |
| 4 | 570 | yes |
| 5 | 670 | yes |
| 6 | 770 | yes |
| 7 | 870 | yes |

| analog skew | delay (ps) |
|---|---|
| 0 | Reserved |
| 1 | ??? |
| 2 | ??? |
| 3 | +40 |
| 4 | +20 |
| 5 | 0 |
| 6 | -10 |
| 7 | -20 |

When Calliope is reset, a default value of 0 is loaded into the **digital skew** and 1 is loaded into the **analog skew** fields, setting a minimum output delay for the HoC and Ho7..0 signals.

*Hermes High-Bandwidth Channel*

MicroUnity's Hermes high-bandwidth channel architecture is designed to provide ultra-high bandwidth communications between devices within MicroUnity's Terpsichore system architecture.

Hermes-compliant devices include one or more byte-wide input and output channels intended to operate at rates of at least 1 GHz. These channels provide a packet communication link to general devices, processors, memories, and input-output interfaces.

Hermes high-bandwidth channels employ nine signals, one clock signal and eight data signals, using differential low-voltage levels for direct communication from one device to another. The channels are designed to be arranged into a ring consisting of up to four target devices and one initiator. The channels may also be extended to permit multiple initiators in a single ring.

The Hermes interface protocol embeds read and write operations to a single memory space into packets containing command, address, data, and acknowledgement. The packets include check codes that will detect single-bit transmission errors and multiple-bit errors with high probability. As many as eight operations in each device may be in progress at a time. As many as four Hermes devices may be cascaded to expand system capacity and bandwidth.

Hermes relies upon MicroUnity's, Cerberus serial bus to provide access to a low-level mechanism to detect skew in input channels, and to adjust skew in output channels. This mechanism may be employed by software to adaptively adjust for skew in the channels, or set to fixed patterns to account for fixed signal skew as may arise in device-to-device wiring.

*Architecture Framework*

The Hermes architecture defines a compatible framework for a family of implementations with a range of capabilities. The following implementation-defined parameters are used in the rest of the document in boldface. The value indicated are for MicroUnity's first implementations.

| Param eter | Interpretation | Value | Range of legal values |
|---|---|---|---|
| **A** | $\log_{256}$ words in logical memory space or size in bytes of a logical memory address | 4 | $1 \leq \mathbf{A} \leq 8$ |
| **W** | size in bytes of logical memory word | 8 | $1 \leq \mathbf{W} \leq 2^{15}$, $\log_2 \mathbf{W} \varepsilon Z$ |

Hermes devices have several optional capabilities, which are identified in the following table:

| Capability | Meaning |
|---|---|
| Master | Capable of generating requests on output channel and receiving responses on input channel |
| Slave | Capable of receiving requests on input channel and generating responses on output channel |
| Forwarding | Capable of forwarding requests and responses from input channel to output channel |
| Cache | Capable of storing values previously read or written and returning these values on subsequent reads. |

*Electrical Signalling*

Each Hermes channel consists of a one byte wide data path and a single-phase, constant-rate clock signal. Both the data and clock signals are differential-pair signals. The clock signal contains alternating zero and one values transmitted with the same timing as the data signals; thus, the clock signal frequency is one-half the channel byte data rate.

Each channel runs at a constant frequency and contains no auxiliary control, handshaking, or flow-control information. The channel transmitter is responsible for transmitting all nine differential-pair signals so as to be received with minimal skew; the receiver is responsible for decoding the signals in the presence of noise and skew as may arise due to differences in the signal environment of the clock and of each data bit.

A Hermes device may be capable of responding to Hermes request packets received on a Hermes input channel. Such a device is designated a slave device, and must operate the Hermes output channel at the same clock rate as the input channel. A slave device must generate no more than a specified amount of variation in the output clock phase, relative to the input clock, over changes in system temperature or operating voltage.

A Hermes device that is capable of generating Hermes request packets is designated a master device. A master device must be capable of generating the constant-frequency clock signal on the Hermes output channel and accepting signals on the Hermes input channel at the same clock frequency as is generated. In addition, a master device must accept an arbitrary input clock phase, and must accept a specified amount of variation in clock phase, as may arise due to changes in system temperature or operating voltage.

Each Hermes input or output channel requires 18 pads, and the associated Cerberus interface requires an additional 6 pads.

| count | Pad | meaning |
|---|---|---|
| 18 | HiC. HiC_N. $Hi_{7\,0}$. $Hi_{7\,0}$_N | Hermes input channel |
| 18 | HoC. HoC_N. $Ho_{7\,0}$. $Ho_{7\,0}$_N | Hermes output channel |
| 6 | SC.SD. $SN_{3\,0}$ | Cerberus interface |
| 36c+6 | | total signal pads |

Each Hermes input channel is terminated at a nominal 50 ohm impedance to ground. Each Hermes output channel is optionally terminated at the same impedance as the devices input channel. An adjustable termination impedance, programmable via Cerberus is recommended.

In order to provide for planar connections without vias among Hermes devices when connected into rings, all devices must locate Hermes input channels and Hermes output channels to pin assignments which preserve the relative ordering of the conductors which connect the devices. In general, the ordering must be consistent on circuit boards by which devices are interconnected. The ordering fixes the order of Hermes pins encountered in a clockwise traversal of the pins to always be HiC, HiC_N, Hi0, Hi0_N, Hi1. Hi1_N, Hi2, Hi2_N, Hi3, Hi3_N, Hi4, Hi4_N, Hi5_N, Hi6, Hi6_N, Hi7, Hi7_N. Ho7_N. Ho7. Ho6_N, Ho6, Ho5_N, Ho5, Ho4_N, Ho4, Ho3_N, Ho3, Ho2_N. Ho2. Ho1_N, Ho1, Ho0_N, Ho0 HoC_N, and HoC respecitively. No other pins, except for low-bandwidth and power connections which may contain vias, may be placed between these pins.

Hermes device dies (or the active die of a sandwich) are generally designed to be placed on circuit boards face-down, so when viewed from the top of the circuit board, this becomes the ordering:

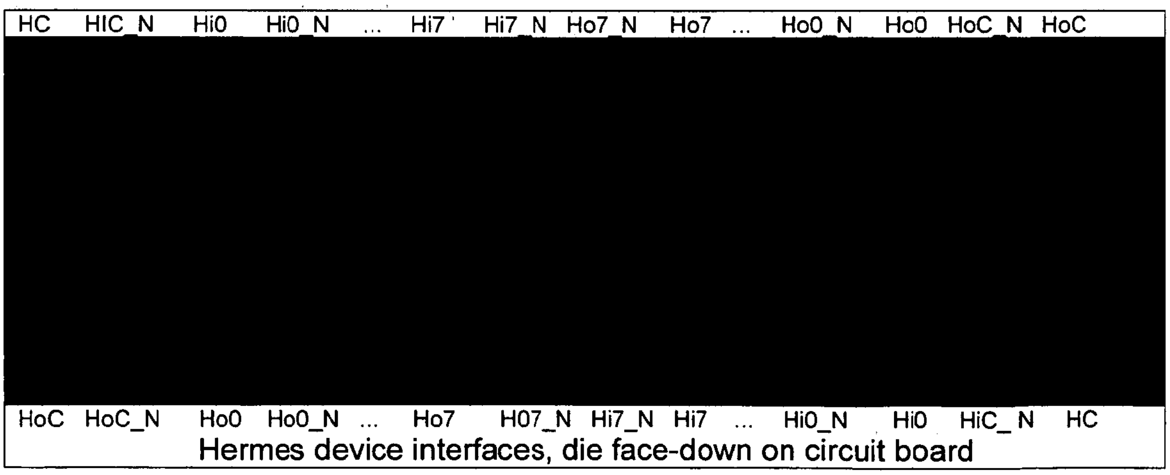

Hermes device interfaces, die face-down on circuit board

When viewed from the top of the device die, this becomes the ordering:

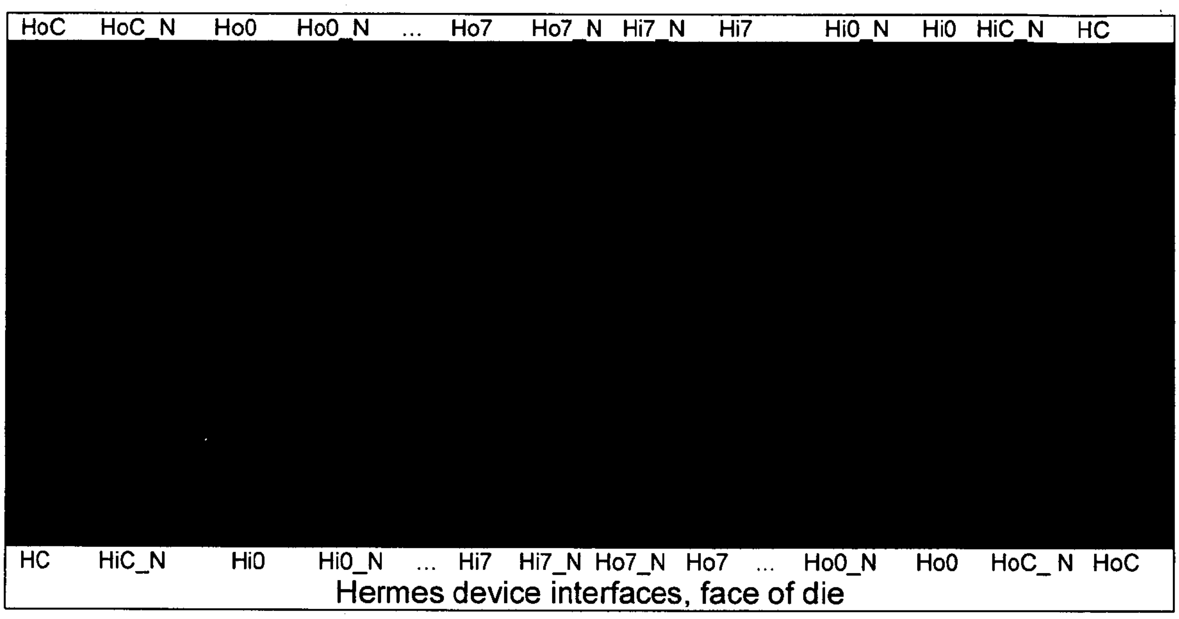

Hermes device interfaces, face of die

Other packaging systems may mount Hermes device dies in a face-up orientation. Hermes devices sandwiched with a conductive-only die ("space transformer") have the conductive-only die in a face-up orientation. For a die mounted in a face-up orientation, the ordering of the pins of the die must be reversed, so when viewed from the top of the circuit board or the top of the die, this requires the ordering;

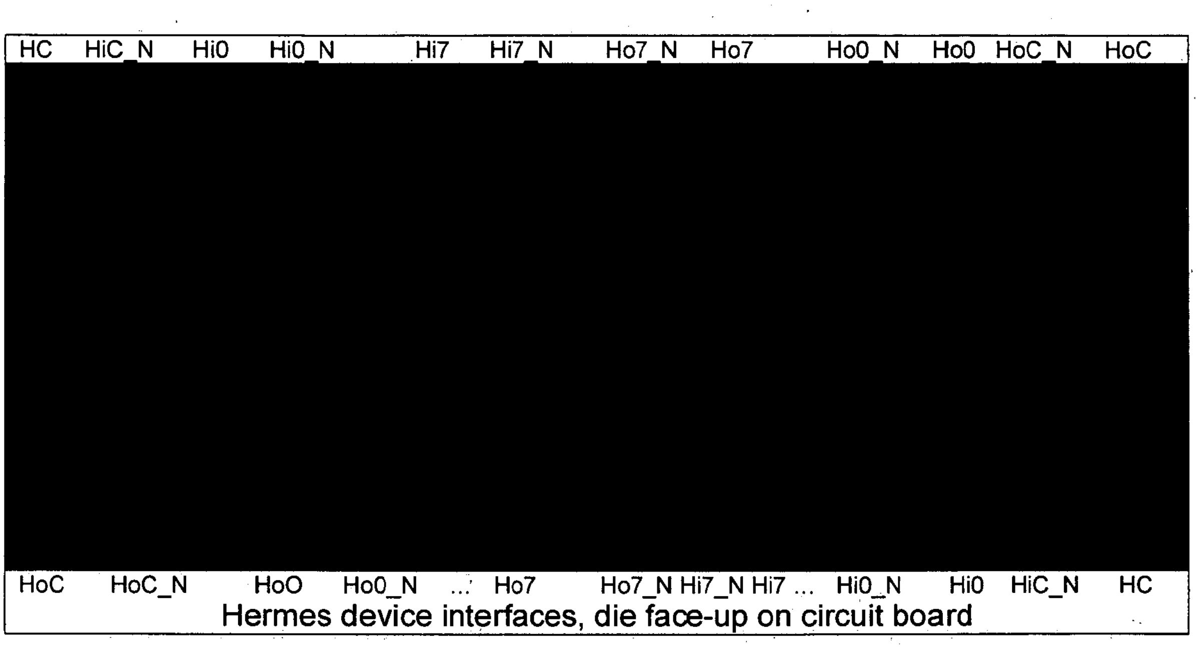

Hermes device interfaces, die face-up on circuit board

The following is a diagram of the Hermes and Cerberus device interfaces, for a device with a single pair of Hermes channel interfaces.

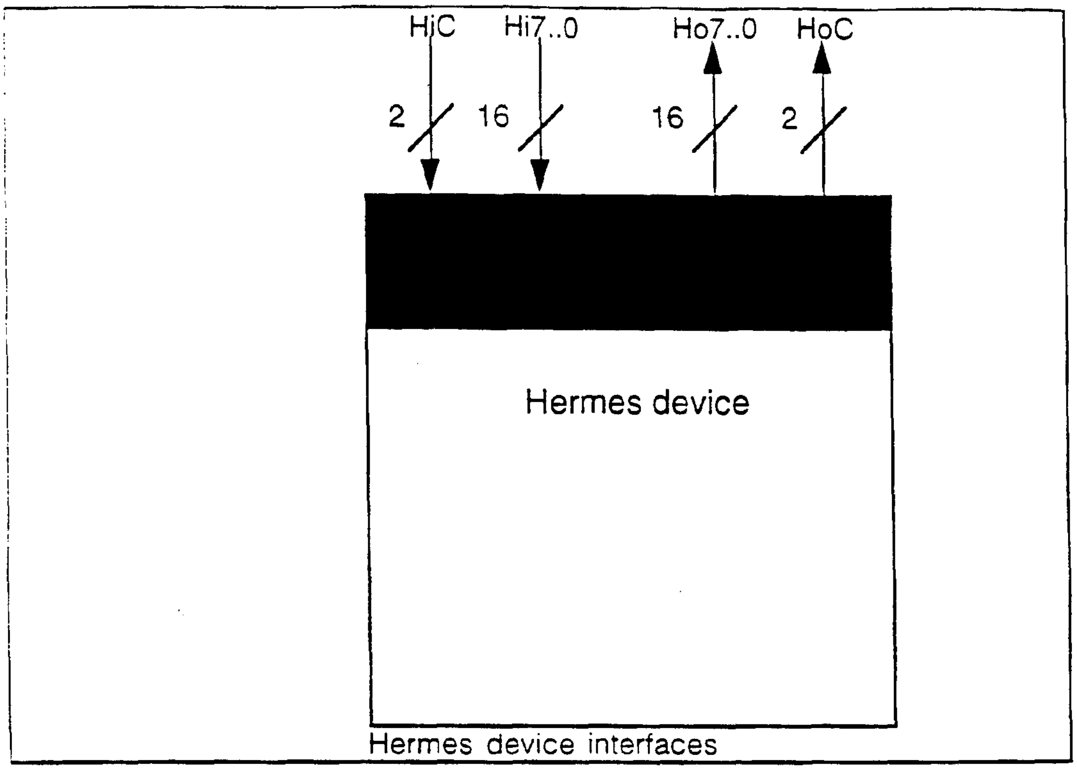


| Electrical characteristics | MIN | TYP | MAX | UNIT | REF |
|---|---|---|---|---|---|
| $V_{OH}$: H-state output voltage HoC. $Ho_{7..0}$ | | | | V | VDD |
| $V_{OL}$: L-state output voltage HoC, $Ho_{7..0}$ | | | | V | VDD |
| $V_{IH}$: H-state input voltage HiC, $Hi_{7..0}$ | | | | V | VDD |
| $V_{IL}$: L-state input voltage HiC, $Hi_{7..0}$ | | | | V | VDD |
| $I_{OH}$: H-state output current HoC, $Ho_{7..0}$ | | | | mA | |
| $I_{OL}$: L-state output current HoC. $Ho_{7..0}$ | | | | mA | |
| $I_{IH}$: H-state input current HiC, $Hi_{7..0}$ | | | | mA | |
| $I_{IL}$: L-state input current HiC, $Hi_{7..0}$ | | | | mA | |
| $C_{IN}$: Input capacitance HiC, $Hi_{7..0}$ | | | | pF | |
| $C_{OUT}$: Output capacitance HoC, $Ho_{7..0}$ | | | | pF | |

| Switching characteristics | MIN | TYP | MAX | UNIT |
|---|---|---|---|---|
| $t_{Bc}$: HiC clock cycle time | 1000 | | | ps |
| $t_{BCH}$ HiC clock high time | 400 | | | ps |
| $t_{BCL}$: HiC clock low time | 400 | | | ps |
| $t_{BT}$ HiC clock transition time | | | 100 | ps |
| $t_{BS}$: set-up time, $Hi_{7\ 0}$ valid to HiC xition | 200 | | 100 | ps |
| $t_{BH:}$ hold time, HiC xition to $Hi_{7\ 0}$ invalid | -200 | | -100 | ps |
| $t_{OS}$: skew between HoC and $Ho_{7\ 0}$ | -50 | | 50 | ps |

*Logical Memory Structure*

Hermes defines a logical memory region as an array of $2^{8A}$ blocks of size **W** bytes. Each access, either a read or write, references all bytes of a single block. All addresses are block addresses, referencing the entire block.

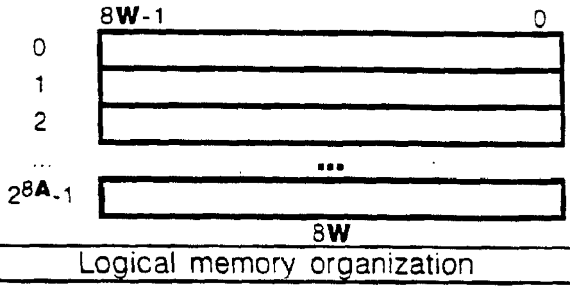


Logical memory organization

Hermes defines a logical cache for data originally contained in the logical memory region. All accesses to Hermes memory space maintain consistency between the contents of the cache and the contents of the logical memory region.

*Packet Structure*

Packets sent on a Hermes channel contain control commands, most commonly read or write operations, along with addresses and associated data. Other commands indicate error conditions and responses to the above commands.

When the Hermes channel is otherwise idle, such as during initialization and between packets, an idle packet, consisting of a pair of an all-zero byte and all-one byte is transmitted through the channel. Each non-idle packet consists of two bytes or a multiple of two bytes and must begin with a byte of value other than all-zero (0). All packets begin during a clock period in which the clock signal is zero, and all packets end during a clock period in which the clock signal is one.

The general form of a packet is an array of bytes, without a specified byte ordering. The first byte contains a module address in the high-order two bits, a packet identifier, usually a command, in the next three bits, and a link identification number. The remaining bytes' interpretation are dependent upon the packet identifier:

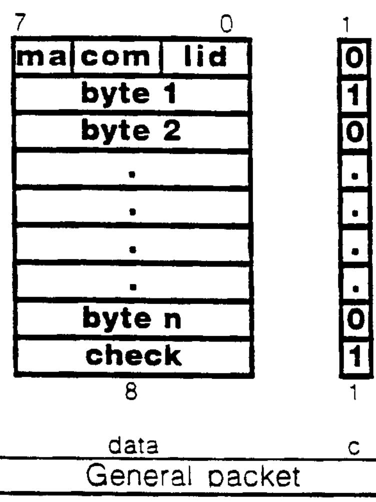


General packet

The length of the packet is implied by the command specified by the initial byte of the packet.

The check byte is computed as odd bit-wise parity, with a leftward circular rotation after accumulating each byte. This algorithm provides detection of single-bit and some multiple-bit errors with high probability ($1-2^{-8}$), but no correction. As an example, the following packet has a proper check byte:

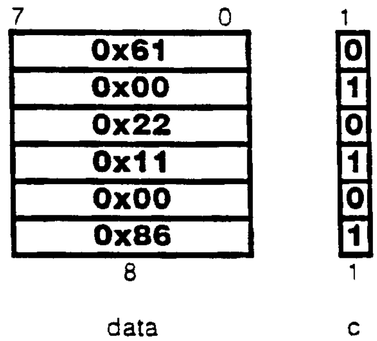


The check byte in this example is calculated as:

| binary | hex | notes |
|---|---|---|
| **01100001** | **61** | first byte |
| **11000010** | **c2** | shift left Circular |
| **00000000** | **00** | second byte |
| **11000010** | **c2** | xor above two rows |
| **10000101** | **85** | shift left circular |
| **00100010** | **22** | third byte |
| **10100111** | **a7** | xor above two rows |
| **01001111** | **4f** | shift left circular |
| **00010001** | **11** | fourth byte |
| **01011110** | **5e** | xor above two rows |
| **10111100** | **be** | shift left circular |
| **00000000** | **00** | fifth byte |
| **10111100** | **bc** | xor above two rows |
| **01111001** | **79** | shift left circular |
| **10000110** | **86** | sixth (check) byte |
| **11111111** | **ff** | xor above two rows |
| **11111111** | **ff** | shift left circular |

The general interpretation of the packet command is given in the following table:

| value | interpretation | payload |
|---|---|---|
| 0 | idle | 0 |
| 1 | error | 0 |
| 2 | write-allocate | 12 |
| 3 | write-noallocate | 12 |
| 4 | read-allocate | 4 |
| 5 | read-noallocate | 4 |
| 6 | read-response | 8 |

(continued)

| value | interpretation | payload |
|---|---|---|
| 7 | write-response | 0 |
| Packet command interpretation | | |

The module address field provides for as many as four Hermes slave devices to be operated from a single channel. Module address values are assigned via either static/geometric configuration pins (not recommended) or dynamically assigned via a Cerberus configuration register.

The link identification field provides the opportunity for Hermes master devices to initiate as many as eight independent operations at any one time to each Hermes slave device. Each outstanding operation to a Hermes slave device must have a distinct link identification number, and no ordering of operations is implied by the value of the link-identification field. There is no requirement for link-identification field values to be sequentially assigned in requests or responses.

The following section provides detailed descriptions of the structure of each type of command packet.

*Idle*

Idle packets fill the space between other packets with an alternating zero-byte and all-ones-byte pattern. Idle packets may be dropped when received and regenerated between outgoing packets. The idle packet is formatted as follows:

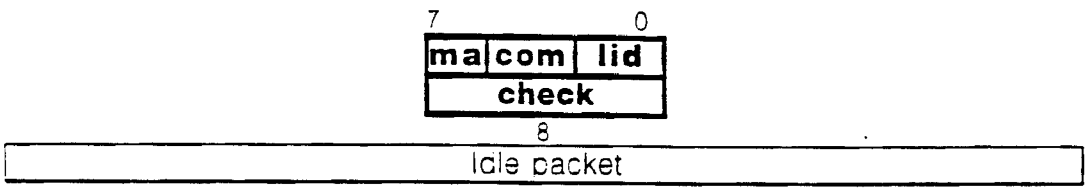


The range of valid values and the interpretation of the fields is given by the following table:

| field | value | Interpretation |
|---|---|---|
| **ma** | 0 | Module address field must be zero. |
| **com** | 0 | Packet is "idle." |
| **lid** | 0 | Link identification number field must be zero |
| **check** | 255 | Check integrity of packet transmission. |
| Idle packet field interpretation | | |

No activity is performed upon receipt of a properly formatted idle packet.

*Read Operation*

Read packets cause a Hermes device to perform a read operation for the specified address, producing a data value. The value is read from cache, if one is present and the address is present in the cache. If the address is not present in cache, the value is read. A value read is placed in the cache if the command is "read-allocate"; if the command is "read-noallocate" the value is returned without copying the value into the cache. The packet format is as follows:

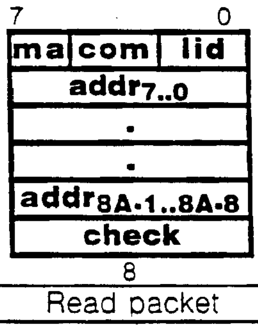


Read packet

The range of valid values and the interpretation of the fields is given by the following table:

| field | value | interpretation |
|---|---|---|
| **ma** | 0..3 | Module address. |
| **com** | 4, 5 | Packet command is "read-allocate" or "read-noallocate." |
| **lid** | 0..7 | Respond with link identification number **id.** |
| **addr** | $0..2^{8A}-1$ | Logical memory block address as specified. The least significant byte is sent first. |
| **check** | 0..255 | Check integrity of packet transmission. |
| Read packet field interpretation | | |

If the fields are valid and the specified address is within the range of the memory, the memory is read and a read response packet is generated which contains the requested data value. The "read-response" packet is formatted as follows:

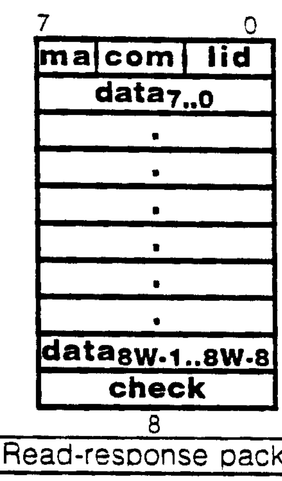


Read-response packet

The range of valid values and the interpretation of the fields is given by the following table:

| field | value | interpretation |
|---|---|---|
| **ma** | 0..3 | Module address **ma** as specified in read packet. |
| **com** | 6 | Packet command is "read response. |
| **lid** | 0..7 | Link identification number **lid** as specified in read packet. |
| **data** | $0..2^{8W}-1$ | Data read from specified address. |

(continued)

| field | value | interpretation |
|---|---|---|
| **check** | 0..255 | Check integrity of packet transmission. |

Read response packet field interpretation

In order to reduce the latency of read response, Hermes devices may generate a read response packet before checking redundant information that may alter the contents of the response. If, upon checking the information, but before the last byte of the read response packet is generated, the device detects that the data was transmitted in error, the packet is "stomped." that is, marked as invalid, by transmitting a check byte that is the ones-complement of the proper check byte. Such a packet must be ignored by Hermes masters and may be either ignored or suppressed by Hermes slave devices. If the redundant information indicates a correctable error, the stomped packet is followed by a read response packet which contains the corrected data.

*Write Operation*

Write packets cause Hermes devices to perform a write operation, placing a data value into the specified address. The value is written into cache, if one is present and the address is present in the cache. If the address is not present in cache, and the command is "write-allocate", the value is written into cache. If the address is not present in cache, and the command is "write-noallocate", the value is written, leaving the cache location unchanged. The packet format is as follows:

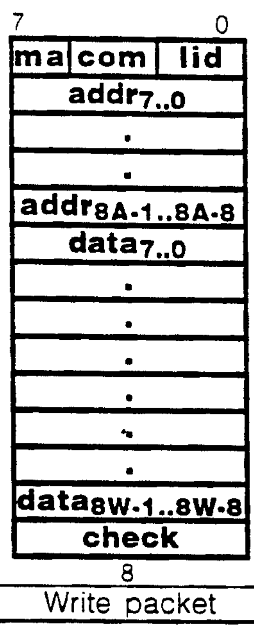


Write packet

The range of valid values and the interpretation of the fields is given by the following table:

| field | value | interpretation |
|---|---|---|
| **ma** | 0..3 | Module address. |
| **com** | 2, 3 | Packet command is "write-allocate" or "write-noallocate." |
| **lid** | 0..7 | Respond with link identification number **lid**. |
| **addr** | $0..2^{8A}-1$ | Logical memory block address as specified. The least significant byte is sent first. |
| **data** | $0..2^{8W}-1$ | Data to be written at specified address. |
| **check** | 0..255 | Check integrity of packet transmission. |

(continued)

| field | value | interpretation |
|---|---|---|
| Write packet field interpretation | | |

If the fields are valid and the specified address is within the range of the memory, the memory is written and a write response packet is generated. The "write-response" packet is formatted as follows:

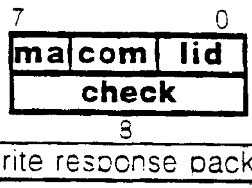


Write response packet

The range of valid values and the interpretation of the fields is given by the followingable:

| field | value | interpretation |
|---|---|---|
| **ma** | 0..3 | Module address **ma** as specified in write packet. |
| **com** | 7 | Packet command is "write response." |
| **lid** | 0..7 | Link identification number **lid** as specified in write packet. |
| **check** | 0..255 | Check integrity of packet transmission. |
| Write response packet field interpretation | | |

*Error Handling*

The receipt of packets that do not conform to the requirements of this specification over the input channel is an error, as are any conditions internal or external to the device that prevent proper operation, such as uncorrectable memory errors. The level or degree to which an implementation detects errors is implementation-defined; to the extent possible, this architecture specification recommends that all errors should be detected, but this is not strictly required. All implementations must document the level of error detection, and all detected errors must use the method described below for handling errors.

For Hermes devices, the following errors should be detected and the level of error detection for each of these errors is required to be documented:

| errors detected |
|---|
| invalid check byte |
| invalid command |
| invalid address |
| uncorrectable error in cache |
| uncorrectable error in device |
| invalid identification number |
| internal buffer overflow |
| invalid module address on idle packet |
| invalid identification number on idle/error packet |
| invalid check byte on idle packet |

Packets received by Hermes devices may have an invalid check byte, invalid command, invalid module address, invalid address, invalid identification number, or in some implementations cause internal buffer overflow. For each such error which the implementation may detect, the device causes a response explicitly indicating such a condition (error response); the packet is otherwise ignored. Also, detection of an uncorrectable error in either the cache or the device resulting from a request over a Hermes input channel results in the generation of an error response packet.

The error response packet is formatted as follows:

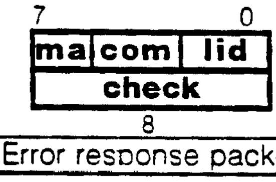


Error response packet

The range of valid values and the interpretation of the fields is given by the following table:

| field | value | interpretation |
|---|---|---|
| **ma** | 0..3 | Module address identifying the source of the error response packet. |
| **com** | 1 | Packet is "error response." |
| **lid** | 0 | Link identification number must be zero. |
| **check** | 0..255 | Check integrity of packet transmission. |
| error response packet field interpretation | | |

Upon receipt of the error response packet, the packet originator must read the Cerberus status register of the reporting device to determine the precise nature of the error. Hermes devices reporting an invalid packet will suppress the receipt of additional packets until the error is cleared, by clearing the status register. However, such devices may continue to process packets which have already been received, and generate responses. Upon taking appropriate corrective actions and clearing the error, the packet originator should then re-send any unacknowledged commands.

Because of the large difference in clock rate between the high-bandwidth Hermes channel and the Cerberus serial bus interface, it is generally safe to assume that, after detecting an error response packet, an attempt to read the status register via Cerberus will result in reading stable, quiescent error conditions and that the queue of outstanding requests will have drained. After clearing the status register via Cerberus, the packet originator may immediately resume sending requests to the Hermes device.

*Forwarding*

Hermes devices, whether master or slave, may have the capability to forward packets which are intended for other devices connected to a Hermes channel. For slave devices, this forwarding is performed on the basis of the contents of the module address field in the packet; packets which contain a module address other than that of the current device are forwarded. All non-idle packets which contain such module addresses must be forwarded, including error packets. For master devices, this forwarding is performed on the basis of the identifier number field in the packet; packets which contain identifier numbers not generated by the device are forwarded.

To minimize ring latency, it is generally desirable to forward these packets with minimal latency. If a packet arrives at an input channel when the output channel is in use, this latency must increase; at least a single-packet buffer is required.

The size of the forwarding buffer is implementation-dependent. Avoiding the generation of an output packet if the forwarding buffer does not have room to hold an additional input packet is required, when the forwarding buffer is smaller than the number of packets which may require forwarding (generally 24 packets). However, this strategy may cause starvation, as output packets may be inhibited indefinately by a stream of input packets that require forwarding. Starvation may be avoided by system-level design and configuration considerations beyond the scope of this specification.

Packets which contain a check byte error may be forwarded; however it is recommended that such packets be transmitted with a check byte containing more than one error bit, to minimize the possibility of an undetected second error. Packets which contain a "stomped" check byte may be forwarded as is, or may be ignored by a forwarding device. Note that when a packet is forwarded with minimum latency, the output channel may begin transmitting a packet before the input channel has received the entire packet: in such a case, the only available choice is to continue forwarding the packet even if a check byte error or "stomped" check byte is detected.

*Ring Configurations*

Hermes supports a variety of ring configurations. All devices in a cascade must have the same values for A and W parameters, in order that each part may properly interpret packet boundaries. The table below summarizes the characteristics of the configurations available:

| configuration | masters | | slaves | |
|---|---|---|---|---|
| | number | forwarding | number | forwarding |
| master-slave pair | 1 | no | 1 | no |
| single-master ring | 1 | no | 1-4 | yes |
| dual-master pair | 2 | no | 0 | |
| multiple-master single-slave ring | 1-8 | yes | 1 | no |
| multiple-master multiple-slave ring | 1-8 | yes | 1-4 | yes |
| Hermes ring configurations | | | | |

*Master-slave Pair*

The simplest ring consists of a single Hermes non-forwarding master device and a single Hermes non-forwarding slave device. No forwarding is required for either device as packets are sent directly to the recipient. The ring may have as many as eight transactions outstanding, each containing distinct id field values.

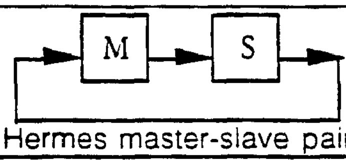

Hermes master-slave pair

*Single-master Ring*

A single-master ring may contain a cascade of up to four Hermes slave devices. The cascade of devices will have the same or greater bandwidth as a single device, but more latency. Each Hermes slave device must be configured to a distinct module address, and each slave device must forward packets that contain module address fields unequal to their own.

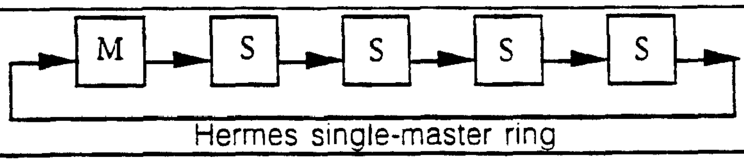

Hermes single-master ring

Packets are explicitly addressed to a particular Hermes device; any packet received on a device's input channel which specifies another module address is automatically passed on via its output channel. This mechanism provides for the serial interconnection of Hermes devices into strings, which function identically to a single device, except that a string has larger capacity and longer response latency. Each slave device may have as many as eight transactions outstanding, each containing distinct id field values.

*Dual-master Pair*

A dual master pair consists of two master devices and no slave devices. Each master device may initiate read and write operations addressed to the other, and each may have up to eight such transactions outstanding. No forwarding is required for either device as packets are sent directly to the recipient.

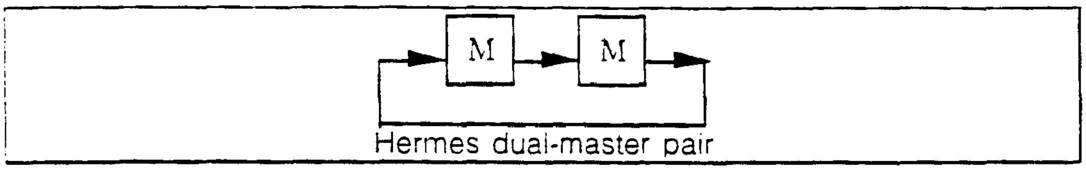


*Multiple-master Single-slave Ring*

A multiple-master ring may contain multiple master devices and a single Hermes slave device, provided that the master devices arrange to use different id values for their requests. Each master may use a share of the eight transactions. Master devices must forward packets not specifally addressed to them, as designated by the values in the id field. The slave device need not forward packets, as all input packets are designated for the slave device.

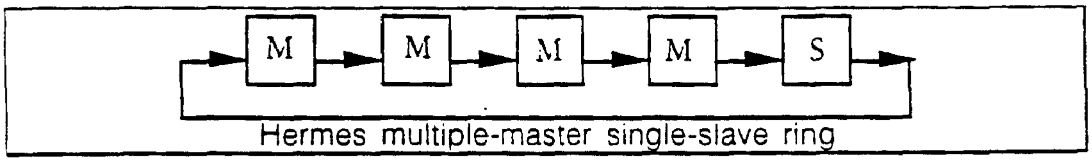


*Multiple-master Multiple-slave Ring*

A multiple-master ring may contain multiple master devices and as many as four Hermes slave devices, provided that the master devices arrange to use different id values for their requests. Each slave may have up to eight transactions outstanding, and each master may use a share of those transactions. Master devices must forward packets not specifally addressed to them, as designated by the values in the id field. Slave devices must forward packets not specifically addressed to them, as designated by the value of the ma field.

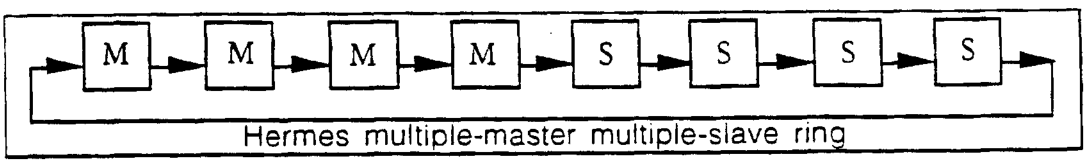


*Response Packet Timing*

In general, a received packet which is interpreted as a command causes a response packet to be generated. The latency between the end of the request packet and the beginning of the response packet is affected by the processing and forwarding of other packets, by the presence or absence of the requested word in the cache, as well as implementation-dependent device parameters and characteristics.

With full knowledge of the cache state configurable parameters and implementation-dependent characteristics, a Hermes master may completely model the latency of responses. However, dependence on such characteristics is not recommended, except for testing and characterization purposes.

A Hermes master must have the capability to detect a time-out condition, where a response to a request packet is never received. The length of the time-out is implementation-defined, and dependent upon the implementation of the Hermes slave devices, so it is recommended that this time-out be long enough to accomodate variation in the design of Hermes slave devices, or be configurable to permit recovery in a minimum implementation-dependent delay.

*Cerberus Registers*

The Hermes channel architecture builds upon the Cerberus serial bus architecture. Only the specific requirements of Hermes-compliant devices are defined below.

Hermes requires that the values of **A** and $\log_2 W$ be made available in the high-order byte of the first architecture description register as indicated below.

The format of the register is described in the table below. The **octlet** is the Cerberus address of the register; bits indicate the posifion of the field in a register. The **value** indicated is the hard-wired value in the register for a read/only register, and is the value to which the register is initialized upon a reset for a read/write register. If a reset does not initialize the field to a value, or if initialization is not required by this specification, a * is placed in or appended to the value field. The **range** is the set of legal values to which a read/write register may be set. The **interpretation** is a brief description of the meaning or utility of the register field; a more comprehensive description follows this table.

| octlet | bits | field name | value | range | interpretation |
|---|---|---|---|---|---|
| 4 | 63..60 | **A** | 4 | 1..15 | size of a Hermes address |
| | 59..56 | **$log_2W$** | 3 | 0..15 | size of a Hermes word |
| | 55..0 | **not specified** | | | not specified by Hermes architecture |

*Architecture Description Registers*

The architecture description registers in octlets 4 and 5 comply with the Cerberus specification and contain a machine-readable version of the architecture parameters: A, W described in this document.

*Cerberus Serial Bus*

MicroUnity's Cerberus serial bus architecture is designed to provide bootstrap resources, configuration and diagnostic support for MicroUnity's Terpsichore system architecture.

The Cerberus serial bus employs two signals, both at TTL levels, for direct communication among as many as $2^8$ devices. One signal is a continuously running clock, and the other is an open-collector bidirectional data signal. Four additional signals provide a geographic 8-bit address for each device. A gateway protocol and optional configurable addressing each provide a means to extend Cerberus to as many as $2^{16}$ buses and $2^{24}$ devices.

The protocol is designed for universal application among the custom chips used to implement the Terpsichore system architecture. It is also designed to be compatible with implementations embodied in FPGA parts, such as those made by Xilinx, Altera. Actel and others. Such FPGA parts may be used to adapt the Cerberus protocol in a minimum of logic to attach small serial bus devices, such as those made by Dallas Semiconductor (EEPROM, serial number parts), ITT (IMB bus), Signetics ($I^2C$ bus). It is also a goal that such FPGA parts can be used to adapt the Cerberus protocol to communication over EIA-232/422/423/485 links to existing systems for the purposes of system development, manufacturing test and configuration, and manufacturing rework.

The Cerberus serial bus is used for the initial bootstrap program load of Terpsichore; the bootstrap ROM connects to Terpsichore via Cerberus. Because the Cerberus must be operational for the fetch of the first instruction of Terpsichore, the bus protocol has been devised so that no transactions are required for initial bus configuration or bus address assignment.

*Electrical Signalling*

The diagram below shows the signals used in Cerberus.

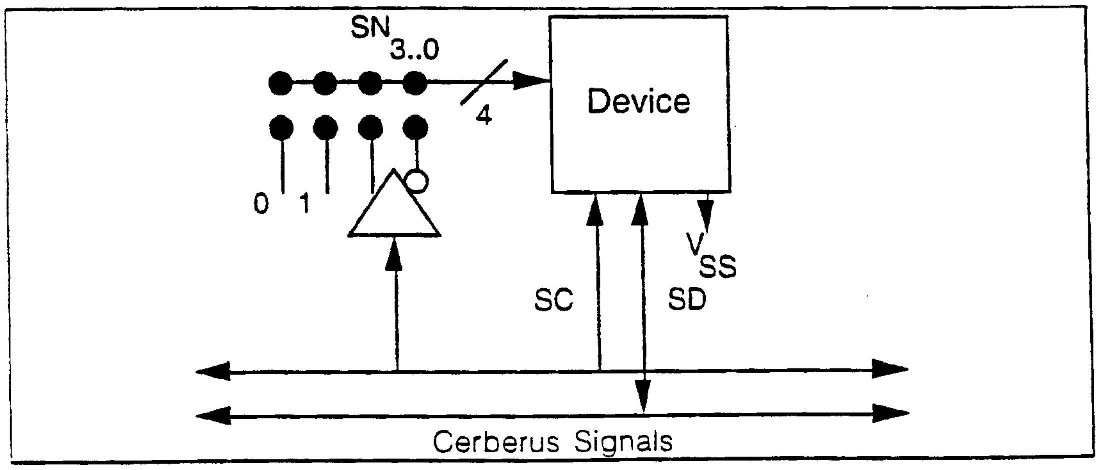


The SC signal is a continuously running clock signal at TTL levels. The rate is specified as 20 MHz maximum, 0 (DC) minimum. The SC signal is sourced from a single point or device, possibly through a fan-out tree, the location of which is unspecified.

The actual clock rate used is a function of the length of the bus and quality of the noise and signal termination environment. The amount of skew in the SC signal between any two Cerberus devices should be limited by design to be less than the skew on the SD signal.

The SD signal is a non-inverted open-collector (0 = driven = low; 1 = released = high) bidirectional data signal, at TTL levels, used for all communication among devices on Cerberus.

One of several termination networks may be used on this signal, depending upon joint design targets of network size, clock rate, and cost. One of the simplest schemes employs a resistive pull-up of the equivalent of 220 Ohms to 3.3 Volts above $V_{SS}$. A more complex termination network, such as termination networks including diodes, or the "Forced Perfect Termination" network proposed for the SCSI-2 standard may be advantageous for larger configurations. Termination voltages as high as 3.3 V are permitted.

The following table specifies parameters that must be met by Cerberus-compliant devices. Voltages are referenced to $V_{SS}$.

| Recommended operating conditions | MIN | NOM | MAX | UNIT |
|---|---|---|---|---|
| Operating free-air temperature | 0 | | 70 | C |
| | | | | |
| Electrical characteristics | MIN | TYP | MAX | UNIT |
| $V_{OL}$: L-state output voltage | 0 | | 0.5 | V |
| $V_{IH}$: H-state input voltage SD | 2.0 | | $V_T$+0.5 | V |
| $V_{IH}$. H-state input voltage SC, $SN_{3\ 0}$ | 2.0 | | 5.5[53] | V |
| $V_{IL}$: L-state input voltage | -0.5 | | 0.8 | V |
| $I_{OL}$: L-state output current[54] | | | 16 | mA |
| $I_{OZ}$: Off-state output current[55] | -10 | | 10 | µA |
| $C_{OUT}$: Output Capacitance | | | 4.0 | pF |
| | | | | |
| Switching characteristics | MIN | TYP | MAX | UNIT |
| $t_C$: SC clock cycle time | 50 | | | ns |
| $t_{CH}$: SC clock high time | 20 | | | ns |

(continued)

| Switching characteristics | MIN | TYP | MAX | UNIT |
|---|---|---|---|---|
| $t_{CL}$: SC clock low time | 20 | | | ns |
| $t_T$: SC clock transition time | | | 5 | ns |
| $t_S$: set-up time, SD valid to SC rise | 0 | | | ns |
| $t_H$: hold time, SC rise to SD invalid | | | 1 | ns |
| $t_{OD}$: SC rise to SD valid | 5 | | | ns |

[53]Cerberus recommends, but not require, compliant devices be able to sustain input levels provided by 5V TTL-compatible devices on the SC and $SN_{3..0}$ inputs.
[54]Devices which fail to comply with the low-state output current specification may operate with Cerberus-compliant devices, but may require changes to the termination network. System designers should evaluate the effect that limited drive current will have on the worst-case Low-state signal level.
[55]Devices which fail to comply with the off-state output current specification may operate with Cerberus-compliant devices, but may limit the number of devices which may co-exist on a single Cerberus bus. System designers should evaluate the effect that additional leakage current will have on the worst-case High-state and Low-state signal levels.

*Geographic addressing*

The objective of the geographic addressing method in Cerberus is to ensure that each device is addressable with a number which is unique among all devices on the bus and which reflects the physical location of the device, so that the address remains the same each time the system is operated.
When a system requires at most 16 devices, the geographic addressing method permits the assignment of addresses 0 through 15 by directly wiring the low-order 4 bits of the address in binary code using input signals $SN_{3..0}$. For these purposes, wiring to a logic high (H) level supplies a value of 1, and wiring to $V_{SS}$ or logic low (L) level supplies a value of 0.
The table below indicates the wiring pattern for each device address from 0 through 15:

| Device address | Binary code | $SN_3$ | $SN_2$ | $SN_1$ | $SN_0$ |
|---|---|---|---|---|---|
| 0 | 00000000 | L | L | L | L |
| 1 | 00000001 | L | L | L | H |
| 2 | 00000010 | L | L | H | L |
| 3 | 00000011 | L | L | H | H |
| 4 | 00000100 | L | H | L | L |
| 5 | 00000101 | L | H | L | H |
| 6 | 00000110 | L | H | H | L |
| 7 | 00000111 | L | H | H | H |
| 8 | 00001000 | H | L | L | L |
| 9 | 00001001 | H | L | L | H |
| 10 | 00001010 | H | L | H | L |
| 11 | 00001011 | H | L | H | H |
| 12 | 00001100 | H | H | L | L |
| 13 | 00001101 | H | H | L | H |

(continued)

| Device address | Binary code | $SN_3$ | $SN_2$ | $SN_1$ | $SN_0$ |
|---|---|---|---|---|---|
| 14 | 00001110 | H | H | H | L |
| 15 | 00001111 | H | H | H | H |

An extension of this method is used for the assignment of addresses 0 through 255 when a system requires more than 16 devices, up to $2^8$ devices. Additional code combinations are made available by wiring each of the same input signals $SN_{3..0}$ as before to one of four signals: the two described above, L and H, and two additional signals, a buffered copy of the SC signal and an inverted copy of the SC signal (SC_N). Since there are four SN signals, each wired to one of four values, $4^4=2^8=256$ combinations are possible.

The wiring pattern is constructed using the algorithm: If the desired device address is the value N, for each input signal $SN_x$, where x is in the range 3..0, wire $SN_x$ to one of the four signals L, H, SC, or SC_N, according to the following table, depending on the value of bit 4+x and bit x of N.

| $N_{4+x}$ | $N_x$ | $SN_x$ |
|---|---|---|
| 0 | 0 | L |
| 0 | 1 | H |
| 1 | 0 | SC |
| 1 | 1 | SC_N |

The table below indicates the wiring pattern for some device addresses:

| Device address | Binary code | $SN_3$ | $SN_2$ | $SN_1$ | $SN_0$ |
|---|---|---|---|---|---|
| 16 | 00010000 | L | L | L | SC |
| 17 | 00010001 | L | L | L | SC_N |
| 18 | 00010010 | L | L | H | SC |
| 19 | 00010011 | L | L | H | SC_N |
| ... | | | | | |
| 29 | 00011101 | H | H | L | SC_N |
| 30 | 00011110 | H | H | H | SC |
| 31 | 00011111 | H | H | H | SC_N |
| 32 | 00100000 | L | L | SC | L |
| 33 | 00100001 | L | L | SC | H |
| 34 | 00100010 | L | L | SC_N | L |
| ... | | | | | |
| 254 | 11111110 | SC_N | SC_N | SC_N | SC |
| 255 | 11111111 | SC_N | SC_N | SC_N | SC_N |

The diagram below shows the waveform of the SC signal and the four signals that each of the $SN_{3..0}$ inputs may be wired to.

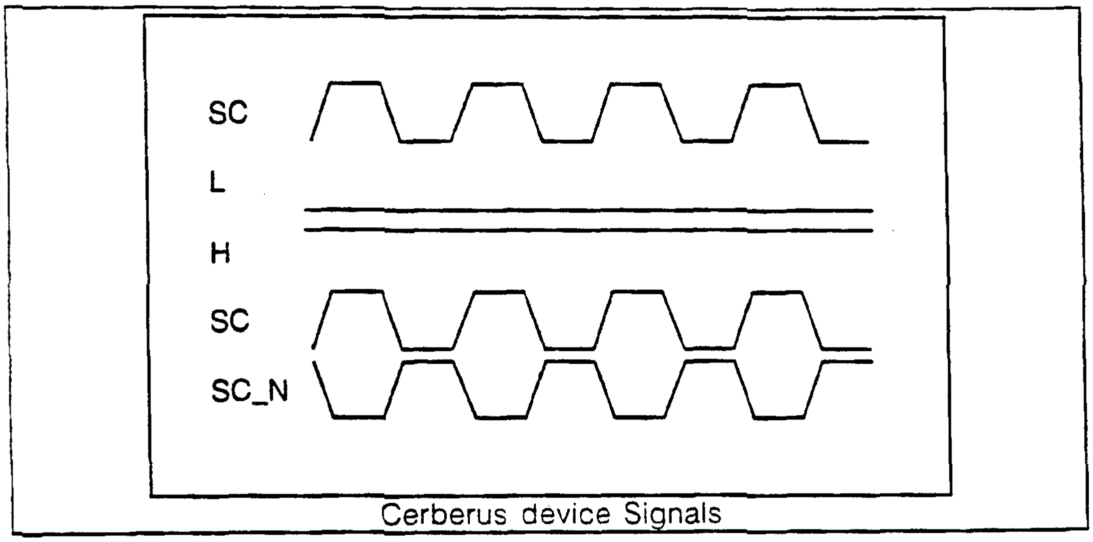

Cerberus device Signals

The values shown in the diagram above are decoded using four copies of the following logic, one for each value of **x** in the range 3..0:

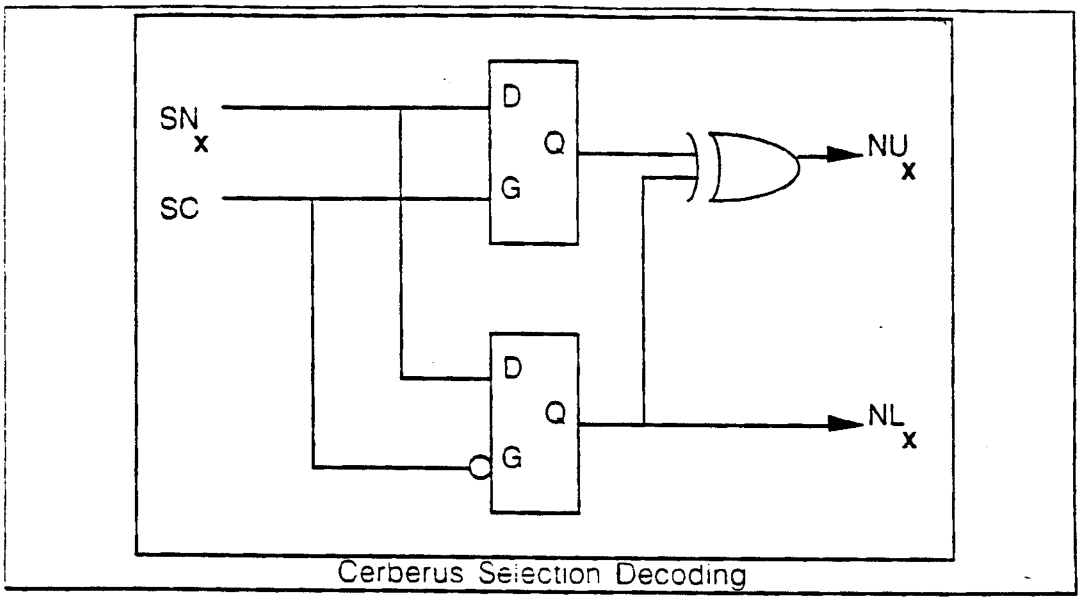

Cerberus Selection Decoding

The NU and NL values are combined together in the order:

| 7 | 6 | 5 | 4 | 3 | 2 | 1 | 0 |
|---|---|---|---|---|---|---|---|
| $NU_3$ | $NU_2$ | $NU_1$ | $NU_0$ | $NL_3$ | $NL_2$ | $NL_1$ | $NL_0$ |
| 1 | 1 | 1 | 1 | 1 | 1 | 1 | 1 |

to construct an 8-bit device number by which operations are addressed.

*Bit-Level Protocol*

The communication protocol rests upon a basic mechanism by which any device may transmit one bit of information on the bus, which is received by all devices on the bus at once. Implicit in this mechanism is the resolution of collisions between devices which may transmit at the same time.

Each transmitted bit begins at the rising edge of the SC signal, and ends at the next rising edge. The bit value is sampled by all devices at the next rising edge of the SC signal, thus permitting relatively large signal settling time on the SD signal, provided that skew on the SC signal is adequately controlled.

The transmission of a zero (0) bit value on the bus is performed by the transmitter driving the SD signal to a logical-low value. The transmission of a one (1) bit value on the bus is performed by the transmitter releasing the SD signal to attain a logical-high value (driven by the signal termination network). If more than one device attempts to transmit a value on the same clock period (of the SC signal), the resulting value is a zero if any device transmits a zero value, and is a one if all devices transmit a one value. We define the occurrence of one or more devices transmitting a zero value on the same clock cycle where one or more devices transmit a one value as a collision.

Because of this wired-and collision mechanism, if a device transmits a zero value, it cannot determine whether any other devices are transmitting at the same time. If a device transmits a one value, it can monitor the resulting value on the SD signal to determine whether any other device is transmitting a zero value on the same clock cycle. In either case, if two or more devices transmit the same value on the same clock cycle, neither device, in fact, no device on the bus can detect the occurrence, and we do not define such an occurrence as a collision.

This collision mechanism carries over to the higher levels of the protocol, where if two or more devices transmit the same packet or carry on the same transaction, no collision occurs. In such cases, the protocol is designed so that the transaction occurs normally. These transactions may occur frequently if two identical devices are reset at the same time and each initiates bus transactions, such as two processors each fetching bootstrap code from a single shared ROM device.

*Packet Protocol*

The packet protocol uses the bit-level mechanism to transmit information on the bus in units of eight bits or a multiple of eight bits, while resolving potential collisions between devices which may simultaneously begin transmitting a packet. The transmission provides for the detection of single-bit transmission errors, and for controlling the rate of information flow, with eight-bit granularity. The protocol also provides for the transmission of a system-level reset.

Each packet transmission begins with a single start bit, in which SD always has a zero (driven) value. Then the bits of the first data byte are serially transmitted, starting with the least-significant bit. After transmitting the eight data bits, a parity bit is transmitted. If transmission continues with additional data, a single one (released) bit is transmitted, immediately followed by the least-significant bit of the next byte, as shown in the figure below:

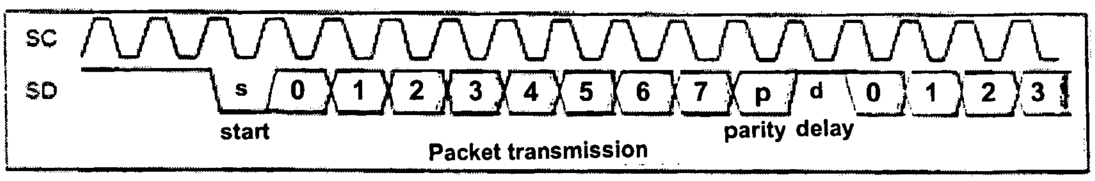


Otherwise, on the cycle following the transmission of each parity bit, any device may demand an additional delay of two cycles to process the data by driving the SD signal (to a zero value) and then, on the next cycle releasing the SD signal (to a one value), making sure that the signal was not driven (to a zero value) by any other device. Further delays are available by repeating the pattern of driving the SD signal (to a zero value) for one cycle and releasing the SD signal (to a one value) for one cycle, and ensuring that the signal has been released. Additional bytes are transmitted immediately after the bus has been one (released) on the "d" (delay) clock cycle, without additional start bits, as shown in the figure below.

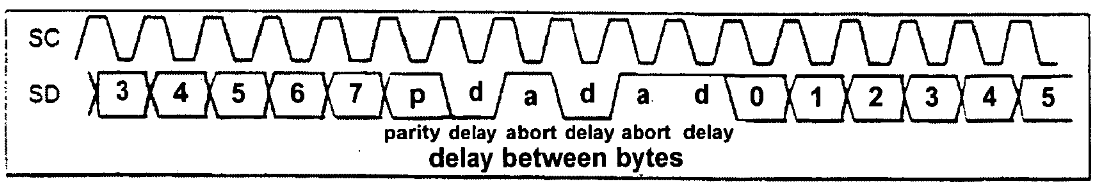


Any Cerberus device may abort a transaction, usually because of a detected parity error or a deadlock condition in a gateway, by driving the SD signal (to a zero value) on the "d" (delay) and the "a" (abort) cycles, as well as the next ten cycles, for a total of 12 cycles. The additional ten cycles ensure that the abort is detected by all devices, even under the adverse condition where a single-bit transmission error has placed devices into inconsistent states. Each device that detects an abort drives the SD signal (to a zero value) for ten cycles after its "a" (abort) cycle state, so in the most adverse case, an abort may have devices driving the bus to as many as 22 consecutive cycles. The figure below shows a typical (12 cycle) transaction abort, followed by an immediate re-transmission of the transaction.

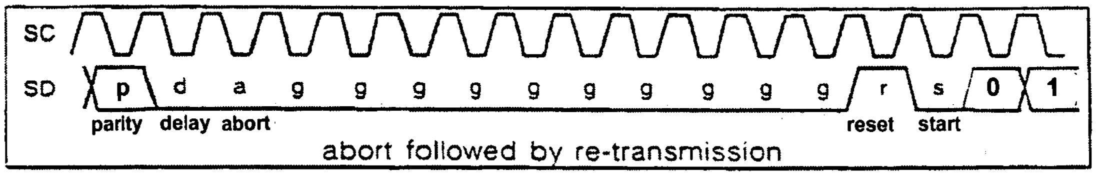

abort followed by re-transmission

Any Cerberus device may reset the Cerberus bus and all Cerberus devices, by driving the SD signal (to a zero value) for at least 33 cycles. This is sufficient to ensure that all devices receive the reset no matter what state the device is in prior to the reset. Transmission may resume after the SD signal is released (to a one value) for two cycles, as shown in the figure below.

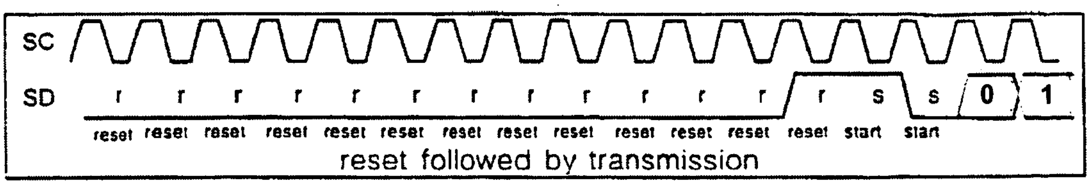

reset followed by transmission

The state diagram below describes this protocol in further detail:

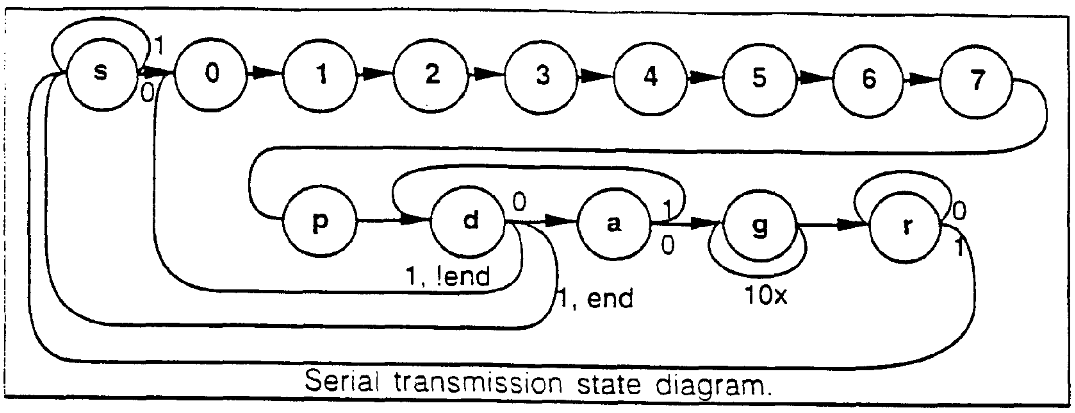

Serial transmission state diagram.

The table below describes the data output and actions which take place at each state in the above diagram. The next state for each state in the table is either column go-0 or go-1, depending on the value of the in column.

| state | out | in | go-0 | go-1 | action |
|---|---|---|---|---|---|
| s | s | $i_s$ | 0 | s | s = 0 iff transmit first byte. Must wait in this state one cycle (with s=1) if transmitting a new transaction. |
| 0 | $d_0$ | $i_0$ | 1 | 1 | bit 0 (LSB) of data. If do &~ $i_0$, lose arbitration. |
| 1 | $d_1$ | $i_1$ | 2 | 2 | bit 1 of data. If $d_1$ &- $i_1$. lose arbitration. |
| 2 | $d_2$ | $i_2$ | 3 | 3 | bit 2 of data. If $d_2$ &~ $i_2$, lose arbitration. |

(continued)

| state | out | in | go-0 | go-1 | action |
|---|---|---|---|---|---|
| 3 | $d_3$ | $i_3$ | 4 | 4 | bit 3 of data. If $d_3$ &~ $i_3$, lose arbitration. |
| 4 | $d_4$ | $i_4$ | 5 | 5 | bit 4 of data. If $d_4$ &~ $i_4$. lose arbitration. |
| 5 | $d_5$ | $i_5$ | 6 | 6 | bit 5 of data. If $d_5$ &~ $i_5$, lose arbitration. |
| 6 | $d_6$ | $i_6$ | 7 | 7 | bit 6 of data. If $d_6$ &~ $i_6$. lose arbitration. |
| 7 | $d_7$ | $i_7$ | p | p | bit 7 (MSB) of data.. If $d_7$ &~ $i_7$, lose arbitration. |
| p | p | $i_p$ | d | d | p = ~ ^$i_{7..0}$ (odd parity); abort if p^$i_p$. |
| d | d | $i_d$ | a | s/0 | d = 0 iff transmit delay, abort, or reset. If id=1, go to state 0 if not last byte of packet; else state s. |
| a | a | $i_a$ | g | d | a = 0 iff transmit abort or reset. If $i_a$ = 0, abort transaction. |
| g | 0 | N/A | g/r | N/A | stay in state g 10 times, then go to state r. |
| r | r | $i_r$ | r | s | r = 0 iff transmit reset. If $i_r$ = 0 and have been in this state 12 times, reset device. |

In order to avoid collisions, no device is permitted to start the transmission of a packet unless no current transaction is underway. To resolve collisions that may occur if two devices begin transmission on the same cycle, each transmitting device must monitor the bus during the transmission of one (released) bits. If any of the bits of the byte are received as zero (driven) when transmitting a one (released), the device has lost arbitration, and must transmit no additional bits of the current byte or transaction.

A device which has lost the arbitration of a collision, or has suffered the occurrence of a transaction abort, may retry the transmission immediately after the transmission of the last byte of the current transaction, as shown in the figure below.

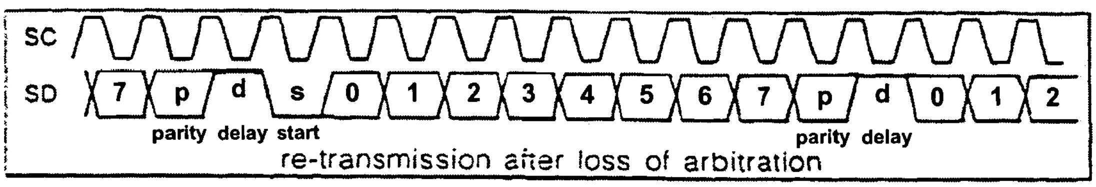


All other devices must wait one additional SC (clock) cycle before transmitting another message, as shown in the figure below. This ensures that all devices which have collided perform their operations before another set of devices arbitrate again.

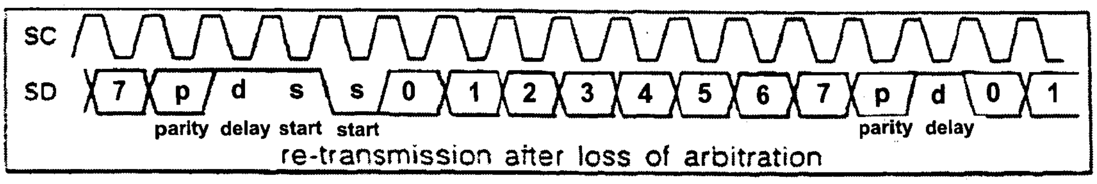


All initiator-capable devices must enforce a time-out limit of no more than 256 idle clock cycles between the packets of a transaction. After seeing this many idle clock cycles, at some time within the next 256 clock cycles, such devices must abort the current transaction transmitting a time-out packet, which consists of two bytes of zeroes.

Slow devices may require more cycles between the transmission of packets in a transaction than are permitted as idle clock cycles. Such devices may avoid the time-out limit by delaying the completion of the transmission of the previous packet until the idle time is less than the time-out limit, as shown in the figure below. In this way, devices of any speed may be accommodated.

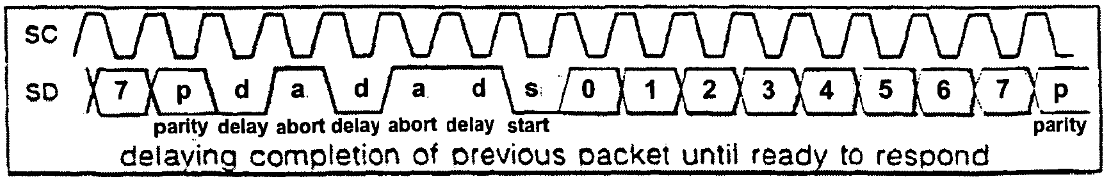


It is necessary that initiator-capable and other devices cooperatively avoid collisions between the time-out packet and transaction responses. The responsibility of the initiator devices is to inhibit transmission of a time-out packet if, before the time-out packet can be transmitted, some device begins transmitting, even if such a transmission begins after 256 idle clock cycles have elapsed. If the design of a target device ensures that no more than 256 idle clock cycles elapse between packets of a transaction, it need not be concerned of the possibility of a collision during the transmission of a response packet. Otherwise, the responsibility of the target devices is to inhibit transmission of a response if some other device begins transmitting a time-out packet after at least 256 idle clock cycles have elapsed.

A device which requires delay after an aborted transaction or a reset may cause such a delay by forcing the delay bit after the first byte of the immediately following transaction, as required. If in such a case, the device cannot keep a copy of the first byte of the transaction, it may force the transaction initiator to retransmit the byte by aborting that following transaction after a suitable delay has been requested.

*Transaction Protocol*

A transaction consists of the transmission of a series of packets. The transaction begins with a transmission by the transaction initiator, which specifies the target net, device, length, type, and payload of the transaction, request. If the type of the packet is in the range 128..255, the target device responds with an additional packet, which contains a length and type code and payload. The transaction terminates with a packet with a type field in the range 0..127, otherwise the transaction continues with packet transmission alternating between transaction initiator and the specified target.

The general form of an initial packet is:

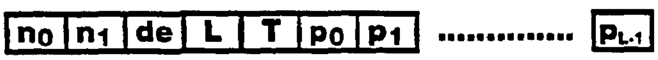


The general form of subsequent packets is:

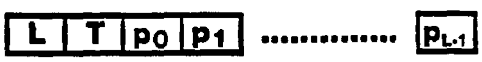


The range of valid values and the interpretation of the bytes is given by the following table:

| Field | Value | Interpretation |
|---|---|---|
| **$n_0$, $n_1$** | $0..2^{16}-1$ | network address of target, relative to network address of transaction initiator. Value is zero (0) if target is on same bus as transaction initiator. |
| **de** | 0..255 | device address, in this case, an absolute value, *i.e.,* not relative to device address of transaction initiator. |
| **L** | 0..255 | payload length, or number of bytes after transaction code (**T**). |
| **T** | 0..255 | transaction code. If the transaction code is in the range of 0..127, the transaction is terminated with this packet. If the transaction code is in the range of 128..255, the transaction continues with additional packets. |
| **$P_0$,$P_1$,...$P_{L-1}$** | 0..255 | Payload of transaction. |
| general transaction byte interpretation | | |

The valid transaction codes are given by the following table:

| mnemonic | L | T | interpretation |
|---|---|---|---|
| **te** | 0 | 0 | transaction error: bus timeout, invalid transaction code, invalid address |
| **tc** | 0 | 1 | transaction complete: normal response to a write operation |
| **d8** | 8 | 2 | data returned from read octlet |
| | | 3..127 | reserved for future definition |
| **w8** | 10 | 128 | write octlet |
| **r8** | 2 | 129 | read octlet |
| | | 130..255 | reserved for future definition |

general transaction byte interpretation

All Cerberus devices must support the transaction codes: **te, tc, d8, w8,** and **r8.**

All Cerberus devices monitor SD to determine when transactions begin and end. A transaction is terminated by the completion of the transmission of the specified number of payload bytes in a transaction with code in the range 128..255, or by the transmission of an abort sequence. For purposes of monitoring transaction boundaries, only the L byte is interpreted; the value of the T byte (except for the high order bit) must be disregarded. This is of particular importance as many transaction codes are reserved for future definition, and the use of such transaction codes between devices which support them must be permitted, even though other devices on the Cerberus bus may not be aware of the meaning of such transactions. A Cerberus device must permit any value in the **L** byte for transactions addressed to other devices even if only a limited set of values is permitted for transactions addressed to that device.

Transactions addressed to a device which does not provide support for the enclosed transaction code or payload length should be aborted by the addressed target device.

The selection of the payload length **L** and transaction code **T** for the transaction error packet is of particular note. Because the value of all information bits of the packet is zero, it is guaranteed that a device which transmits this packet will have collision priority over all others.

*Write Octlet*

The "write octlet" transaction causes eight bytes of data to be transferred from the transaction initiator to the addressed target device at an octlet-aligned 16-bit device address. The transaction begins with a request packet of the form:

| | | | | | | | | | | | | | | |
|---|---|---|---|---|---|---|---|---|---|---|---|---|---|---|
| $n_0$ | $n_1$ | de | 10 | w8 | $A_0$ | $A_1$ | $D_0$ | $D_1$ | $D_2$ | $D_3$ | $D_4$ | $D_5$ | $D_6$ | $D_7$ |

The normal response to this request is of the form:

| | |
|---|---|
| 0 | tc |

The error response to this request is of the form:

| | |
|---|---|
| 0 | te |

The 16-bit device address is interpreted as an octlet address (not a byte address) and is assembled from the $A_0$ and $A_1$ bytes as (most significant byte is transmitted first):

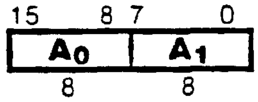


The data to be transferred to the target device is assembled into an octlet as (most significant byte is transmitted first):

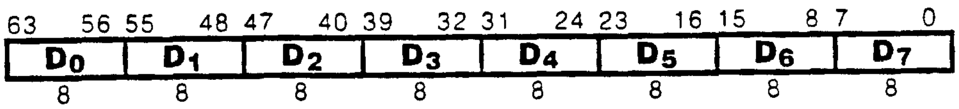


Side-effects due to the alteration of the contents of the octlet at the specified address are only permitted if the transaction completes normally. In the event that the write octlet transaction is aborted at or prior to the transmission of the $A_1$ byte, the target device must make no permanent state changes. If the transaction is aborted at or after the transmission of the Do byte, the contents of the octlet at the specified address is undefined. If alterations of the contents normally would cause side-effects in the operation of the Cerberus device or side-effects on the contents of other addressable octlets in the device, these side-effects must be suppressed.

If the addressed target device is not present on the Cerberus bus, the transaction will proceed to the point of transmitting the octlet data and then stop until the idle time-out limit is reached. At that point, one or more initiator-capable devices will generate an error response packet.

If the addressed target device is present on the Cerberus bus, but the 16-bit device address is not valid for that device, the target must generate an error response packet.

_Read Octlet_

The "read octlet" transaction causes eight bytes of data to be transferred to the transaction initiator from the addressed target device at an octlet-aligned 16-bit device address. The transaction begins with a request packet of the form:

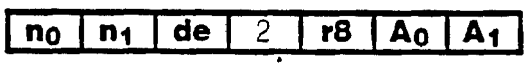


The normal response to this request is of the form:

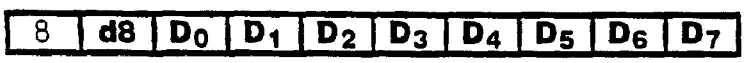


The error response to this request is of the form:

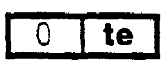


The 16-bit device address is interpreted as an octlet address (not a byte address) and is assembled from the $A_0$ and $A_1$ bytes as (most significant byte is transmitted first):

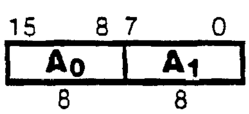


The data to be transferred to the target device is assembled into an octlet as (most significant byte is transmitted

first):

| 63 56 | 55 48 | 47 40 | 39 32 | 31 24 | 23 16 | 15 8 | 7 0 |
|---|---|---|---|---|---|---|---|
| $D_0$ | $D_1$ | $D_2$ | $D_3$ | $D_4$ | $D_5$ | $D_6$ | $D_7$ |
| 8 | 8 | 8 | 8 | 8 | 8 | 8 | 8 |

Regardless of whether the transaction completes, the read octlet transaction must have no side-effects on the operation of the Cerberus device or the contents of other addressable octlets.

If the addressed target device is not present on the Cerberus bus, the transaction will proceed to the point of transmitting the octlet address and then stop until the idle time-out limit is reached. At that point, one or more initiator-capable devices will generate an error response packet.

If the addressed target device is present on the Cerberus bus, but the 16-bit device address is not valid for that device, the target must generate an error response packet.

<u>*Dedicated Octlets*</u>

Certain octlet addresses are assigned by which all Cerberus devices may be identified as to device type, manufacturer, revision, and by which devices may be individually reset and tested. All or part of octlet addresses 0..7 are reserved for this purpose.

| octlet | 63 56 55 48 47 40 39 32 31 24 23 16 15 8 7 0 |
|---|---|
| **0** | **identify architecture** |
| **1** | **identify implementation** |
| **2** | **identify manufacturer** |
| **3** | **identify serial number** |
| **4..5** | **identify architectural features and options** |
| **6** | **specify operating modes** |
| **7** | **report operating status** |
| **8.. $2^{16}$-1** | **not specified by Cerberus** |
| | 8 8 8 8 8 8 8 8 |

The octlets at addresses 0 through 3 identifies the company which specifies the device architecture *(e.g.* MicroUnity), the device architecture *(e.g.* Mnemosyne, Terpsichore, Calliope), the implementor *(e.g.* MicroUnity, partner), the device implementation and manufacturer and manufacturing version *(e.g.* 1.0,1.1.2.0), and optionally a unique device serial number. Addresses 0 through 2 are read/only; an attempt to write to these addresses may cause either a normal termination or an error response. Address 3 may be read/only or read/write.

| octlet | 63 16 | 15 0 |
|---|---|---|
| **0** | **architecture code** | **architecture revision** |
| **1** | **implementor code** | **implementor revision** |
| **2** | **manufacturer code** | **manufacturer revision** |
| **3** | **serial number** | **configurable address** |
| | 48 | 16 |

The octlet at address 0 contains an architecture code and revision identifier. The architecture code and revision identifies each distinctly designed architecture version of a device. Normally, a change in the upper byte of the revision indicates a change in which features may have changed. A change in the lower byte of the revision signifies a change made to repair design defects or upward-compatible revisions.

The architecture code is a unique 18-bit identifier, comprised of the concatenation of a 24-bit unique company identifier[56], and a 24-bit value specified by the designated company. This code must not duplicate 48-bit identifiers specified for this purpose, or for other purposes, including use of unique identifiers for implementation codes, manufacturing codes, or in IEEE 1212, or IEEE 802. IEEE 802 48-bit identifiers are specified in terms of a binary ordering of bits on a single line; for Cerberus, the ordering which is appropriate is that labelled "CSMA/CD and Token Bus," where bits are driven onto Cerberus with the least-significant bit of each byte first.

[56]Company identifiers are a 24-bit value assigned by authority of the IEEE. Ask for a 'unique company identifier' for your organization:

Registration Authority for Company Identifiers
The Institute of Electrical and Electronic Engineers
445 Hoes Lane
Piscataway. NJ 08855-1331
USA
(908) 562-3812

MicroUnity's unique company identifier is: 0000 0000 0000 0010 1100 0101. Only MicroUnity may assign unique 48-bit identifiers that begin with this value. Others may assign 48-bit identifiers that begin with a 24-bit company identifier assigned by authority of the IEEE.

MicroUnity will, upon request, supply unique 48-bit identifiers for architectures, implementors, or manufacturers of designs which are fully compliant with the Cerberus Serial Bus Architecture. For assignment of identifiers, contact MicroUnity:

Craig Hansen. Chief Architect
Registration Authority for Unique Identifiers
MicroUnity Systems Engineering, Inc.
255 Caspian Drive
Sunnyvale. CA 94089-1015
Tel: (408) 734-8100
Fax: (408) 734-8136

MicroUnity's architecture codes are specified by the following table:

| Internal code name | Code number |
|---|---|
| Mnemosyne | 0x00 40 a3 49 d2 e4 |
| Euterpe | 0x00 40 a3 24 69 93 |
| Calliope | Ox00 40 a3 92 b4 49 |

Refer to the designated architecture specification for architecture revision codes.

The octlet at address 1 contains an implementation code and revision identifier. The implementation code and revision identifies each distinctly designed engineering version of a device. The implementation code is a unique 48-bit identifier, as for architecture codes. Normally, a change in the upper byte of the revision indicates a change in which features may have changed, or in which all mask layers of a device have been modified. A change in the lower byte of the revision signifies a change made to repair design defects or in which only some mask layers of a device have been modified.

Refer to the designated architecture specification for the values of the implementation code and revision fields.

The octlet at address 2 contains a manufacturer code and revision identifier. The manufacturer code and revision identifies each distinct manufacturing database of an implementation. The manufacturer code is a unique 48-bit identifier, as for architecture codes. Changes in the manufacturer revision may result from modifications made to any or all mask layers to enhance yield or improve expected device performance.

Refer to the designated architecture specification for the values of the manufacturer code and revision fields.

The octlet at address 3 optionally contains a unique device serial number or random number and optionally contains a configurable address register. If the octlet does not contain a serial or random number, it must contain a 64-bit zero value.

If the octlet contains a unique device serial number, it must be a unique 48-bit value, as for architecture codes.

If the octlet contains a random number, it must be a value chosen from a uniform distribution, selected whenever the device is reset.

The optional configurable address register permits a system design in which some devices are set to identical Cerberus device addresses at system reset time, and dynamically have their addresses moved to unique addresses by some Cerberus device. The configurable address register must be set to the address designated by the $SN_{3..0}$ pins whenever the device is reset. A device which implements the configurable address capability must also implement either a unique device serial number or a random number, must implement the arbitration mechanism during responses from read-octlet requests, and must ensure that all devices which are originally set to the same address at reset time respond to a read-octlet with identical latency. An initiator device on Cerberus may set the configurable address register by reading the entire octlet at address 3, reading both the serial/random number and the configurable address register. By the use of the bitwise arbitration mechanism, only one device completes the read-octlet response packet. Then, the initiator device writes a value to octlet address 3, where the first 48 bits of the value written must match the value just read. All target devices then examine the first 48 bits of the value written, and only if the value matches the contents of the serial/random number on the device, uses the last 16 bits[57] to load into the configurable address register. The initiator will repeat this process until there are no more devices at the original/reset address, at which time a bus time-out occurs on the read-octlet transaction.

[57]A 16-bit field provides for the possibility of configuring devices which respond to addresses directly that have net numbers set, thereby blurring the dividing line between Cerberus net addresses and device addresses. Gateway designers might want to consider this possibility.

The octlets at addresses 4 and 5 contain architecture parameters. Values are device-architecture-dependent and implementor-independent; refer to the designated architecture specification for information. Addresses 4 and 5 are read/only: an attempt to write to these addresses may cause either a normal termination or an error response.

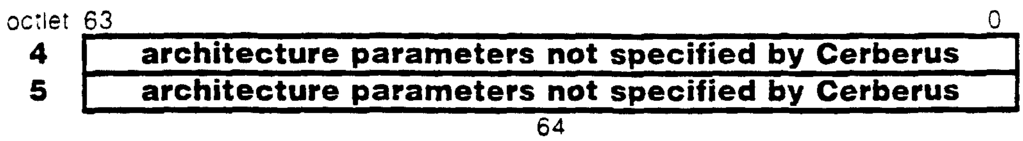


Octlet 6 designates overall device settings: Values in address 6 are changed only by external devices and not by the device itself; this register is read/write. Two bits of the first byte have standard meaning for all Cerberus devices. Bits 61..0 are not specified by Cerberus except by the restriction that these values are changed only by external devices, not by the device itself; refer to the designated architecture specification for information.

Writing a one to bit 63, r, of octlet 6 causes the device to perform a device circuit reset, which is equivalent to the reset performed by driving the SD signal (to a zero value) for 33 or more cycles, and sets the device to an initial state in which previous device state may be lost, previous control settings may be lost and variable power settings are set to a minimal, functional value, after which bits 63 and 62 of the status register below are set (to ones).

Writing a one to bit 62, c, of octlet 6 causes the device to perform a device logic clear, which initializes the device to a known, quiescent, initial state, in which previous device state may be lost, but does not affect control register settings related to variable power settings, after which bits 63 and 62 of the status register below are set (to ones).

Writing a one to bit 61, s, of octlet 6 causes the device to perform a self-test, after which previous device state may be lost, and after which bit 62 of the status register below is set (to one) if the self-test yields satisfactory results. Bit 63 of the status register below is set (to one) at the end of the self-test.

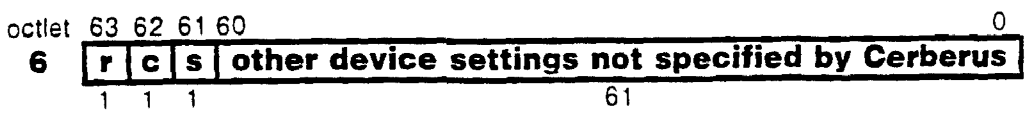


Octlet 7 designates device status. Values in address 7 are normally modified only by the device itself, except when an external device may clear status or error conditions; this register is read/write. However, the only valid data which can be written to this register is a zero value, which clears any outstanding status or error reports. Two bits of the first byte have standard meaning for all Cerberus devices. Bits 61..0 are not specified by Cerberus except by the restriction that these values are modified only by the device itself except for clearing by an external device; refer to the designated architecture specification for information.

Bit 63, c, of octlet 7 indicates whether the device has completed reset, clear, or self-test.

Bit 62, s, of octlet 7 indicates whether the device has successfully completed reset, clear, or self-test.

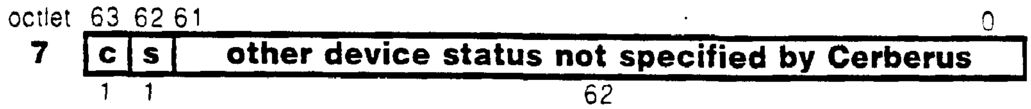


Octlets at addresses 8..$2^{16}$-1 are not specified by Cerberus. Refer to the designated architecture specification for information.

*Gateways*

The Cerberus bus may be extended into a network of buses using a gateway. Gateways connect between buses that use the wired-and signalling protocol described above. A gateway attaches to a local Cerberus bus and receives and retransmits bus requests and responses over a linkage to other gateways, thereby reaching to additional Cerberus buses. This document does not specify the protocol used to link gateways.

The diagram below shows a gateway network connecting several Cerberus buses:

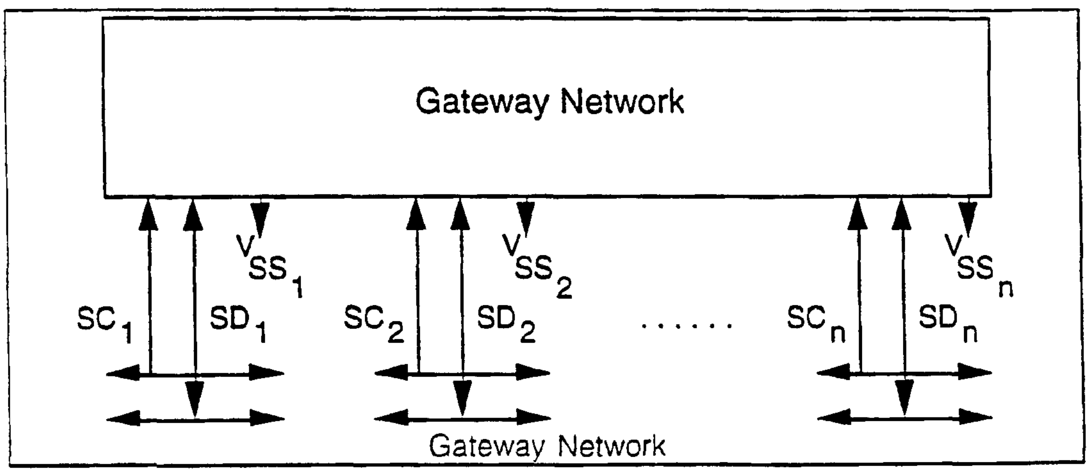


Each Cerberus bus in a Cerberus network may, for specification purposes, be assigned a unique network number, in the range 0..$2^{16}$-1. These network numbers never appear directly in Cerberus device addresses, as the target network byte specified in the request packet of a Cerberus transaction contains only a relative net number: the target net either minus, or xor'ed with, the initiator net. Thus, the relative target network address is always zero when the initiator and the target are on the same Cerberus bus, and is always non-zero when they are on different buses.

A Cerberus bus permits only one transaction to occur at a time. However, a Cerberus network may have multiple simultaneous transactions, so long as the target and initiator network addresses are all disjoint. In more precise terms, the network addresses must satisfy the relations:

$target_i \neq initiator_j$
$target_i \neq target_j$
$initiator_i \neq initator_j$, for all $i \neq j$.

A Cerberus network may set more restrictive conditions for simultaneous transactions by its internal design, as required by limits of performance or bandwidth of the gateway network. When these conditions are not satisfied, one or more transactions may be selected to be aborted on the local Cerberus bus on which they are initiated by any fair-scheduling mechanism.

Each local Cerberus bus is connected to the gateway network by exactly one gateway. When a request packet of a transaction is received by a gateway on a local Cerberus bus, the first byte of the packet specifies a net number. If this byte is non-zero, the gateway, which we will designate the initiator gateway, must carry this transaction across the gateway network. This number is interpreted as a signed byte, relative to the initiator gateway, and specifies a gateway to be the target of the transaction, which we will designate the target gateway. We will refer to the local Cerberus bus to which the initiator gateway is attached as the initiator bus, and the bus to which the target gateway is attacked as the target bus.

The request packet is carried via the initiator gateway, through the gateway network, to the target gateway, which then re-transmits the packet on the target bus. When the request packet is re-transmitted on the target bus, the network number byte is zero, designating a target on the target bus. The initiator gateway may delay transmission of the request packet on the initiator bus as required to limit or manage the flow of information through the gateway network, between each byte of the request packet. The initiator gateway must also delay transmission at the end of the last byte of the request packet in order to ensure that packet aborts on the target bus are propagated back to the initiator bus. The initiator gateway must also ensure that a target device which responds just barely within the time-out limit on the target bus does not cause a time-out on the initiator bus, generally by asserting a delay on the initiator bus until this condition can be assured.

When a response packet is generated on the target bus (which may be from either the addressed target or some time-out generator), the packet is carried in the reverse direction by the gateway network. This response and any further packets are carried until the end of the transaction. The contents of the response and further packets are not changed by the gateway network.

When a local Cerberus bus reset is received by a gateway, the reset is carried by the gateway network and each other gateway then re-transmits a reset transaction on all other local buses.

*Repeater*

A Cerberus bus may be extended by inserting repeaters. A repeater electrically separates two segments of a Cerberus bus, but provides a transparent linkage between these two segments. Using a repeater is advantageous when the capacitive load or clock skew between Cerberus devices on a large bus would require a reduction in the clock rate. The system designer must ensure that device addresses remain unique across what is logically a single serial bus.

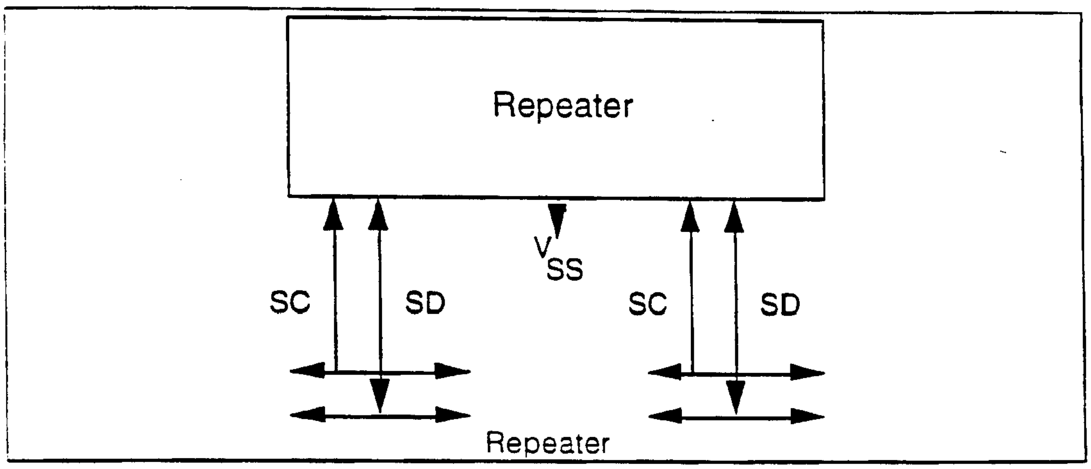


Generally, a repeater will repeat each request packet seen on one side of the repeater on the other side, with a delay of at least one clock cycle. If two transactions appear nearly simultaneously on each side of the repeater, the repeater must abort one of the transactions and permit the other to be repeated. This arbitration must be performed fairly, such as by alternating which side of the repeater is preferred on consecutive collisions.

A simple repeater continues until the end of the transaction by repeating the response packets, which may appear on the same or opposite side as the original request packet of the transaction.

If the topology of the Cerberus is constructed so that only target devices exist on one side of the repeater, the design may be simplified by the elimination of the arbitration function. In such a case, transactions may only originate from the side designated to contain initiator-capable devices.

A more sophisticated repeater may "learn" which addresses are on each side of the repeater, and only repeat transactions which need to cross the repeater to be completed. Alternatively, a repeater may be constructed with knowledge of the addresses to be placed on each side, such as addresses 0..127 on one side and addresses 128..255 on the other, again permitting the selective repeating of packets across the repeater.

*Synchronous Repeater*

A very simple form of repeater may be employed to divide up the capacitive and leakage load on the SD signal of a Cerberus bus into two or more segments, when a common SC clock reference is used.

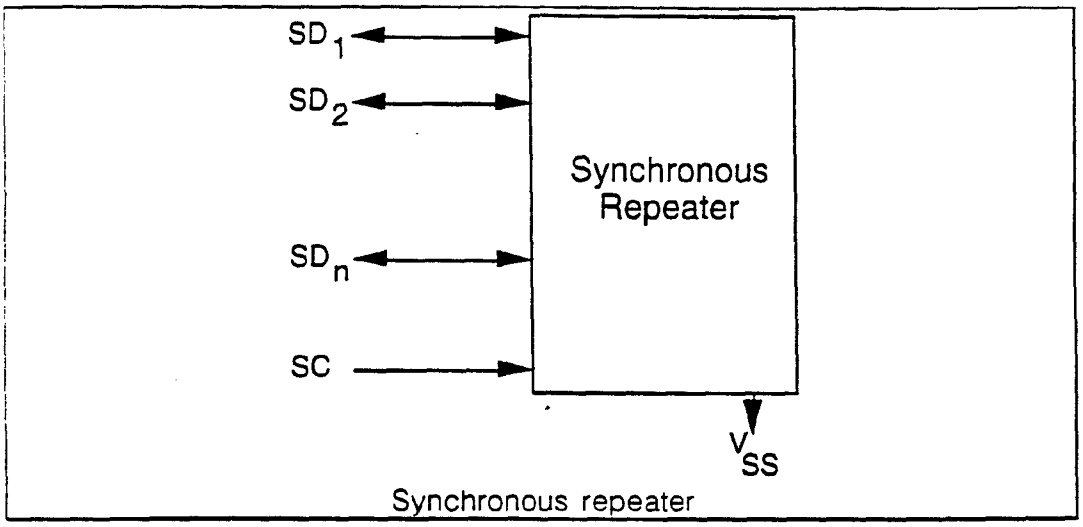


The synchronous repeater samples each electrically-isolated segment of a logically-single Cerberus bus on the falling edge of each SC clock cycle, then broadcasts the logical AND of all the values on each segment during the SC clock low period.

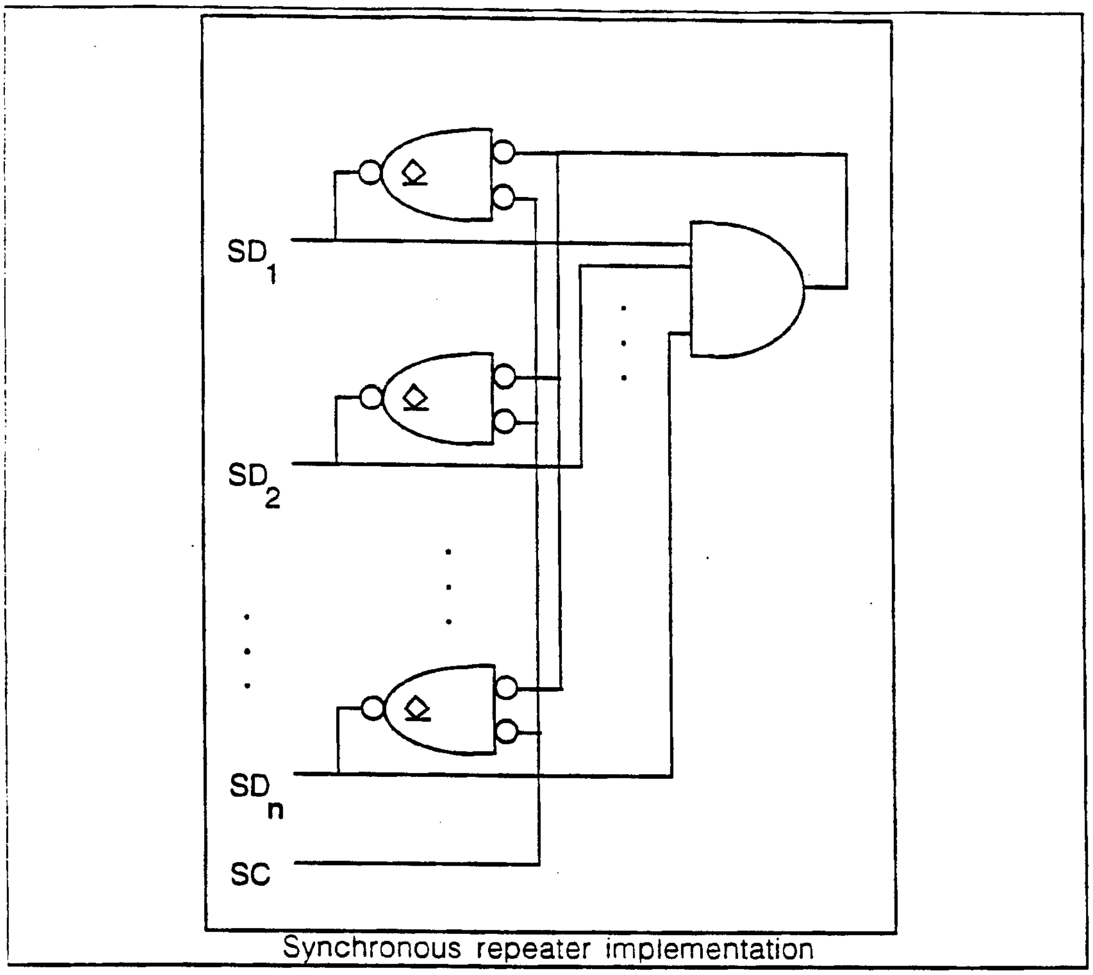

Synchronous repeater implementation

For large networks, this repeater improves performance by dividing up the RC delay by a factor of n, though two bus settling periods now occur on each SC clock period, so the speedup is approximately $\frac{n}{2}$.

This circuit can be economically implemented using a single TTL '621 part and a pull-up resistor:

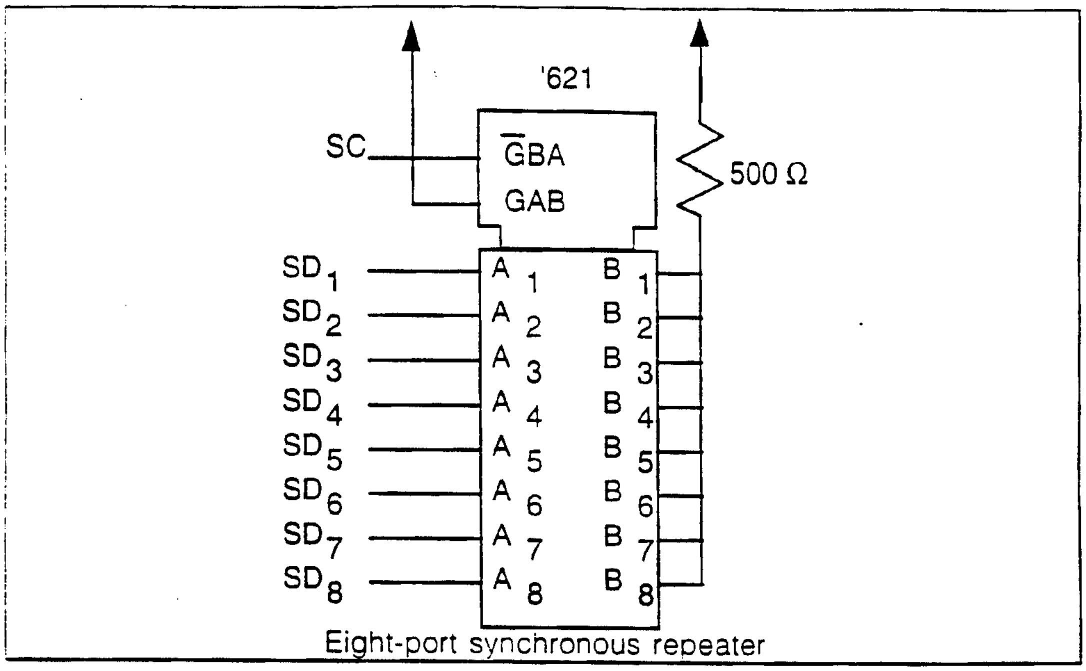

Eight-port synchronous repeater

*Icarus Interprocessor Protocol*

MicroUnity's Icarus interprocessor protocol uses Hermes high-bandwidth channels to connect Terpsichore processors together, either directly or through external switching components, permitting the construction of shared-memory, coherently- or incoherently- cached multiprocessors. Icarus uses Hermes in the "Dual-Master Pair" configuration, and can be extended for use in "Multiple-Master Ring" configurations.

Internal daemons within Terpsichore perform and respond to Hermes write operations upon which the Icarus interprocessor communication protocol is embedded. These daemons provide for the generation of memory references to remote processors, for access to Terpsichore's local physical memory space, and for the transport of remote references to other remote processors.

*Interprocessor Topologies*

The simplest multiprocessor configuration that can be built with the Icarus protocols is a dual-processor:

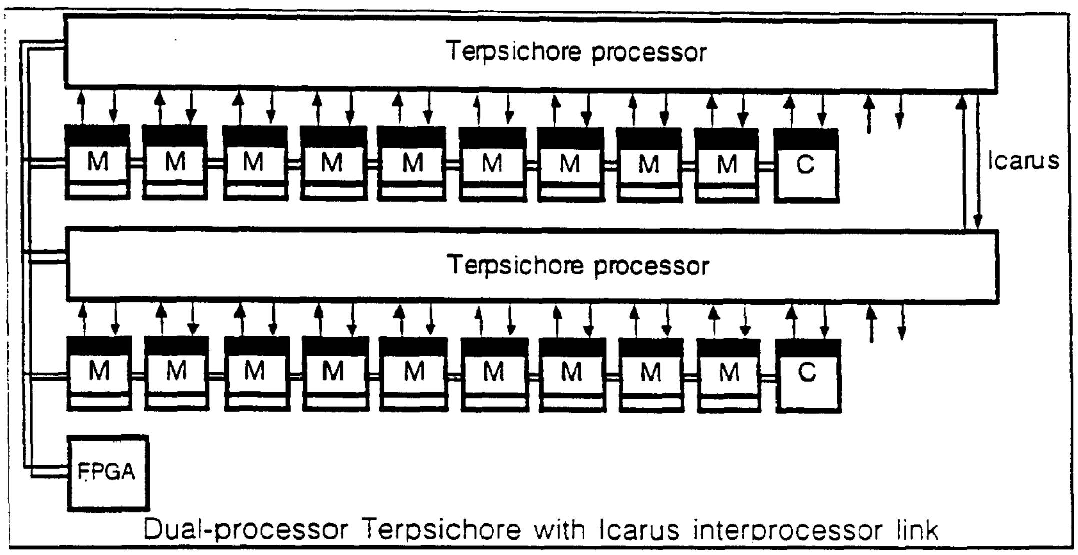

Dual-processor Terpsichore with Icarus interprocessor link

The diagram below represents the same dual-processor system, in a simpler notation:

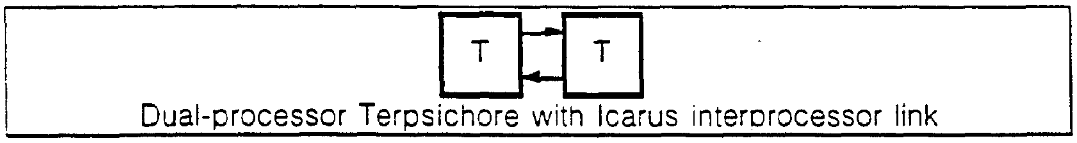


In the configuration above, a pair of Hermes channels are connected together to form an Icarus Interprocessor link in the Dual-Master Pair configuration. A Cerberus bus connects all the system components together to facilitate system configuration, The Terpsichore processors all run off of a common frequency clock, as required by the Hermes channels that connect between processors.

Dual Terpsichore processors with dual Icarus links may use both links to enhance system bandwidth:

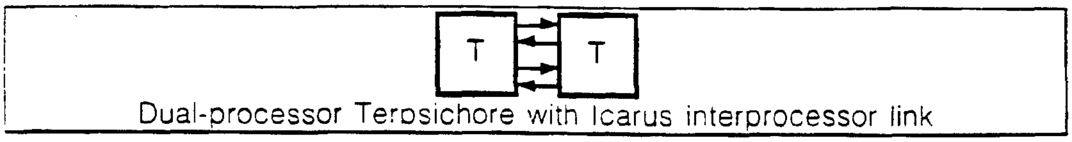


A Terpsichore processor's dual Icarus links, each in the Dual-Master Pair configuration may connect to two different processors. Using the Icarus Transponder daemons in each processor, several processors may be interconnected into a linear network of arbitrary size:

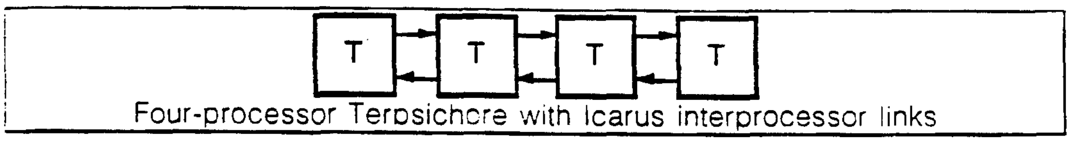


The Icarus links may also join at the ends of the linear network, forming a ring or arbitrary size.

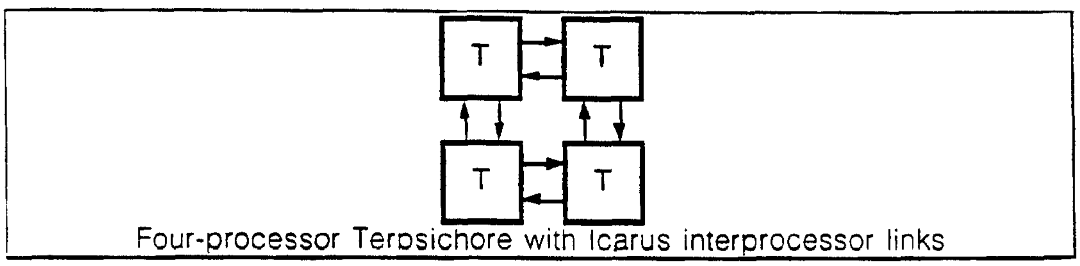


In the configuration above, two Icarus links are connected to each Terpsichore processor, forming a single ring.

By connecting Icarus links into 4-master rings, providing Hermes master forwarding for responses, using the Icarus Transponder daemons in each processor, processors may be interconnected into a two-dimensional network of arbitrary size:

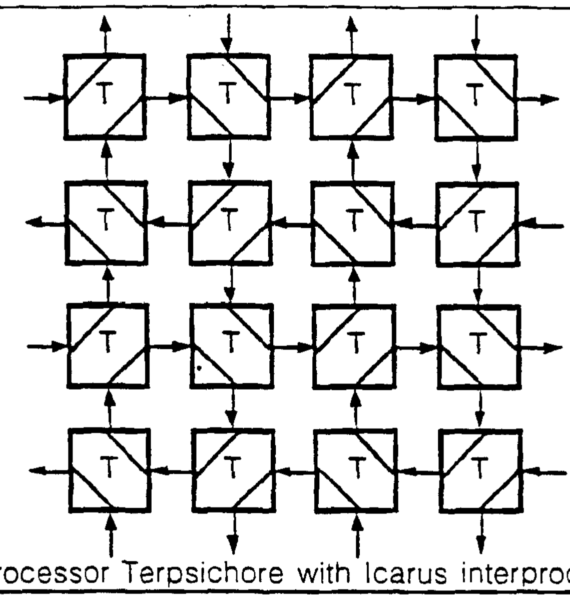

Sixteen-processor Terpsichore with Icarus interprocessor links

In the configuration above, two Icarus links are connected to each Terpsichore processor, forming a single ring.

Other multidimensional topologies can be constructed by using multimaster rings as basic building blocks. An **n**-master ring (**n**≤4) of Terpsichore processors has n Icarus link-pairs available for connection into dual-master or multi-master configurations. For example, with a 4-master ring:

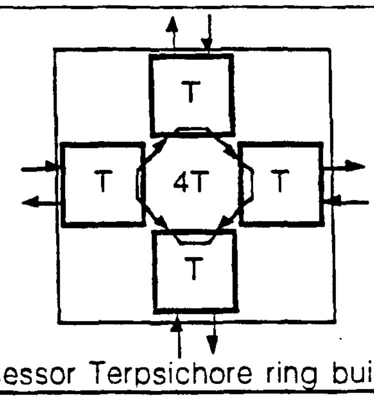


Four-processor Terpsichore ring building-block

These building blocks can then be assembled into radix-n switching networks:

By connecting Icarus links to external switching devices, multiprocessors with a large number of processors can be constructed with an arbitrary interconnection topology:

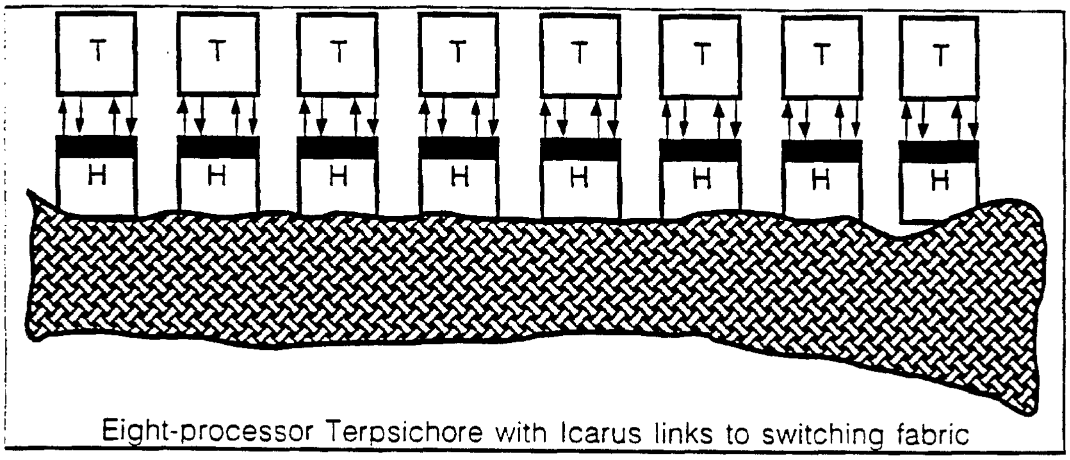

Eight-processor Terpsichore with Icarus links to switching fabric

In the configuration above, two Icarus links connect each Terpsichore processor to a switching fabric consisting of Hydra switches.

*Link-level and Transaction-level Protocol*

Icarus uses the Hermes protocol at the link-level, and uses Hermes operations to embed a transaction-level protocol.

*Two-packet link-action nomenclature*

We designate the term "link-action" to describe the low-level packet protocol used between a Hermes master device and a Hermes slave device. The packets that make up a link-action contain a three-bit link-action identifier, or "lid," which permit up to eight outstanding link-actions to be in progress at any point in time.

Link-actions consist of two actions. Each packet transmitted on the Hermes ring corresponds to an action:

| | |
|---|---|
| Request | the action taken by a requester to start the transaction. |
| Response | the action taken by the responder to finish the transaction. |

Link-action nomenclature

These actions and their relation to the data flow is shown below:

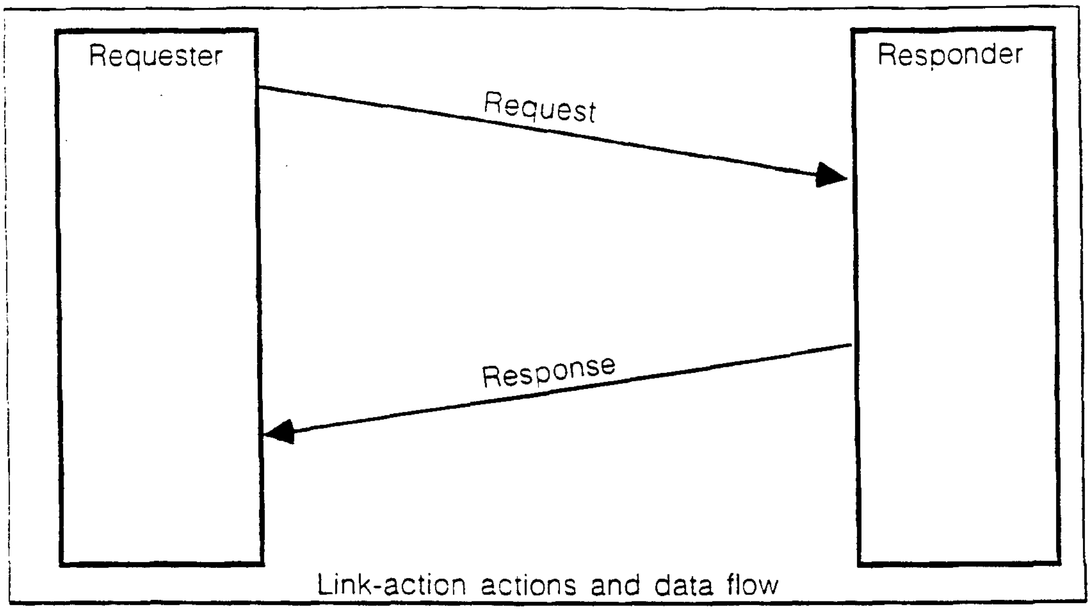


*Four-packet transection nomenclature*

We designature the term "transaction" to describe the upper-level packet protocol used when embedding a four-packet, or "split" transaction above the link-level Hermes packet protocol.

Transactions are used when the latency of a transaction may require that more than eight actions are outstanding at a point in time, in order to maintain the desired throughput of the protocol. Embedding the transaction protocol above the link-action protocol limits the amount of link-level state which must be implemented.

Certain of the packets that make up a transaction contain an eight-bit transaction identifier, or "tid," which permit up to 256 outstanding transactions to be in progress at any point in time. These packets also contain link-action identifiers, lids, which connect these packets with others which are part of the transaction, but do not contain a tid.

Transactions consist of four actions. Each action results in one or more link-level Hermes packets transmitted on the channels:

| | |
|---|---|
| Request | the action taken by a requester to start the transaction. |
| Indication | the reception of a request by a responder. |
| Response | the action taken by the responder to finish the transaction. |
| Confirmation | the reception of the response by the requester. |
| Transaction nomenclature | |

These actions and their relation to the data flow is shown below:

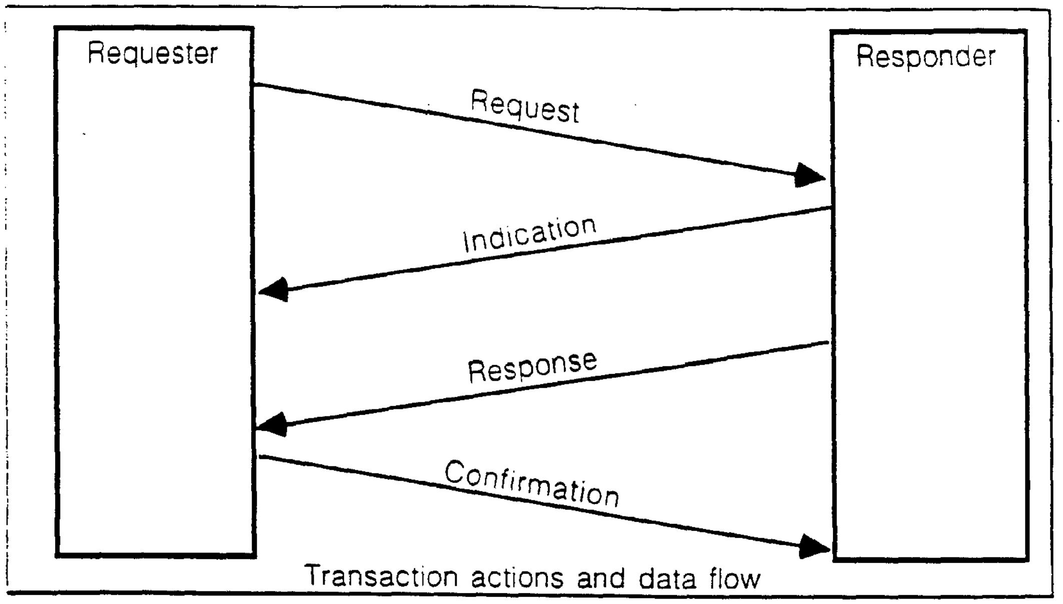


The following table shows the relationship between transaction-level actions and link-level actions, showing typical transaction messages and link-action commands:

| Transaction-level action | Typical transaction message | Link-level actions | Link-action command |
|---|---|---|---|
| Request | read/write-sizelet-request | Request | write-octlet |
| Indication | Remote-indication | Response | write-response |
| Response | read/write-sizelet-response | Request | write-octlet |
| Confirmation | Remote-confirmation | Response | write-response |
| Transaction protocol for Icarus Requester Daemon | | | |

*Icarus Action Format*

*Request and Response actions*

A series of link-level write octlet operations comprise an Icarus request or response action. The address of the write operation contains target routing, transaction-id, commands and sequence information in the following format:
A remote request is a write octlet to an address of the form:

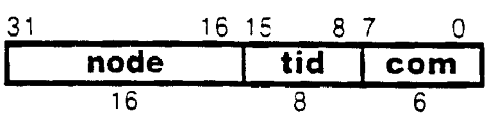


with data of the form:

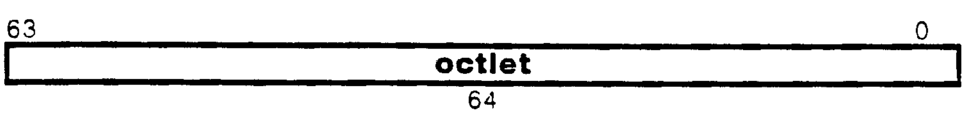


The **tid** field contains an 8-bit transaction id code which must be returned along with the remote response. The tid field value must be unique among all transactions originating from a node, but **tid** field values of transactions originating from distinct nodes may be equal.

The **com** field contains a 6-bit command code which, in the first octlet, designates the operation to be performed in a request action or the result returned in a response action. If the command code is in the range 0..31, in successive octlets, the value of the com field indicates whether the number of octlets to follow (0..9), such that the last octlet of a message contains a **com** field with a 0 value.

The **node** field contains a 16-bit node address which is the target of the action.

When embedded into a link-level write octlet operation, the Terpsichore requester daemon request appears on the Hermes in the form:

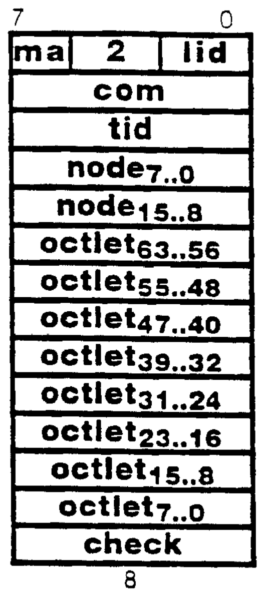


A transaction which has a payload of one octlet must use a link-level write octlet operation. A transaction which has a payload of greater than one octlet may successively use link-level write octlet operations to transmit the payload.

*Indication and Confirmation actions*

Indication and Confirmation actions consist of a series of link-level write octlet response packets, one for each octlet of the Request and Response actions.

*Icarus Requester Daemon*

When Terpsichore attempts a load or store to a physical address in which the high-order 16 bits are non-zero, the memory at that address is assumed to be present in the memory space of a remote Terpsichore processor. The Icarus Requester Daemon is an autonomous unit which attempts to satisfy such remote memory references by communicating with an external device, either another Terpsichore processor or a switching device which eventually reaches another Terpsichore processor.

These remote references are characterized by an eight-byte physical byte address, of which two bytes are used for specifying a processor node, and the remaining six bytes are used for specifying a local physical address on that processor node.

The Icarus Requester Daemon associates each remote memory reference with a transaction identifier[58] of eight bits, permitting up to 256 such remote references to be outstanding at any time: however, implementation limits within Terpsichore may set a smaller bound.

[58]The term "sequence number" is avoided here, because the transaction-tags are not necessarily sequential in nature.

The Icarus Requester Daemon takes the role of the Transaction Requester, and an external device takes the role of the Transaction Responder. The daemon generates writes to a specified byte-channel and module address, which causes an external device to read or write remote octlets or cache lines in a remote memory. The daemon may have as many as two[59] link-level write requests outstanding at any point in time.

[59]The number of link-level requests to be outstanding is still under study.

Terpsichore contains two such requester daemons which act concurrently to two different byte-channel and/or module addresses.

*Icarus Responder Daemon*

The Icarus Responder Daemon accepts writes from a specified byte-channel and module address, which enable an external device to generate transaction requests to read or write octlets or cache lines in the Terpsichore's local memory, or to generate Terpsichore events. The daemon also generates link-level writes to the same external device to communicate the responses to these transaction requests back to the external device.
Terpsichore contains two such responder daemons which act concurrently to two different byte-channel and/or module addresses.
An external device takes the role of the Transaction Requester, and the Icarus Responder takes the role of the Transaction Responder.

*Icarus Transponder Daemon*

The Icarus Transponder Daemon accepts writes from a specified Hermes channel and module address, which enable an external device to cause an Icarus Requester Daemon to generate a request on another Hermes channel and module address.
Terpsichore contains two such transponder daemons which act concurrently (back-to-back) between two different byte-channel and/or module addresses.

*Icarus Request*

The following table summarizes the commands used for Icarus requests and responses (response command shown in bold):

| code | command | payload (octlets) |
|---|---|---|
| 0 | last octlet of multi-octlet command | |
| 1..9 | continuation octlet of multi-octlet command | |
| 10..19 | Reserved | |
| 20 | read incoherent strong cache-line | 1 |
| **21** | **read/add/swap octlet response** | **1** |
| 22 | read incoherent weak cache-line | 1 |
| **23** | **write response** | **1** |
| 24 | read allocate strong octlet | 1 |
| 25 | read noallocate strong octlet | 1 |
| 26 | read allocate weak octlet | 1 |
| 27 | read noallocate weak octlet | 1 |
| 28 | read allocate strong hexlet | 1 |
| 29 | read noallocate strong hexlet | 1 |
| 30 | read allocate weak hexlet | 1 |
| 31 | read noallocate weak hexlet | 1 |
| **32** | **read hexlet response** | **2** |
| **33** | **read incoherent cache-line response** | **8** |
| **34** | **read coherent cache-line response** | **9** |
| 35..36 | Reserved | |
| 37 | read coherent strong cache-line | 2 |
| 38 | Reserved | |
| 39 | read coherent weak cache-line | 2 |

(continued)

| code | command | payload (octlets) |
|---|---|---|
| 40..51 | Reserved | |
| 52 | write coherent strong cache-line | 10 |
| 53 | write incoherent strong cache-line | 9 |
| 54 | write coherent weak cache-line | 10 |
| 55 | write incoherent weak cache-line | 9 |
| 56 | write allocate strong octlet | 2 |
| 57 | write noallocate strong octlet | 2 |
| 58 | write allocate weak octlet | 2 |
| 59 | write noallocate weak octlet | 2 |
| 60 | write allocate strong hexlet | 3 |
| 61 | write noallocate strong hexlet | 3 |
| 62 | write allocate weak hexlet | 3 |
| 63 | write noallocate weak hexlet | 3 |
| 64 | add-and-swap allocate strong octlet little-endian | 2 |
| 65 | add-and-swap noallocate strong octlet little-endian | 2 |
| 66 | add-and-swap allocate weak octlet little-endian | 2 |
| 67 | add-and-swap noallocate weak octlet little-endian | 2 |
| 68..79 | Reserved | |
| 80 | add-and-swap allocate strong octlet big-endian | 2 |
| 81 | add-and-swap noallocate strong octlet big-endian | 2 |
| 82 | add-and-swap allocate weak octlet big-endian | 2 |
| 83 | add-and-swap noallocate weak octlet big-endian | 2 |
| 84 | compare-and-swap allocate strong octlet | 3 |
| 85 | compare-and-swap noallocate strong octlet | 3 |
| 86 | compare-and-swap allocate weak octlet | 3 |
| 87 | compare-and-swap noallocate weak octlet | 3 |
| 88 | muitiplex-and-swap allocate strong octlet | 3 |
| 89 | multiplex-and-swap noallocate strong octlet | 3 |
| 90 | multiplex-and-swap allocate weak octlet | 3 |
| 91 | multiplex-and-swap noallocate weak octlet | 3 |
| 92 | multiplex allocate strong octlet | 3 |
| 93 | multiplex noallocate strong octlet | 3 |
| 94 | multiplex allocate weak octlet | 3 |
| 95 | multiplex noallocate weak octlet | 3 |
| 96-255 | reserved | |

Icarus Request commands

A remote {add.swap.or.and} octlet request is data of the form:

| 63 ... 0 |
|---|
| address |
| bytes 0..7 |
| 64 |

A remote read incoherent {strong, weak} cache-line request is data of the form:

| 63 ... 0 |
|---|
| address |
| 64 |

A remote read coherent (strong,weak) cache-line request is data of the form:

| 63 ... 0 |
|---|
| address |
| coherence tag |
| 64 |

A remote write incoherent cache-line request is data of the form:

| 63 ... 0 |
|---|
| address |
| bytes 0..7 |
| bytes 8..15 |
| bytes 16..23 |
| bytes 24..31 |
| bytes 32..39 |
| bytes 40..47 |
| bytes 48..55 |
| bytes 56..63 |
| 64 |

A remote write coherent cache-line request is data of the form:

| 63 ... 0 |
|---|
| address |
| coherence tag |
| bytes 0..7 |
| bytes 8..15 |
| bytes 16..23 |
| bytes 24..31 |
| bytes 32..39 |
| bytes 40..47 |
| bytes 48..55 |
| bytes 56..63 |
| 64 |

A remote read (allocate,noallocate) (strong,weak) octlet request is data of the form:

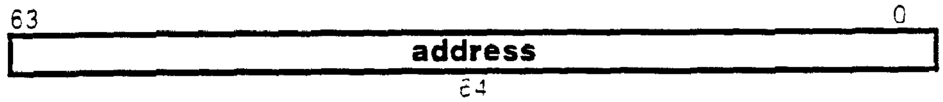


A remote write {allocare,noallocate} {strong.weak} octlet request is data of the form:

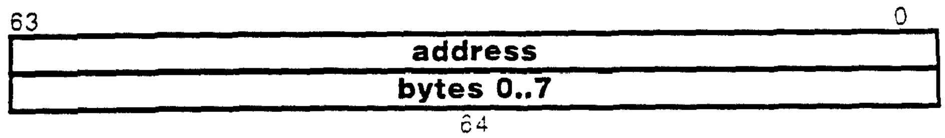


A remote read {allocate.noallocate} {strong.weak} hexlet request is data of the form:

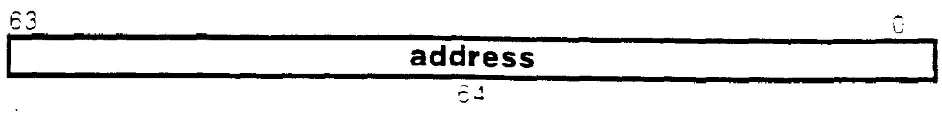


A remote write {allocate,noallocate} {strong,weak} hexlet request is data of the form:

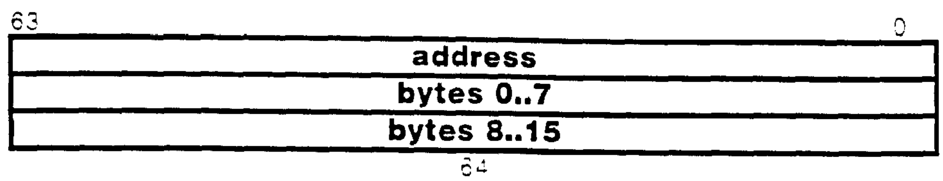


*Icarus Indication*

An Icarus Indication consists of a link-level write- response packet for each link-level write issued as an Icarus Request. Each link-level write-response packet contains the **lid** value of the link-level write-request packet. This serves both the link-level purpose of issuing a response and the ability to receive additional link-level requests and a transaction-level indication of receipt of the request and the ability to receive additional transaction-level requests.

*Icarus Response*

Icarus Responses consist of a series of one or more link-level write-octlet operations. The low-order bits of the addresses of the write operations contain commands and tid information, and the data is the contents read from memory.

The octlet stream contains transaction-level responses from the Terpsichore Responder daemon, which are summarized in the table below:

| com | command | payload (octlets) |
|---|---|---|
| 0 | termination | |
| 1..9 | continuation | |
| 10..22 | Reserved | |
| 23 | write response | 1 |
| 24..31 | Reserved | |

(continued)

| com | command | payload (octlets) |
|---|---|---|
| 32 | read/add/swap octlet response | 2 |
| 33 | read hexlet response | 3 |
| 34 | read incoherent cache-line response | 9 |
| 35 | read coherent cache-line response | 10 |
| 7-255 | reserved | |
| Icarus Response codes | | |

The **com** field contains an 8-bit message command, as given in the table previously.
The **tid** field contains the 8-bit transaction id code used in the request message.
The **node** field contains the 16-bit processor number used in the request message.
A remote (read,add,swap) octlet response is data of the form:

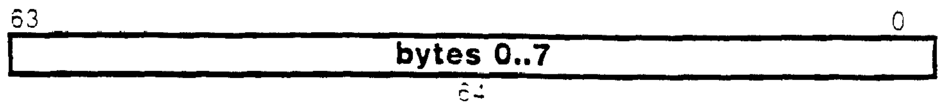


A remote read hexlet response is data of the form:

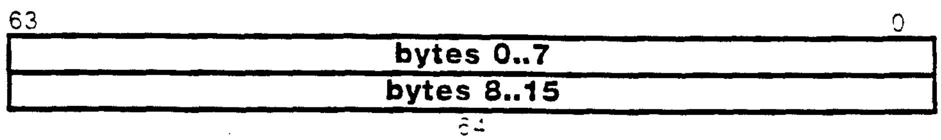


A remote read incoherent cache-line response is data of the form:

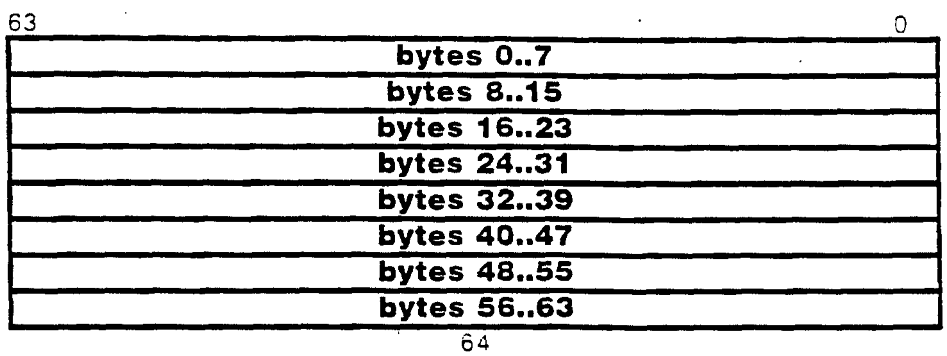


A remote write response is data of the form:

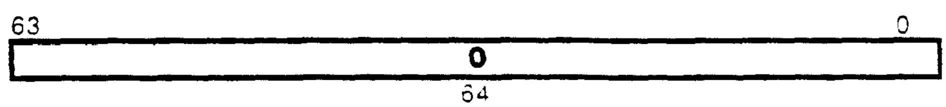


A remote read coherent cache-line response is data of the form:

| 63 … 0 |
|---|
| coherence tag |
| bytes 0..7 |
| bytes 8..15 |
| bytes 16..23 |
| bytes 24..31 |
| bytes 32..39 |
| bytes 40..47 |
| bytes 48..55 |
| bytes 56..63 |

64

A remote write coherent cache-line response is data of the form:

| 63 … 0 |
|---|
| coherence tag |

64

*Icarus Confirmation*

An Icarus Confirmation consists of a link-level write-response packet for each link-level write issued as an Icarus Response. Each link-level write-response packet contains the lid value of the link-level write-request packet. This serves both the link-level purpose of issuing a response and indicating the ability to receive additional link-level requests and a transaction-level confirmation of receipt of the response and the ability to receive additional transaction-level requests.

*Deadlock*

The Icarus Requester, Responder, and Transponder daemons must act cooperatively to avoid deadlock that may arise due to an imbalance of requests in the system which prevent responses from being routed to their destination.
The requirements vary depending upon the characteristics of the system configuration, and the mechanisms for deadlock avoidance are still under study.
Principal mechanisms to employ are cycle-free-routing of requests, and the means to prioritize responses above requests in forwarding priority.

*Error handling*

The link-level packets contain a check byte which is designed to detect single-bit transmisstion errors in the Hermes channel.
When either party in an Icarus transaction receives a packet with a check error, it immediately shuts down input processing to avoid encountering further errors, as may arise from errors which disrupt the parsing of packets. It also generates an error packet, which ensures that the other party is notified of the error.
The target of an Icarus transaction must maintain a copy of the link-level address of the most recent correctly received link-level write operation in a Cerberus register. Terpsichore then -will clear the error using the Cerberus channel, resetting the Hermes input processing. Each party then re-issues any outstanding link-level transactions.
The contents of the address field in the link-level protocol is used to ensure that the error handling mechanism does not result in missing or repeated operations. This is important, because unlike the link-level protocol, the transaction-level protocol contains non-idempotent operations.

# Appendices

## Fixed-point Applications

### Find Most-significant One

The following example performs a "find most-significant one" operation on general register ra, placing the result in general register rb.

```
E.ALMS      rb,ra
```

### Find Least-significant One

The following example performs a "find least-significant one" operation on general register ra, placing the result in general register rb.

```
E.ADDI      rb,ra,-1
E.ANDN      rb,rb,ra
E.ALMS      rb,rb
```

## Floating-point Applications

The following example demonstrates the inner loop of the Linpack benchmark.

This section is under construction.

## Digital Signal Processing Applications

This section is under construction.

## Image Processing Applications

The following examples demonstrate several applications, listed below in summary form with the performance estimated. The estimates assume single-cycle loads and stores, that is, they do not account for losses due to cache misses. However, the memory reference patterns are very uniform, and with prefetching, they could be kept invisible.

| Operation | pixels per cycle |
|---|---|
| 3x3 Filtering of Monochrome Image | 0.8 |
| 3x3 Filtering of Color Image | 0.2 |
| Conversion of Monochrome Image to Color | 2.0 |
| Conversion of Color Image to Monochrome | 1.0 |
| 5-point Horizontal Decimation of Monochrome Image | 0.9 |
| 5-point Vertical Decimation of Monochrome Image | 1.3 |
| 3x3 Decimation of Monochrome Image | 0.5 |
| 5-point Horizontal Decimation of Color Image | 0.2 |
| 5-point Vertical Decimation of Color Image | 0.3 |
| 3x3 Decimation of Color Image | 0.12 |

*Filtering of Monochrome Image*

Assume operands are 8 bits in size, which implies 16 pixels in a hexlet., 8 pixels in an octlet. We use a 3x3 linear filter. The coefficients are:

$$\begin{Bmatrix} k00 & k01 & k02 \\ k10 & k11 & k12 \\ k20 & k21 & k22 \end{Bmatrix}$$

No special handling on array boundaries are shown here, as it should have little effect on performance. A C version of the code is given below:

```
void MonochromeFilter(int8 *src, int8 *dst, int row, int pcount,
        int8 k00, int8 k01, int8 k02,
        int8 k10, int8 k11, int8 k12,
        int8 k20, int8 k21, int8 k22) {
    for (i=0; i!=pcount; i++) {
        dst[i] = (src[i-row-1]*k00 + src[i-row]*k01 + src[i-row+1]*k02 +
                src[i-1]*k10 + src[i]*k11 + src[i+1]*k12 +
                src[i+row-1]*k20 + src[i+row]*k21 + src[i+row+1]*k22)>>8;
    }
}
```

We now examine the assembler coding of the inner loop. Because there are eight pixels in an octlet, the input size of the multiplier, this loop filters eight pixels at once. The coefficients are placed in 9 registers symbolically named k00..k22, with a copy of coefficient in each byte of the register. We assume that the coefficients are scaled so that sum of products do not overflow a 16-bit integer accumulation, specifically, the sum of the absolute values of the coefficients <= 256. The row size is in the register symbolically named row. Registers 8,9,and 10 contain array pointers.

```
1:      A.SUB           r2,r8,row
        L.64            r3,-1(r2)
        G.MUL.8         r4,r3,k00
        L.64            r3,0(r2)
        G.MULADD.8      r4,r3,k01,r4
        L.64            r3,1(r2)
        G.MULADD.8      r4,r3,k02,r4
```

```
          L.64               r3.-1(r8)
          G.MULADD.8         r4.r3.k10.r4
          L.64               r3.0(r8)
          G.MULADD.8         r4.r3.k11.r4
          L.64               r3.1(r8)
          G.MULADD.8         r4.r3.k12.r4
          A.ADD              r2.r8.row
          L.64               r3.-1(r2)
          G.MULADD.8         r4.r3.k20.r4
          L.64               r3.0(r2)
          G.MULADD.8         r4.r3.k21.r4
          L.64               r3.1(r2)
          G.MULADD.8         r4.r3.k22.r4
          G.COMPRESS.16      r4.r4.8
          S.64               r4.0(r9)
          A.ADD              r8.8
          A.ADD              r9.8
          B.NE               r8.r10.1b
```

With some obvious reordering of the address computation instructions. this can run in 10 cycles. assuming single-cycle latency for G.MULADD. Loop unrolling can be used to handle greater latency. The inner loop is 10 cycles per eight pixels. or 0.8 pixels/cycle. Counting each multiply as 8 operations and each multiply and add as 16 operations. we are running at 8+8*16=136 operations/loop / 10 cycles/loop = 13.6 operations/cycle.

Note that our design actually loads each pixel nine times. which is making good use of "excess" load bandwidth and data caching.

## *Filtering of Color Image*

For a color image. we assume that the image is made up of pixels each 32 bits in size, 8 bits for each of red, green. blue. and alpha. We treat each component identically. so the same algorithm is used. but the offsets change slightly. A C version of the code is:

```
void ColorFilter(int8 *src. int8 *dst. int row. int pcount.
          int8 k00. int8 k01. int8 k02.
          int8 k10. int8 k11. int8 k12.
          int8 k20. int8 k21. int8 k22) {
     for (i=0: i!=4*pcount: i++) {
          dst[i] = (src[i-row-4]*k00 + src[i-row]*k01 + src[i-row+4]*k02 +
                    src[i-4]*k10 + src[i]*k11 + src[i+4]*k12 +
                    src[i+row-4]*k20 + src[i+row]*k21 + src[i+row+4]*k22)>>8;
     }
}
```

The assembler coding of the inner loop is:

```
1:        A.SUB              r2.r8.row
          L.64               r3.-4(r2)
          G.MUL.8            r4.r3.k00
          L.64               r3.0(r2)
          G.MULADD.8         r4.r3.k01.r4
          L.64               r3.4(r2)
          G.MULADD.8         r4.r3.k02.r4
          L.64               r3.-4(r8)
```

```
        G.MULADD.8          r4.r3.k10.r4
        L.64                r3.0(r8)
        G.MULADD.8          r4.r3.k11.r4
        L.64                r3.4(r8)
        G.MULADD.8          r4.r3.k12.r4
        A.ADD               r2.r8.row
        L.64                r3.-4(r2)
        G.MULADD.8          r4.r3.k20.r4
        L.64                r3.0(r2)
        G.MULADD.8          r4.r3.k21.r4
        L.64                r3.4(r2)
        G.MULADD.8          r4.r3.k22.r4
        G.COMPRESS.128      r4.r4.8
        S.64                r4.0(r9)
        A.ADD               r8.8
        A.ADD               r9.8
        B.NE                r8.r10.1b
```

This uses the same algorithm as for the color image above. Operations are performed at the same rate, but since a pixel is represented by 32 bits, the pixel rate is four times slower. The inner loop runs at 10 cycles per 2 pixels, or 0.2 pixels/cycle.

## *Conversion of Monochrome to Color*

To convert a monochrome image to a color image, we must triplicate each monochrome pixel level, into levels for red, green, and blue. The alpha level might be set to a constant level of 255, or merged in from a separate array.

```
void MonochromeToColor(int8 *src, int8 *dst, int pcount) {
    int i:

    for (i=0: i!=pcount: i++) {
        dst[i] = src[i]:
        dst[4*i+1] = src[i]:
        dst[4*i+2]= src[i]:
        dst[4*i+3] = 255:
    }
}
```

Which results in the following inner loop (addressing operations and loop overhead omitted - they do not influence the operation count):

```
1:      L.64.B              r4,0(r8)
        G.SHUFFLE.16        r2,r4,r4
        G.SHUFFLE.16        r8,r4,r5            #r5 contains -1
        G.SHUFFLE.8         r6,r2,r8
        G.SHUFFLE.8         r8,r3,r9
        S.128.B             r6,0(r9)
        S.128.B             r8,16(r9)
        A.ADD               r8,8
        A.ADD               r9,32
        B.NE                r8,r10,1b
```

The above sequence is 4 cycles per 8 pixels, or 2.0 pixels/cycle.

```
void MonochromeWithAlphaToColor(int8 *src, int8 *alpha, int8 *dst, int pcount) {
    int i:
```

```
    for (i=0. i!=pcount: i++) {
        dst[i] = src[i]:
        dst[4*i+1] = src[i]:
        dst[4*i+2]= src[i]:
        dst[4*i+3] = alpha[i]:
    }
}
```

Which results in the following inner loop:

```
1       L.64.B              r4.0(r8)
        L.64.B              r5.0(r9)
        G.SHUFFLE.16        r2.r4.r4
        G.SHUFFLE.16        r8.r4.r5
        G.SHUFFLE.8         r6.r2.r8
        G.SHUFFLE.8         r8.r3.r9
        S.128.B             r6.0(r10)
        S 128.B             r8.16(r10)
        A ADD               r8.8
        A.ADD               r9.8
        A.ADD               r10.32
        B NE                r8.r11.1b
```

The above sequence is 4 cycles per 8 pixels. or 2.0 pixels/cycle.

## Conversion of Color to Monochrome

To convert a color image to a monochrome image, a weighted sum of the red. green and blue components is generated. These weights. k0. k1, and k2, are selected so that k0+k1+k2 = 256, so overflow does not occur. The resulting weighted sum is truncated, rather than rounded, again, to avoid the possibility of overflow.

```
void ColorToMonochrome(int8 *src. int8 *dst. int pcount. int8 k0. int8 k1. int8 k2) {
    int i;

    for (i=0. i!=pcount: i++) {
        dst[i] = (src[4*i]*k0 + src[4*i+1]*k1 + src[4*i+2]*k2)>>8.
    }
}
```

Which results in the following inner loop:

```
        L.128.B             r2,0(r8)
        G.DEAL.16           r2.r2.r3            #k0k1...k0k1k200...k200
        L.128.B             r4.16(r8)
        G.DEAL.16           r6,r4,r5            #k0k1...k0k1k200...k200
        G.DEAL.8            r2,r2,r6            #k0k0...k0k0k1k1...k1k1
        G.DEAL.8            r4,r3,r7            #k2k2...k2k20000...0000
        G.MUL.8             r6,r2.k0
        G.MULADD.8          r6,r3.k1,r6
        G.MULADD.8          r6.r4.k2,r6
        G.COMPRESS.16       r6.r6.8             #toss away low precision
        S.64                r6.0(r9)
        A.ADD               r8.32
        A.ADD               r9.8
        B.NE                r8.r10.1b
```

The above sequence is 8 cycles and writes 8 pixels, or 1.0 pixels/cycle.

The code below performs the same action, but also saves the alpha value into a second destination array.

```
void ColorToMonochrome(int8 *src, int8 *dst, int8 *alpha, int pcount,
        int8 k0, int8 k1, int8 k2) {
    int i;

    for (i=0; i!=pcount; i++) {
        dst[i] = (src[4*i]*k0 + src[4*i+1]*k1 + src[4*i+2]*k2)>>8;
        alpha[i] = src[4*i+3];
    }
}
```

Which results in the following inner loop:

```
        L.128               r2,0(r8)
        G.DEAL.16           r2,r2,r3        #k0k1...k0k1k200...k200
        L.128               r4,16(r8)
        G.DEAL.16           r6,r4,r5        #k0k1...k0k1k200...k200
        G.DEAL.8            r2,r2,r6        #k0k0...k0k0k1k1...k1k1
        G.DEAL.8            r4,r3,r7        #k2k2...k2k20000...0000
        S.64                r5,0(r10)
        G.MUL.8             r6,r2,k0
        G.MULADD.8          r6,r3,k1,r6
        G.MULADD.8          r6,r4,k2,r6
        G.COMPRESS.16       r6,r6,8         #toss away low precision
        S.64                r6,0(r9)
        A.ADD               r8,32
        A.ADD               r9,8
        A.ADD               r10,8
        B.NE                r8,r10,1b
```

The above sequence is 8 cycles and writes 8 pixels, or 1.0 pixels/cycle.

## Image Warping

Image warping is the general process of selectively stretching and shrinking an image to make it appear to fit into a new shape, such as stretched around a sphere, or drawn on a surface that is tilted with respect to the viewing surface. A principal data structure used to generate such an effect is a set of decimated copies of the image, as shown in the diagram below. These are of particular value because interpolation of the elements of these copies produces a properly antialiased spatially-warped image. Note that the total size of this structure is always exactly four times larger than the original image. Each subarray is a copy of the image decimated in either the x or y direction, or both. The images get smaller and smaller going right and down in the array, until the image reaches a single dot. The original image need not be square or have sizes that are powers of two for this structure.

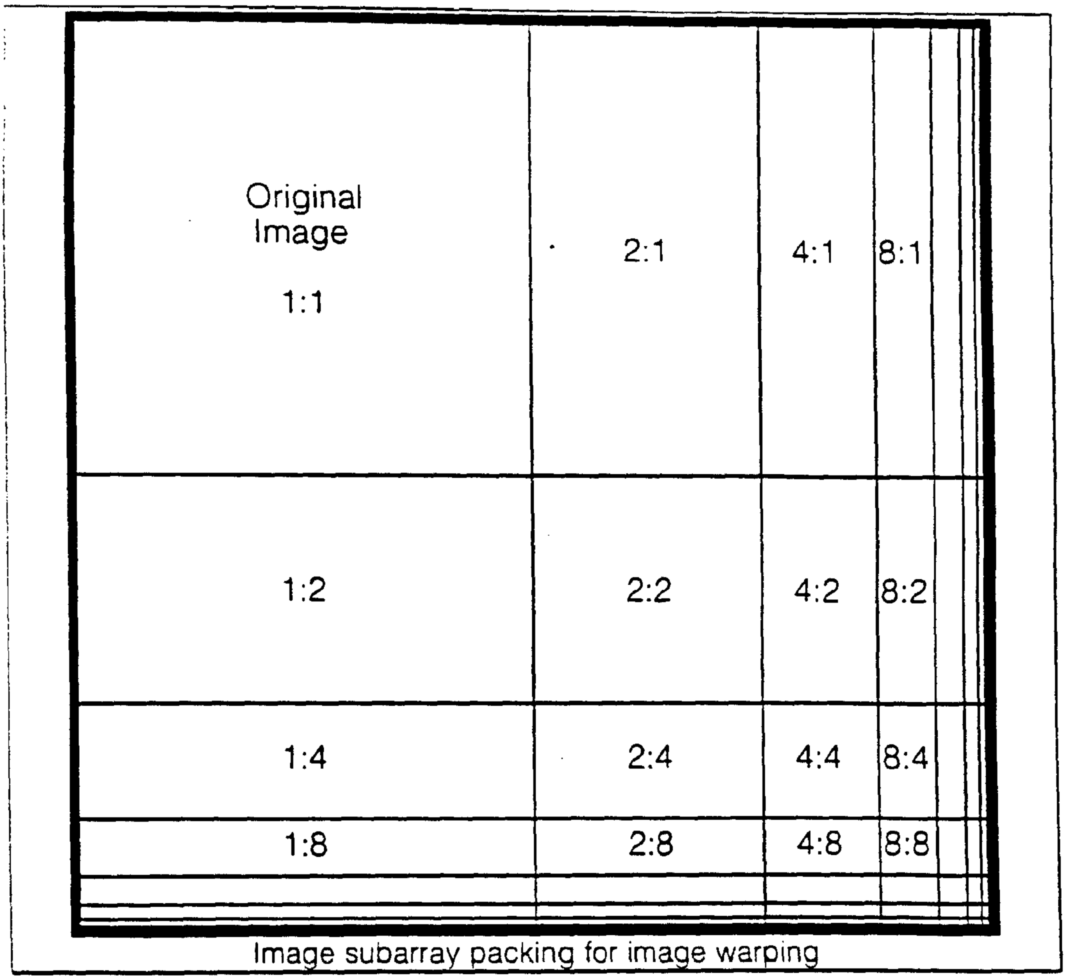


Image subarray packing for image warping

In the sections below, we explore two parts of the problem, the creation of the array containing this decimated image, and the antialiased selection of items in the table. These are the parts of the process which *must* be performed in real time for

real-time application of this process. the creation of the warping maps can often be precomputed. and are a function of the rendering system used.

## Decimation of Monochrome Image

The process of generating the decimated images above can be divided into two parts. decimating in the horizontal direction only. and decimating in the vertical direction only. The former generates all the blocks to the right of the original image. and the latter generates the remaining blocks from those in the top row. This divides the problem into two parts. each using one-dimensional filtering. which is a great advantage because the amount of computation grows only linearly with the size of the filter function. rather than quadratically. when using two-dimensional filtering.

Our first example is the one-dimensional horizontal filter. We use a 5-point filter. specified by coefficients k0..k4 to specify the filter. These weights. k0..k4. are selected so that k0+k1+k2+k3+k4 = 256. so overflow does not occur. The resulting weighted sum is truncated. rather than rounded. again. to avoid the possibility of overflow.

```
void HorizontalDecimationMonochrome(int8 *src. int 8 *dst. int srow. int drow. int pcount.
        int8 k0. int8 k1. int8 k2. int8 k3. int8 k4) {
    int i.j.k;

    for (k=0.i=0; k!=pcount; ) {
        for (j=0; j!=drow; j++) {
            dst[k++] = (src[i-2]*k0 + src[i-1]*k1 + src[i]*k2 +
                    src[i+1]*k3 + src[i+2]*k4 )>>8;
            i+=2;
        }
        i+=srow-drow-drow;
    }
}
```

Which results in the following inner loop:

```
1:      L.128           r6.-2(r8)
        G.DEAL.8        r6.r6.r7
        G.MUL.8         r4.r6.k0
        G.MULADD.8      r4.r7.k1.r4
        L.128           r6.0(r8)
        G.DEAL.8.       r6.r6.r7
        G.MULADD.8      r4.r6.k2.r4
        G.MULADD.8      r4.r7.k3.r4
        L.128           r6.2(r8)
        G.DEAL.8        r6.r6.r7
        G.MULADD.8      r4.r6.k4.r4
        G.COMPRESS.16   r4.r4.8
        S.64            r4.0(r9)
        A.ADD           r8.16
        A.ADD           r9.8
        B.NE            r8.r10.1b
```

This inner loop is 9 cycles per 8 pixels, or 0.9 Gpixels/sec, when the filter kernel size is 5 pixels wide. (For 3 pixels wide, the rate is 6 cycles per 8 pixels. or 1.3 pixels/cycle.)

When decimating in the vertical direction, the rate is even higher still:

```
void VerticalDecimationMonochrome(int8 *src, int 8 *dst, int srow, int drow, int pcount,
        int8 k0, int8 k1, int8 k2, int8 k3, int8 k4) {
    int i,j,k;

    for (k=0,i=0; k!=pcount; ) {
        for (j=0; j!=drow; j++) {
            dst[k++] = (src[i-2*srow]*k0 + src[i-srow]*k1 + src[i]*k2 +
                    src[i+srow]*k3 + src[i+2*srow]*k4 )>>8;
            i++;
        }
        i+=srow+srow-drow;
    }
}
```

Which results in the following inner loop:

```
1       A.SUB           r2,r8,rowt2
        L.64            r3,0(r2)
        G.MUL.8         r4,r3,k0
        A.SUB           r2,r8,row
        L.64            r3,0(r2)
        G.MULADD.8      r4,r3,k1,r4
        L.64            r3,0(r8)
        G.MULADD.8      r4,r3,k2,r4
        A.ADD           r2,r8,row
        L.64            r3,0(r2)
        G.MULADD.8      r4,r3,k3,r4
        A.ADD           r2,r8,rowt2
        L.64            r3,0(r2)
        G.MULADD.8      r4,r3,k4,r4
        G.COMPRESS.16   r4,r4,8
        S.64            r4,0-8(r9)
        A.ADD           r8,8
        A.ADD           r9,8
        B.NE            r8,r10,1b
```

This runs in 6 cycles per 8 pixels, or 1.3 pixels/cycle. (For 3 pixels wide, the rate is 4 cycles per 8 pixels, or 2 pixels/cycle.)

To generate the decimated array shown above, for a $n^2$ image, $n^2$ pixels are generated in the horizontal direction, and $2n^2$ pixels are generated in the vertical direction. Using 5 pixel filter functions, this takes: $n^2/0.9 + 2n^2/1.3 = n^2*(1/0.9+2/1.3) = 2.63*n^2$ cycles. Thus, a $1024^2$ image can be decimated in 2.8 Mcycles.

It is also possible to simultaneously decimate in the vertical and horizontal direction. While this may be more expensive that separately decimating in each direction, it permits the use of filter functions which do not factor into two parts. For this example, we assume a 2:1 decimation rate in each direction, and a 3x3 filter kernel. Real applications of decimation may use larger filter kernels, but this size serves to illustrate the techniques used. We assume here that pcount is a multiple of drow, and that drow<srow/2..

```
void DecimateMonochrome(int8 *src, int 8 *dst, int srow, int drow, int pcount,
        int8 k00, int8 k01, int8 k02,
```

```
        int8 k10, int8 k11, int8 k12,
        int8 k20, int8 k21, int8 k22) {
    int i,j,k;

    for (k=0,i=0; k!=pcount; ) {
        for (j=0; j!=drow; j++) {
            dst[k++] = (src[i-srow-1]*k00 + src[i-srow]*k01 + src[i-srow+1]*k02 +
                src[i-1]*k10 + src[i]*k11 + src[i+1]*k12 +
                src[i+srow-1]*k20 + src[i+srow]*k21 + src[i+srow+1]*k22)>>8;
            i+=2;
        }
        i+=2*(srow-drow);
    }
}
```

Assembler code for inner loop:

```
1:      A.SUB               r2,r8,srow
        L.128               r6,-1(r2)
        G.DEAL.8            r6,r6,r7
        G.MUL.8             r4,r6,k00
        G.MULADD.8          r4,r7,k01,r4
        L.128               r6,1(r2)
        G.DEAL.8            r6,r6,r7
        G.MULADD.8          r4,r6,k02,r4
        L.128               r6,-1(r8)
        G.DEAL.8            r6,r6,r7
        G.MULADD.8          r4,r6,k10,r4
        G.MULADD.8          r4,r7,k11,r4
        L.128               r6,1(r8)
        G.DEAL.8            r6,r6,r7
        G.MULADD.8          r4,r6,k12,r4
        A.ADD               r2,r8,srow
        L.128               r6,-1(r2)
        G.DEAL.8            r6,r6,r7
        G.MULADD.8          r4,r6,k00,r4
        G.MULADD.8          r4,r7,k01,r4
        L.128               r6,1(r2)
        G.DEAL.8            r6,r6,r7
        G.MULADD.8          r4,r6,k02,r4
        G.COMPRESS.16       r4,r4,8
        S.64                r4,0(r9)
        A.ADD               r8,16
        A.ADD               r9,8
        B.NE                r8,r10,1b
```

After some reordering of the address calculation instructions, the inner loop is 16 cycles per 8 pixels, or 0.5 pixels/cycle. Note that for 2:1 decimation in each direction, this is 4 times larger when expressed in terms of the input pixel rate: 2.0 pixels/cycle.

Because the filter function is an odd-number of pixels wide, 1/4 of the multiply bandwidth is effectively unused. For a 5x5 filter function, this would drop to 1/6 unused, and for an even number of pixels wide, none would be wasted. Compared to the two-dimensional filtering case, the multiplier bandwidth is less utilized because the index multiplier required the additional DEAL operations to be added.

## Decimation of Color Image

Our first example is the one-dimensional horizontal filter. We use a 5-point filter, specified by coefficients k0..k4 to specify the filter. These weights, k0..k4, are selected so that k0+k1+k2+k3+k4 = 256, so overflow does not occur. The resulting weighted sum is truncated, rather than rounded, again, to avoid the possibility of overflow.

```
void HorizontalDecimationColor(int8 *src, int 8 *dst, int srow, int drow, int pcount,
        int8 k0, int8 k1, int8 k2, int8 k3, int8 k4) {
    int i,j,k;

    for (k=0,i=0; k!=pcount; ) {
        for (j=0; j!=drow; j++) {
            dst[k++] = (src[i-8]*k0 + src[i-4]*k1 + src[i]*k2 +
                    src[i+4]*k3 + src[i+8]*k4 )>>8;
            i++;
            dst[k++] = (src[i-8]*k0 + src[i-4]*k1 + src[i]*k2 +
                    src[i+4]*k3 + src[i+8]*k4 )>>8;
            i++;
            dst[k++] = (src[i-8]*k0 + src[i-4]*k1 + src[i]*k2 +
                    src[i+4]*k3 + src[i+8]*k4 )>>8;
            i++;
            dst[k++] = (src[i-8]*k0 + src[i-4]*k1 + src[i]*k2 +
                    src[i+4]*k3 + src[i+8]*k4 )>>8;
            i+=5;
        }
        i+=4*(srow+srow-drow-drow);
    }
}
```

Which results in the following inner loop:

```
1:      L.128           r6,-8(r8)
        G.DEAL.32       r6,r6,r7
        G.MUL.8         r4,r6,k0
        G.MULADD.8      r4,r7,k1,r4
        L.128           r6,0(r8)
        G.DEAL.32       r6,r6,r7
        G.MULADD.8      r4,r6,k2,r4
        G.MULADD.8      r4,r7,k3,r4
        L.128           r6,8(r8)
        G.DEAL.32       r6,r6,r7
        G.MULADD.8      r4,r6,k4,r4
        G.COMPRESS.16   r4,r4,8
        S.64            r4,0(r9)
        A.ADD           r8,16
        A.ADD           r9,8
        B.NE            r8,r10,1b
```

This inner loop is 9 cycles per 2 pixels, or 0.2 pixels/cycle, when the filter kernel size is 5 pixels wide. (For 3 pixels wide, the rate is 6 cycles per 2 pixels, or 0.3 pixels/cycle.)

When decimating in the vertical direction, the rate is even higher still:

```
void VerticalDecimationColor(int8 *src, int 8 *dst, int srow, int drow, int pcount,
        int8 k0, int8 k1, int8 k2, int8 k3, int8 k4) {
```

```
int i,j,k;

for (k=0,i=0; k!=pcount; ) {
    for (j=0; j!=4*drow; j++) {
        dst[k++] = (src[i-8*srow]*k0 + src[i-4*srow]*k1 + src[i]*k2 +
                src[i+4*srow]*k3 + src[i+8*srow]*k4 )>>8;
        i++;
    }
    i+=4*(srow+srow-drow);
}
}
```

Which results in the following inner loop:

```
1:      A.SUB           r2,r8,rowt8
        L.64            r3,0(r2)
        G.MUL.8         r4,r3,k0
        A.SUB           r2,r8,rowt4
        L.64            r3,0(r2)
        G.MULADD.8      r4,r3,k1,r4
        L.64            r3,0(r8)
        G.MULADD.8      r4,r3,k2,r4
        A.ADD           r2,r8,rowt4
        L.64            r3,0(r2)
        G.MULADD.8      r4,r3,k3,r4
        A.ADD           r2,r8,rowt8
        L.64            r3,0(r2)
        G.MULADD.8      r4,r3,k4,r4
        G.COMPRESS.16   r4,r4,8
        S.64            r4,0-8(r9)
        B.NE            r8,r10,1b
```

This runs in 6 cycles per 2 pixels, or 0.3 pixels/cycle. (For 3 pixels wide, the rate is 4 cycles per 2 pixels, or 0.5 pixels/cycle.)

To generate the decimated array shown above, for a $n^2$ image, $n^2$ pixels are generated in the horizontal direction, and $2n^2$ pixels are generated in the vertical direction. Using 5 pixel filter functions, this takes: $n^2/0.2 + 2n^2/0.3 = n^2*(1/0.2+2/0.3) = 10.5*n^2$ cycles. Thus, a $1024^2$ image can be decimated in 11 Mcycles.

The last example in this section decimates a color signal in both directions simultaneously. We assume a 2:1 decimation rate in each direction, and a 3x3 filter kernel. Real applications of decimation may use larger filter kernels, but this size serves to illustrate the techniques used. We assume here that pcount is a multiple of drow, and that drow<srow/2..

```
void DecimateColor(int8 *src, int 8 *dst, int srow, int drow, int pcount,
        int8 k00, int8 k01, int8 k02,
        int8 k10, int8 k11, int8 k12,
        int8 k20, int8 k21, int8 k22) {
    int i,j,k;

    for (k=0,i=0; k!=4*pcount; ) {
        for (j=0; j!=drow; j++) {
            dst[k++]=(src[i-4*srow-4]*k00 + src[i-4*srow]*k01 + src[i-4*srow+4]*k02 +
                src[i-4]*k10 + src[i]*k11 + src[i+4]*k12 +
```

```
                src[i+4*srow-4]*k20 + src[i+4*srow]*k21 + src[i+4*srow+4]*k22)>>8;
            i++;
            dst[k++]=(src[i-4*srow-4]*k00 + src[i-4*srow]*k01 + src[i-4*srow+4]*k02 +
                src[i-4]*k10 + src[i]*k11 + src[i+4]*k12 +
                src[i+4*srow-4]*k20 + src[i+4*srow]*k21 + src[i+4*srow+4]*k22)>>8;
            i++;
            dst[k++]=(src[i-4*srow-4]*k00 + src[i-4*srow]*k01 + src[i-4*srow+4]*k02 +
                src[i-4]*k10 + src[i]*k11 + src[i+4]*k12 +
                src[i+4*srow-4]*k20 + src[i+4*srow]*k21 + src[i+4*srow+4]*k22)>>8;
            i++;
            dst[k++]=(src[i-4*srow-4]*k00 + src[i-4*srow]*k01 + src[i-4*srow+4]*k02 +
                src[i-4]*k10 + src[i]*k11 + src[i+4]*k12 +
                src[i+4*srow-4]*k20 + src[i+4*srow]*k21 + src[i+4*srow+4]*k22)>>8;
            i+=5;
        }
        i+=4*(srow+srow-drow-drow);
    }
}
```

Assembler code for inner loop:

```
1.      A.SUB           r2,r8,srow
        L.128           r6,-4(r2)
        G.DEAL.32       r6,r6
        G.MUL.8         r4,r6,k00
        G.MULADD.8      r4,r7,k01,r4
        L.128           r6,4(r2)
        G.DEAL.32       r6,r6
        G.MULADD.8      r4,r6,k02,r4
        L.128           r6,-4(r8)
        G.DEAL.32       r6,r6
        G.MULADD.8      r4,r6,k10,r4
        G.MULADD.8      r4,r7,k11,r4
        L.128           r6,4(r8)
        G.DEAL.32       r6,r6
        G.MULADD.8      r4,r6,k12,r4
        A.ADD           r2,r8,srow
        L.128           r6,-4(r2)
        G.DEAL.32       r6,r6
        G.MULADD.8      r4,r6,k00,r4
        G.MULADD.8      r4,r7,k01,r4
        L.128           r6,4(r2)
        G.DEAL.32       r6,r6
        G.MULADD.8      r4,r6,k02,r4
        G.COMPRESS.16   r4,r4,8
        S.64            r4,0(r9)
        A.ADD           r8,16
        A.ADD           r9,8
        B.NE            r8,r10,1b
```

After some reordering of the address calculation instructions, the inner loop is 16 cycles per 2 pixels, or 0.12 pixels/cycle.

## *Fractional Interpolation*

This section is under construction.

## *Image Compression Applications*

The following examples demonstrate key portions of JPEG and MPEG image compression applications. Both JPEG and MPEG applications rely on the use of a 2-dimensional Discrete Cosine Transform (DCT) to transform raster-image data into a frequency-based representation that is more amenable to entropy coding.

The following examples demonstrate several applications, listed below in summary form with the performance estimated. The estimates assume single-cycle loads and stores, that is, they do not account for losses due to cache misses. However, the memory reference patterns are very uniform, and with prefetching, they could be kept invisible.

| Operation | cycles per pixel |
|---|---|
| Internal 8x8 Matrix Transpose | 0.4 |
| 1-D Fixed-point 8-point Discrete Cosine Transform | 1.0 |
| 2-D Fixed-point 8-by-8 Discrete Cosine Transform | 2.8 |
| 1-D Floating-point 8-point Discrete Cosine Transform | 0.6 |
| 2-D Floating-point 8-by-8 Discrete Cosine Transform | 1.9 |
| 2-D Fixed-point 8-by-8 Discrete Cosine Transform for JPEG | 2.3 |
| 2-D Floating-point 8-by-8 Discrete Cosine Transform for JPEG | 1.4 |

### *Internal 8x8 Matrix Transpose*

A 2-dimensional DCT can be performed on an 8-by-8 matrix of data by doing a series of 1-dimensional DCTs on each of the 8 rows of the matrix, and on each of the 8 columns of the matrix. A useful means to implement these operations is to perform a DCT on the rows (or columns) of the matrix, transpose the matrix, then perform a second, identical DCT, then transport the matrix again.

This example details the transposition of an 8-by-8 matrix of 16-bit values, stored consecutively in memory. The calculation is performed entirely in registers, using G.SHUFFLE instructions and a technique described in [60], in which the first and second halves of the matrix are shuffled $\log_2 N$ times.

Assume the matrix originally is in the order:

$$\begin{bmatrix} 0 & 1 & 2 & 3 & 4 & 5 & 6 & 7 \\ 8 & 9 & 10 & 11 & 12 & 13 & 14 & 15 \\ 16 & 17 & 18 & 19 & 20 & 21 & 22 & 23 \\ 24 & 25 & 26 & 27 & 28 & 29 & 30 & 31 \\ 32 & 33 & 34 & 35 & 36 & 37 & 38 & 39 \\ 40 & 41 & 42 & 43 & 44 & 45 & 46 & 47 \\ 48 & 49 & 50 & 51 & 52 & 53 & 54 & 55 \\ 56 & 57 & 58 & 59 & 60 & 61 & 62 & 63 \end{bmatrix}$$

[60] Stone, Harold, "Parallel Processing with the Perfect Shuffle," IEEE Transactions on Computers, Vol C-20, No. 2, February 1971, 153

After one shuffling, the matrix is in the order:

$$\begin{bmatrix} 0 & 32 & 1 & 33 & 2 & 34 & 3 & 35 \\ 4 & 36 & 5 & 37 & 6 & 38 & 7 & 39 \\ 8 & 40 & 9 & 41 & 10 & 42 & 11 & 43 \\ 12 & 44 & 13 & 45 & 14 & 46 & 15 & 47 \\ 16 & 48 & 17 & 49 & 18 & 50 & 19 & 51 \\ 20 & 52 & 21 & 53 & 22 & 54 & 23 & 55 \\ 24 & 56 & 25 & 27 & 26 & 58 & 27 & 59 \\ 28 & 60 & 29 & 61 & 30 & 62 & 31 & 63 \end{bmatrix}$$

After a second shuffling, the matrix is in the order:

$$\begin{bmatrix} 0 & 16 & 32 & 48 & 1 & 17 & 33 & 49 \\ 2 & 18 & 34 & 50 & 3 & 19 & 35 & 51 \\ 4 & 20 & 36 & 52 & 5 & 21 & 37 & 53 \\ 6 & 22 & 38 & 54 & 7 & 23 & 39 & 55 \\ 8 & 24 & 40 & 56 & 9 & 25 & 41 & 57 \\ 10 & 26 & 42 & 58 & 11 & 27 & 43 & 59 \\ 12 & 28 & 44 & 60 & 13 & 29 & 45 & 61 \\ 14 & 30 & 46 & 62 & 15 & 31 & 47 & 63 \end{bmatrix}$$

After a third shuffling, the matrix is in the order:

$$\begin{bmatrix} 0 & 8 & 16 & 24 & 32 & 40 & 48 & 56 \\ 1 & 9 & 17 & 25 & 33 & 41 & 49 & 57 \\ 2 & 10 & 18 & 26 & 34 & 42 & 50 & 58 \\ 3 & 11 & 19 & 27 & 35 & 43 & 51 & 59 \\ 4 & 12 & 20 & 28 & 36 & 44 & 52 & 60 \\ 5 & 13 & 21 & 29 & 37 & 45 & 53 & 61 \\ 6 & 14 & 22 & 30 & 38 & 46 & 54 & 62 \\ 7 & 15 & 23 & 31 & 39 & 47 & 55 & 63 \end{bmatrix}$$

C code for procedure:

```
void Matrix8By8Transpose(int16 *src, int16 *dst) {
     int16 tm0[64];
     int16 tm1[64];
     int i;

     for (i=0; i<32; i++) { tm0[2*i] = src[i]; tm0[2*i+1] = src[i+32]; }
     for (i=0; i<32; i++) { tm1[2*i] = tm0[i]; tm1[2*i+1] = tm0[i+32]; }
     for (i=0; i<32; i++) { dst[2*i] = tm1[i]; dst[2*i+1] = tm1[i+32]; }
}
```

Assembler code for procedure:

```
_Matrix8By8Transpose:
          L.128.I          r4,r2,0          # 00 01 02 03 04 05 06 07
          L.128.I          r12,r2,64        # 32 33 34 35 36 37 38 39
            G.SHUFFLE.8    r20,r4,r12       # 00 32 01 33 02 34 03 35
          L.128.I          r6,r2,16         # 08 09 10 11 12 13 14 15
            G.SHUFFLE.8    r22,r5,r13       # 04 36 05 37 06 38 07 39
          L.128.I          r14,r2,80        # 40 41 42 43 44 45 46 47
            G.SHUFFLE.8    r24,r6,r14       # 08 40 09 41 10 42 11 43
          L.128.I          r8,r2,32         # 16 17 18 19 20 21 22 23
```

```
  G.SHUFFLE.8     r26.r7.r15      # 12 44 13 45 14 46 15 47
L.128.I           r16.r2.96       # 48 49 50 51 52 53 54 55
  G.SHUFFLE.8     r28.r8.r16      # 16 48 17 49 18 50 19 51
L.128.I           r10.r2.48       # 24 25 26 27 28 29 30 31
  G.SHUFFLE.8     r30.r9.r17      # 20 52 21 53 22 54 23 55
L.128.I           r18.r2.112      # 56 57 58 59 60 61 62 63
  G.SHUFFLE.8     r32.r10.r18     # 24 56 25 57 26 58 27 59
G.SHUFFLE.8       r34.r11.r19     # 28 60 29 61 30 62 31 63

G.SHUFFLE.8       r4.r20.r28      # 00 16 32 48 01 17 33 49
G.SHUFFLE.8       r6.r21.r29      # 02 18 34 50 03 19 35 51
G.SHUFFLE.8       r8.r22.r30      # 04 20 36 52 05 21 37 53
G.SHUFFLE.8       r10.r23.r31     # 06 22 38 54 07 23 39 55
G.SHUFFLE.8       r12.r24.r32     # 08 24 40 56 09 25 41 57
G.SHUFFLE.8       r14.r25.r33     # 10 26 42 58 11 27 43 59
G.SHUFFLE.8       r16.r26.r34     # 12 28 44 60 13 29 45 61
G.SHUFFLE.8       r18.r27.r35     # 14 30 46 62 15 31 47 63

G.SHUFFLE.8       r20.r4.r12      # 00 08 16 24 32 40 48 56
  S.128.I         r20.r3.0
G.SHUFFLE.8       r22.r5.r13      # 01 09 17 25 33 41 49 57
  S.128.I         r22.r3.16
G.SHUFFLE.8       r24.r6.r14      # 02 10 18 26 34 42 50 58
  S.128.I         r24.r3.32
G.SHUFFLE.8       r26.r7.r15      # 03 11 19 27 35 43 51 59
  S.128.I         r26.r3.48
G.SHUFFLE.8       r28.r8.r16      # 04 12 20 28 36 44 52 60
  S.128.I         r28.r3.64
G.SHUFFLE.8       r30.r9.r17      # 05 13 21 29 37 45 53 61
  S.128.I         r30.r3.80
G.SHUFFLE.8       r32.r10.r18     # 06 14 22 30 38 46 54 62
  S.128.I         r32.r3.96
G.SHUFFLE.8       r34.r11.r19     # 07 15 23 31 39 47 55 63
  S.128.I         r34.r3.112
  B               r0
```

The resulting code transposes an 8-by-8 matrix using 25 cycles.

## *1-Dimensional Discrete Cosine Transform*

The following code is based upon the Independent JPEG Group's software "jfwddct.c"[61], using 16-bit multiplies generating a 32-bit result.

```
#include "jinclude.h"

#define RIGHT_SHIFT(x,shft)  ((x) >> (shft))
#define LG2_DCT_SCALE 15  /* lose a little precision to avoid overflow */
#define ONE   ((INT32) 1)
#define DCT_SCALE (ONE << LG2_DCT_SCALE)

/* In some places we shift the inputs left by a couple more bits, */
/* so that they can be added to fractional results without too much */
/* loss of precision. */
#define LG2_OVERSCALE 2
#define OVERSCALE (ONE << LG2_OVERSCALE)
#define OVERSHIFT(x) ((x) <<= LG2_OVERSCALE)
```

---

[61]Copyright (C) 1991, Thomas G. Lane.

```
/* Scale a fractional constant by DCT_SCALE */
#define FIX(x)  ((INT32) ((x) * DCT_SCALE + 0.5))

/* Scale a fractional constant by DCT_SCALE/OVERSCALE */
/* Such a constant can be multiplied with an overscaled input */
/* to produce something that's scaled by DCT_SCALE */
#define FIXO(x)  ((INT32) ((x) * DCT_SCALE / OVERSCALE + 0.5))

/* Descale and correctly round a value that's scaled by DCT_SCALE */
#define UNFIX(x)   RIGHT_SHIFT((x) + (ONE << (LG2_DCT_SCALE-1)), LG2_DCT_SCALE)

/* Same with an additional division by 2, ie. correctly rounded UNFIX(x/2) */
#define UNFIXH(x)  RIGHT_SHIFT((x) + (ONE << LG2_DCT_SCALE), LG2_DCT_SCALE+1)

/* Take a value scaled by DCT_SCALE and round to integer scaled by OVERSCALE */
#define UNFIXO(x)  RIGHT_SHIFT((x) + (ONE << (LG2_DCT_SCALE-1-LG2_OVERSCALE)),\
                   LG2_DCT_SCALE-LG2_OVERSCALE)

/* Here are the constants we need */
/* SIN_i_j is sine of i*pi/j, scaled by DCT_SCALE */
/* COS_i_j is cosine of i*pi/j, scaled by DCT_SCALE */

#define SIN_1_4 FIX(0.707106781)
#define COS_1_4 SIN_1_4

#define SIN_1_8 FIX(0.382683432)
#define COS_1_8 FIX(0.923879533)
#define SIN_3_8 COS_1_8
#define COS_3_8 SIN_1_8

#define SIN_1_16 FIX(0.195090322)
#define COS_1_16 FIX(0.980785280)
#define SIN_7_16 COS_1_16
#define COS_7_16 SIN_1_16

#define SIN_3_16 FIX(0.555570233)
#define COS_3_16 FIX(0.831469612)
#define SIN_5_16 COS_3_16
#define COS_5_16 SIN_3_16

/* OSIN_i_j is sine of i*pi/j, scaled by DCT_SCALE/OVERSCALE */
/* OCOS_i_j is cosine of i*pi/j, scaled by DCT_SCALE/OVERSCALE */

#define OSIN_1_4 FIXO(0.707106781)
#define OCOS_1_4 OSIN_1_4

#define OSIN_1_8 FIXO(0.382683432)
#define OCOS_1_8 FIXO(0.923879533)
#define OSIN_3_8 OCOS_1_8
#define OCOS_3_8 OSIN_1_8

#define OSIN_1_16 FIXO(0.195090322)
#define OCOS_1_16 FIXO(0.980785280)
#define OSIN_7_16 OCOS_1_16
#define OCOS_7_16 OSIN_1_16

#define OSIN_3_16 FIXO(0.555570233)
```

```
#define OCOS_3_16 FIXO(0.831469612)
#define OSIN_5_16 OCOS_3_16
#define OCOS_5_16 OSIN_3_16


/*
 * Perform a 1-dimensional DCT.
 * Note that this code is specialized to the case DCTSIZE = 8.
 */

INLINE
LOCAL void
fast_dct_8 (DCTELEM *in, int stride)
{
  /* many tmps have nonoverlapping lifetime -- flashy register colourers
   * should be able to do this lot very well
   */
  INT16 in0, in1, in2, in3, in4, in5, in6, in7;
  INT16 tmp0, tmp1, tmp2, tmp3, tmp4, tmp5, tmp6, tmp7;
  INT16 tmp10, tmp11, tmp12, tmp13;
  INT16 tmp14, tmp15, tmp16, tmp17;
  INT16 tmp25, tmp26;

  in0 = in[       0];
  in1 = in[stride  ];
  in2 = in[stride*2];
  in3 = in[stride*3];
  in4 = in[stride*4];
  in5 = in[stride*5];
  in6 = in[stride*6];
  in7 = in[stride*7];

  tmp0 = in7 + in0;
  tmp1 = in6 + in1;
  tmp2 = in5 + in2;
  tmp3 = in4 + in3;
  tmp4 = in3 - in4;
  tmp5 = in2 - in5;
  tmp6 = in1 - in6;
  tmp7 = in0 - in7;

  tmp10 = tmp3 + tmp0;
  tmp11 = tmp2 + tmp1;
  tmp12 = tmp1 - tmp2;
  tmp13 = tmp0 - tmp3;

  in[       0] = (DCTELEM) UNFIXH((tmp10 + tmp11) * SIN_1_4);
  in[stride*4] = (DCTELEM) UNFIXH((tmp10 - tmp11) * COS_1_4);

  in[stride*2] = (DCTELEM) UNFIXH(tmp13*COS_1_8 + tmp12*SIN_1_8);
  in[stride*6] = (DCTELEM) UNFIXH(tmp13*SIN_1_8 - tmp12*COS_1_8);

  tmp16 = UNFIXO((tmp6 + tmp5) * SIN_1_4);
  tmp15 = UNFIXO((tmp6 - tmp5) * COS_1_4);

  OVERSHIFT(tmp4);
  OVERSHIFT(tmp7);
```

```
/* tmp4, tmp7, tmp15, tmp16 are overscaled by OVERSCALE */

tmp14 = tmp4 + tmp15;
tmp25 = tmp4 - tmp15;
tmp26 = tmp7 - tmp16;
tmp17 = tmp7 + tmp16;

in[stride  ] = (DCTELEM) UNFIXH(tmp17*OCOS_1_16 + tmp14*OSIN_1_16);
in[stride*7] = (DCTELEM) UNFIXH(tmp17*OCOS_7_16 - tmp14*OSIN_7_16);
in[stride*5] = (DCTELEM) UNFIXH(tmp26*OCOS_5_16 + tmp25*OSIN_5_16);
in[stride*3] = (DCTELEM) UNFIXH(tmp26*OCOS_3_16 - tmp25*OSIN_3_16);
}


/*
 * Perform the forward DCT on one block of samples.
 *
 * A 2-D DCT can be done by 1-D DCT on each row
 * followed by 1-D DCT on each column
 */

GLOBAL void
j_fwd_dct (DCTBLOCK data)
{
  int i;

  for (i = 0; i < DCTSIZE; i++)
    fast_dct_8(data+i*DCTSIZE, 1);

  for (i = 0; i < DCTSIZE; i++)
    fast_dct_8(data+i, DCTSIZE);
}
```

The assembler code for the above procedure, called with stride=8, is as follows:

```
_fast_dct_8:
        L.128.I         r4,r2,0         # in0 = in[      0];
        L.128.I         r6,r2,16        # in1 = in[stride  ];
        L.128.I         r8,r2,32        # in2 = in[stride*2];
        L.128.I         r10,r2,48       # in3 = in[stride*3];
        L.128.I         r12,r2,64       # in4 = in[stride*4];
        L.128.I         r14,r2,80       # in5 = in[stride*5];
        L.128.I         r16,r2,96       # in6 = in[stride*6];
        L.128.I         r18,r2,112      # in7 = in[stride*7];
        G.ADD.16        r20,r18,r4      # tmp0 = in7 + in0;
        G.ADD.16        r22,r16,r6      # tmp1 = in6 + in1;
        G.ADD.16        r24,r14,r8      # tmp2 = in5 + in2;
        G.ADD.16        r26,r12,r10     # tmp3 = in4 + in3;
        G.SUB.16        r28,r10,r12     # tmp4 = in3 - in4;
        G.SUB.16        r30,r8,r14      # tmp5 = in2 - in5;
        G.SUB.16        r32,r6,r16      # tmp6 = in1 - in6;
        G.SUB.16        r34,r4,r18      # tmp7 = in0 - in7;
        G.ADD.16        r36,r26,r20     # tmp10 = tmp3 + tmp0;
        G.ADD.16        r38,r24,r22     # tmp11 = tmp2 + tmp1;
        G.SUB.16        r40,r22,r24     # tmp12 = tmp1 - tmp2;
        G.SUB.16        r42,r20,r26     # tmp13 = tmp0 - tmp3;
        G.ADD.16        r48,r36,r38     #  = tmp10 + tmp11
        G.MULADD.16     r44,r48,$SIN_1_4,$32768
        G.MULADD.16     r46,r49,$SIN_1_4,$32768
```

```
G.EXTRACT.I.16     r44.r44.r46.16
S.128.I            r44.r2.0        # in[      0] = ...
G.SUB.16           r48.r36.r38     # = tmp10 - tmp11
G.MULADD.16        r44.r48.$COS_1_4.$32768
G.MULADD.16        r46.r49.$COS_1_4.$32768
G.EXTRACT.I.16     r44.r44.r46.16
S.128.I            r44.r2.64       # in[stride*4] =
G.MULADD.16        r44.r42.$COS_1_8.$32768
G.MULADD.16        r46.r43.$COS_1_8.$32768
G.MULADD.16        r44.r40.$SIN_1_8.r44
G.MULADD.16        r46.r41.$SIN_1_8.r46
G.EXTRACT.I.16     r44.r44.r46.16
S.128.I            r44.r2.32       # in[stride*2] = ..
G.MULADD.16        r44.r42.$SIN_1_8.$32768
G.MULADD.16        r46.r43.$SIN_1_8.$32768
G.MULADD.16        r44.r40.$-COS_1_8.r44
G.MULADD.16        r46.r41.$-COS_1_8.r46
G.EXTRACT.I.16     r44.r44.r46.16
S.128.I            r44.r2.96       # in[stride*6] = ...
G.ADD.16           r48.r32.r30     # = tmp6 + tmp5
G.MULADD.16        r44.r48.$SIN_1_4.$4096
G.MULADD.16        r46.r49.$SIN_1_4.$4096
G.EXTRACT.I.16     r44.r44.r46.14      # tmp16 = .
G.SUB.16           r48.r32.r30     # = tmp6 - tmp5
G.MULADD.16        r46.r48.$COS_1_4.$4096
G.MULADD.16        r48.r49.$COS_1_4.$4096
G.EXTRACT.I.16     r46.r46.r46.14      # tmp15 = ...
G.SHL.16           r28.r28.2       # OVERSHIFT(tmp4)
G.SHL.16           r34.r34.2       # OVERSHIFT(tmp7)
G.ADD.16           r48.r28.r46     # tmp14 = tmp4 + tmp15;
G.SUB.16           r50.r28.r46     # tmp25 = tmp4 - tmp15;
G.SUB.16           r52.r34.r44     # tmp26 = tmp7 - tmp16;
G.ADD.16           r54.r34.r44     # tmp17 = tmp7 + tmp16;
G.MULADD.16        r44.r54.$OCOS_1_16.$32768
G.MULADD.16        r46.r55.$OCOS_1_16.$32768
G.MULADD.16        r44.r48.$OSIN_1_16.r44
G.MULADD.16        r46.r49.$OSIN_1_16.r46
G.EXTRACT.I.16     r44.r44.r46.16
S.128.I            r44.r2.16       # in[stride] = ...
G.MULADD.16        r44.r54.$OCOS_7_16.$32768
G.MULADD.16        r46.r55.$OCOS_7_16.$32768
G.MULADD.16        r44.r48.$-OSIN_7_16.r44
G.MULADD.16        r46.r49.$-OSIN_7_16.r46
G.EXTRACT.I.16     r44.r44.r46.16
S.128.I            r44.r2.112      # in[stride*7] = ...
G.MULADD.16        r44.r52.$OCOS_5_16.$32768
G.MULADD.16        r46.r53.$OCOS_5_16.$32768
G.MULADD.16        r44.r50.$OSIN_5_16.r44
G.MULADD.16        r46.r51.$OSIN_5_16.r46
G.EXTRACT.I.16     r44.r44.r46.16
S.128.I            r44.r2.80       # in[stride*5] = ...
G.MULADD.16        r44.r52.$OCOS_3_16.$32768
G.MULADD.16        r46.r53.$OCOS_3_16.$32768
G.MULADD.16        r44.r50.$-OSIN_3_16.r44
G.MULADD.16        r46.r51.$-OSIN_3_16.r46
G.EXTRACT.I.16     r44.r44.r46.16
S.128.I            r44.r2.48       # in[stride*3] = ...
R                  r0
```

The above code uses 10 G.ADD, 10 G.SUB, 32 G.MULADD, 10 G.EXTRACT.I, and 2 G.SHL instructions, which can be scheduled in 64 cycles. This code performs 8 1-dimensional DCTs at once, so it can be described as performing at 64/64 = 1.0 cycles/pixel.

### 2-Dimensional Discrete Cosine Transform

The code for a 2-dimensional DCT, uses the 1-dimensional DCT above, an 8x8 transform, a second 1-dimensional DCT, and a second 1-dimensional DCT. The load and store operations which are performed between these steps can be eliminated by procedure inlining, so we can estimate the performance by counting the Group instructions alone, which total to 2*64+2*24 or 176 cycles. The 2-dimensional DCT covers 64 pixels, which works out to a rate of 2.8 cycles/pixel. An inverse DCT should have similar performance characteristics.

### Floating-point Discrete Cosine Transform

The DCT can also be performed using half-precision (16-bit) floating-point operations. In this case, the accumulation of intermediate terms is performed using half-precision floating-point, so 50% of the G.MULADD instructions and 100% of the G.SHL and G.EXTRACT.I instructions can be removed. Also, 10 of the G.MULADD operations become simple G.MUL. Thus 8 1-Dimensional DCTs would use 10 GF.ADD, 10 GF.SUB, 10 GF.MUL, 3 GF.MULADD, 3 GF.MULSUB instructions, using 36 cycles, or 0.6 cycles/pixel, and the 2-dimensional 8x8 DCT uses 2*36+2*24 = 120 cycles, or 1.9 cycles/pixel. An inverse DCT should have similar performance characteristics.

### Further enhancements when used in JPEG algorithm

Because the output of the DCT is scanned into a linear sequence of items, the final transpose operation can easily be eliminated. This reduces the fixed-point DCT cost to 2*64+24 = 152 cycles, or 2.4 cycles/pixel; the floating-point DCT cost is reducted to 2*36+24 = 96 cycles, or 1.5 cycles/pixel.

The following section demonstrates that the transpose cost can be reduced to 16 cycles, by using a combination of memory loads and stores and the G.SHUFFLE operations, producing a fixed-point DCT in 2*64 + 16 = 144 cycles, or 2.3 cycles/pixel and floating-point DCT in 2*36 + 16 = 88 cycles, or 1.4 cycles/pixel.

## Other Matrix Applications

### Internal 4x4 Matrix Transpose

This example details the transposition of a 4-by-4 matrix of 16-bit values, stored consecutively in memory. The calculation is performed entirely in registers, using

G.SHUFFLE instructions and a technique described in [62], in which the first and second halves of the matrix are shuffled $\log_2 N$ times.

Assume the matrix originally is in the order:

$$\begin{bmatrix} 0 & 1 & 2 & 3 \\ 4 & 5 & 6 & 7 \\ 8 & 9 & 10 & 11 \\ 12 & 17 & 14 & 15 \end{bmatrix}$$

After one shuffling, the matrix is in the order:

$$\begin{bmatrix} 0 & 8 & 1 & 9 \\ 2 & 10 & 3 & 11 \\ 4 & 12 & 5 & 13 \\ 6 & 14 & 7 & 15 \end{bmatrix}$$

After a second shuffling, the matrix is in the order:

$$\begin{bmatrix} 0 & 4 & 8 & 12 \\ 1 & 5 & 9 & 13 \\ 2 & 6 & 10 & 14 \\ 3 & 7 & 11 & 15 \end{bmatrix}$$

C code for procedure:

```
void Matrix4By4Transpose(int16 *src, int16 *dst) {
    int16 tm0[16];
    int16 tm1[16];
    int i;

    for (i=0; i<8; i++) { tm0[2*i] = src[i]; tm0[2*i+1] = src[i+8]; }
    for (i=0; i<8; i++) { dst[2*i] = tm0[i]; dst[2*i+1] = tm0[i+8]; }
}
```

Assembler code for procedure:

```
_SubMatrixTranspose:
        L.128.I         r4,r2,0         # 00 01 02 03 04 05 06 07
        L.128.I         r6,r2,16        # 08 09 10 11 12 13 14 15
        G.SHUFFLE.8     r8,r4,r6        # 00 08 01 09 02 10 03 11
        G.SHUFFLE.8     r10,r5,r7       # 04 12 05 13 06 14 07 15

        G.SHUFFLE.8     r4,r8,r10       # 00 04 08 12 01 05 09 13
        S.128.I         r4,r3,0
        G.SHUFFLE.8     r6,r9,r11       # 02 06 10 14 03 07 11 15
        S.128.I         r6,r3,16
        B               r0
```

The resulting code transposes a 4-by-4 matrix using 5 cycles.

[62]Stone, Harold, "Parallel Processing with the Perfect Shuffle," IEEE Transactions on Computers, Vol C-20, No. 2, February 1971, 153

## External Matrix Transpose

A large matrix may not fit in the register file all at once, and even if it could, the internal matrix transpose algorithm performs O(NlogN), as each doubling of the matrix size requires an additional shuffle.

To support the transpose of a large matrix, the internal matrix transpose algorithm can be extended to transpose individual blocks, or sub-matrices, of a large matrix, by modifying the code to specify the row size of of the matrix.[63]

If we consider each element in the left matrix below to be an 8-by-8 submatrix as above, the transpose of the matrix is the right matrix below, where each element of the right matrix is the transpose of the corresponding element in the left matrix. Note that elements 0, 9, 18, 27, 36, 45, 54, and 63 are transposed in-place, and that each of the other elements are transposed and exchanged with another element in the matrix. Thus another useful extension of the submatrix transpose algorithm transposes two submatrices simultaneously, writing them back in exchanged locations.[64]

$$\begin{bmatrix} 0 & 1 & 2 & 3 & 4 & 5 & 6 & 7 \\ 8 & 9 & 10 & 11 & 12 & 13 & 14 & 15 \\ 16 & 17 & 18 & 19 & 20 & 21 & 22 & 23 \\ 24 & 25 & 26 & 27 & 28 & 29 & 30 & 31 \\ 32 & 33 & 34 & 35 & 36 & 37 & 38 & 39 \\ 40 & 41 & 42 & 43 & 44 & 45 & 46 & 47 \\ 48 & 49 & 50 & 51 & 52 & 53 & 54 & 55 \\ 56 & 57 & 58 & 59 & 60 & 61 & 62 & 63 \end{bmatrix} \begin{bmatrix} 0 & 8 & 16 & 24 & 32 & 40 & 48 & 56 \\ 1 & 9 & 17 & 25 & 33 & 41 & 49 & 57 \\ 2 & 10 & 18 & 26 & 34 & 42 & 50 & 58 \\ 3 & 11 & 19 & 27 & 35 & 43 & 51 & 59 \\ 4 & 12 & 20 & 28 & 36 & 44 & 52 & 60 \\ 5 & 13 & 21 & 29 & 37 & 45 & 53 & 61 \\ 6 & 14 & 22 & 30 & 38 & 46 & 54 & 62 \\ 7 & 15 & 23 & 31 & 39 & 47 & 55 & 63 \end{bmatrix}$$

A preceding section describes how to transpose a 4x4 matrix, which can be easily extended to handle a 4x4 submatrix by splitting the L.128.I and S.128.I instructions each into pairs of L.64.I and S.64.I instructions. The cost of the 4x4 transpose is less than 25% of the cost of the 8x8 transpose, so an external matrix transpose using the 4x4 submatrix can be faster than using the 8x8 submatrix transpose.

## Shaded Graphics Applications

This section is under construction.

## Mnemosyne System Application

MicroUnity's Terpsichore system architecture uses nine Mnemosyne memory devices in its base configuration, providing a nine byte-wide paths between the processor and memory. The memory devices are used to build a 0.5 Mbyte cache between Terpsichore's first level caches and DRAM-based main memory. The

[63] This modification uses A-type instructions to increment the src pointer by the row size between each L instructions, taking no additional cycles.

[64] For such a case, it is useful to use the indexed addressing form, so that the same index can be applied to the two pointers for the L and S instructions.

main memory store consists of 9, 18 or 36 banks of 1Mx72 arrays (each bank is eighteen 4 Mbit DRAMs), which yields 64,128 or 256 Mbytes of ECC memory with 8,16, or 32 Mbytes of directory storage.

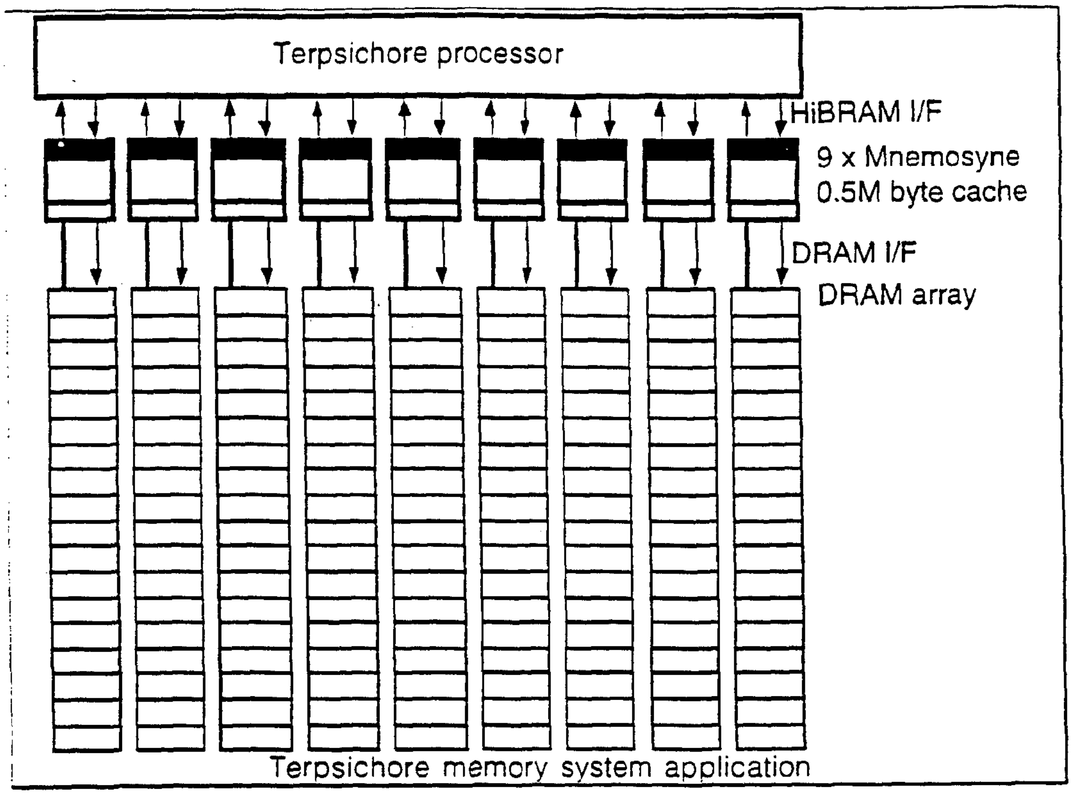


To further expand the DRAM memory and improve the bandwidth to memory, two or four Mnemosyne memory devices may be placed in each of the nine byte-wide paths. Such configurations use 18, 36, 72, or 144 banks of 1Mx72 arrays, which yields 128, 256, 512, or 1024 Mbytes of ECC memory with 16, 32, 64, or 128 Mbytes of directory storage.

Mnemosyne provide sufficient address bits to support up to 16Mx72 DRAM array banks, using as large as 64M bit DRAM parts when available. In such a configuration, memory sizes as large as 16 Gbytes of ECC memory can be constructed.

Terpsichore uses a 64-byte cache line size. Each cache line is associated with an octlet (8 bytes) of directory information, using one of the nine "Hermes channels" provided by a Mnemosyne device with its associated DRAM. The remaining eight of the nine Hermes channels contain the eight octlets (eight byte units) of the cache line data. In order to provide the means to access individual octlets of cache data and directory information at maximum bandwidth, the directory information is scattered evenly among eight of the nine byte lanes.

## Typical Cerberus configurations

The number of devices in a typical Cerberus bus may vary from a minimum of about 11 devices (8 Mnemosyne, 1 Terpsichore, 1 Calliope, 1 FPGA), to a moderate amount of about 40 (36 Mnemosyne, 1 Terpsichore, 1 Calliope, 1 Hydra, 1 FPGA), or about 48 (36 Mnemosyne, 4 Terpsichore, 4 Calliope, 4 Hydra, 1 FPGA) to a maximum of about 157 devices (144 Mnemosyne, 4 Terpsichore, 4 Calliope, 4 Hydra, 1 FPGA).

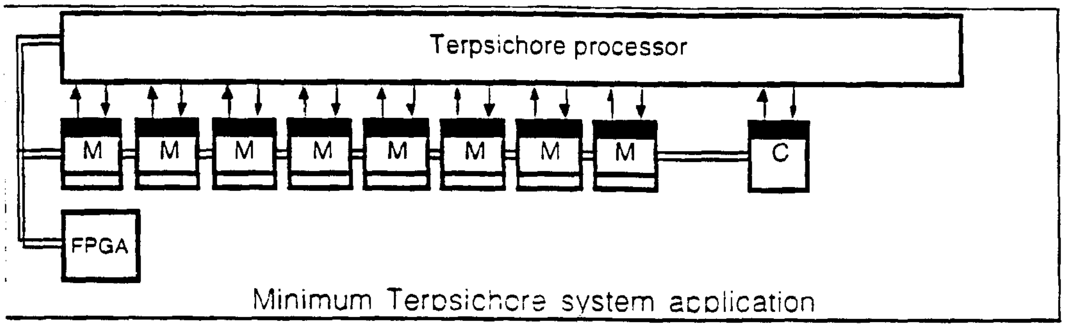

Minimum Terpsichore system application

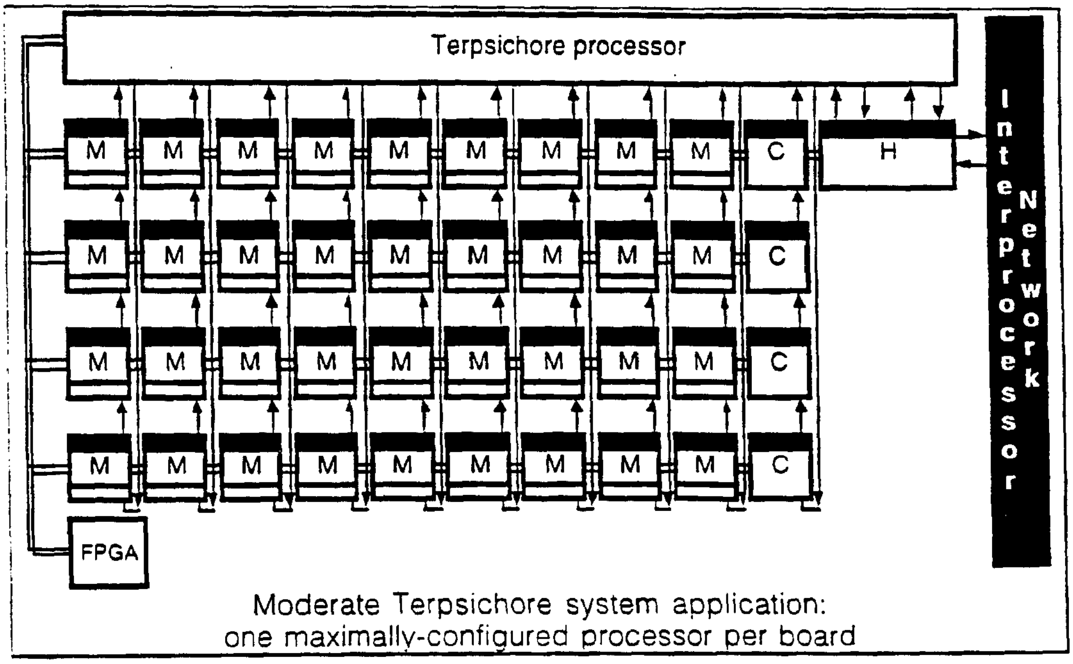

Moderate Terpsichore system application:
one maximally-configured processor per board

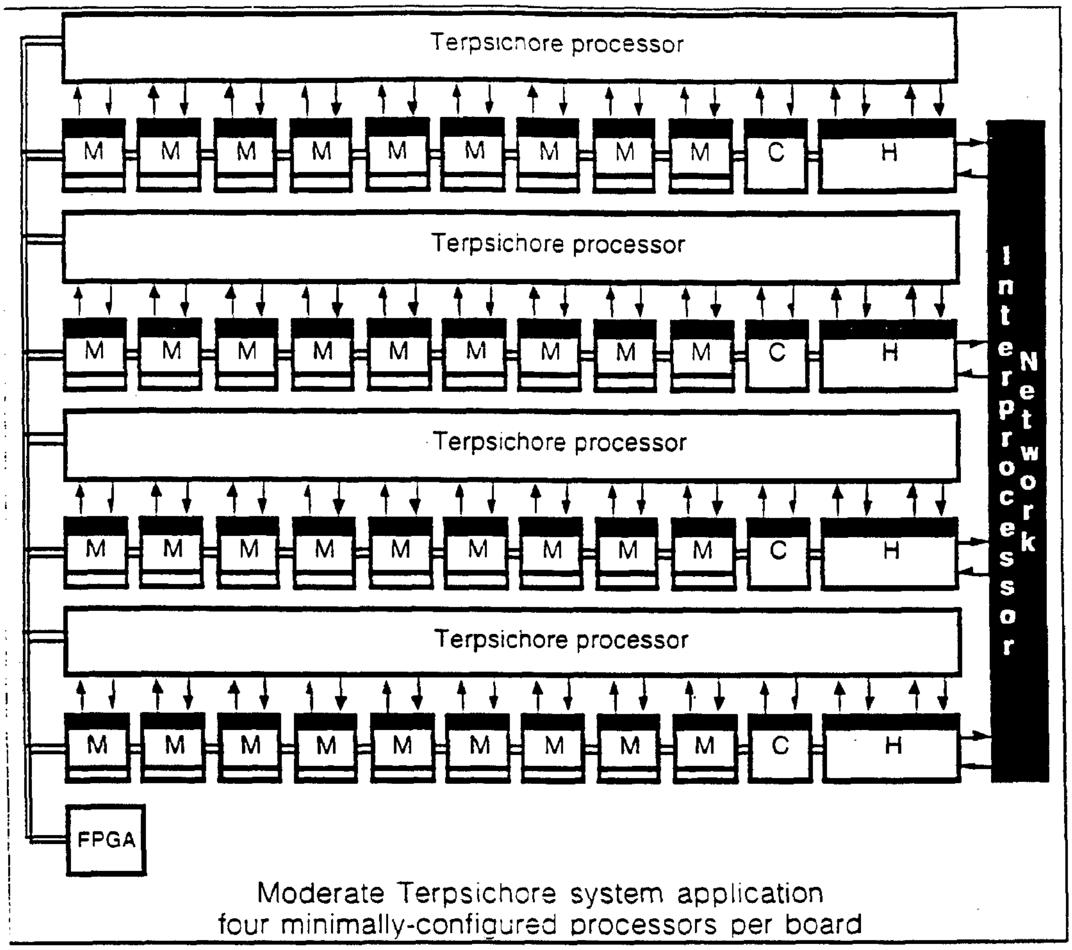


Moderate Terpsichore system application
four minimally-configured processors per board

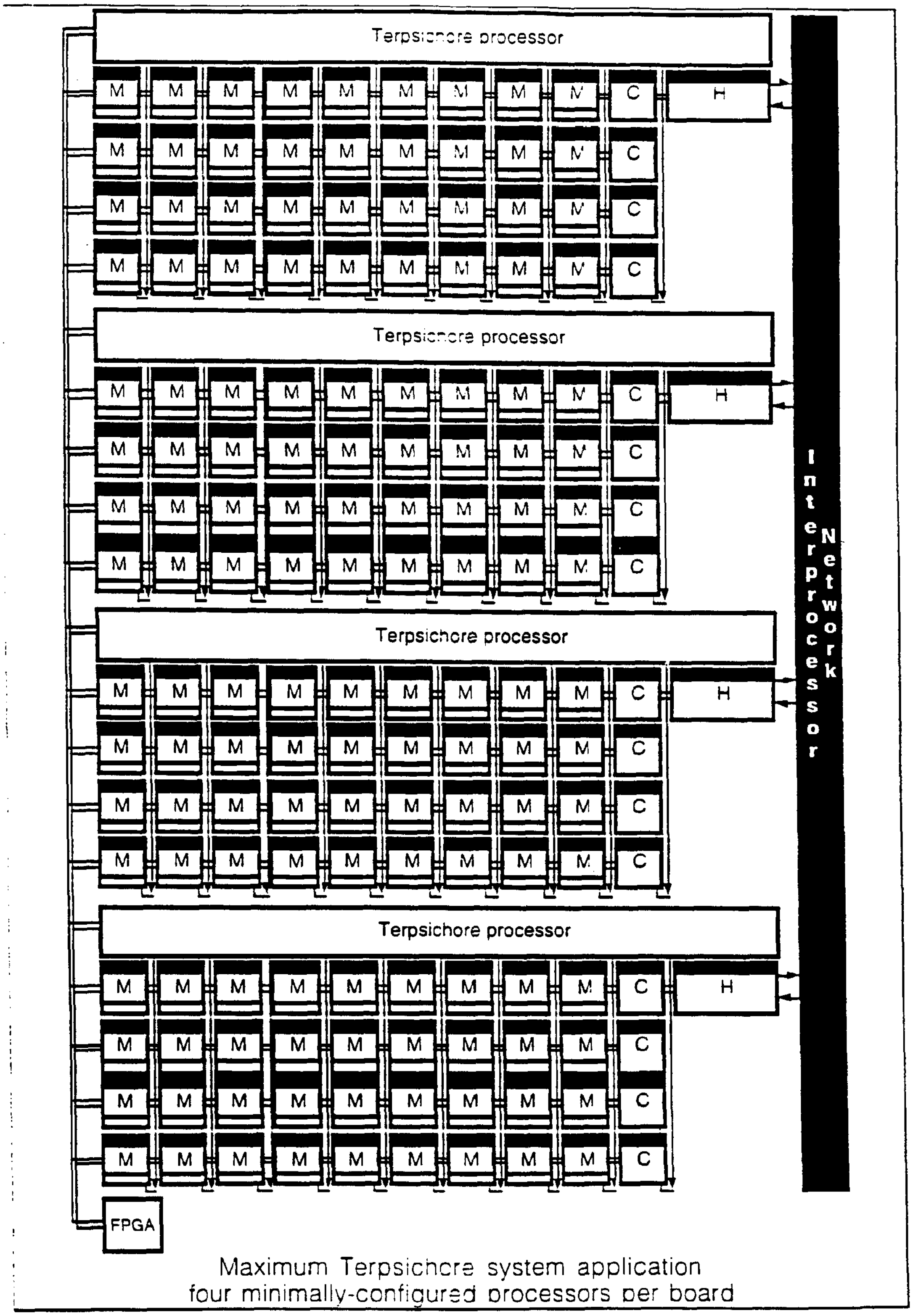
Terpsichore processor
M
C
H
Interprocessor Network
FPGA
Maximum Terpsichore system application
four minimally-configured processors per board

Cerberus performance

When determining the performance of Cerberus, this 15:1 variation in the number of devices on the bus has a critical effect. The performance of these configurations with a resistive termination is estimated below:

| | Constants | | | | Basic | Full | Extended | |
|---|---|---|---|---|---|---|---|---|
| | | | | | | | | 1 |
| | | | | | | 35 | | 44 |
| | | | | | | 2 | | 4 |
| | 5.00 | | | | | 2 | | 3 |
| | DC Rout.ohms | | Total Devices | | | 4 | | devices |
| | | | Bus Length | | | | | inches |
| | in uA | | | | | 23 | | inches |
| | 10 | uA | | | | | | |
| | oc | | Tot. dev. cap. | | 48 00 | 64 00 | | |
| | 5.00 | ns | | | | | | |
| | Dev cap pf | | Line capacitance | | | | | |
| | 4 pf | | at 2.5"/device | | 58 00 | 232 33 | | |
| | | | | | | | | |
| | 15 | mA | Line capacitance | | | 209 10 | | |
| | p u volts | | at 3"/device | | | | | |
| | | | | | | | | |
| | Tpd | | System Cap | | 99 35 | 338 25 | | |
| | 15 | ns | Device inc cap | | | 396 33 | | |
| | Tset up | | | | | | | |
| | 15 | ns | | | | | | |
| | pu volts | | | | | | | |
| | | | Tau & Rpu ohms | | 49 50 | | 535 25 | ns |
| | Derived | | Pdu sys cap | | | 138 | | ns |
| | inch | | | | | | | ns |
| 180 ohm 20 | p ' 1700 | | | | | | | ns |
| 75 ohm 20 | 2257 | | | | | | | |
| 50 ohm 20 | 3400 | | Tau & tol | | 30.94 | 105.70 | 397 33 | ns |
| | | | Sys | | 30 25 | 123 85 | 465 21 | ns |
| | | | | | 34 13 | 115 59 | 437 94 | ns |
| | | | | | 30 50 | 138 30 | | ns |
| | | | | | | | | |
| | | | Line delay | | 510 | 17 43 | 65 45 | ns |
| | | | Line engine. | | 612 | 20 91 | | ns |
| | | | | | | | | |
| | | | Max unterm Tr | | 20.40 | 69 70 | 261 30 | ns |
| | | | 4 ' Line delay | | 24 48 | 33 64 | 314 16 | ns |
| | | | | | | | | |
| | | | Max unterm freq. | | 16 34 | 4 78 | 127 | MHz |
| | | | | | 13 52 | 3 99 | 106 | MHz |
| | | | | | | | | |
| | | | Zterm for ½ dev. | | 39 02 | 14 35 | 332 | Ohms |
| | | | cap at CC full time | | 40 85 | 11 95 | 319 | Ohms |
| | | | | | | | | |
| | | | DC input current | | | | 1540 | uA |
| | | | | | | | | |
| | | | Min cycle freq | | 11 15 | 4 27 | 1 26 | MHz |
| | | | 1000 Tau int - ipd - 15 - | | 10 18 | 3 30 | | MHz |
| | | | 2 trace delay | | 10 33 | 3 87 | 1 13 | MHz |
| | | | | | 9 34 | 3 41 | 1 99 | MHz |

The use of a synchronous repeater, as described previously, would result in a significant performance increase in the Extended system.

## Claims

**1.** A system for processing streams of media data comprising:

a communications network capable of transmitting and receiving media data streams which comprises a combination of at least two of audio, video, radio, graphics, encryption, authentication, and networking information; and
a plurality of programmable media processors within the communications network, the programmable media processors receiving and processing in use at least one media data stream over the communications network, each processor being programmed to execute group instructions

to read a plurality of data elements of the media data stream from a register file,
to perform, on the unified media data steams, group operations including both group integer and group floating point operations capable of dynamically partitioning the data by each specifying one of a plurality of data element sizes, and
to write concatenated results in the or another register file; and

each media processor being reprogrammable by receiving downloaded software over the network.

**2.** A system according to claim 1, wherein each processor is configured to receive and process a media stream comprising audio, video, graphics and network information.

**3.** A system according to claim 1, wherein the communications network is a bi-directional communications network.

**4.** A system according to claim 3, wherein the programmable media processors transmit in use at least one media data stream over the bi-directional communications network.

**5.** A system according to claim 4, wherein each processor is configured to receive, process and transmit a media stream comprising audio, video, graphics and network information.

**6.** A system according to any preceding claim, wherein the software is broadcast over the network.

**7.** A system according to any preceding claim, wherein the media processor is disposed in a television.

**8.** A system according to any one of claims 1 to 6, wherein the media processor is disposed in a set-top box.

**9.** A system according to any one of claims 1 to 6, wherein the media processor is disposed in a facsimile machine.

**10.** A system according to any one of claims 1 to 6, wherein the media processor is disposed in a cellular telephone.

**11.** A method for processing streams of media data in a communications network, the method comprising transmitting and receiving media data streams to and from a plurality of user devices, the at least one stream of media comprising a combination of at least two of audio, video, radio, graphics, encryption, authentication, and networking information; and

wherein each user device has at least one programmable media processor for receiving and processing in use at least one media data stream over the communications network;
the processor executing group instructions

to read a plurality of data elements of the media data stream from a register file,
to perform, on the media data steams, group operations including both integer and floating point operations capable of dynamically partitioning the data by each specifying one of a plurality of data element sizes, and
to write concatenated results in the or another register file;

and the method further comprising:

reprogramming a media processor by receiving downloaded software to the programmable media processor over the network.

**12.** A method according to claim 11, wherein each processor receives and processes a media stream comprising audio, video, graphics and network information.

**13.** A method according to claim 11, wherein the communications network is a bi-directional communications network.

**14.** A method according to claim 13, wherein the programmable media processors transmit at least one media data stream over the communications network.

**15.** A method according to claim 13, wherein each processor receives, processes and transmits a media stream comprising audio, video, graphics and network information.

**16.** A method according to any one of claims 11 to 15, wherein the reprogramming software is broadcast over the network.

**19.** The use of a microprocessor for processing streams of media data in a wireless bi-directional communications network, which microprocessor comprises an execution unit executing group instructions to read a plurality of data elements of the media data stream from a register file, and performing, on the data elements, group operations including both integer and floating point group operations dynamically partitioning the data by each specifying one of a plurality of data element sizes, and writing concatenated results in the register file, as a component in the infrastructure for a broadcasting network.

**20.** The use of a microprocessor according to claim 19, wherein the microprocessor is reprogrammed by software received from the network.

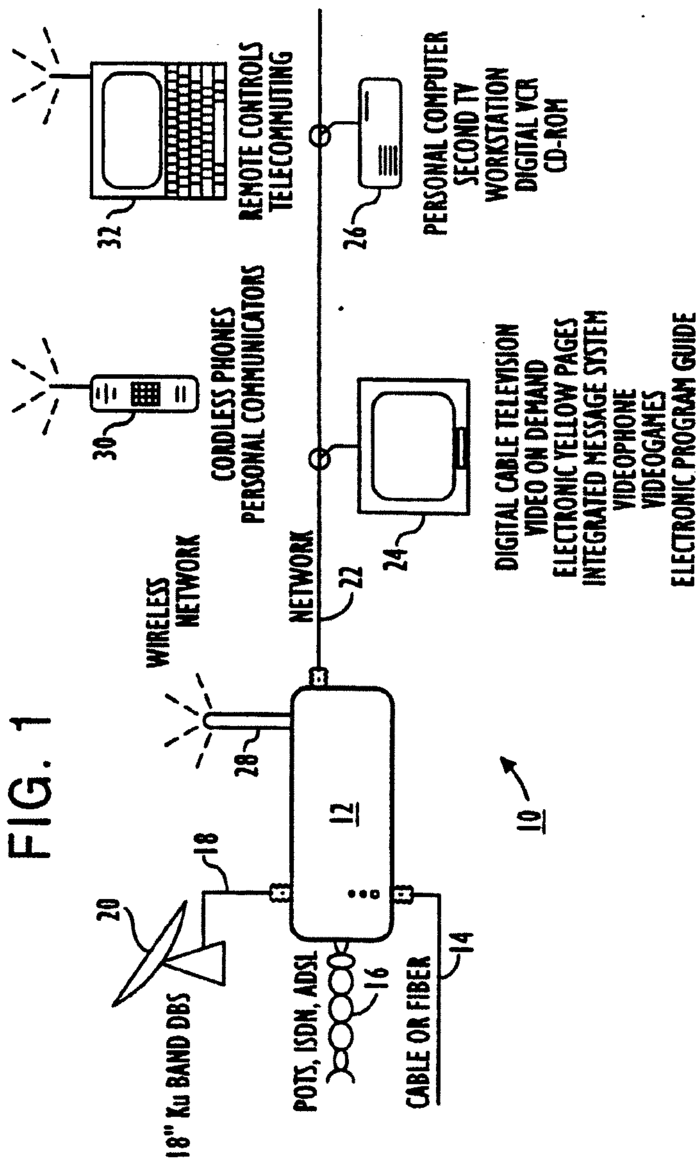
18" Ku BAND DBS
20
18
POTS, ISDN, ADSL
16
CABLE OR FIBER
14
12
28
10
WIRELESS NETWORK
NETWORK
22
24
DIGITAL CABLE TELEVISION
VIDEO ON DEMAND
ELECTRONIC YELLOW PAGES
INTEGRATED MESSAGE SYSTEM
VIDEOPHONE
VIDEOGAMES
ELECTRONIC PROGRAM GUIDE
30
CORDLESS PHONES
PERSONAL COMMUNICATORS
26
PERSONAL COMPUTER
SECOND TV
WORKSTATION
DIGITAL VCR
CD-ROM
32
REMOTE CONTROLS
TELECOMMUTING

FIG. 1

FIG. 2

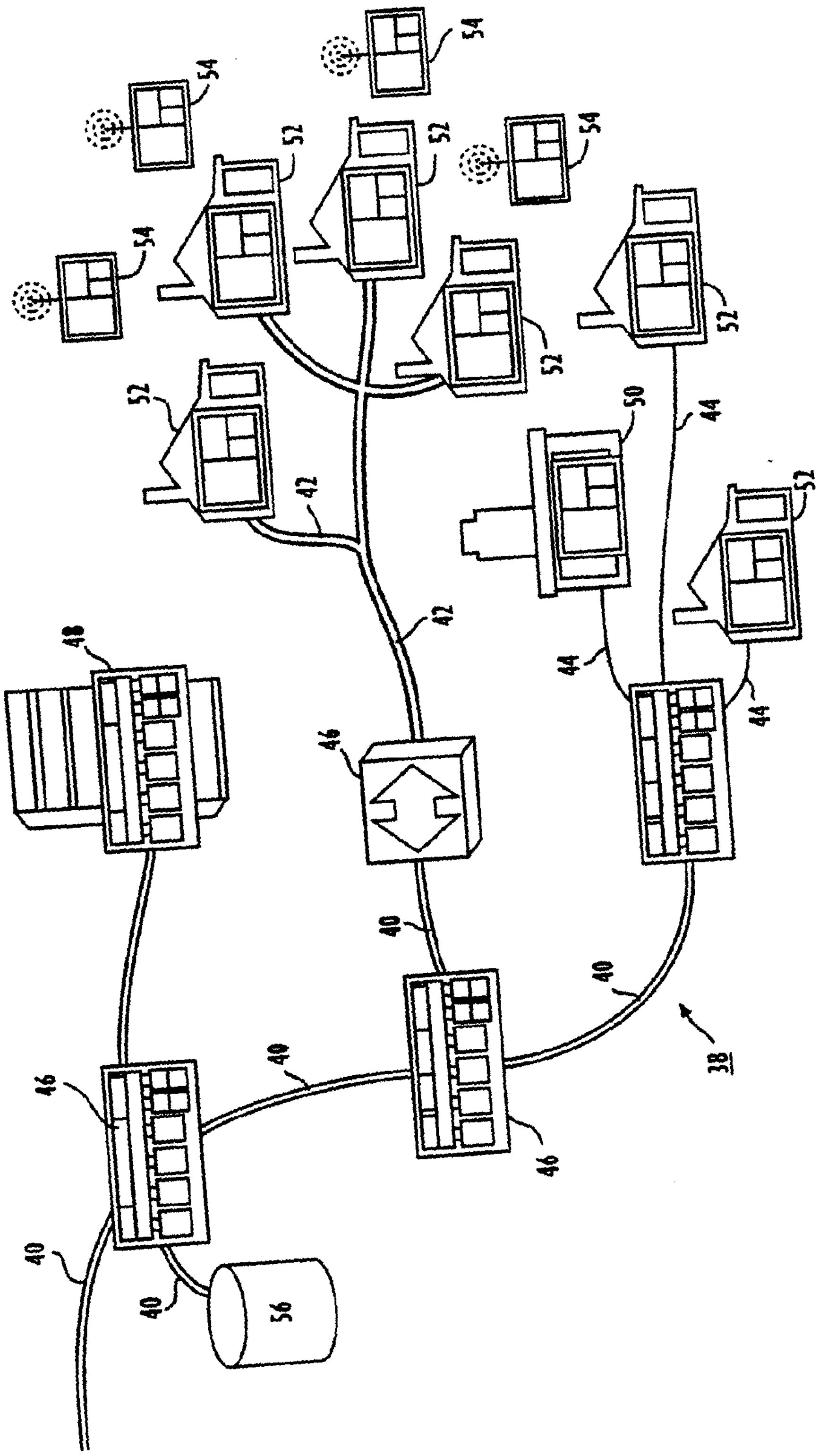

FIG. 3

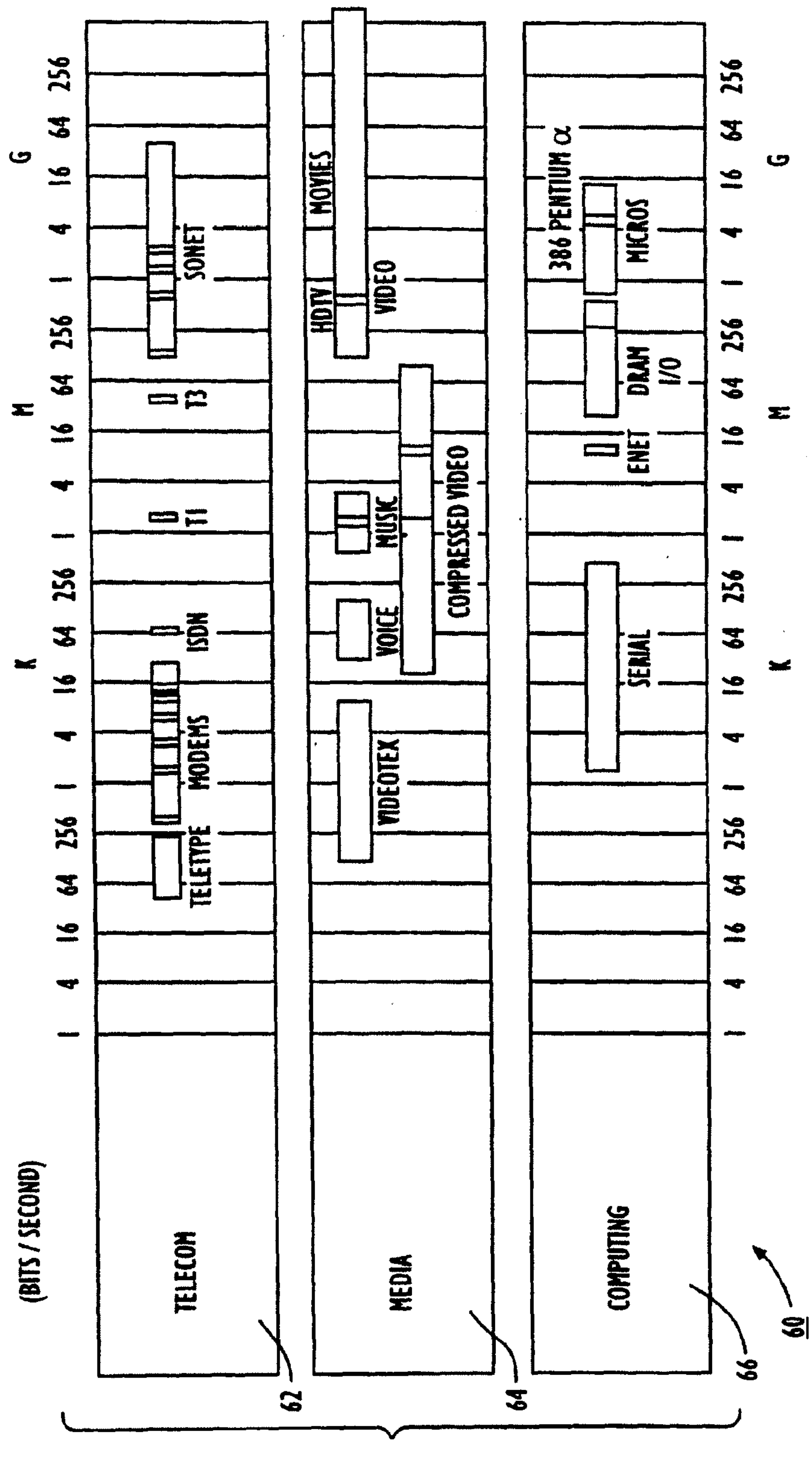
(BITS / SECOND)
1 4 16 64 256 1 4 16 64 256 1 4 16 64 256 1 4 16 64 256
K
M
G
TELECOM
TELETYPE
MODEMS
ISDN
T1
T3
SONET
MEDIA
VIDEOTEX
VOICE
MUSIC
COMPRESSED VIDEO
HDTV
VIDEO
MOVIES
COMPUTING
SERIAL
ENET
DRAM
I/O
MICROS
386 PENTIUM α
62
64
66
60

FIG. 4

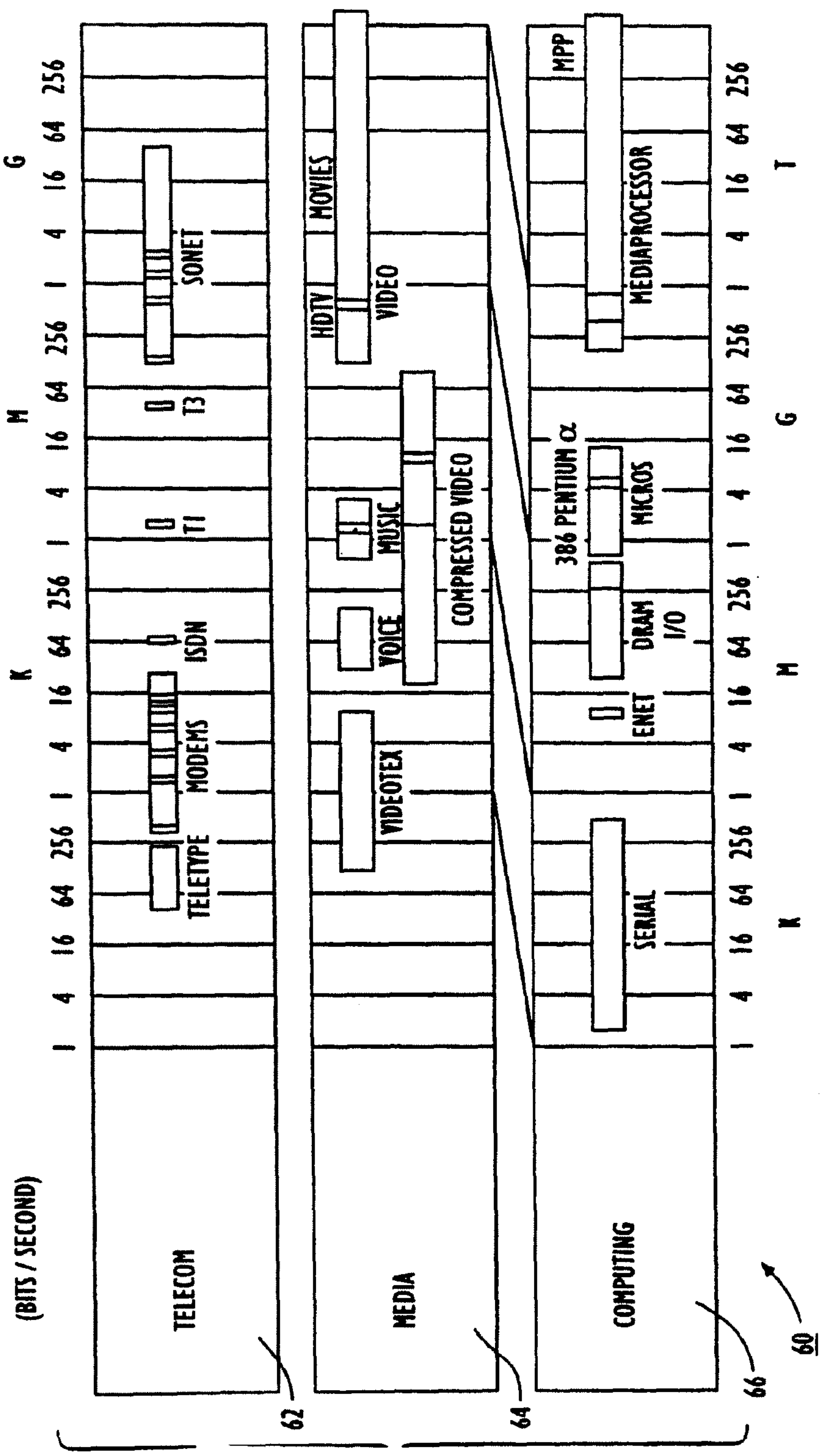

(BITS / SECOND)
1 4 16 64 256 1 4 16 64 256 1 4 16 64 256 1 4 16 64 256
K M G
TELECOM
TELETYPE
MODEMS
ISDN
T1
T3
SONET
MEDIA
VIDEOTEX
VOICE
MUSIC
COMPRESSED VIDEO
HDTV
VIDEO
MOVIES
COMPUTING
SERIAL
ENET
DRAM I/O
386 PENTIUM α
MICROS
MEDIAPROCESSOR
MPP
K M G T
62
64
66
60

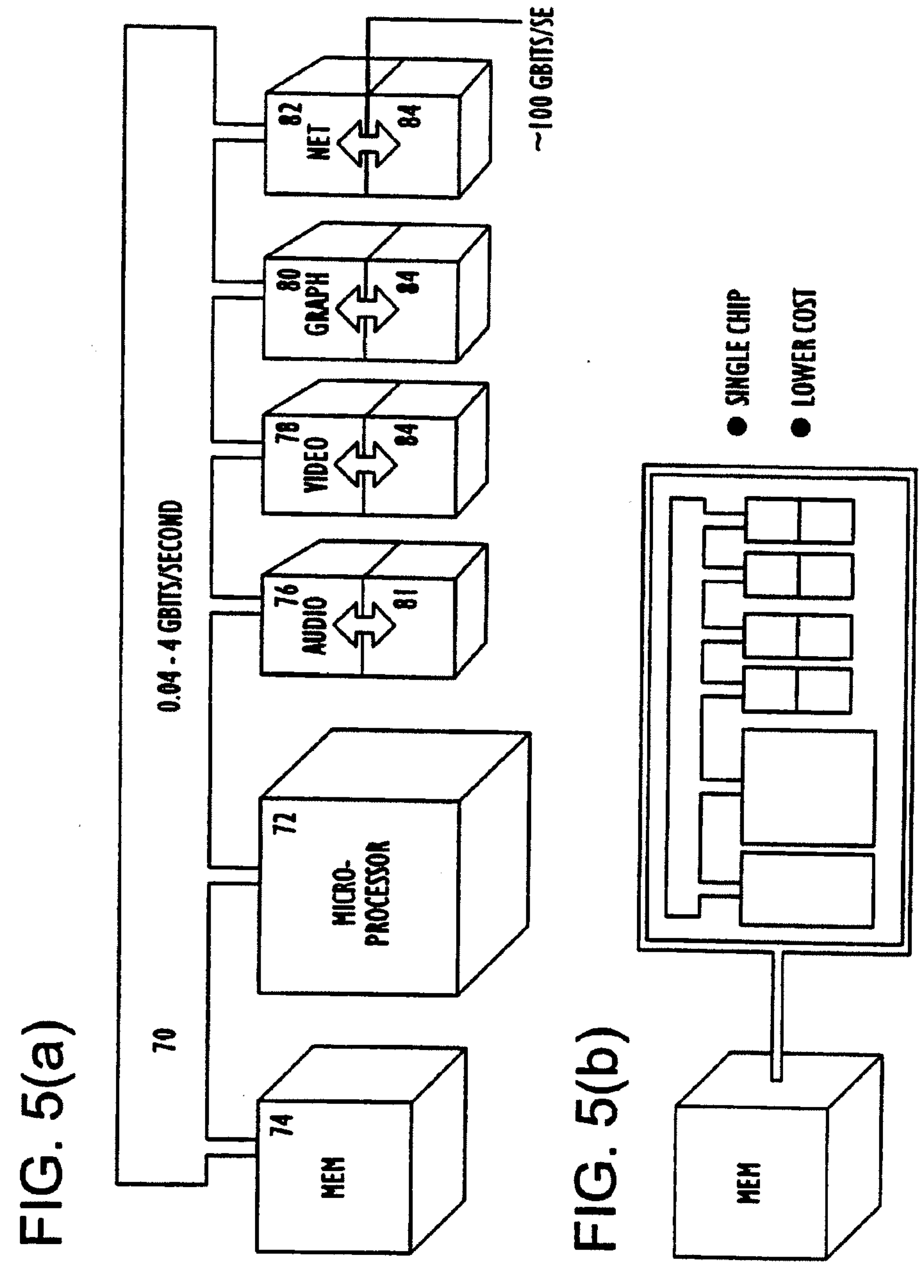
70
0.04 - 4 GBITS/SECOND
74
MEM
72
MICRO-
PROCESSOR
76
AUDIO
81
78
VIDEO
84
80
GRAPH
84
82
NET
84
~100 GBITS/SE
MEM
SINGLE CHIP
LOWER COST

FIG. 5(a)

FIG. 5(b)

FIG. 6(a)

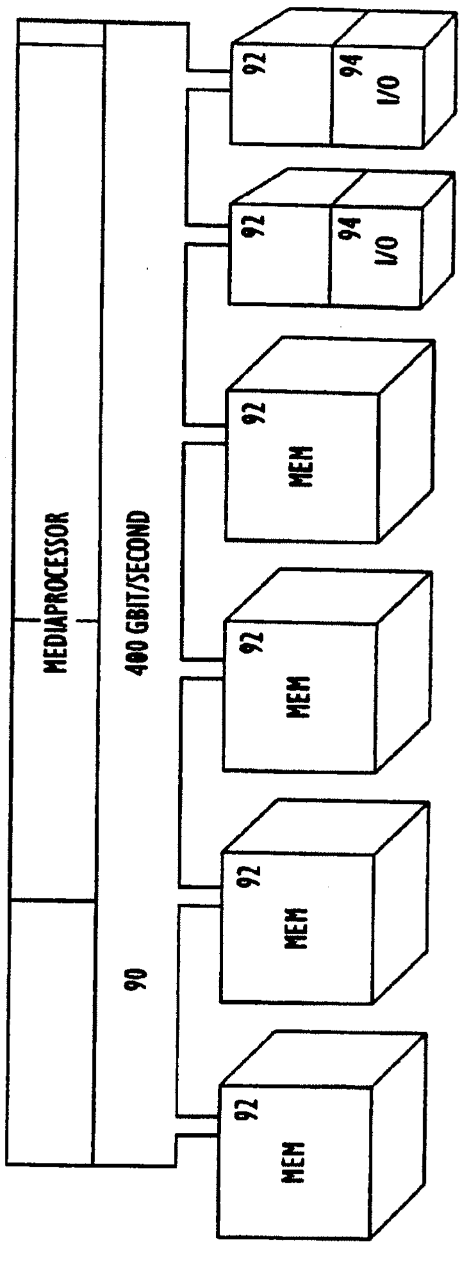
MEDIAPROCESSOR
400 GBIT/SECOND
90
92
MEM
92
MEM
92
MEM
92
MEM
92
94
I/O
92
94
I/O

FIG. 6(b)

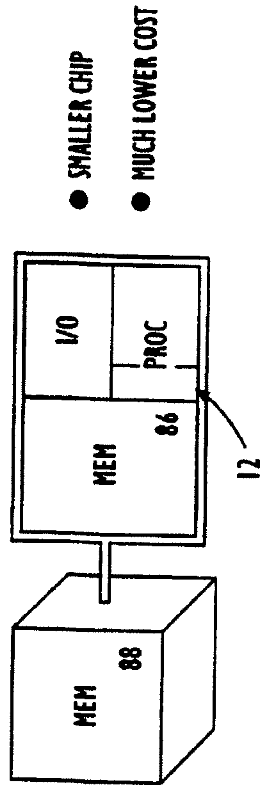
MEM
88
MEM
86
I/O
PROC
12
● SMALLER CHIP
● MUCH LOWER COST

FIG. 7

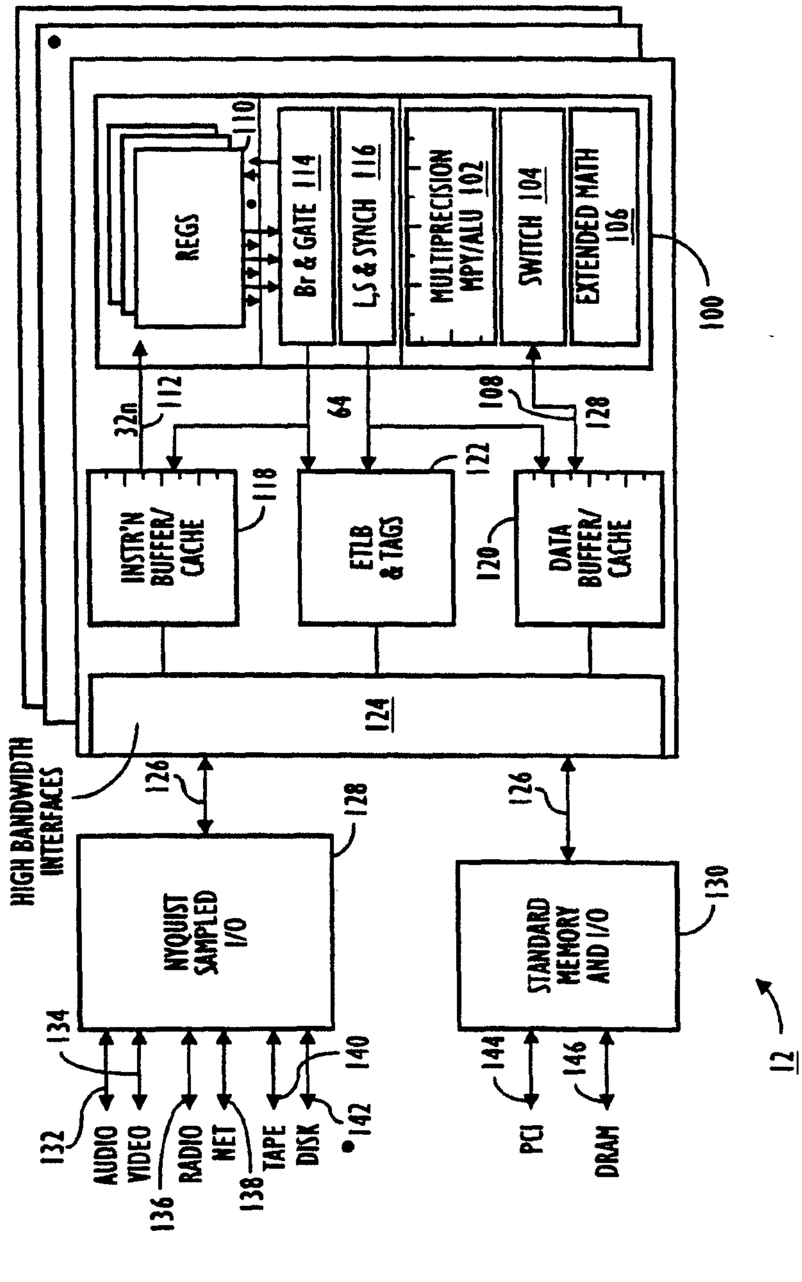
REGS
110
Br & GATE 114
L,S & SYNCH 116
MULTIPRECISION MPY/ALU 102
SWITCH 104
EXTENDED MATH 106
100
32n
112
64
108
128
INSTR'N BUFFER/ CACHE
118
ETLB & TAGS
122
120
DATA BUFFER/ CACHE
124
HIGH BANDWIDTH INTERFACES
126
128
NYQUIST SAMPLED I/O
126
STANDARD MEMORY AND I/O
130
134
132
AUDIO
VIDEO
136
RADIO
NET
138
TAPE
DISK
140
142
PCI
144
146
DRAM
12

FIG. 8(a)

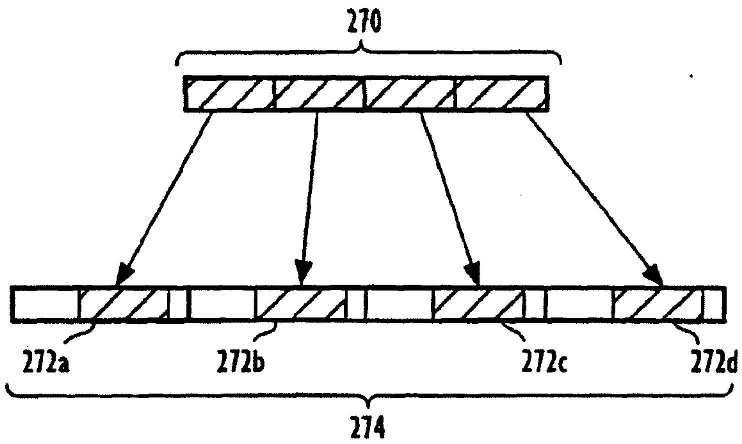


FIG. 8(b)

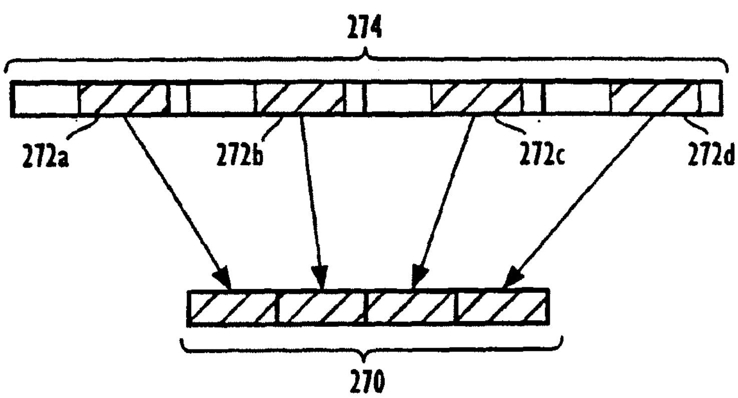

FIG. 8(c)

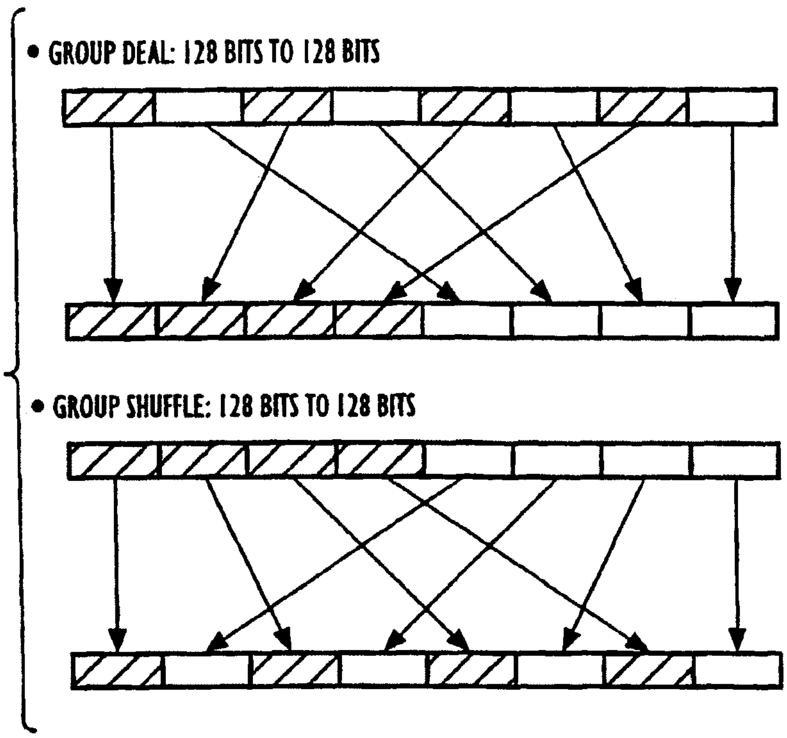
• GROUP DEAL: 128 BITS TO 128 BITS
• GROUP SHUFFLE: 128 BITS TO 128 BITS

FIG. 8(d)

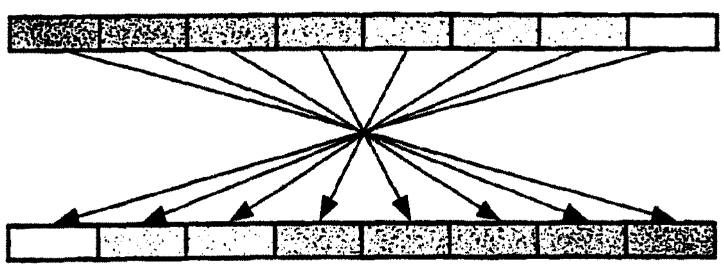

FIG. 8(e)

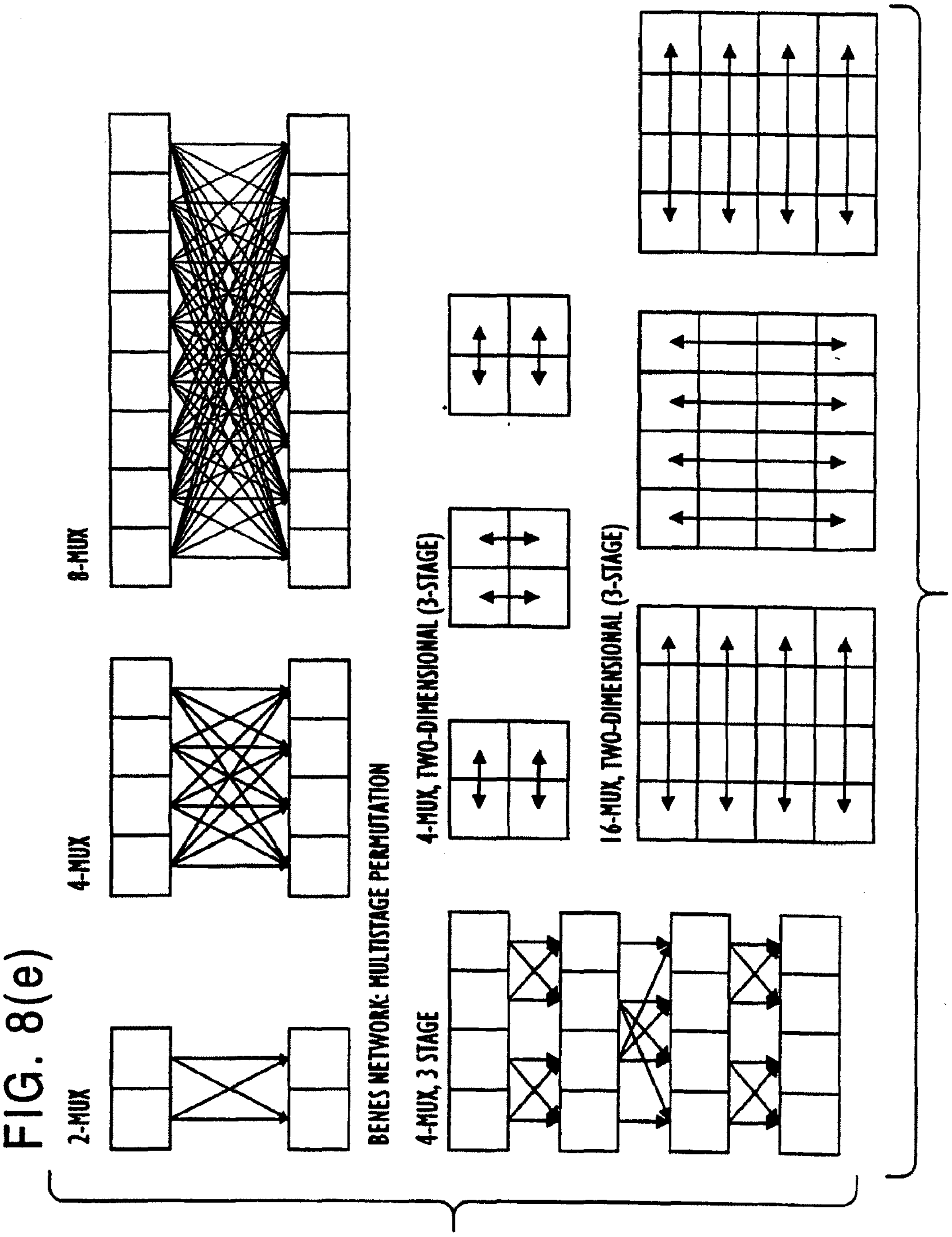
2-MUX
4-MUX
8-MUX
BENES NETWORK: MULTISTAGE PERMUTATION
4-MUX, 3 STAGE
4-MUX, TWO-DIMENSIONAL (3-STAGE)
16-MUX, TWO-DIMENSIONAL (3-STAGE)

FIG. 9(a)

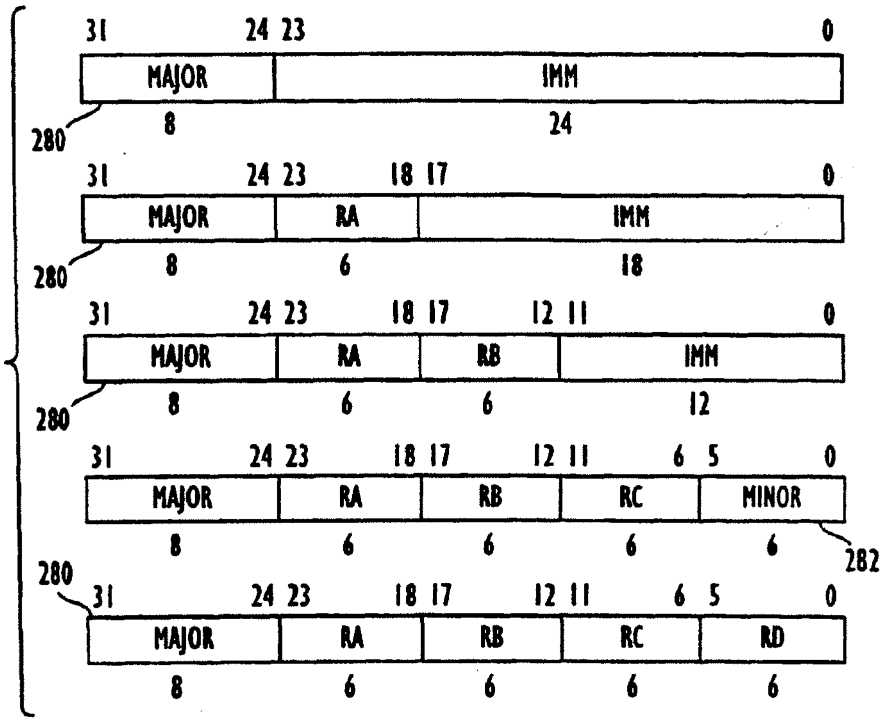
31
24 23
0
MAJOR
IMM
8
24
280
18 17
RA
6
18
12 11
RB
IMM
12
6 5
RC
MINOR
282
RD

FIG. 9(b)

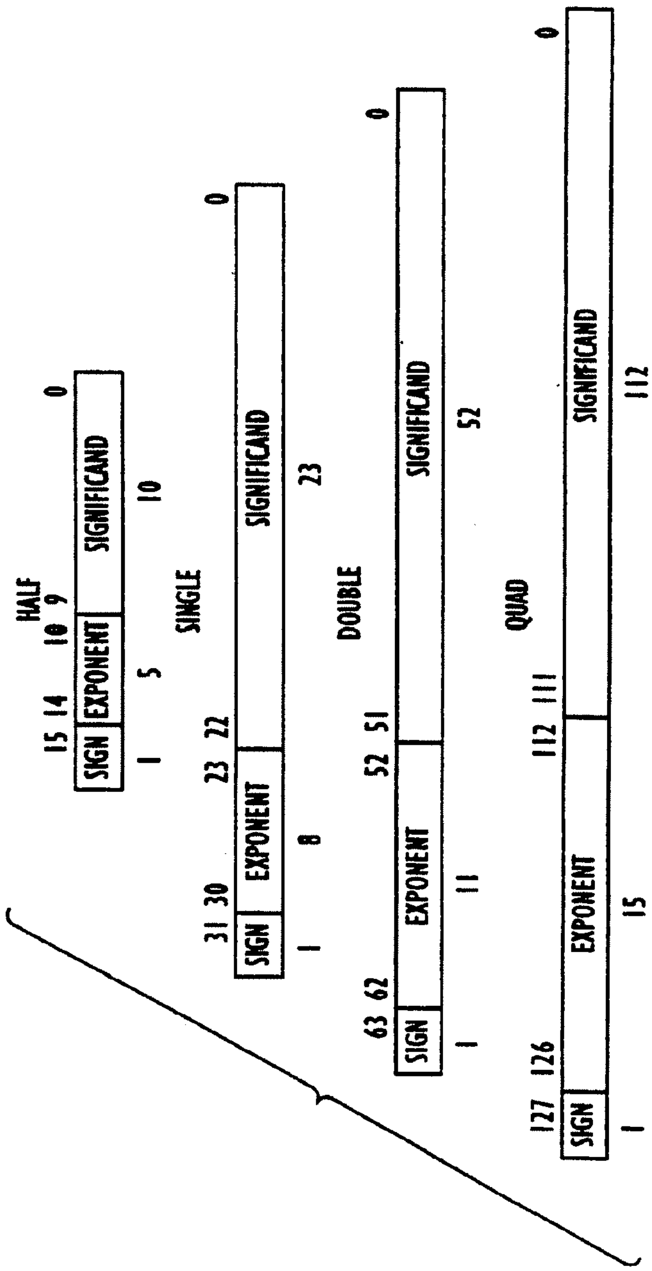
HALF
15 14
10 9
0
SIGN
EXPONENT
SIGNIFICAND
1
5
10
SINGLE
31 30
23 22
0
SIGN
EXPONENT
SIGNIFICAND
1
8
23
DOUBLE
63 62
52 51
0
SIGN
EXPONENT
SIGNIFICAND
1
11
52
QUAD
127 126
112 111
0
SIGN
EXPONENT
SIGNIFICAND
1
15
112

FIG. 9(c)

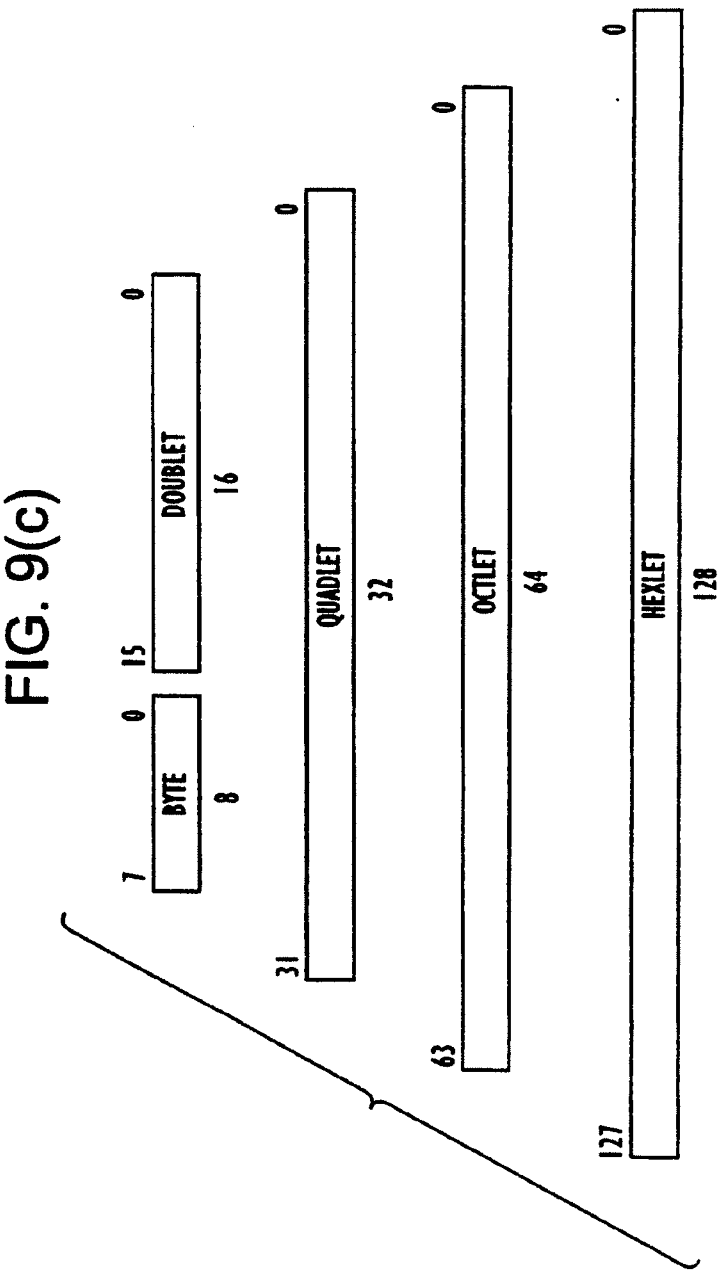

7
BYTE
8
0
15
DOUBLET
16
0
31
QUADLET
32
0
63
OCTLET
64
0
127
HEXLET
128
0

FIG. 10(a)

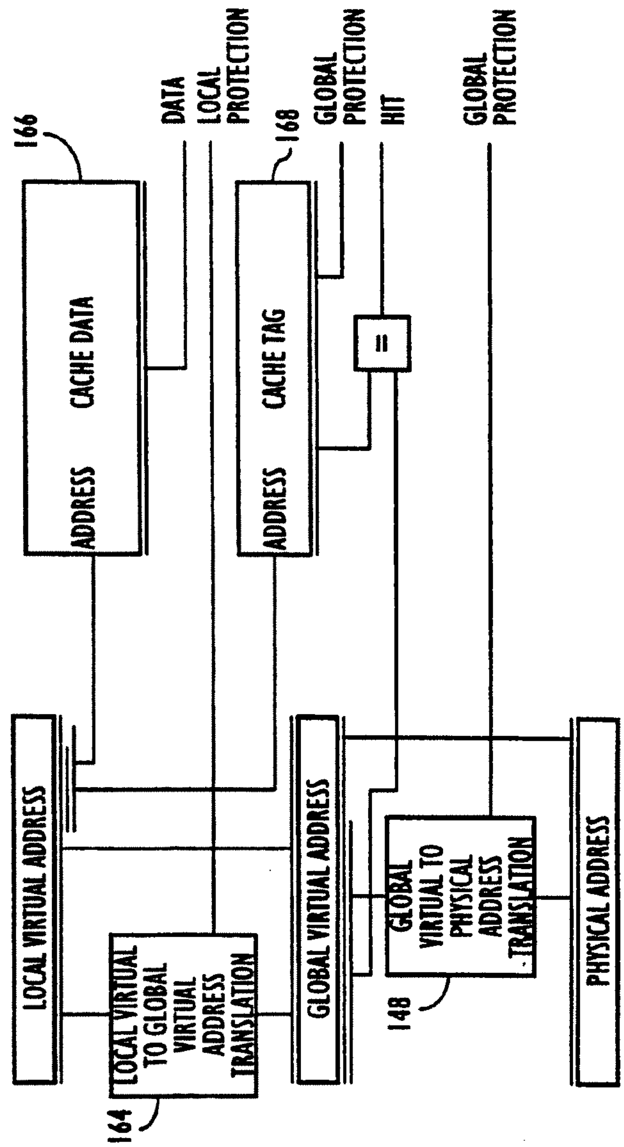
166
CACHE DATA
ADDRESS
DATA
LOCAL PROTECTION
168
CACHE TAG
ADDRESS
GLOBAL PROTECTION
HIT
=
GLOBAL PROTECTION
LOCAL VIRTUAL ADDRESS
LOCAL VIRTUAL TO GLOBAL VIRTUAL ADDRESS TRANSLATION
164
GLOBAL VIRTUAL ADDRESS
GLOBAL VIRTUAL TO PHYSICAL ADDRESS TRANSLATION
148
PHYSICAL ADDRESS

FIG 10(b)

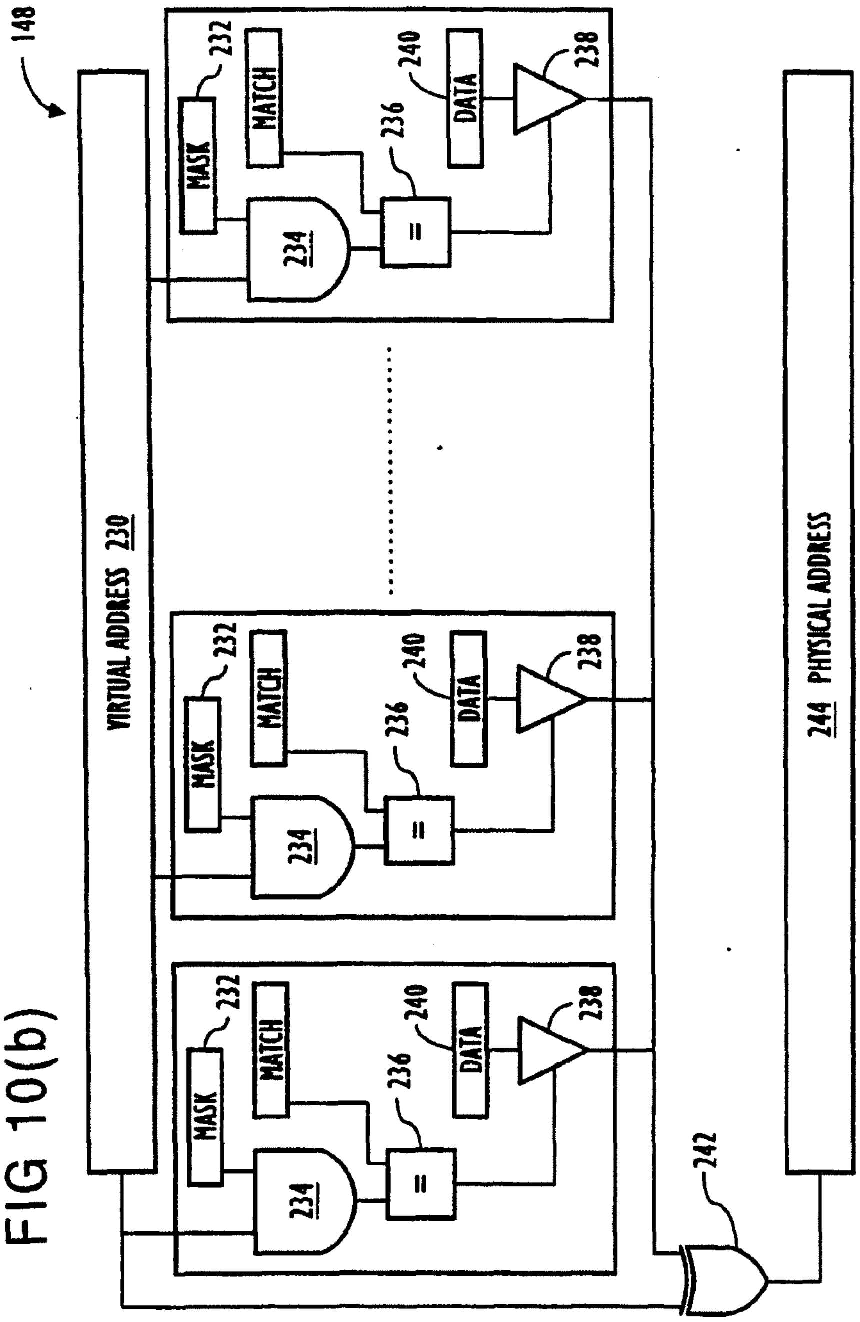
148
VIRTUAL ADDRESS 230
MASK
MATCH
232
234
=
236
DATA
240
238
MASK
MATCH
232
234
=
236
DATA
240
238
MASK
MATCH
232
234
=
236
DATA
240
238
242
244 PHYSICAL ADDRESS

FIG. 11

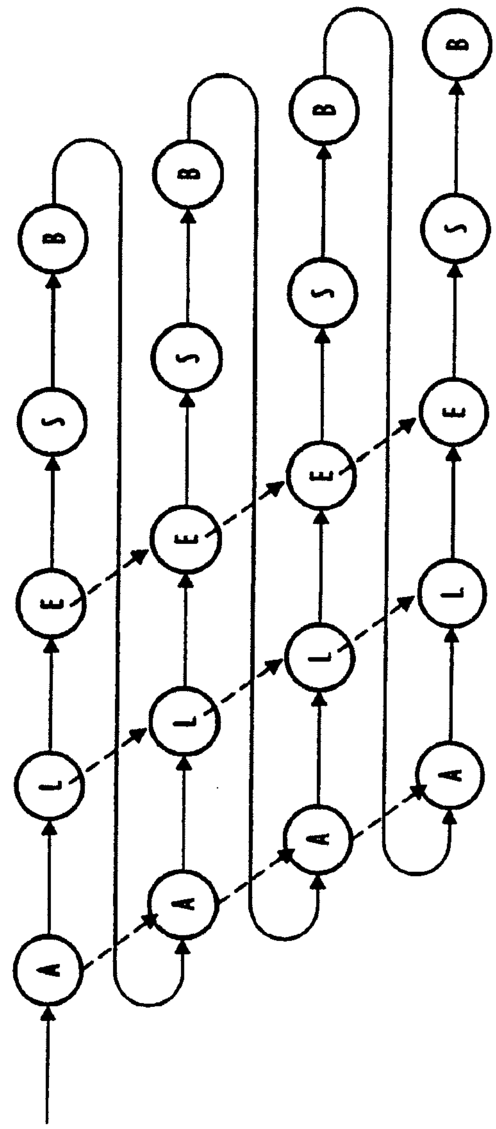

FIG. 12

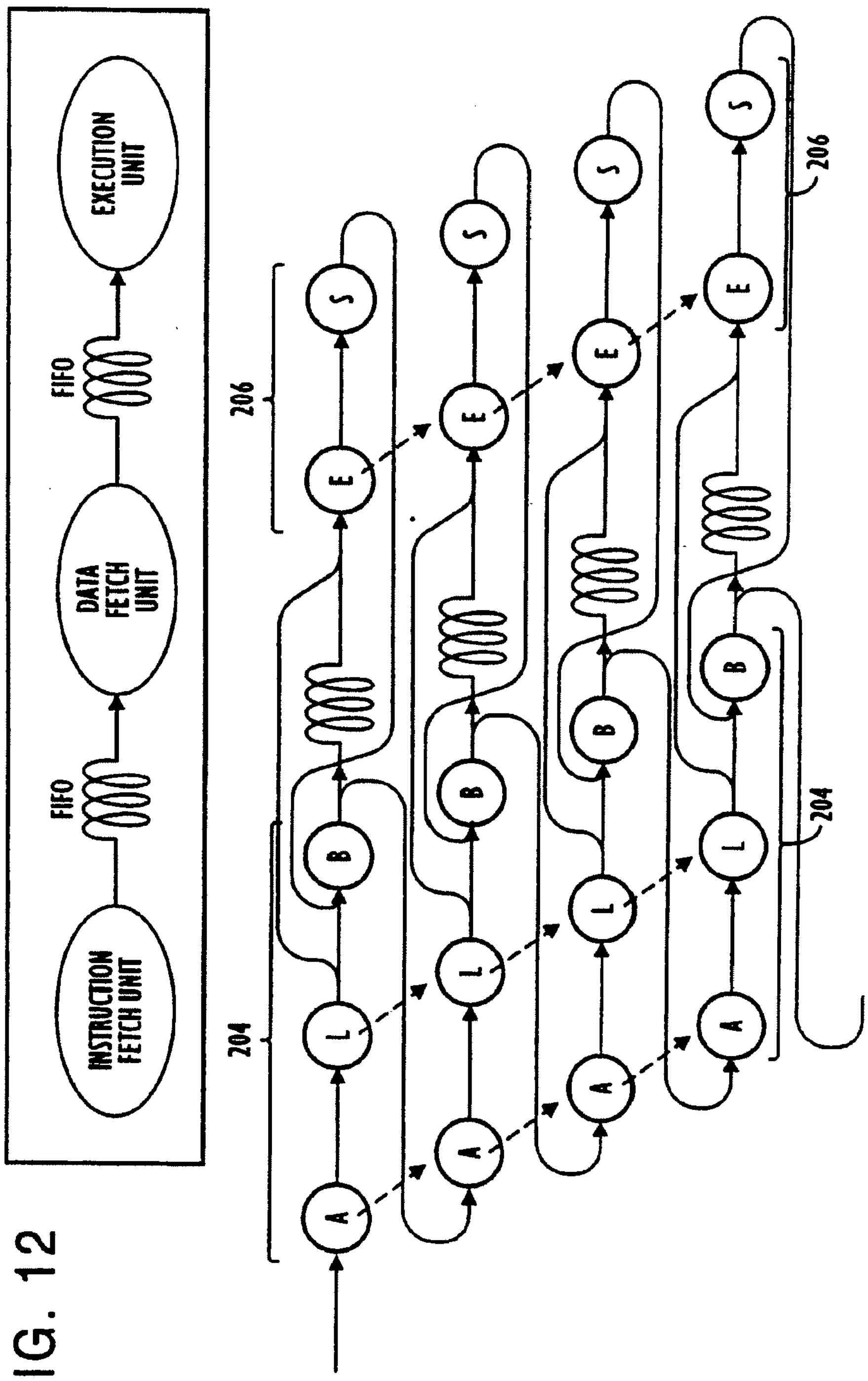
INSTRUCTION FETCH UNIT
FIFO
DATA FETCH UNIT
FIFO
EXECUTION UNIT
204
206
A
L
B
E
S
204
206

FIG. 13

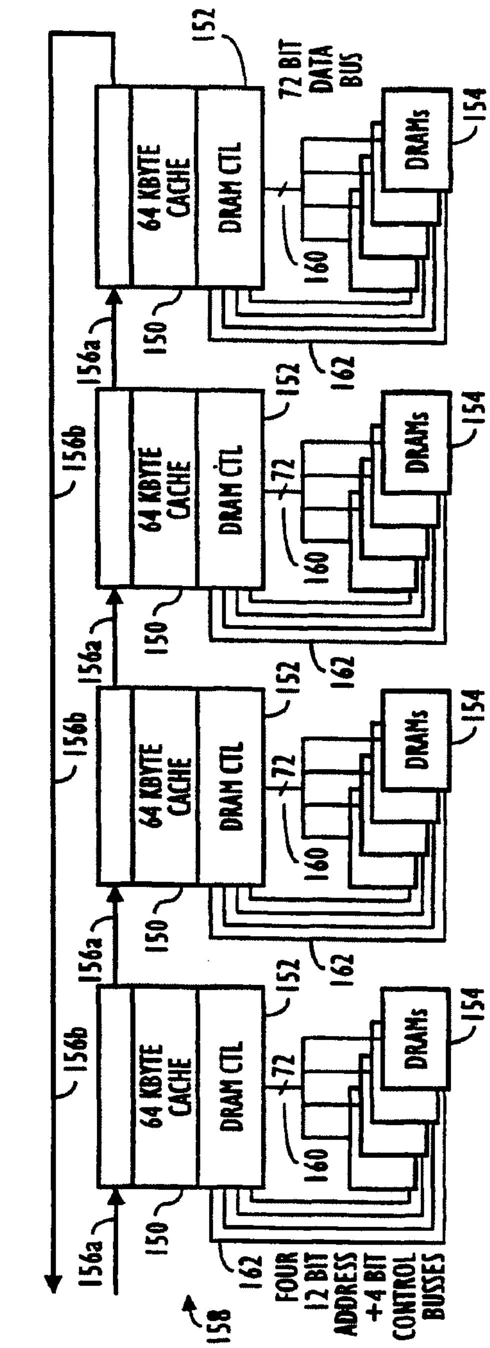
64 KBYTE CACHE
DRAM CTL
DRAMs
72 BIT DATA BUS
72
FOUR 12 BIT ADDRESS +4 BIT CONTROL BUSSES
150
152
154
156a
156b
158
160
162

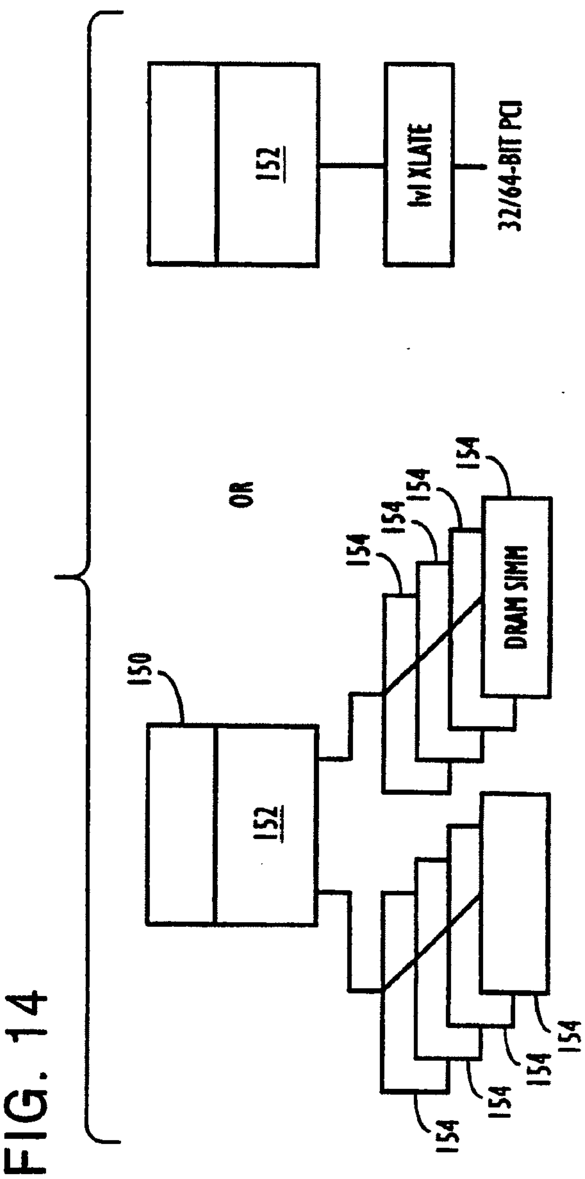


FIG. 14

FIG. 15

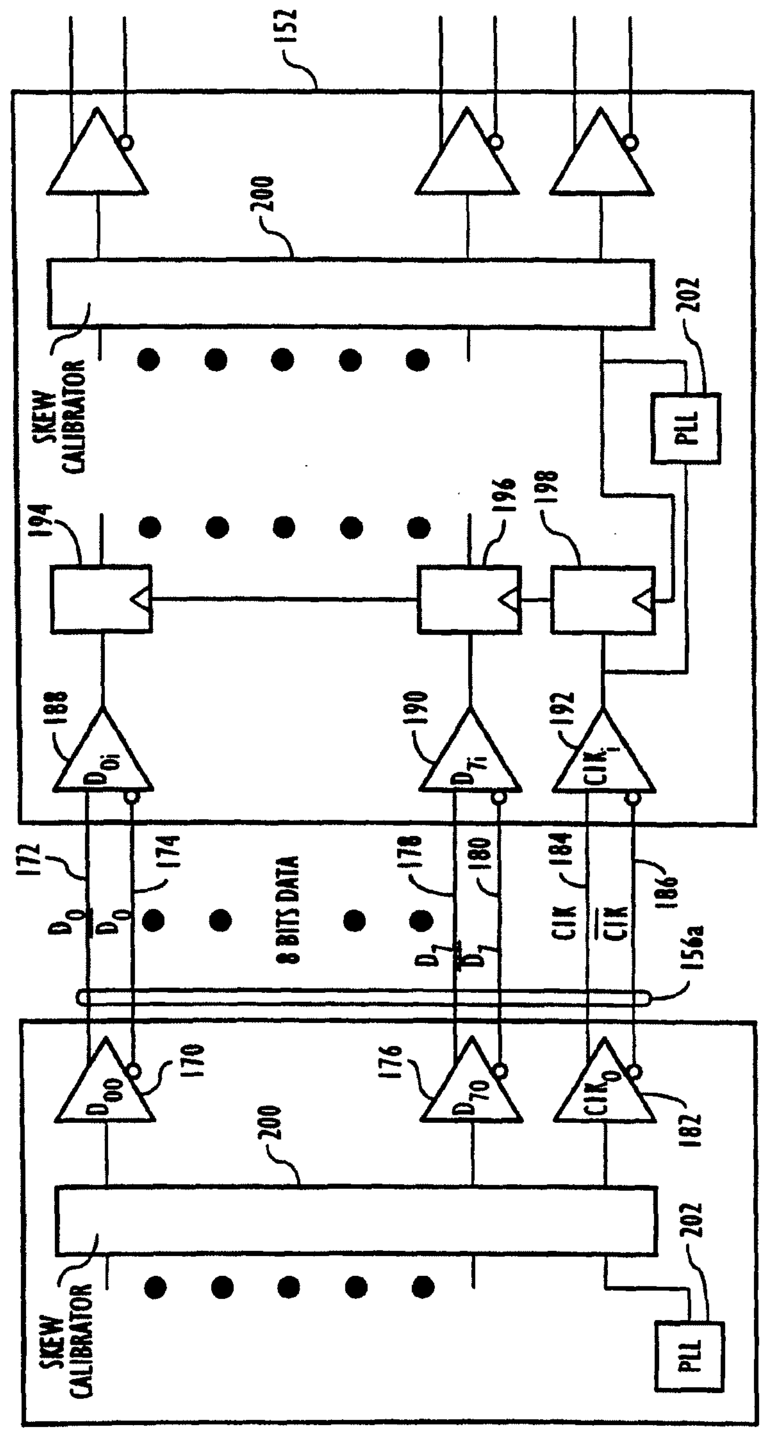
152
200
202
SKEW CALIBRATOR
PLL
194
196
198
188
190
192
172
174
178
180
184
186
8 BITS DATA
156a
170
176
182

FIG. 16(a)

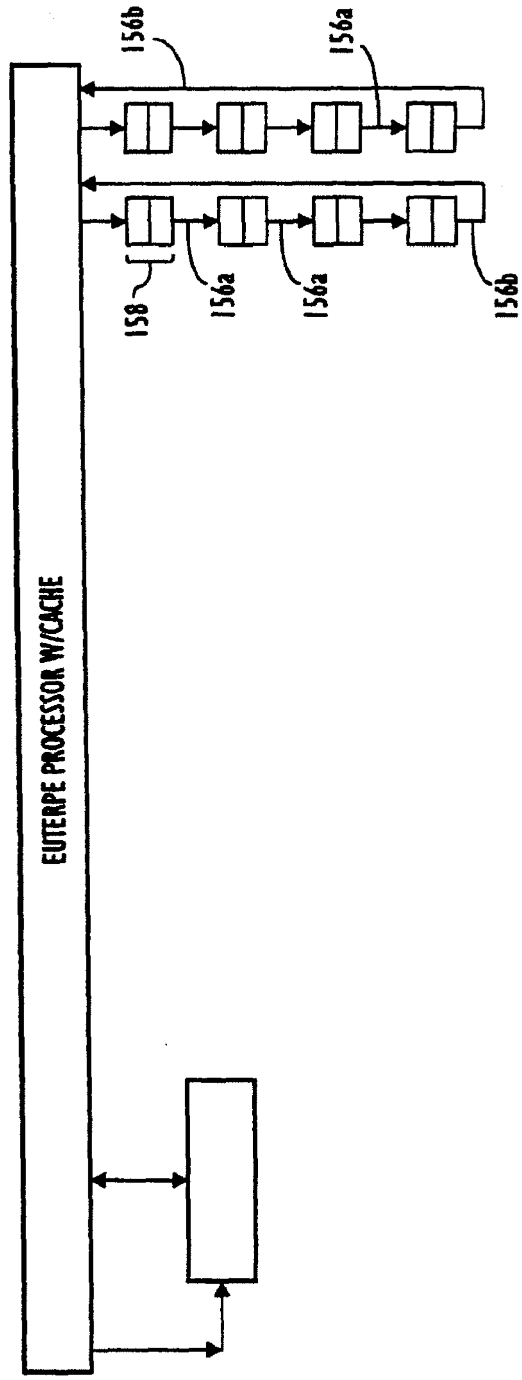

FIG. 16(b)

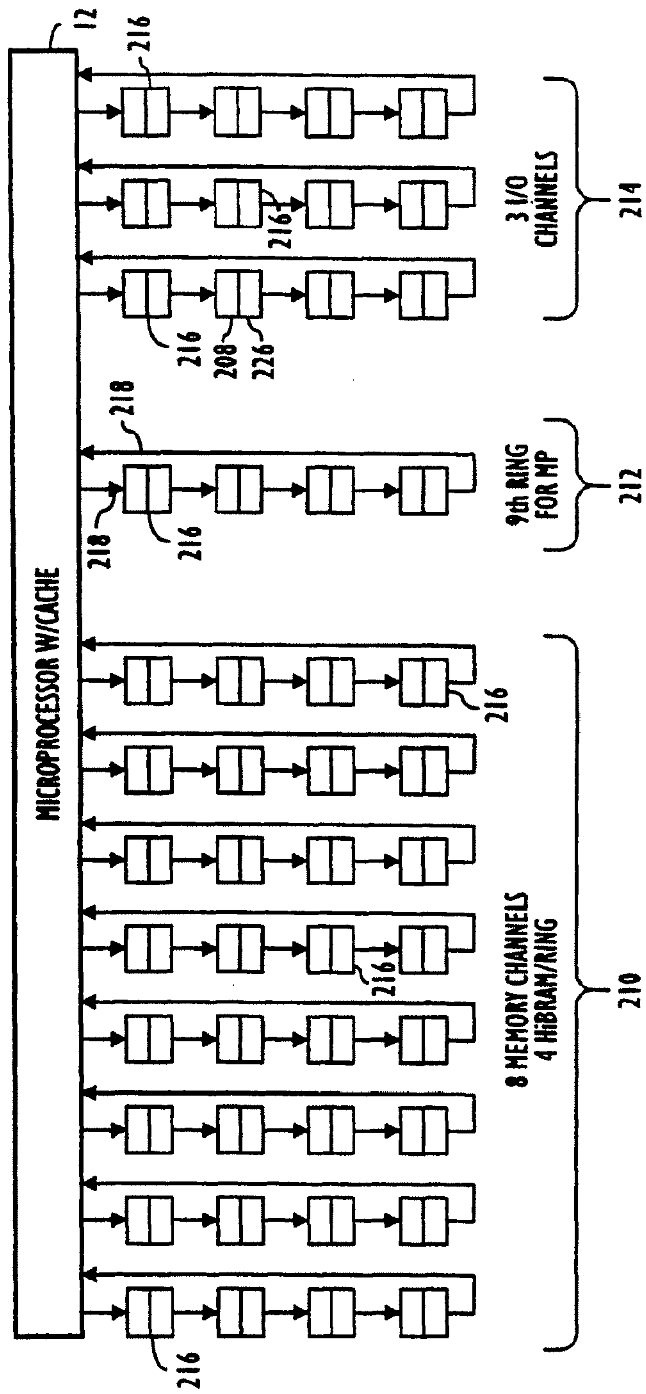
MICROPROCESSOR W/CACHE
12
216
208
226
218
3 I/O CHANNELS
214
9th RING FOR MP
212
8 MEMORY CHANNELS
4 HiBRAM/RING
210

FIG. 17

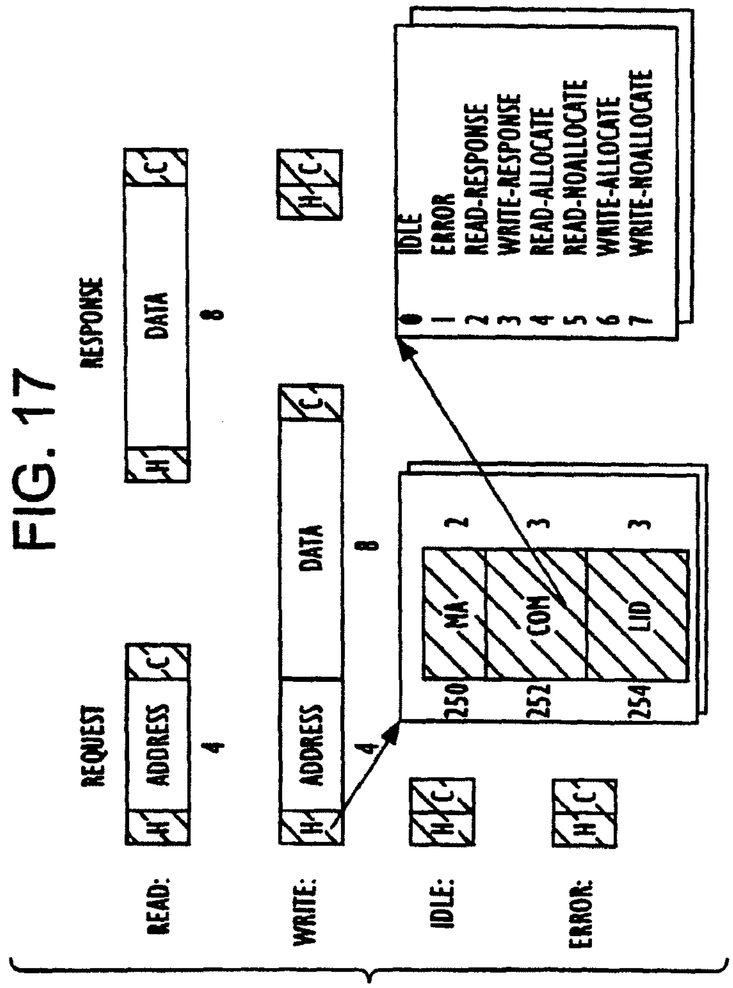
REQUEST
RESPONSE
READ:
WRITE:
IDLE:
ERROR:
H
C
ADDRESS
DATA
4
8
MA
COM
LID
250
252
254
2
3
3
0 IDLE
1 ERROR
2 READ-RESPONSE
3 WRITE-RESPONSE
4 READ-ALLOCATE
5 READ-NOALLOCATE
6 WRITE-ALLOCATE
7 WRITE-NOALLOCATE

FIG. 18(c)

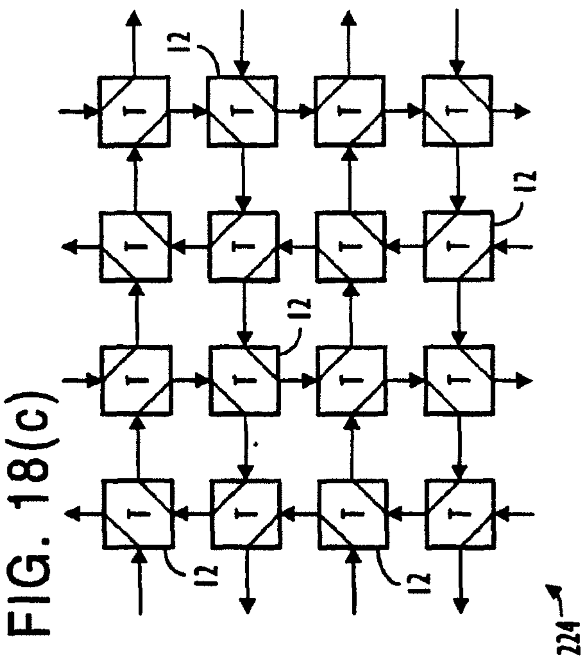


FIG. 18(a)

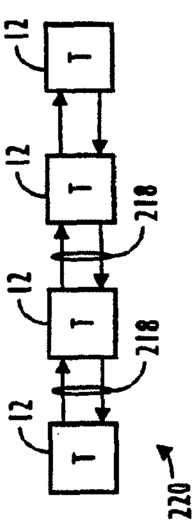


FIG. 18(b)

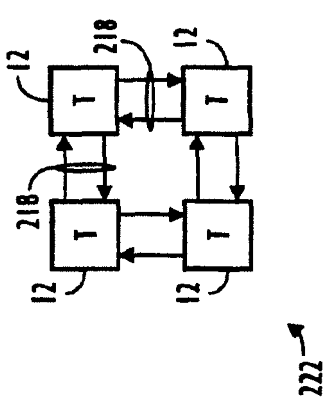

FIG. 19

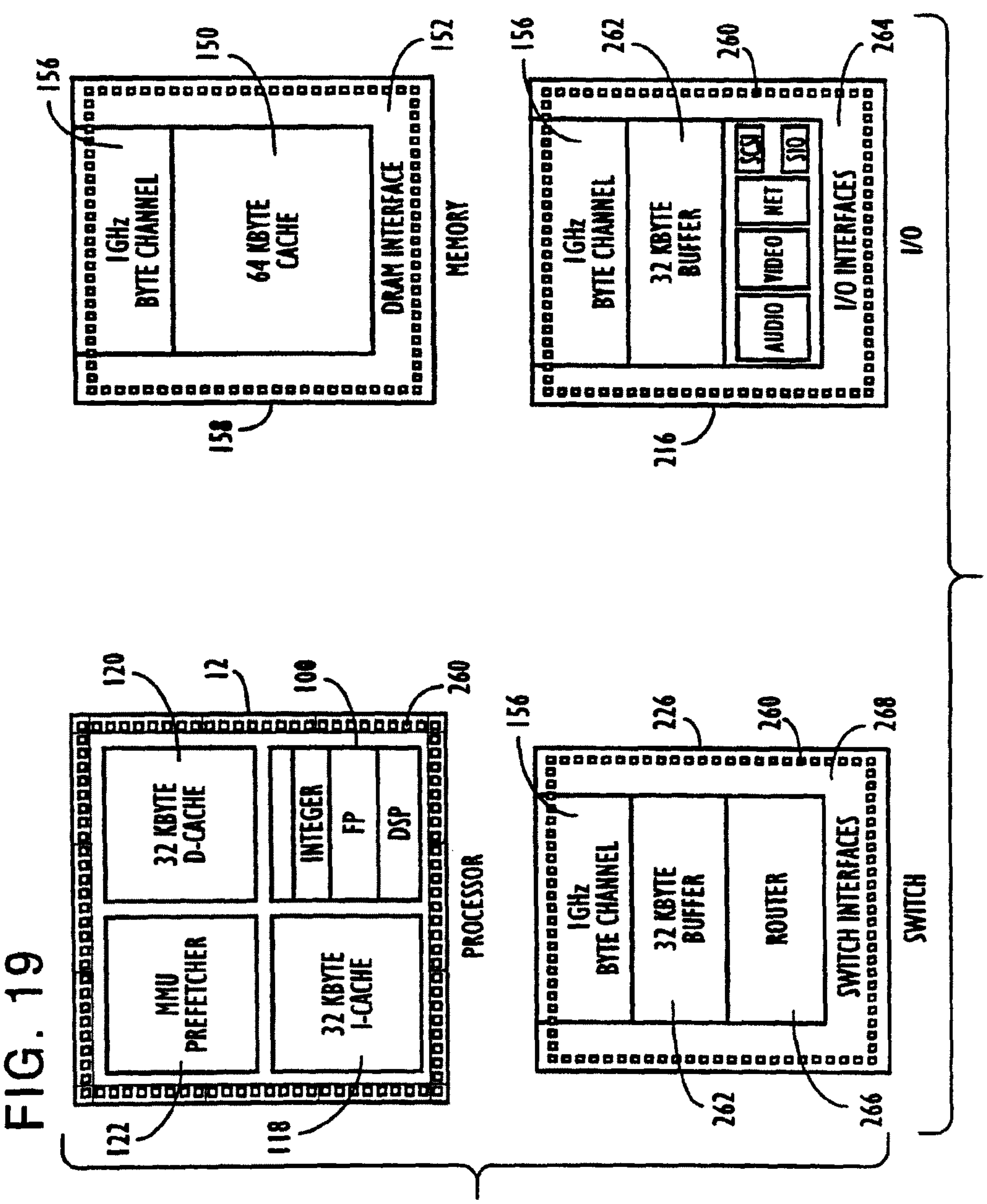

1GHz BYTE CHANNEL
64 KBYTE CACHE
DRAM INTERFACE
MEMORY
156
150
152
158
1GHz BYTE CHANNEL
32 KBYTE BUFFER
AUDIO
VIDEO
NET
SCSI
SIO
I/O INTERFACES
I/O
156
262
260
264
216
MMU PREFETCHER
32 KBYTE D-CACHE
32 KBYTE I-CACHE
INTEGER
FP
DSP
PROCESSOR
120
12
100
260
122
118
1GHz BYTE CHANNEL
32 KBYTE BUFFER
ROUTER
SWITCH INTERFACES
SWITCH
156
226
260
268
262
266